(19) Europäisches Patentamt
European Patent Office
Office européen des brevets

(11) Publication number: 0 167 237 A2

(12) # EUROPEAN PATENT APPLICATION

(21) Application number: 85303155.7

(22) Date of filing: 03.05.85

(51) Int. Cl.$^4$: H 04 N 7/173

(30) Priority: 31.05.84 US 615957
31.05.84 US 616412
31.05.84 US 616411

(43) Date of publication of application:
08.01.86 Bulletin 86/2

(84) Designated Contracting States:
AT BE CH DE FR GB IT LI LU NL SE

(71) Applicant: AMERICAN TELEVISION & COMMUNICATIONS CORPORATION
160 Inverness DRive West
Englewood Colorado 80112(US)

(72) Inventor: Rast, Robert M.
5230 South Joliet Way
Englewood Colorado 80111(US)

(72) Inventor: Wreford-Howard, David
9545 East Chenango Avenue
Englewood Colorado 80111(US)

(72) Inventor: Campbell III, Wallace S.
6948 West Nova Drive
Littleton Colorado 80123(US)

(74) Representative: Hartley, David et al,
c/o Withers & Rogers 4 Dyer's Buildings Holborn
London, EC1N 2JT(GB)

(54) **Cable television system.**

(57) A cable television system and method in which each subscriber's converter is located outside the subscriber's premises in an external control unit ("ECU") which also includes several other subscribers' converters. The ECU includes common signal processing circuitry for controlling all the converters in the ECU. In addition to television signals, the cable network transmits control and data signals in both directions between the ECU and the head end of the system and between the ECU and each subscriber. Each subscriber supplies a portion of the power required by the associated ECU. Multiple television channels can be supplied to each subscriber via a single drop cable connecting the subscriber to the ECU.

EP 0 167 237 A2

Croydon Printing Company Ltd

ATC 1004-1006

# CABLE TELEVISION SYSTEM

## Background of the Invention

This invention relates to cable television systems, and more particularly to cable television systems in which the converter for converting portions of the television signal on the cable network to the television signal which is applied to the subscriber's television receiver is located outside the subscriber's premises.

There is increasing interest in cable television systems in which the converter for converting the portion of the cable television signal which the subscriber desires to receive to a signal suitable for application to the subscriber's television set is located outside the subscriber's premises, for example, on or adjacent to a neighboring utility or telephone pole. This is of interest because it reduces the risk of unauthorized tampering with the converter, accidental or intentional misappropriation of or damage to the converter, and the like.

On the other hand, locating the converter outside the subscriber's premises increases the complexity and cost of the system because apparatus must then be included in the system to enable the subscriber to remotely control the converter. This consideration has tended to discourage the development of cable television systems with off-premises converters.

It is therefore an object of this invention to improve, simplify and reduce the cost of cable television systems with off-premises converters.

Summary of the Invention

This and other objects of the invention are accomplished in accordance with the principles of the invention by providing a cable television system and method in which the off-premises converters of several adjacent subscribers are at least partially controlled by common signal processing circuitry associated with those converters. The common signal processing circuitry and all the associated converters are preferably located in a common facility, for example, a housing mounted on or adjacent to a utility pole neighboring the premises of the associated subscribers. This apparatus is referred to herein as an external control unit or "ECU". The ECU preferably includes only a single tap for each network cable serving the ECU. The signals derived from this tap are distributed appropriately to the components of the ECU. A drop cable extends from the ECU to each subscriber's premises.

Inside the subscriber's premises the drop cable is connected to a subscriber processing unit or "SPU" which is typically located adjacent to the subscriber's television receiver. The SPU applies the television signal on the drop cable to the television receiver and also applies subscriber-originated control signals to the drop cable for transmission back to the ECU. Other devices located in the subscriber's premises, such as burglar, fire and other alarm or monitoring equipment capable of applying control signals to the drop cable for transmission

back to the ECU, can also be connected to the drop cable.

The ECU processes the control signals originated by all of the associated subscribers to satisfy, if appropriate, the service requests indicated by those control signals. In particular, the common signal processing circuitry in the ECU is used as extensively as possible to process the subscriber-originated control signals to minimize the amount of separate ECU circuitry which must be provided for each subscriber.

The ECU is also capable of receiving and responding to control signals from the so-called "head end" of the cable network. For example, these control signals may include channel authorization data identifying which channels on the cable network a particular subscriber is authorized to receive and view. These head-end-originated control signals are preferably transmitted via the cable network, and the common signal processing circuitry in each ECU is again used as extensively as possible to process these signals. Because each ECU typically serves several subscribers, all of those subscribers can be serviced from the head end by control signals addressed to the ECU rather than to each subscriber individually. This greatly facilitates control of the system from the head end.

Further features of the invention, its nature and various advantages will be more apparent from the accompanying drawing and the following detailed description of the invention.

## Brief Description of the Drawing

Figure 1 is a block diagram of a cable television system constructed in accordance with the invention.

Figure 2 is a schematic diagram of a typical subscriber unit ("SU") in the apparatus of Figure 1.

Figure 3 is a block diagram of the analog unit in the apparatus of Figure 1.

Figure 4 is a schematic block diagram of the communication unit in the apparatus of Figure 1.

Figures 5a-5i, which are connected together as shown in Figure 5j, are collectively a schematic block diagram of the digital unit in the apparatus of Figure 1. Figures 5k-5s are collectively a schematic diagram of the gate array shown in Figure 5c. Figures 5a-5s are sometimes collectively referred to as Figure 5.

Figure 6 is a schematic diagram of the common power unit in the apparatus of Figure 1.

Figure 7 is a schematic block diagram of the "SPU" in the apparatus of Figure 1.

Figure 8 is a block diagram of the central control computer ("CCC") and modem of the headend in the apparatus of Figure 1.

Figures 9a-b are flow charts illustrating the flow of a program controlling the operation of the so-called Drop Processor of the ECU.

Figures 10a-b are diagrams of basic message formats used in an embodiment of the invention for data communication in the forward direction from the CCC to an ECU.

Figure 11 is a diagram of a basic message format used in an embodiment of the invention for data communication in the reverse direction from an ECU to the CCC.

Figures 12-17 are diagrams of various messages sent between the CCC and an ECU in an embodiment of the invention.

Figures 18a-h are flow charts illustrating the flow of a program controlling the operations of

the so-called Data Processor of the ECU in an embodiment of the invention.

Figure 19 is a diagram of a basic message format used in another embodiment of the invention for data communication in the forward direction from the CCC to an ECU.

Figure 20 is a diagram of a basic message format used in another embodiment of the invention for data communication in the reverse direction from an ECU to the CCC.

Figures 21a-23d are diagrams of messages sent between the CCC and an ECU in another embodiment of the invention.

## Detailed Description of the Invention

### I. Overview of the System

As shown in Figure 1, an illustrative embodiment of the cable television system 10 of this invention includes head end apparatus 12; cable network 14; a plurality of external control units ECU1, ECU2, etc., connected to cable network 14 at locations which are typically remote from one another and from head end 12; and a plurality of subscriber premises SUB1, SUB2, etc., each of which is connected to an associated ECU by a drop cable DROP1, DROP2, etc. In the particular embodiment shown in the drawing, each ECU can be connected to as many as six subscribers, but this number is arbitrary and the maximum number of subscribers per ECU can be larger or smaller than six as desired.

Head end 12 typically includes one or more sources of television signal information such as conventional satellite antenna 20. Conventional satellite receiver 22 separates the television signal information received via antenna 20 into a plurality of base band television signals, each of which represents one base band television channel.

Conventional modulator 24 modulates each of these television signals so that each base band channel is shifted to a predetermined frequency or "physical" cable channel for distribution via cable network 14. Additional base band television and other signals (e.g., television signals from studio cameras or video recorders, FM audio signals, etc.) may also be applied to modulator 24 via leads 26, 28, etc., and shifted to predetermined physical cable channels by the modulator.

All of the output signals of modulator 24 are applied to conventional combiner 30 which combines them for application to cable network 14 via conventional combiner 32. Combiner 32 also adds control and data signals to the signal applied to cable network 14. These control and data signals may be of two types: (1) a so-called "forward data" signal which represents information generated at head end 12 for controlling the ECUs in the network, and (2) a forward high data rate channel ("HDRC") signal which is typically included in the FM band and which allows the cable network to be used for such purposes as distributing non-television signal data (e.g., general purpose computer programs and data) to the subscribers. Because the forward HDRC signal is typically included in the FM band, the term "FM audio signal" as used herein includes the forward HDRC signal if such a signal is employed in the system.

In addition to adding forward data and forward HDRC signals to the signal applied to cable network 14, combiner 32 also conducts so-called "reverse data" signals in the opposite direction from cable network 14 to modem 34. The reverse data signals are control signals generated by the ECUs as described below for transmission to head end 12 for use in controlling the cable television network. In

the illustrative embodiment shown and described herein, four channels are available for reverse data communication. Modem 34 converts (modulates) forward data signals produced by central control computer ("CCC") 36 to signals suitable for transmission via cable network 14. Modem 34 also converts (demodulates) reverse data signals received from cable network 14 to signals suitable for processing by central control computer 36.

Combiner 32 also extracts from the signal on cable network 14 a reverse HDRC signal which allows the cable network to be used for such purposes as transmitting non-television signal data (e.g., fire and burglary alarm signals) from the subscribers to a central location such as head end 12. The reverse HDRC signal is typically in a frequency band (e.g., 25 MHz) which is independent from all other frequency bands employed in the system. The use of a reverse HDRC frequency band in the present invention enables direct two-way communication between the head end and the subscribers, and minimizes noise and other signal degradation problems affecting other communication signals on the CATV cable and inherent in conventional two-way CATV systems.

Each ECU includes a conventional tap off device 50 for applying the signals which appear on cable network 14 to the circuitry of the ECU and for applying to cable network 14 the reverse data originating at the ECU and the reverse HDRC signals originating at the associated subscribers. Each ECU is typically located outside the premises of the subscribers served by the ECU. Typically, all the circuitry of the ECU is located in a common housing which may be adapted for mounting on a utility pole or other suitable structure adjacent to the premises of the subscribers served by the ECU.

Tap off device 50 is connected to conventional splitter-combiner network 52. Splitter-combiner network 52 distributes the signals received from cable network 14 to a plurality of subscriber units SU1, SU2, etc. within the ECU, each of which is associated with a respective one of the subscribers served by the ECU. Although each SU includes additional apparatus described in detail below, for the moment it will be sufficient to think of each SU as a digitally controlled converter for performing the television signal frequency conversion function performed by the converter located adjacent the subscriber's television receiver in conventional cable network systems.

Splitter-combiner network 52 also distributes the signals received from cable network 14 to analog unit 54, described in greater detail below. In general, analog unit 54 separates the FM audio and forward data signals from the other signals received from cable network 14. Analog unit 54 applies the FM audio signal to each SU for transmission to the subscribers. Analog unit 54 also demodulates the forward data signal and applies the resulting data signal to digital unit 55. Analog unit 54 applies reverse HDRC signals received from the SUs to splitter-combiner network 52, and splitter-combiner network 52 applies those reverse HDRC signals to tap off device 50 and thereby to cable network 14.

Splitter-combiner network 52 also applies reverse data signals from communication unit 56 to tap off device 50. In addition, if a so-called "slave" ECU (not shown in Figure 1) is associated with "master" ECU1 as described in detail below, splitter-combiner network 52 conveys signals in both directions via lead 58 between tap off device 50 and the splitter-combiner network of the slave ECU.

As mentioned above, each SU receives the entire cable network signal from splitter-combiner network 52. In response to control signals received from digital unit 55, each SU (1) selects from the cable network signal the portion of that signal representing the television channel which the associated subscriber wishes to view, and (2) converts that signal portion to a television signal on a predetermined channel (e.g., channel 3) to which the associated subscriber's television receiver 90 is tuned. This television signal is applied to the SU's associated drop cable DROP1, DROP2, etc., which runs from the SU to the associated subscriber's premises SUB1, SUB2, etc. Each SU also receives the FM audio signal from analog unit 54 and combines that signal with the television signal applied to the associated subscriber's drop cable.

The ECU communicates via each SU with the associated subscriber's apparatus (in particular, the SPU of the associated subscriber) by means of so-called very low frequency ("VLF") data signals on the associated drop cable. Also, when a subscriber operates his or her SPU to make a television channel selection, the SPU applies to the associated drop cable for transmission to the ECU VLF data signals representative of the desired channel selection. Each SU conveys these VLF data signals in both directions between the associated subscriber drop cable and communication unit 56 which includes a modem for conveying these VLF data signals to and from digital unit 55. Each SU also conveys reverse HDRC signals from the associated subscriber drop cable to analog unit 54.

The power required to operate each ECU is supplied by the subscribers served by that ECU. Each subscriber has an SPU which applies an alternating current ("AC") power signal to the associated

drop cable. The associated SU conveys that power signal to common power unit 60 in the ECU. Common power unit 60 combines all of the applied power signals and derives from the combined signal the currents and voltages needed to power the various components of the ECU. In this way, all of the subscribers served by the ECU share the power requirements of the ECU. In the event of a general AC power failure, common power unit 60 applies a control signal to digital unit 55 which causes the digital unit to shut down in such a way that important data is not lost.

Digital unit 55 controls the operation of the ECU. Digital unit 55 receives and processes forward data applied to the digital unit via analog unit 54. Digital unit 55 also generates reverse data and applies that data to communication unit 56 for transmission to head end 12. Digital unit 55 receives and processes demodulated VLF signals applied to the digital unit via communication unit 56 from all of the SUs in the ECU. Digital unit 55 also generates other signals for transmission back to the subscribers via communication unit 56 and the SUs. Digital unit 55 also controls various functions of the SUs. For example, when a subscriber wishes to view a particular television channel, digital unit 55 receives VLF signals generated by the subscriber indicating the desired channel selection, determines whether or not the subscriber is authorized to receive that channel based upon channel authorization data previously provided by head end 12, and, if the subscriber is authorized to receive the desired channel, controls the subscriber's SU to cause it to apply the desired channel signal to the subscriber's drop cable.

Each subscriber has at least one SPU, at least one conventional television receiver 90 connected to the SPU, and (optionally) a conventional remote control unit ("RCU") for remotely controlling the SPU by infrared or other signals. The SPU is connected to the drop cable and applies the received drop cable signal to the associated television receiver 90. The received drop cable signal may also be applied to the subscriber's (optional) FM audio receiver equipment (not shown) and to the subscriber's (optional) forward HDRC utilization equipment (also not shown). The SPU has a conventional keypad (not shown in Figure 1) for allowing the subscriber to enter data such as the number of the television channel the subscriber wishes to receive. Alternatively, this data can be entered via the subscriber's RCU. The SPU converts data entered by the subscriber to VLF data signals which are transmitted to the associated ECU via the subscriber's drop cable. The SPU also typically has data display elements such as seven-segment light emitting diode ("LED") displays. These displays can be controlled by VLF data sent to the SPU from the associated ECU. The SPU also applies the reverse HDRC signal originated by the subscriber to the associated drop cable.

The following Table A summarizes the allocation of carrier signal frequencies in the illustrative embodiment of the invention shown and described herein:

TABLE A

| | Type of Signal | Approximate Frequency |
|---|---|---|
| 1. | AC Power | 60 Hz |
| 2. | VLF Data (ECU to SPU) | 430 KHz |
| 3. | VLF Data (SPU to ECU) | 468 KHz |
| 4. | Reverse Data | |
| | a. Channel 0 | 19.125 MHz |
| | b. Channel 1 | 19.375 MHz |
| | c. Channel 2 | 19.625 MHz |
| | d. Channel 3 | 19.875 MHz |
| 5. | Reverse HDRC Data | 25 MHz |
| 6. | Television | 50-88 MHz<br>108-450 MHz |
| 7. | FM Audio (Includes Forward HDRC Data) | 88-108 MHz |
| 8. | Forward Data | 104 MHz |

It will be understood that the frequencies shown in Table A are merely illustrative and that other frequencies can be employed if desired. For convenience herein, the television and FM audio signals on cable network 14 (items 6 and 7 in Table A, above) are sometimes hereafter referred to collectively as CATV signals.

Although cable network 14 has only a single feeder cable in the embodiment shown in Figure 1, two feeder cables can be employed if desired to increase the number of television channels available for distribution to subscribers. For example, if two cables were provided, elements such as 24, 30, 32, 50, and 52 would be substantially duplicated to serve the second cable. Each SU would receive input CATV signals from each cable. To select between the

two cables, each SU would also include a switch controlled by digital unit 55 for switching between the two applied cable signals. This is discussed in greater detail below in relation to the SUs. In a multi-cable system, the FM audio, reverse HDRC, forward data, and reverse data signals are preferably transmitted by only one cable, designated the primary cable, thereby allowing some simplification of the apparatus associated with the other cable or cables. Thus, elements such as 34, 36, 54, 55, 56, and 60 do not have to be duplicated or even significantly altered to provide a multi-cable system.

It is also possible for each subscriber to have more than one television receiver 90. The additional television receiver or receivers can be attached to one SPU, in which case all of the television receivers receive the same television signal. Alternatively, the additional television receiver or receivers can be served by a second SPU to enable the subscriber to simultaneously select and receive two different television channels. If a subscriber has two SPUs, both of the SPUs can be connected to a single drop cable. In such a case, one SPU will be configured as a "master" SPU, and the other will be configured as a "slave" SPU. At the ECU, a subscriber with a master and slave SPU is served by two SUs. Each SU is associated with a different SPU. The signals from both SUs are multiplexed onto the single drop cable. The television signal from the first or "primary" SU is converted by the SU to, and applied to the drop cable as, a first or lower drop cable channel. The television signal from the other or "secondary" SU is converted to, and applied to the drop cable as, a second or higher drop cable channel. The television receiver associated with each SPU is tuned to a respective one of the two drop cable channels.

Thus, each subscriber has at least one primary SU in the ECU associated with a master SPU. If a subscriber has two SPUs, that subscriber may also have a secondary SU in the ECU associated with the slave SPU. In any event, the total number of SUs which can be included in an ECU in the particular embodiment shown and described herein is six.

If additional subscriber service is needed at the location of an ECU which is operating at capacity, then a second or "slave" ECU containing six more SUs can be connected to the splitter-combiner network 52 of the "master" ECU via lead 58 as mentioned above. In this way, additional subscriber service can be provided without the necessity of cutting into the cable network 14 to insert an additional tap 50.

II. Subscriber Unit

Figure 2 shows a typical subscriber unit SU1 in greater detail. The cable network signal from splitter-combiner network 52 (Figure 1) is applied to conventional converter tuner 100 via the INPUT terminal and optional switching device 102. If the system had two cables rather than one as shown in Figure 1, each SU would have two INPUT terminals, each connected to a respective one of the two cables. Switching device 102, which can include a conventional RF switching relay such as part number G4Y-152P available from Tateishi Electric Co. ("Omron") of Tokyo, Japan, would then be used to apply one or the other of the two cable signals to converter tuner 100. Switching device 102 would be controlled to select signals from one or the other CATV feeder cable by a conventional transistor switch (part of switching device 102) responsive to the state of the Q3 output on pin 7 of conventional addressable latch 140.

Converter tuner 100, together with conventional frequency synthesizer 104 and the circuits including crystal 106, capacitors 108, 110, 112, 114, 116, 118, 120, resistors 122, 124, 126, 128, and transistors 130 and 132, selects the portion of the cable television signal which the associated subscriber wishes to receive, converts that signal portion to a television signal on the channel to which the subscriber's television receiver 90 is tuned, and applies that signal to the DROP CABLE output terminal of the SU via conventional FM adder device 180, directional coupler 182, and capacitor 184. In one embodiment, converter tuner 100 may be part number CVA 213A (channel 3) or CVA 215A (channel 5) available from Toshiba Corporation of Tokyo, Japan (hereinafter "Toshiba"), or an equivalent device to convert the CATV signals to the same or other channels or frequencies. Frequency synthesizer 104 may be Toshiba part number TD6352P or an equivalent device.

The converter circuitry operates as follows. Via its DATA input lead, frequency synthesizer 104 receives a ten-bit main channel conversion coefficient ("MCCC") and a five-bit "swallow" conversion coefficient ("SCC"). The bits of these two coefficients, which are sometimes collectively referred to as the main and swallow ("MS") coefficients, are shifted into frequency synthesizer 104 at the clock rate established by its CLOCK input. When all the bits of the MS coefficients have been shifted into frequency synthesizer 104, they are latched into the synthesizer in response to a signal applied to the LOAD input terminal. Frequency synthesizer 104 then uses the MS coefficients in a known manner to (1) scale down the frequency of the voltage controlled LOCAL OSCILLATOR ("LOC. OSC.") output signal of converter tuner 100, (2) perform a phase

detection comparison between the scaled down LOC. OSC. signal frequency and the reference OSCILLATOR ("OSC.") signal frequency provided in part by crystal 106, and (3) produce an error signal at the PHASE DETECTOR OUTPUT ("P/D OUT") terminal. The error signal produced by frequency synthesizer 104 is used to control the voltage controlled oscillator in converter tuner 100 to cause that oscillator to produce the demodulation signal frequency needed to convert the desired cable channel to the channel to which the subscriber's television receiver 90 is tuned.

Addressable latch 140, which may be Toshiba part number TC40H259 or an equivalent device, receives control and data signals from digital unit 55, stores that data, and outputs it to frequency synthesizer 104. In particular, addressable latch 140 receives data via its DATA input lead and processes that data in accordance with the function control signals applied to its A, B, and C input leads. The addressable latch in a particular SU is selected and thereby enabled by an appropriate signal applied to the NOT ENABLE ("NEA") input terminal of the addressable latch to be selected. (In general, the logical polarity of signals and signal names appearing in the drawings will be ignored in this specification. Thus, for example, whereas the signal at pin 14 of addressable latch 140 is actually an inverse enable signal, that signal is simply referred to in this specification by its functional name "NEA" without regard for its logical polarity.) Resistors 142-147 are pull-up resistors conventionally associated with selected inputs and outputs of addressable latch 140.

Addressable latch 140 also monitors whether or not the associated subscriber is supplying his or her share of the AC power needed to operate the ECU. This function is performed in response to the

signal applied to the CLEAR ("CL") input terminal of addressable latch 140. If the associated subscriber is not providing AC power to the ECU via the subscriber's drop cable, the Q4 output signal of addressable latch 140 controls the circuit including resistors 150-152, transistors 153-155, diode 156, inductor 158, and capacitor 159 to shut off power to associated converter tuner 100. This prevents any subscriber who is not supplying AC power to the ECU from receiving television signals from the ECU. The Q5 output signal of addressable latch 140 also indicates whether or not the associated subscriber is supplying AC power. This Q5 output signal is applied to the POWER DETECT output terminal of the SU for use by digital unit 55.

Each primary SU such as SU1 has a power section which includes filtering inductor 160, diodes 161-163, capacitors 164-167, and resistors 168-169. Inductor 160 blocks VLF and CATV signals. Diodes 161 and 162 respectively produce half-wave rectified power signals ("+" and "-") from a 60 volt or less AC power signal on the associated drop cable. The + and - signals are respectively connected to and summed with other + and - power signals from other subscribers and SUs (i.e., SU2-SU6) in the ECU. The summed power signals then are applied to common power unit 60 which is described in detail below. Circuit elements 163 and 167-169 constitute another half-wave rectifier circuit which produces a DC output signal (which is clamped to approximately +5V by diode 157) as long as the associated subscriber is supplying AC power via the drop cable. This DC output signal is applied to the CL input terminal of addressable latch 140 via voltage dividing resistors 170-171 for the purpose described above.

If a secondary SU (e.g., SU2) is associated with SU1 to enable the subscriber to select and

receive two multiplexed channels via the drop cable, then the DC output signal produced by elements 163 and 167-169 is also applied to the secondary SU via resistor 172 in the primary SU and jumper 173 in the secondary SU. Jumper 173 is a completed connection only in the secondary SU. Power supply elements 160-169 are omitted from the secondary SU, as is capacitor 184. Also in the secondary SU, the terminal corresponding to the DROP CABLE terminal in Figure 2 is connected to the FM INPUT AND REVERSE HDRC OUTPUT terminal of the associated primary SU. Thus, the secondary SU selects one television channel, adds the FM signal to the first television channel signal, and applies the resulting signal to the FM INPUT AND REVERSE HDRC OUTPUT terminal of the associated primary SU. The primary SU selects the second television channel, adds that signal to the signal received from the secondary SU, and applies the resulting signal to the subscriber's drop cable. In this way each subscriber can receive as many as two television channels multiplexed on a single drop cable. As mentioned above, each of the subscriber's television receivers is tuned to view one or the other of the two channels on the drop cable. The only other differences between the primary and secondary SUs are (1) the use of different local oscillator frequencies so that the primary and secondary SUs place the selected cable channels on different drop cable channels, and (2) the omission in the secondary SU of what would otherwise be a redundant VLF input/output.

The remaining elements in the SU are (1) a power filtering circuit including inductor 190 to block high-frequency signals from entering the +27V power line, and capacitor 192 and resistor 194 to remove high-frequency ripple from the +27V power

line, and (2) capacitor 196 which is connected between the VLF input/output lead and ground. Directional coupler 182 conveys VLF signals in both directions between the drop cable and the VLF input/output terminal.

III. Analog Unit

As shown in Figure 3, analog unit 54 includes bandpass filter 200 for extracting the FM audio (approximately 88-108 MHz) and forward data (104 MHz plus or minus 100 KHz) signals from the CABLE SIGNAL. The FM signal is applied to each of the FM OUTPUT AND REVERSE HDRC INPUT terminals of analog unit 54 via input/output coupling network 202. Each FM OUTPUT AND REVERSE INPUT HDRC terminal of analog unit 54 is connected to the FM INPUT AND REVERSE HDRC OUTPUT terminal of a respective one of the SUs.

Input/output coupling network 202, bandpass filter 204, and lowpass filter 206 convey reverse HDRC signals (25 MHz plus or minus .5 MHz) from the FM OUTPUT AND REVERSE HDRC INPUT terminals to the CABLE SIGNAL terminal. Thus, filters 204 and 206 allow reverse HDRC signals to pass from subscriber premises SUB1, SUB2, etc. (Figure 1) through the ECU and directly to cable network 14, thereby providing a data signal path for direct communication via cable network 14 between the subscribers and head end 12. However, filters 204 and 206 block other signals from directly passing from the subscribers and drop cables to cable network 14. In particular, filters 204 and 206 prevent signals, such as citizen band and other two-way radio signals, from entering cable network 14 and interfering with or degrading the reverse data signals sent from the ECUs to head end 12. In contrast, in a conventional two-way cable

television system, such interfering signals typically are picked up at various poorly or loosely connected or dirty or corroded drop cable connections and cracked cable shields in the CATV system. The use of an HDRC channel and elements 204 and 206 in the CATV system of the present invention thus allows for reliable, high-speed, direct two-way communication between subscribers and head end 12 by isolating cable network 14, and the reverse data transmitted thereon, from interfering signals picked up by numerous drop cable connections.

Conventional bandpass filter 210 extracts the forward data signal from the output signal of bandpass filter 200. The forward data output signal of bandpass filter 210 is applied to mixer 212 for mixing with the 108.5 MHz output signal of local oscillator 214. The resulting 4.5 MHz output signal is amplified by conventional intermediate frequency amplifier 216 and applied to conventional detector 220. Detector 220 converts the frequency-modulated ("FM") forward data signal to a base band forward data signal which is applied to the FORWARD DATA OUTPUT terminal of analog unit 54 for application to digital unit 55.

IV. Communication Unit

Figure 4 shows communication unit 56 in greater detail. Communication unit 56 is controlled by digital unit 55 and facilitates communication of (1) reverse data from the ECU to the CCC of head end 12, and (2) VLF data to and from the ECU and each associated subscriber's SPU.

For communicating information from the ECU to head end 12, communication unit 56 includes reverse channel selector 300, conventional modulator 330, and conventional bandpass filter 332. Channel

selector 300, on command from digital unit 55, selects any one of four available reverse channels for transmission of ECU reverse data to head end 12. A two-bit reverse channel selection signal ("REV. CH. A" and "REV. CH. B") is applied from digital unit 55 to conventional binary decoder 302. Depending on the bit combination present on the A and B inputs of decoder 302 (i.e., 00, 01, 10, or 11), one of the four outputs of decoder 302 will be low and all other outputs will be high. The outputs of decoder 302, each of which is connected to a respective one of four crystal-controlled oscillators 304, 306, 308, and 310, in turn cause one of the four oscillators to be operative. Each oscillator 304, 306, 308, and 310 is tuned to oscillate at a different frequency corresponding to one of the frequencies of the four channels available for reverse data communication. In one embodiment, oscillators 304, 306, 308, and 310 operate at 19.125 MHz, 19.375 MHz, 19.625 MHz, and 19.875 MHz, respectively. It will, of course, be appreciated that other frequencies and a different number of reverse channels can be used if desired.

The output of the particular oscillator selected by decoder 302 is applied to modulator 330 as a carrier frequency for modulation by the reverse data to be transmitted to head end 12. Modulator 330 can be any conventional modulator for modulating digital signals onto an analog carrier. In a preferred embodiment, modulator 330 is a binary phase-shift keyed ("BPSK") modulator, such as part number MC 1496 available from Motorola Corporation of Phoenix, Arizona (hereinafter "Motorola"). Data is modulated for transmission on each reverse channel at a data rate of 50 Kbps.

Channel selector 300 also includes conventional logic circuit 305 (comprised, for example, of

conventional NOR and NAND gates) for receiving and enabling the transmission of digital reverse data from digital unit 55 to head end 12, and for receiving a request-to-send ("RTS") signal from and providing a clear-to-send ("CTS") signal to digital unit 55. If digital unit 55 is not sending data to head end 12, digital unit 55 maintains the RTS lead to logic circuit 305 in a logical "0" state. This causes logic circuit 305 to apply a signal to transistor 309 through current-limiting resistor 307, thus shorting the output of oscillators 304, 306, 308, and 310 to ground and preventing the application of carrier to modulator 330. In addition, logic circuit 305 (1) maintains the CTS lead in a logical "1" state, thus signaling to digital unit 55 that it is not clear to send data, and (2) disables transmission of data signals to modulator 330. If digital unit 55 desires to send data to head end 12, it raises the RTS lead. This causes logic circuit 305, after a short delay, to (1) remove the signal from transistor 309 to allow a carrier signal to be applied to modulator 330, (2) present a logical "0" state on the CTS lead to signal digital unit 55 that it is clear to send data, and (3) enable the passage of data signals to modulator 330. Digital unit 55 may transmit data only while CTS is in a logical "0" state.

Modulator 330 modulates the reverse data presented at its data input line onto the carrier signal presented at its carrier input line. The output of modulator 330 is a modulated signal having a selected one of four carrier frequencies which is applied to bandpass filter 332. Bandpass filter 332 has a 1 MHz passband centered at 19.5 MHz. The output of bandpass filter 332 is reverse channel output, which is applied to splitter-combiner network

52 (Figure 1) for transmission via cable network 14 to head end 12.

For enabling communications between the ECU and each associated subscriber SUB1, SUB2 ... etc., communication unit 56 includes bi-directional multiplexer 350 for connecting a first input/output line to any one of a plurality of second input/output lines as a function of a binary code appearing on subscriber address lines A, B, and C. Subscriber address lines A, B, and C are connected to digital unit 55 to enable digital unit 55 to selectively connect any one of the plurality of second input/output lines to the first input/output line. In a preferred embodiment, multiplexer 350 is a 1-to-8 multiplexer, such as Toshiba part number TC4051BP, having 8 second input/output lines, only 6 of which are used (one for each of up to six SUs). Each of the second input/output lines is connected to the VLF input/output terminal of a respective one of subscriber units SU1, SU2 ... etc. (see Figure 2). By presenting different code combinations on address lines A, B, and C (i.e., 000, 001, 010, 011, 100, or 101), digital unit 55 can select a particular drop cable to enable a particular subscriber to communicate with the ECU.

For receiving communications from subscribers, the first input/output line of multiplexer 350 is connected through DC-blocking capacitor 336 to the input of very low frequency ("VLF") demodulator 340. VLF demodulator 340 receives VLF-modulated analog signals transmitted from the SPUs at a data rate of 1200 bps (or any other convenient rate) and demodulates those signals into serial digital data for processing by digital unit 55. In one embodiment, the VLF signals received from the SPUs are

on/off amplitude-shift keyed ("ASK") modulated signals having a carrier frequency of 468 KHz. A logical "1" (mark) is represented by 100% carrier, and a logical "0" (space) is represented by 0% carrier. Demodulator 340 includes a conventional parallel tuned LC circuit 342 tuned to produce an output in response to the receipt at its input of a signal having a frequency of 468 KHz. The output of circuit 342 is applied to surface acoustic wave ("saw") filter 344 also tuned to 468 KHz. The output of saw filter 344 in turn is connected to conventional amplifier 346 which produces a mark and space data output in response to the presence and absence of carrier. This data output is applied to digital unit 55 for processing as data received from the SPUs.

For communication from the ECU to the SPUs, data from digital unit 55 is applied to the data input connection of VLF modulator 320. In one embodiment, VLF modulator 320 modulates digital data signals at a data rate of 1200 bps (or any other convenient rate) from digital unit 55 into an on/off ASK analog VLF signal having a carrier frequency of 430 KHz. Data from digital unit 55 turns on and off transistor 327 (via current-limiting resistor 328). Transistor 327 in turn controls on and off FET transistor switch 324 via resistors 325 and 326. The 430 KHz carrier signal produced by conventional crystal-controlled oscillator 322 is applied to the base of transistor 360 which is connected in such a way that the carrier signal appears at the transistor's collector shifted 180° relative to the carrier signal appearing at the transistor's emitter. The collector carrier signal is switched on and off by transistor switch 324 in accordance with the VLF data to be transmitted to an SPU. This switched

carrier signal is applied to the first input/output line of multiplexer 350 via resistor 334 for transmission to one of the plurality of subscriber SPUs. The continuous carrier signal appearing at the emitter of transistor 360 is applied to all of the second input/output lines of multiplexer 350 via transistor 370 and resistors 381-386. In this way, there is constant 430 KHz carrier on all of the second input/output lines of multiplexer 350 except when the carrier on one of those lines is cancelled by the switched carrier from transistor switch 324.

V. Digital Unit

As shown in Figure 5, digital unit 55 has two major subparts. Those subparts are (1) signal processing portion 55a (shown in Figures 5a-5f), and (2) memory portion 55b (shown in Figures 5g-5i). These two portions of digital unit 55 are interconnected by means of the terminals represented by rectangles and numbered 01-40. For example, the terminal numbered 01 in Figure 5f is connected to the correspondingly numbered terminal in Figure 5g.

Digital unit 55 includes conventional universal synchronous or asynchronous receiver/transmitter ("USART") 400, such as part number 8274 available from Intel Corporation of Santa Clara, California (hereinafter "Intel"). USART 400 converts HDLC-formatted serial forward data received from head end 12 into parallel data for processing by the remainder of digital unit 55. USART 400 also converts parallel reverse data generated by other elements in digital unit 55 into HDLC-formatted serial data for transmission back to head end 12. The operation of USART 400 is augmented by gate array 402, shown in detail in Figures 5k-5s, which performs various functions such as converting non-return to zero inverted ("NRZI") forward data from

head end 12 on the FORWARD DATA lead to non-return to zero ("NRZ") "receive" data on the RXD lead. Gate array 402 also converts NRZ "transmit" data on the TXD lead to NRZI reverse data on the REVERSE DATA lead.

USART 400 and gate array 402 are also interconnected by INTERRUPT ("INT"), CLOCK ("CLK"), RXC, TXC, READ ("RD"), WRITE ("WR"), and RESET ("RES") leads. The INT signal is generated by USART 400, is inverted by gate array 402, and is applied to the INT0 terminal of microprocessor 420. This signal is used to alert microprocessor 420 to the occurrence of an important event in USART 400 (e.g., the fact that a character has been received or transmitted via the FORWARD or REVERSE DATA leads). The CLK3 output signal of gate array 402 is derived from the CLKOUT output signal of microprocessor 420. In particular, the 6MHz CLKOUT signal is divided by two by gate array 402 to produce the 3MHz CLK3 output signal which is applied to USART 400. The RXC output signal of gate array 402 is a clock signal derived by gate array 402 from the NRZI forward data signal. The TXC input signal of gate array 402 is a clock signal produced by microprocessor 420 to control the rate at which reverse data is transmitted back to head end 12. The source of the RD and WR signals is microprocessor 420. These signals respectively cause other devices in digital unit 55 to output data so that microprocessor 420 can read it, or cause other devices in digital unit 55 to input data from microprocessor 420. The ultimate source of the RESET or RES signals is power detect circuit 480. The POWER DETECT input terminal of digital unit 55 is connected to the RESET output terminal of common power unit 60 (Figure 6). Power detect circuit 480 produces an output signal for

resetting microprocessor 420 when power is restored following a power outage. Microprocessor 420 responds to this RES input signal by producing a RESET output signal which is applied to the RESET input terminal of gate array 402. Gate array 402 applies an inverted RESET signal to USART 400, microcomputer 450, and hex inverting buffer 465.

Gate array 402 is shown in detail in Figures 5k-5s. In Figure 5k, reference number 250 denotes a typical input buffer; reference number 252 denotes a typical AND gate; reference number 254 denotes a typical NAND gate; reference number 256 denotes a typical J-K flip-flop; reference number 258 denotes a typical D-type flip-flop; reference number 260 denotes a typical OR gate; and reference number 262 denotes a typical output buffer. In Figure 5s, reference number 264 denotes a typical latch. The following Table B correlates the gate array 102 pin numbers shown in Figure 5c with the lead labels used in Figures 5K-5s:

TABLE B

| Figure 5c Pin Number | Lead Label in Figures 5k-5s |
|---|---|
| 1 | IN1 |
| 2 | REST |
| 3 | IN10 |
| 4 | IN3 |
| 5 | IN4 |
| 6 | IN5 |
| 7 | IN6 |
| 8 | IN7 |
| 9 | IN8 |
| 10 | IN9 |
| 11 | IN11 |
| 12 | IN12 |
| 13 | --- |
| 14 | GND |
| 15 | IN13 |
| 16 | OT10 |
| 17 | OT9 |
| 18 | OT8 |
| 19 | OT7 |
| 20 | OT6 |
| 21 | OT5 |
| 22 | OT4 |
| 23 | OT3 |
| 24 | OT2 |
| 25 | OT1 |
| 26 | OT12 |
| 27 | OT11 |
| 28 | VCC |

In addition, leads with EX labels in Figures 5k-5s are connected to similarly labelled leads in Figures 5k-5s. For example, the output lead labelled EX4 in Figure 5m is connected to the input lead labelled EX4 in Figure 5l. The detailed operation of the gate array circuits shown in Figures 5k-5s will be readily apparent to those skilled in the art from the circuits themselves and from the preceding and following functional description of gate array 402 in relation to the other components of digital unit 55.

USART 400 has a REQUEST TO SEND ("RTS" or "DTRA") lead by which it interrogates communication

unit 56 to ensure that the communication unit is ready to transmit reverse data to head end 12. If communication unit 56 is ready to transmit reverse data, the communication unit sends an appropriate signal to USART 400 on the CLEAR TO SEND ("CTS" or "CTSA") lead. USART 400 selects the reverse data channel to be used by means of signals on the REVERSE DATA CHANNEL SELECT A and B ("RTSA" and "RTSB") leads, which are also connected to communication unit 56.

Pull-up resistor networks 404-407 are connected in the conventional way between +5V power supply circuit 414 and the CTS, RTSA, RTSB, RTS, INTERRUPT, FORWARD DATA, and REVERSE DATA leads, as well as to the TXDB and RXDB leads which are not used. Power supply circuit 414 is configured conventionally to provide noise protection for the +5V power signal used throughout digital unit 55. The VCC terminal of USART 400 is also conventionally connected to +5V power supply 414 in parallel with capacitors 408 and 409. The VCC terminal of gate array 402 is similarly connected to the +5V power supply in parallel with capacitors 410 and 411. The SYNCA terminal of USART 400 is clamped to the +5V supply via resistor 412. The PRI, CDA, and GROUND ("GND") leads of USART 400 and the GROUND ("GND") lead of gate array 402 are all connected to ground.

USART 400 applies parallel forward data to the data bus of digital unit 55 via terminals D0-D7. USART 400 also receives parallel reverse data from the data bus via terminals D0-D7. The data bus distributes data among USART 400, microprocessor 420, latches 430 and 432, multiplexers 440 and 442, microcomputer 450, and memory unit 475. Pull-up resistor network 413 is connected in the conventional way between the +5V power supply and the data bus leads.

Microprocessor 420, which can be a conventional microprocessor such as Intel part number 80186, performs such functions as (1) communicating with head end 12, (2) processing subscriber requests (e.g., channel selection), and (3) communicating with microcomputer 450. In addition to the data bus connections, microprocessor 420 communicates with USART 400 via its DRQ1, INTA0, DRQ0, A1, A2, PCS0, T1OUT, and T0OUT leads. When USART 400 is to read data directly from the memory portion 55b of digital unit 55, USART 400 requests direct memory access ("DMA") for reading by applying a DRQ1 signal to microprocessor 420. Microprocessor 420 acknowledges receipt of an INT0 signal from USART 400 via gate array 402 as described above by means of an INTA0 output signal. When USART 400 is to write data directly to the memory portion 55b of digital unit 55, USART 400 requests direct memory access ("DMA") for writing by applying a DRQ0 signal to micropressor 420. The A1 output signal of microprocessor 420 is applied to USART 400 to select one of two register sets in USART 400 for connection to the data bus. The A2 output signal of microprocessor 420 is applied to USART 400 to one of two register types (i.e., control "C" or data "D") within the USART register set selected by the A1 signal. The PCS0 (programmable chip select 0) output signal of microprocessor 420 is used to select USART 400 for reading data from (WR) or writing data to (RD) microprocessor 420. The T0OUT output signal of microprocessor 420 is a timer signal which controls the rate at which forward and reverse data are transmitted. The T1OUT output signal of microprocessor 420 is similar to the T0OUT signal, but controls the data rate on unused channel TXDB/RXDB.

Microprocessor 420 also communicates with gate array 402 via its T0OUT, PCS2, PCS4, BHE, INT0,

RESET, CLOCK OUT ("CLKOUT"), READ ("RD"), and WRITE ("WR") leads. The TOOUT output signal of microprocessor 420 is described above. The PCS2 and PCS4 (programmable chip select 2 and 4) output signals of microprocessor 420 are similar to the PCS0 signal described above. The BHE (byte high enable) output signal of microprocessor 420 is used to allow the 16-bit data bus to be used as an 8-bit data bus. The INT0 input signal of microprocessor 420 is described above in connection with USART 400 and gate array 402. The RESET, CLKOUT, RD, and WR output signals of microprocessor 420 are also described above.

Microprocessor 420 applies data and address signal information to the data bus and receives such information from the data bus via its AD0-AD15 leads. Microprocessor 420 communicates directly with microcomputer 450 via its INT1, INT3, and PCS1 leads. Microprocessor 420 applies additional control signals to memory unit 475 via its UPPER CHIP SELECT ("UCS"), MIDDLE CHIP SELECT ("MCS0"), and LOWER CHIP SELECT ("LCS") leads. The operating frequency of microprocessor 420 is established in the usual way by the circuit including crystal 421 and capacitors 422 and 423. The VCC, T0IN, T1IN, SRDY, and ARDY leads are connected to the +5V power supply in parallel with capacitors 424 and 425. The TEST, GROUND ("GND"), NMI, and HOLD leads are connected to ground. As mentioned above, the RES terminal of microprocessor 420 is connected via power detect circuit 480 (including resistors 481-486, inductor 487, transistors 488-489, Zener diode 490, diode 491, and capacitor 492) to the POWER DETECT input terminal of digital unit 55. The POWER DETECT terminal is connected the RESET output terminal of common power supply 60 and is used to

detect an AC power failure. When AC power is restored following a power interruption, power detect circuit 480 holds microprocessor 420 in the reset condition until sufficient time has elapsed to allow the microprocessor to re-initialize itself properly. For this purpose, the output signal of power detect circuit 480 is connected to the RESET ("RES") terminal of microprocessor 420 in parallel with capacitor 426.

Latches 430 and 432 are used to store address signal information produced by microprocessor 420 at terminals AD0-AD15 while associated data signals are transmitted or received via those same microprocessor terminals. The 1Q-8Q output leads of latches 430 and 432 collectively comprise an address bus which is connected to memory unit 475. Latches 430 and 432 are enabled by the ADDRESS LATCH ENABLE ("ALE") signal produced by microprocessor 420 and applied to the G input terminal of each latch. Power (+5V) is applied to the VCC input terminal of each latch 430 and 432 in parallel with capacitors 434-436. The OC terminals of both latches are connected to ground.

Multiplexers 440 and 442 act as an interface between 16 manually positioned switches 444, which specify the address of the ECU, and microprocessor 420 to enable the information represented by switches 444 to be read by the microprocessor in two successive 8-bit bytes. The signal for selecting ("SEL") multiplexers 440 and 442 comes from latch 432. The multiplexers are advanced or stepped by the signal applied to their OC terminals from gate array 402. Power (+5V) is supplied to the VCC terminals of multiplexers 440 and 442 in parallel with capacitors 445-447. Pull-up resistor networks 448-449 are conventionally connected between the +5V

power supply and the data input leads of the multiplexers.

Microcomputer 450, which can be a conventional microcomputer such as Intel part number 8472, performs such functions as (1) controlling communications with the subscribers via the drop cables, (2) controlling the tuner/converters in the SUs, and (3) communicating with microprocessor 420. Microcomputer 450 is connected to the data bus via its D0-D7 leads. The VDD, VCC, and SS leads of microcomputer 450 are connected to the +5V power supply in parallel with capacitors 451 and 452. The A0 lead is connected to the SEL input terminals of multiplexers 440 and 442. The P25, P24, and CS leads are connected directly to microprocessor 420 as mentioned above. The RESET, WRITE ("WR"), READ ("RD"), XTAL2, XTAL1, and T1 leads are connected to gate array 402. The RD lead is also connected to memory unit 55b. The signals on the XTAL1 and XTAL2 leads determine the operating frequency of microcomputer 450. Pull-up resistor network 453 is connected between these leads and the +5V power supply.

The P20-P23 and PROG terminals of microcomputer 450 are connected to conventional input/output expander 454 which may be Intel part number TMP82C43P. Expander 454 allows a small number of microcomputer input/output terminals to be connected to a larger number of input/output leads. The EA and VSS leads of microcomputer 450 are connected to ground. In a development configuration, the P17 lead of microcomputer 450 is connected via pull-up resistor 455 to the +5V power supply, and via manually operated switch 456 to ground.

Microcomputer 450 receives VLF data from communication unit 56 via its T0 lead. The P16 lead is not used. Six SUBSCRIBER SELECT signals are produced by microcomputer 450 and applied to leads

P10-P15. Each of these signals is applied to a respective one of the six SUs in this ECU in order to select the one or more of the SUs which is to respond to the DATA and FUNCTION SELECT signals mentioned below. The signals on leads T0 and P10-P16 pass through conventional buffering and pull-up resistor network 457, which is also connected to the +5V power supply.

The +5V power supply is connected to input/output expander 454 in parallel with capacitors 458 and 459. The CHIP SELECT ("CS") and GROUND ("GND") leads are connected to ground. The signal on lead P43 is serial DATA for use by the SU or SUs selected by the SUBSCRIBER SELECT output signals of microcomputer 450. For example, this DATA signal may be the MS coefficients used by the SUs as described above in relation to the SUs. The signals on leads P40-P42 are the three FUNCTION SELECT signals which are applied to the SUs to control their processing of the above-mentioned DATA signal. The signals on the P60-P63, P70, and P71 leads are respectively the six POWER DETECT signals produced by the SUs as described above. As mentioned above, each of these signals indicates whether or not the associated subscriber is supplying his or her share of the total AC power required for operation of the ECU. The signal on the P53 lead is the VLF data signal to be transmitted from the ECU to a selected subscriber's SPU via communication unit 56. The signals on the P50-P52 leads are also applied to communication unit 56 where they are used to control multiplexer 350 which selects the SPU that is to send or receive VLF data. The signals on leads P40-P43, P50-P53, P60-P63, and P70-P71 pass through conventional buffering and pull-up or clamping resistor network 460. Leads P72 and P73 are respectively connected to ground via manually operated

switches 461 and 462 and to the +5V power supply via pull-up resistor network 463. Switches 461 and 462 allow the ECUs in the system to be grouped in up to four different addressable banks.

Back-up power supply 464 operates during a total AC power failure to prevent loss of data in an essential portion of memory unit 55b, i.e., the portion of the memory unit selected by the LOWER CHIP SELECT ("LCS") signal. A back-up power supply includes conventional hex inverting buffer 465, resistors 466-469, capacitors 470-472, diode 473, and inductor 474. Buffer 465 may be Toshiba part number TC40H368P or an equivalent device. The back-up power is actually derived from capacitor 471 which is a relatively large storage capacitor. While the AC power is on, capacitor 471 is charged from the +5.7 volt power supply via the circuit including elements 468, 469, and 472-474. During an AC power interruption (as indicated by the reset signal applied to the 1A input terminal of buffer 465), capacitor 471 supplies +5V back-up power to energize buffer 465, to provide an LCS signal, and to provide +5V power to the portion of memory unit 475 selected by the LCS signal.

Memory unit 55b includes two conventional 16K-byte read only memories ("ROMs") 476 and 477 which store the operating program instructions for microprocessor 420. Each of ROMs 476 and 477 may be Intel part number 27128, or an equivalent device. Memory unit 55b also includes six conventional 8K-byte random access memories ("RAMs") 493-498 which store the data needed for control of the ECU. Each of RAMs 493-498 may be Toshiba part number TC5565PL-15 or an equivalent device. The connection of the various elements of memory unit 55b to the remainder of digital unit 55, as well as the

inter-connection of the memory unit elements, is entirely conventional and will be readily apparent to those skilled in the art. The UCS, MCS0, and LCS signals are used to extend the 16-bit address information to allow use of more memory than can be accessed using only 16 bits. The UPPER BANK SELECT ("BKU") and LOWER BANK SELECT ("BKL") signals produced by gate array 402 are used in combination with jumper network 478 to allow the relative amounts of ROM and RAM to be changed if desired. RAMs 495 and 496 are the memory unit elements energized by back-up power supply 464 in the event of an AC power outage as described above.

VI. Common Power Supply

To reduce the amount of power required to be supplied by the CATV system operator, the power required to operate each ECU is supplied by the subscribers served by that ECU. This is accomplished by having each master SPU apply a 60-volt AC power signal to the SPU's associated drop cable. As earlier described, the AC power signals from each subscriber are converted by each subscriber's associated SU into + and - half-wave rectified DC power signals. The + and - signals are respectively summed and applied to common power unit 60.

Figure 6 shows common power unit 60 in greater detail. As shown in Figure 6, the combined + and - power obtained from the SUs is applied to a filter/smoothing circuit 510. Filter/smoothing circuit 510 includes a plurality of filtering capacitors 514 and 516 to further remove AC ripple from the input power. A pair of series-inductances 512 remove any CATV or VLF communication signals still present with the power signal.

The output of filter/smoothing circuit 510 is a well-filtered but unregulated DC voltage.

This DC voltage output is applied to the input of a conventional switching power supply 520. Switching power supply 520 includes a step-down transformer 522 for producing as an output three AC power signals. These AC power signals are each half-wave rectified by rectifying diodes 532, 534, and 536, respectively. The outputs of diodes 532, 534, and 536 are smoothed and filtered by capacitances 543, 545, and 547 and inductances 542, 544, and 546. The outputs of the capacitance/inductance smoother/filter circuits are each applied as inputs to conventional voltage regulator circuits 530, 540, and 550, respectively. Voltage regulator circuits 530, 540, and 550 regulate the voltage appearing at their inputs to DC voltage levels of 27 volts, 12 volts, and 5 volts, respectively. These output voltages are each further filtered by output capacitors 570, 572, and 574. A fourth regulated output of 5.7 volts is obtained from the circuit comprising series-pass transistor 560, diode 562, and Zener diode 564. The output signal of inductor 546 is also used as a RESET signal for indicating an AC power failure. This RESET signal is applied to the POWER DETECT input terminal of digital unit 55 as described above.

The regulated DC output voltages of common power supply 60 are used to power the circuitry of the associated ECU. Thus, +5V, +12V, and +27V signals are applied from common power supply 60 to each subscriber unit (Figure 2), as well as to analog unit 54 (Figure 3), communication unit 56 (Figure 4), and digital unit 55 (Figure 5). To ensure that each subscriber equitably shares in providing power to operate the ECU associated with that subscriber, each SU includes power detection circuitry, earlier described, to turn the SU off in the event that AC

power is not being received from the drop cable associated with the SU.

VII. Subscriber Processing Unit

Subscriber processing units (SPUs) are located within subscriber residences. Each SPU is designed to (1) accept and transmit to its associated ECU subscriber-entered data, such as channel tuning requests, pay-per-view requests, parental control requests, and other functions normally associated with the television viewer, and (2) receive data and commands from the ECU to display information to a subscriber and control on and off the operation of the subscriber's television receiver. In addition, each SPU may serve as a data input terminal to accommodate audience response, shop-at-home, and other occasional two-way activities. Figure 7 shows a typical master SPU in detail.

As shown in Figure 7, a typical master SPU is connected via plug 761 to a source of subscriber-supplied 120-volt AC power. Transformer 762 steps down this power for use by the SPU. Conventional rectifier and smoothing network 760 rectifies the AC power for application to conventional voltage regulator circuit 764. Voltage regulator circuit 764 supplies as an output ("+") all necessary regulated DC voltages required to operate the circuitry of the SPU.

In addition to supplying AC power to rectifier/filter 760, transformer 762 provides as an output a source of 60 volt, 60 Hz AC power for application to the drop cable connecting the SPU to its associated ECU. For this purpose, transformer 762 includes a separate secondary winding connected to capacitor 761 and inductor 763. Inductor 763 presents a high impedance to the relatively high frequency CATV, VLF, and reverse HDRC signals, but

presents a low impedance to the lower frequency AC power signals. AC power signals are tapped off from inductor 763 and applied to terminal 767 to which is connected the drop cable. Thus, each subscriber, via the master SPU in the subscriber's residence, provides a share of the total power required to operate the ECU to which the subscriber's SPU is connected. If the SPU of Figure 7 were a slave SPU, inductor 763 would be removed so that only the subscriber's master SPU would supply power to the drop cable.

Drop cable terminal 767 is also connected to one terminal of conventional directional coupler 778 through capacitor 765. Capacitor 765 presents a high impedance to 60 Hz AC power signals, but a low impedance to the higher frequency CATV, VLF, and reverse HDRC signals. Another terminal of directional coupler 778 is connected via combiner 779 to a terminal ("TV") to which the subscriber's television receiver 90 (Figure 1), optional FM audio receiver equipment, and optional forward HDRC utilization equipment are attached. In this way, CATV signals (including television, FM audio, and forward HDRC signals) received from the ECU are transmitted to the devices which utilize those signals. Combiner 779 adds the reverse HDRC signal for application to the drop cable. Although in the preferred embodiment, a subscriber's television, FM audio and HDRC equipment are connected to the drop cable via connection to the SPU, it will of course be appreciated that such equipment may instead be connected to the drop cable without direct connection to the SPU by utilizing a conventional directional coupler and capacitor. Thus, the present invention provides subscribers with great flexibility in variously locating the SPU and the subscribers'

television apparatus and other equipment within the subscribers' premises.

The terminal of directional coupler 778 connected to the TV and FM audio terminal is also connected to the input of conventional VLF demodulator 770. Demodulator 770 receives signals transmitted from the ECU, including CATV and VLF communication signals. As already described with respect to an embodiment of the ECU, ECU-to-SPU VLF communication signals are ASK-modulated signals having a carrier frequency of 430 KHz. This carrier signal is on continuously except when data is being transmitted. Demodulator 770 demodulates the applied ECU-to-SPU VLF signals to produce serial digital data as an output. This is accomplished in one embodiment by parallel tuned LC circuit 776 which is tuned to 430 KHz. Conventional amplifier/filter circuit 774, which in one embodiment uses a surface acoustic wave ("saw") filter as the filtering element, receives the output of circuit 776 to provide an output only when 430 KHz carrier is detected. The output from circuit 774 is then applied to operational amplifier 772 which produces an output that is high or low in response to the presence or absence, respectively, of a signal from amplifier/filter 774. Operational amplifier 772 thus produces a digital data output representative of the information transmitted to the SPU from the ECU via the VLF signal.

The digital data output of demodulator 770 is applied to a data input line and to an interrupt input line of conventional microcomputer 700. Microcomputer 700 may be any suitable commercially available microprocessor or microcomputer such as Toshiba part No. TMP 4740P, which is 4-bit microcomputer having 4k bytes of on-board ROM and 256 bytes of on-board RAM memory. An object and source code

computer program listing which will be readily understood by those skilled in the art suitable for controlling the operations of microcomputer 700 is annexed hereto at Appendix A.

Microcomputer 700 utilizes data received from the ECU to display information on conventional 7-segment display 710. In one embodiment, display 710 is capable of displaying two decimal digits representative, for example, of the television channel to which the associated SU in the ECU is tuned. Microcomputer 700 drives display 710 in a conventional manner by multiplexing display data onto a common seven-line bus B1 and alternately enabling two return lines A and B. Resistor-pack 712 includes seven resistors, each resistor being in series with a line of bus B1 to provide current limiting for display 710.

Microcomputer 700 also utilizes data received from the ECU to illuminate a so-called order event lamp. In one embodiment, the order event lamp is a conventional light emitting diode (LED) 790 connected to microcomputer 700 via current limiting resistor 792. As described in greater detail below, the order event lamp may be utlized to inform the subscriber that the subscriber is viewing a program for which the subscriber will be charged an additional fee.

Another circuit element controlled by microcomputer 700 is television power relay 791. Television power relay 791 is a normally-open relay which controls the application of 120-volt AC power to power outlet 793, into which the associated television receiver 90 is plugged. Relay 791 is controlled on and off on command from the ECU.

Also connected to microcomputer 700 is keyboard 720 for use by the subscriber, for example, in entering channel selection requests. In one embodiment, keyboard 720 is a conventional membrane matrix keyboard having four columns and four rows. A common bus B2 having eight lines connects the keyboard's row and column outputs via resistor pack 722 to corresponding inputs of microcomputer 700. In addition to keyboard 720, an optional remote control unit ("RCU") may be used to enable a subscriber to remotely enter data into the SPU (see Figure 1). Such an RCU may be of any type, wired or not. In one embodiment, the RCU is a conventional wireless device which communicates with the SPU by transmitting coded infra-red light. In the SPU, conventional remote control receiver 730 having a photo-diode sensitive to infra-red light receives these coded signals and converts them into serial digital data. This data is then provided to microcomputer 700.

Microcomputer 700 communicates subscriber-entered channel and other requests to the attached ECU by sending digital data to VLF modulator 740. The digital data turns transistor 742 on and off via current-limiting resistor 783. In turn, transistor 742 turns on and off FET transistor 746 via resistors 743, 745, 747, and 749. FET transistor 746 controls on and off the output of continuously operating 468 KHz oscillator 744 to ASK modulate a 468 KHz signal. Saw filter 748 provides bandpass limiting for the modulated output of modulator 740. The output of saw filter 748 is applied to an emitter-follower circuit comprising transistor 750 and resistors 752-755. Capacitor 751 blocks DC voltage. The output of the emitter-follower circuit is applied through capacitor 757 and resistor 756 to a terminal of directional coupler 778. The VLF modulated signal is then applied from directional coupler 778 to the drop cable for transmission to the attached ECU on the SPU-to-ECU communication channel.

For enabling each of a plurality of SPUs (i.e., a master SPU and one or more slave SPUs) connected to a drop cable to selectively communicate with the ECU, each SPU is given a unique address at the time the SPU is installed in the subscriber's residence. This is accomplished by placing appropriate jumper wires in jumper block 782. Jumper block 782 has 2 jumper connections, each representing one bit of a 2-bit address. By selectively jumping the terminals in jumper block 782, each SPU attached to an ECU may be assigned any of 4 different addresses. In addition, switch 780 serves to identify the SPU depending on whether the switch is opened or closed as either a master SPU associated with a primary SU in the ECU, or a slave SPU associated with a secondary SU in the ECU. Typically, the master SPUs are assigned binary address 00 in jumper block 782, and slave SPUs are assigned any address 01, 10, or 11 in jumper block 782.

Communication between the ECU and its associated SPUs is via separate transmit and receive channels over the drop cable. As mentioned above, the first channel, the ECU-to-SPU channel, is a VLF channel having a carrier frequency of 430 KHz. The second channel, the SPU-to-ECU channel, is a VLF channel having a carrier frequency of 468 KHz. Both channels carry data at a rate of 1200 bps, although other convenient data rates may be used. Each SPU associated with an ECU transmits data to the ECU on the common SPU-to-ECU channel. Similarly, the ECU transmits data to each associated SPU on the common ECU-to-SPU channel.

VIII. Head End

Elements 34 and 36 of head end 12 are shown in greater detail in Figure 8. The forward and reverse data signals on cable network 14 are

coupled to combiner 800 by combiner 32. Combiner 800 applies the forward data signal from the modulator portion 810 of modem 34 to combiner 32, and applies the reverse data signal from combiner 32 to the demodulator portion 840 of the modem.

Central control computer 36, which may be any suitable computer such as a conventional Intel 330 computer, includes conventional main central processing unit ("CPU") 880, conventional main memory 882, conventional output buffer unit 884, and four conventional main input buffer units 886-889. All of elements 880, 882, 884, and 886-889 are conventionally interconnected via communications bus 890. Depending on the data rates and the speed of operation of buffer units 884 and 886-889, it may be possible to combine the functions of units 884 and 886-889 into a smaller number of buffer units. Main CPU 880 includes or is coupled to conventional input/output devices (not shown) for use by the operators of the system to control the system.

Each of buffer units 884 and 886-889 includes a conventional high level data link ("HDLC") controller portion, a conventional CPU portion, and a conventional memory portion. The HDLC controller portion of output buffer unit 884 converts parallel forward data originated by main CPU 880 to a serial NRZI forward data signal. This forward data signal is applied to conventional EIA RS 422 interface device 812 in the modulator portion 810 of modem 34. Interface device 812 applies the forward data signal to conventional TTL buffer 814. TTL buffer 814 applies the forward data to PIN diode switch 816 which frequency modulates the forward data signal by switching back and forth between 103.9 MHz and 104.1 MHz oscillators 818 and 820 in accordance with the applied data signal. The frequency modulated forward data signal is applied to surface acoustic wave bandpass

filter 822 and then to combiner 800 for application to cable network 14 via combiner 32.

Considering now the elements which receive, demodulate, and process the reverse data signals, it will be recalled that there are four reverse data channels having frequencies of 19.125 MHz, 19.375 MHz, 19.625 MHz, and 19.875 MHz, respectively, and that the reverse data is in NRZI protocol. All of these reverse data signals are passed through conventional bandpass filter 842 and conventional preamplifier 844. The output signal of preamplifier 844 is applied to four similar demodulator circuit paths, only one of which is shown in detail in Figure 8. Each of these circuit paths demodulates the reverse data signal in a respective one of the reverse data channels.

In each of the above-mentioned circuit paths, the reverse data signal is mixed by mixer 850 with the output signal of local oscillator 852 having a frequency selected such that the associated reverse data channel signal frequency minus the local oscillator frequency equals 10.7 MHz. Mixer 850 therefore shifts the associated reverse data channel signal to 10.7 MHz. The output signal of mixer 850 is applied to bandpass filter 854 which eliminates all signals other than the 10.7 MHz modulated signal. The output signal of bandpass filter 854 is applied to conventional intermediate frequency ("IF") amplifier 856. IF amplifier 856 is augmented by conventional carrier detector device 858 which applies a request to send ("RTS") output signal to conventional EIA RS 422 interface device 866 whenever a 10.7 MHz signal is detected. Conventional Costas loop device 860 converts the 10.7 MHz data signal to a baseband data signal which is applied to interface device 866. The baseband data signal is also applied to program logic array 862 which uses the data signal and the

higher frequency output signal of oscillator 864 to produce a clock signal pulse during each bit interval in the associated NRZI data signal. This clock signal is also applied to interface device 866.

Interface device 866 applies the carrier detect, clock, and NRZI data signals to the associated input buffer device 886-889. The HDLC controller portion of the buffer device converts the serial NRZI data to parallel data suitable for further processing by central control computer 36.

## IX. ECU Operation

Microprocessor 420 (hereafter sometimes the "Data Processor") is responsible for controlling the overall operation of the ECU. This responsibility includes communicating with the CCC at head end 12, initiating, implementing and coordinating various operations within the ECU, and communicating with the SPUs. The Data Processor is aided in its functions by microcomputer 450 (hereafter sometimes the "Drop Processor"). The Drop Processor is responsible for transmitting to associated SPUs messages originated by the Data Processor, and for transmitting to the Data Processor messages originated by the SPUs. In addition, the Drop Processor on command from the Data Processor controls various functions associated with the SUs of the ECU. The operations of the Data Processor and Drop Processor in communicating with the CCC at head end 12 and with associated SPUs, and in implementing and controlling various ECU functions, will now be described.

### A. ECU/SPU Communication Protocol

The communication protocol between an ECU and its associated SPUs must allow for the prompt detection and servicing of channel selection, pay-per-view requests and other subscriber-originated

requests from any of a plurality of SPUs (both master and slave) associated with any of up to six drop cables. Moreover, the communication protocol must be capable of detecting requests which are sporadic and infrequent.

1. ECU/SPU Polling

To ensure the prompt servicing and processing of subscriber-entered SPU requests, communication access to the ECU is controlled by the ECU's digital unit 55 using a two-level polling scheme. The first level is called "drop polling", and permits a very rapid polling or sensing of each drop associated with the ECU to identify a drop which has an SPU in need of service (i.e., having information to transmit to the ECU). Drop polling is accomplished without transmitting or receiving any data over the relatively low-speed (in one embodiment, 1200 bps) ECU/SPU data link.

Once a particular drop has been identified by the ECU as requiring service, and if necessary because of the existence of more than one SPU attached to the drop, the ECU uses a second level of polling, called "device polling", to differentiate between SPUs. In this event, the communication link is used to specifically address each SPU attached to the drop to determine which SPUs require service. The ECU maintains maps in its memory of each drop, and of each device on each drop. The data of each map is in a predetermined order so as to optimize response times or to give priority to certain SPUs.

Drop Polling

Drop polling is controlled by microcomputer 450 in ECU digital unit 55 (Figure 5e) and multiplexer 350 in communication unit 56 (Figure 4). If an SPU requires service (e.g., a subscriber has

entered a channel request into the SPU's keyboard), SPU microcomputer 700 causes VLF modulator 740 to transmit a continuous 468 KHz carrier signal to the ECU. This continuous carrier signal is called a "cry" or "Service Request" signal. At the ECU, microcomputer 450 selects a drop by sending a drop address code to multiplexer 350 via the multiplexer's address lines A, B and C (Figure 4) to selectively connect the ECU's VLF modulator 320 and demodulator 340 to a particular one of the six drops. Once connected to a drop via multiplexer 350, ECU digital unit 55 listens for the presence of carrier signal (a Service Request) on the drop. If carrier signal is present on the drop and detected by the ECU, this is interpreted by the ECU to mean that an SPU on the drop requires service. If no carrier signal is detected on the drop, the ECU interprets this to mean that no SPUs on the drop require service. In this latter event, the ECU (via multiplexer 350) selects another drop in a predetermined sequence, and listens for the presence of carrier on that drop. If carrier is present, then an SPU attached to the drop requires service.

It should be noted that SPUs on the several drops request service simply by activating carrier on the SPU-to-ECU drop cable communication channel. It is not necessary for an SPU to transmit to the ECU any data or special commands to obtain service, thus allowing for very fast polling. To prevent any interference with communications already taking place on the drop, each SPU connected to the drop continuously monitors the ECU-to-SPU channel for the presence or absence of data. An SPU will activate carrier to transmit a Service Request only after the SPU has detected a predetermined number of (e.g., twelve) bit times of a continuous mark condition on the

ECU-to-SPU channel. This verifies to the SPU that there is no other communication on the drop cable.

Device Polling

Device polling is also controlled by microcomputer 450 in the ECU. As described above, if more than one SPU is attached to a drop on which a Service Request is detected, the ECU must individually poll the SPUs on the drop to determine which SPU has requested to communicate with the ECU. Irrespective of which SPU on the drop first requested service, device polling will occur in a predetermined order established by the ECU.

The ECU initiates device polling by transmitting conditional poll commands on the selected drop. All SPUs and other devices connected to the selected drop sense these commands and cease any activity (i.e., carrier transmissions) on the SPU-to-ECU link. The particular SPU being polled responds to the ECU with a single mark bit if the SPU does not require service. If the polled SPU requires service, the SPU responds by transmitting to the ECU an acknowledgement (a space bit) followed by data.

2. ECU/SPU Message Formats

The communication of messages between an ECU and its associated SPUs is asynchronous with uniform bit timings and non-uniform, indeterminate character timings. The ECU-to-SPU link completely controls data transfers on the SPU-to-ECU link. Each character transmitted to the SPU by the ECU is acknowledged by the SPU with a one-bit acknowledged/not acknowledged ("ACK/NAK") handshake. This bit is also used for a poll response, as earlier described. Each character is preceeded by at least one bit time of mark state. A mark-to-space transition resulting in a start bit in a space state initiates the character.

The next bit is a message framing bit, then eight data bits (transmitted low-order bit first), a parity bit, and at least one bit time of mark condition as an ending. The ending bit time of mark condition also serves as a lead-in to a possible subsequent character.

## Character Framing

Character framing is established by the SPU sensing on the ECU-to-SPU link at least a predetermined number (e.g., twelve) bit times of a continuous mark condition followed by a mark-to-space transition resulting in a start bit. If an SPU loses character framing it will not recognize any commands until character framing is re-established by the ECU. The ECU periodically allows a given drop the opportunity to re-establish character framing by enforcing periods of continuous mark condition.

## Message Framing

The manner in which a message character (data) is to be interpreted by an SPU is determined by the state (mark or space) of the message framing bit. The beginning of a message is indicated by a space condition (logical zero) in the message framing bit. A logical zero message framing bit means that the data field (8 bits) represents a command which all SPUs on the drop must interpret. On the other hand, if the message framing bit is in a mark condition (a logical one), then the data field is interpreted as containing subsequent information to a previous command. Any number of message characters can occur between command bytes. The incorporation of the message framing bit, although adding 1/11ths overhead to each message character, increases framing integrity and permits increased through-put when long data streams are encountered.

Without the message framing bit, the transmission of long data streams to or from an SPU would be curtailed or precluded in view of the need for the ECU to be able to rapidly poll and service up to 6 drops, each drop potentially having a plurality of SPUs. By utilizing the expedient of a message framing bit, the ECU may perform drop polling or even service other SPUs on other drops during the interstices between character transmissions to a specific SPU on a particular drop.

ACK/NAK and Poll Responses

The bit time immediately following the parity bit is used as an ACK/NAK window on the SPU-to-ECU link. Each character transmitted by the ECU is acknowledged by the SPU during the ACK/NAK window. This ACK/NAK window is also used in a special manner to respond to polls.

SPUs respond to the ECU during the ACK/NAK window as follows. Upon the receipt of an initial message start bit, all SPUs on the drop turn off carrier on the SPU-to-ECU link. Upon receipt of the message framing bit, if the bit is a space, all SPUs input the data bits (which represent a command) to check for the presence of their address. If the message framing bit was a mark, then only the previously addressed SPU on the drop inputs the data bits.

Upon receipt of the last data bit, the addressed SPU turns on its carrier on the SPU-to-ECU link. Upon receipt of the parity bit, if the parity bit indicates an error in transmission, then the SPU leaves its carrier on during the next bit time as a NAK signal to the ECU. If the parity bit indicates correct transmission, then the SPU turns its carrier off and maintains the carrier off during the next bit time as an ACK signal to the ECU.

If the data is a correctly transmitted poll, then the polled SPU after receipt of the parity bit turns its carrier off by transmitting the start bit of the information it has to transmit to the ECU. Otherwise, carrier is maintained on during the ACK/NAK window. One bit time after receipt of the parity bit (i.e., after the ACK/NAK window), all SPUs turn carrier off in preparation for another transmission to or from the ECU.

B. ECU/SPU Messages

Communications from the Data Processor to the Drop Processor are in the form of variable length messages representing commands which the Drop Processor executes. Execution by the Drop Processor of a Data Processor command normally follows a handshaking sequence requiring the Drop Processor to return a command response to the Data Processor. This command response may be a single byte acknowledgment, or a multiple byte response if the Data Processor command requires a return of data. However, if the Data Processor command requires the Drop Processor to send a message to a device attached to a drop cable, as described below, a command response may not be required.

In addition to command responses, information may be passed to the Data Processor from the Drop Processor without any commands having been issued by the Data Processor. Such a transfer would occur, as further described below, in the event that a device attached to a drop cable transmits a Service Request to the ECU. In such an event, the Drop Processor will read data from the device requesting service and pass the information to the Data Processor as an Unsolicited Data Response.

The following table sets forth the Data Processor/Drop Processor communication commands utilized in one embodiment of the invention. Commands having an asterisk are sent from the Drop Processor. The other commands are sent from the Data Processor.

TABLE C

| COMMAND (HEX) | FUNCTION |
|---|---|
| 00 | Reset drop processor. |
| 01 | Read power detect and bank address. |
| 03 | Change tuner frequency (channel select). |
| 04 | Send message to attached device. |
| 05 | Turn converter on/off and select cable A or cable B. |
| 07 | Define drop poll sequence. |
| 08 | Define device poll sequence. |
| 84* | Unsolicited Data Response from attached device. |

Briefly, the commands set forth in Table C operate as follows:

Command 00. This is a one-byte command message used by the Data Processor to reset the Drop Processor and to initialize its registers and pointers. All polling activities are discontinued. The Drop Processor acknowledges receipt of this command by returning to the Data Processor a single command response byte equal to 00.

Command 01. This is a one-byte command message used by the Data Processor to cause the Drop Processor to read the state of the six power detect lines (POWER DET, Figure 2) from the subscriber units SU1, SU2, etc., and to read the bank to which the

ECU's address is assigned. The response sent by the Drop Processor to this command comprises two bytes. The first byte echoes the command byte (01). The second byte is a data byte which specifies the state of each of the POWER DET lines and the ECU's bank address. For each of the POWER DET lines of the six subscriber units, corresponding bits 0-5 of the response byte are set to 1 or 0 depending respectively on whether or not power is being supplied to the drop cable by the subscriber connected to that subscriber unit. Bits 6 and 7 of the response data byte specify to which one of four banks the ECU's address is assigned.

Command 03. This is a four-byte command message used by the Data Processor to cause the Drop Processor to tune any of the ECU's six associated SUs to a specified physical channel. The first byte is the command byte (03). Next are three bytes of data. The first byte specifies in bits 0-2 which one of the six SUs is to be tuned. The next two bytes specify the two MS numbers, earlier described, which are required by the circuitry of the SU's tuner/converter to tune to a particular physical television channel. The Drop Processor sends a two-byte command response to the Data Processor upon receipt of the command echoing the first two bytes of the command message.

Command 04. This command message (hereafter the "04 Command") is used by the Data Processor to cause the Drop Processor to send an addressed message to a device attached to a drop cable. In one embodiment, the device may be an SPU having an address equal to 2, 3, 4 or 5, or the device may be some other type of apparatus attached to the drop cable and capable of communicating with the ECU. Examples of such other devices are medical monitoring equipment, fire alarms, smoke alarms, burglary

alarms, and so forth. Such other devices may have addresses equal to 0, 1, 6 or 7.

The 04 Command message to the Drop Processor includes at least four bytes, as follows: (1) in the first byte, the command code (04), (2) in the second byte, the drop number (bits 0-2) and the device address from 0-7 (bits 3-7), (3) in the third byte, the number of bytes contained in the message, and (4) in the fourth byte, a device command. Following the device command byte are one or more data bytes. The device command and data bytes together comprise the message. The device command byte includes a 3-bit device address (bits 0-2) and a 5-bit function code (bits 3-7). The function code is used to command a particular operation in the addressed device. The following table sets forth the function codes used to control SPU or device operation in one embodiment of the invention:

TABLE D

| FUNCTION CODE (HEX) | DEVICE OPERATION |
|---|---|
| 00 | Read internal status, and return a response message to the ECU. |
| 01 | Turn on or off the order event lamp. |
| 02 | Set the order-event lamp to flashing or non-flashing mode. |
| 03 | Enable or disable data input to the device. |
| 04 | Enable or disable data output from a device. |
| 05 | Turn the television power relay on or off. |
| 06 | Blank the display. |
| 07 | Set the display to flashing or non-flashing mode. |
| 08 | Display a character in the right-most position of the display. |
| 09 | Transmit a number of characters to the ECU as specified by the byte count of the 04 Command message. |
| 0A | Display a character at a specified position of the display. |
| 0B | Conditional poll to determine the identity of the device sending a Service Request. The device returns its data. |

If the device message requires the device to return a response to the ECU (e.g., in response to function codes 00, 09, or 0B), a command response (hereafter the "04 Response") is returned from the Drop Processor to the Data Processor. This response includes a three-byte response header followed by one or more data bytes. The response header includes: (1) in the first byte, a command response code (hex 04), (2) in the second byte, an echo of the drop and device address byte originally sent by the Data Processor, and (3) in the third byte, the number of bytes of data in the response message. Assuming no transmission errors occurred, following the response header are one or more response data bytes. The data byte of an error-free 04 Response to a conditional poll, for example, may identify the key which the subscriber has depressed. Or, in the case of an error-free 04 Response to a status request message, the data byte may specify by its bit settings the device status as follows: the device is a master or slave SPU (bit 7), the order event lamp is flashing (bit 5), the order event lamp is on (bit 4), the television power relay is on (bit 3), there has been recent power on (bit 2), a key has been recently depressed (bit 1), and a new character is available (bit 0). If a transmission error occurred, the byte count is 00. In this event, a single data byte follows the byte count to specify an error code. The error code may be 01 (indicating an ECU-to-device transmission (parity) error), 02 (indicating a device-to-ECU transmission (parity) error), or 03 (indicating an invalid device response). Error codes are sent to the Data Processor only after the occurrence of five consecutive link transmission errors.

<u>Command 05</u>. This command is used by the Data Processor to cause the Drop Processor to turn on or off a particular SU and, in a two-cable system,

to cause the SU to select either cable A or cable B. The command message includes two bytes. The first byte is the command code byte (hex 05). The second byte specifies (1) the SU (bits 0-2), (2) the selected cable (bit 6 is set to 0 or 1 to select cable A or B, respectively), and (3) whether to turn the SU unit on or off (bit 7 is set to "0" or "1", respectively). A two-byte command response is returned to the Data Processor by the Drop Processor. The first byte echoes the command byte (05). The second byte includes in bits 0-2 the SU address contained in the command message.

Command 07. This command is used by the Data Processor to load a drop polling map into the Drop Processor to define the drop polling sequence. The command message includes five bytes. The first byte is a command code byte (hex 07). Bytes two through four specify the drop polling sequence. Each of these bytes is divided into two nibbles of four-bits per nibble. The value of each nibble is set from 0-5 to specify in each nibble a particular drop. Drops are sequentially polled in the order specified by the nibbles as received by the Drop Processor from the Data Processor. A value of hex F in a nibble indicates the end of the polling map. If all nibbles contain hex F, drop polling is disabled. The fifth byte would include an F in its high order nibble to indicate the end of a polling map for six drops. A one-byte command response (07) is sent by the Drop Processor to the Data Processor echoing the command code byte.

Command 08. This command is used by the Data Processor to load a device polling map into the Drop Processor to define the device polling sequence. This command message includes seven bytes. The first byte is the command byte (hex 08). The second byte specifies the drop in bits 0-2. Bytes three through

six specify in each of eight nibbles a device address. Devices on the specified drop are sequentially polled in the order specified by the device address nibbles as received by the Drop Processor from the Data Processor. A value of hex F in a nibble indicates the end of the device polling map. If all entries in the device polling map are set to hex F, device polling is disabled. The seventh byte would include an F in its high order nibble indicating the end of a device polling nap for eight devices. A two-byte command response is sent by the Drop Processor to the Data Processor echoing the first two bytes of the Data Processor's command message.

Command 84. This command (hereafter the "84 Command") is sent from the Drop Processor to the Data Processor indicating the receipt by the Drop Processor of unsolicited data from a device attached to a drop cable. The 84 Command is used by the Drop Processor to transmit to the Data Processor data received from a device which has transmitted a Service Request to the ECU (e.g., a subscriber has entered a channel selection request via SPU keyboard). This command message includes at least four bytes. The first byte contains the command code (hex 84). The second byte specifies the drop address (bits 0-2) and the device address (bits 3-7) to identify the particular drop and device sending the Unsolicited Data Response. The third byte specifies the number of data bytes being sent by the device. Finally, the fourth byte is a data byte. If the byte count is 00, an error has occurred. In such a case, an additional byte follows the data count byte specifying an error code. An error code of 01 indicates an ECU-to-SPU transmission (parity) error. An error code of 02 indicates an SPU-to-ECU transmission (parity) error.

C. Drop Processor Operation

Figures 9a-9b illustrate flow charts of a computer program utilized in one embodiment of the invention for controlling the operations of the Drop Processor. An object and source code computer program listing which will be readily understood by those skilled in the art for controlling the operations of the Drop Processor in accordance with the flow charts of Figures 9a-9b is annexed as Appendix B.

The program controlling the Drop Processor includes a Main Routine (Figure 9a) and a Timer Interrupt Routine (Figure 9b). Each of the two routines runs independently of the other. The Main Routine is periodically interrupted by the Timer Interrupt Routine, in a conventional manner, after a predetermined time period has elapsed as determined by the timing out of an interrupt timer. The function of the Drop Processor Main Routine is to (1) receive data from the Timer Interrupt Routine (e.g., a message from an SPU to the ECU) and send it to the Data Processor, and (2) to send data from the Data Processor to the Timer Interrupt Routine for, ultimately, transmission to SPUs. The function of the Timer Interrupt Routine is to (1) implement drop and device polling, (2) transmit messages to and receive messages from SPUs attached to the drops, and (3) send signals to and receive signals from the SUs.

1. Main Routine

As shown in Figure 9a, the program flow of the Main Routine begins at step 901 where various buffers, counters, flags and ports are initialized. Also at step 901, drop polling and device polling are initialized, and register R5 (described in more detail below) is set to three. At steps 902 and

903, the address for jumping to the Timer Interrupt Routine is set and the interrupt timer is activated.

Initialization is complete when the program flow advances to step 904. At step 904, the Main Routine interrogates the state of an Input Buffer Full ("IBF") flag. This flag is associated with a Drop Processor buffer which receives data passed to the Drop Processor from the Data Processor. If the IBF flag indicates that the input buffer is full, the program flow advances to step 905. Otherwise, the program flow branches to step 906.

Assuming first that the IBF buffer is not full the program advances to step 906, where the Drop Processor checks a buffer (the 84 Buffer) to determine whether or not a device attached to a drop has sent an Unsolicited Data Response (i.e., an 84 Command). If so, the program advances to step 907 to pass the 84 Command to the Data Processor. Otherwise, the program advances to step 908 where the Drop Processor determines if a device has sent an 04 Response. If "no", the program loops to step 904 to again check the IBF flag as earlier described. If "yes", the program advances to step 909 to pass the 04 Response to the Data Processor. From step 909 (or step 907 if the program advanced to that step), the program loops to step 904.

If at step 904 the IBF flag indicates that the input buffer is now full, the program advances to step 905 where the contents of the buffer are input and the IBF flag is cleared. The program flow then advances to step 910 where the Drop Processor determines what type of command (earlier described) was included in the message sent by the Data Processor. Depending upon the command, the program at step 910 may branch in any of three directions.

If command 00 (reset) was sent, the program flow advances to step 920, where the Drop Processor

sends a 00 command response message to the Data Processor via an output buffer associated with the Drop Processor. The program flow then loops to step 901 to re-initialize the Drop Processor as previously described.

If at step 910 any of commands 00, 03, 05, 07 or 08 was sent by the Data Processor, the program flow advances to step 911. At step 911, the Drop Processor processes the particular command as earlier described. The program flow then advances to step 912, where the Drop Processor sends to the Data Processor an appropriate command response. From step 912, the program flow loops to step 904.

Finally, if step 910 determines that an 04 Command message was sent by the Data Processor, the program flow branches to step 913. At step 913, the Main Routine interrogates a flag indicating the state (empty or full) of an "04 Buffer" associated with the Drop Processor. The 04 Buffer contains data to be sent by the Drop Processor to a device attached to a drop. If the 04 Buffer is empty, the program branches to step 914. Otherwise, the program branches to step 915.

If the program at step 913 advances to step 914 (i.e., the 04 Buffer is empty), step 914 places data received from the Data Processor into the 04 Buffer. The program flow then advances to step 917, where register R5 is checked. If the contents of register R5 are not equal to 0, the program branches to step 919 to decrement the contents of register R5 by one. Otherwise, the program advances to (1) step 918, where the contents of register R5 are initialized to a value of three and incremented by one, and (2) step 919 where the contents of register R5 are decremented by one. From step 919, the program flow loops to step 904 to again check the input buffer.

Returning now to step 913, if the 04 Buffer is not empty the program branches to step 915. At step 915, the Main Routine determines whether or not the 04 Buffer contains an 04 Response from an attached device. If "yes", the program advances to step 916 to pass that 04 Response data to the Data Processor. From step 916, the flow advances to step 914 to input the data received from the Data Processor. On the other hand, if "no" at step 915, the program advances to step 921 where the contents of register R5 are checked. If the contents of register R5 are not equal to 0, the program loops to step 913 to again interrogate the state (empty or full) of the 04 Buffer. Otherwise, the program from step 921 advances to step 922 to check the state of the 84 Buffer. If the 84 Buffer is empty, the program immediately loops to step 913. However, if the 84 Buffer contains data at step 922, the program advances to (1) step 923 to pass the data to the Data Processor as an 84 Command, (2) step 924 to reset the R5 register to a count of three. The program then loops to step 913.

2. <u>Timer Interrupt Routine</u>

A flow chart of the Timer Interrupt Routine is illustrated in Figure 9b. As shown in Figure 9b, the Timer Interrupt Routine starts at step 950 to initialize the drop and device maps and clear various flags and buffers. The program then advances to step 951, where a determination is made as to whether ("yes") or not ("no") a Service Request exists on the drop to which the Drop Processor is connected via multiplexer 350 (Figure 4).

Assuming first that no Service Request is detected at step 951, the program branches to step 966 where the 04 Buffer is checked to determine whether or not the Drop Processor has received an 04

Command from the Data Processor for transmission to a device attached to a drop cable. If not, the program advances to step 960 to update the drop polling map pointer. If the pointer is not pointing to the end of the drop map, the program increments the drop map pointer in step 965, initializes the device map pointer to the beginning of the device map, and loops to step 951 to listen for the presence of a Service Request on another drop. On the other hand, if at step 960 the program determines that the drop pointer is at the end of the drop map, the program advances to step 961 to reset the drop map pointer to the beginning of the drop map prior to advancing to step 962 and then to step 951 as described above.

Returning to step 966, if the 04 Buffer contains an 04 Command to send to a device, the program flow advances to step 973 after setting a flag ("1") in step 967. At step 973, the Drop Processor transmits the 04 Command message to the appropriate device. The program then advances to step 974 to determine whether or not a transmission error occurred. If an error occurred, the program branches to step 972. If less than five errors have occurred, the program advances from step 972 to step 973 to re-transmit the 04 Command. On the fifth error, however, the program branches from step 972 to step 975 where an 04 Response containing an appropriate error code is transmitted from the Drop Processor to the Data Processor as earlier described. From step 975 in the event of an error, or step 974 in the event of no error, the program advances to step 976 to check the state of the "1" flag. Because the program advanced from step 967, the "1" flag will earlier have been set. Accordingly, the program from step 976 advances to step 960 to increment or initialize the drop map pointer as previously described.

Assuming now that a Service Request is detected at step 951, the program advances to step 952 where a conditional poll command (earlier described) is transmitted on the drop on which the Service Request was detected. At step 953, the Drop Processor determines whether an ACK or a NACK (earlier described) is returned in response to the poll. Assuming first that a NACK is returned, the program branches to step 968 to determine whether or not a transmission error occurred. If "yes", the program advances to step 969 to return an appropriate error code to the Data Processor. Otherwise, the program advances to step 970 to determine whether or not an 04 Command has been received from the Data Processor for transmission to a device. If "yes", the program advances to step 973 to transmit the 04 Command as previously described. Otherwise, the program advances to step 959 to determine whether or not the device map pointer is at the end of the device poll map. If the program is not at the end of the device map, the device map pointer is incremented at step 963 and a conditional poll command to the next device is sent at step 952. If the program is at the end of the device map, the program advances from step 959 to step 960 to update the drop map pointer and loop as previously described.

Assuming now that an ACK is detected at step 953 (signifying that the polled device has an Unsolicited Data Response to transmit to the ECU), the program advances to step 954 to input the unsolicited data. Steps 955, 956 and 964 determine as previously described with respect to steps 972, 974 and 975 whether or not five transmission errors occurred. In the event of five errors, an appropriate error code is sent to the Data Processor at step 964. From step 964 or step 955, the program advances to step 957 to check an output buffer full ("OBF")

flag indicating whether the Drop Processor's output buffer to the Data Processor is full or empty. If the buffer is empty, the program advances to step 958 where the unsolicited data is sent to the Data Processor as an 84 Command via the Drop Processor's output buffer. The program then advances to step 959 to update the drop and device map pointers as previously described. Alternatively, if the output buffer is full at step 957, the program advances to step 971 to determine whether or not the Data Processor has sent an 04 Command to the Drop Processor for a device attached to a drop cable. If there is no 04 Command to send at step 971, the program loops to step 957. On the other hand, if there is an 04 Command to transmit, the program advances to step 973 to transmit the 04 Command as previously described. At step 976, because the "1" flag this time is not set, the program loops back to step 957.

## D. CCC/ECU Communication Protocol

### 1. Message Format

A typical data message format used in one embodiment of the invention for communicating information between the central control computer (CCC) at head end 12 and the plurality of ECUs connected to cable network 14 will now be described with reference to Figures 10 and 11.

A basic message format for data communication in the forward direction (i.e., from the CCC to an ECU) is illustrated in Figure 10a. As shown in Figure 10a, each message is of a predetermined format, comprising: a FLAG byte, two ADDRESS bytes specifying an ECU address, a BYTE COUNT byte ("N"), a COMMAND byte ("CMD"), a plurality of DATA bytes, two CYCLIC REDUNDANCY CHECK ("CRC") bytes, and another FLAG byte. Each byte is comprised of 8 bits.

The FLAG bytes identify the beginning and end of a message. Each FLAG byte has a unique bit pattern ("01111110"). At the end of a message, if there are no more messages available for transmission by the CCC, the CCC transmits repetitive FLAG bytes to maintain synchronization on the communications link. Otherwise, the end FLAG byte serves as the start FLAG byte of the next message.

The two ADDRESS bytes typically specify the address of a particular ECU from 0001 (hex) through FFFE (hex). The use of two ADDRESS bytes in this matter to specify an ECU address allows the CCC to uniquely address a message to any particular one of 65,534 ECUs. The first address byte (ADH) specifies the high-order part of the address, and the second byte (ADL) specifies the low-order part. Two addresses have special meanings. Address FFFF (hex) is a global or broadcast address. All ECUs respond to a message containing the broadcast address. Address 0000 is a "mask" address, described in detail below.

The BYTE COUNT byte (N) specifies the number of bytes following in the message, exclusive of CRC and FLAG bytes. Following the BYTE COUNT byte is a COMMAND byte (CMD). As discussed in detail below, the COMMAND byte specifies the type of message being transmitted and the manner in which subsequent DATA bytes should be interpreted.

The CRC bytes (CRH and CRL) are two bytes which together form a conventional 16-bit CRC number. These two bytes are derived from a mathematical manipulation of all bits (exclusive of the FLAG bits) preceding the CRC bytes, and serve as a check that the message was accurately transmitted to and received by the ECU. The derivation of the CRC bytes is accomplished in a conventional manner in

accordance with standards promulgated by international standards organizations, such as the CCITT.

The use of ADDRESS 0000 (the mask address) enables a message to be directed to any particular ECU or group of ECUs. The basic format of a message having an address of 0000 is illustrated in Figure 10b. As shown in Figure 10b, a message having a mask address equal to 0000 differs from a basic message (Figure 10a) by the inclusion of four additional bytes following the ADDRESS bytes. These four bytes are two MASK bytes ("MH" and "ML") followed by two REFERENCE bytes ("RH" and "RL"). Any ECU receiving a message having a 0000 mask address will logically AND the ECU's unique address with the values of the MASK bytes. If the result of this logical operation equals the values set forth in the REFERENCE bytes, the ECU will recognize the message as addressed to it and respond accordingly. Otherwise, the ECU will ignore the message. As will be readily apparent to those skilled in the art, the use of the mask address in this manner allows a single message to be transmitted to any one or a selected group of ECUs. For example, if the MASK bytes are 0001, and if the REFERENCE bytes also are 0001, then all ECUs having odd addresses will respond to the message. On the other hand, if the REFERENCE bytes are changed to 0000, then all ECUs having even addresses will respond to the message.

A basic message format in the reverse direction (i.e., from the ECUs to the CCC) is shown in Figure 11, and is similar to the format for forward communication shown in Figure 10a. Thus, unique FLAG ("01111110") bytes are used to identify the beginning and end of a message. Following the beginning FLAG byte are two ADDRESS bytes which specify the address of the particular ECU sending the message. Next follow a BYTE COUNT byte (N), a

COMMAND byte (CMD), and DATA bytes. Two conventionally derived CRC bytes follow the last DATA byte as earlier described.

Referring now to Figures 12 through 17, there are shown illustrative examples of several typical messages sent between the CCC and an ECU in one embodiment of the invention. The messages of Figures 12 through 17 are formatted in accordance with the basic message formats of Figures 10-11.

Figure 12 illustrates a WRITE message sent from the CCC to an ECU. The WRITE message may be used to write a program or data to any one or a plurality of ECUs commencing at a specified address in the ECU's memory. The use of the WRITE message in this way enables the cable system operator to add new functions and services to the ECU, or to modify existing ones. Thus, the operation of the cable system may be readily enhanced or modified without having to replace or modify the ECU or SPU hardware.

The WRITE message may be used to implement a variety of functions in an ECU. For example, the WRITE message may be used to download a Channel Authorization Map in an ECU specifying which television channels each associated subscriber is authorized to view. In one embodiment, the Channel Authorization Map comprises a string of 128 bytes of data stored in the ECU's memory, each byte associated with a different one of 128 so-called logical channels. A logical channel is that channel which a subscriber requests by entering a channel number into the SPU. Each of the first six bits of each byte in the Channel Authorization Map is associated with a different one of six SUs. A bit is set to "1" or to "0" depending respectively on whether or not the subscriber associated with that bit and SU is authorized to view the television channel associated with that byte. To transmit a Channel Authorization Map to an ECU, a

WRITE command may be used specifying the start address of the map in the ECU's memory and the 128 bytes of logical channel data. The use of the WRITE command to transmit a new or replacement Channel Authorization Map enables the cable operator to add or delete authorized channels for particular subscribers as a function, e.g., of whether or not the subscriber has paid his or her bill, whether the subscriber has requested to subscribe to view additional or fewer channels, and so forth.

As another example, the WRITE command may be used to transmit to an ECU a so-called Channelization Map specifying a correlation between logical channels and physical channels. As earlier described, physical channels are the channels carried on the CATV feeder cable to which the converter/tuner in the SU tunes in response to subscriber requests to view a particular logical channel. For example, the Channelization Map might correlate logical channel 7 with physical channel 52, logical channel 9 with physical channel 15, and so on. In one embodiment having a single feeder cable, the Channelization Map in each ECU includes 128 bytes of data (in a two cable system, the Channelization Map would include 256 bytes of data). The data are grouped in pairs such that each pair of bytes is associated with a different one of 64 (or 128 in a two cable system) logical channels. Thus, the first byte pair is associated with logical channel 0, the second byte pair with logical channel 1, and so on. Each pair of bytes specifies the two MS numbers, earlier described, which are the tuning information required by the converter/tuner of each SU to tune to a particular physical channel. By changing the values of the MS numbers in the Channelization Map using the WRITE message, the CCC can dynamically (i.e., on any given day and at any given time) re-define the logical

channel/physical channel correlation. This allows the cable system operator to transmit a television program on any available physical cable channel while allowing the subscriber to always view that program by selecting the same logical channel. This is important in situations of large amounts of noise on a particular physical channel which degrades the television signal. In such an event, the system operator can transmit a new Channelization Map to redefine the physical channel/logical channel correlation to associate a less noisy physical channel with the logical channel, and transmit the program on the less noisy channel. The subscriber, however, will still access the channel carrying the program the subscriber desires to view by keying into the SPU the same logical channel number.

As shown in Figure 12, a WRITE message includes the usual two ADDRESS bytes (ADH and ADL) specifying the particular ECU to which the message is directed, and a BYTE COUNT byte (N) specifying the number of bytes following in the message. Next appears a COMMAND byte equal to hex FC ("11111100"). This COMMAND byte identifies the message as a WRITE message. After the COMMAND byte is a DATA COUNT byte (NN) specifying the number of bytes of data contained in the WRITE message to be written to the ECU's memory. Next, two bytes ("MDL" and "MDH") specify in low and high order parts, respectively, the specific ECU memory address at which the write operation should commence. Finally, there follow NN bytes of data to be written to the ECU's memory.

Another message sent from the CCC to an ECU is a READ message, illustrated in Figure 13a. A READ message enables the CCC to obtain one or more bytes of data from an ECU commencing at a specified address of the ECU's memory. The READ message may be used for a variety of purposes. For example, the

READ message may be used to determine which subscribers are authorized to view which channels, which subscribers should be charged a fee for viewing pay-per-view programs, and so forth. Also, the READ message may be used to examine various portions of an ECU's data or program memory to diagnose faulty or failing ECUs.

As shown in Figure 13a, a READ message includes the usual ADDRESS (ADL and ADH) and BYTE COUNT (N) bytes. After these bytes is a COMMAND byte which may be any value equal to hex F8, F9, FA or FB (11111000, 11111001, 11111010 or 11111011). Each COMMAND byte F8 through FB specifies that the message is a READ message. However, each COMMAND byte also specifies by the values of the two least significant bits on which one of the four available reverse channels the ECU should return data to the CCC. Thus, COMMAND bytes F8, F9, FA and FB specify that the ECU should return data to the CCC on reverse channel 00, 01, 02 and 03, respectively. Following the COMMAND byte is (1) a DATA COUNT byte (NN) specifying how many data bytes to return to the CCC, and (2) two memory address bytes (MADL and MADH) specifying in low and high order parts the ECU memory address at which the data READ operation should commence.

In response to a READ message, the ECU returns to the CCC on the specified reverse channel a message as shown in Figure 13b which includes the data requested by the READ message. The returned message includes the usual ADDRESS and BYTE COUNT bytes, followed by a COMMAND byte set to the value of the read command to which the return message is responsive. Next follow a DATA COUNT byte (NN) specifying the number of bytes of returned data, and the NN bytes of data requested by the READ message.

Still another message sent from the CCC to an ECU is an ECHO BACK message, illustrated in Figure 14. An ECHO BACK message causes an addressed ECU to return to the CCC on a specified reverse channel a message which is identical to that received by the ECU. The ECHO BACK message may be used to test the cable network for signal degradation and transmission errors, and may also be used to locate non-operating ECUs.

As shown in Figure 14, an ECHO BACK message includes the usual ADDRESS (ADL and ADH) and BYTE COUNT (N) bytes. Next is a COMMAND byte which may be any value equal to hex F0, F1, F2 or F3 (11110000, 11110001, 111100010 or 11110011). As previously described with respect to the READ message, the last two bits of the COMMAND byte specify on which one of the four reverse channels the ECU should echo back the CCC's message. After the COMMAND byte is a DATA COUNT byte (NN) followed by NN bytes of data.

In response to the receipt of an ECHO BACK message, the addressed ECU returns a message to the CCC as shown in Figure 14b on the specified reverse channel. Irrespective of the manner in which the message was addressed to the ECU (i.e., using a global, mask or specific address), the ECU's message includes the responding ECU's unique address in the ADH and ADL bytes, followed by a BYTE COUNT byte (N). Thereafter, the returned message is (assuming no transmission errors) identical to that originally sent from the CCC.

Yet another message sent from the CCC to an ECU is a FORCE TUNE message, illustrated in Figure 15. This message is used to cause an addressed ECU to force tune any drop associated with that ECU to any channel. Force tuning may be used, for example, to cause all subscriber television sets connected to

the CATV system to tune to a channel on which instructions and news may be communicated to subscribers in the event of a civil emergency. Also, this message may be used to automatically tune a subscriber's television set at the appropriate date and time to a channel carrying a pay-per-view program (such as a boxing match) which the subscriber requested to view.

As shown in Figure 15, a typical FORCE TUNE message includes the usual ADDRESS (ADL and ADH) and BYTE COUNT (N) bytes. Next follow a COMMAND (CMD) byte equal to hex F4 (11110100) to identify the message as a FORCE TUNE message, and a DATA COUNT byte (NN) equal to 2. Thereafter, a SUBSCRIBER UNIT (SU) byte specifies the particular subscriber unit to be force tuned. In one embodiment, the SU byte specifies any one converter using the byte's three least significant bits. This requires a FORCE TUNE message to be transmitted for each converter to be force tuned. Alternatively, each bit of the SU byte may be associated with a different one of six converters such that a single message to an ECU can force tune more than one converter associated with the ECU. Finally, a logical channel (LC) byte specifies the logical channel number to which the specified converter should be force tuned. If the SU byte is associated with more than one converter, there would be a plurality of LC bytes, one for each converter being force tuned.

Another series of messages sent from the CCC to an ECU are SEND FUNCTION messages. These messages are used to cause an ECU to return to the CCC so-called send function data accumulated by the ECU from the ECU's associated subscribers. Send function data is data keyed into SPUs by subscribers in response to requests for such data from the CCC at head end 12. For example, send function data may represent voting or shop-at-home data keyed in by

subscribers in connection with interactive viewer preference or shop-at-home services offered by the cable operator. In one embodiment, each ECU maintains in its memory a plurality of so-called send function bytes arranged in pairs. Each pair of send function bytes is associated with a different one of up to six subscribers. The first byte specifies the subscriber with which the byte pair is associated. The second byte contains the send function data. In addition to the byte pairs, the ECU maintains in its memory a send function count byte specifying the number of send function bytes in the ECU's memory. If the ECU's memory contains no send function data (e.g., no associated subscriber has entered send function data), the value of the send function count byte is zero.

In one embodiment of the invention there are six SEND FUNCTION messages. These messages are illustrated in Figures 16a through 16c. The first message is the SEND FUNCTION ENABLE message, shown in Figure 16a. In addition to the usual ADDRESS and BYTE COUNT bytes, this message has a command byte equal to hex 80, a DATA COUNT byte (NN), and a single DATA byte (SU). Each bit 0-5 of the (SU) byte is associated with a different one of six SUs. The SEND FUNCTION ENABLE message is used by the CCC to enable or disable the send function in an ECU with respect to particular SUs associated with that ECU. The send function with respect to a particular SU is enabled or disabled depending respectively on whether the setting of the bit of the SU byte associated with that SU is set to "1" or to "0".

The second message is the SEND FUNCTION CLEAR message, shown in Figure 16b. This message includes a COMMAND byte equal to hex 81, and a DATA

COUNT byte (NN) equal to 0. In response to the receipt of this message, the addressed ECU clears the send function data in its memory.

The third message is the SEND FUNCTION DATA message, shown in Figure 16c. This message includes a COMMAND byte which may have any value equal to hex 84, 85, 86 or 87 (10000100, 10000101, 10000110 or 10000111). Upon receipt of this message, an addressed ECU will return to the CCC the send function data in its memory only if the ECU has any send function data to send to the CCC (as determined by the value of the ECU's send function count byte). As previously described with respect to the READ message, the data will be returned by the ECU on the reverse channel (00, 01, 02 or 03) specified by the values of the two least significant bits of the SEND FUNCTION DATA message's COMMAND byte. In response to a SEND FUNCTION DATA message, the ECU sends a message to the CCC which includes one or more pairs of data bytes, each pair associated with a different SU. The first byte of the pair specifies an SU (from 0-5), and the second byte is the send data for that SU.

Yet another message available to be sent from the CCC to an ECU is a PAY-PER-VIEW message. This message is used to (a) force tune an SU to a pay-per-view event requested by the subscriber, and (b) turn on the subscriber's television apparatus via the subscriber's SPU power relay.

The PAY-PER-VIEW message used in one embodiment of the invention is shown in Figure 17 as including a COMMAND byte equal to hex 88. Next follows a DATA COUNT byte (NN). A PROGRAM NUMBER (PN) byte specifies the so-called program number, described in more detail below, to which the message relates. Finally, two MS bytes specify the MS numbers, earlier described, required to tune the converter/tuner circuitry contained in the SUs to the particular physical channel carrying the pay-per-view event specified by the PROGRAM NUMBER byte.

The PAY-PER-VIEW message in one embodiment of the invention operates as follows. Each ECU includes an Event View byte in its memory. Each of bits 0-5 of this byte is associated with a different one of up to six SUs. When a subscriber tunes to a pay-per-view event, a bit of the Event View byte associated with the SU tuned to the pay-per-view event is set to "1". That bit is reset to "0" when the SU is tuned to a channel not associated with a pay-per-view event, or when the subscriber via the SPU turns off his or her television receiver. The Event View byte is used, as later described, to control the incrementing of a timer.

In addition to the foregoing, each ECU has a Program Event Map in its memory comprised of 128 pairs of bytes. Each byte pair of this map is associated with a different one of 128 program numbers. Each program number is associated with a different pay-per-view program event. Thus, the first byte pair of the Program Event Map is associated with program number or event 0, the second pair with program number or event 1, and so on. The byte pairs contain the MS numbers conveyed by the PAY-PER-VIEW message.

In addition to the Program Event Map, each ECU includes in its memory a Program Authorization Map. This map includes 768 bytes arranged in six groups of 128 bytes per group. Each group of 128 bytes is associated with a different SU, and each byte of each group is associated with a different one of 128 pay-per-view events. If a subscriber associated with a particular SU is authorized to view pay-per-view programs, and requests via

the subscriber's SPU to view a particular pay-per-view program, the three least significant bits of the byte associated with that program and SU are set to the address of the SPU from which the pay-per-view request was received. The five most significant bits of the byte, each initially zero, are used as a preview timer as later described.

To order a desired pay-per-view event, a subscriber enters the program number associated with the pay-per-view event into the keyboard of the subscriber's SPU. If the subscriber is authorized to view pay-per-view events, the address of the SPU from which the request was received is placed in the appropriate byte of the Program Authorization Map as described above. When the event begins, the CCC transmits a PAY-PER-VIEW message specifying the program number and the MS tuning data required by the converter/tuners of the SUs to tune to the program. If a subscriber has requested to view the pay-per-view program specified in the PAY-PER-VIEW message, the ECU force tunes the SU associated with that subscriber to the channel carrying the pay-per-view event. In addition, the ECU sends a command to the SPU to cause the SPU to (1) flash the SPU's event-order LED to signify that the subscriber is viewing a pay-for-view event during the preview period, and (2) turn on the SPU's television relay to supply power to the subscriber's television set. Thus, at the appropriate date and time, the ECU will turn on and force tune the subscriber's television set to the requested pay-per-view event. Also, the ECU will initiate operation of a preview period timer. During the preview period, a subscriber may view the pay-per-view event free of charge. If the subscriber views more than a predetermined number of minutes of the pay-per-view program, the preview timer will time out and the ECU will send a command to the SPU

to cause the event-order LED to glow continuously to signify that the subscriber will be charged a fee for viewing the event.

The preview timer operates as follows. Upon the timing out of a pay-per-view event timer, the ECU checks the state of the bit flags in the Event View byte. If the bit associated with an SU is set to "1", then a bit of the preview timer associated with the SU and program to which the SU is tuned (described above) is set to "1". Each of the five bits of the preview timers in the Program Authorization Map represents a fraction (i.e., one-fifth) of the preview period. Each time that the pay-per-view event timer times out, and if the associated bit of the Event View byte is set to "1", another one of the five bits of the appropriate preview timer is set by the ECU. When all five bits of the preview timer have been set, the preview period is over and the subscriber will be charged for the pay-per-view event. The CCC periodically collects the preview timer information contained in the Program Authorization Map using READ messages to determine which subscribers should be charged for viewing which pay-per-view events.

Although several messages have been described in detail with respect to an embodiment of the invention, it will be apparent to those skilled in the art that the message format utilized in the present invention can accommodate numerous other messages sent between the CCC and the ECUs. It will also be apparent to those skilled in the art that the basic format of the CCC/ECU messages may be changed.

E. Data Processor Operation

The operation of the Data Processor will now be described for an embodiment of the invention using the message formats and messages illustrated in Figures 10-17. A source and object code computer program listing which will be readily understood by those skilled in the art for controlling the operation of the Data Processor is annexed at Appendix C.

Figure 18a illustrates the overall programmed operation of the Data Processor. As shown in Figure 18a, data received from the CCC is placed by USART 400 of digital unit 55 (Figure 5) in FIFO receive buffer 1001. This buffer is organized as a 256 x 4 byte buffer such that it can hold up to four 256-byte CCC messages at any one time. A buffer counter associated with the Data Processor points to the next empty buffer in the FIFO. Two other buffers shown in Figure 18a are FIFO output buffer 1002 and FIFO input buffer 1003. Data received by the Data Processor from the Drop Processor is placed in output buffer 1002. Similarly, data passed to the Drop Processor from the Data Processor is placed in FIFO input buffer 1003. Each of these buffers contains 256 bytes and may buffer up to 25 10-byte messages. A buffer counter associated with each buffer points to the next empty buffer. The Data Processor receives data from FIFO buffers 1001 and 1002, operates on the data (Figure 18a, item 1004), and sends data to FIFO buffer 1003 or to the CCC.

Figure 18b illustrates a flow chart of a routine by which the Data Processor determines whether or not a message has been received from the CCC and, if so, whether or not the message is for that ECU. The routine of Figure 18b is called whenever the Data Processor is interrupted by USART 400 (Figure 5) to signify that a message has been received from the CCC.

The routine of Figure 18b commences at step 1021, where the routine inhibits further input from USART 400 and determines from the CRC bytes of the received message whether or not a transmission error occurred. If an error occurred, the routine branches to step 1028 where input from USART 400 is again enabled. After step 1028, the interrupt service routine advances to step 1029 and returns to the calling program.

Alternatively at step 1021, if no transmission error occurred, the routine advances to step 1022 where the Data Processor checks the address bytes of the received message. If the address bytes match the ECU's address, the routine advances to step 1027 where the buffer counter associated with FIFO buffer 1001 (Figure 18a) is incremented by one. The routine then advances to step 1028 where USART 400 is enabled as earlier described. Because the buffer counter value was incremented at step 1027, a subsequent CCC message received by USART 400 will be written into the next buffer and will not overwrite the contents of the buffer containing the previously received CCC message.

Returning to step 1022, if the address bytes of the received message do not match the ECU's address, the routine branches to step 1024, where the address bytes are checked for the presence of the global or broadcast address (hex FFFF). If this address is present, the message is for the ECU and the routine advances to step 1027 as previously described. Otherwise, the routine advances to step 1025 where the Data Processor checks for the mask address (hex 0000) in the CCC's message. If this address is not present, the message is not for the ECU and the routine branches to step 1028. Otherwise, the routine advances to step 1026 where the mask operation is performed as earlier described.

The routine then branches to step 1027 or to step 1028 depending respectively on whether or not the result of the mask operation performed at step 1026 indicates that the message is for the ECU.

The operating program of the Data Processor will now be described with reference to Figures 18c through 18h. This program is comprised of two major parts: (1) a main routine, and (2) a collection of application programs to implement various functions within the ECU. The main routine is a task-driven program which branches to one or another application program depending upon the task to be performed. The application program performs its task (e.g., inputting keypress data from an SPU such as subscriber-entered channel requests, pay-per-view requests, send function data, etc.) and returns to the main routine. Because of the need to service a plurality of SPUs on a plurality of drop cables, it may occur that an application program must return to the main routine before the application program has completed its particular task. For example, if a subscriber enters a two-digit channel request into an SPU keyboard, the application program associated with that function may input the first digit and return to the main routine prior to the subscriber entering the second digit. In this event, the application program prior to returning to the main routine sets a time out value in a time table and a jump address in a jump address table. As more fully described below, the time out and jump address values enable the main routine to jump back to the application program at the appropriate time to continue at the point the application program left off.

Figure 18c illustrates a flow chart generally illustrating the operation of the main routine. As shown in Figure 18c, the main routine begins at

step 1005 upon ECU power up. At step 1005, the Data Processor initializes I/O and memory maps, an interrupt timer, direct memory access, and various registers and counters. The program then advances to step 1006, where the Data Processor initializes USART 400. At step 1007, the Data Processor 420 checks whether or not its back up memory requires initializing. If so, the program advances to step 1008 to initialize the back up memory. Otherwise, or after completing the back up memory initilization in step 1008, the program advances to step 1009 where other memory locations are initialized. Generally, steps 1008 and 1009 initialize such items as the Channel Authorization Map, Channelization Map, parental control codes, Program Event Map, Program Authorization Map, and so forth. In steps 1010, 1011 and 1012, the Data Processor initializes the drop and device polling maps and pointers.

After initialization, the Drop Processor enters a main loop. The main loop is illustrated in the flow chart of Figure 18d. As shown in Figure 18d, the Data Processor in the main loop sequentially determines whether or not any of four events have occurred, viz., whether or not (1) the Data Processor has received a message from the CCC (step 1013), (2) a 100/64 millisecond pay-per-view eevent timer has timed out (step 1014), (3) the Drop Processor output buffer contains data for the Data Processor (step 1015), and (4) a pay-for-view event timer has timed out (step 1016). If any of the foregoing events have occurred, the Data Processor at the appropriate step 1013, 1014, 1015 or 1016 branches to an associated operation routine shown in Figure 18d as Operate 1, Operate 2, Operate 3 and Operate 4, respectively. Otherwise, the program advances to the next numbered step in Figure 18d. After step

1016, or after an operation routine, the program flow loops to step 1013.

The operation routines of Figure 18d will now be described with reference to Figures 18e-18h.

Operate 1 Routine

If the main routine detects at step 1013 (Figure 18d) that a message addressed to the ECU has been received from the CCC, the program branches to the Operate 1 routine, shown in Figure 18e, to respond to the CCC message.

The Operate 1 routine commences at step 1030, where the Data Processor loads a CCC message from buffer 1001 (Figure 18a) into working memory. The program then advances to step 1031, where the COMMAND byte of the CCC message is checked to determine what action the Data Processor should take.

At step 1031, if the COMMAND byte of the CCC message is hex F0-F3 (ECHO BACK), the program advances to step 1032 to transmit (echo) the received message back to the CCC. After transmitting the message, the program advances to step 1041 and returns to the main loop as earlier described.

If the COMMAND byte at step 1031 is hex FC (WRITE), the program advances to step 1033 to store the data contained in the WRITE message commencing at the location of the ECU's memory. From step 1033, the program advances to step 1034 and returns to the main loop as earlier described.

If the COMMAND byte at step 1031 is hex F8-FB (READ), the program advances to step 1035 to transmit to the CCC data from the ECU's memory specified in the WRITE message. From step 1035, the program advances to step 1043 and returns to the main loop as earlier described.

If the COMMAND byte at step 1031 is hex F4 (FORCE TUNE), the program advances to step 1037 where

the converter of the specified SU is tuned to the specified channel, the SPU seven-segment display is set to display the logical channel to which the SU is being force tuned, and the power relay of the SPU associated with the SU is activated to turn on the subscriber's television. The program then advances to step 1038 and returns to the main loop as earlier described.

If the COMMAND byte at step 1031 is hex 80 (SEND FUNCTION ENABLE) or hex 81 (SEND FUNCTION CLEAR), the program advances respectively to step 1039 to enable/disable the send function in the SPU's or to step 1042 to clear the send function data buffer in the ECU. From steps 1039 or 1042, the program advances respectively to step 1040 or step 1043 and returns to to the main loop as earlier described.

If the COMMAND byte at step 1031 is hex 84-87 (SEND FUNCTION DATA), the program advances to step 1044 where the Data Processor checks the value of the send function data count byte to determine whether or not the ECU has any send function data to return to the CCC. If the ECU has no send function data, the program branches from step 1044 to step 1047 and returns to the main loop as earlier described. Otherwise, the program advances to step 1045 where the ECU's send function data is transmitted to the CCC. The program then advances to step 1046 and returns to the main loop as earlier described.

Finally, if the COMMAND byte at step 1031 is hex 88 (PAY-PER-VIEW), the program branches to step 1048 where the MS tuning data contained in the PAY-PER-VIEW message is stored in the ECU's Program Event Map. The program then advances to step 1049 where the Data Processor checks the Program Authorization Map to determine for a first subscriber whether or not the subscriber has ordered to view the pay-per-view program. If a subscriber has requested to view the pay-per-view event, the program advances to step 1050 where the SU associated with that subscriber is force tuned to the pay-per-view program, the associated five-minute preview timer is started, the event-order LED on the subscriber's SPU is set to flashing, and the SPU's power relay is activated to turn on the subscriber's television. The program then advances to step 1051 which causes the program to loop back to step 1049 for each of up to six subscribers. After looping for all subscribers, the program from step 1051 advances to step 1052 and returns to the main loop as earlier described.

Operate 2 Routine

If the main routine detects at step 1014 (Figure 18d) that the 100/64-second timer has timed out, the program branches to the Operate 2 routine, shown in Figure 18f. The Operate 2 routine functions to transfer control of the Data Processor to any of a plurality of application programs. As earlier described, application programs implement a variety of functions, such as responding to SPU key presses and implementing the requested operation (e.g., channel selection pay-per-view, parental control), activating the SPU's power relay, activating (flashing or non-flashing) and deactivating the SPU order event LED, clearing the SPU seven-segment display, sending data (e.g., program or channel information) to the SPU display, and so forth.

The Operate 2 program operates as follows. The Data Processor maintains in memory a time table having a pluraliity of two-byte entries for each of up to 8 devices on each of up to 6 different drops associated with the ECU. In one embodiment, the time table has 64 entries (0-63), although in the

described embodiment there may be no more than 6 drops with no more than 8 devices (up to 4 SPUs and up to 4 other devices) on each drop associated with each ECU. The entries in the time table are sequentially arranged by drop and device, such that entries 0-7 are associated with devices having addresses 0-7 on drop 0, entries 8-15 are associated with devices having addresses 0-7 on drop 1, and so on. As previously described, the entries in the time table are set by the various application programs as a time out value prior to a return to the main routine from the application program.

Upon entry into the Operate 2 routine, a time table pointer (I) is set to a value from 0-63 (step 1060) as a function of the value of a time table counter (J). The routine then advances to step 1061, where the I pointer is used to read the $I^{th}$ entry (associated with a particular device on a particular drop as described above) from the time table. If the value of that entry is hex FFFF (signifying that the timer is off), the routine branches to step 1066 where the time table counter J is incremented by one in preparation for the next pass through the Operate 2 routine. If the entry is other than hex FFFF, the routine advances to step 1062 where the time table entry is decremented by one. If the time table value after decrementing is not equal to zero (step 1063), the routine branches to step 1066 where the J counter is incremented as previously described.

On the other hand, if the timer entry is equal to zero, the timer has timed out and the routine advances to step 1064 where a zero is placed in a memory location (Key Code), and the value of the I pointer is used to interrogate a jump table. The jump table is a table maintained in the ECU's memory which is similar in organization to the time

table. However, the jump table entries specify the memory location in an application program to which the program should jump. These values may point to the start of an application program, or to a point within an application program if the application program had previously returned to the main routine prior to completing the application program's task. Based upon the entry contained in the jump table, the Operate 2 routine then advances to step 1065, where the routine jumps to the point in an application program ("APL") specified by the jump table. When the application program returns to the Operate 2 routine, the Operate 2 routine advances to step 1066 where the J counter is incremented as earlier described. The routine then advances to step 1067 to return to the main loop.

Operate 3 Routine

If the main routine determines at step 1015 (Figure 18d) that the Drop Processor has data for the Data Processor, the program branches to the Operate 3 routine, shown in Figure 18g. The Operate 3 routine functions to appropriately respond to data received from the Drop Processor. Such data may include 84 Commands (Unsolicited Data Responses), and 04 Responses received from associated SPUs.

As shown in Figure 18g, the Operate 3 routine at step 1070 first determines what type of message is being sent from the Drop processor. If the message is an 01, 03, 05, 07 or 08 command response (earlier described), no action is required and the Operate 3 routine advances to step 1083 to return to the main routine as earlier described. Although in the flow chart of Figure 18g no action is taken in response to an 01, 03, 05, 07 or 08 response, it will be apparent to those skilled in the art that various

modifications may readily be made to the program flow to cause the Data Processor to respond to any or all of these command responses. For example, the program may be modified to cause the Data Processor upon detecting in an 01 response that power is not being received from a particular drop to notify the system operator of this fact.

If an 84 Command is detected at step 1070, the Operate 3 program branches to step 1072 to determine if an error has occurred. If "yes", the program branches to step 1073 where a device error counter is incremented in an error operation subroutine. If the counter reaches a predetermined value (e.g., 2), the error subroutine causes a re-initialization of pointers and jump table entries associated with the SPU or device sending the 84 Command. The program then advances to step 1083 to return to the main loop as earlier described. On the other hand, if no error is detected at step 1072, the program advances to (1) step 1074, where the jump table pointer is set, (2) step 1075, where the received data is placed in a memory location (Key Code), and (3) step 1076, where the program jumps via the jump table to the appropriate application program (APL). When the application program returns to the Operate 3 routine, the Operate 3 routine advances to step 1083 and returns to the main loop.

Finally, if an 04 Response is detected at step 1070, the Operate 3 routine advances to step 1071 to check for a transmission error. If an error has occurred, the routine branches to step 1073. Otherwise, the routine advances to step 1077 where the Data Processor determines if the 04 Response is a status response. If the 04 Response is not a status response, the program branches from step 1077 to step 1083 to return to the main loop as earlier

described. Otherwise, the program advances to step 1078. At step 1078, if the status response indicates that a key has been recently depressed on the device keyboard, the routine branches to steps 1080, 1081 and 1082 to respond to the key press as described above with respect to steps 1074-1076. If the status response indicates that no key has been recently depressed, the program advances from step 1078 to step 1079 where the status byte is checked to determine the state of bit 7. As earlier described, bit 7 indicates as a function of the setting of SPU switch 780 (Figure 7) whether the responding device is a master or slave SPU and, thus, to which converter (primary or secondary) the SPU is assigned. After step 1079, the program advances to step 1083 to return to the main loop as earlier described.

Operate 4 Routine

Lastly, if the main routine at step 1016 (Figure 18d) determines that the pay-per-view timer has timed out, the program branches to the Operate 4 routine shown in Figure 18h. This routine starts by entering a loop at step 1091 to determine for each subscriber whether or not the subscriber is viewing a pay-per-view program. If the subscriber is not viewing a pay-per-view program at step 1091, the routine branches to step 1096 where the routine loops back to step 1091 to make the foregoing determination for the next subscriber. If at step 1091 a pay-per-view event is being viewed by a subscriber, the routine advances to step 1092 to check the associated 5-bit preview timer in the appropriate byte of the Program Authorization Map. If the value of the byte is greater than or equal to F8, indicating that the byte's five most significant bits (i.e., the timer bits) are all set to "1" and the preview period has

expired, the program branches to step 1096. However, if the value of the byte is less than hex F8, indicating that at least one of bits 3-7 of the byte is equal to zero and the preview period has not expired, then the program advances to step 1093 where the 5-minute timer is incremented by setting a timer bit to "1". The routine then advances to step 1094, where the value of the byte is again checked. If the five timer bits are now all set to "1", then the preview period has expired and the program branches to step 1095 to cause the order-event LED on the subscriber's SPU to glow steadily to indicate that the subscriber will be charged for the pay-per-view event. Otherwise, the program branches to step 1096. Step 1096 causes the routine to loop to setp 1091 to check for each subscriber whether or not a pay-for-view event is being viewed. At step 1096, after the routine has determined for each subscriber whether or not the subscriber is reviewing a pay-per-view event, the routine advances to step 1097 and returns to the main loop as earlier described.

F. Polling and Handshaking

In the above-described system, an ECU transmits a message to the CCC only if the ECU receives a CCC message which requires a return message (e.g., READ, ECHO BACK or SEND FUNCTION DATA messages). Otherwise, ECUs do not transmit messages to the CCC.

Thus, in the above-described system, it is possible for an ECU to have important information to send to the CCC (e.g., information received from a subscriber requesting additional services, or information from a medical monitoring device attached to the drop cable of an ECU), but be unable to notify the CCC of this fact. Also, because ECUs in the above-described system do not ordinarily respond to

the CCC upon receipt of a CCC message, the CCC might not become alerted to an inoperative ECU or transmission link until a message requiring a response (e.g., READ) was addressed to the ECU and the responsive message was not received by the CCC.

To enable ECUs to send important information to the CCC in a timely fashion, and to provide for a check that ECUs are operative, a polling and handshaking communication protocol may be used. In view of the potential for a large number of ECUs (up to 65,536 on each of up to 4 banks) on the cable network of the present invention, an important consideration in designing such a protocol is to minimize the time required to poll and handshake with individual ECUs.

The present invention therefore provides for a handshaking scheme which informs the CCC of inoperative ECUs but which does not require the transmission of relatively lengthy formatted messages. In addition, the present invention provides for a polling scheme which allows an ECU to notify the CCC that the ECU has information for the CCC, but does not require the transmission of lengthy information messages to the CCC in response to the receipt by an ECU of a poll message. The polling scheme enables the CCC to gather information from the ECUs via two independently operating mechanisms. A first or "general" polling scheme allows the CCC to poll each ECU to determine if the ECU has information to send to the CCC. The general polling scheme allows for the detection in less than 20 seconds of all operative ECUs which require service. A second or "priority" polling scheme allows for the detection in less than 20 milliseconds of any one ECU having so-called priority information for the CCC. For both polling schemes, the response "level" is established by the CCC in advance of the poll to identify

and obtain responses from only those ECUs having information falling within a predetermined level or threshold of importance. The level of information may be a function, e.g., of the value or timeliness of the information.

1. <u>Message Format</u>

The polling and handshaking protocols are described below with respect to an alternative basic message format from that earlier described and shown in Figures 10-11. This alternative basic message format is illustrated in Figures 19-20.

Figure 19 shows an alternative basic message format for data communication in the forward direction (i.e., from the CCC to an ECU). Each message is of a predetermined format, comprising: a FLAG byte, a SEND CONTROL ("SEND CNTL") byte, a plurality of DATA bytes, two CYCLIC REDUNDANCY CHECK ("CRC") bytes, and another FLAG byte. Each byte is comprised of 8 bits. The FLAG and CRC bytes are identical to and serve the same function as the FLAG and CRC bytes previously described.

The SEND CNTL byte in the message of Figure 19 is used to define any of 256 unique commands. As described in greater detail below, SEND CNTL commands may cause an ECU to return information to the CCC, or may cause the ECU to perform a specified operation.

The DATA bytes may comprise from 0 to 255 bytes per message. The SEND CNTL byte specifies how the DATA bytes are to be interpreted by the ECU. If a message is transmitted to a particular ECU, the first two DATA bytes typically specify the ECU address from 0-65536. The first address byte ("ADL") specifies the low-order part of the address, and the second byte ("ADH") specifies the high-order part. Also,

typically, the third DATA byte of a message addressed to a particular ECU is a CONTROL ("CTL") byte. The CTL byte may specify the ECU drop, if any, for which the message is designated, the particular reverse channel that the ECU should use to respond to the CCC, etc.

An alternative basic message format in the reverse direction (i.e., from the ECUs to the CCC) is shown in Figure 20, and is similar to the format for forward communication. Thus, FLAG bytes are used to identify the beginning and end of a message. Following the beginning FLAG byte is a RECEIVE CONTROL ("REC CNTL") byte. The REC CNTL byte, which need not be identical to the SEND CNTL byte, specifies how subsequent DATA bytes, if any, contained in the message are to be interpreted by the CCC. Two CRC bytes, earlier described, follow the last DATA byte.

In addition to the foregoing basic messages, special ECU poll response bytes are utilized. These poll response bytes are comprised of one or two byte-times of carrier from an ECU. As described below, these poll response bytes are used as a handshake in response to polling and informational messages sent from the CCC.

2. General Level Polling Protocol

The first polling method is the so-called General Level Request ("GLR") poll. This mechanism is used to sequentially address a poll message to each ECU in the system to determine whether or not the ECU requires service (i.e., whether or not the ECU has information for the CCC). Prior to the poll, the CCC establishes the "level" at which the ECUs will respond to the poll. Once the CCC has established the poll level, an ECU responds to a GLR poll only if the ECU (a) requires service, and

(b) has information to transmit to the head end 12 which is at a level equal to or less (i.e., more important) than the level previously established by the CCC. The addressed ECU upon receipt of a GLR poll responds by sending to the CCC one or two General Poll Response ("GPR") bytes. Each GPR byte consists of one byte-time of carrier from the ECU, or "11111111. If the CCC fails to detect a GPR byte from the polled ECU within a predetermined time interval (e.g., 350 microseconds), the CCC presumes the ECU to be inoperative. After a predetermined number of (e.g., five) unsuccessful attempts to contact the ECU, the CCC prints an appropriate error message to the head end operator.

If the addressed ECU transmits to the CCC a single GPR byte in response to a GLR poll, the CCC interprets this to mean that the ECU is operative and does not require servicing. The CCC then polls the ECU having the next sequential address. However, if the ECU returns two GPR bytes, the CCC interprets the response as a service request from an operative ECU. Using the GLR poll, the CCC periodically cycles through all active ECUs and constructs a Service Request table in memory. The CCC subsequently uses this table to selectively retrieve, using a Priority Information Request message later described, information from only those ECUs requiring service. At a forward data transmission rate of 200 Kbps, a complete general poll request cycle of 65,536 ECUs typically takes less than 20 seconds.

The GLR poll is implemented by the CCC as follows. First, the CCC transmits a General Level Request Threshold ("GLRT") message. A typical GLRT message is shown in Figure 21a in accordance with the basic message format of Figure 19. The GLRT message has a SEND CNTL byte equal to 08 and is used

by the CCC to establish the response threshold level for the GLR poll, as earlier described. The response threshold is established by a level ("LVL") byte contained within the GLRT message. The first two bits of the CTL byte of the GLRT message specify how the ECU should interpret the LVL byte. If the first two bits of the CTL byte are "01", this is interpreted by the ECU to mean that the ECU should respond positively (i.e., with two GPR bytes) to subsequent poll messages only if the level of the ECU's information is equal to the level set forth in the LVL byte. If the first two CTL byte bits are "10", this means the the ECU should respond positively to poll messages if the level of information to be sent to the CCC is equal to or less than the LVL value.

After sending the GLRT message to establish the poll level, the CCC transmits one or more General Level Request Poll ("GLRP") messages. A typical GLRP message is illustrated in Figure 21b in accordance with the basic message format of Figure 19. As shown in Figure 21b, the SEND CNTL byte of a GLRP message may be any value equal to 0, 1, 2, or 3. The SEND CNTL byte of the message specifies to the addressed ECU that the message is a GLRP message, and further specifies on which reverse channel (0, 1, 2, or 3) the ECU should send GPR response bytes. If an ECU responds to the GLRP message with two GPR bytes on the specified reverse channel, this is interpreted by the CCC as a service request from an operative ECU as earlier described. If one GPR byte is returned, this is interpreted by the CCC as a response from an operative ECU not requiring service. If no GPR bytes are received, the CCC presumes the ECU to be inoperative.

3. Priority Polling Protocol

The second or priority polling method is the so-called Priority Information Window ("PIW") poll. This second method establishes a priority "window" on the cable network such that any ECU having information to send to the head end which falls within the pre-established priority window will alert the head end of this fact on a predetermined priority service request channel in response to the receipt of any general polling request addressed to any ECU.

Priority polling is enabled by a Priority Information Request Window Control ("PIRWC") message sent from the CCC. The PIRWC message, illustrated in Figure 22a in accordance with the format of Figure 19, is used by the CCC to set the ECU priority response threshold level. As shown in Figure 22a, a PIRWC message has a SEND CNTL byte equal to 9. A LVL byte of the PIRWC message specifies the priority response threshold level. The ECU interprets the LVL byte in a manner determined by the value of the bits in a control ("CTL") byte. Bits 0 and 1 of the CTL byte specify whether the ECU should respond if the level of its information is equal to the value of the LVL byte, or whether the ECU should respond if its level of information is equal to or less than the LVL value. In addition, bit 2 of the CTL byte specifies whether to turn the PIW function in the ECU on or off. Finally, bits 3 and 4 of the CTL byte specify on which of the four reverse channels the ECU should return a priority response. The values and functions of the bits of the CTL byte in one embodiment of the PIRWC message are set forth below:

TABLE E

PIRWC CTL BYTE

| B1 | B0 | Function |
|---|---|---|
| 0 | 1 | The ECU should respond to a priority poll only if the level of its information equals the value of LVL. |
| 1 | 0 | The ECU should respond to a priority poll only if the level of its information is equal to or less than the value of LVL. |

| B2 | Function |
|---|---|
| 0 | Set PIW in ECU off. |
| 1 | Set PIW in ECU on. |

| B4 | B3 | Function |
|---|---|---|
| 0 | 0 | Return priority response on reverse channel 0. |
| 0 | 1 | Return priority response on reverse channel 1. |

After a PIRWC message is transmitted to and received by the ECUs, any ECU with priority information corresponding to the threshold level established by the PIRWC message will transmit to the CCC on the specified priority reverse channel a general poll response (GPR) byte after reception of any general level poll message. The reception by the CCC on the priority reverse channel of a GPR byte (there may be more than one response from a plurality of ECUs) alerts the CCC that an ECU (the identity of which is as yet unknown to the CCC) has priority information to send. Upon receipt of such a priority response, the CCC transmits a series of

messages, described below, to disable the priority "window" and to locate within 20 milliseconds an ECU sending the priority poll response.

Assuming for the moment that the CCC has identified an ECU returning a priority response (or requesting service in response to the earlier described GLR poll), the CCC obtains the information from the identified ECU by addressing a Priority Information Request ("PIR") message to the ECU. There are four PIR messages: PIRO, PIRI PIR2, and PIR3, having SEND CNTL bytes equal to 4, 5, 6, and 7 respectively (Figure 22b). The PIR0, PIR1, PIR2 and PIR3 messages cause the ECU to send its priority information to the CCC on reverse channels 0, 1, 2, or 3, respectively.

In response to a PIR message, the addressed ECU transmits its priority information to the CCC using a Priority Information Request Response ("PIRR") message. The PIRR message allows an ECU to send to the CCC any of 256 different messages or values of numeric data for each drop associated with the ECU. A typical PIRR message is illustrated in Figure 22c in accordance with the format of Figure 20.

As shown in Figure 22c, a PIRR message includes a REC CNTL byte equal to 0. A LEVEL ("LVL") byte specifies the threshold level assigned to the priority information which the ECU is transmitting to the CCC (the LVL byte will either match the level previously established, or be numerically less than that level, depending upon the information contained in the previously sent PIRWC message). Following the LVL byte is a CONTROL ("CTL") byte. The CTL byte specifies by the setting of bits 0-5 the drop or drops to which the priority information contained in the message relates. Each bit position 0-5 in the CTL byte is associated with a different ECU drop. For each drop as to which the ECU is sending priority

information, the ECU sets to "1" the corresponding bit in the CTL byte. Following the CTL byte are up to 6 bytes of data (Dn), each byte representing a predetermined or "canned" priority message or numeric value with respect to a different one of the 6 drops associated with the ECU and specified in the CTL byte. The message concludes with the usual CRC and FLAG bytes.

Various divisions and definitions may be used for establishing the different levels of ECU priority information. For example, levels 0-7 may be associated with medical information obtained from medical monitoring devices attached to an ECU drop cable. Similarly, levels 16-23 may be associated with security information obtained from security devices attached to an ECU drop. Lower levels, such as levels 32-39, may be used by an ECU to inform the CCC of syntax or other errors contained in CCC messages received by the ECU. Similarly, information such as ECU status information, subscriber requests for additional services, subscriber responses to interactive two-way services, and other information may be associated with other priority levels.

The manner in which the CCC identifies an unknown ECU responding with a priority service request will now be described.

The CCC identifies an unknown ECU having priority information for the CCC using a binary sort method. The binary sort method involves dividing the population of ECUs having sequential addresses in the range of 0 to n into first and second groups of ECUs having respectively a first group address range from 0 to n/2, and a second group address range from n/2 + 1 to n. The CCC then transmits a message to the first group to determine whether or not any ECUs in the first group have priority information. If the first group includes an ECU (still unknown)

having priority information, the CCC subdivides the first group into third and fourth groups in the manner earlier described, and sends a message directed now to the third group to determine whether or not any ECUs in the third group have priority information to send. If the third group includes an ECU having priority information, the CCC subdivides the third group into fifth and sixth groups and repeats the foregoing process. If the CCC at any time determines that the group (first, third, fifth, etc.) with which it is working does not have priority information, the CCC knows that the other respective group (second, fourth, sixth, etc.) must contain the ECU having the priority information. The CCC then transmits messages to and repetitively subdivides that group until, eventually, the CCC subdivides a group to a single ECU having priority information. As will be apparent to those skilled in the art, the foregoing binary sort method in the case of 65,536 ($2^{16}$) ECUs requires no more than 16 iterations to locate an ECU having priority information.

The messages used by the CCC in implementation of the binary sort method in an embodiment of the invention are shown in Figures 23a-d.

The CCC initiates a search for an unknown ECU having priority information using a Binary Sort Initialization ("BSI") message, shown in Figure 23a. The BSI message has a SEND CNTL byte equal to 10, followed by two bytes specifying (in low and high order parts) a binary sort high address ("BSHAL" and "BSHAH") and two bytes specifying (in low and high order parts) a binary sort low address ("BSLAL" and "BSLAH"). The BSI message is sent by the CCC following receipt of a GPR byte on the priority information reverse channel. The BSI message is used by the CCC to turn the priority information window off, to specify the binary sort group high address, and

to specify the binary sort group low address. No response to the BSI message is expected from any ECU.

After the binary sort is initialized with the BSI message, the CCC transmits a series of binary sort poll messages to locate an ECU having priority information to send. Each binary sort poll message turns the priority information window off and specifies a binary sort group address range. Upon receipt of a binary sort poll message, any ECU having priority information within the priority information threshold level and an address within the specified group address range responds by transmitting to the CCC a GPR byte on the priority information channel previously established by the CCC. Three binary sort poll messages, shown in Figures 23b-23d, are utilized in one embodiment of the invention to define the binary sort group range.

Figure 23b shows a Binary Sort Poll High and Low ("BSPHL") message. This message is used by the CCC to specify a binary sort group address range bounded between a low address and a high address. The BSPHL message has a SEND CNTL byte equal to 11. Following the SEND CNTL byte are two bytes specifying the binary sort high address ("BSHAL" and "BSHAH"), and two bytes specifying the binary sort low address ("BSLAL" and "BSLAH"). Any ECU having priority information within the priority information threshold level and having an address within the low and high group address range specified in the BSPHL message responds to the CCC by transmitting a GPR byte on the priority information reverse channel.

Figure 23c shows a Binary Sort Poll Low ("BSPL") message. The BSPL message, having a SEND CNTL byte equal to 12, is similar to the BSPHL message except that the BSPL message specifies only a binary sort low group address ("BSLAL" and "BSLAH"). This

message is used by the CCC to subdivide a group address range by modifying only the low address of the group range. The BSPL thus enables the CCC to subdivide a group address range without having to send both the low and high addresses of the range. Any ECU having priority information within the priority information threshold level and having an address which is greater than or equal to the specified group low address of the BSPL message and less than or equal to the previously specified high group address responds to the CCC by transmitting a GPR byte on the priority information reverse channel.

Finally, Figure 23d shows a Binary Sort Poll High ("BSPH") message. The BSPH message includes a SEND CNTL byte equal to 13. In this message, two bytes specify a binary sort group high address ("BSHAL" and "BSHAH"). This message is used similarly to the BSPL message to subdivide a group by modifying only one (i.e., the high) group address. Any ECU having priority information within the priority information threshold level and having an address which is less than or equal to the group high address of the BSPH message and greater than or equal to the previously specified low group address responds to the CCC by transmitting a GPR byte on the priority information reverse channel.

4. Information Protocol

When information, rather than a poll or status request, is transmitted from the CCC to an ECU, an informational protocol including a handshaking sequence is used to provide the CCC with positive feedback that (a) the ECU received the message, (b) the message syntax was proper, (c) there were no transmission errors, and (d) the ECUs are operative. The handshaking sequence does not require the transmission of lengthy formatted messages, thus minimizing the amount of time required to handshake with the CCC.

The handshaking response to informational messages is a General Poll Response Verification ("GPRV"), comprising one or two bytes of "11111111". If no GPRV is detected by the CCC, the CCC interprets this to mean that the ECU is inoperative. If a single byte is received, the CCC interprets this to mean that the message was not accepted by the ECU. If two bytes are received, the CCC interprets this to mean that the message was received by the ECU without error and that processing will occur. If a two-byte response is not received, the CCC will try a predetermined number of times (e.g., five) before logging and notifying the operator of an error.

While preferred embodiments of the invention have been set forth for purposes of the disclosure, modification to the disclosed embodiments may occur to those skilled in the art. Accordingly, the appended claims are intended to cover all embodiments of the invention and modifications to the disclosed embodiments which do not depart from the spirit and scope of the invention.

```
CP/M  TLCS-47  ASSEMBLER  V2.2
                                    PAGE    1

LOC  OBJ      LINE        SOURCE STATEMENT

                1 ;-----------------------------------------------------------;
                2 ;                                                   7.1983. ;
                3 ;        main.asm        V1.0                                 ;
                4 ;                                  (TMP4740P)                ;
                5 ;                                                            ;
                6 ;               main      routine                             ;
                7 ;                                                            ;
                8 ;                                                            ;
                9 ;-----------------------------------------------------------;

                  $nolist

                  $list

              306 ;

ROM PAGE NO.15

03E0          307         org     h'3e0
              308 ;
              309 ;
              310 ; initialize
              311 ;
03E0 3680     312 main:   diclr   il,0
              313 ;
              314 ; ram clear
              315 ;
03E2 C0       316         ld      h,#h'0
03E3 E0       317         ld      l,#h'0
03E4 10       318         mov     h,a
              319 ;
03E5 1A       320 mai0:   st      a,@hl+
03E6 A5       321         b       mai0
              322 ;
03E7 38C1     323         add     h,#h'1
03E9 A5       324         b       mai0
              325 ;
              326 ; in / out port initialize
              327 ;
03EA 3A89     328         out     a,%op19         ; devider reset
03EC 3A8C     329         out     a,%op1c         ; counter1 reset
03EE 3A8D     330         out     a,%op1d         ; counter2 reset
              331 ;
03F0 4F       332         ld      a,#h'f
03F1 3AA1     333         out     a,%op01         ; led display
03F3 3AA2     334         out     a,%op02         ; led display
03F5 3AA4     335         out     a,%op04         ; relay,keyscan out
03F7 3AA5     336         out     a,%op05         ; keyscan out
03F9 3AA6     337         out     a,%op06         ; led driver,vlfout
03FB 3AA7     338         out     a,%op07         ; keyscan in
03FD 3AA8     339         out     a,%op08         ; interrupts
```

APPENDIX A

CP/M TLCS-47 ASSEMBLER V2.2
PAGE 2

```
LOC  OBJ         SOURCE STATEMENT

03FF 3AA9             out     a,%op09          ; no use
                 ;
                 ; stack pointer word initialize
                 ;
ROM PAGE NO.16 *

0401 4C               ld      a,£h'c
0402 3FFF             st      a,spw
                 ;
0404 4A               ld      a,£h'a
0405 3FCA             st      a,rwrpch         ; address h'a00
                 ;
                 ; led data set
                 ;
0407 4F               ld      a,£h'f
0408 3F35             st      a,ldatm1
040A 3F39             st      a,ldasm1
                 ;
040C 4B               ld      a,£h'b
040D 3F36             st      a,ldatm2
040F 3F3A             st      a,ldasm2
                 ;
0411 4F               ld      a,£h'f
0412 3F37             st      a,ldatl1
0414 3F3B             st      a,ldasl1
                 ;
0416 4B               ld      a,£h'b
0417 3F38             st      a,ldatl2
0419 3F3C             st      a,ldasl2
                 ;
041B 4F               ld      a,£h'f
041C 3F8D             st      a,lecotl
041E 3F8E             st      a,lecotm
0420 3F8F             st      a,lecoth
                 ;
                 ; key data set
                 ;
0422 4F               ld      a,£h'f
0423 3F2B             st      a,keyod
0425 3F42             st      a,kest0l
0427 3F43             st      a,kest0h         ;
                 ;
                 ; interrupts register intialize
                 ;
0429 47               ld      a,£h'7
                 ;
042A 3A89             out     a,%op19          ; devider start
                 ;
042C 3F1C             st      a,eirb
042E 13               xch     a,eir            ; isio inhibit
                 ;
                 ;
                 ; framing error bit on
                 ;
```

```
CP/M  TLCS-47  ASSEMBLER  V2.2
                                        PAGE    3

 LOC  OBJ        LINE        SOURCE STATEMENT

 042F 3931        392         set      spuvum,3          ; framing error
                  393 ;
                  394 ; timer on 11 bit time
                  395 ;
 0431 3B44        396         clr      %op04,0           ; timer clock start
                  397 ;
 0433 4F          398         ld       a,£h'f
 0434 3FF6        399         st       a,timrhn
 0436 47          400         ld       a,£h'7
 0437 3FF5        401         st       a,timrmn
 0439 4C          402         ld       a,£h'c
 043A 3FF4        403         st       a,timrln
                  404 ;
 043C 44          405         ld       a,£h'4
 043D 3A8C        406         out      a,%op1c           ; start
                  407 ;
                  408 ;
                  409 ; enable interrupts
                  410 ;
 043F 3640        411         eiclr    il,0
                  412 ;
                  413 ;
                  414 ; recent power on
                  415 ;        & converter selection
                  416 ;

 ROM PAGE NO.17 *

 0441 3922        417         set      spusl,2           ; spu status hi
                  418 ;
 0443 391F        419         set      servrc,1          ; service request
                  420 ;
 0445 3BA4        421         test     %op04,2
 0447 8B          422         b        mai00
                  423 ;
 0448 3933        424         set      spush,3           ; hi channel converter
 044A 8D          425         b        mai1
                  426 ;
 044B 3973        427 mai00:  clr      spush,3           ; lo channel converter
                  428 ;
                  429 ;
                  430 ;  10 sec bit 'on' ?
                  431 ;
                  432 ;
 044D 39E4        433 mai1:   testp    spuvdm,2
 044F 8D          434         b        mai1              ; 10 sec bit on
                  435 ;
                  436 ;
                  437 ;  command execute bit 'on'
                  438 ;
                  439 ;
 0450 39F4        440 mai20:  testp    spuvdm,3
 0452 A9          441         b        mai2              ; execute 'command'
                  442 ;
                  443 ;
```

```
CP/M  TLCS-47  ASSEMBLER  V2.2
                                        PAGE    4

 LOC  OBJ        LINE          SOURCE STATEMENT

                  444 ;   keyscan ?
                  445 ;
                  446 ;
 0453 39E5        447 mai4:    testp    spuvsl,2
 0455 65DD        448          b        mai3              ; keyscan ready
                  449 ;
                  450 ;
                  451 ;   cry enable ?
                  452 ;
                  453 ;
 0457 39F1        454 mai5:    testp    spuvum,3
 0459 A0          455          b        mai61
                  456 ;
 045A 3984        457          test     spuvdm,0
 045C 8D          458          b        mai1              ; cry enable
                  459 ;
 045D 2E0F        460          cmpr     servrc,£h'0
 045F A3          461          b        mai62
                  462 ;
 0460 3B36        463 mai61:   set      %op06,3
 0462 8D          464          b        mai1
                  465 ;
 0463 3B76        466 mai62:   clr      %op06,3
                  467 ;
 0465 3984        468          test     spuvdm,0
 0467 A0          469          b        mai61
                  470 ;
 0468 8D          471          b        mai1
                  472 ;
                  473 ;
                  474 ;
                  475 ; command execute
                  476 ;
                  477 ;
 0469 3C15        478 mai2:    ld       a,commah
 046B D2          479          cmpr     a,£h'2
 046C 65D9        480          b        core                   ; not implied comma
nd
                  481 ;
 046E 3C14        482          ld       a,commal
                  483 ;
 0470 5F          484          test     a,3
 0471 64F5        485          b        coex0
                  486 ;
                  487 ; command '08' - '0f'
                  488 ;
 0473 D9          489          cmpr     a,£1001b
 0474 0E          490          testp    zf
 0475 649E        491          b        coe900                 ; read device data
                  492 ;
 0477 DA          493          cmpr     a,£1010b
 0478 0E          494          testp    zf
 0479 64A4        495          b        coea00                 ; display character
 at specified
                  496 ;                                                position
 047B DB          497          cmpr     a,£1011b
 047C 0E          498          testp    zf
```

```
CP/M  TLCS-47  ASSEMBLER  V2.2
                                   PAGE    5

  LOC  OBJ       LINE        SOURCE STATEMENT

  047D 64ED       499          b        coeb00                   ; conditional poll
                  500 ;
  047F D8         501          cmpr     a,£1000b

  ROM PAGE NO.18

  0480 65D9       502          b        core                     ; not implied comma
nd
                  503 ;
                  504 ;
                  505 ; insert character on device display
                  506 ;
                  507 ;
  0482 3C37       508          ld       a,ldatl1
  0484 3F35       509          st       a,ldatm1
  0486 3C38       510          ld       a,ldatl2
  0488 3F36       511          st       a,ldatm2
                  512 ;
  048A 3C81       513          ld       a,data0h
  048C 30         514          xch      a,h
  048D 3C80       515          ld       a,data0l
  048F 31         516          xch      a,l
                  517 ;
  0490 2310       518          call     ledd
                  519 ;
  0492 30         520          xch      a,h
  0493 3F38       521          st       a,ldatl2
                  522 ;
  0495 31         523          xch      a,l
  0496 3F37       524          st       a,ldatl1
                  525 ;
  0498 2350       526          call     flash
                  527 ;
  049A 65D9       528          b        core
  049C 65D9       529          b        core
                  530 ;
                  531 ;
                  532 ; read device data
                  533 ;
                  534 ;
  049E 2050       535 coe900: call      rkce
                  536 ;
  04A0 65D9       537          b        core
  04A2 65D9       538          b        core
                  539 ;
                  540 ;
                  541 ; display character at specified position
                  542 ;
                  543 ;
  04A4 3C83       544 coea00: ld        a,data1h
  04A6 30         545          xch      a,h
  04A7 3C82       546          ld       a,data1l
  04A9 31         547          xch      a,l
                  548 ;
  04AA 2310       549          call     ledd
                  550 ;
```

```
CP/M  TLCS-47  ASSEMBLER  V2.2
                                            PAGE     6

  LOC  OBJ       LINE       SOURCE STATEMENT

  04AC 3C80       551            ld        a,data01
  04AE 3833       552            and       a,£0011b
                  553 ;
  04B0 5C         554            test      a,0
  04B1 64CC       555            b         coea10               ; lsd   change
                  556 ;
  04B3 30         557            xch       a,h
  04B4 3F36       558            st        a,ldatm2
                  559 ;
  04B6 31         560            xch       a,l
  04B7 3F35       561            st        a,ldatm1
                  562 ;
  04B9 3C81       563            ld        a,data0h
  04BB 3838       564            and       a,£1000b
  04BD 0E         565            testp     zf
  04BE 64DF       566            b         coea02
                  567 ;
                  568 ; msd flashing
                  569 ;

  ROM PAGE NO. 19

  04C0 3C33       570            ld        a,displw
  04C2 3821       571            or        a,£0001b
  04C4 3F33       572            st        a,displw
                  573 ;
  04C6 2350       574 coea01: call      flash
                  575 ;
  04C8 65D9       576            b         core
  04CA 65D9       577            b         core
                  578 ;
                  579 ;
  04CC 30         580 coea10: xch       a,h
  04CD 3F38       581            st        a,ldatl2
                  582 ;
  04CF 31         583            xch       a,l
  04D0 3F37       584            st        a,ldatl1             ; lsd change
                  585 ;
  04D2 3C81       586            ld        a,data0h
  04D4 3838       587            and       a,£1000b
  04D6 0E         588            testp     zf
  04D7 A6         589            b         coea03
                  590 ;
                  591 ; lsd flashing
                  592 ;
  04D8 3C33       593            ld        a,displw
  04DA 3822       594            or        a,£0010b
  04DC 3F33       595            st        a,displw
                  596 ;
  04DE 86         597            b         coea01
                  598 ;
  04DF 3C33       599 coea02: ld        a,displw
  04E1 383E       600            and       a,£1110b
  04E3 3F33       601            st        a,displw             ; msd steady
                  602 ;
```

```
CP/M  TLCS-47  ASSEMBLER  V2.2
                                             PAGE    7

 LOC  OBJ       LINE         SOURCE STATEMENT

 04E5 86         603          b        coea01
                 604 ;
 04E6 3C33       605 coea03: ld        a,displw
 04E8 383D       606          and      a,£1101b
 04EA 3F33       607          st       a,displw                  ; lsd steady
                 608 ;
 04EC 86         609          b        coea01
                 610 ;
                 611 ;
                 612 ; conditional poll
                 613 ;
                 614 ;
 04ED 395F       615 coeb00: clr       servrc,1
                 616 ;
 04EF 2050       617          call     rkce
                 618 ;
 04F1 65D9       619          b        core
 04F3 65D9       620          b        core
                 621 ;
                 622 ;
                 623 ; command '00' - '07'
                 624 ;
                 625 ;
 04F5 D1         626 coex0:  cmpr      a,£0001b
 04F6 0E         627          testp    zf
 04F7 651B       628          b        coe100                    ; indicator power c
ontrol
                 629 ;
 04F9 D2         630          cmpr     a,£0010b
 04FA 0E         631          testp    zf
 04FB 6534       632          b        coe200                    ; indicator mode se
lect
                 633 ;
 04FD D3         634          cmpr     a,£0011b
 04FE 0E         635          testp    zf
 04FF 654E       636          b        coe300                    ; device input cont
rol
                 637 ;

 ROM PAGE NO.20 *

 0501 D4         638          cmpr     a,£0100b
 0502 0E         639          testp    zf
 0503 6563       640          b        coe400                    ; device output con
trol
                 641 ;
 0505 D5         642          cmpr     a,£0101b
 0506 0E         643          testp    zf
 0507 6592       644          b        coe500                    ; power relay contr
ol
                 645 ;
 0509 D6         646          cmpr     a,£0110b
 050A 0E         647          testp    zf
 050B 65A2       648          b        coe600                    ; clear device disp
lay
                 649 ;
 050D D7         650          cmpr     a,£0111b
 050E 0E         651          testp    zf
 050F 65C4       652          b        coe700                    ; divice display co
ntrol
```

```
CP/M  TLCS-47  ASSEMBLER  V2.2
                                        PAGE    8

 LOC  OBJ      LINE        SOURCE STATEMENT

               655 ; read device status
               656 ;
               657 ;
 0511 39A2     658         test    spusl,2
 0513 65D9     659         b       core
               660 ;
               661 ;
 0515 3962     662 rds000: clr     spusl,2
               663 ;
 0517 395F     664         clr     servrc,1                    ;
               665 ;
 0519 65A2     666         b       coe600
               667 ;
               668 ;
               669 ;
               670 ; indicator power control
               671 ;
               672 ;
 051B 3C80     673 coe100: ld      a,data01
 051D 0E       674         testp   zf
 051E AB       675         b       coe110
               676 ;
               677 ; indicator 'on'
               678 ;
 051F 3C34     679         ld      a,dispiw
 0521 3822     680         or      a,£0010b
 0523 3F34     681         st      a,dispiw
               682 ;
 0525 3903     683         set     spush,0                     ; indicator current
ly on
               684 ;
 0527 2350     685 coe120: call    flash
               686 ;
 0529 65D9     687         b       core
               688 ;
               689 ; indicator 'off'
               690 ;
 052B 3C34     691 coe110: ld      a,dispiw
 052D 383D     692         and     a,£1101b
 052F 3F34     693         st      a,dispiw
               694 ;
 0531 3943     695         clr     spush,0                     ; indicator current
ly off
               696 ;
 0533 A7       697         b       coe120
               698 ;
               699 ;
               700 ; indicator mode select
               701 ;
               702 ;
 0534 3C80     703 coe200: ld      a,data01
 0536 0E       704         testp   zf
 0537 6545     705         b       coe210
               706 ;
 0539 3C34     707         ld      a,dispiw
 053B 3821     708         or      a,£0001b
 053D 3F34     709         st      a,dispiw
```

```
 LOC. OBJ        LINE        SOURCE STATEMENT

                       ;
 053F 3913                        set     spush,1                     ; indicator current
ly flashing
                       ;

 ROM PAGE NO.21 *

 0541 2350             coe220:  call    flash
                       ;
 0543 65D9                        b       core
                       ;
 0545 3C34             coe210:  ld      a,dispiw
 0547 383E                        and     a,£1110b
 0549 3F34                        st      a,dispiw
                       ;
 054B 3953                        clr     spush,1                     ; indicator currntl
y non-flashing
                       ;
 054D 81                          b       coe220
                       ;
                       ;
                       ; device input control
                       ;
                       ;
 054E 3C81             coe300:  ld      a,data0h
 0550 5F                          test    a,3
 0551 94                          b       coe310
                       ;
 0552 65D9                        b       core
                       ;
 0554 3680             coe310:  diclr   il,h'00
 0556 40                          ld      a,£h'0
 0557 3A8C                        out     a,%op1c
                       ;
 0559 3935                        set     spuvsl,3
                       ;
 055B 3B46                        clr     %op06,0
                       ;
 055D 3B36                        set     %op06,3                     ; port set
                       ;
 055F 3640                        eiclr   il,h'00
                       ;
 0561 65D9                        b       core
                       ;
                       ;
                       ; device output control
                       ;
                       ;
 0563 3C81             coe400:  ld      a,data0h
 0565 5F                          test    a,3
 0566 6585                        b       coe411                          ; vlf outpu
t disable
                       ;
 0568 3955                        clr     spuvsl,1                        ; key board
enable
                       ;
 056A 3C80             coe410:  ld      a,data01
 056C 5C                          test    a,0
 056D B8                          b       coe420
```

CP/M TLCS-47 ASSEMBLER V2.2
PAGE 10

```
  LOC  OBJ        LINE         SOURCE STATEMENT

                   762 ;
  056E 36AA        763          diclr    il,101010b
  0570 47          764          ld       a,£0111b
  0571 3F1C        765          st       a,eirb
  0573 13          766          xch      a,eir
  0574 366A        767          eiclr    il,101010b                    ; remote co
ntrol enable
                   768 ;
  0576 65D9        769          b        core
                   770 ;
  0578 36AA        771 coe420:  diclr    il,101010b
  057A 46          772          ld       a,£0110b
  057B 3F1C        773          st       a,eirb
  057D 13          774          xch      a,eir
  057E 40          775          ld       a,£0000b
  057F 3A8D        776          out      a,%op1d                       ; timer 2 s
top

  ROM PAGE NO.22 *

  0581 366A        777          eiclr    il,101010b                    ; remote co
ntrol disable
                   778 ;
  0583 65D9        779          b        core
                   780 ;
  0585 36AA        781 coe411:  diclr    il,101010b
  0587 3915        782          set      spuvsl,1                      ; key board
 disable
  0589 41          783          ld       a,£h'1
  058A 3F23        784          st       a,spusk
  058C 3F24        785          st       a,spucp
                   786 ;
  058E 2050        787          call     rkce
                   788 ;
  0590 6578        789          b        coe420
                   790 ;
                   791 ;
                   792 ; power relay control
                   793 ;
                   794 ;
  0592 3C80        795 coe500:  ld       a,data01
  0594 0E          796          testp    zf
  0595 9C          797          b        coe501
                   798 ;
  0596 3B54        799          clr      %op04,1              ; power relay on
                   800 ;
  0598 3932        801          set      spusl,3              ; power relay curre
ntly on
                   802 ;
  059A 65D9        803          b        core
                   804 ;
  059C 3B14        805 coe501:  set      %op04,1              ; power relay off
                   806 ;
  059E 3972        807          clr      spusl,3              ; power relay curre
ntly off
                   808 ;
  05A0 65D9        809          b        core
                   810 ;
                   811 ;
                   812 ; clear device display
                   813 ;
```

```
CP/M  TLCS-47  ASSEMBLER  V2.2
                                    PAGE   11

LOC   OBJ      LINE        SOURCE STATEMENT

                814 ;
05A2 4F         815 coe600: ld       a,£h'f
05A3 3F35       816         st       a,ldatm1
05A5 3F37       817         st       a,ldatl1
05A7 3F39       818         st       a,ldasm1
05A9 3F3B       819         st       a,ldasl1
                820 ;
05AB 3C36       821         ld       a,ldatm2
05AD 3827       822         or       a,£0111b
05AF 3F36       823         st       a,ldatm2
                824 ;
05B1 3C38       825         ld       a,ldatl2
05B3 3827       826         or       a,£0111b
05B5 3F38       827         st       a,ldatl2
                828 ;
05B7 3C3A       829         ld       a,ldasm2
05B9 3827       830         or       a,£0111b
05BB 3F3A       831         st       a,ldasm2
                832 ;
05BD 3C3C       833         ld       a,ldasl2
05BF 3827       834         or       a,£0111b

ROM PAGE NO.23 *

05C1 3F3C       835         st       a,ldasl2
                836 ;
05C3 99         837         b        core
                838 ;
                839 ;
                840 ; device display control
                841 ;
                842 ;
05C4 3C80       843 coe700: ld       a,data01
05C6 0E         844         testp    zf
05C7 92         845         b        coe701                ; display steady
                846 ;
05C8 3C33       847         ld       a,displw
05CA 3823       848         or       a,£0011b
05CC 3F33       849         st       a,displw              ; display flashing
                850 ;
05CE 2350       851 coe703: call     flash
                852 ;
05D0 99         853         b        core
05D1 99         854         b        core
                855 ;
05D2 3C33       856 coe701: ld       a,displw
05D4 383C       857         and      a,£1100b
05D6 3F33       858         st       a,displw              ; display steady
                859 ;
05D8 8E         860         b        coe703
                861 ;
                862 ;
                863 ; return
                864 ;
                865 ;
```

```
  LOC  OBJ      LINE        SOURCE STATEMENT

 05D9 3974      866 core:    clr     spuvdm,3                     ; clear 'command ex
ecute '
                867 ;
 05DB 6453      868          b       mai4
                869 ;
                870 ;
                871 ;
                872 ; keyscan
                873 ;
                874 ;
 05DD 3995      875 mai3:    test    spuvsl,1
 05DF A4        876          b       mai30
                877 ;
 05E0 3965      878          clr     spuvsl,2
                879 ;
 05E2 6457      880          b       mai5
                881 ;
 05E4 2100      882 mai30:   call    keys
                883 ;
 05E6 3965      884          clr     spuvsl,2
                885 ;
 05E8 6457      886          b       mai5
                887 ;
                888          end

ASSEMBLY COMPLETE,       0 PROGRAM ERROR(S)
```

```
CP/M  TLCS-47  ASSEMBLER  V2.2
                                                PAGE   13

                                   SYMBOL TABLE

  COE100  051B    COE110  052B    COE120  0527    COE200  0534
  COE210  0545    COE220  0541    COE300  054E    COE310  0554
  COE400  0563  * COE410  056A    COE411  0585    COE420  0578
  COE500  0592    COE501  059C    COE600  05A2    COE700  05C4
  COE701  05D2    COE703  05CE    COE900  049E    COEA00  04A4
  COEA01  04C6    COEA02  04DF    COEA03  04E6    COEA10  04CC
  COEB00  04ED    COEX0   04F5  * COMMAD  0013    COMMAH  0015
  COMMAL  0014    CORE    05D9    DATA0H  0081    DATA0L  0080
  DATA1H  0083    DATA1L  0082  * DATA2H  0085  * DATA2L  0084
* DATA3H  0087  * DATA3L  0086  * DATA4H  0089  * DATA4L  0088
* DATACT  0200  * DCH     00FE  * DCL     00FC  * DISPA   0032
* DISPH   0031    DISPIW  0034  * DISPL   0030    DISPLW  0033
  EIRB    001C    FLASH   0350  * INCOTH  008C  * INCOTL  008A
* INCOTM  008B  * KEST    0022    KEST0H  0043    KEST0L  0042
* KEST1H  0045  * KEST1L  0044  * KEST2H  0047  * KEST2L  0046
* KEST3H  0049  * KEST3L  0048  * KEST4H  004B  * KEST4L  004A
* KEST5H  004D  * KEST5L  004C  * KESTBH  0021  * KESTBL  0020
* KEYND   0029  * KEYNN   002A    KEYOD   002B  * KEYON   002C
  KEYS    0100  * KEYSB   0250  * KEYSC   000E  * KEYT    0300
* KEYTB   00CB  * LCICOT  000D    LDASL1  003B    LDASL2  003C
  LDASM1  0039    LDASM2  003A    LDATL1  0037    LDATL2  0038
  LDATM1  0035    LDATM2  0036  * LDISP   0B00    LECOTH  008F
  LECOTL  008D    LECOTM  008E    LEDD    0310  * LIOVF1  0600
* LIOVF2  0D00  * LREMO   0E00  * LVLFEX  0C00    MAI0    03E5
  MAI00   044B    MAI1    044D    MAI2    0469  * MAI20   0450
  MAI3    05DD    MAI30   05E4    MAI4    0453    MAI5    0457
  MAI61   0460    MAI62   0463  * MAIN    03E0  * OVER2A  0072
* OVER2H  0071  * OVER2L  0070  * OVERA1  0012  * OVERH1  0011
* OVERL1  0010  * PARITT  000C  * PARITY  000B  * RDS000  0515
* READC   0028  * READN   0027  * REMD0   0060  * REMD1   0061
* REMD2   0062  * REMD3   0063  * REMD4   0064  * REMD5   0065
* REMD6   0066  * REMD7   0067  * REMOA   006A  * REMOH   0069
* REMOL   0068    RKCE    0050  * RNH     006B  * RNL     006D
* RNM     006C    RWRPCH  00CA  * RWRPCL  00C8  * RWRPCM  00C9
  SERVRC  000F    SPUCP   0024    SPUSH   0003    SPUSK   0023
  SPUSL   0002  * SPUTT   0018    SPUVDM  0004  * SPUVSH  0000
  SPUVSL  0005    SPUVUM  0001    SPW     00FF  * SPWB    00C7
* TABLE   0000  * TIMR2H  00FA  * TIMR2L  00F8  * TIMR2M  00F9
  TIMRHN  00F6  * TIMRHO  001B    TIMRLN  00F4  * TIMRLO  0019
  TIMRMN  00F5  * TIMRMO  001A  * VLFC    000A  * VLFEC   0016
* VLFRB   0009  * VLFTB   0008  * VLFTH   0007  * VLFTL   0006
* VLFXA   0052  * VLFXH   0051  * VLFXL   0050  * WARPCL  00C4
* WARPCM  00C5  * WRITEH  0026  * WRITEN  0025

DEFINED    171 USER SYMBOL(S)
```

```
CP/M  TLCS-47  ASSEMBLER  V2.2
                                        PAGE    1

LOC  OBJ       LINE         SOURCE STATEMENT

                  1 ;---------------------------------------------------------;
                  2 ;                                               7.1983.  ;
                  3 ;        liovf1.asm        V1.0                           ;
                  4 ;                               (TMP4740P)                ;
                  5 ;                                                         ;
                  6 ;              vlf communication    routine               ;
                  7 ;                                                         ;
                  8 ;                                                         ;
                  9 ;---------------------------------------------------------;

                 $nolist

                 $list

                296 ;;

ROM PAGE NO. 0

0010            297         org     h'010               ; routine table
0010            298
                299 ;
0010 66B2       300         b       r0                  ; start bit detect
                301 ;
0012 66FC       302         b       rmi                 ; mi bit detect
                303 ;
0014 6719       304         b       rca                 ; address detect
                305 ;
0016 673E       306         b       rcf                 ; command detect
                307 ;
0018 67D4       308         b       rcp                 ; parity in
                309 ;
001A 67EE       310         b       tra                 ; 'ack' or 'nack'
                311 ;
001C 67FA       312         b       rcstn               ; stop bit in
                313 ;
001E 6834       314         b       rstd                ; damy to rcstab
                315 ;
0020 6838       316         b       rcstab              ; stop bit in
                317 ;
0022 6841       318         b       rdd                 ; data in
                319 ;
0024 6871       320         b       rdp                 ; parity in
                321 ;
0026 687F       322         b       tdack               ; 'ack' or 'nack'
                323 ;
0028 6885       324         b       rdast
                325 ;
                326 ;;;;
                327 ;
002A 68C2       328         b       t0                  ; transmit
                329 ;
```

```
CP/M  TLCS-47  ASSEMBLER  V2.2
                                        PAGE    2

 LOC  OBJ       LINE        SOURCE STATEMENT

 002C 68EB      330            b       td1                        ; data out
                331 ;
 002E 68F1      332            b       trmi                       ; detect 'mi'
                333 ;
 0030 6909      334            b       rdamy                      ; damy to rca
                335 ;
 0032 6912      336            b       tdo                        ; data out
                337 ;
 0034 6930      338            b       tp                         ; parity out
                339 ;
 0036 693E      340            b       tlci                       ; 'lci' bit out
                341 ;
 0038 6944      342            b       rtack                      ; receive 'ack'
                343 ;
 003A 6983      344            b       tst                        ; out 'stop'
                345 ;
 003C 6989      346            b       rst                        ; receive 'stop'
                347 ;
                348 ;;;;;;;;;;;;;;;;;;;;;;;;;;;;;;;;;;;;;;;;;;;;;;;;;;;;;;;
                349 ;

 ROM PAGE NO.24

 0600           350            org     h'600
                351 ;
                352 ;--------------------------------------------;
                353 ;          register push                     ;
                354 ;--------------------------------------------;
 0600 3B06      355            set     %op06,0
 0602 3F12      356 iovf1:     st      a,overal                   ;
 0604 2910      357            xch     hl,overl1                  ;
                358 ;--------------------------------------------;
                359 ;          timer1.start                      ;
                360 ;--------------------------------------------;
 0606 3C1B      361            ld      a,timrho                   ;
 0608 3FF6      362            st      a,timrhn                   ;
 060A 3C1A      363            ld      a,timrmo                   ;
 060C 3FF5      364            st      a,timrmn                   ;
 060E 3C19      365            ld      a,timrlo                   ;
 0610 3FF4      366            st      a,timrln                   ;
                367 ;--------------------------------------------;
                368 ;          check mode                        ;
                369 ;                  ( normal or not )         ;
                370 ;--------------------------------------------;
 0612 3980      371            test    spuvsh,0
 0614 B5        372            b       vlf001                     ;routine for abnorm
al
                373 ;                                             ;                mod
e
                374 ;--------------------------------------------;
                375 ;          check mode                        ;
                376 ;                  ( transmit or not )       ;
                377 ;--------------------------------------------;
 0615 39D0      378            testp   spuvsh,1                   ;
 0617 A3        379            b       vlf010                     ;routine for transm
it
                380 ;                                                              mod
e
 0618 3BC0      381            testp   %ip00,0                    ;
```

```
CP/M  TLCS-47  ASSEMBLER  V2.2
                                  PAGE    3

 LOC  OBJ       LINE        SOURCE STATEMENT

 061A 9E         382            b        vlf100                 ;data ='1'
                 383 ;
 061B 3979       384            clr      vlfrb,3                ;
 061D AD         385            b        vlf200                 ;to warp
                 386 ;
 061E 2F1B       387 vlf100:  add      parity,£h'1              ;parity counter inc
 0620 3939       388            set      vlfrb,3                ;
 0622 AD         389            b        vlf200                 ;to warp
                 390 ;
                 391 ;-------------------------------------------;
                 392 ;          data out          ( vlf010 )     ;
                 393 ;-------------------------------------------;
 0623 3988       394 vlf010:  test     vlftb,0
 0625 AB         395            b        vlf011
                 396 ;
 0626 2F1C       397            add      paritt,£h'1            ; parity count
                 398 ;
 0628 3B76       399            clr      %op06,3                ; vlf output data '
1'
 062A AD         400            b        vlf200                 ; to warp
                 401 ;
 062B 3B36       402 vlf011:  set      %op06,3                  ; vlf output data '
0'
                 403 ;
                 404 ;-------------------------------------------;
                 405 ;          warp routine      ( vlf200 )     ;
                 406 ;-------------------------------------------;
 062D 3CFF       407 vlf200:  ld       a,spw                    ;
 062F 3FC7       408            st       a,spwb                 ;
                 409 ;
 0631 40         410            ld       a,£h'0                 ;
 0632 3FFF       411            st       a,spw                  ; spw changing
                 412 ;
 0634 2A         413            ret                             ; warp
                 414 ;
                 415 ;-------------------------------------------;
                 416 ;          routine for abnormal mode        ;
                 417 ;                            ( vlf000 )     ;
                 418 ;-------------------------------------------;
 0635 39D4       419 vlf001:  testp    spuvdm,1                 ; 1200 bit time cou
nting ?
 0637 6647       420            b        vlf002                 ; branch on ' yes'
                 421 ;
 0639 39E4       422            testp    spuvdm,2               ; 10sec couting ?
 063B 6654       423            b        vlf003                 ; branch on 'yes'
                 424 ;
 063D 39F1       425            testp    spuvum,3               ; framing error ?
 063F AE         426            b        vlf004                 ; branch on 'yes'
                 427 ;

 ROM PAGE NO.25

 0640 3904       428 vlf005:  set      spuvdm,0                 ; cry enable on
 0642 40         429            ld       a,£h'0
 0643 3A8C       430            out      a,%op1c                ; timer stop
 0645 66AD       431            b        vlf300                 ; to return routine
                 432 ;
                 433 ;---------1200 bit counted ----------------;
```

```
CP/M   TLCS-47   ASSEMBLER   V2.2
                                        PAGE    4

  LOC  OBJ        LINE        SOURCE STATEMENT

                          ;
  0647 3954           vlf002: clr      spuvdm,1                 ; clear '1200 bit c
ounting'
  0649 3941                   clr      spuvum,0                 ; clear 'previous
                          ;                                     ;   command needs d
ata'
  064B 3951                   clr      spuvum,1                 ; clear 'previous
                          ;                                     ;   command require
s data'
  064D 3921                   set      spuvum,2                 ; 'command inhibit'
 on
  064F 3900                   set      spuvsh,0                 ; set normal mode
  0651 3950                   clr      spuvsh,1                 ; set receive mode
                          ;
  0653 80                     b        vlf005                   ; branch on
                          ;                                     ;   'set cry enable
'
                          ;
                          ;-------- 10sec counted  -------------;
                          ;
  0654 3931           vlf003: set      spuvum,3                 ; set framing error
  0656 3964                   clr      spuvdm,2                 ; clear '10sec coun
ting'
                          ;
  0658 3C23                   ld       a,spusk
  065A 3F24                   st       a,spucp
                          ;
  065C 2050                   call     rkce
                          ;
  065E 4F                     ld       a,£h'f
  065F 3FF6                   st       a,timrhn
  0661 47                     ld       a,£h'7
  0662 3FF5                   st       a,timrmn
  0664 4C                     ld       a,£h'c
  0665 3FF4                   st       a,timrln
                          ;
  0667 44                     ld       a,£h'4
  0668 3A8C                   out      a,%op1c                  ; 11bit timer setti
ng
                          ;
  066A 3975                   clr      spuvsl,3                 ; 1'st intr. enable
                          ;
  066C 66AD                   b        vlf300                   ; to return routine
                          ;
                          ;----- framing error bit on ----------;
  066E 3C18           vlf004: ld       a,sputt
  0670 D0                     cmpr     a,£h'0
  0671 66A3                   b        vl0040
                          ;
  0673 3C53                   ld       a,frame
  0675 DF                     cmpr     a,£h'f
  0676 6689                   b        vl0060
                          ;
  0678 3B80                   test     %ip00,0
  067A 6698                   b        vl0050
                          ;
  067C 40                     ld       a,£h'0
  067D 3F53                   st       a,frame
                          ;
  067F 4F                     ld       a,£h'f

   ROM PAGE NO.26
```

```
CP/M  TLCS-47  ASSEMBLER  V2.2
                                  PAGE   5

 LOC  OBJ       LINE       SOURCE STATEMENT

 0680 3FF6                 st      a,timrhn
 0682 47                   ld      a,£h'7
 0683 3FF5                 st      a,timrmn
 0685 4C                   ld      a,£h'c
 0686 3FF4                 st      a,timrln
                      ;
 0688 AD                   b       vlf300
                      ;
 0689 3B80             v10060: test    %ip00,0
 068B 98                   b       v10050
                      ;
 068C 3971                 clr     spuvum,3                ; clear 'framing er
ror'
 068E 3921                 set     spuvum,2                ; set 'command inhi
bit'
 0690 3951                 clr     spuvum,1                ; clear 'previous c
ommand
                      ;                                 ;  requires an answ
er'
                      ;    clr     spuvum,0                ; clear 'previous c
ommand
                      ;                                 ;  needs data'
 0692 3950                 clr     spuvsh,1                ; set receive mode
 0694 3900                 set     spuvsh,0                ; set normal mode
                      ;
 0696 6640                 b       vlf005                  ; to 'set cry enabl
e'
                      ;
 0698 4F               v10050: ld      a,£h'f
 0699 3FF6                 st      a,timrhn
 069B 3FF5                 st      a,timrmn
                      ;
 069D 3F53                 st      a,frame
                      ;
 069F 4A                   ld      a,£h'a
 06A0 3FF4                 st      a,timrln
                      ;
 06A2 AD                   b       vlf300
                      ;
 06A3 40               v10040: ld      a,£h'0
 06A4 3F18                 st      a,sputt
                      ;
 06A6 3BC0                 testp   %ip00,0
 06A8 AD                   b       vlf300
                      ;
 06A9 4F                   ld      a,£h'f
 06AA 3F53                 st      a,frame
                      ;
 06AC 98                   b       v10050
                      ;
                      ;-----------------------------------------;
                      ;      return routine   ( vlf300 )       ;
                      ;-----------------------------------------;
 06AD 3C12             vlf300: ld      a,overal                ;
 06AF 2910                 xch     hl,overll               ; pop register
                      ;
 06B1 2B                   reti
                      ;
                      ;-----------------------------------------;
                      ;       R0 routine                        ;
```

```
CP/M  TLCS-47  ASSEMBLER  V2.2
                                   PAGE   6

  LOC  OBJ      LINE        SOURCE STATEMENT

  ----                ;              ( in start bit )                  ;
                      ;------------------------------------------------;
                      ;--------        start bit            ----------;
                      ;
  06B2 3BC0           r0:      testp    %ip00,0                        ;
  06B4 66C2                    b        r00000                         ; it was not 'start
,
                      ;
  06B6 3935                    set      spuvsl,3                       ; external intr.
                                                                          inhibit
                      ;
                      ;
  06B8 3961                    clr      spuvum,2                       ; clear 'command in
hibit'
                      ;
  06BA 3944                    clr      spuvdm,0                       ; clear 'cry enable
,
  06BC 3B36                    set      %op06,3                        ; port set
                      ;
                      ;--------      next intr.          ---------;
                      ;
  06BE C1                      ld       h,£h'1
  06BF E2                      ld       l,£h'2                         ; to Rmi routine
                      ;

  ROM PAGE NO.27

  06C0 41                      ld       a,£h'1                         ; next intr. 1 bit
time
                      ;
                      ;--------      re-warp          ---------;
                      ;
  06C1 2A             r00001:  ret
                      ;
                      ;--------   start bit not found    ---------;
                      ;
  06C2 3984           r00000:  test     spuvdm,0
  06C4 89                      b        r01000                         ; cry enable ?
                      ;
  06C5 40                      ld       a,£h'0
  06C6 3A8C                    out      a,%op1c                        ; timer1 stop
                      ;
  06C8 81                      b        r00001                         ; to re-warp
                      ;
  06C9 3940           r01000:  clr      spuvsh,0                       ; to abnormal mode
                      ;
  06CB 3994                    test     spuvdm,1
                      ;
  06CD AA                      b        r01110                         ; must detect 'cry
enable'
                      ;
                      ;
                      ; 1200 bit counting
                      ;
  06CE 3C8C           r01100:  ld       a,incoth
  06D0 3FF6                    st       a,timrhn
  06D2 3C8B                    ld       a,incotm
  06D4 3FF5                    st       a,timrmn
  06D6 3C8A                    ld       a,incotl
  06D8 3FF4                    st       a,timrln
                      ;
```

```
CP/M  TLCS-47  ASSEMBLER  V2.2
                                   PAGE    7

 LOC  OBJ          SOURCE STATEMENT

 06DA 48                   ld       a,£h'8
 06DB 3A8C                 out      a,%op1c
                  ;
 06DD 3B36                 set      %op06,3
                  ;
                  ; return
                  ;
 06DF 3CC7        r01111:  ld       a,spwb
 06E1 3FFF                 st       a,spw
                  ;
 06E3 3C12                 ld       a,overal
 06E5 2910                 xch      hl,overll
                  ;
 06E7 3B46                 clr      %op06,0
                  ;
 06E9 2B                   reti
                  ;
 06EA 3C8C        r01110:  ld       a,incoth
 06EC 3FF6                 st       a,timrhn
 06EE 3C8B                 ld       a,incotm
 06F0 3FF5                 st       a,timrmn
 06F2 3C8A                 ld       a,incotl
 06F4 3FF4                 st       a,timrln
                  ;
 06F6 44                   ld       a,£h'4
 06F7 3A8C                 out      a,%op1c
                  ;
 06F9 3B36                 set      %op06,3
                  ;
 06FB 9F                   b        r01111
                  ;
                  ;;;;;;;;;;;;;;;;;;;;;;;;;;;;;;;;;;;;;;;;;;;;;;;;
                  ;;;;;;;;;;;;;;;;;;;;;;;;;;;;;;;;;;;;;;;;;;;;;;;;
                  ;
                  ;-----------------------------------------------;
                  ;        Rmi routine                            ;
                  ;                ( in mi bit )                  ;
                  ;-----------------------------------------------;
                  ;
                  ;
 06FC 39F9        rmi:     testp    vlfrb,3                     ;
 06FE 670F                 b        rmi000                      ; 'data' from ECU
                  ;
                  ;------- 'command' from ECU        ----------;
                  ;

 ROM PAGE NO.28

 0700 C1                   ld       h,£h'1                      ;
 0701 E4                   ld       l,£h'4                      ; to Rca routine
                  ;
 0702 40                   ld       a,£h'0
 0703 3F16                 st       a,vlfec                     ; vlf error counter
clear
                  ;
 0705 3941                 clr      spuvum,0                    ; 'previous command
```

```
CP/M  TLCS-47  ASSEMBLER  V2.2
                                            PAGE    8

  LOC  OBJ      LINE        SOURCE STATEMENT

                 645 ;                                                     needs data'
  0707 3951      646          clr      spuvum,1                  ; 'previous command
                 647 ;                                                     requires an ans
wer'
                 648 ;------- parity & VLF counter
                 649 ;                 clear                ---------;
                 650 ;
  0709 2D0B      651 rmi001: st        £h'0,parity
  070B 2D0A      652          st        £h'0,vlfc                 ; parity counter
                 653 ;                                                  & VLF counter cl
ear  .
                 654 ;
                 655 ;-------          next intr.           ---------;
                 656 ;
  070D 41        657          ld        a,£h'1                    ; next intr. 1bit t
ime
                 658 ;
                 659 ;-------           re-warp             ---------;
                 660 ;
  070E 2A        661 rmi002: ret                                 ; re-warp
                 662 ;
                 663 ;-------  'data ' from ECU             ---------;
                 664 ;
  070F 3981      665 rmi000: test      spuvum,0
  0711 95        666          b         rmi003                    ; not need data
                 667 ;
  0712 C2        668          ld        h,£h'2
  0713 E2        669          ld        l,£h'2                    ; to Rdd routine
                 670 ;
  0714 89        671          b         rmi001                    ; to parity clear
                 672 ;
                 673 ;-------    not need 'data'             ---------;
                 674 ;
  0715 C1        675 rmi003: ld        h,£h'1
  0716 EE        676          ld        l,£h'e                    ; to Rstd routine
                 677 ;
  0717 43        678          ld        a,£h'3                    ; next intr. 9bit t
ime
                 679 ;
  0718 8E        680          b         rmi002                    ; to re-warp
                 681 ;
                 682 ;;;;;;;;;;;;;;;;;;;;;;;;;;;;;;;;;;;;;;;;;;;;;;;;;;
                 683 ;;;;;;;;;;;;;;;;;;;;;;;;;;;;;;;;;;;;;;;;;;;;;;;;;;
                 684 ;
                 685 ;------------------------------------------------;
                 686 ;        Rca routine                              ;
                 687 ;                ( in command receive )           ;
                 688 ;------------------------------------------------;
                 689 ;
  0719 2F1A      690 rca:     add       vlfc,£h'1                 ; vlf counter
                 691 ;                                                     increament
  071B 2E3A      692          cmpr      vlfc,£h'3
  071D B4        693          b         rca000                    ; vlfc <> 3
                 694 ;
                 695 ;-------        address check           ---------;
                 696 ;
  071E 3C09      697          ld        a,vlfrb
  0720 07        698          rorc      a
  0721 3837      699          and       a,£h'7
```

```
LOC  OBJ      LINE     SOURCE STATEMENT

0723 3F13               st      a,commad              ; address in
                   ;
0725 3A20               in      %ip00,a
0727 07                 rorc    a
0728 07                 rorc    a
0729 3833               and     a,£h'3
072B 3802               add     a,£h'2                ; spu address
                   ;
072D 3E13               cmpr    a,commad
072F BA                 b       rca001                ; address check NG
                   ;
                   ;-------    next intr. address
                   ;                     matched -------;
                   ;
0730 C1                 ld      h,£h'1
0731 E6                 ld      l,£h'6                ; to Rgf routine
                   ;
0732 41            rca002: ld   a,£h'1                ; next intr. 1bit t
ime
                   ;
                   ;-------          re-warp         -------;
                   ;
0733 2A            rca003: ret                        ; re-warp
                   ;
                   ;-------          shift           -------;
                   ;
0734 3C09          rca000: ld   a,vlfrb
0736 07                 rorc    a                     ; shift
0737 3F09               st      a,vlfrb
                   ;
0739 B2                 b       rca002                ; next intr. 1bit t
ime
                   ;
                   ;-------    next intr. address
                   ;          miss matched     -------;
                   ;
073A C1            rca001: ld   h,£h'1
073B EE                 ld      l,£h'e                ; to Rstd
                   ;
073C 42                 ld      a,£h'2                ; next intr.
                   ;                                    6 bit time
                   ;
073D B3                 b       rca003                ; re-warp
                   ;
                   ;;;;;;;;;;;;;;;;;;;;;;;;;;;;;;;;;;;;;;;;;;
                   ;;;;;;;;;;;;;;;;;;;;;;;;;;;;;;;;;;;;;;;;;;
                   ;
                   ;-----------------------------------------;
                   ;        Rcf routine                      ;
                   ;              ( in command receive )     ;
                   ;-----------------------------------------;
                   ;
                   ;-------          data set        -------;
                   ;
073E 2F1A          rcf:    add     vlfc,£h'1          ; VLF counter
                   ;                                    increament
```

```
CP/M   TLCS-47   ASSEMBLER   V2.2
                                          PAGE   10

  LOC  OBJ      LINE       SOURCE STATEMENT

  ROM PAGE NO.29

  0740 2E7A             cmpr    vlfc,£h'7               ;
  0742 0E               testp   zf
  0743 8F               b       rcf000                  ; branch on
                  ;                                       command hi
  0744 2E8A             cmpr    vlfc,£h'8
  0746 0E               testp   zf
  0747 94               b       rcf001                  ; branch on
                  ;                                       read function
                  ;
  0748 3C09             ld      a,vlfrb                 ;
  074A 07               rorc    a                       ;
  074B 3F09             st      a,vlfrb                 ; data set
                  ;
                  ;-------        next intr.       ----------;
                  ;
  074D 41         rcf002: ld    a,£h'1                  ; next intr. 1bit t
ime
                  ;
                  ;-------        re-warp          ----------;
                  ;
  074E 2A         rcf006: ret                           ; re-warp
                  ;
                  ;-------     read command lo     ----------;
                  ;
  074F 3C09       rcf000: ld    a,vlfrb
  0751 3F14             st      a,commal
                  ;
  0753 8D               b       rcf002                  ; to next intr.
                  ;
                  ;-------     read command  hi    ----------;
                  ;
  0754 3C09       rcf001: ld    a,vlfrb
  0756 07               rorc    a
  0757 07               rorc    a
  0758 07               rorc    a
  0759 3831             and     a,£0001b
  075B 3822             or      a,£0010b
  075D 3F15             st      a,commah
                  ;
                  ;-------      read , write  ?    ----------;
                  ;
  075F 3FFD             st      a,dcm
  0761 3C14             ld      a,commal
  0763 3FFC             st      a,dcl
  0765 4F               ld      a,£h'f
  0766 3FFE             st      a,dch
                  ;
  0768 33               ldl     a,@dc
  0769 3F25             st      a,writen
  076B 32               ldh     a,@dc+
  076C 3F27             st      a,readn
                  ;
  076E D0               cmpr    a,£h'0
  076F 0E               testp   zf
```

```
CP/M  TLCS-47  ASSEMBLER  V2.2
                                            PAGE   11

  LOC  OBJ       LINE          SOURCE STATEMENT

  0770 BC         807          b        rcf100                  ; need not reading
                  808 ;
                  809 ; read command
                  810 ;
  0771 3901       811          set      spuvum,0                ; set previous comm
and need data
                  812 ;
  0773 40         813          ld       a,£h'0
  0774 3F28       814          st       a,readc                 ; reading counter s
et
                  815 ;
                  816 ;-------     out 'mark' &
                  817 ;             next address      --------;
                  818 ;
  0776 3B76       819 rcf005: clr      %op06,3                 ; out 'mark'
                  820 ;
  0778 C1         821          ld       h,£h'1
  0779 E8         822          ld       l,£h'8                  ; to Rcp routine
                  823 ;
  077A 40         824          ld       a,£h'0                  ; next intr.1/2
                  825 ;                                            bit time
                  826 ;
  077B 8E         827          b        rcf006                  ; to re-warp routin
e
                  828 ;
                  829 ;-------       write command ?   --------;
                  830 ;
  077C 3C25       831 rcf100: ld       a,writen
  077E D0         832          cmpr     a,£h'0
  077F 0E         833          testp    zf

  ROM PAGE NO.30

  0780 6776       834          b        rcf005                  ; to Rcp routine
                  835 ;
                  836 ;-------       write command     --------;
                  837 ;
  0782 DF         838          cmpr     a,£h'f
  0783 0E         839          testp    zf
  0784 B5         840          b        rcf110                  ; conditional poll
                  841 ;
  0785 3914       842          set      spuvdm,1                ; set previous comm
and require
                  843 ;                                                answer
  0787 2D1D       844          st       £h'1,lcicot
                  845 ;
  0789 D1         846          cmpr     a,£0001b
  078A 98         847          b        rcf120                  ; 'read device data
'
                  848 ;                                             command
                  849 ;
                  850 ; read spu status command
                  851 ;
  078B 41         852          ld       a,£h'1
  078C 3F24       853          st       a,spucp
                  854 ;
  078E 3C02       855          ld       a,spusl
  0790 3F06       856          st       a,vlftl
  0792 3C03       857          ld       a,spush
  0794 3F07       858          st       a,vlfth
```

```
CP/M  TLCS-47  ASSEMBLER  V2.2
                                          PAGE   12

 LOC  OBJ        LINE         SOURCE STATEMENT

                 859 ;
0796 6776        860          b         rcf005
                 861 ;
                 862 ;
                 863 ; read device data command
                 864 ;
                 865 ;
0798 3C42        866 rcf120: ld         a,kest0l
079A 3F06        867          st        a,vlftl
079C 3C43        868          ld        a,kest0h
079E 3F07        869          st        a,vlfth
                 870 ;
07A0 3C23        871          ld        a,spusk
07A2 0E          872          testp     zf
07A3 AE          873          b         rcf121
                 874 ;
07A4 3F24        875          st        a,spucp
07A6 40          876          ld        a,£h'0
07A7 3F17        877          st        a,spuff
                 878 ;
07A9 44          879 rcf122: ld         a,£h'4
07AA 3F26        880          st        a,writeh
                 881 ;
07AC 6776        882          b         rcf005
                 883 ;
07AE 08          884 rcf121: inc        a
07AF 3F24        885          st        a,spucp
07B1 4F          886          ld        a,£h'f
07B2 3F17        887          st        a,spuff                       ; no key stroke
                 888 ;
07B4 A9          889          b         rcf122
                 890 ;
                 891 ; conditional poll
                 892 ;
07B5 3C42        893 rcf110: ld         a,kest0l
07B7 3F06        894          st        a,vlftl
07B9 3C43        895          ld        a,kest0h
07BB 3F07        896          st        a,vlfth                       ; data in
                 897 ;
07BD 41          898          ld        a,£h'1
07BE 3F0D        899          st        a,lcicot

 ROM PAGE NO.31

07C0 3F24        900          st        a,spucp
                 901 ;
07C2 3B76        902          clr       %op06,3
                 903 ;
07C4 3914        904          set       spuvdm,1
                 905 ;
07C6 3C23        906          ld        a,spusk
07C8 0E          907          testp     zf
07C9 8F          908          b         rcf111
                 909 ;
07CA 40          910          ld        a,£h'0
```

```
  LOC  OBJ       LINE       SOURCE STATEMENT

  07CB 3F17                   st      a,spuff
  07CD 6776                   b       rcf005
                      ;
  07CF 4F             rcf111: ld      a,£h'f
  07D0 3F17                   st      a,spuff                   ; no keystroke
  07D2 6776                   b       rcf005
                      ;
                      ;
                      ;---------------------------------------;
                      ;       Rcp routine    ( command read )  ;
                      ;---------------------------------------;
                      ;
                      ;
  07D4 39CB           rcp:    testp   parity,0
  07D6 A9                     b       rcp000                    ; parity error
                      ;
  07D7 3C25                   ld      a,writen
  07D9 DF                     cmpr    a,£h'f
  07DA A1                     b       rcp100                    ; not conditional p
oll
                      ;
  07DB 2E0F                   cmpr    servrc,£h'0
  07DD A1                     b       rcp100                    ; data in
                      ;
  07DE 3954                   clr     spuvdm,1                  ; clear previous co
mmand
                      ;                                            need answer bit
  07E0 A9                     b       rcp000
                      ;
  07E1 3948           rcp100: clr     vlftb,0                   ; send 'ack'
                      ;
                      ;--------      mode change       --------;
                      ;
  07E3 3910           rcp003: set     spuvsh,1                  ; change mode
                      ;                                             to 'transmit'
                      ;--------    next intr.           --------;
                      ;
  07E5 C1             rcp004: ld      h,£h'1
  07E6 EA                     ld      l,£h'a                    ; to Tra routine
                      ;
  07E7 40                     ld      a,£h'0                    ; next intr. 1/2 bi
t
                      ;                                               time
                      ;--------        re-warp          --------;
                      ;
  07E8 2A                     ret
                      ;
                      ;--------    parity error         --------;
                      ;
  07E9 3921           rcp000: set     spuvum,2                  ; set 'command inhi
bit'
                      ;
  07EB 3908                   set     vlftb,0                   ; send 'nack'
  07ED
  07ED A3                     b       rcp003                    ;
                      ;
                      ;
                      ;;;;;;;;;;;;;;;;;;;;;;;;;;;;;;;;;;;;;;;;;;
                      ;;;;;;;;;;;;;;;;;;;;;;;;;;;;;;;;;;;;;;;;;;
```

```
CP/M  TLCS-47  ASSEMBLER  V2.2
                                   PAGE   14

 LOC  OBJ       LINE        SOURCE STATEMENT

                  966 ;
                  967 ;-----------------------------------------;
                  968 ;         Tra                             ;
                  969 ;-----------------------------------------;
                  970 ;
                  971 ;
                  972 ;-----          mode change       -------;
                  973 ;
 07EE 3950        974 tra:     clr      spuvsh,1            ; mode change
                  975 ;                                        to receive mode
 07F0 39E1        976          testp    spuvum,2
 07F2 B7          977          b        tra000              ; branch on
                  978 ;                                        'command inhibit

                  979 ;------       next intr.         -------;
                  980 ;
 07F3 C1          981          ld       h,£h'1
 07F4 EC          982          ld       l,£h'c              ; to Rcstn routine
                  983 ;
 07F5 45          984 tra001:  ld       a,£h'5              ; next intr.
                  985 ;                                            bit time
                  986 ;
                  987 ;------          re-warp          -------;
                  988 ;
 07F6 2A          989          ret
                  990 ;
                  991 ;------       next intr.
                  992 ;                 in parity error -------;
                  993 ;
 07F7 C2          994 tra000:  ld       h,£h'2
 07F8 E0          995          ld       l,£h'0              ; to Rcstab routine
                  996 ;
 07F9 B5          997          b        tra001
                  998 ;
                  999 ;;;;;;;;;;;;;;;;;;;;;;;;;;;;;;;;;;;;;;;;;;;
                 1000 ;;;;;;;;;;;;;;;;;;;;;;;;;;;;;;;;;;;;;;;;;;;
                 1001 ;
                 1002 ;-----------------------------------------;
                 1003 ;         Rcstn   routine                 ;
                 1004 ;-----------------------------------------;
                 1005 ;
                 1006 ;
 07FA 39B9       1007 rcstn:   test     vlfrb,3
 07FC 6820       1008          b        rcstn0              ; framing error
                 1009 ;
                 1010 ;------          read ?           -------;
                 1011 ;
 07FE 3C27       1012          ld       a,readn

 ROM PAGE NO.32

 0800 D0         1013          cmpr     a,£0000b
 0801 0E         1014          testp    zf
 0802 97         1015          b        rcstn1              ; branch on
                 1016 ;                                           read comman
d
                 1017 ;read or write command
```

```
CP/M  TLCS-47  ASSEMBLER  V2.2
                                        PAGE   15

 LOC  OBJ       LINE        SOURCE STATEMENT

                1018 ;
 0803 3940      1019 rcstn6: clr      spuvsh,0                    ; to abnormal mode
                1020 ;
                1021 ;-------   1200 bit timer on     --------;
                1022 ;
 0805 3914      1023 rcstn2: set      spuvdm,1                    ; '1200 bit timer '
on
                1024 ;
 0807 42        1025         ld       a,£h'2
 0808 3FF6      1026         st       a,timrhn
 080A 4C        1027         ld       a,£h'c
 080B 3FF5      1028         st       a,timrmn
 080D 4F        1029         ld       a,£h'f
 080E 3FF4      1030         st       a,timrln
                1031 ;
 0810 48        1032         ld       a,£h'8
 0811 3A8C      1033         out      a,%op1c                     ;
                1034 ;
                1035 ;-------   external intr.enable --------;
                1036 ;
 0813 3975      1037 rcstn3: clr      spuvsl,3
                1038 ;
                1039 ;-------       return           --------;
                1040 ;
 0815 66DF      1041         b        r01111
                1042 ;
 0817 3C25      1043 rcstn1: ld       a,writen
 0819 D0        1044         cmpr     a,£0000b
 081A B1        1045         b        rcstn7                      ; branch on
                1046 ;                                             write command
                1047 ;
                1048 ; command ended
                1049 ;
 081B 3940      1050         clr      spuvsh,0                    ; to abnormal mode
                1051 ;
 081D 3934      1052         set      spuvdm,3                    ; 'command execute'
                1053 ;
 081F 93        1054         b        rcstn3                      ; to return
                1055 ;
                1056 ;------        framing error     --------;
                1057 ;
 0820 3940      1058 rcstn0: clr      spuvsh,0                    ; to abnormal mode
                1059 ;
 0822 3931      1060         set      spuvum,3                    ; framing error
                1061 ;
 0824 4F        1062         ld       a,£h'f
 0825 3F53      1063         st       a,frame
 0827 3FF6      1064         st       a,timrhn
 0829 3FF5      1065         st       a,timrmn
                1066 ;
 082B 4A        1067         ld       a,£h'a
 082C 3FF4      1068         st       a,timrln
                1069 ;
 082E 3B36      1070         set      %op06,3
                1071 ;
 0830 93        1072         b        rcstn3                      ; to return
```

```
CP/M  TLCS-47  ASSEMBLER  V2.2
                                        PAGE   16

  LOC  OBJ       LINE        SOURCE STATEMENT

                 1073 ;
  0831 3910      1074 rcstn7: set      spuvsh,1                   ; to transmit mode
  0833 83        1075         b        rcstn6
                 1076 ;
                 1077 ;;;;;;;;;;;;;;;;;;;;;;;;;;;;;;;;;;;;;;;;;;;;;;;;;;;;
                 1078 ;;;;;;;;;;;;;;;;;;;;;;;;;;;;;;;;;;;;;;;;;;;;;;;;;;;;
                 1079 ;
                 1080 ;------------------------------------------------;
                 1081 ;        Rstd     ( damy routine )               ;
                 1082 ;------------------------------------------------;
                 1083 ;
                 1084 ;
                 1085 ;-----           next  intr.          ----------;
                 1086 ;
  0834 C2        1087 rstd:   ld       h,£h'2
  0835 E0        1088         ld       l,£h'0                     ; to Rcstab
                 1089 ;
  0836 45        1090         ld       a,£h'5                     ; next intr.
                 1091 ;                                             11 bit time
                 1092 ;------            re-warp             ----------;
                 1093 ;
  0837 2A        1094         ret
                 1095 ;
                 1096 ;;;;;;;;;;;;;;;;;;;;;;;;;;;;;;;;;;;;;;;;;;;;;;;;;;;;
                 1097 ;;;;;;;;;;;;;;;;;;;;;;;;;;;;;;;;;;;;;;;;;;;;;;;;;;;;
                 1098 ;
                 1099 ;------------------------------------------------;
                 1100 ;        Rcstab                                  ;
                 1101 ;------------------------------------------------;
                 1102 ;
                 1103 ;
                 1104 ;------        check  stop  bit        ----------;
                 1105 ;
  0838 39B9      1106 rcstab: test     vlfrb,3
  083A A0        1107         b        rcstn0                     ; framing error
                 1108 ;
  083B 3940      1109 rcstal: clr      spuvsh,0                   ; to abnormal mode
                 1110 ;
  083D 3975      1111         clr      spuvsl,3                   ; external intr. en
able
                 1112 ;
  083F 66DF      1113         b        r01111                     ; return
                 1114 ;
                 1115 ;
                 1116 ;------------------------------------------------;
                 1117 ;        Rdd      ( data receive )               ;
                 1118 ;------------------------------------------------;
                 1119 ;
                 1120 ;

  ROM PAGE NO.33 *

  0841 2E3A      1121 rdd:    cmpr     vlfc,£h'3
  0843 0E        1122         testp    zf
  0844 98        1123         b        rdd000                     ; data 1 set
                 1124 ;
```

```
CP/M  TLCS-47  ASSEMBLER  V2.2
                                    PAGE   17

 LOC  OBJ       LINE        SOURCE STATEMENT

0845 2E7A       1125           cmpr     vlfc,£h'7
0847 A8         1126           b        rdd001
                1127 ;
                1128 ; data h set
                1129 ;
0848 3C28       1130           ld       a,readc
084A 05         1131           rolc     a
084B 3821       1132           or       a,£0001b
084D 31         1133           xch      a,l
084E C8         1134           ld       h,£h'8
084F 3C09       1135           ld       a,vlfrb
0851 0F         1136           st       a,@hl                  ; data in
                1137 ;
0852 3B76       1138           clr      %op06,3                ; out 'mark'
                1139 ;
                1140 ; to Rdp routine
                1141 ;
0854 C2         1142           ld       h,£h'2
0855 E4         1143           ld       l,£h'4                 ; to Rdp
                1144 ;
0856 40         1145           ld       a,£h'0                 ; next intr.
                                                                  1/2 bit time
                1146 ;
                1147 ;
                1148 ; re-warp
                1149 ;
0857 2A         1150 rdd002: ret
                1151 ;
                1152 ; data in
                1153 ;
0858 2F1A       1154 rdd000: add      vlfc,£h'1
                1155 ;
085A 3C28       1156           ld       a,readc
085C 05         1157           rolc     a
085D 383E       1158           and      a,£1110b
085F 31         1159           xch      a,l
0860 C8         1160           ld       h,£h'8
0861 3C09       1161           ld       a,vlfrb
0863 0F         1162           st       a,@hl                  ; data in
                1163 ;
0864 41         1164           ld       a,£h'1
0865 C2         1165           ld       h,£h'2
0866 E2         1166           ld       l,£h'2
                1167 ;
0867 97         1168           b        rdd002                 ; to return
                1169 ;
                1170 ; shift
                1171 ;
0868 2F1A       1172 rdd001: add      vlfc,£h'1              ; vlf counter
                                                                  increase
                1173 ;
086A 3C09       1174           ld       a,vlfrb
086C 07         1175           rorc     a
086D 3F09       1176           st       a,vlfrb                ; shift
                1177 ;
086F 41         1178           ld       a,£h'1
                1179 ;
```

CP/M TLCS-47 ASSEMBLER V2.2
PAGE 18

```
LOC  OBJ       LINE       SOURCE STATEMENT

0870 97                   b       rdd002                    ; to return
                     ;
                     ;;;;;;;;;;;;;;;;;;;;;;;;;;;;;;;;;;;;;;;;;;;;;;
                     ;;;;;;;;;;;;;;;;;;;;;;;;;;;;;;;;;;;;;;;;;;;;;;
                     ;
                     ;--------------------------------------------;
                     ;        Rdp      ( parity bit )              ;
                     ;--------------------------------------------;
                     ;
                     ;
0871 39CB            rdp:     testp   parity,0
0873 BC                       b       rdp000                    ; parity error
                     ;
0874 3948                     clr     vlftb,0                   ; set 'ack'
                     ;
0876 3910            rdp001:  set     spuvsh,1                  ; set to transmit m
ode
                     ;
                     ; to Tdack routine
                     ;
0878 C2                       ld      h,£h'2
0879 E6                       ld      l,£h'6                    ; to Tdack
                     ;
087A 40                       ld      a,£h'0                    ; next intr.1/2 bit
                     ;                                                           tim
e
                     ; re-warp
                     ;
087B 2A                       ret
                     ;
                     ; set 'nack'
                     ;
087C 3908            rdp000:  set     vlftb,0                   ; set 'nack'
                     ;
087E B6                       b       rdp001                    ; to return
                     ;
                     ;;;;;;;;;;;;;;;;;;;;;;;;;;;;;;;;;;;;;;;;;;;;;;
                     ;;;;;;;;;;;;;;;;;;;;;;;;;;;;;;;;;;;;;;;;;;;;;;
                     ;
                     ;--------------------------------------------;
                     ;        Tdack   out ( 'ack' or 'nack' )      ;
                     ;--------------------------------------------;
                     ;
                     ;
087F 3950            tdack:   clr     spuvsh,1                  ; to receive mode
                     ;
                     ; to Rdast routine
                     ;

ROM PAGE NO.34 *

0881 C2                       ld      h,£h'2
0882 E8                       ld      l,£h'8                    ; to Rdast
                     ;
0883 45                       ld      a,£h'5                    ; next intr.
                     ;                                            11 bit time
                     ; re-warp
```

```
LOC  OBJ        LINE        SOURCE STATEMENT

                      ;
0884 2A                          ret
                      ;
                      ;
                      ;-------------------------------------------------;
                      ;          Rdast        ( stop bit )               ;
                      ;-------------------------------------------------;
                      ;
                      ;
0885 39B9             rdast:     test     vlfrb,3
0887 6820                        b        rcstn0                  ; stop bit error
                      ;
0889 39C8                        testp    vlftb,0
088B AE                          b        rdast4
                      ;
088C 3C28             rdast6:    ld       a,readc
088E 08                          inc      a
088F 3F28                        st       a,readc
0891 3E27                        cmpr     a,readn
0893 0E                          testp    zf
0894 A4                          b        rdast3                  ; the end
                      ;
                      ; again
                      ;          1200 bit timer start
                      ;
0895 42                          ld       a,£h'2
0896 3FF6                        st       a,timrhn
0898 4C                          ld       a,£h'c
0899 3FF5                        st       a,timrmn
089B 4F                          ld       a,£h'f
089C 3FF4                        st       a,timrln
                      ;
089E 48                          ld       a,£h'8
089F 3A8C                        out      a,%op1c                 ; timer start
                      ;
08A1 3914                        set      spuvdm,1                ; 1200bit timer bit
                                                                               on
                      ;
08A3 A8                          b        rdast1
                      ;
                      ; set 'command execute bit '
                      ;
08A4 3934             rdast3:    set      spuvdm,3                ;
                      ;
08A6 3941                        clr      spuvum,0                ; clear previous co
mmand need
                      ;                                             data bit
                      ; to return
                      ;
08A8 3940             rdast1:    clr      spuvsh,0                ; to abnormal mode
                      ;
08AA 3975                        clr      spuvsl,3                ; 1'st intr. enable
                      ;
08AC 66DF                        b        r01111                  ; return
                      ;
08AE 3C16             rdast4:    ld       a,vlfec
08B0 08                          inc      a
```

```
CP/M  TLCS-47  ASSEMBLER  V2.2
                                    PAGE   20

 LOC  OBJ       LINE          SOURCE STATEMENT

 08B1 3F16      1287            st      a,vlfec
                1288 ;
 08B3 D5        1289            cmpr    a,£h'5
 08B4 BB        1290            b       rdast5
                1291 ;
 08B5 3924      1292            set     spuvdm,2                ; 10 sec bit on
 08B7 3B36      1293            set     %op06,3
 08B9 69B6      1294            b       rst004
                1295 ;
 08BB 3C28      1296 rdast5: ld         a,reade
 08BD 09        1297            dec     a
 08BE 3F28      1298            st      a,reade
                1299 ;

 ROM PAGE NO.35

 08C0 688C      1300            b       rdast6
                1301 ;
                1302 ;
                1303 ;-----------------------------------------;
                1304 ;       T0 routine                        ;
                1305 ;-----------------------------------------;
                1306 ;
                1307 ;
                1308 ; start bit ?
                1309 ;
 08C2 3BC0      1310 t0:    testp   %ip00,0
 08C4 94        1311            b       t00000                  ; not start bit
                1312 ;
 08C5 3935      1313            set     spuvsl,3                ; external intr.
                1314 ;                                             disable
 08C7 40        1315            ld      a,£h'0
 08C8 3F0C      1316            st      a,paritt                ; transmit parity
                1317 ;                                            reset
 08CA 3C06      1318            ld      a,vlftl
 08CC 3F08      1319            st      a,vlftb                 ; transmit data in
                1320 ;
 08CE 3B76      1321            clr     %op06,3                 ; out    'mark'
                1322 ;
                1323 ;
                1324 ; next intr.
                1325 ;
 08D0 C2        1326            ld      h,£h'2
 08D1 EC        1327            ld      l,£h'c                  ; to Td1 routine
                1328 ;
 08D2 40        1329            ld      a,£h'0                  ; 1/2 bit time
                1330 ;
                1331 ; re-warp
                1332 ;
 08D3 2A        1333            ret
                1334 ;
                1335 ;
                1336 ; start bit error
                1337 ;
 08D4 3914      1338 t00000: set    spuvdm,1                ; '1200 bit countin
g'
```

```
 LOC  OBJ    LINE        SOURCE STATEMENT

                  ;
 08D6 3940                clr     spuvsh,0              ; abnormal mode
                  ;
                  ; out 'space'
                  ;
 08D8 3B36                set     %op06,3               ; out 'space'
                  ;
                  ; 1200 bit timer continues
                  ;
 08DA 3C8C                ld      a,incoth
 08DC 3FF6                st      a,timrhn
 08DE 3C8B                ld      a,incotm
 08E0 3FF5                st      a,timrmn
 08E2 3C8A                ld      a,incotl
 08E4 3FF4                st      a,timrln
                  ;
 08E6 48                  ld      a,£h'8
 08E7 3A8C                out     a,%op1c               ; 1200 bit timer co
ntinues
                  ;
                  ;
                  ; return
                  ;
 08E9 66DF                b       r01111
                  ;
                  ;
                  ;-----------------------------------------;
                  ;       Td1     routine                   ;
                  ;-----------------------------------------;
                  ;
                  ;
                  ; mode change
                  ;
 08EB 3950        td1:    clr     spuvsh,1              ; receive mode
                  ;
                  ; next intr.
                  ;
 08ED C2                  ld      h,£h'2
 08EE EE                  ld      l,£h'e                ; to Trmi
                  ;
 08EF 40                  ld      a,£h'0                ; next intr.1/2 bit

                  ;                                           time
                  ;
                  ; re-warp
                  ;
 08F0 2A                  ret
                  ;
                  ;;;;;;;;;;;;;;;;;;;;;;;;;;;;;;;;;;;;;;;;;;;;;
                  ;;;;;;;;;;;;;;;;;;;;;;;;;;;;;;;;;;;;;;;;;;;;;
                  ;
                  ;-----------------------------------------;
                  ;       Trmi    routine                   ;
                  ;-----------------------------------------;
                  ;
                  ;
                  ; command ?
```

CP/M TLCS-47 ASSEMBLER V2.2
PAGE 22

```
LOC  OBJ         SOURCE STATEMENT

                 ;
08F1 39B9        trmi:   test    vlfrb,3           ; command ?
08F3 6903                b       trmi00            ; command
                 ;
                 ; next data
                 ;
08F5 3910                set     spuvsh,1          ; to transmit mode
                 ;
08F7 3C08                ld      a,vlftb
08F9 07                  rorc    a
08FA 3F08                st      a,vlftb           ; data set
                 ;
08FC 41                  ld      a,£h'1
08FD 3F0A                st      a,vlfc            ; counter set
                 ;
                 ; next intr.
                 ;
08FF C3                  ld      h,£h'3

ROM PAGE NO.36

0900 E2                  ld      l,£h'2            ; to Tdo
                 ;
0901 41                  ld      a,£1              ; next intr. 1 bit
                                                              time
                 ;
                 ; re-warp
                 ;
0902 2A          trmi01: ret
                 ;
                 ;
                 ; command received
                 ;
0903 3B36        trmi00: set     %op06,3           ; out 'space'
0905 C3                  ld      h,£h'3
0906 E0                  ld      l,£h'0            ; to Rdamymi
                 ;
0907 40                  ld      a,£h'0            ; next intr.1/2 bit
                                                              time
                 ;
                 ; re-warp
                 ;
0908 82                  b       trmi01            ; to re-warp
                 ;
                 ;;;;;;;;;;;;;;;;;;;;;;;;;;;;;;;;;;;;;;;;;;;
                 ;;;;;;;;;;;;;;;;;;;;;;;;;;;;;;;;;;;;;;;;;;;
                 ;
                 ;-----------------------------------------;
                 ;        Rdamymi routine                  ;
                 ;-----------------------------------------;
                 ;
                 ;
                 ; parity,counter clear
                 ;
0909 40          rdamy:  ld      a,£h'0
090A 3F0B                st      a,parity
090C 3F0A                st      a,vlfc            ; counter clear
```

```
  LOC  OBJ       LINE          SOURCE STATEMENT

                 1446 ;
                 1447 ; next intr.
                 1448 ;
 090E C1         1449          ld      h,£h'1
 090F E4         1450          ld      l,£h'4                  ; to Rca
                 1451 ;
 0910 40         1452          ld      a,£h'0                  ; next intr. 1/2 bi
t
                 1453 ;                                                time
                 1454 ; re-warp
                 1455 ;
 0911 2A         1456          ret
                 1457 ;
                 1458 ;;;;;;;;;;;;;;;;;;;;;;;;;;;;;;;;;;;;;;;;;;;;
                 1459 ;;;;;;;;;;;;;;;;;;;;;;;;;;;;;;;;;;;;;;;;;;;;
                 1460 ;
                 1461 ;------------------------------------------;
                 1462 ;        Tdo     routine                    ;
                 1463 ;------------------------------------------;
                 1464 ;
                 1465 ;
                 1466 ; counter ?
                 1467 ;
 0912 2E3A       1468 tdo:    cmpr    vlfc,£h'3
 0914 0E         1469          testp   zf
 0915 A3         1470          b       tdo000                  ; next data set
                 1471 ;
 0916 2E7A       1472          cmpr    vlfc,£h'7
 0918 0E         1473          testp   zf
 0919 A8         1474          b       tdo001                  ; parity set
                 1475 ;
                 1476 ; data set
                 1477 ;
 091A 3C08       1478          ld      a,vlftb
 091C 07         1479          rorc    a
 091D 3F08       1480          st      a,vlftb                 ; data set
                 1481 ;
                 1482 ; counter increase
                 1483 ;
 091F 2F1A       1484 tdo002: add     vlfc,£h'1
                 1485 ;
                 1486 ; next intr.                              no change address
                 1487 ;
 0921 41         1488          ld      a,£h'1                  ; next intr. 1 bit
time
                 1489 ;
                 1490 ;
                 1491 ; re-warp
                 1492 ;
 0922 2A         1493          ret
                 1494 ;
                 1495 ; counter equal 3
                 1496 ;
 0923 3C07       1497 tdo000: ld      a,vlfth
 0925 3F08       1498          st      a,vlftb                 ; transmit data rep
lace
                 1499 ;
 0927 9F         1500          b       tdo002                  ; to re-warp
```

```
CP/M  TLCS-47  ASSEMBLER  V2.2
                                          PAGE   24

 LOC  OBJ      LINE        SOURCE STATEMENT

                     ;
                     ; counter equal 7
                     ;
 0928 3C0C           tdo001: ld      a,paritt
 092A 3F08                   st      a,vlftb                ; parity data in
                     ;
                     ; next intr.
                     ;
 092C C3                     ld      h,£h'3
 092D E4                     ld      l,£h'4                 ; to Tp
                     ;
 092E 41                     ld      a,£h'1                 ; next intr. 1 bit
                     ;                                              time
                     ; re-warp
                     ;
 092F 2A                     ret
                     ;
                     ;;;;;;;;;;;;;;;;;;;;;;;;;;;;;;;;;;;;;;;;;;
                     ;;;;;;;;;;;;;;;;;;;;;;;;;;;;;;;;;;;;;;;;;;
                     ;
                     ;----------------------------------------;
                     ;       Tp      routine                  ;
                     ;----------------------------------------;
                     ;
                     ;
 0930 3C0D           tp:     ld      a,lcicot
 0932 3E24                   cmpr    a,spucp
 0934 BB                     b       tp0000
                     ;
                     ; lci counter equals 'spucp'
                     ;
 0935 3908                   set     vlftb,0                ; next data '1'
                     ;
                     ; to Tlci routine
                     ;
 0937 C3             tp0001: ld      h,£h'3
 0938 E6                     ld      l,£h'6                 ; to Tlci
                     ;
 0939 40                     ld      a,£h'0                 ; next intr. 1/2  b
it
                     ;                                              time
                     ; re-warp
                     ;
 093A 2A                     ret
                     ;
                     ;
                     ; lci counter not equal 'spucp'
                     ;
 093B 3948           tp0000: clr     vlftb,0                ; next data '0'
                     ;
 093D B7                     b       tp0001                 ; to return
                     ;
                     ;;;;;;;;;;;;;;;;;;;;;;;;;;;;;;;;;;;;;;;;;;
                     ;;;;;;;;;;;;;;;;;;;;;;;;;;;;;;;;;;;;;;;;;;
                     ;
                     ;----------------------------------------;
```

```
CP/M   TLCS-47   ASSEMBLER   V2.2
                                          PAGE    25

  LOC  OBJ           SOURCE STATEMENT

                ;        Tlci     routine                      ;
                ;----------------------------------------------;
                ;
                ;
  093E 3950     tlci:    clr      spuvsh,1                     ; to receive mode
                ;
                ;
                ; next  intr.
                ;

  ROM PAGE NO.37

  0940 C3                ld       h,£h'3
  0941 E8                ld       l,£h'8                       ; to Rtack
                ;
  0942 40                ld       a,£h'0                       ; next  intr.  1/2 bi
t
                ;                                                       time
                ;
                ; re-warp
                ;
  0943 2A                ret
                ;
                ;
                ;;;;;;;;;;;;;;;;;;;;;;;;;;;;;;;;;;;;;;;;;;;;;;;;
                ;;;;;;;;;;;;;;;;;;;;;;;;;;;;;;;;;;;;;;;;;;;;;;;;
                ;
                ;----------------------------------------------;
                ;        Rtack    routine                      ;
                ;----------------------------------------------;
                ;
                ;
  0944 3910     rtack:   set      spuvsh,1                     ; to transmit mode
                ;
  0946 39F9              testp    vlfrb,3                      ;
  0948 AB                b        rtack0                       ; 'nack'  from ECU
                ;
                ; 'ack'  from ECU
                ;
  0949 3BF6              testp    %ip06,3
  094B 94                b        rtack1                       ; lci counter
                ;                                                  equal 'spucp'
  094C 3948              clr      vlftb,0                      ; transmit data
                ;                                                  equal '0'
  094E 3951              clr      spuvum,1                     ; clear 'previous
                ;                                                 command requires
 an answer'
                ;
                ; next  intr.
                ;
  0950 C3       rtack2:  ld       h,£h'3
  0951 EA                ld       l,£h'a                       ; to Tst
                ;
  0952 40                ld       a,£h'0                       ; next  intr.  1/2 bi
t
                ;                                                 time
                ;
                ; re-warp
```

```
CP/M  TLCS-47  ASSEMBLER  V2.2
                                    PAGE   26

  LOC  OBJ       LINE        SOURCE STATEMENT

                 1608 ;
  0953 2A        1609           ret
                 1610 ;
  0954 3908      1611 rtack1: set       vlftb,0                ; transmit data
                 1612 ;                                          equil '1'
  0956 3914      1613           set       spuvdm,1               ; 1200 bit timer on
                 1614 ;
                 1615 ; transmit buffer replace
                 1616 ;
  0958 3C26      1617           ld        a,writeh
  095A 30        1618           xch       a,h
  095B 3C0D      1619           ld        a,lcicot
                 1620 ;
  095D 3801      1621           add       a,£h'1
                 1622 ;
  095F 05        1623           rolc      a
  0960 383E      1624           and       a,£h'e
  0962 31        1625           xch       a,l
                 1626 ;
  0963 0C        1627           ld        a,@hl
  0964 3F06      1628           st        a,vlftl
  0966 18        1629           inc       l
  0967 0C        1630           ld        a,@hl
  0968 3F07      1631           st        a,vlfth                ; key data in
                 1632 ;
  096A 90        1633           b         rtack2
                 1634 ;
                 1635 ; 'nack' from ECU
                 1636 ;
  096B 3C16      1637 rtack0: ld        a,vlfec
  096D 08        1638           inc       a
  096E 3F16      1639           st        a,vlfec                ; vlf error counter
                 1640 ;                                          increase
  0970 D5        1641           cmpr      a,£h'5
  0971 B9        1642           b         rtack3                 ; error not equal
                 1643 ;                                          5'th times
  0972 3948      1644           clr       vlftb,0                ; transmit data '0'
                 1645 ;
  0974 3954      1646           clr       spuvdm,1               ; (1200 bit timer)
bit clear
                 1647 ;
  0976 3924      1648           set       spuvdm,2               ; 10sec timer bit o
n
                 1649 ;
  0978 90        1650           b         rtack2                 ; to re-warp
                 1651 ;
                 1652 ; error not equal 5'th times
                 1653 ;
  0979 3908      1654 rtack3: set       vlftb,0                ; next data '1'
                 1655 ;
  097B 3914      1656           set       spuvdm,1               ; set '1200 bit tim
er bit '
                 1657 ;
  097D 2FFD      1658           add       lcicot,£h'f
                 1659 ;
  097F 6950      1660           b         rtack2
                 1661 ;
```

0167237





```
LOC  OBJ     LINE      SOURCE STATEMENT

ROM PAGE NO.38 *

0981 6950              b       rtack2                          ; to re-warp
                ;
                ;
                ;;;;;;;;;;;;;;;;;;;;;;;;;;;;;;;;;;;;;;;;;;;
                ;;;;;;;;;;;;;;;;;;;;;;;;;;;;;;;;;;;;;;;;;;;
                ;
                ;-----------------------------------------;
                ;       Tst     rouitne                   ;
                ;-----------------------------------------;
                ;
                ;
0983 3950       tst:   clr     spuvsh,1                        ; receive mode
                ;
0985 C3                ld      h,£h'3
0986 EC                ld      l,£h'c                          ; to Rst
                ;
0987 45                ld      a,£h'5                          ; next intr. 11 bit
                                                                  time
                ;
                ;
                ; re-warp
                ;
0988 2A                ret
                ;
                ;
                ;-----------------------------------------;
                ;       Rst     routine                   ;
                ;-----------------------------------------;
                ;
                ;
0989 39B9       rst:   test    vlfrb,3                         ;
098B AA                b       rst000                          ; stop bit cann't f
ind
                ;
098C 3BF6              testp   %ip06,3                         ;
098E AE                b       rst001                          ; out '0'
                ;
098F 3C0D              ld      a,lcicot
0991 08                inc     a
0992 3F0D              st      a,lcicot                        ; lci counter decre
ase
                ;
0994 3910              set     spuvsh,1                        ; to transmit mode
                ;
0996 3914              set     spuvdm,1                        ; '1200 bit timr.'
                ;
0998 42                ld      a,£h'2
0999 3FF6              st      a,timrhn
099B 4C                ld      a,£h'c
099C 3FF5              st      a,timrmn
099E 4F                ld      a,£h'f
099F 3FF4              st      a,timrln
                ;
09A1 48                ld      a,£h'8
09A2 3A8C              out     a,%opic
                ;
```

```
 LOC  OBJ       LINE        SOURCE STATEMENT

 09A4 3940            rst002: clr     spuvsh,0                  ; abnormal mode
                      ;
 09A6 3975                    clr     spuvsl,3                  ; external intr.ena
ble
                      ;
 09A8 66DF                    b       r01111
                      ;
 09AA 3951            rst000: clr     spuvum,1
                      ;
 09AC 6820                    b       rcstn0                    ; framing error
                      ;
                      ;
 09AE 39E4            rst001: testp   spuvdm,2                  ; '10 sec bit' on ?
 09B0 B6                      b       rst004
                      ;
                      ; 'command execute bit' on
                      ;
 09B1 3934                    set     spuvdm,3                  ;
                      ;
 09B3 3951                    clr     spuvum,1                  ; previous command
need data
                      ;                                           bit clear
 09B5 A4                      b       rst002
                      ;
 09B6 3940            rst004: clr     spuvsh,0                  ; abnormal mode
                      ;
                      ; 10 sec timer start
                      ;
 09B8 46                      ld      a,£h'6
 09B9 3FF6                    st      a,timrhn
 09BB 47                      ld      a,£h'7
 09BC 3FF5                    st      a,timrmn
 09BE 47                      ld      a,£h'7
 09BF 3FF4                    st      a,timrln
                      ;

  ROM PAGE NO.39 *

 09C1 40                      ld      a,£h'0
 09C2 3A8C                    out     a,%ople
                      ;
 09C4 49                      ld      a,£h'9
 09C5 3A8C                    out     a,%ople                   ; start
                      ;
 09C7 3954                    clr     spuvdm,1                  ; 1200 bit timer bi
t
                      ;                                           clear
 09C9 66DF                    b       r01111                    ; return
                      ;
                      ;
                      ;
                      ;;;;;;;;;;;;;;;;;;;;;;;;;;;;;;;;;;;;;;;;;;;;
                      ;;;;;;;;;;;;;;;;;;;;;;;;;;;;;;;;;;;;;;;;;;;;
                      ;
                      ;------------------------------------------;
                      ;         re-warp.  routine                ;
                      ;------------------------------------------;
                      ;
```

```
CP/M  TLCS-47  ASSEMBLER  V2.2
                                         PAGE   29

  LOC  OBJ       LINE        SOURCE STATEMENT

  ROM PAGE NO.40

  0A00           1767          org      h'a00
                 1768 ;
                 1769 ; re-warp
                 1770 ;
  0A00 D0        1771          cmpr     a,£h'0
  0A01 0E        1772          testp    zf
  0A02 9B        1773          b        rwarp0                 ; next intr.1/2 bit
                 1774 ;                                            time
  0A03 D1        1775          cmpr     a,£h'1
  0A04 0E        1776          testp    zf
  0A05 A4        1777          b        rwarp1                 ; next  intr. 1 bit
                 1778 ;                                            time
  0A06 D2        1779          cmpr     a,£h'2
  0A07 0E        1780          testp    zf
  0A08 AD        1781          b        rwarp2                 ; next intr. 6 bit
                 1782 ;                                            time
  0A09 D3        1783          cmpr     a,£h'3
  0A0A 0E        1784          testp    zf
  0A0B B7        1785          b        rwarp3                 ; next intr. 9 bit
                 1786 ;                                            time
                 1787 ;                                            time
                 1788 ; 11 bit timer
                 1789 ;
  0A0C 4F        1790          ld       a,£h'f
  0A0D 3F1B      1791          st       a,timrho
  0A0F 47        1792          ld       a,£h'7
  0A10 3F1A      1793          st       a,timrmo
  0A12 4C        1794          ld       a,£h'c
  0A13 3F19      1795          st       a,timrlo
                 1796 ;
                 1797 ; next warp
                 1798 ;
  0A15 29C4      1799 rwarp4: xch       hl,warpcl
  0A17 28C4      1800          ld       hl,warpcl
                 1801 ;
  0A19 66DF      1802          b        r01111                 ; return
                 1803 ;
                 1804 ;
                 1805 ; 1/2 bit timer
                 1806 ;
  0A1B 4F        1807 rwarp0: ld        a,£h'f
  0A1C 3F1B      1808          st       a,timrho
  0A1E 3F1A      1809          st       a,timrmo
  0A20 4A        1810          ld       a,£h'a
  0A21 3F19      1811          st       a,timrlo
                 1812 ;
  0A23 95        1813          b        rwarp4
                 1814 ;
                 1815 ; 1 bit timer
                 1816 ;
  0A24 4F        1817 rwarp1: ld        a,£h'f
  0A25 3F1B      1818          st       a,timrho
```

```
CP/M  TLCS-47  ASSEMBLER  V2.2
                                              PAGE   30

  LOC  OBJ       LINE          SOURCE STATEMENT

  0A27 3F1A      1819            st       a,timrmo
  0A29 44        1820            ld       a,£h'4
  0A2A 3F19      1821            st       a,timrlo
                 1822 ;
  0A2C 95        1823            b        rwarp4
                 1824 ;
                 1825 ;
                 1826 ; 6 bit timer
                 1827 ;
  0A2D 4F        1828 rwarp2: ld          a,£h'f
  0A2E 3F1B      1829            st       a,timrho
  0A30 4B        1830            ld       a,£h'b
  0A31 3F1A      1831            st       a,timrmo
  0A33 48        1832            ld       a,£h'8
  0A34 3F19      1833            st       a,timrlo
                 1834 ;
  0A36 95        1835            b        rwarp4
                 1836 ;
                 1837 ; 9 bit timer
                 1838 ;
  0A37 4F        1839 rwarp3: ld          a,£h'f
  0A38 3F1B      1840            st       a,timrho
  0A3A 49        1841            ld       a,£h'9
  0A3B 3F1A      1842            st       a,timrmo
  0A3D 44        1843            ld       a,£h'4
  0A3E 3F19      1844            st       a,timrlo
                 1845 ;

  ROM PAGE NO.41

  0A40 6A15      1846            b        rwarp4
                 1847 ;
                 1848            end

ASSEMBLY COMPLETE,       0 PROGRAM ERROR(S)
```

CP/M TLCS-47 ASSEMBLER V2.2
PAGE 31

SYMBOL TABLE

| | | | | | | | |
|---|---|---|---|---|---|---|---|
| COMMAD | 0013 | COMMAH | 0015 | COMMAL | 0014 | * DAAT0H | 0081 |
| * DATA0L | 0080 | * DATA1H | 0083 | * DATA1L | 0082 | * DATA2H | 0085 |
| * DATA2L | 0084 | * DATA3H | 0087 | * DATA3L | 0086 | * DATA4H | 0089 |
| * DATA4L | 0088 | * DATACT | 0200 | DCH | 00FE | DCL | 00FC |
| DCM | 00FD | * DISPA | 0032 | * DISPH | 0031 | * DISPIW | 0034 |
| * DISPL | 0030 | * DISPLW | 0033 | FRAME | 0053 | INCOTH | 008C |
| INCOTL | 008A | INCOTM | 008B | * IOVF1 | 0602 | * KEST | 0022 |
| KEST0H | 0043 | KEST0L | 0042 | * KEST1H | 0045 | * KEST1L | 0044 |
| * KEST2H | 0047 | * KEST2L | 0046 | * KEST3H | 0049 | * KEST3L | 0048 |
| * KEST4H | 004B | * KEST4L | 004A | * KEST5H | 004D | * KEST5L | 004C |
| * KESTBH | 0021 | * KESTBL | 0020 | * KEYND | 0029 | * KEYNN | 002A |
| * KEYOD | 002B | * KEYON | 002C | * KEYS | 0100 | * KEYSB | 0250 |
| * KEYSC | 000E | * KEYT | 0300 | * KEYTB | 00CB | LCICOT | 000D |
| * LDATL1 | 0037 | * LDATL2 | 0038 | * LDATM1 | 0035 | * LDATM2 | 0036 |
| * LDISP | 0B00 | * LECOTH | 008F | * LECOTL | 008D | * LECOTM | 008E |
| * LIOVF2 | 0D00 | * LMAIN | 03E0 | * LREMO | 0E00 | * LTABLE | 0000 |
| * LVLFEX | 0C00 | * OVER2A | 0072 | * OVER2H | 0071 | * OVER2L | 0070 |
| OVERA1 | 0012 | * OVERH1 | 0011 | OVERL1 | 0010 | PARITT | 000C |
| PARITY | 000B | R0 | 06B2 | R00000 | 06C2 | R00001 | 06C1 |
| R01000 | 06C9 | * R01100 | 06CE | R01110 | 06EA | R01111 | 06DF |
| RCA | 0719 | RCA000 | 0734 | RCA001 | 073A | RCA002 | 0732 |
| RCA003 | 0733 | RCF | 073E | RCF000 | 074F | RCF001 | 0754 |
| RCF002 | 074D | RCF005 | 0776 | RCF006 | 074E | RCF100 | 077C |
| RCF110 | 07B5 | RCF111 | 07CF | RCF120 | 0798 | RCF121 | 07AE |
| RCF122 | 07A9 | RCP | 07D4 | RCP000 | 07E9 | RCP003 | 07E3 |
| * RCP004 | 07E5 | RCP100 | 07E1 | * RCSTA1 | 083B | RCSTAB | 0838 |
| RCSTN | 07FA | RCSTN0 | 0820 | RCSTN1 | 0817 | * RCSTN2 | 0805 |
| RCSTN3 | 0813 | RCSTN6 | 0803 | RCSTN7 | 0831 | RDAMY | 0909 |
| RDAST | 0885 | RDAST1 | 08A8 | RDAST3 | 08A4 | RDAST4 | 08AE |
| RDAST5 | 08BB | RDAST6 | 088C | RDD | 0841 | RDD000 | 0858 |
| RDD001 | 0868 | RDD002 | 0857 | RDP | 0871 | RDP000 | 087C |
| RDP001 | 0876 | READC | 0028 | READN | 0027 | * REMD0 | 0060 |
| * REMD1 | 0061 | * REMD2 | 0062 | * REMD3 | 0063 | * REMD4 | 0064 |
| * REMD5 | 0065 | * REMD6 | 0066 | * REMD7 | 0067 | * REMOA | 006A |
| * REMOH | 0069 | * REMOL | 0068 | RKCE | 0050 | RMI | 06FC |
| RMI000 | 070F | RMI001 | 0709 | RMI002 | 070E | RMI003 | 0715 |
| * RNH | 006B | * RNL | 006D | * RNM | 006C | RST | 0989 |
| RST000 | 09AA | RST001 | 09AE | RST002 | 09A4 | RST004 | 09B6 |
| RSTD | 0834 | RTACK | 0944 | RTACK0 | 096B | RTACK1 | 0954 |
| RTACK2 | 0950 | RTACK3 | 0979 | RWARP0 | 0A1B | RWARP1 | 0A24 |
| RWARP2 | 0A2D | RWARP3 | 0A37 | RWARP4 | 0A15 | * RWRPCH | 00CA |
| * RWRPCL | 00C8 | * RWRPCM | 00C9 | SERVRC | 000F | SPUCP | 0024 |
| SPUFF | 0017 | SPUSH | 0003 | SPUSK | 0023 | SPUSL | 0002 |
| SPUTT | 0018 | SPUVDM | 0004 | SPUVSH | 0000 | SPUVSL | 0005 |
| SPUVUM | 0001 | SPW | 00FF | SPWB | 00C7 | T0 | 08C2 |
| T00000 | 08D4 | TD1 | 08EB | TDACK | 087F | TDO | 0912 |
| TDO000 | 0923 | TDO001 | 0928 | TDO002 | 091F | * TIMR2H | 00FA |
| * TIMR2L | 00F8 | * TIMR2M | 00F9 | TIMRHN | 00F6 | TIMRHO | 001B |
| TIMRLN | 00F4 | TIMRLO | 0019 | TIMRMN | 00F5 | TIMRMO | 001A |
| TLCI | 093E | TP | 0930 | TP0000 | 093B | TP0001 | 0937 |
| TRA | 07EE | TRA000 | 07F7 | TRA001 | 07F5 | TRMI | 08F1 |
| TRMI00 | 0903 | TRMI01 | 0902 | TST | 0983 | VL0040 | 06A3 |
| VL0050 | 0698 | VL0060 | 0689 | VLF001 | 0635 | VLF002 | 0647 |
| VLF003 | 0654 | VLF004 | 066E | VLF005 | 0640 | VLF010 | 0623 |

```
CP/M  TLCS-47  ASSEMBLER  V2.2
                                        PAGE   32

                          SYMBOL TABLE

  VLF011  062B    VLF100  061E    VLF200  062D    VLF300  06AD
  VLFC    000A    VLFEC   0016    VLFRB   0009    VLFTB   0008
  VLFTH   0007    VLFTL   0006  * VLFXA   0052  * VLFXH   0051
* VLFXL   0050    WARPCL  00C4  * WARPCM  00C5    WRITEH  0026
  WRITEN  0025

DEFINED    233 USER SYMBOL(S)
```

```
CP/M  TLCS-47  ASSEMBLER  V2.2
                                        PAGE    1

 LOC  OBJ       LINE        SOURCE STATEMENT

                  1 ;-----------------------------------------------------;
                  2 ;                                            7.1983.  ;
                  3 ;         lvlfex.asm      V1.0                        ;
                  4 ;                                 (TMP4740P)          ;
                  5 ;                                                     ;
                  6 ;               vlf communication   routine           ;
                  7 ;                                                     ;
                  8 ;                                                     ;
                  9 ;-----------------------------------------------------;


                $nolist

                $list


                303 ;
                304 ;
                305 ;

 ROM PAGE NO.48

 0C00           306         org     h'c00
                307 ;
                308 ; disable ?
                309 ;
 0C00 39F5      310 vlfex:  testp   spuvsl,3
 0C02 6C42      311         b       vlfx00                  ; 1'st intr. disabl
e
                312 ;
                313 ; push register
                314 ;
 0C04 3F52      315         st      a,vlfxa
 0C06 2950      316         xch     hl,vlfxl                ; push register
                317 ;
                318 ; clear external counter
                319 ;
 0C08 40        320         ld      a,£h'0
 0C09 3A8C      321         out     a,%oplc
 0C0B 3B04      322         set     %op04,0
 0C0D 3B44      323         clr     %op04,0                 ; event timer start
                324 ;
                325 ; timer start
                326 ;
 0C0F 3CF6      327         ld      a,timrhn
 0C11 3F8C      328         st      a,incoth
 0C13 3CF5      329         ld      a,timrmn
 0C15 3F8B      330         st      a,incotm
 0C17 3CF4      331         ld      a,timrln
 0C19 3F8A      332         st      a,incotl
                333 ;
 0C1B 4F        334         ld      a,£h'f
 0C1C 3FF6      335         st      a,timrhn
 0C1E 3FF5      336         st      a,timrmn
```

```
CP/M  TLCS-47  ASSEMBLER  V2.2
                                        PAGE    2

 LOC  OBJ        LINE         SOURCE STATEMENT

 0C20 4A          337          ld       a,£h'a
 0C21 3FF4        338          st       a,timrln
 0C23 44          339          ld       a,£h'4
 0C24 3A8C        340          out      a,%opic                    ; timer start
                  341 ;                                               ( 1/2 bit time )
                  342 ; framing error ?
                  343 ;
 0C26 39F1        344          testp    spuvum,3
 0C28 6C43        345          b        vlfx01                     ; framing error
                  346 ;
                  347 ; mode change from abnormal to normal
                  348 ;
 0C2A 3900        349          set      spuvsh,0                   ; to normal mode
                  350 ;
                  351 ; transmit ?
                  352 ;
 0C2C 39D0        353          testp    spuvsh,1
 0C2E 6C57        354          b        vlfx02                     ; transmit mode
                  355 ;
                  356 ; next routine
                  357 ;
 0C30 40          358          ld       a,£h'0
 0C31 3FC4        359          st       a,warpcl
 0C33 41          360          ld       a,£h'1
 0C34 3FC5        361          st       a,warpcm                   ; address h'010
                  362 ;
                  363 ; next timer setting
                  364 ;
 0C36 4F          365          ld       a,£h'f
 0C37 3F1B        366          st       a,timrho
 0C39 3F1A        367          st       a,timrmo
 0C3B 44          368          ld       a,£h'4
 0C3C 3F19        369          st       a,timrlo
                  370 ;
                  371 ; pop register
                  372 ;
 0C3E 3C52        373 vlfx03: ld       a,vlfxa

 ROM PAGE NO.49

 0C40 2950        374          xch      hl,vlfxl
                  375 ;
                  376 ; return
                  377 ;
 0C42 2B          378 vlfx00: reti
                  379 ;
                  380 ;
                  381 ; framing error
                  382 ;
 0C43 00          383 vlfx01: nop
 0C44 4F          384          ld       a,£h'f
 0C45 3F18        385          st       a,sputt
                  386 ;
                  387 ;        ld       a,£h'f
                  388 ;        st       a,timrhn
```

```
CP/M  TLCS-47  ASSEMBLER  V2.2
                                      PAGE    3

 LOC  OBJ       LINE        SOURCE STATEMENT

                389 ;       ld      a,£h'7
                390 ;       st      a,timrmn
                391 ;       ld      a,£h'c
                392 ;       st      a,timrln
                393 ;
                394 ;       ld      a,£h'4
                395 ;       out     a,%op1c                    ; timer start 11 bi
t
                396 ;                                            time
 0C47 3C8C      397         ld      a,incoth
 0C49 3F1B      398         st      a,timrho
 0C4B 3C8B      399         ld      a,incotm
 0C4D 3F1A      400         st      a,timrmo
 0C4F 3C8A      401         ld      a,incotl
 0C51 3F19      402         st      a,timrlo
                403 ;
 0C53 3B36      404         set     %op06,3
                405 ;
 0C55 6C3E      406         b       vlfx03
                407 ;
                408 ;
                409 ; transmit mode
                410 ;
 0C57 3B76      411 vlfx02: clr     %op06,3                    ; out 'mark'
                412 ;
 0C59 3C06      413         ld      a,vlftl
 0C5B 3F08      414         st      a,vlftb                    ; transmit buffer
                                                                  clear
                415 ;
 0C5D 4F        416         ld      a,£h'f
 0C5E 3F1B      417         st      a,timrho
 0C60 3F1A      418         st      a,timrmo
 0C62 4A        419         ld      a,£h'a
 0C63 3F19      420         st      a,timrlo                   ; timer set
                421 ;
 0C65 42        422         ld      a,£h'2
 0C66 3FC5      423         st      a,warpcm
 0C68 4A        424         ld      a,£h'a
 0C69 3FC4      425         st      a,warpcl                   ; next routin
                426 ;
 0C6B 6C3E      427         b       vlfx03                     ; to return
                428 ;
                429 ;
                430         end

 ASSEMBLY COMPLETE,       0 PROGRAM ERROR(S)
```

CP/M TLCS-47 ASSEMBLER V2.2
PAGE 4

SYMBOL TABLE

| | | | | | | | | | | | |
|---|---|---|---|---|---|---|---|---|---|---|---|
| * | COMMAD | 0013 | * | COMMAH | 0015 | * | COMMAL | 0014 | * | DATA0H | 0081 |
| * | DATA0L | 0080 | * | DATA1H | 0083 | * | DATA1L | 0082 | * | DATA2H | 0085 |
| * | DATA2L | 0084 | * | DATA3H | 0087 | * | DATA3L | 0086 | * | DATA4H | 0089 |
| * | DATA4L | 0088 | * | DATACT | 0200 | * | DCH | 00FE | * | DCL | 00FC |
| * | DCM | 00FD | * | DISPA | 0032 | * | DISPH | 0031 | * | DISPIW | 0034 |
| * | DISPL | 0030 | * | DISPLW | 0033 | * | FLASH | 0350 | | INCOTH | 008C |
| | INCOTL | 008A | | INCOTM | 008B | * | KEST | 0022 | * | KEST0H | 0043 |
| * | KEST0L | 0042 | * | KEST1H | 0045 | * | KEST1L | 0044 | * | KEST2H | 0047 |
| * | KEST2L | 0046 | * | KEST3H | 0049 | * | KEST3L | 0048 | * | KEST4H | 004B |
| * | KEST4L | 004A | * | KEST5H | 004D | * | KEST5L | 004C | * | KESTBH | 0021 |
| * | KESTBL | 0020 | * | KEYND | 0029 | * | KEYNN | 002A | * | KEYOD | 002B |
| * | KEYON | 002C | * | KEYS | 0100 | * | KEYSB | 0250 | * | KEYSC | 000E |
| * | KEYT | 0300 | * | KEYTB | 00CB | * | LCICOT | 000D | * | LDASL1 | 003B |
| * | LDASL2 | 003C | * | LDASM1 | 0039 | * | LDASM2 | 003A | * | LDATL1 | 0037 |
| * | LDATL2 | 0038 | * | LDATM1 | 0035 | * | LDATM2 | 0036 | * | LDISP | 0B00 |
| * | LECOTH | 008F | * | LECOTL | 008D | * | LECOTM | 008E | * | LEDD | 0310 |
| * | LIOVF1 | 0600 | * | LIOVF2 | 0D00 | * | LMAIN | 03E0 | * | LREMO | 0E00 |
| * | LTABLE | 0000 | * | LVLFEX | 0C00 | * | OVER2A | 0072 | * | OVER2H | 0071 |
| * | OVER2L | 0070 | * | OVERA1 | 0012 | * | OVERH1 | 0011 | * | OVERL1 | 0010 |
| * | PARITT | 000C | * | PARITY | 000B | * | READC | 0028 | * | READN | 0027 |
| * | REMD0 | 0060 | * | REMD1 | 0061 | * | REMD2 | 0062 | * | REMD3 | 0063 |
| * | REMD4 | 0064 | * | REMD5 | 0065 | * | REMD6 | 0066 | * | REMD7 | 0067 |
| * | REMOA | 006A | * | REMOH | 0069 | * | REMOL | 0068 | * | RKCE | 0050 |
| * | RNH | 006B | * | RNL | 006D | * | RNM | 006C | * | RWRPCH | 00CA |
| * | RWRPCL | 00C8 | * | RWRPCM | 00C9 | * | SERVRC | 000F | * | SPUCP | 0024 |
| * | SPUSH | 0003 | * | SPUSK | 0023 | * | SPUSL | 0002 | | SPUTT | 0018 |
| * | SPUVDM | 0004 | | SPUVSH | 0000 | | SPUVSL | 0005 | | SPUVUM | 0001 |
| * | SPW | 00FF | * | SPWB | 00C7 | * | TIMR2H | 00FA | * | TIMR2L | 00F8 |
| * | TIMR2M | 00F9 | | TIMRHN | 00F6 | | TIMRHO | 001B | | TIMRLN | 00F4 |
| | TIMRLO | 0019 | | TIMRMN | 00F5 | | TIMRMO | 001A | * | VLFC | 000A |
| * | VLFEC | 0016 | * | VLFEX | 0C00 | * | VLFRB | 0009 | | VLFTB | 0008 |
| * | VLFTH | 0007 | | VLFTL | 0006 | | VLFX00 | 0C42 | | VLFX01 | 0C43 |
| | VLFX02 | 0C57 | | VLFX03 | 0C3E | | VLFXA | 0052 | * | VLFXH | 0051 |
| | VLFXL | 0050 | | WARPCL | 00C4 | | WARPCM | 00C5 | * | WRITEH | 0026 |
| * | WRITEN | 0025 | | | | | | | | | |

DEFINED 137 USER SYMBOL(S)

```
CP/M  TLCS-47  ASSEMBLER  V2.2
                                        PAGE     1

 LOC  OBJ       LINE         SOURCE STATEMENT

                  1 ;---------------------------------------------------------;
                  2 ;                                                  7.1983. ;
                  3 ;        lremo.asm        V1.0                            ;
                  4 ;                                 (TMP4740P)              ;
                  5 ;                                                         ;
                  6 ;                remote.      routine                      ;
                  7 ;                                                         ;
                  8 ;                                                         ;
                  9 ;---------------------------------------------------------;

                   $nolist

                   $list

                258 ;

 ROM PAGE NO.56

 0E00           259         org     h'e00
                260 ;
                261 ;
                262   ;;;;  r escape
                263 ;
 0E00 3F6A      264         st      a,remoa
 0E02 44        265         ld      a,£10100b
 0E03 13        266         xch     a,eir
 0E04 366F      267         eiclr   il,101111b
 0E06 2968      268         xch     hl,remol
                269 ;
                270 ;;;;    to stop timer2
                271 ;
 0E08 40        272         ld      a,£0
 0E09 3A8D      273         out     a,%op1d
                274 ;;;;    check N1
                275 ;
 0E0B 3C6B      276         ld      a,rnh
 0E0D D3        277         cmpr    a,£h'3
 0E0E 0E        278         testp   zf
 0E0F 6E5C      279         b       int100
                280 ;
 0E11 D2        281         cmpr    a,£2
 0E12 0E        282         testp   zf
 0E13 A4        283         b       int200
                284 ;
                285 ;;;     N1=1 or 0
 0E14 41        286         ld      a,£1
 0E15 3F6B      287         st      a,rnh          ;
                288 ;
                289 ;;      setting timer2 on 4.5ms
                290 ;
 0E17 4F        291         ld      a,£h'f
```

```
CP/M  TLCS-47  ASSEMBLER  V2.2
                                   PAGE    2

 LOC  OBJ       LINE        SOURCE STATEMENT

 0E18 3FFA       292          st       a,timr2h
 0E1A 4E         293          ld       a,£h'e
 0E1B 3FF9       294          st       a,timr2m
 0E1D 3FF8       295          st       a,timr2l
                 296 ;
 0E1F 48         297          ld       a,£8
 0E20 3A8D       298          out      a,%op1d
 0E22 6EE7       299          b        ret2
                 300 ;
                 301 ;;;      N1=2
                 302 ;
 0E24 3CF8       303 int200:  ld       a,timr2l          ; timer check
 0E26 3802       304          add      a,£h'2
 0E28 05         305          rolc     a
 0E29 04         306          testp    cf                ;
 0E2A BE         307          b        int210            ;jump on carry '1'
                 308 ;
                 309 ;;       setting timer2
                 310 ;
 0E2B 3B06       311 in2000:  set      %op06,0
                 312 ;
 0E2D 4E         313          ld       a,£h'e
 0E2E 3FFA       314          st       a,timr2h
 0E30 47         315          ld       a,£h'7
 0E31 3FF9       316          st       a,timr2m
 0E33 4C         317          ld       a,£h'c
 0E34 3FF8       318          st       a,timr2l
                 319 ;
 0E36 48         320          ld       a,£8
 0E37 3A8D       321          out      a,%op1d           ;start
                 322 ;
 0E39 40         323          ld       a,£0
 0E3A 3F6B       324          st       a,rnh             ;N1=0
                 325 ;
 0E3C 6EE7       326          b        ret2
                 327 ;
                 328 ;;       start data receive
                 329 ;
 0E3E 3CF9       330 int210:  ld       a,timr2m

 ROM PAGE NO.57

 0E40 DF         331          cmpr     a,£h'f
 0E41 6E2B       332          b        in2000
                 333 ;
 0E43 43         334          ld       a,£3
 0E44 3F6B       335          st       a,rnh             ;N1=3
                 336 ;
                 337 ;        ram clear
                 338 ;
 0E46 C6         339          ld       h,£6
 0E47 E0         340          ld       l,£0
                 341 ;
 0E48 11         342          mov      l,a
                 343 ;
```

CP/M TLCS-47 ASSEMBLER V2.2
PAGE 3

```
LOC  OBJ     LINE      SOURCE STATEMENT

0E49 0F         int211: st      a,@hl
0E4A 18                 inc     l
0E4B 3898               cmpr    l,£8
0E4D 0E                 testp   zf
0E4E 90                 b.      int212
0E4F 89                 b       int211
                ;
                ;       setting timer2
                ;
0E50 3FF8       int212: st      a,timr21
0E52 4F                 ld      a,£h'f
0E53 3FF9               st      a,timr2m
0E55 3FFA               st      a,timr2h
                ;
0E57 48                 ld      a,£8
0E58 3A8D               out     a,%op1d
                ;
0E5A 6EE7               b       ret2
                ;
                ;;;     data receive
                ;               N1=3
0E5C 3C6C       int100: ld      a,rnm
0E5E 31                 xch     a,l     ;l<--- N2
                ;
0E5F C6                 ld      h,£6
                ;
0E60 3CF8               ld      a,timr21
                ;
0E62 3809               add     a,£9
                ;
0E64 6E87               b       int130  ;carry '0'
                ;
0E66 3C6D       int110: ld      a,rnl   ;a<000 N3
0E68 D0                 cmpr    a,£0    ;N3=0 ?
0E69 0E                 testp   zf
0E6A B8                 b       int121
                ;
0E6B D1                 cmpr    a,£1    ;N3=1 ?
0E6C 0E                 testp   zf
0E6D BE                 b       int122
                ;
0E6E D2                 cmpr    a,£2    ;N3=2 ?
0E6F 0E                 testp   zf
0E70 6E83               b       int123
                ;
                ;       N3=3 I J"12
0E72 0C                 ld      a,@hl
0E73 3821               or      a,£1
0E75 0F                 st      a,@hl
0E76 6E87               b       int130
                ;
0E78 0C         int121: ld      a,@hl
0E79 3828               or      a,£8
0E7B 0F                 st      a,@hl
0E7C 6E87               b       int130
```

```
CP/M  TLCS-47  ASSEMBLER  V2.2
                                        PAGE    4

 LOC  OBJ       LINE        SOURCE STATEMENT

                     ;
 0E7E 0C             int122: ld      a,@hl
 0E7F 3824                   or      a,£4

 ROM PAGE NO.58 *

 0E81 0F                     st      a,@hl
 0E82 87                     b       int130
                     ;
 0E83 0C             int123: ld      a,@hl
 0E84 3822                   or      a,£2
 0E86 0F                     st      a,@hl
                     ;
 0E87 3C6D           int130: ld      a,rnl
 0E89 3801                   add     a,£1
 0E8B 3F6D                   st      a,rnl
                     ;
 0E8D D4                     cmpr    a,£4
 0E8E 9B                     b       int140          ;jump on N3(4
                     ;
 0E8F 40                     ld      a,£0
 0E90 3F6D                   st      a,rnl           ; N3(—— 0
                     ;
 0E92 3C6C                   ld      a,rnm
 0E94 3801                   add     a,£1            ;a(—— N2+1
 0E96 3F6C                   st      a,rnm
                     ;
 0E98 D8                     cmpr    a,£8
 0E99 0E                     testp   zf
 0E9A A8                     b       int150          ;jump N2=8
                     ;
                     ;       setting timer2.
                     ;
 0E9B 4F             int140: ld      a,£h'f
 0E9C 3FFA                   st      a,timr2h
 0E9E 3FF9                   st      a,timr2m
 0EA0 40                     ld      a,£0
 0EA1 3FF8                   st      a,timr2l
                     ;
 0EA3 48                     ld      a,£8
 0EA4 3A8D                   out     a,%opld
 0EA6 6EE7                   b       ret2
                     ;
                     ;;;     data check & convert
                     ;;      check code was complete or not
                     ;
 0EA8 E0             int150: ld      l,£0
 0EA9 0C                     ld      a,@hl
                     ;
 0EAA D1                     cmpr    a,£1
 0EAB 6EE0                   b       int160
                     ;
 0EAD E3                     ld      l,£3
                     ;
 0EAE 0C                     ld      a,@hl
```

```
CP/M  TLCS-47  ASSEMBLER  V2.2
                                    PAGE    5

 LOC  OBJ       LINE        SOURCE STATEMENT

                     ;
 0EAF DD                      cmpr     a,£h'd
 0EB0 6EE0                    b        int160           ;received data was error
                     ;
                     ;        check data was complete or not
                     ;
 0EB2 4F                      ld       a,£h'f
                     ;
 0EB3 E7                      ld       1,£7
                     ;
 0EB4 1F                      xor      a,@hl
                     ;
 0EB5 E5                      ld       1,£5
                     ;
 0EB6 16                      cmpr     a,@hl
 0EB7 6EE0                    b        int160           ;data was not complete
                     ;
                     ;        data convert
                     ;
 0EB9 0C                      ld       a,@hl
                     ;
 0EBA D0                      cmpr     a,£0
 0EBB 0E                      testp    zf
 0EBC 6EC2                    b        int171   ;
                     ;
 0EBE 4C                      ld       a,£h'c
 0EBF 3FFD                    st       a,dcm            ;data counter setting

 ROM PAGE NO.59 *

 0EC1 85                      b        int172
                     ;
 0EC2 4D             int171:  ld       a,£h'd
 0EC3 3FFD                    st       a,dcm            ;data countersetting
                     ;
 0EC5 19             int172:  dec      1        ;1<--- £4
                     ;
 0EC6 0C                      ld       a,@hl
                     ;
 0EC7 3FFC                    st       a,dcl            ;data counter setting
                     ;
 0EC9 4F                      ld       a,£h'f
 0ECA 3FFE                    st       a,dch            ; data counter setting
                     ;
                     ;;
 0ECC 33                      ldl      a,@dc
 0ECD 31                      xch      a,1
                     ;
 0ECE 32                      ldh      a,@dc+
 0ECF 30                      xch      a,h
                     ;
 0ED0 2250                    call     keysb
                     ;
 0ED2 3930                    set      spuvsh,3         ; remote flag on
                     ;
```

```
LOC   OBJ      LINE        SOURCE STATEMENT

                503 ;       setting timer2
0ED4 4F         504         ld      a,£h'f
0ED5 3FFA       505         st      a,h'fa
0ED7 43         506         ld      a,£h'3
0ED8 3FF9       507         st      a,h'f9
0EDA 40         508         ld      a,£h'0
0EDB 3FF8       509         st      a,h'f8
                510 ;
0EDD 48         511         ld      a,£8
0EDE 3A8D       512         out     a,%op1d ;
                513 ;
                514 ;;      N(--0
                515 ;
0EE0 40         516 int160: ld      a,£0
0EE1 3F6B       517         st      a,rnh
0EE3 3F6C       518         st      a,rnm
0EE5 3F6D       519         st      a,rnl
                520 ;
                521 ;;;     return routine
                522 ;
0EE7 2968       523 ret2:   xch     hl,remol
0EE9 47         524         ld      a,£0111b
0EEA 36AF       525         diclr   il,101111b
0EEC 13         526         xch     a,eir
0EED 3C6A       527         ld      a,remoa
                528 ;;
0EEF 3B46       529         clr     %op06,0
                530 ;
0EF1 2B         531         reti
                532 ;;
                533 ;
                534 ;
                535 ;
                536         end

ASSEMBLY COMPLETE,      0 PROGRAM ERROR(S)
```

CP/M TLCS-47 ASSEMBLER V2.2
PAGE 7

SYMBOL TABLE

```
* COMMAD  0013   * COMMFC  0015   * COMMGR  0014   * DATACT  0200
  DCH     00FE     DCL     00FC     DCM     00FD   * DISPA   0032
* DISPH   0031   * DISPIW  0034   * DISPL   0030   * DISPLW  0033
  IN2000  0E2B   * INCOTH  003B   * INCOTL  0039   * INCOTM  003A
  INT100  0E5C   * INT110  0E66     INT121  0E78     INT122  0E7E
  INT123  0E83     INT130  0E87     INT140  0E9B     INT150  0EA8
  INT160  0EE0     INT171  0EC2     INT172  0EC5     INT200  0E24
  INT210  0E3E     INT211  0E49     INT212  0E50   * KEST    0043
* KEST0H  0023   * KEST0L  0022   * KEST1H  0025   * KEST1L  0024
* KEST2H  0027   * KEST2L  0026   * KEST3H  0029   * KEST3L  0028
* KEST4H  002B   * KEST4L  002A   * KESTBH  0041   * KESTBL  0040
* KEYND   002C   * KEYNN   002D   * KEYOD   002E   * KEYON   002F
* KEYS    0100     KEYSB   0250   * KEYSC   000E   * KEYTB   00CB
* LCICOT  000D   * LDATL1  0037   * LDATL2  0038   * LDATM1  0035
* LDATM2  0036   * LDISP   0B00   * LECOTH  003E   * LECOTL  003C
* LECOTM  003D   * LIOVF1  0600   * LIOVF2  0D00   * LMAIN   03E0
* LTABLE  0000   * LVLFEX  0C00   * OVERA1  0012   * OVERH1  0011
* OVERL1  0010   * PARITT  000C   * PARITY  000B   * REMD0   0060
* REMD1   0061   * REMD2   0062   * REMD3   0063   * REMD4   0064
* REMD5   0065   * REMD6   0066   * REMD7   0067     REMDA   006A
* REMOH   0069     REMOL   0068     RET2    0EE7   * RKCE    0050
  RNH     006B     RNL     006D     RNM     006C   * RWRPCH  00CA
* RWRPCL  00C8   * RWRPCM  00C9   * SERVRC  000F   * SPUCP   0021
* SPUSH   0003   * SPUSK   0020   * SPUSL   0002   * SPUVDM  0004
  SPUVSH  0000   * SPUVSL  0005   * SPUVUM  0001   * SPW     00FF
* SPWB    00C7     TIMR2H  00FA     TIMR2L  00F8     TIMR2M  00F9
* TIMRHN  00F6   * TIMRHO  001B   * TIMRLN  00F4   * TIMRLO  0019
* TIMRMN  00F5   * TIMRMO  001A   * VDATAH  0018   * VDATAL  0017
* VLFC    000A   * VLFEC   0016   * VLFRB   0009   * VLFTB   0008
* VLFTH   0007   * VLFTL   0006   * VLFXA   0052   * VLFXH   0051
* VLFXL   0050   * WARPCL  00C4   * WARPCM  00C5
```

DEFINED 123 USER SYMBOL(S)

```
CP/M  TLCS-47  ASSEMBLER  V2.2
                                             PAGE    1

  LOC  OBJ       LINE        SOURCE STATEMENT

                    1 ;-------------------------------------------------------;
                    2 ;                                               7.1983. ;
                    3 ;       subroutine        V1.0                          ;
                    4 ;                                 (TMP4740P)            ;
                    5 ;                                                       ;
                    6 ;                                                       ;
                    7 ;                                                       ;
                    8 ;-------------------------------------------------------;

                      $nolist

                      $list

                  289 ;

  ROM PAGE NO.  1

  0050            290          org      h'050
                  291 ;
  0050 3C17       292 rkce:    ld       a,spuff
  0052 DF         293          cmpr     a,£h'f
  0053 98         294          b        rkce5
                  295 ;
  0054 40         296          ld       a,£h'0
  0055 3F17       297          st       a,spuff
  0057 AB         298          b        rkce4                  ; to return
                  299 ;
  0058 3C23       300 rkce5:   ld       a,spusk
  005A 3E24       301          cmpr     a,spucp
  005C AC         302          b        rkce0                  ; branch on
                  303 ;                                          spusk<>spucp
  005D 394F       304          clr      servrc,0               ; clear service req
uest
                  305 ;
  005F 3942       306          clr      spusl,0                ; new character ava
ilable
                  307 ;
  0061 4F         308          ld       a,£h'f
  0062 3F42       309          st       a,kest0l               ;
  0064 3F43       310          st       a,kest0h               ; no keystroke
                  311 ;
                  312 ; spusk,spucp clear
                  313 ;
  0066 40         314          ld       a,£h'0
  0067 3F23       315          st       a,spusk
  0069 3F24       316          st       a,spucp
                  317 ;
                  318 ; return
                  319 ;
  006B 2A         320 rkce4:   ret
                  321 ;
                  322 ;
                  323 ; buffer
```

```
CP/M  TLCS-47  ASSEMBLER  V2.2
                                        PAGE    2

  LOC  OBJ       LINE        SOURCE STATEMENT

                      ;
  006C 3C24           rkce0:  ld      a,spucp
  006E 08                     inc     a
  006F 3F0E                   st      a,keysc
                      ;
  0071 3C0E           rkce1:  ld      a,keysc
  0073 05                     rolc    a
  0074 383E                   and     a,£1110b
                      ;
  0076 31                     xch     a,l
  0077 C4                     ld      h,£h'4
                      ;
  0078 0C             rkce2:  ld      a,@hl
                      ;
  0079 388E                   add     l,£h'e                      ; l<-- l-2
                      ;
  007B 0F                     st      a,@hl
                      ;
  007C 3883                   add     l,£h'3                      ; l<-- l+3
                      ;
  007E 0C                     ld      a,@hl
                      ;
  007F 388E           rkce3:  add     l,£h'e                      ; l<-- l-2
                      ;

  ROM PAGE NO. 2 *

  0081 0F                     st      a,@hl
                      ;
  0082 3883                   add     l,£h'3
                      ;
  0084 389C                   cmpr    l,£h'c                      ; buffer bottom ?
  0086 6078                   b       rkce2
                      ;
  0088 2FFE                   add     keysc,£h'f                  ; keysc<-- keysc-1
                      ;
  008A 2E1E                   cmpr    keysc,£h'1
  008C 6071                   b       rkce1
                      ;
                      ; spusk<-- ( spusk-spucp )
                      ;
  008E 04                     testp   cf                          ; cf <-- 1
                      ;
  008F C2                     ld      h,£h'2
  0090 E3                     ld      l,£h'3                      ; spusk = m( hl )
                      ;
  0091 3C24                   ld      a,spucp
                      ;
  0093 14                     subrc   a,@hl                       ; spusk-spucp
                      ;
  0094 0F                     st      a,@hl                       ;
                      ;
  0095 40                     ld      a,£h'0
  0096 3F24                   st      a,spucp                     ; spucp <-- 0
                      ;
```

```
CP/M  TLCS-47  ASSEMBLER  V2.2
                                         PAGE    3

 LOC  OBJ      LINE        SOURCE STATEMENT

 0098 606B                  b         rkce4                 ; to return
              ;
              ;
              ;

 ROM PAGE NO. 4

 0100                       org       h'100
              ;
 0100 4F           keys:    ld        a,£h'f
 0101 3F0E                  st        a,keysc
 0103 3F29                  st        a,keynd
              ;
 0105 E0                    ld        l,£h'0
 0106 4E                    ld        a,£h'e
              ;
 0107 3AA5         key001:  out       a,%op05         ;
              ;
 0109 2300                  call      keyt            ; timer
              ;
 010B 30                    xch       a,h
              ;
 010C 3A27                  in        %ip07,a         ;
              ;
 010E DF                    cmpr      a,£h'f          ;
 010F 0E                    testp     zf              ;
 0110 98                    b         key002          ;
              ;
 0111 18                    inc       l
 0112 3F29                  st        a,keynd         ;
 0114 3C0E                  ld        a,keysc         ;
 0116 3F2A                  st        a,keynn         ;
              ;
 0118 2F1E         key002:  add       keysc,£1        ;
 011A 2E3E                  cmpr      keysc,£h'3      ;
 011C B2                    b         key003          ;
              ;
 011D 2CF5                  out       £h'f,%op05      ;
 011F 3B74                  clr       %op04,3         ;
              ;
 0121 2300                  call      keyt
              ;
 0123 3A27                  in        %ip07,a         ;
 0125 3B34                  set       %op04,3         ;
              ;
 0127 DF                    cmpr      a,£h'f          ;
 0128 0E                    testp     zf              ;
 0129 B6                    b         key004          ;
              ;
 012A 18                    inc       l
 012B 3F29                  st        a,keynd
 012D 3C0E                  ld        a,keysc
 012F 3F2A                  st        a,keynn
 0131 B6                    b         key004
              ;
```

```
CP/M  TLCS-47  ASSEMBLER  V2.2
                                    PAGE    4

 LOC  OBJ        LINE         SOURCE STATEMENT

 0132 30          428 key003: xch     a,h
 0133 05          429         rolc    a
 0134 87          430         b       key001
 0135 87          431         b       key001
                  432 ;
 0136 30          433 key004: xch     a,h
 0137 3C29        434         ld      a,keynd
                  435 ;
 0139 DF          436         cmpr    a,£h'f
 013A 0E          437         testp   zf                    ;
 013B 617D        438         b       key005                ; key released
                  439 ;
 013D 3891        440         cmpr    1,£h'1                ;
 013F 0E          441         testp   zf                    ;

 ROM PAGE NO. 5

 0140 82          442         b       key020                ;
 0141 B3          443         b       key006                ;
                  444 ;
 0142 3C29        445 key020: ld      a,keynd
                  446 ;
 0144 DE          447         cmpr    a,£h'e
 0145 0E          448         testp   zf
 0146 91          449         b       key021
                  450 ;
 0147 DD          451         cmpr    a,£h'd
 0148 0E          452         testp   zf
 0149 91          453         b       key021
                  454 ;
 014A DB          455         cmpr    a,£h'b
 014B 0E          456         testp   zf
 014C 91          457         b       key021
                  458 ;
 014D D7          459         cmpr    a,£h'7
 014E 0E          460         testp   zf
 014F 91          461         b       key021
 0150 B3          462         b       key006
                  463 ;
 0151 3C2B        464 key021: ld      a,keyod
 0153 3E29        465         cmpr    a,keynd
 0155 A8          466         b       key007
                  467 ;
 0156 3C2C        468         ld      a,keyon
 0158 3E2A        469         cmpr    a,keynn
 015A A8          470         b       key007
                  471 ;
 015B 39E0        472         testp   spuvsh,2
 015D B8          473         b       key022
                  474 ;
                  475 ;
 015E 3985        476 key030: test    spuvsl,0              ;
 0160 B2          477         b       key010                ;
                  478 ;
                  479 ;
```

0167237





```
LOC  OBJ        LINE         SOURCE STATEMENT

0161 2200        480            call     datact
                 481 ;
0163 2250        482            call     keysb
                 483 ;
                 484 ;
0165 3945        485            clr      spuvsl,0           ;
0167 AA          486            b        key008             ;
                 487 ;
0168 3905        488 key007:    set      spuvsl,0           ;
                 489 ;
016A 3C29        490 key008:    ld       a,keynd            ;
016C 3F2B        491            st       a,keyod            ;
016E 3C2A        492            ld       a,keynn            ;
0170 3F2C        493            st       a,keyon            ;
                 494 ;
                 495 ;
0172 2A          496 key010:    ret                         ;return
                 497 ;
0173 3945        498 key006:    clr      spuvsl,0
0175 3920        499            set      spuvsh,2
0177 AA          500            b        key008
                 501 ;
0178 3905        502 key022:    set      spuvsl,0
017A 3960        503            clr      spuvsh,2
017C AA          504            b        key008
                 505 ;
                 506 ;
                 507 ;
017D 3C2B        508 key005:    ld       a,keyod            ;
                 509 ;
017F DF          510            cmpr     a,2h'f             ;

ROM PAGE NO. 6

0180 6168        511            b        key007             ;
                 512 ;
0182 3985        513            test     spuvsl,0           ;
0184 616A        514            b        key008             ;
                 515 ;
0186 3945        516            clr      spuvsl,0           ;
                 517 ;
                 518 ;
0188 3952        519            clr      spusl,1            ;
                 520 ;
018A 6173        521            b        key006
                 522 ;
                 523 ;

ROM PAGE NO. 8

0200             524            org      h'200
                 525 ;
0200 3C2A        526 datact:    ld       a,keynn            ;
0202 30          527            xch      a,h                ;
                 528 ;
```

```
CP/M  TLCS-47  ASSEMBLER  V2.2
                                     PAGE    6

 LOC  OBJ       LINE        SOURCE STATEMENT

 0203 10         529         mov     h,a           ;
 0204 DF         530         cmpr    a,£h'f        ;
 0205 0E         531         testp   zf            ;
 0206 AA         532         b       data04        ;
                 533 ;
 0207 3C29       534         ld      a,keynd       ;
 0209 5C         535         test    a,0           ;
 020A 9E         536         b       data01        ;
                 537 ;
 020B 5D         538         test    a,1           ;
 020C A2         539         b       data02        ;
                 540 ;
 020D 5E         541         test    a,2           ;
 020E A6         542         b       data03        ;
                 543 ;
 020F 30         544         xch     a,h           ;
                 545 ;
 0210 30         546 data05: xch     a,h           ;
 0211 4F         547         ld      a,£h'f        ;
 0212 3FFD       548         st      a,dcm         ;
 0214 3FFE       549 data06: st      a,dch         ;
 0216 10         550         mov     h,a           ;
 0217 3FFC       551         st      a,dcl         ;
                 552 ;
 0219 33         553         ldl     a,@dc         ;
 021A 31         554         xch     a,l           ;
                 555 ;
 021B 32         556         ldh     a,@dc+        ;
 021C 30         557         xch     a,h           ;
                 558 ;
 021D 2A         559 data10: ret                   ;
                 560 ;
 021E 30         561 data01: xch     a,h           ;
 021F 3824       562         or      a,£h'4        ;
 0221 90         563         b       data05        ;
                 564 ;
 0222 30         565 data02: xch     a,h           ;
 0223 3828       566         or      a,£h'8        ;
 0225 90         567         b       data05        ;
                 568 ;
 0226 30         569 data03: xch     a,h           ;
 0227 382C       570         or      a,£h'c        ;
 0229 90         571         b       data05        ;
                 572 ;
 022A 3C29       573 data04: ld      a,keynd       ;
 022C 30         574         xch     a,h           ;
 022D 4E         575         ld      a,£h'e        ;
 022E 3FFD       576         st      a,dcm         ;
 0230 4F         577         ld      a,£h'f        ;
 0231 94         578         b       data06        ;
                 579 ;
 0232            580
 0232            581
                 582 ;
```

```
CP/M  TLCS-47  ASSEMBLER  V2.2
                                    PAGE     7

  LOC  OBJ       LINE        SOURCE STATEMENT

  ROM PAGE NO. 9

  0250             583          org     h'250
                   584 ;
  0250 2920        585 keysb:   xch     hl,kestbl
                   586 ;
  0252 3C23        587          ld      a,spusk
                   588 ;
  0254 3912        589          set     spusl,1               ; key currently dep
ression
                   590 ;
  0256 D5          591          cmpr    a,£h'5
  0257 0E          592          testp   zf
  0258 AC          593          b       keysb4
                   594 ;
  0259 3902        595          set     spusl,0               ; new character ava
ilable
                   596 ;
  025B 390F        597          set     servrc,0              ; service request
                   598 ;
  025D 08          599          inc     a
                   600 ;
  025E 3F23        601          st      a,spusk
                   602 ;
  0260 05          603          rolc    a
                   604 ;
  0261 383E        605          and     a,£h'e
                   606 ;
  0263 31          607          xch     a,l
                   608 ;
  0264 C4          609          ld      h,£h'4
                   610 ;
  0265 3C20        611          ld      a,kestbl
  0267 0F          612          st      a,@hl
                   613 ;
  0268 18          614          inc     l
                   615 ;
  0269 3C21        616          ld      a,kestbh
  026B 0F          617          st      a,@hl
                   618 ;
  026C 2A          619 keysb4:  ret
                   620 ;

  ROM PAGE NO.12

  0300             621          org     h'300
                   622 ;
                   623 ; keyt routine
                   624 ;
  0300 3FCB        625 keyt:    st      a,keytb
                   626 ;
  0302 40          627          ld      a,£h'0
                   628 ;
  0303 08          629 keyt0:   inc     a
  0304 00          630          nop
  0305 00          631          nop
  0306 00          632          nop
```

```
LOC  OBJ        LINE         SOURCE STATEMENT

0307 0E          633             testp   zf
0308 8A          634             b       keyt1
                 635 ;
0309 83          636             b       keyt0
                 637 ;
030A 3CCB        638 keyt1:      ld      a,keytb
                 639 ;
030C 2A          640             ret
                 641 ;
                 642 ;
                 643 ;
                 644 ;;;
                 645 ;;;
                 646 ;;;
                 647 ;;;

ROM PAGE NO.12

0315             648             org     h'315
                 649 ;
                 650 ; ledd
                 651 ;
0315 10          652 ledd:       mov     h,a
                 653 ;
0316 5F          654             test    a,3
0317 99          655             b       ledd01
0318 A8          656             b       ledd00
                 657 ;
                 658 ; ascii code
                 659 ;
0319 3804        660 ledd01:     add     a,£h'4
031B 3FFD        661             st      a,dcm
031D 4F          662             ld      a,£h'f
031E 3FFE        663             st      a,dch
0320 31          664             xch     a,l
0321 3FFC        665             st      a,dcl
                 666 ;
0323 33          667             ldl     a,@dc
0324 31          668             xch     a,l
                 669 ;
0325 32          670             ldh     a,@dc+
0326 30          671             xch     a,h
                 672 ;
0327 2A          673             ret
                 674 ;
                 675 ;
                 676 ; for each seguement
                 677 ;
0328 2920        678 ledd00:     xch     hl,kestbl
                 679 ;
032A E0          680             ld      l,£0
032B C2          681             ld      h,£2
                 682 ;
032C 4F          683             ld      a,£h'f
032D 1F          684             xor     a,@hl
```

```
CP/M  TLCS-47  ASSEMBLER  V2.2
                                    PAGE    9

 LOC   OBJ      LINE        SOURCE STATEMENT

                 685 ;
 032E 0F         686          st       a,@hl
                 687 ;
 032F 18         688          inc      l
 0330 4F         689          ld       a,£h'f
                 690 ;
 0331 1F         691          xor      a,@hl
 0332 0F         692          st       a,@hl
                 693 ;
 0333 2920       694          xch      hl,kestbl
                 695 ;
 0335 2A         696          ret
                 697 ;
                 698 ;
                 699 ;
                 700 ;;;
                 701 ;;;
                 702 ;;;

 ROM PAGE NO.13

 0350            703          org      h'350
                 704 ;
                 705 ; flash routine
                 706 ;
 0350 3C35       707 flash:   ld       a,ldatm1
 0352 3F39       708          st       a,ldasm1
 0354 3C36       709          ld       a,ldatm2
 0356 3F3A       710          st       a,ldasm2
 0358 3C37       711          ld       a,ldatl1
 035A 3F3B       712          st       a,ldasl1
 035C 3C38       713          ld       a,ldatl2
 035E 3F3C       714          st       a,ldasl2
                 715 ;
 0360 3C33       716          ld       a,displw
 0362 5C         717          test     a,0
 0363 A9         718          b        flash0              ; msd not flashing
                 719 ;
                 720 ; msd flashing
                 721 ;
 0364 4F         722          ld       a,£h'f
 0365 3F39       723          st       a,ldasm1
 0367 3F3A       724          st       a,ldasm2
                 725 ;
 0369 3C33       726 flash0:  ld       a,displw
 036B 5D         727          test     a,1
 036C B2         728          b        flash1              ; lsd not flashing
                 729 ;
                 730 ; lsd flashing
                 731 ;
 036D 4F         732          ld       a,£h'f
 036E 3F3B       733          st       a,ldasl1
 0370 3F3C       734          st       a,ldasl2
                 735 ;
 0372 3C34       736 flash1:  ld       a,displw
```

```
CP/M  TLCS-47  ASSEMBLER  V2.2
                                      PAGE   10

 LOC  OBJ       LINE         SOURCE STATEMENT

 0374 5D         737           test     a,1
 0375 63AC       738           b        flas30                     ; indicator 'off'
                 739 ;
 0377 5C         740           test     a,0
 0378 6393       741           b        flas20                     ; indicator 'on'
                 742 ;
                 743 ;
                 744 ; indicator flashing
                 745 ;
 037A 3C36       746           ld       a,ldatm2
 037C 3837       747           and      a,£0111b
 037E 3F36       748           st       a,ldatm2
                 749 ;

 ROM PAGE NO.14

 0380 3C38       750           ld       a,ldatl2
 0382 3837       751           and      a,£0111b
 0384 3F38       752           st       a,ldatl2                   ; indicator 'on' pe
riod
                 753 ;
 0386 3C3A       754           ld       a,ldasm2
 0388 3828       755           or       a,£1000b
 038A 3F3A       756           st       a,ldasm2
                 757 ;
 038C 3C3C       758           ld       a,ldasl2
 038E 3828       759           or       a,£1000b
 0390 3F3C       760           st       a,ldasl2                   ; indicator 'off' p
eriod
                 761 ;
 0392 2A         762           ret
                 763 ;
                 764 ;
                 765 ;
                 766 ; indicator 'on'
                 767 ;
 0393 3C36       768 flas20: ld       a,ldatm2
 0395 3837       769           and      a,£0111b
 0397 3F36       770           st       a,ldatm2
                 771 ;
 0399 3C38       772           ld       a,ldatl2
 039B 3837       773           and      a,£0111b
 039D 3F38       774           st       a,ldatl2
                 775 ;
 039F 3C3A       776           ld       a,ldasm2
 03A1 3837       777           and      a,£0111b
 03A3 3F3A       778           st       a,ldasm2
                 779 ;
 03A5 3C3C       780           ld       a,ldasl2
 03A7 3837       781           and      a,£0111b
 03A9 3F3C       782           st       a,ldasl2
                 783 ;
 03AB 2A         784           ret
                 785 ;
                 786 ; indicator 'off'
                 787 ;
 03AC 3C36       788 flas30: ld       a,ldatm2
```

```
CP/M  TLCS-47  ASSEMBLER  V2.2
                                  PAGE   11

  LOC   OBJ      LINE        SOURCE STATEMENT

  03AE 3828       789         or       a,£1000b
  03B0 3F36       790         st       a,ldatm2
                  791 ;
  03B2 3C38       792         ld       a,ldatl2
  03B4 3828       793         or       a,£1000b
  03B6 3F38       794         st       a,ldatl2
                  795 ;
  03B8 3C3A       796         ld       a,ldasm2
  03BA 3828       797         or       a,£1000b
  03BC 3F3A       798         st       a,ldasm2
                  799 ;
  03BE 3C3C       800         ld       a,ldasl2

  ROM PAGE NO.15

  03C0 3828       801         or       a,£1000b
  03C2 3F3C       802         st       a,ldasl2
                  803 ;
  03C4 2A         804         ret
                  805 ;
                  806         end

ASSEMBLY COMPLETE,       0 PROGRAM ERROR(S)
```

CP/M TLCS-47 ASSEMBLER V2.2
PAGE 12

SYMBOL TABLE

```
* COMMAD  0013  * COMMAH  0015  * COMMAL  0014    DATA01  021E
  DATA02  0222    DATA03  0226    DATA04  022A    DATA05  0210
  DATA06  0214  * DATA0H  0081  * DATA0L  0080  * DATA10  021D
* DATA1H  0083  * DATA1L  0082  * DATA2H  0085  * DATA2L  0084
* DATA3H  0087  * DATA3L  0086  * DATA4H  0089  * DATA4L  0088
  DATACT  0200    DCH     00FE    DCL     00FC    DCM     00FD
* DISPA   0032  * DISPH   0031    DISPIW  0034  * DISPL   0030
  DISPLW  0033    FLAG20  0393    FLAG30  03AC  * FLASH   0350
  FLASH0  0369    FLASH1  0372  * INCOTH  008C  * INCOTL  008A
* INCOTM  008B  * KEST    0022    KEST0H  0043    KEST0L  0042
* KEST1H  0045  * KEST1L  0044  * KEST2H  0047  * KEST2L  0046
* KEST3H  0049  * KEST3L  0048  * KEST4H  004B  * KEST4L  004A
* KEST5H  004D  * KEST5L  004C    KESTBH  0021    KESTBL  0020
  KEY001  0107    KEY002  0118    KEY003  0132    KEY004  0136
  KEY005  017D    KEY006  0173    KEY007  0168    KEY008  016A
  KEY010  0172    KEY020  0142    KEY021  0151    KEY022  0178
* KEY030  015E    KEYND   0029    KEYNN   002A    KEYOD   002B
  KEYON   002C  * KEYS    0100    KEYSB   0250    KEYSB4  026C
  KEYSC   000E    KEYT    0300    KEYT0   0303    KEYT1   030A
  KEYTB   00CB  * LCICOT  000D    LDASL1  003B    LDASL2  003C
  LDASM1  0039    LDASM2  003A    LDATL1  0037    LDATL2  0038
  LDATM1  0035    LDATM2  0036  * LDISP   0B00  * LECOTH  008F
* LECOTL  008D  * LECOTM  008E  * LEDD    0315    LEDD00  0328
  LEDD01  0319  * LIOVF1  0600  * LIOVF2  0D00  * LMAIN   03E0
* LREMO   0E00  * LTABLE  0000  * LVLFEX  0C00  * OVER2A  0072
* OVER2H  0071  * OVER2L  0070  * OVERA1  0012  * OVERH1  0011
* OVERL1  0010  * PARITT  000C  * PARITY  000B  * READC   0028
* READN   0027  * REMD0   0060  * REMD1   0061  * REMD2   0062
* REMD3   0063  * REMD4   0064  * REMD5   0065  * REMD6   0066
* REMD7   0067  * REMOA   006A  * REMOH   0069  * REMOL   0068
* RKCE    0050    RKCE0   006C    RKCE1   0071    RKCE2   0078
* RKCE3   007F    RKCE4   006B    RKCE5   0058  * RNH     006B
* RNL     006D  * RNM     006C  * RWRPCH  00CA  * RWRPCL  00C8
* RWRPCM  00C9    SERVRC  000F    SPUCP   0024    SPUFF   0017
* SPUSH   0003    SPUSK   0023    SPUSL   0002  * SPUVDM  0004
  SPUVSH  0000    SPUVSL  0005  * SPUVUM  0001  * SPW     00FF
* SPWB    00C7  * TIMR2H  00FA  * TIMR2L  00F8  * TIMR2M  00F9
* TIMRHN  00F6  * TIMRHO  001B  * TIMRLN  00F4  * TIMRLO  0019
* TIMRMN  00F5  * TIMRMO  001A  * VLFC    000A  * VLFEC   0016
* VLFRB   0009  * VLFTB   0008  * VLFTH   0007  * VLFTL   0006
* VLFXA   0052  * VLFXH   0051  * VLFXL   0050  * WARPCL  00C4
* WARPCM  00C5  * WRITEH  0026  * WRITEN  0025

DEFINED    167 USER SYMBOL(S)
```

```
CP/M  TLCS-47  ASSEMBLER  V2.2
                                          PAGE    1

  LOC  OBJ      LINE        SOURCE STATEMENT

                   1 ;------------------------------------;
                   2 ;                                    ;
                   3 ;        data table                  ;
                   4 ;                                    ;
                   5 ;------------------------------------;
                   6 ;
                   7 ; command coding table
                   8 ;

  ROM PAGE NO.60

  0F20             9          org     h'f20
                  10 ;
  0F20 01         11          data    h'01           ; '00' read status
  0F21 10         12          data    h'10           ; '01' indicator power cont
rol
  0F22 10         13          data    h'10           ; '02' indicator mode
  0F23 10         14          data    h'10           ; '03' device input control
  0F24 10         15          data    h'10           ; '04' device output contro
l
  0F25 10         16          data    h'10           ; '05' power relay control
  0F26 00         17          data    h'00           ; '06' clear display
  0F27 10         18          data    h'10           ; '07' device display contr
ol
                  19 ;
  0F28 10         20          data    h'10           ; '08' insert character
  0F29 02         21          data    h'02           ; '09' read device data
  0F2A 20         22          data    h'20           ; '0a' display character at
 specified position
  0F2B 0F         23          data    h'0f           ; '0b' conditional poll
  0F2C 00         24          data    h'00           ; blank
  0F2D 00         25          data    h'00           ; blank
  0F2E 00         26          data    h'00           ; blank
  0F2F 00         27          data    h'00           ; blank
                  28 ;
  0F30 00         29          data    h'00           ; blank
  0F31 00         30          data    h'00           ; blank
  0F32 00         31          data    h'00           ; blank
  0F33 00         32          data    h'00           ; blank
  0F34 00         33          data    h'00           ; blank
  0F35 00         34          data    h'00           ; blank
  0F36 00         35          data    h'00           ; blank
  0F37 00         36          data    h'00           ; blank
                  37 ;
  0F38 00         38          data    h'00           ; blank
  0F39 00         39          data    h'00           ; blank
  0F3A 00         40          data    h'00           ; blank
  0F3B 00         41          data    h'00           ; blank
  0F3C 00         42          data    h'00           ; blank
  0F3D 00         43          data    h'00           ; blank
  0F3E 00         44          data    h'00           ; blank
  0F3F 20         45          data    h'20           ; command expansion
                  46 ;
                  47 ;
                  48 ; ascii coding
                  49 ;

  ROM PAGE NO.61
```

```
CP/M  TLCS-47  ASSEMBLER  V2.2
                                   PAGE    2

 LOC  OBJ      LINE       SOURCE STATEMENT

 0F40                         org     h'f40
                       ;
                       ; f40-f4f
                       ;
                       ;
                       ;   f40 -f6f -> h'ff 'blank'
                       ;
 0F40 FF                      data    h'ff
 0F41 FF                      data    h'ff
 0F42 FF                      data    h'ff
 0F43 FF                      data    h'ff
 0F44 FF                      data    h'ff
 0F45 FF                      data    h'ff
 0F46 FF                      data    h'ff
 0F47 FF                      data    h'ff
                       ;
 0F48 FF                      data    h'ff
 0F49 FF                      data    h'ff
 0F4A FF                      data    h'ff
 0F4B FF                      data    h'ff
 0F4C FF                      data    h'ff
 0F4D FF                      data    h'ff
 0F4E FF                      data    h'ff
 0F4F FF                      data    h'ff
                       ;
                       ; f50-f5f
                       ;
 0F50 FF                      data    h'ff
 0F51 FF                      data    h'ff
 0F52 FF                      data    h'ff
 0F53 FF                      data    h'ff
 0F54 FF                      data    h'ff
 0F55 FF                      data    h'ff
 0F56 FF                      data    h'ff
 0F57 FF                      data    h'ff
                       ;
 0F58 FF                      data    h'ff
 0F59 FF                      data    h'ff
 0F5A FF                      data    h'ff
 0F5B FF                      data    h'ff
 0F5C FF                      data    h'ff
 0F5D FF                      data    h'ff
 0F5E FF                      data    h'ff
 0F5F FF                      data    h'ff
                       ;
                       ; f60-f6f
                       ;
 0F60 FF                      data    h'ff
 0F61 FF                      data    h'ff
 0F62 FF                      data    h'ff
 0F63 FF                      data    h'ff
 0F64 FF                      data    h'ff
 0F65 FF                      data    h'ff
 0F66 FF                      data    h'ff
```

```
CP/M  TLCS-47  ASSEMBLER  V2.2
                                   PAGE    3

 LOC  OBJ      LINE        SOURCE STATEMENT

0F67 FF         104         data    h'ff
                105 ;
0F68 FF         106         data    h'ff
0F69 FF         107         data    h'ff
0F6A FF         108         data    h'ff
0F6B FF         109         data    h'ff
0F6C FF         110         data    h'ff
0F6D FF         111         data    h'ff
0F6E FF         112         data    h'ff
0F6F FF         113         data    h'ff
                114 ;
                115 ; f70-f7f
                116 ;
0F70 C0         117         data    h'c0     ; 0
0F71 F9         118         data    h'f9     ; 1
0F72 A4         119         data    h'a4     ; 2
0F73 B0         120         data    h'b0     ; 3
0F74 99         121         data    h'99     ; 4
0F75 92         122         data    h'92     ; 5
0F76 82         123         data    h'82     ; 6
0F77 D8         124         data    h'd8     ; 7
                125 ;
0F78 80         126         data    h'80     ; 8
0F79 90         127         data    h'90     ; 9
0F7A FF         128         data    h'ff     ; blank
0F7B C9         129         data    h'c9     ; 11
0F7C FF         130         data    h'ff     ; blank
0F7D B7         131         data    h'b7     ; =
0F7E FF         132         data    h'ff     ; blank
0F7F FF         133         data    h'ff     ; blank
                134 ;
                135 ; f80-f8f
                136 ;

ROM PAGE NO.62

0F80 FF         137         data    h'ff     ; blank
0F81 88         138         data    h'88     ; A
0F82 83         139         data    h'83     ; b
0F83 C6         140         data    h'c6     ; C
0F84 A1         141         data    h'a1     ; d
0F85 86         142         data    h'86     ; E
0F86 8E         143         data    h'8e     ; F
0F87 82         144         data    h'82     ; G
                145 ;
0F88 89         146         data    h'89     ; H
0F89 CF         147         data    h'cf     ; I
0F8A E1         148         data    h'e1     ; J
0F8B FF         149         data    h'ff     ; blank
0F8C C7         150         data    h'c7     ; L
0F8D FF         151         data    h'ff     ; blank
0F8E FF         152         data    h'ff     ; blank
0F8F C0         153         data    h'c0     ; O
                154 ;
                155 ; f90-f9f
```

```
CP/M  TLCS-47  ASSEMBLER  V2.2
                                        PAGE    4

  LOC  OBJ       LINE          SOURCE STATEMENT

                  156 ;
  0F90 8C         157           data     h'8c      ; P
  0F91 FF         158           data     h'ff      ; blank
  0F92 AF         159           data     h'af      ; r
  0F93 92         160           data     h'92      ; S
  0F94 FF         161           data     h'ff      ; blank
  0F95 C1         162           data     h'c1      ; U
  0F96 FF         163           data     h'ff      ; blank
  0F97 FF         164           data     h'ff      ; blank
                  165 ;
  0F98 FF         166           data     h'ff      ; blank
  0F99 FF         167           data     h'ff      ; blank
  0F9A FF         168           data     h'ff      ; blank
  0F9B FF         169           data     h'ff      ; blank
  0F9C FF         170           data     h'ff      ; blank
  0F9D FF         171           data     h'ff      ; blank
  0F9E FF         172           data     h'ff      ; blank
  0F9F BF         173           data     h'bf      ; blank
                  174 ;
                  175 ; fa0-faf
                  176 ;
  0FA0 FF         177           data     h'ff      ; blank
  0FA1 88         178           data     h'88      ; A
  0FA2 83         179           data     h'83      ; b
  0FA3 C6         180           data     h'c6      ; C
  0FA4 A1         181           data     h'a1      ; d
  0FA5 86         182           data     h'86      ; E
  0FA6 8E         183           data     h'8e      ; F
  0FA7 82         184           data     h'82      ; G
                  185 ;
  0FA8 89         186           data     h'89      ; H
  0FA9 CF         187           data     h'cf      ; I
  0FAA E1         188           data     h'e1      ; J
  0FAB FF         189           data     h'ff      ; blank
  0FAC C7         190           data     h'c7      ; L
  0FAD FF         191           data     h'ff      ; blank
  0FAE FF         192           data     h'ff      ; blank
  0FAF C0         193           data     h'c0      ; O
                  194 ;
                  195 ; fb0-fbf
                  196 ;
  0FB0 8C         197           data     h'8c      ; P
  0FB1 FF         198           data     h'ff      ; blank
  0FB2 AF         199           data     h'af      ; r
  0FB3 92         200           data     h'92      ; S
  0FB4 FF         201           data     h'ff      ; blank
  0FB5 C1         202           data     h'c1      ; blank
  0FB6 FF         203           data     h'ff      ; blank
  0FB7 FF         204           data     h'ff      ; blank
                  205 ;
  0FB8 FF         206           data     h'ff      ; blank
  0FB9 FF         207           data     h'ff      ; blank
  0FBA FF         208           data     h'ff      ; blank
  0FBB FF         209           data     h'ff      ; blank
  0FBC FF         210           data     h'ff      ; blank
```

```
CP/M  TLCS-47  ASSEMBLER  V2.2
                                           PAGE     5

 LOC   OBJ       LINE        SOURCE STATEMENT

 0FBD FF          211          data      h'ff     ; blank
 0FBE FF          212          data      h'ff     ; blank
 0FBF FF          213          data      h'ff     ; blank
                  214 ;
                  215 ;
                  216 ;*remote control data
                  217 ;

 ROM PAGE NO.63

 0FC0             218          org       h'fc0
                  219 ;
 0FC0 FF          220          data      h'ff
 0FC1 FF          221          data      h'ff
 0FC2 FF          222          data      h'ff
 0FC3 FF          223          data      h'ff
 0FC4 13          224          data      h'13     ; on / off
 0FC5 11          225          data      h'11     ; event
 0FC6 FF          226          data      h'ff
 0FC7 16          227          data      h'16     ; clear
 0FC8 FF          228          data      h'ff
 0FC9 FF          229          data      h'ff
 0FCA FF          230          data      h'ff
 0FCB FF          231          data      h'ff
 0FCC FF          232          data      h'ff
 0FCD 12          233          data      h'12     ; auth
 0FCE FF          234          data      h'ff
 0FCF 17          235          data      h'17     ; send
                  236 ;
 0FD0 FF          237          data      h'ff
 0FD1 38          238          data      h'38     ; 8
 0FD2 34          239          data      h'34     ; 4
 0FD3 10          240          data      h'10     ; +
 0FD4 32          241          data      h'32     ; 2
 0FD5 14          242          data      h'14     ; -
 0FD6 36          243          data      h'36     ; 6
 0FD7 FF          244          data      h'ff
 0FD8 31          245          data      h'31     ; 1
 0FD9 39          246          data      h'39     ; 9
 0FDA 35          247          data      h'35     ; 5
 0FDB FF          248          data      h'ff
 0FDC 33          249          data      h'33     ; 3
 0FDD 30          250          data      h'30     ; 0
 0FDE 37          251          data      h'37     ; 7
 0FDF 15          252          data      h'15     ; scan
                  253 ;
                  254 ;

 ROM PAGE NO.63

 0FE7             255          org       h'fe7
                  256 ;
                  257 ;* keyscan data
                  258 ;
 0FE7 37          259          data      h'37              ; '7'
```

CP/M TLCS-47 ASSEMBLER V2.2
PAGE 6

```
 LOC  OBJ      LINE        SOURCE STATEMENT

 0FE8 00        260         data     h'00          ;
 0FE9 00        261         data     h'00          ;
 0FEA 00        262         data     h'00          ; no use
 0FEB 32        263         data     h'32          ; '2'
 0FEC 00        264         data     h'00          ; no use
 0FED 34        265         data     h'34          ; '4'
 0FEE 13        266         data     h'13          ; 'on/off'
 0FEF 00        267         data     h'00          ; no use
 0FF0 14        268         data     h'14          ; '-'
 0FF1 15        269         data     h'15          ; pc/fc scan
 0FF2 16        270         data     h'16          ; 'c'
 0FF3 36        271         data     h'36          ; '6'
 0FF4 17        272         data     h'17          ; s/send
 0FF5 00        273         data     h'00          ; no use
 0FF6 00        274         data     h'00          ; no use
 0FF7 12        275         data     h'12          ; a/auth
 0FF8 10        276         data     h'10          ; '+'
 0FF9 11        277         data     h'11          ; e/event
 0FFA 35        278         data     h'35          ; '5'
 0FFB 33        279         data     h'33          ; '3'
 0FFC 30        280         data     h'30          ; '0'
 0FFD 39        281         data     h'39          ; '9'
 0FFE 38        282         data     h'38          ; '8'
 0FFF 31        283         data     h'31          ; '1'
                284 ;
                285 ;
                286         end
```

ASSEMBLY COMPLETE,     0 PROGRAM ERROR(S)

CP/M TLCS-47 ASSEMBLER V2.2 PAGE 7

SYMBOL TABLE

DEFINED 0 USER SYMBOL(S)

```
CP/M  TLCS-47  ASSEMBLER  V2.2
                                   PAGE    1

 LOC  OBJ      LINE       SOURCE STATEMENT

                     ;-------------------------------------------------------------;
                     ;                                                   7.1983.   ;
                     ;       ldisp.asm       V1.0                                  ;
                     ;                                 (TMP4740P)                  ;
                     ;                                                             ;
                     ;              display       routine                          ;
                     ;                                                             ;
                     ;                                                             ;
                     ;-------------------------------------------------------------;

                     $nolist

                     $list

                     ;
                     ;
 ROM PAGE NO.44

 0B00                        org     h'b00
                     ;
                     ; interrupts enable
                     ;
 0B00 3F32                   st      a,dispa
 0B02 44                     ld      a,£0100b
 0B03 13                     xch     a,eir
 0B04 366F                   eiclr   il,101111b
                     ;
                     ;
                     ;
                     ;  push register
                     ;
                     ;
 0B06 2930                   xch     hl,displ
                     ;
                     ;  count up led counter
                     ;
 0B08 3C8D                   ld      a,lecotl
 0B0A 08                     inc     a
 0B0B 3F8D                   st      a,lecotl
                     ;
 0B0D D0                     cmpr    a,£h'0
 0B0E B3                     b       displ0
                     ;
 0B0F 3C8E                   ld      a,lecotm
 0B11 08                     inc     a
 0B12 3F8E                   st      a,lecotm
                     ;
 0B14 D0                     cmpr    a,£h'0
 0B15 B3                     b       displ0
                     ;
```

```
CP/M  TLCS-47  ASSEMBLER  V2.2
                                        PAGE    2

LOC  OBJ      LINE        SOURCE STATEMENT

0B16 3C8F      336          ld      a,lecoth
0B18 08        337          inc     a
0B19 3F8F      338          st      a,lecoth
               339 ;
0B1B D0        340          cmpr    a,£h'0
0B1C B3        341          b       displ0
               342 ;
               343 ;
               344 ;  counter over flow
               345 ;
               346 ;
0B1D 4F        347          ld      a,£h'f
0B1E 3F8F      348          st      a,lecoth
0B20 43        349          ld      a,£h'3
0B21 3F8E      350          st      a,lecotm
0B23 40        351          ld      a,£h'0
0B24 3F8D      352          st      a,lecotl
               353 ;
0B26 3C33      354          ld      a,displw              ; invert flag
0B28           355
0B28 5E        356          test    a,2
0B29 AF        357          b       displ2
               358 ;
0B2A 383B      359          and     a,£1011b
               360 ;
0B2C 3F33      361          st      a,displw              ; '1'->'0'
0B2E B3        362          b       displ0
               363 ;
0B2F 3824      364 displ2: or       a,£0100b
0B31 3F33      365          st      a,displw              ; '0'->'1'
               366 ;
               367 ;
               368 ;  led "on"
               369 ;
               370 ;
0B33 3C33      371 displ0: ld       a,displw
0B35 5E        372          test    a,2
0B36 6B63      373          b       displ1                ; imaginaly part
               374 ;
               375 ;
               376 ; real part
               377 ;
               378 ;
               379 ;
               380 ; lsd 'on'
               381 ;
0B38 5F        382          test    a,3                   ;
0B39 6B4F      383          b       displ3                ; lsd 'on'
               384 ;
               385 ; msd 'on'
               386 ;
0B3B 3837      387          and     a,£0111b
0B3D 3F33      388          st      a,displw
0B3F 3C35      389          ld      a,ldatm1
```

```
CP/M  TLCS-47  ASSEMBLER  V2.2
                                        PAGE    3

 LOC  OBJ       LINE        SOURCE STATEMENT

 ROM PAGE NO.45 *

 0B41 3AA1       390             out     a,%op01
 0B43 3C36       391             ld      a,ldatm2
 0B45 3AA2       392             out     a,%op02
 0B47 3B56       393             clr     %op06,1
 0B49 3B26       394             set     %op06,2
                 395 ;
 0B4B 3925       396             set     spuvsl,2                ; 'keyscan ready' o
n
                 397 ;
 0B4D 6B89       398             b       dispi0
                 399 ;
                 400 ; lsd 'on'
                 401 ;
 0B4F 3828       402 displ3: or      a,£1000b
 0B51 3F33       403             st      a,displw
                 404 ;
 0B53 3C37       405             ld      a,ldatl1
 0B55 3AA1       406             out     a,%op01
 0B57 3C38       407             ld      a,ldatl2
 0B59 3AA2       408             out     a,%op02
 0B5B 3B16       409             set     %op06,1
 0B5D 3B66       410             clr     %op06,2
                 411 ;
 0B5F 6B89       412             b       dispi0
                 413 ;
                 414 ;
                 415 ;  imaginaly part
                 416 ;
                 417 ;
                 418 ; key scan ready
                 419 ;
 0B61 3925       420             set     spuvsl,2
                 421 ;
 0B63 5F         422 displ1: test    a,3
 0B64 B9         423             b       displ4
                 424 ;
                 425 ; msd 'on'
                 426 ;
 0B65 3837       427             and     a,£0111b
 0B67 3F33       428             st      a,displw
                 429 ;
 0B69 3C39       430             ld      a,ldasm1
 0B6B 3AA1       431             out     a,%op01
 0B6D 3C3A       432             ld      a,ldasm2
 0B6F 3AA2       433             out     a,%op02
                 434 ;
 0B71 3B26       435             set     %op06,2
 0B73 3B56       436             clr     %op06,1
                 437 ;
 0B75 3925       438             set     spuvsl,2                ; key scan ready
                 439 ;
 0B77 6B89       440             b       dispi0
                 441 ;
                 442 ; lsd 'on'
```

```
CP/M  TLCS-47  ASSEMBLER  V2.2
                                            PAGE    4

  LOC  OBJ       LINE        SOURCE STATEMENT

                  443 ;
  0B79 3828       444 displ4: or      a,£1000b
  0B7B 3F33       445         st      a,displw
                  446 ;
  0B7D 3C3B       447         ld      a,ldasl1
  0B7F 3AA1       448         out     a,%op01

  ROM PAGE NO.46 *

  0B81 3C3C       449         ld      a,ldasl2
  0B83 3AA2       450         out     a,%op02
                  451 ;
  0B85 3B16       452         set     %op06,1
  0B87 3B66       453         clr     %op06,2
                  454 ;
                  455 ;
                  456 ;  return
                  457 ;
                  458 ;
  0B89 2930       459 displ0: xch     hl,displ
                  460 ;
  0B8B 47         461         ld      a,£h'7
                  462 ;
  0B8C 36AF       463         diclr   il,101111b
                  464 ;
  0B8E 3C1C       465         ld      a,eirb
  0B90 13         466         xch     a,eir
  0B91 3C32       467         ld      a,dispa
                  468 ;
  0B93 2B         469         reti
                  470 ;
                  471         end

ASSEMBLY COMPLETE,       0 PROGRAM ERROR(S)
```

CP/M TLCS-47 ASSEMBLER V2.2
PAGE 5

SYMBOL TABLE

| | | | | | | | |
|---|---|---|---|---|---|---|---|
| * COMMAD | 0013 | * COMMAH | 0015 | * COMMAL | 0014 | * DATA0H | 0081 |
| * DATA0L | 0080 | * DATA1H | 0083 | * DATA1L | 0082 | * DATA2H | 0085 |
| * DATA2L | 0084 | * DATA3H | 0087 | * DATA3L | 0086 | * DATA4H | 0089 |
| * DATA4L | 0088 | * DATACT | 0200 | * DCH | 00FE | * DCL | 00FC |
| * DCM | 00FD | DISPA | 0032 | * DISPH | 0031 | DISPI0 | 0B89 |
| * DISPIW | 0034 | DISPL | 0030 | DISPL0 | 0B33 | DISPL1 | 0B63 |
| DISPL2 | 0B2F | DISPL3 | 0B4F | DISPL4 | 0B79 | DISPLW | 0033 |
| EIRB | 001C | * FLASH | 0350 | * INCOTH | 008C | * INCOTL | 008A |
| * INCOTM | 008B | * KEST | 0022 | * KEST0H | 0043 | * KEST0L | 0042 |
| * KEST1H | 0045 | * KEST1L | 0044 | * KEST2H | 0047 | * KEST2L | 0046 |
| * KEST3H | 0049 | * KEST3L | 0048 | * KEST4H | 004B | * KEST4L | 004A |
| * KEST5H | 004D | * KEST5L | 004C | * KESTBH | 0021 | * KESTBL | 0020 |
| * KEYND | 0029 | * KEYNN | 002A | * KEYOD | 002B | * KEYON | 002C |
| * KEYS | 0100 | * KEYSB | 0250 | * KEYSC | 000E | * KEYT | 0300 |
| * KEYTB | 00CB | * LCICOT | 000D | LDASL1 | 003B | LDASL2 | 003C |
| LDASM1 | 0039 | LDASM2 | 003A | LDATL1 | 0037 | LDATL2 | 0038 |
| LDATM1 | 0035 | LDATM2 | 0036 | LECOTH | 008F | LECOTL | 008D |
| LECOTM | 008E | * LEDD | 0310 | * LIOVF1 | 0600 | * LIOVF2 | 0D00 |
| * LMAIN | 03E0 | * LREMO | 0E00 | * LVLFEX | 0C00 | * OVER2A | 0072 |
| * OVER2H | 0071 | * OVER2L | 0070 | * OVERA1 | 0012 | * OVERH1 | 0011 |
| * OVERL1 | 0010 | * PARITT | 000C | * PARITY | 000B | * READC | 0028 |
| * READN | 0027 | * REMD0 | 0060 | * REMD1 | 0061 | * REMD2 | 0062 |
| * REMD3 | 0063 | * REMD4 | 0064 | * REMD5 | 0065 | * REMD6 | 0066 |
| * REMD7 | 0067 | * REMOA | 006A | * REMOH | 0069 | * REMOL | 0068 |
| * RKCE | 0050 | * RNH | 006B | * RNL | 006D | * RNM | 006C |
| * RWRPCH | 00CA | * RWRPCL | 00C8 | * RWRPCM | 00C9 | * SERVRC | 000F |
| * SPUCP | 0024 | * SPUSH | 0003 | * SPUSK | 0023 | * SPUSL | 0002 |
| * SPUVDM | 0004 | * SPUVSH | 0000 | SPUVSL | 0005 | * SPUVUM | 0001 |
| * SPW | 00FF | * SPWB | 00C7 | * TABLE | 0000 | * TIMR2H | 00FA |
| * TIMR2L | 00F8 | * TIMR2M | 00F9 | * TIMRHN | 00F6 | * TIMRHO | 001B |
| * TIMRLN | 00F4 | * TIMRLO | 0019 | * TIMRMN | 00F5 | * TIMRMO | 001A |
| * VLFC | 000A | * VLFEC | 0016 | * VLFRB | 0009 | * VLFTB | 0008 |
| * VLFTH | 0007 | * VLFTL | 0006 | * VLFXA | 0052 | * VLFXH | 0051 |
| * VLFXL | 0050 | * WARPCL | 00C4 | * WARPCM | 00C5 | * WRITEH | 0026 |
| * WRITEN | 0025 | | | | | | |

DEFINED 137 USER SYMBOL(S)

```
CP/M  TLCS-47  ASSEMBLER  V2.2
                                             PAGE     1

  LOC  OBJ      LINE        SOURCE STATEMENT

                   1 ;---------------------------------------------------------;
                   2 ;                                                7.1983. ;
                   3 ;       ltable.asm        V1.0                            ;
                   4 ;                               (TMP4740P)                ;
                   5 ;                                                         ;
                   6 ;              table        routine                       ;
                   7 ;                                                         ;
                   8 ;                                                         ;
                   9 ;---------------------------------------------------------;

                   $nolist

                   $list

                  27 ;
  ROM PAGE NO. 0
  0000            28          org      h'000
  0000 63E0       29          b        lmain
                  30 ;
  0002 6C00       31          b        lvlfex
                  32 ;
  0004 2B         33          reti
  0005 00         34          nop
                  35 ;
  0006 6600       36          b        liovf1
                  37 ;
  0008 6D00       38          b        liovf2
                  39 ;
  000A 6B00       40          b        ldisp
                  41 ;
  000C 6E00       42          b        lremo
                  43 ;
                  44          end
ASSEMBLY COMPLETE,       0 PROGRAM ERROR(S)
```

```
CP/M  TLCS-47  ASSEMBLER  V2.2
                                        PAGE    2

                              SYMBOL TABLE

  LDISP    0B00     LIOVF1  0600     LIOVF2  0D00     LMAIN    03E0
  LREMO    0E00     LVLFEX  0C00

DEFINED      6 USER SYMBOL(S)
```

```
CP/M  TLCS-47  ASSEMBLER  V2.2
                                          PAGE    1

  LOC  OBJ      LINE        SOURCE STATEMENT

                   1 ;-----------------------------------------------------------------;
                   2 ;                                                     7.1983.  ;
                   3 ;       liovf2.asm       V1.0                                    ;
                   4 ;                                   (TMP4740P)                   ;
                   5 ;                                                                ;
                   6 ;             remote con.      routine                           ;
                   7 ;                                                                ;
                   8 ;                                                                ;
                   9 ;-----------------------------------------------------------------;

                     $nolist

                     $list

                 268 ;

  ROM PAGE NO.52

  0D00           269         org      h'd00
                 270 ;
                 271 ;
                 272 ;
                 273 ; push register
                 274 ;
                 275 ;
  0D00 3F72      276         st       a,over2a
  0D02 44        277         ld       a,£0100b
  0D03 13        278         xch      a,eir
  0D04 366F      279         eiclr    il,101111b
  0D06 2970      280         xch      hl,over21
                 281 ;;
                 282 ;;      timer2 stop
                 283 ;;
  0D08 40        284         ld       a,£0
  0D09 3A8D      285         out      a,%opld
                 286 ;;;;;;;;;;;;;;;;;;;;;;;;;;;;;;;;;;;;;;;;;;;;;;;;;;;;;
                 287 ;;;;;;;;;;;;;;;;;;;;;;;;;;;;;;;;;;;;;;;;;;;;;;;;;;;;;
                 288 ;
                 289 ;;      check    N1  routine
                 290 ;
  0D0B 3C6B      291         ld       a,rnh
  0D0D D1        292         cmpr     a,£1
  0D0E 6D43      293         b        rem100          ; N1 was not '1'
                 294 ;;
                 295 ;;      N1=1
                 296 ;;
  0D10 3BD0      297         testp    %00,1           ; check port for remote
  0D12 AF        298         b        rem200          ; port was '1' ,it was not
start bit
                 299 ;
                 300 ;;      it was start bit
                 301 ;
```

```
CP/M  TLCS-47  ASSEMBLER  V2.2
                                         PAGE    2

  LOC  OBJ       LINE        SOURCE STATEMENT

  0D13 42         302           ld       a,£2
  0D14 3F6B       303           st       a,rnh            ; N2=2
                  304 ;
                  305 ;         setting timer2
  0D16 3B06       306           set      %op06,0
  0D18 4F         307           ld       a,£h'f
  0D19 3FFA       308           st       a,timr2h
  0D1B 4D         309           ld       a,£h'd
  0D1C 3FF9       310           st       a,timr2m
  0D1E 47         311           ld       a,£7
  0D1F 3FF8       312           st       a,timr2l
                  313 ;;
  0D21 48         314           ld       a,£8
  0D22 3A8D       315           out      a,%op1d          ; timer2 start
                  316 ;;
                  317 ;;;       return routine
                  318 ;;
  0D24 2970       319 rem300:  xch      hl,over2l
  0D26 47         320           ld       a,£0111b
  0D27 36AF       321           diclr    il,101111b
  0D29 13         322           xch      a,eir
  0D2A 3C72       323           ld       a,over2a
                  324 ;;
  0D2C 3B46       325           clr      %op06,0
  0D2E 2B         326           reti
                  327 ;
                  328 ;;
  0D2F 39F0       329 rem200:  testp    spuvsh,3         ;
  0D31 B3         330           b        rem210
                  331 ;
  0D32 A4         332           b        rem300           ; jump to return routine
                  333 ;
                  334 ;
  0D33 3B06       335 rem210:  set      %op06,0
  0D35 4F         336           ld       a,£h'f
  0D36 3FFA       337           st       a,timr2h
  0D38 45         338           ld       a,£5
  0D39 3FF9       339           st       a,timr2m
  0D3B 4E         340           ld       a,£h'e
  0D3C 3FF8       341           st       a,timr2l
                  342 ;;
  0D3E 48         343           ld       a,£8
  0D3F 3A8D       344           out      a,%op1d
                  345 ;;

  ROM PAGE NO.53 *

  0D41 6D24       346           b        rem300
                  347 ;;;;;;;;;;;;;;;;;;;;;;;;;;;;;;
                  348 ;;;;;;;;;;;;;;;;;;;;;;;;;;;;;;
                  349 ;;;;;;;;;;;;;;;;;;;;;;;;;;;;;;
                  350 ;
                  351 ;
                  352 ;         N1 was not '1'
                  353 ;
```

```
CP/M  TLCS-47  ASSEMBLER  V2.2
                                              PAGE    3

 LOC  OBJ      LINE         SOURCE STATEMENT

 0D43 3C6B      354 rem100: ld      a,rnh
 0D45 D0        355         cmpr    a,£0
 0D46 0E        356         testp   zf
 0D47 92        357         b       rem110
 0D48 88        358 re1000: b       re1000
                359 ;;
                360 ;
 0D49 40        361 rem120: ld      a,£0
 0D4A 3F6B      362         st      a,rnh
 0D4C 3F6C      363         st      a,rnm
 0D4E 3F6D      364         st      a,rnl
                365 ;
 0D50 6D24      366         b       rem300
                367 ;;;
                368 ;;;
                369 ;;;
 0D52 39B0      370 rem110: test    spuvsh,3
 0D54 89        371         b       rem120          ; F1 was not '1'
                372 ;
                373 ;       data creat routine
                374 ;
 0D55 3970      375         clr     spuvsh,3
                376 ;
 0D57 3952      377         clr     spusl,1         ; (key currently deprressed
) off
                378 ;
 0D59 6D24      379         b       rem300          ; return
                380 ;
                381         end

ASSEMBLY COMPLETE,       0 PROGRAM ERROR(S)
```

CP/M TLCS-47 ASSEMBLER V2.2
PAGE 4

SYMBOL TABLE

```
* COMMAD  0013   * COMMFC  0015   * COMMSR  0014   * DATACT  0200
* DCH     00FE   * DCL     00FC   * DCM     00FD   * DISPA   0032
* DISPH   0031   * DISPIW  0034   * DISPL   0030   * DISPLW  0033
* INCOTH  003B   * INCOTL  0039   * INCOTM  003A   * KEST    0043
* KEST0H  0023   * KEST0L  0022   * KEST1H  0025   * KEST1L  0024
* KEST2H  0027   * KEST2L  0026   * KEST3H  0029   * KEST3L  0028
* KEST4H  002B   * KEST4L  002A   * KESTBH  0041   * KESTBL  0040
* KEYND   002C   * KEYNN   002D   * KEYOD   002E   * KEYON   002F
* KEYS    0100   * KEYSB   0250   * KEYSC   000E   * KEYTB   00CB
* LCICOT  000D   * LDATL1  0037   * LDATL2  0038   * LDATM1  0035
* LDATM2  0036   * LDISP   0B00   * LECOTH  003E   * LECOTL  003C
* LECOTM  003D   * LIOVF1  0600   * LMAIN   03E0   * LREMO   0E00
* LVLFEX  0C00     OVER2A  0072   * OVER2H  0071     OVER2L  0070
* OVERA1  0012   * OVERH1  0011   * OVERL1  0010   * PARITT  000C
* PARITY  000B     RE1000  0D48     REM100  0D43     REM110  0D52
  REM120  0D49     REM200  0D2F     REM210  0D33     REM300  0D24
* REMD0   0060   * REMD1   0061   * REMD2   0062   * REMD3   0063
* REMD4   0064   * REMD5   0065   * REMD6   0066   * REMD7   0067
* REMOA   006A   * REMOH   0069   * REMOL   0068   * RKCE    0050
  RNH     006B     RNL     006D     RNM     006C   * RWRPCH  00CA
* RWRPCL  00C8   * RWRPCM  00C9   * SERVRC  000F   * SPUCP   0021
* SPUSH   0003   * SPUSK   0020     SPUSL   0002   * SPUVDM  0004
  SPUVSH  0000   * SPUVSL  0005   * SPUVUM  0001   * SPW     00FF
* SPWB    00C7   * TABLE   0000     TIMR2H  00FA     TIMR2L  00F8
  TIMR2M  00F9   * TIMRHN  00F6   * TIMRHO  001B   * TIMRLN  00F4
* TIMRLO  0019   * TIMRMN  00F5   * TIMRMO  001A   * VDATAH  0018
* VDATAL  0017   * VLFC    000A   * VLFEC   0016   * VLFRB   0009
* VLFTB   0008   * VLFTH   0007   * VLFTL   0006   * VLFXA   0052
* VLFXH   0051   * VLFXL   0050   * WARPCL  00C4   * WARPCM  00C5
```

DEFINED 116 USER SYMBOL(S)

FILE: DROP7_RST:UEHARA    HEWLETT-PACKARD: 8041 Assembler

```
LOCATION OBJECT CODE LINE     SOURCE LINE

                               "8041"
                               ;******************************************************************
                               ;*                                                                *
                               ;*            8042   Drop Processor Main Routine                   *
                               ;*                                                                *
                               ;******************************************************************
                               ;      <<<<<<<<<<<<   Using Register   >>>>>>>>>>>>>>>>>
                               ;                                        Bank  0
                               ;R0 ------ General  Register   --Converter
                               ;R1 ------ General  Register   --Used in drop poll map
                               ;R2 ------ General  Register   --Converter
                               ;R3 ------ Genelal  Register   --Converter    , Soft counter
                               ;R4 ------ General  Register , RF cable switch ( Store cable num. )
                               ;R5 ------ Counter  for  count 04 CMD
                               ;R6 ------
                               ;R7 ------ Interrupt routine start address
                               ;------------------------------------------------------------------
                               ;    <<<<<<<<<<<<  Port                    >>>>>>>>>>>>>>>>
                               ;P1 <5> <4> <3> <2> <1> <0>    Subscriber  Select
                               ;P1 <7>                        Test switch ( Reset out ( 15 us.10 us ))
                               ;P4 <3> <2> <1> <0>            Converter Control
                               ;P5 <3> <2> <1>                Drop Scan Switch   S2,S1,S0
                               ;P5 <4>                        VLF OUT
                               ;P6 <3> <2> <1> <0>            Power Detect I
                               ;P7 <1> <0>                                  II
                               ;P7 <3> <2>                    ECU Address
                               ;
                               ;__________________________________________________________________
                               ;CODE            Address       Coment                      pin out
<0009>                         DAT_1     EQU   00001001B   ; Tuning data   '1'              0 1
<0001>                         DAT_0     EQU   00000001B   ; Tuning data   '0'              0 1
<0008>                         CLKDAT    EQU   00001000B   ; Clock data    '1'              0 0
<000A>                         LODDAT    EQU   00001010B   ; Load  pulse data   '1'         0 2
<0004>                         PWRDT0    EQU   00000100B   ; Power off                      0 4
<000C>                         PWRDT1    EQU   00001100B   ; Power on                       0 4
<0003>                         CABL_A    EQU   00000011B   ; Cable Select A                 0 3
<000B>                         CABL_B    EQU   00001011B   ; Cable Select B                 0 3
<000D>                         DETDAT    EQU   00001101B   ; Power check                    0 5
<0006>                         CABL_C    EQU   00000110B   ; Cable Select C                 0 6
<000E>                         CABL_D    EQU   00001110B   ; Cable Select D                 0 6
                               ;
                               ;----------  Valiable  constant     -------------------------
<0003>                         COUNT_P5 EQU    3          ; 04:94 Priority lebel
                               ;----------  Sub. Command constant  -------------------------
                               ;DEVCNT     EQU    00H          ; Device control
                               ;DSPCNT     EQU    01H          ; Device display control
                               ;SETDAT     EQU    02H          ; Set data to device
                               ;REDDAT     EQU    03H          ; Read data
                               ;----------  Memory loc.  ----------------------------------
                               ;Label           head addess      Comment
<0020>                         PWRDET    EQU    20H          ; 01 Command
<0021>                         CHANEL    EQU    21H          ; 03 Command
<0024>                         SUBMES    EQU    24H          ; 04 Command SUB
<0025>                         SNDMES    EQU    25H          ; 04 Command
<002D>                         SUBPWR    EQU    2DH          ; 05 Command
<002F>                         SUBSWT    EQU    2FH          ; 06 Command
<0031>                         DRPPOL    EQU    31H          ; 07 Command
```

APPENDIX B

FILE: DROP7_RST:UEHAPA   HEWLETT-PACKARD: 8041 Assembler

```
LOCATION OBJECT CODE LINE     SOURCE LINE

          <0038>     DEVPOL    EQU     38H          ; 08 Command
          <0056>     FOR84     EQU     56H          ; 84 Command
                     ;-----------------------------------------------------------------
                                ORG        0H
0000 15                        DIS      I             ;  Disnable  ext interrupt
0001 0409                      JMP      START         ;  Start Address
                                ORG        3H
0003 93                        RETP                   ;
                     ;          ORG        7H         ;
                     ;         JMP      TIMINT        ;  TIMER INT.
                     ;-----------------------------------------------------------------
                                ORG        09H
0009                 START:
                     ;
0009 237F                      MOV      A,#07FH       ;
000B 39                        OUTL     P1,A          ;  PESET PULSE FOP PEPIFERAL PROCESSOP
000C 23FF                      MOV      A,#0FFH       ;
000E 39                        OUTL     P1,A          ;
                     ;
000F F5                        EN       FLAGS         ;  enable flags IBF OBF
0010 A5                        CLR       F1           ;  F1 -- use for command header ( A0 )
0011 35              STARTU:   DIS      TCNTI         ;
0012 65                        STOP     TCNT          ;
                                                      ;======= Initialize ==============
                                                      ; 04 command buffer clear
0013 B826                      MOV      R0,#SNDMES+1  ;
0015 B040                      MOV      @R0,#040H     ;
                     ;
                                                      ; 84 command buffer clear
0017 B857                      MOV      R0,#FOR84+1   ;
0019 B0FF                      MOV      @R0,#0FFH     ;
                     ;
001B B81C                      MOV      R0,#01CH      ; register bank 1  R4
001D B031                      MOV      @R0,#DRPPOL   ;   Set Drop poll map head address
                     ;                                    for  interrupt initial start.
001F B831                      MOV      R0,#DPPPOL    ;
0021 BB07                      MOV      R3,#7         ;
0023 B0FF            INILF1:   MOV      @R0,#0FFH     ; Drop Poll Map initialization.
0025 18                        INC      R0            ;
0026 EB23                      DJNZ     R3,INILF1     ;
                     ;
0028 B838                      MOV      R0,#DEVPOL    ;
002A BA06                      MOV      R2,#6         ;
002C BB05            INILP2:   MOV      R3,#5         ; Device Poll Map initialization.
002E B0FF            INILP3:   MOV      @R0,#0FFH     ;
0030 18                        INC      R0            ;
0031 EB2E                      DJNZ     R3,INILP3     ;
0033 EA2C                      DJNZ     R2,INILP2     ;
                     ;
0035 BF04                      MOV      R7,#04H       ;  Initialize  address Register.
                                                      ;         for  interrupt routine starting
                     ;
0037 2304                      MOV      A,#PWRDT0     ;  All coverter switch off
0039 14D2                      CALL     ALLCNT        ;
003B 2303                      MOV      A,#CABL_A     ;
003D 14D2                      CALL     ALLCNT        ;
                     ;         MOV      A,#CABL_C     ;   Clear Subscriber data
```

```
FILE. DROP7_PST·UFH4FH   HEWLETT-PACKARD: 8041 Assembler

LOCATION OBJECT CODE LINE     SOURCE LINE

                    115 ;          CALL   ALLCNT        :
                    116 ;
  003F 5454         117            CALL   INIT_P        :  Power detect line Initialization
                    118 :
  0041 C5           119            SEL    RB0           :
  0042 230A         120            MOV    A,#010        ;
  0044 62           121            MOV    T,A           ;  Timer counter set   010h
  0045 BD03         122            MOV    R5,#COUNT_R5  ;
                    123 ;
  0047 25           124            EN     TCNTI         ;
  0048 45           125            STRT   CNT           ;  **** initialize end *******
                    126 ;-------------------------------------------------------------
                    127 ;
  0049 D676         128 START2:    JNIBF  CONT1         ;  IBF full ?
  004B 7650         129            JF1    START3        ; ---
                    130 ;                                   Case of using command port
  004D 22           131 START4:    IN     A,DBB         :
  004E 0449         132            JMP    START2        ; Error  -- Data Comming ignored
                    133 ;
  0050 A5           134 START3:    CLR    F1            ;  F1 flag clear
  0051 22           135            IN     A,DBB         ;   Input Command
  0052 AB           136            MOV    R3,A          ;
  0053 03F7         137            ADD    A,#-9         ;    If enter command is invalid one  ( GT.9 ) then ignore
  0055 F649         138            JC     START2        ;         ( input )  ******
  0057 FB           139            MOV    A,R3          ;
  0058 035B         140            ADD    A,#COMMAND    ;
  005A B3           141            JMPP   @A            ;   Estimate jump address
                    142 :          ----------------------------------------
  005B 64           143 COMMAND:   DB     COM0          ;
  005C 66           144            DB     COM1          ;
  005D 68           145            DB     COM2          ;
  005E 6A           146            DB     COM3          ;
  005F 6C           147            DB     COM4          :
  0060 6E           148            DB     COM5          ;
  0061 70           149            DB     COM6          :
  0062 72           150            DB     COM7          ;
  0063 74           151            DB     COM8          ;
                    152 ;          -------------
  0064 048F         153 COM0:      JMP    RESET         :  reset command
  0066 0497         154 COM1:      JMP    RPDL          ;  read power detect line
  0068 0449         155 COM2:      JMP    START2        :  not assigned
  006A 04B4         156 COM3:      JMP    CTFC          :  command tuner frequency change
  006C 04DA         157 COM4:      JMP    SMTD          ;  send message to device response
  006E 244C         158 COM5:      JMP    SPC           :  subscriver power.cable control'
  0070 0449         159 COM6:      JMP    START2        ;  not assigned
  0072 247F         160 COM7:      JMP    SDPS          :  define drop poll sequence
  0074 24D4         161 COM8:      JMP    SDEPS         :  define device poll sequense
                    162 ;-------------------------------------------------------------
                    163 ; ( 84 Command response )     :
  0076 B857         164 CONT1:     MOV    R0,#FOR84+1      84 command was occured
  0078 F0           165            MOV    A,@R0
  0079 F284         166            JB7    CONT2
  007B 5438         167            CALL   RESP84
  007D 0449         168            JMP    START2
                    169 ;-------------------------------------------------------------
                    170 ; ( 04 Command response )
  007F 2300         171 START5:    MOV    A,#00H        ; Status  flag 04 ready
```

```
FILE: DROP7_PST·UEHARA   HEWLETT-PACKARD: 8041 Assembler

LOCATION OBJECT CODE LINE     SOURCE LINE

    0081 90              172           MOV     STS,A         :
    0082 0449            173           JMP     START2        :
                         174 ;
    0084 B826            175 CONT2:    MOV     R0,#SNDMES+1  :
    0086 F0              176           MOV     A,@R0         .
    0087 F249            177           JB7     START2        : 04 response is not exist ,return.
    0089 D27F            178           JB6     STARTS        : 04 response is not exist,reset status & return.
                         179 :
    008B 541D            180           CALL    RES04         :     Send to Data_Processor
                         181 :                               :
    008D 0449            182           JMP     START2        : return main routine
                         183 ;
                         184 ;******************************************************************
                         185 ;******************************************************************
    008F BA00            186 RESET:    MOV     R2,#00        :   Send response "00" before  reset.
    0091 BB01            187           MOV     R3,#01        :
    0093 34FC            188           CALL    RESOUT        :
    0095 0411            189           JMP     START0        ;   ===== reset =====
                         190 ;###############################
                         191 :   ( Read power detect line  & Read ECU Address   )
    0097 0E              192 RPDL:     MOVD    A,P6          :  power detect  3 2 1 0
    0098 530F            193           ANL     A,#0FH        :
    009A AB              194           MOV     R3,A          :
    009B 0F              195           MOVD    A,P7          .  power detect  X X 5 4
                         196 :                               :   & ECU Address
    009C 47              197           SWAP    A             :
    009D 4B              198           ORL     A,R3          :  A -- power det. 0 - 5
    009E B820            199           MOV     R0,#PWRDET    :
    00A0 A0              200           MOV     @R0,A         ;
    00A1 BA01            201           MOV     R2,#01H       ;
    00A3 BB02            202           MOV     R3,#02H       :  2 byte send to data processor
                         203 ;
    00A5 34FC            204           CALL    RESOUT        :    Send to Data_Processor
    00A7 14AB            205           CALL    PS            : Call subscrivers power check
    00A9 0449            206           JMP     START2        :  (  set power detect line all high)
                         207 ;
                         208 :
    00AB B820            209 PS:       MOV     R0,#PWRDET    ; try  (( subscriver power on
    00AD F0              210           MOV     A,@R0         .
    00AE 43C0            211           ORL     A,#11000000B  : ( For  Subscriber that powered off )
    00B0 AA              212           MOV     R2,A          :
    00B1 54C8            213           CALL    PWRCHK        :
    00B3 83              214           RET                   :
                         215 ;###############################
                         216 :      ( Change Tuner Frequency Change  )
                         217 :
    00B4 B821            218 CTFC:     MOV     R0,#CHANEL    :
    00B6 BB03            219           MOV     R3,#03H       :
    00B8 5410            220           CALL    INPCOM        :  Stored  H  &  S C converter number
    00BA 23FF            221           MOV     A,#0FFH       :
    00BC DB              222           XRL     A,R3          .
    00BD C64D            223           JZ      START4        :  Error - input data is invalid one.
                         224 ;
    00BF B821            225           MOV     R0,#CHANEL    ;
    00C1 F0              226           MOV     A,@R0         :
    00C2 03FA            227           ADD     A,#-06H       ;
    00C4 F649            228           JC      START2        :  Error - Drop number is invalid.
```

FILE: DROP7_RST:UEHAPA    HEWLETT-PACKARD: 8041 Assembler

LOCATION OBJECT CODE LINE      SOURCE LINE

```
                   ;
00C6 5466                  CALL    TUNEP            :  Changing frequency
00C8 BA03                  MOV     R2,#03H          :
00CA BB02                  MOV     R3,#02H          ;
00CC B821                  MOV     R0,#CHANEL       :
                   ;
00CE 34FC                  CALL    RESOUT           ;  Send to Data_Processor  response " 03 "
                   ;
00D0 0449                  JMP     START2           :  return main routine
                   ;
                   ;--------------------------------
00D2 3C            ALLCNT: MOVD    P4,A             ;  Select  6 subscriber
00D3 BAC0                  MOV     R2,#0C0H         :
00D5 54AE                  CALL    SELECT           ;
00D7 83                    RET
                   ;********************************
                   ;     ( Send Message to Device )
00D8 544C          FIND84: CALL    WAIT_84          ;  if 84 CMD is exist,then send it to Data_Processor
00DA B826          SMTD:   MOV     R0,#SNDMES+1     ;
00DC F0                    MOV     A,@R0            :  See that buffer for 04 command is empty
00DD F2D8                  JB7     FIND84           ;  if buffer is full.then this routine wait
00DF D2E3          SMTD0:  JB6     SMTD1            ;           for sending to device by int. routine
00E1 541D                  CALL    RES04            :  Send 04 response to Data Processor
                   ;
00E3 2310          SMTD1:  MOV     A,#00010000B     : Set 04 command busy
00E5 90                    MOV     STS,A            ;
00E6 C8                    DEC     R0               ;
00E7 BB02                  MOV     R3,#002H         : input 2 byte ( device ID ,BYTE COUNT )
00E9 5410                  CALL    INPCOM           ;
00EB FB                    MOV     A,R3             ;
00EC D3FF                  XRL     A,#0FFH          :
00EE C64D                  JZ      START4           ;
                   :
00F0 B826                  MOV     R0,#SNDMES+1     :  See the number of send bytes
00F2 F0                    MOV     A,@R0            :                 for ata processor
00F3 AB                    MOV     R3,A             ;
                   :
00F4 03F9                  ADD     A,#-7H           :  If BYTE COUNT is greater than 6
00F6 E6FA                  JNC     SMTD4            ;   then.input data was aborted .
00F8 2438                  JMP     SMTD2            ;  abort command ( illigal return)
                   :
00FA 18            SMTD4:  INC     R0               ;  input message data
00FB 5410                  CALL    INPCOM           :
                   ;
00FD FB                    MOV     A,R3             :
00FE D3FF                  XRL     A,#0FFH          :
0100 C67A                  JZ      START7           :
                   ;
                   ;-------- sub command set routine
0102 B827                  MOV     R0,#SNDMES+2     : command .address
0104 B924                  MOV     R1,#SUBMES       : Sub. message for intr. routine
0106 F0                    MOV     A,@R0            :
0107 53F8                  ANL     A,#0F8H          :
0109 77                    RR      A                ;
010A 77                    RR      A                :
010B 77                    RR      A                ;
010C AA                    MOV     R2,A             ;
```

```
FILE: DROP7_PST:UEHARA   HEWLETT-PACKARD: 8041 Assembler

LOCATION OBJECT CODE LINE     SOURCE LINE

  010D D31F          286             XRL     A,#1FH          ;
  010F C62D          287             JZ      EXPAND          ;
  0111 FA            288             MOV     A,R2            ;
  0112 97            289             CLR     C               ;
  0113 67            290             RRC     A               ;
  0114 033C          291             ADD     A,#FNCTBL       ;
  0116 A3            292             MOVP    A,@A            ;
  0117 A1            293             MOV     @R1,A           ;
  0118 FA            294             MOV     A,R2            ;
  0119 1231          295             JB0     ODDFNC          ;
  011B 230F          296             MOV     A,#0FH          ;
  011D 51            297             ANL     A,@R1           ;
  011E A1            298             MOV     @R1,A           ;
                     299 ;--------------------------------
                     300 ;
  011F B826          301 SUBCOM:     MOV     R0,#SNDMES+1    ;
  0121 F0            302             MOV     A,@R0           ;
  0122 43C0          303             ORL     A,#0C0H         ; Set A4 Buffer full ( active )
  0124 A0            304             MOV     @R0,A           ;
                     305 ;
                     306 ;     count down  R5  ( Count time which 04 command ocured )
                     307 ;
  0125 FD            308                 MOV     A,R5                ;
  0126 962A          309                 JNZ     SET_R5              ;
  0128 BD04          310                 MOV     R5,#COUNT_R5+1      ;
  012A CD            311 SET_R5:         DEC     R5                  ;
                     312 ;
                     313 ;
  012B 0449          314             JMP     START2          ;
                     315 ;
  012D B102          316 EXPAND:     MOV     @R1,#02H        ; expand command is fixed .
  012F 241F          317             JMP     SUBCOM          ;     send to device
  0131 23F0          318 ODDFNC:     MOV     A,#0F0H         ;
  0133 51            319             ANL     A,@R1           ;
  0134 47            320             SWAP    A               ;
  0135 A1            321             MOV     @R1,A           ;
  0136 241F          322             JMP     SUBCOM          ;
                     323 ;
  0138 B040          324 SMTD2:      MOV     @R0,#40H        ;  Set status " buffer empty "
  013A 0449          325             JMP     START2          ;
                     326 ;
                     327 ;      Kind of function  define table
                     328 ;       number of command  are  as follow.
                     329 ;          1 ----  device contorl
                     330 ;          2 ----  send device data
                     331 ;          3 ----  read device information
                     332 ;
                     333 ;                                   ; command number
  013C 23            334 FNCTBL:     DB      23H             ;  1,0
  013D 22            335             DB      22H             ;  3,2
  013E 22            336             DB      22H             ;  5,4
  013F 21            337             DB      21H             ;  7,6  Specified
  0140 32            338             DB      32H             ;  9,8
  0141 32            339             DB      32H             ;  B,A  ________________
  0142 11            340             DB      11H             ;  D,C
  0143 11            341             DB      11H             ;  F,E   device control
  0144 11            342             DB      11H             ; 11,10 ________________
```

```
FILE: DROP7_RST:UEHAPA   HEWLETT-PACKARD: 8041 Assembler

LOCATION OBJECT CODE LINE     SOURCE LINE

0145 22                           DB      22H          ; 13,12
0146 22                           DB      22H          ; 15,14  send data  n to device
0147 22                           DB      22H          ; 17,16       n = 1 to 5
0148 22                           DB      22H          ; 19,18 _______________
0149 33                           DB      33H          ; 1B,1A
014A 33                           DB      33H          ; 1D,1C  read device information
014B 33                           DB      33H          ; 1F,1E _______________
                                                       ; other  send data
                     ;********************************
                     ;    (    Subscriver power control & Subscriver Switch Control     )
                     ;
014C B82D            SPC:         MOV     R0,#SUBPWR   ;
014E BB01                         MOV     R3,#01H      ;
0150 5410                         CALL    INPCOM       ;  input
                     ;
0152 FB                           MOV     A,R3         ;
0153 D3FF                         XRL     A,#0FFH      ;  Check Error indicater.
0155 C67A                         JZ      START7       ;
                     ;
0157 B82D                         MOV     R0,#SUBPWR   ;
0159 F0                           MOV     A,@R0        ;
015A 5307                         ANL     A,#07H       ;
015C AB                           MOV     R3,A         ; Drop Number
015D AC                           MOV     R4,A         ;
015E F0                           MOV     A,@R0        ;
015F F272                         JB7     SPC0         ;    bit 7 equal  1- power on  0- power off
                     ;
0161 54BC            SPC1:        CALL    PWROFF       ;
                     ;
                     ;
0163                 SPCCOM:
0163 FC                           MOV     A,R4         ;
0164 AB                           MOV     R3,A         ;  Restore  Converter Number
0165 F0                           MOV     A,@R0        ;
0166 D276                         JB6     SSC1         ;    bit 6 equal 1- sel. cable A
                     ;                                                 0- sel. cable B
0168 54C0            SSC0:        CALL    CABLEA       ;
                     ;
016A                 SSCCOM:
                     ;
016A BA05                         MOV     R2,#05H      ; Send response " 05 "
016C BB02                         MOV     R3,#02H      ;
016E 34FC                         CALL    RESOUT       ;   R0 -- SUBPWR
0170 0449                         JMP     START2       ;
                     ;
0172 54B4            SPC0:        CALL    PWRON        ;
0174 2463                         JMP     SPCCOM       ;
                     ;
0176 54C4            SSC1:        CALL    CABLEB       ;
0178 246A                         JMP     SSCCOM       ;
                     ;
                     ;
017A 044D            START7:      JMP     START4       ;
                     ;********************************
                     ;    (   Define Drop Poll Sequence   )
                     ;
017C BBFF            CHGFAL:      MOV     R3,#0FFH     ;
```

```
LOCATION OBJECT CODE LINE     SOURCE LINE

    017E 83                          RET                       ;
                            ;
    017F B831               SDPS:    MOV       R0,#DRPPOL      ;
    0181 BB03                        MOV       R3,#03          ;
                            ;
    0183 3494                        CALL      CHANGE          ;
                            ;
    0185 FB                          MOV       A,R3            ;
    0186 D3FF                        XRL       A,#0FFH         ;
    0188 C67A                        JZ        START7          ;
                            ;
    018A BA07                        MOV       R2,#07H         ;
    018C BB01                        MOV       R3,#01H         ;
    018E 34FC                        CALL      RESOUT          ;
    0190 0449                        JMP       START2          ;
                            ;
    0192 0450               START9:  JMP       START3          ;
                            ;
    0194 D694               CHANGE:  JNIBF     CHANGE          ; Change Drop poll map format
    0196 767C                        JF1       CHGFAL          ;
    0198 22                          IN        A.DBB           ;
    0199 A0                          MOV       @R0,A           ;
    019A 72B5                        JB3       NOPOL           ;
                            ;
    019C 47                 RETPOL·  SWAP      A               ;
    019D 18                          INC       R0              ;
    019E A0                          MOV       @R0,A           ;
                            ;
    019F 18                          INC       R0              ;
    01A0 EB94                        DJNZ      R3.CHANGE       ;
                            ;
    01A2 D6A2               POLMOD:  JNIBF     POLMOD          ;
    01A4 767C                        JF1       CHGFAL          ;
    01A6 22                          IN        A,DBB           ;
                            ;
    01A7 2A                          XCH       A,R2            ;
    01A8 B931                        MOV       R1.#DRPPOL      ;
    01AA F1                          MOV       A,@R1           ;
    01AB A0                          MOV       @R0,A           ;
    01AC 2A                          XCH       A,R2            ;
                            ;
    01AD 34C9                        CALL      SETP7           ;
                            ;
    01AF C8                          DEC       R0              ;
    01B0 F0                          MOV       A,@R0           ;
    01B1 4380                        ORL       A.#80H          ;
    01B3 A0                          MOV       @R0.A           ;
                            ;
    01B4 83                 CHGEND:  RET                       ;
                            ;
                            ;
    01B5 2A                 NOPOL:   XCH       A,R2            ;
    01B6 FB                          MOV       A,R3            ;
    01B7 D303                        XRL       A,#03H          ;
    01B9 C6C1                        JZ        RETSTP          ;
                            ;
    01BB C8                          DEC       R0              ;
```

FILE: DROP7_RST:UEHAPA    HEWLETT-PACKARD: 8041 Assembler

```
LOCATION OBJECT CODE LINE     SOURCE LINE

    01BC F0            457            MOV      A,@R0          ;
    01BD 4380          458            ORL      A,#80H         ;
    01BF A0            459            MOV      @R0,A          ;
                       460 ;
    01C0 18            461            INC      R0             ;
                       462 ;
    01C1 2A            463 RETSTP:    XCH      A,R2           ;
    01C2 249C          464            JMP      RETPOL         ;
                       465 ;
                       466 ;
    01C4 F1            467 RNDRBN:    MOV      A,@R1          ;
    01C5 53DF          468            ANL      A,#11011111B   ;
    01C7 A1            469            MOV      @R1,A          ;
    01C8 83            470            RET                     ;
                       471 ;
    01C9 D3FF          472 SETR7:     XRL      A,#0FFH        ;
    01CB B91F          473            MOV      R1,#31         ;
    01CD 96C4          474            JNZ      RNDRBN         ;
                       475 ;
    01CF F1            476            MOV      A,@R1          ;
    01D0 4320          477            ORL      A,#00100000B   ;
    01D2 A1            478            MOV      @R1,A          ;
    01D3 83            479            RET                     ;
                       480 ;
                       481 ;
                       482 ;
                       483 ;#########################################################
                       484 ;          Define  Device  Poll Sequence     >
                       485 ;
    01D4 D6D4          486 SDEPS:     JNIBF    SDEPS          ;
    01D6 76FA          487            JF1      START8         ;
    01D8 B838          488            MOV      R0,#DEVPOL     ;
    01DA 22            489            IN       A,DBB          ;
    01DB 5307          490            ANL      A,#07H         ;
    01DD AB            491            MOV      R3,A           ;
    01DE AC            492            MOV      R4,A           ;
    01DF C6E7          493            JZ       SDEPS1         ;
                       494 ;
    01E1 F8            495 SDEPS0:    MOV      A,R0           ;
    01E2 0305          496            ADD      A,#05H         ;
    01E4 A8            497            MOV      R0,A           ;
    01E5 EBE1          498            DJNZ     R3,SDEPS0      ;
                       499 ;
    01E7 BB05          500 SDEPS1:    MOV      R3,#05H        ;
    01E9 5410          501            CALL     INPCOM         ;
    01EB FB            502            MOV      A,R3           ;
    01EC D3FF          503            XRL      A,#0FFH        ;
    01EE C6FA          504            JZ       START8         ;
                       505 ;
    01F0 BA08          506            MOV      R2,#08H        ;
    01F2 BB02          507            MOV      R3,#02H        ;
    01F4 B804          508            MOV      R0,#04H        ;
    01F6 34FC          509            CALL     RESOUT         ;
    01F8 0449          510            JMP      START2         ;
                       511 ;
    01FA 044D          512 START8:    JMP      START4         ;
                       513 ;################################
```

FILE: DROP7_PST:UEHAPA   HEWLETT-PACKARD: 8041 Assembler

```
LOCATION OBJECT CODE LINE     SOURCE LINE

                    ;-------    Response Output Routine  -----------------------------
01FC 86FC           RESOUT:   JOBF      RESOUT          :  Check olut buffer full ?
01FE 95                       CPL       F0              :
01FF FA                       MOV       A,R2            :
0200 02                       OUT       DBB,A           :        output .Command...
                    ;
0201 CB                       DEC       R3              :
0202 FB                       MOV       A,R3            :
                    ;
0203 C60D                     JZ        RESEND          :  Command only
                    ;
0205 8605           RESCNT:   JOBF      RESCNT          ;
0207 85                       CLR       F0              :
0208 F0                       MOV       A,@R0           ;
0209 02                       OUT       DBB.A           :        output . data....
020A 18                       INC       R0              ;
020B EB0E                     DJNZ      R3,RESCN1       :
020D 83             RESEND:   RET                       :
020E 4405           RESCN1:   JMP       RESCNT          :
                    :
                    ;------------------------------------------------------------
                    ;-------   input command and  data _____________________________
                    ;
                    :         R0 -----   response Data head address
                    :         R3 -----   Bytes of input data
0210 D610           INPCOM:   JNIBF     INPCOM          ;
0212 761A                     JF1       INPEND          : comming data is not a command
0214 22                       IN        A,DBB           :      input......
0215 A0                       MOV       @R0,A           :  Store Data
0216 18                       INC       R0              :
0217 EB10                     DJNZ      R3,INPCOM       :
0219 83                       RET                       :
021A BBFF           INPEND:   MOV       R3,#0FFH        :     R3=0ffh
021C 83                       RET                       :  data failure
                    :
                    ;
                    :
                    ;      04 response output  routine
                    :
                    ;
021D F0             RES04:    MOV       A,@R0           :
021E C62F                     JZ        SD1             :   error message
                    ;
                    ;         ADD       A,#-7           :
                    ;         JC        S04END          :
                    ;
0220 F0                       MOV       A,@R0           :
0221 0303                     ADD       A,#03H          :  + Device ID  command .BYTE COUNT
                    ;
0223 AB             SD2:      MOV       R3,A            ;
0224 BA04                     MOV       R2,#04H         :
0226 B825                     MOV       R0,#SNDMES      :
0228 34FC                     CALL      RESOUT          :  response
                    :
022A B826           S04END:   MOV       R0,#SNDMES+1    :
022C B040                     MOV       @R0,#40H        :  clear 04 response for next datas.
022E 83                       RET
```

FILE: DROP7_PST:UEHAPA   HEWLETT-PACKARD: 8041 Assembler

```
LOCATION OBJECT CODE LINE     SOURCE LINE

                       571 ;
                       572 ;
022F 2304              573 SD1.     MOV     A.#004H        :  Error  message
0231 4423              574          JMP     SD2            :   ( same as 84 Command )
                       575 ;
                       576 ;------------------------------------------------------------------
                       577 ;        Response   84 Command
                       578 ;
0233                   579 RES_84:
0233 B857              580          MOV     R0,#FOR84+1    ;
0235 F0                581          MOV     A.@R0          :
0236 F247              582          JB7     END_84         :
                       583 ;
0238 C648              584 RESP84:  JZ      F84FAL         :  Called at main loop running.
                       585 ;
023A F0                586          MOV     A,@R0          :
023B 0303              587          ADD     A,#03H         :
023D AB                588          MOV     R3,A           :  store BYTE COUNT for send
                       589 ;
023E C8                590 F84ERR:  DEC     R0             :
                       591 ;
023F BA84              592          MOV     R2,#84H        :
0241 34FC              593          CALL    RESOUT         :  Response out
                       594 ;                               :
0243 B857              595 S84END:  MOV     R0.#FOR84+1    :
0245 B080              596          MOV     @R0.#080H      :  reset 84 command
0247 83                597 END_84:  RET                    :
                       598 ;
                       599 ;
0248 BB04              600 F84FAL:  MOV     R3,#04         :  if VLF communication is failed.
024A 443E              601          JMP     F84ERR         : send that condition to data process
                       602 ;__________________________________________________________________
024C                   603 WAIT_84:
024C FD                604          MOV     A.R5           :
024D 9653              605          JNZ     WAIT_END       : If R5 = 0 then look 84 buffer
024F 5433              606          CALL    RES_84         ;   send 84 command
0251 BD03              607          MOV     R5,#COUNT_R5   :  initialize R5 ( counter )
0253                   608 WAIT_END:                       :
0253 83                609          RET                    :
                       610 ;------------------------------------------------------------------
0254 B820              611 INIT_P:  MOV     R0,#PWRDET     :  Power Detect line initialization
0256 B0C0              612          MOV     @R0.#0C0H      :
0258 14AB              613          CALL    PS             ; Call subscriber's power detect
025A 83                614          RET
                       615 ;
                       616 ;==========  Change  Converter Number  to bit pattern  ===========
                       617 ;
                       618 ;
025B BAFE              619 BITSEL:  MOV     R2,#0FEH       ; R3: Drop or Converter Num.
025D FB                620          MOV     A,R3           : R2: Bit pattern (Active Low)
025E C665              621          JZ      CON0           :  exam: Converter 3
0260 FA                622          MOV     A,R2           ;   1111 0111 B
0261 E7                623 TUNLP1:  RL      A              :
0262 EB61              624          DJNZ    R3,TUNLP1      :
0264 AA                625          MOV     R2,A           :
0265 83                626 CON0:    RET                    :
                       627 ;
```

FILE: DROP7_PST:UEHAPA   HEWLETT-PACKARD: 8041 Assembler

LOCATION OBJECT CODE LINE     SOURCE LINE

```
                 ;---------------------------------
                 ::::::::::::::::::::::::::::::::::::::::::::::::::::::::::::::::
                 ::                     Change Tuner freq.                      :
                 ::::::::::::::::::::::::::::::::::::::::::::::::::::::::::::::::
                 ;    Used Resister
                 ;       R0 ---    Indicate Channel Command ( 07 command  )
                 ;       R2 ---    Converter Select
                 ;       R3 ---    Working
                 ;
                 ;

0266 B821        TUNER:    MOV     R0,#CHANEL      ;
0268 F0                    MOV     A,@R0           ;  @R0 --  Converter number
0269 AB                    MOV     R3,A            ;
                 ;
026A 545B                  CALL    BITSEL          ;
                 ;
026C B823                  MOV     R0,#CHANEL+2    ;
026E BB02                  MOV     R3,#02          ;  @R0 --  Main Counter 2 bits
0270 548F        TUNLP3:   CALL    DATOUT          ;
0272 EB70                  DJNZ    R3,TUNLP3       ;
                 ;
0274 F0                    MOV     A,@R0           ;  Abort one  bit in @R0
0275 E7                    RL      A               ;
0276 A0                    MOV     @R0,A           ;
                 ;
0277 C8                    DEC     R0              ;  @R0 --  Main Counter N
0278 BB08                  MOV     R3,#08          ;
027A 548F        TUNLP2:   CALL    DATOUT          ;
027C EB7A                  DJNZ    R3,TUNLP2
                 ;
027E 18                    INC     R0              ;
027F BB05                  MOV     R3,#05          ;
0281 548F        TUNLP4:   CALL    DATOUT          ;   Swallow counter
0283 EB81                  DJNZ    R3,TUNLP4       ;
                 ;
0285 230A                  MOV     A,#LODDAT       ;  Load pulse
0287 54A5                  CALL    PULSE           ;
                 ;
0289 2301                  MOV     A,#DAT_0        ;  Clear Data
028B 3C                    MOVD    P4,A            ;
028C 54AE                  CALL    SELECT          ;
028E 83                    RET                     ;
                 ;-------------------------------------------------
028F 97          DATOUT:   CLR     C               ;
0290 F0                    MOV     A,@R0           ;
0291 F7          CICLE0:   RLC     A               ;
0292 A0                    MOV     @R0,A           ;
0293 2309                  MOV     A,#DAT_1        ;
0295 3C                    MOVD    P4,A            ;  Data & Function set  Data  !
0296 F69B                  JC      DATA1           ;
0298 2307                  MOV     A,#07H          ;   if output data is  0
029A 9C                    ANLD    P4,A            ;      then invert a data
                 ;                                          that recentry  outputed
029B FA          DATA1:    MOV     A,R2            ;  Select  high
029C 39                    OUTL    P1,A            ;
029D 23FF                  MOV     A,#0FFH         ;
```

```
FILE: DROP7_PST:WEHAPA   HEWLETT-PACKARD: 8041 Assembler

LOCATION OBJECT CODE LINE     SOURCE LINE

029F 39                       OUTL    P1,A          :  Select  Low
                         ;
02A0 54A3                     CALL    CLOCK         :
                         ;
02A2 83                       RET                   :
                         ;-----------------------------------------------------------------
02A3 2308                CLOCK:  MOV   A,#CLKDAT    :
02A5 3C                  PULSE:  MOVD  P4,A         :  Clock High
02A6 FA                       MOV     A,R2          :
02A7 39                       OUTL    P1,A          :      Select high
02A8 23FF                     MOV     A,#0FFH       :
02AA 39                       OUTL    P1,A          :      Select low
                         ;
02AB 2307                     MOV     A,#07H        :  Clock  Low
02AD 9C                       ANLD    P4,A          :
02AE FA                  SELECT: MOV   A,R2         :      Select high
02AF 39                       OUTL    P1,A          :
02B0 23FF                     MOV     A,#0FFH       :
02B2 39                       OUTL    P1,A          :      Select low
02B3 83                       RET                   :
                         ;------------ Power, Cable . Power check        ---------------
02B4 230C                PWRON:  MOV   A,#PWRDT1    :
02B6 3C                  CONCOM: MOVD  P4,A         :
                         ;
02B7 545B                     CALL    BITSEL        :  SET P3 --- Converter Number
02B9 54AE                     CALL    SELECT        :
02BB 83                       RET                   :
02BC 2304                PWROFF: MOV   A,#PWRDT0    :
02BE 44B6                     JMP     CONCOM        :
                         ;
02C0 2303                CABLEA: MOV   A,#CABL_A    :  Select RF cable A
02C2 44B6                     JMP     CONCOM        :
                         ;
02C4 230B                CABLEB: MOV   A,#CABL_B    :  Select RF cable B
02C6 44B6                     JMP     CONCOM        :
                         ;
02C8 230D                PWRCHK: MOV   A,#DETDAT    :  Power  Check
02CA 3C                       MOVD    P4,A          :
02CB 54AE                     CALL    SELECT        :
02CD 83                       RET                   :
                         ;---------------  END  -----  ---------------------------------

Errors=     0
```

LOCATION OBJECT CODE LINE SOURCE LINE

```
"8048"
;Last Ver.(AKI)
;
;%%82043810%%%%%%%%%%%%%%%%%%%%%%%%%%%%%%%%%%%%%%%%%%%%%%%%%%%%%%%%%%%%%%%%%%
;
;
;                 Drop   Processor   ( 8042 )
;
;             timer  interrupt  routine.  ver 2.2.1
;
;                [ Hot ver. ] + 04_An     by  Hideo Shigihara.
;
;%%%%%%%%%%%%%%%%%%%%%%%%%%%%%%%%%%%%%%%%%%%%%%%%%%%%%%%%%%%%%%%%%%82043810%%%
;
;
;\\\\\\\\\\\\\\\\\\\\\\\\\\\\\\\\\\\\\\\\\\\\\\\\\\\\\\\\\\\\\\\\\\\\\\\\\\\\\\\\
;\\                                                                        \\
;\\                --- Register bank 1 ---                                 \\
;\\                                                                        \\
;\\\\\\\\\\\\\\\\\\\\\\\\\\\\\\\\\\\\\\\\\\\\\\\\\\\\\\\\\\\\\\\\\\\\\\\\\\\\\\\\
;\\                                                                        \\
;\\    *****  R0   :   Working resister.                          *****    \\
;\\                                                                        \\
;\\    *****  R1   :   Working resister.                          *****    \\
;\\                                                                        \\
;\\    *****  R2   :   Data (bit) counter.                        *****    \\
;\\                                                                        \\
;\\    *****  R3   :   Transmit or receive data buffer.           *****    \\
;\\                                                                        \\
;\\    *****  R4   :   Current access drop map address.           *****    \\
;\\                                                                        \\
;\\    *****  R5   :   Current access device map address.         *****    \\
;\\                                                                        \\
;\\    *****  R6   :   VLF flags.                                 *****    \\
;\\                                                                        \\
;\\                (bit0)   =   Error counter 0.                           \\
;\\                                                                        \\
;\\                (bit1)   =   Error counter 1.                           \\
;\\                                                                        \\
;\\                (bit2)   =   Error counter 2.                           \\
;\\                                                                        \\
;\\                (bit3)   =   --- No used. ---                           \\
;\\                                                                        \\
;\\                (bit4)   =   --- No used. ---                           \\
;\\                                                                        \\
;\\                (bit5)   =   --- No used. ---                           \\
;\\                                                                        \\
;\\                (bit6)   =   RCK flag.                                  \\
;\\                                                                        \\
;\\                (bit7)   =   --- No used. ---                           \\
;\\                                                                        \\
;\\    *****  R7   :   Polling flag                               *****    \\
;\\                                                                        \\
;\\                (bit0)   =   Return wait flag.                          \\
;\\                                                                        \\
;\\                (bit1)   =   No request flag.                           \\
;\\                                                                        \\
```

FILE: AKI:SHIGI          HEWLETT-PACKARD: 8048 Assembler

```
LOCATION OBJECT CODE LINE     SOURCE LINE
             ;\\               (bit2)    =    Only 04 flag.                        \\
             ;\\                                                                   \\
             ;\\               (bit3)    =    --- No used. ---                     \\
             ;\\                                                                   \\
             ;\\               (bit4)    =    R.R  or  priority flag(device).      \\
             ;\\                                                                   \\
             ;\\               (bit5)    =    R.R  or  priority flag(drop).        \\
             ;\\                                                                   \\
             ;\\               (bit6)    =    First drop select flag.              \\
             ;\\                                                                   \\
             ;\\               (bit7)    =    Response flag.                       \\
             ;\\                                                                   \\
             ;\\\\\\\\\\\\\\\\\\\\\\\\\\\\\\\\\\\\\\\\\\\\\\\\\\\\\\\\\\\\\\\\\\\\\\\\
             ;
             ;
                      ORG      07H
             ;
             ;]]]]]]]]]]]]]]]]]]]]]]]]]]]]]]]]]]][[[[[[[[[[[[[[[[[[[[[[[[[[[[[[[[[[[[[
             ;|||||||||||||||||||||||||||||||||||||||||||||||||||||||||||||||||||||||
             ;
             ;                      TIMER INTERPUPT ROUTINE.
             ;
             ;|||||||||||||||||||||||||||||||||||||||||||||||||||||||||||||||||||||||
             ;
0007 6400                                JMP      HETIT
             ;
             ;]]]]]]]]]]]]]]]]]]]]]]]]]]]]]]]]]]][[[[[[[[[[[[[[[[[[[[[[[[[[[[[[[[[[[[[
             ;
             ;-----------------------------------------------------------------------
             ;
             ;
      <0024> SDMSGK   EQU     24H              ;Submessage for device response.
             ;                                  (Command only ,WR or RD data.)
             ;
      <0025> SDMSGH   EQU     25H              ;04 command buffer ( ID.)
             ;
             ;
      <0026> SDMSG1   EQU     26H              ;04 command buffer ( byte count.)
             ;
             ;
      <0027> SDMSGC   EQU     27H              ;04 command buffer ( command.)
             ;
             ;
      <0031> DRMAP0   EQU     31H              ;Drop polling map ( 2.0 )
             ;
             ;
      <0036> DRMAP5   EQU     36H              ;Drop polling map ( 2.5 )
             ;
             ;
      <0037> DRMAPH   EQU     37H              ;Drop polling map ( 2.H )
             ;
             ;
      <0038> DVM10    EQU     38H              ;Device polling map ( 1.0.0 )
             ;
             ;
      <003D> DVM11    EQU     3DH              ;Device polling map ( 1.1.0 )
             ;
```

```
LOCATION OBJECT CODE LINE     SOURCE LINE

                  ;
<0042>            DVM12    EQU     42H          ;Device polling map ( 1.2.0 )
                  ;
                  ;
<0047>            DVM13    EQU     47H          ;Device polling map ( 1.3.0 )
                  ;
                  ;
<004C>            DVM14    EQU     4CH          ;Device polling map ( 1.4.0 )
                  ;
                  ;
<0051>            DVM15    EQU     51H          ;Device polling map ( 1.5.0 )
                  ;
                  ;
<0056>            RE84H    EQU     56H          ;84 command buffer ( ID.)
                  ;
                  ;
<0057>            RE841    EQU     57H          ;84 command buffer ( byte count.)
                  ;
                  ;
<0058>            RE84C    EQU     58H          ;84 command buffer ( data 0.)
                  ;
                  ;
<005D>            TXBUF    EQU     5DH          ;Transmissive data buffer.
                  ;
                  ;
<005E>            DEMAP0   EQU     5EH          ;Device polling map ( 2.N.0 ).
                  ;
                  ;
<0065>            DEMAP7   EQU     65H          ;Device polling map ( 2.N.7 ).
                  ;
                  ;
<0067>            DEMAPH   EQU     67H          ;Device polling map ( 2.N.H ).
                  ;
                  ;
<0068>            LAV1     EQU     68H          ;Indirect addressing data buffer.
                  ;
                  ;
<0069>            ANSPAR   EQU     69H          ;Parity flag .
                  ;
                  ;
<006A>            POLING   EQU     6AH          ;Current access device & drop
                  ;                               number set buffer.
                  ;
<006B>            CNTBY    EQU     6BH          ;Byte counter for Rx or Tx.
                  ;
                  ;
<006C>            SAVDRP   EQU     6CH          ;Drop number save buffer.
                  ;
                  ;
                  ;
                  ;-------------------------------------------------------------
                  ;
                                   ORG          300H
                  ;
                  ;*************************************************************
                  ;-------------------------------------------------------------
                  ;
```

FILE: AKI:SHIGI HEWLETT-PACKARD: 8048 Assembler

```
LOCATION OBJECT CODE LINE     SOURCE LINE

                     ;*************  INDIRECT ADDRESSING ROUTINE.  *******************
                     ;
0300 2F              HETIT:   XCH     A,R7          ;Jumping address set.
                     ;
0301 D5                       SEL     RB1           ;Register bank change.
                     ;
0302 0305                     ADD     A,#NEGIH      ;Indirect addressing jump.
0304 B3                       JMPP    @A            ;
                     ;
                     ;
                     ;*****************************************************************
                     ;
                     ;-----------------------------------------------------------------
                     ;
                     ;###############  INDIRECT ADDRESSING TABLE.  ####################
                     ;
                     ;
0305 2527292B2D      NEGIH:   DB       A0, A1, A2, A3, A4, A5, A6, A7
                     ;
                     ;
030D 3537393B3D               DB       A8, B9,B10,C11,C12,C13,C14,C15
                     ;
                     ;
0315 4547494B4D               DB      C16,C17,C18,C19,D20,D21,D22,D23
                     ;
                     ;
031D 5557595B5D               DB      D24,D25,D26,D27,D28,E29,E30,F31
                     ;
                     ;
                     ;#################################################################
                     ;
                     ;-----------------------------------------------------------------
                     ;|||||||||||||||||||||||||||||||||||||||||||||||||||||||||||||||||
                     ;|                                                               |
                     ;|$$$$$$$$$$$  JUMP  TABLE  FOR  TIMER  INTERRUPT.  $$$$$$$$$$$$|
                     ;|                                                               |
                     ;|                       < I N D E X >                           |
                     ;|                                                               |
0325 649A            A0:      JMP     CPCMO        ;[#0]  : Conditional poll command  |
                     ;|                                     set & start bit Tx routine|
                     ;|          [ L.No  423 ]                                        |
                     ;|                                                               |
0327 64E3            A1:      JMP     DWBO         ;[#1]  : Transmissive data Tx      |
                     ;|                                     routine.                  |
                     ;|          [ L.No  519 ]                                        |
                     ;|                                                               |
0329 64B5            A2:      JMP     MIBO         ;[#2]  : Message indicator bit Tx  |
                     ;|                                     routine.                  |
                     ;|          [ L.No  456 ]                                        |
                     ;|                                                               |
032B 64FE            A3:      JMP     PALBO        ;[#3]  : Last bit of transmissive  |
                     ;|                                     data Tx routine.          |
                     ;|          [ L.No  556 ]                                        |
                     ;|                                                               |
032D 6465            A4:      JMP     MTMINT       ;[#4]  : Drop select & start bit Tx|
                     ;|                                     routine.                  |
                     ;|          [ L.No  355 ]                                        |
```

```
FILE: AKI:SHIGI          HEWLETT-PACKARD: 8048 Assembler

LOCATION OBJECT CODE LINE     SOURCE LINE

                       229 ;|
    032F 841A          230 A5:        JMP     PARBT         ;[#5]  : Parity bit Tx routine.
                       231 ;|
                       232 ;|          [ L.No  604 ]
                       233 ;|
    0331 8411          234 A6:        JMP     STOP0         ;[#6]  : Stop bit Tx routine.(1)
                       235 ;|
                       236 ;|          [ L.No  585 ]
                       237 ;|
    0333 8439          238 A7:        JMP     ACK1          ;[#7]  : ACK receive & ckeck
                       239 ;|                                         routine.(1)
                       240 ;|          [ L.No  655 ]
                       241 ;|
    0335 8422          242 A8:        JMP     RCK           ;[#8]  : RCK receive & check
                       243 ;|                                         routine.
                       244 ;|          [ L.No  624 ]
                       245 ;|
    0337 C47F          246 B9:        JMP     ACK4          ;[#9]  : ACK check 4.
                       247 ;|                                       (disposal of 04 command.)
                       248 ;|          [ L.No 1456 ]
                       249 ;|
    0339 A4E8          250 B10:       JMP     COM04D        ;[#10] : 04 command data Tx.
                       251 ;|                                       (disposal of 04 command.)
                       252 ;|          [ L.No 1241 ]
                       253 ;|
    033B 848E          254 C11:       JMP     KEYDAY        ;[#11] : Start bit Tx.
                       255 ;|                                             (Rx routine.)
                       256 ;|          [ L.No  740 ]
                       257 ;|
    033D 84BB          258 C12:       JMP     PALK          ;[#12] : Parity bit Rx.
                       259 ;|                                             (Rx routine.)
                       260 ;|          [ L.No  814 ]
                       261 ;|
    033F 8498          262 C13:       JMP     RSTAT         ;[#13] : Start bit erase.
                       263 ;|                                             (Rx routine.)
                       264 ;|          [ L.No  760 ]
                       265 ;|
    0341 84A2          266 C14:       JMP     PBSET         ;[#14] : Receivable data Rx.
                       267 ;|                                             (Rx routine.)
                       268 ;|          [ L.No  780 ]
                       269 ;|
    0343 84DE          270 C15:       JMP     ACKOT         ;[#15] : ACK bit Tx. (1)
                       271 ;|                                             (Rx routine.)
                       272 ;|          [ L.No  855 ]
                       273 ;|
    0345 A4AE          274 C16:       JMP     STGN84        ;[#16] : Stop bit Tx 6.
                       275 ;|                                       continue 84 command data Rx
                       276 ;|          [ L.No 1137 ]
                       277 ;|
    0347 A43A          278 C17:       JMP     NCKOT         ;[#17] : NCK Tx .
                       279 ;|                                             (Rx routine.)
                       280 ;|          [ L.No  999 ]
                       281 ;|
    0349 A4BE          282 C18:       JMP     STGN04        ;[#18] : Stop bit Tx 7.
                       283 ;|                                       continue 04 command data Rx
                       284 ;|          [ L.No 1137 ]
                       285 ;|
```

```
FILE: AKI:SHIGI          HEWLETT-PACKARD: 8048 Assembler

LOCATION OBJECT CODE LINE     SOURCE LINE

  034B C43E            286 C19:     JMP     ACK3         ;[#19] : ACK check 3.          |
                       287 ;|                                     (Rx routine.)     |
                       288 ;|           [ L.No 1393 ]                               |
                       289 ;|                                                       |
  034D A4D4            290 D20:     JMP     COM04        ;[#20] : Start bit Tx.         |
                       291 ;|                                     (04 command.)     |
                       292 ;|           [ L.No 1215 ]                               |
                       293 ;|                                                       |
  034F A406            294 D21:     JMP     STER84       ;[#21] : Stop bit Tx 3.        |
                       295 ;|                                disposal of 84 com error. |
                       296 ;|           [ L.No  922 ]                               |
                       297 ;|                                                       |
  0351 84F8            298 D22:     JMP     STER04       ;[#22] : Stop bit Tx 2.        |
                       299 ;|                                disposal of 04 com error. |
                       300 ;|           [ L.No  900 ]                               |
                       301 ;|                                                       |
  0353 A49A            302 D23:     JMP     STGR84       ;[#23] : Stop bit Tx 5.        |
                       303 ;|                                84 com all ok & end.    |
                       304 ;|           [ L.No 1110 ]                               |
                       305 ;|                                                       |
  0355 A424            306 D24:     JMP     STGR04       ;[#24] : Stop bit Tx 4.        |
                       307 ;|                                04 com all ok & end.    |
                       308 ;|           [ L.No  965 ]                               |
                       309 ;|                                                       |
  0357 84EC            310 D25:     JMP     REPRX        ;[#25] : Stop bit Tx 1.        |
                       311 ;|                                challenge once more.    |
                       312 ;|           [ L.No  878 ]                               |
                       313 ;|                                                       |
  0359 A459            314 D26:     JMP     LCIN         ;[#26] : Last character indicator |
                       315 ;|                                         check.        |
                       316 ;|           [ L.No 1038 ]                               |
                       317 ;|                                                       |
  035B E434            318 D27:     JMP     IDLINT       ;[#27] : Wait routine for 84 com.  test.test
                       319 ;|                                          < No 1 >     |
                       320 ;|           [ L.No 1684 ]                               |
                       321 ;|                                                       |
  035D E416            322 D28:     JMP     DSCF84       ;[#28] : Drop scan for 84 command. |
                       323 ;|                                                       |
                       324 ;|           [ L.No 1629 ]                               |
                       325 ;|                                                       |
  035F E477            326 E29:     JMP     DSF04C       ;[#29] : Drop scan for 04 command. |
                       327 ;|                                                       |
                       328 ;|           [ L.No 1765 ]                               |
                       329 ;|                                                       |
  0361 E44B            330 E30:     JMP     NDPS04       ;[#30] : Changing opreation to 84. |
                       331 ;|                                                       |
                       332 ;|           [ L.No 1713 ]                               |
                       333 ;|                                                       |
  0363 64CE            334 F31:     JMP     SMLING       ;[#31] : Life sample.          |
                       335 ;|                                                       |
                       336 ;|           [ L.No  492 ]                               |
                       337 ;|                                                       |
                       338 ;|                                                       |
                       339 ;|$$$$$$$$$$$$$$$$$$$$$$$$$$$$$$$$$$$$$$$$$$$$$$$$$$$$$$$$$$$$$$$$|
                       340 ;|                                                       |
                       341 ;|||||||||||||||||||||||||||||||||||||||||||||||||||||||||||||||||||
                       342 ;
```

```
LOCATION OBJECT CODE LINE     SOURCE LINE

           ;%%%%%%%%%%%%%%%%%%%%%%%%%%%%%%%%%%%%%%%%%%%%%%%%%%%%%%%%%%%%%%%%%%%%%%%%%
           ;%                                                                       %
           ;%****  CONDITIONAL-POLL.CONDITIONAL-POLL.CONDITIONAL-POLL.          ****%
           ;%                                                                       %
           ;%%%%%%%%%%%%%%%%%%%%%%%%%%%%%%%%%%%%%%%%%%%%%%%%%%%%%%%%%%%%%%%%%%%%%%%%%
           ;
           ;*************************************************************************
           ;
           ;            <    DROP SELECT & START BIT SET.   >
           ;                                                                     #A4
           ;*************************************************************************
           ;
           ;             ..................................................
0365 00    MTMINT:  NOP
0366 266C           JNT0     ETDSR        ;Detect service request
                                            from SPU.
           ;
           ;             ..................................................
           ;
0368 D40B           CALL     TSET1        ;1 bit time counter set & start.
036A 6489  NOTMAP:  JMP      DVMNS        ;<  no request !  >
           ;                              ;
           ;                               <  request !  >
036C D40B  ETDSR:   CALL     TSET1        ;1 bit time counter set & start.
           ;
036E B831           MOV      R0,#DRMAP0   ;Drop map set or not.
0370 F0             MOV      A,@R0        ;
0371 726A           JB3      NOTMAP       ;
           ;
0373 F4B6           CALL     DEVCH        ;Changing the device map.
           ;
0375 BD5E           MOV      R5,#DEMAP0   ;First device select.
           ;
           ;
0377 FD    DMSRE:   MOV      A,R5         ;Next device select.
0378 A8             MOV      R0,A         ;
0379 F0             MOV      A,@R0        ;
037A B867           MOV      R0,#DEMAPH   ;Device map 1 set or not ?
037C A0             MOV      @R0,A        ;
037D D3FF           XRL      A,#0FFH      ;
037F C689           JZ       DVMNS        ;
           ;
           ;                               <  set  !  >
0381 D422           CALL     PARCLL       ;Parity flag clear
           ;                                  & VLF flags clear.
0383 D414           CALL     VLF00        ;Start bit "0" set.
           ;
0385 2300           MOV      A,#0         ;***NEXT [CPCMD]***
0387 C4EF           JMP      JMPR         ;RETP.
           ;
           ;                               <  No request or not set  !  >
0389 FF    DVMNS:   MOV      A,R7         ;
038A 4302           ORL      A,#02H       ;Drop scan flag set.
038C AF             MOV      R7,A         ;
           ;
038D B4FF           CALL     BCNTBC       ;04 command set or not ?
038F F293           JB7      SF04D        ;
0391 C4F2           JMP      NTDRP        ;<  Not set  !  >
```

FILE: AKI:SHIGI HEWLETT-PACKARD: 8048 Assembler

```
LOCATION OBJECT CODE LINE     SOURCE LINE

                        ;
                        ;
0393 FF                 SF04D:   MOV     A,R7
0394 4304                        ORL     A.#04H         :
0396 AF                          MOV     R7,A           :
0397 E459                        JMP     INT04S         ;Disposal of 04 command.
                        ;                                ***NEXT [COM04]***
                        ;
                        ;
                        ;
                        ;*************************************************************
                        ;
                        ;      <  CONDITIONAL POLL COMMAND SET & START BIT SET.   >
                        ;                                                          #A0
                        ;*************************************************************
                        ;
                        ;|||||||||||||||||||||||||||||||||||||||||||||||||||||||||||||
                        ;|                                                            |
0399 58                 CPCOM:   DB      58H            :                             |
                        ;|                                                            |
                        ;|||||||||||||||||||||||||||||||||||||||||||||||||||||||||||||
                        ;
                        ;
                        ;        ...............................................
039A F8                 CPCMO:   MOV     A,R0           :Start bit trans.
039B 3D                          MOVD    P5,A           ;
                        ;        ...............................................
                        ;
039C D40B                        CALL    TSET1          ;1 bit time counter set & start.
                        ;
039E 2399                        MOV     A,#CPCOM       ;Conditional poll command set.
03A0 A3                          MOVP    A,@A           :( Transmissive data set. )
03A1 A9                          MOV     R1,A           :
03A2 B867                        MOV     R0,#DEMAPH     :[#TXBUF] <--- conditional poll
03A4 F0                          MOV     A.@R0          : command + device address.
03A5 530F                        ANL     A.#0FH         :
03A7 49                          ORL     A,R1           :
03A8 B85D                        MOV     R0,#TXBUF      :
03AA A0                          MOV     @R0.A          :
                        ;
03AB B868                        MOV     R0,#LAV1       :Indirect addressing buffer set.
03AD B007                        MOV     @R0.#7         :
                        ;
03AF D414                        CALL    VLF00          :MI bit "0" set.
                        ;
03B1 2302                        MOV     A,#2           ;***NEXT [MI00]***
03B3 C4EF                        JMP     JMPP           :RETR.
                        ;
                        ;
                        ;
                        ;*************************************************************
                        ;
                        ;           <  MESSAGE INDICATOR BIT Tx .   >
                        ;                                                          #A2
                        ;*************************************************************
                        ;
                        ;        ...............................................
```

FILE: AKI:SHIGI          HEWLETT-PACKARD: 8048 Assembler

```
LOCATION OBJECT CODE LINE     SOURCE LINE

0385 F8                MIO0:    MOV     A,R0          :MI bit trans.
03B6 3D                         MOVD    P5,A          ;
                       ;        .................................................
                       ;
03B7 D40F                       CALL    TSET05        ;1 bit time counter set & start.
                       ;
03B9 B85D                       MOV     R0,#TXBUF     ;A<--[TXBUF]
03BB F0                         MOV     A,@R0         ;
03BC 67                         RRC     A             ;Rotate right.
03BD AB                         MOV     R3,A          ;
03BE F6C4                       JC      VLFD1         ;Cy=1 ?
                       ;
03C0 D414                       CALL    VLF00         ;(Carry = 0)
                       ;                               Transmissive data = '0' set.
                       ;
03C2 64C8                       JMP     MIO0E         ;
                       ;
03C4 D429              VLFD1:   CALL    PALAN         ;(Carry = 1)
                       ;                               Parity analyse.
                       ;
03C6 D41B                       CALL    VLF01         ;Transmissive data = '1' set.
                       ;
03C8 BA07              MIO0E:   MOV     R2,#07H       ;Bit counter set.
                       ;
03CA 231F                       MOV     A,#31         ;***NEXT [SMLING]***   ←変更部分
03CC C4EF                       JMP     JMPR          ;RETR.
                       ;
                       ;
                       ;
                       ;*******************************************************
                       ;
                       ;                     ( LIFE   SAMPLE.  )
                       ;                                                  #F31
                       ;*******************************************************
                       ;
                       ;        .................................................
03CE 00                SMLING:  NOP                   ;exist the bad Device on
03CF 36D9                       JT0     SMLOK         ;      this cable ?
                       ;        .................................................
03D1 D40F                       CALL    TSET05        ;(Error !)
                       ;                               Half bit time counter set &
03D3 FE                         MOV     A,R6          ;    start.
03D4 4310                       ORL     A,#10H        ;
03D6 AE                         MOV     R6,A          ;
03D7 64DF                       JMP     DWBOJP        ;
                       ;
03D9 D40F              SMLOK:   CALL    TSET05        ;(Ok !)
                       ;                               Half bit time counter set &
03DB FE                         MOV     A,R6          ;    start.
03DC 53EF                       ANL     A,#0EFH       ;
03DE AE                         MOV     R6,A          ;
                       ;
03DF 2301              DWBOJP:  MOV     A,#1          ;***NEXT [DWBO]***
03E1 C4EF                       JMP     JMPR          ;RETR.
                       ;
                       ;
                       ;*******************************************************
```

```
FILE: AKI:SHIGI          HEWLETT-PACKARD: 8048 Assembler

LOCATION OBJECT CODE LINE     SOURCE LINE

                          ;
                          :                   (  8 BIT DATA Tx.  )
                          ;                                                              #A1
                          ;*************************************************************************
                          :
                          ;           .....................................................
03E3 F8                   DWBO:     MOV     A,R0            :Transmissive data trans.
03E4 3D                             MOVD    P5,A            :
                          ;           .....................................................
                          ;
03E5 D40B                           CALL    TSET1           :1 bit time counter set & start.
                          ;
03E7 FB                             MOV     A,R3            ;Rotate right.
03E8 67                             RRC     A               :
03E9 AB                             MOV     R3,A            :
03EA F6F0                           JC      VLFD2           :Cy = 1 ?
                          ;
03EC D414                           CALL    VLF00           :Next transmissive data = '0' set.
                          ;
03EE 64F4                           JMP     DWBOC           :
                          ;
03F0 D429                 VLFD2:    CALL    PALAN           ;Next transmissive data = '1' set.
                          ;
03F2 D41B                           CALL    VLF01           :Parity flag set.
                          ;
03F4 EAFA                 DWBOC:    DJNZ    R2,DWBOE        :Transmissive data end ?
                          ;                                  ( end ! )
03F6 2303                           MOV     A,#3            :***NEXT [PALAN]***
03F8 C4EF                           JMP     JMPR            :RETR.
                          ;
                          ;                                  ( not end ! )
03FA 2301                 DWBOE:    MOV     A,#1            ;***NEXT [DWBO]***
03FC C4EF                           JMP     JMPR            :RETR.
                          ;
                          ;
                          ;
                          ;*************************************************************************
                          ;
                          ;                   (  LAST DATA Tx.  )
                          :                                                              #H3
                          ;*************************************************************************
                          :
                          ;           .....................................................
03FE F8                   PALBO:    MOV     A,R0            :Last data trans.
03FF 3D                             MOVD    P5,A            ;
                          ;           .....................................................
                          ;
0400 D40B                           CALL    TSET1           ;1 bit time counter set & start.
                          ;
0402 B869                           MOV     R0,#ANSPAP      :
0404 F0                             MOV     A,@R0           :Parity flag check.
0405 120B                           JB0     EVNST           :
                          ;
0407 D414                           CALL    VLF00           :(  Even  !  )
                          ;                                  Parity bit "0" set.
0409 840D                           JMP     PBSED           :
                          ;
```

```
LOCATION OBJECT CODE LINE     SOURCE LINE

  040B D41B          EVNST:   CALL    VLF01          ;(  Odd  !  )
                     ;                                Parity bit "1" set.
                     ;
  040D 2305          PBSED:   MOV     A,#5           ;***NEXT [MTMINT]***
  040F C4EF                   JMP     JMPR           ;PETR.
                     ;
                     ;
                     ;
                     ;*****************************************************************
                     ;
                     ;                      (  STOP BIT Tx.  )
                     ;                                                             #A6
                     ;*****************************************************************
                     ;
                     ;        ...................................................
  0411 F8            STOPO:   MOV     A,R0           ;
  0412 3D                     MOVD    P5,A           ;Stop bit trans.
                     ;        ...................................................
                     ;
  0413 D40F                   CALL    TSET05         ;Half bit time counter set & start.
                     ;
  0415 B868                   MOV     R0,#LAV1       ;Indirect addressing.
  0417 F0                     MOV     A,@R0          ;***NEXT <-- [LAV1]***
  0418 C4EF                   JMP     JMPR           ;RETR.
                     ;
                     ;
                     ;
                     ;*****************************************************************
                     ;
                     ;                      (  PARITY BIT Tx.  )
                     ;                                                             #A5
                     ;*****************************************************************
                     ;
                     ;        ...................................................
  041A F8            PARBT:   MOV     A,R0
  041B 3D                     MOVD    P5,A           ;Parity bit trans.
                     ;        ...................................................
                     ;
  041C D40F                   CALL    TSET05         ;Half bit time counter set & start.
                     ;
  041E 2308                   MOV     A,#8           ;Indirect addressing.
                     ;                                ***NEXT [RCK]***
  0420 C4EF                   JMP     JMPR           ;RETR.
                     ;
                     ;
                     ;
                     ;
                     ;*****************************************************************
                     ;
                     ;                      (  RCK CHECK.  )
                     ;                                                             #A8
                     ;*****************************************************************
                     ;
                     ;        ...................................................
  0422 00            RCK:     NOP                    ;
  0423 362D                   JT0     SPCEI          ;RCK bit detect.
                     ;        ...................................................
```

```
FILE: AKI:SHIGI          HEWLETT-PACKARD: 8048 Assembler

LOCATION OBJECT CODE LINE     SOURCE LINE

                     628 ;
0425 D40F            629            CALL    TSET05          ;Half bit time counter set & start.
                     630 ;
0427 FE              631            MOV     A,R6            ;RCK flag set.
0428 4340            632            ORL     A,#40H          ;( OK  !.)
042A AE              633            MOV     R6,A            ;
042B 8433            634            JMP     RCKE            ;
                     635 ;                                   ( Error  ! )
042D D40F            636 SPCEI:     CALL    TSET05          ;Half bit time counter set & start.
                     637 ;
042F FE              638            MOV     A,R6            ;RCK flag set.
0430 53BF            639            ANL     A,#0BFH         ;
0432 AE              640            MOV     R6,A            ;
                     641 ;
0433 D41B            642 RCKE:      CALL    VLF01           ;Stop bit "1" set.
                     643 ;
0435 2306            644            MOV     A,#6            ;***NEXT [STOP0]***
0437 C4EF            645            JMP     JMPR            ;RETR.
                     646 ;
                     647 ;
                     648 ;
                     649 ;*****************************************************************
                     650 ;
                     651 ;                      (  ACK CHECK.  )
                     652 ;                                                              #A?
                     653 ;*****************************************************************
                     654 ;
                     655 ;          ..................................................
0439 00              656 ACK1:      NOP                     ;
043A 2647            657            JNT0    CMCHK4          ;ACK bit detect.
                     658 ;          ..................................................
                     659 ;
043C D40F            660            CALL    TSET05          ;Half bit time counter set & start.
                     661 ;
043E FE              662            MOV     A,R6            ;RCK flag check !
043F D26A            663            JB6     RCKEND          ;
                     664 ;
0441 B4FF            665 ERRCKT:    CALL    BCNTBC          ;(  RCK error  !  )
0443 F28C            666            JB7     DP04ST          ;
0445 C4AF            667            JMP     DISEND          ;(EP)
                     668 ;
0447 D40F            669 CMCHK4:    CALL    TSET05          ;Half bit time counter set & start
0449 FE              670            MOV     A,R6            ;
044A 924E            671            JB4     ABERSP          ;
044C 8441            672            JMP     ERRCKT          ;
                     673 ;
044E B867            674 ABERSP:    MOV     R0,#DEMAPH      ;make error message (04).
0450 F0              675            MOV     A,@R0           ;
0451 5307            676            ANL     A,#07H          ;
0453 E7              677            RL      A               ;
0454 E7              678            RL      A               ;
0455 E7              679            RL      A               ;
0456 A9              680            MOV     R1,A            ;
0457 B837            681            MOV     R0,#DRMAPH      ;
0459 F0              682            MOV     A,@R0           ;
045A 5307            683            ANL     A,#07H          ;
045C 49              684            ORL     A,R1            ;
```

FILE: AKI:SHIGI HEWLETT-PACKARD: 8048 Assembler

```
LOCATION OBJECT CODE LINE     SOURCE LINE

045D B856                       MOV     R0,#RE84H       ;
045F A0                         MOV     @R0,A           ;
0460 B858                       MOV     R0,#RE84C       ;
0462 B004                       MOV     @R0,#04H        ;
0464 B857                       MOV     R0,#RE841       ;
0466 B000                       MOV     @R0,#0H         ;
0468 8441                       JMP     ERRCKT          ;
                            ;
                            ;                           ( ACK & RCK ok ! )
046A D422                   RCKEND: CALL PARCLL         ;Parity flag clear
                            ;                                & VLF flags clear.
                            ;
046C B867                       MOV     R0,#DEMAPH      ;Make address byte of 84 command.
046E F0                         MOV     A,@R0           ;
046F 5307                       ANL     A,#07H          ;[#POLING] <--- drop number ( upper
0471 E7                         RL      A               ; 5 bit ) + device address ( lower
0472 E7                         RL      A               ; 3 bit ).
0473 E7                         RL      A               ;
0474 A9                         MOV     R1,A            ;
0475 B837                       MOV     R0,#DRMAPH      ;
0477 F0                         MOV     A,@R0           ;
0478 5307                       ANL     A,#07H          ;
047A 49                         ORL     A,R1            ;
047B B86A                       MOV     R0,#POLING      ;
047D A0                         MOV     @R0,A           ;
                            ;
047E B868                       MOV     R0,#LAV1        ;
0480 B000                       MOV     @R0,#0H         ;84 command flag set.
0482 B86B                       MOV     R0,#CNTBY       ;Byte counter clear.
0484 B000                       MOV     @R0,#0H         ;
                            ;
0486 D414                       CALL    VLF00           ;Start bit "0"  set.          test
                            ;
0488 230B                       MOV     A,#11           ;(Advance !)
                            ;                            ***NEXT [KEYDAY]***
048A C4EF                       JMP     JMPR            ;RETR.
                            ;
048C E459                   DP04ST: JMP  INT04S         ;Disposal of 04 command.
                            ;
                            ;
                            ;
                            ;***************************************************************
                            ;
                            ;****  84COM-84COM-84COM-84COM-84COM-84COM-84COM-84COM-84COM  ****
                            ;*                                                             *
                            ;*                   DISPOSAL OF 84 COMMAND.                   *
                            ;*                                                             *
                            ;****  84COM-84COM-84COM-84COM-84COM-84COM-84COM-84COM-84COM  ****
                            ;
                            ;***************************************************************
                            ;
                            ;           ( START BIT Tx <--- Rx ROUTINE. )
                            ;                                                          #C11
                            ;***************************************************************
                            ;
                            ;   .....................................................
048E F8                     KEYDAY: MOV  A,R0           ;
```

FILE: AKI:SHIGI HEWLETT-PACKARD: 8048 Assembler

```
LOCATION OBJECT CODE LINE     SOURCE LINE
048F 3D                               MOVD    P5,A            ;Start bit trans.
                            ;         ...............................................

0490 D40B                             CALL    TSET1           ;1 bit time counter set & start.
                            ;
0492 D41B                             CALL    VLFO1           ;Start bit reset stb "1"  set.
                            ;
0494 230D                             MOV     A,#13           ;***NEXT [RSTAT]***
0496 C4EF                             JMP     JMPR            ;RETR.
                            ;
                            ;
                            ;
                            ;*************************************************************
                            ;
                            ;              <  START BIT ERASE.<--- Rx ROUTINE.   >
                            ;                                                        #C13
                            ;*************************************************************
                            ;
                            ;         ...............................................
0498 F8                     RSTAT:    MOV     A,R0            ;Start bit clear.
0499 3D                               MOVD    P5,A            ;
                            ;         ...............................................
                            ;
049A D40F                             CALL    TSET05          ;Half bit time counter set & start.
                            ;
049C BA08                             MOV     R2,#08H         ;Bit counter set.
                            ;
049E 230E                             MOV     A,#14           ;***NEXT [RBSET]***
04A0 C4EF                             JMP     JMPR            ;RETR.
                            ;
                            ;
                            ;
                            ;*************************************************************
                            ;
                            ;                 <  DATA Rx <--- Rx ROUTINE.  >
                            ;                                                        #C14
                            ;*************************************************************
                            ;
                            ;         ...............................................
04A2 00                     RBSET:    NOP
04A3 26AB                             JNT0     VDATI1         ;Received data is
                            ;                                   " 0 " or " 1 "  ?
                            ;         ...............................................
                            ;
04A5 D40B                             CALL    TSET1           ;1 bit time counter set & start.
                            ;
04A7 F431                             CALL    VLFI0           ;<  Data = "0".  >
04A9 84B1                             JMP     CNTDN           ;
                            ;                                  <  Data = "1".  >
04AB D40B                   VDATI1:   CALL    TSET1           ;1 bit time counter set & start.
                            ;
04AD D429                             CALL    PALAN           ;Parity flag set.
04AF F42B                             CALL    VLFI1           ;
                            ;
04B1 EAB7                   CNTDN:    DJNZ    R2,SETRB        ;Receive end or not ?
                            ;
                            ;                                  < Receive end ! >
```

```
FILE: AKI:SHIGI          HEWLETT-PACKARD: 8048 Assembler

LOCATION OBJECT CODE LINE     SOURCE LINE

  04B3 230C         PALKS:    MOV     A,#12          ;***NEXT [PALK]***
  04B5 C4EF                   JMP     JMPR           ;RETR.
                    ;
                    ;                                ( Receive continue ! )
  04B7 230E         SETPB:    MOV     A,#14          ;***NEXT [PBSET]***
  04B9 C4EF                   JMP     JMPR           ;RETR.
                    ;
                    ;
                    ;
                    ;*****************************************************************
                    ;
                    ;              (   PARITY BIT Rx.<--- Rx ROUTINE.    )
                    ;                                                            #C12
                    ;*****************************************************************
                    ;
                    ;         ..............................................
  04BB 00           PALK:     NOP
  04BC 26D5                   JNT0    PTYBI          ;Parity bit Rx.
                    ;         ..............................................
                    ;
  04BE D40F                   CALL    TSET05         ;Half bit time counter set & start.
                    ;
  04C0 B869                   MOV     R0,#ANSPAR     ;(Parity bit = "0")
  04C2 F0                     MOV     A,@R0          ;
  04C3 12C7                   JB0     NCKAC          ;
  04C5 84CD                   JMP     ACKAC          ;
                    ;
  04C7 D41B         NCKAC:    CALL    VLF01          ;( Parity error ! )
                    ;                                 NACK "1" set.
                    ;
  04C9 2311                   MOV     A,#17          ;***NEXT [NCKOT]***
  04CB C4EF                   JMP     JMPR           ;RETR.
                    ;
                    ;                                 ( Parity ok ! )
  04CD D424         ACKAC:    CALL    PARCLR         ;Parity flag clear.
  04CF D414                   CALL    VLF00          ;
                    ;                                 ACK "0" set.
                    ;
  04D1 230F                   MOV     A,#15          ;***NEXT [ACKOT]***
  04D3 C4EF                   JMP     JMPR           ;RETR.
                    ;
  04D5 D40F         PTYBI:    CALL    TSET05         ;Half bit time counter set & start.
                    ;
  04D7 B869                   MOV     R0,#ANSPAR     ;Parity bit = "1" ?
  04D9 F0                     MOV     A,@R0          ;
  04DA 12CD                   JB0     ACKAC          ;(Parity Ok !)
  04DC 84C7                   JMP     NCKAC          ;(Parity error !)
                    ;
                    ;
                    ;
                    ;*****************************************************************
                    ;
                    ;              (   ACK Tx.<--- Rx ROUTINE.   )
                    ;                                                            #C15
                    ;*****************************************************************
                    ;
                    ;         ..............................................
```

```
LOCATION OBJECT CODE LINE     SOURCE LINE

    04DE F8              ACKOT:   MOV    A,R0          ;ACK trans.
    04DF 3D                       MOVD   P5,A          ;
                         ;        ................................................
                         ;
    04E0 D40F                     CALL   TSET05        ;Half bit time counter set & start.
                         ;
    04E2 FF                       MOV    A,R7          ;
    04E3 4380                     ORL    A,#80H        ;Response flag set.
    04E5 AF                       MOV    R7,A          ;
                         ;
    04E6 D41B                     CALL   VLF01         ;Stop bit "1" set.
                         ;
    04E8 231A                     MOV    A,#26         ;***NEXT [LCIN]***
    04EA C4EF                     JMP    JMPR          ;RETR.
                         ;
                         ;
                         ;*******************************************************************
                         ;
                         ;          ( STOP BIT Tx 1. CHALLENGE Rx ONCE MORE. )
                         ;                                                              #D25
                         ;*******************************************************************
                         ;
                         ;        ................................................
    04EC F8              REPRX:   MOV    A,R0          ;Stop bit Tx.
    04ED 3D                       MOVD   P5,A          ;
                         ;        ................................................
                         ;
    04EE D40B                     CALL   TSET1         ;1 bit time counter set & start.
                         ;
    04F0 D424                     CALL   PARCLR        ;Parity flag clear.
                         ;
    04F2 D414                     CALL   VLF00         ;Start bit "0" set.
                         ;
    04F4 230B                     MOV    A,#11         ;***NEXT [KEYDAY]***
    04F6 C4EF                     JMP    JMPR          ;RETR.
                         ;
                         ;
                         ;
                         ;*******************************************************************
                         ;
                         ;          ( STOP BIT Tx 2.---- FOR 04 COMMAND. )
                         ;                                                              #D22
                         ;*******************************************************************
                         ;
                         ;        ................................................
    04F8 F8              STEP04:  MOV    A,R0          ;Stop bit trans.
    04F9 3D                       MOVD   P5,A          ;
                         ;        ................................................
                         ;
    04FA D40B                     CALL   TSET1         ;1 bit time counter set & start.
                         ;
    04FC B827                     MOV    R0,#SDMSGC    ;
    04FE B002                     MOV    @R0,#02H      ;Error indicator set.
    0500 B826                     MOV    R0,#SDMSG1    ;
    0502 B000                     MOV    @R0,#0H       ;
                         ;
    0504 E48A                     JMP    R04ERS        ;
```

```
LOCATION OBJECT CODE LINE     SOURCE LINE

                     ;
                     ;
                     ;
                     ;**************************************************************
                     ;
                     ;              (  STOP BIT Tx 3. FOR 84 COMMAND.  )
                     ;                                                          #D21
                     ;**************************************************************
                     ;
                     ;        ..............................................
0506 F8              STER84:  MOV     A,R0          ;Stop bit trans.
0507 3D                       MOVD    P5,A          ;
                     ;        ..............................................
                     ;
0508 D40B                     CALL    TSET1         ;1 bit time counter set & start.
                     ;
050A B86A                     MOV     R0,#POLING    ;Drop & device address set
                     ;                                     to response buffer.
050C F0                       MOV     A,@R0         ;
050D B856                     MOV     R0,#RE84H     ;
050F A0                       MOV     @R0,A         ;
                     ;
0510 B858                     MOV     R0,#RE84C     ;
0512 B002                     MOV     @R0,#02H      ;( DEVICE to ECU link error ! )
0514 B857                     MOV     R0,#RE841     ;Error indicator set.
0516 B000                     MOV     @R0,#0H       ;
0518 C4AF                     JMP     DISEND
                     ;
                     ;
                     ;
                     ;-----------------------------------------------SUB ROUTINE---
                     ;
                     ;    [ INPUT DATA SET TO 04 BUF. & BYTE COUNTER INC.ROUTINE. ]
                     ;
                     ;--------------------------------------------------------------
                     ;
051A D403            INDABY:  CALL    CNTBCK        ;
051C 0328                     ADD     A,#SDMSGC+1   ;
051E A8                       MOV     R0,A          ;
051F FB                       MOV     A,R3          ;
0520 A0                       MOV     @R0,A         ;Input data set to 04 buf.

0521 D407                     CALL    BCNINC        ;Byte counter Inc.
0523 83                       RET
                     ;
                     ;
                     ;**************************************************************
                     ;
                     ;          (  STOP BIT Tx 4. 04 COMMAND ALL OK ! END !  )
                     ;                                                          #D24
                     ;**************************************************************
                     ;
                     ;        ..............................................
0524 F8              STGR04:  MOV     A,R0          ;Stop bit trans.
0525 3D                       MOVD    P5,A          ;
                     ;        ..............................................
                     ;
```

```
FILE: AKI:SHIGI          HEWLETT-PACKARD: 8048 Assembler

LOCATION OBJECT CODE LINE     SOURCE LINE

     0526 D40B             970            CALL     TSET1          :1 bit time counter set & start.
                           971 ;
     0528 B827             972            MOV      R0,#SDMSGC     :Device address clear.
     052A F0               973            MOV      A,@R0          ;
     052B 53F8             974            ANL      A,#0F8H        ;
     052D 77               975            RR       A              ;
     052E 77               976            RR       A              ;
     052F 77               977            RR       A              ;
     0530 A0               978            MOV      @R0,A          ;
                           979 ;
     0531 B41A             980            CALL     INDABY         :Input data set to 04 buf.
                           981 ;                                     & byte counter inc.routine.
                           982 ;
     0533 10               983            INC      @R0            ;
                           984 ;
     0534 F0               985            MOV      A,@R0          ;
     0535 B826             986            MOV      R0,#SDMSG1     :Byte counter buffer set.
     0537 A0               987            MOV      @R0,A          ;
                           988 ;
     0538 E48A             989            JMP      R04ERS
                           990 ;
                           991 ;
                           992 ;
                           993 ;*****************************************************************
                           994 ;
                           995 ;                  (  NCK Tx.<--- Rx ROUTINE.  )
                           996 ;                                                            #C17
                           997 ;*****************************************************************
                           998 ;
                           999 ;          ..............................................
     053A F8              1000 NCKOT:     MOV      A,R0           :NCK trans.
     053B 3D              1001            MOVD     P5,A           ;
                          1002 ;          ..............................................
                          1003 ;
     053C D40B            1004            CALL     TSET1          :1 bit time counter set & start.
                          1005 ;
     053E FE              1006            MOV      A,R6           ;
     053F 5248            1007            JB2      REPER          :Error = 5 times ?
     0541 1E              1008            INC      R6             :Error counter inc.
     0542 D41B            1009            CALL     VLF01          ;
                          1010 ;                                  Stop  bit "1" set.
                          1011 ;
     0544 2319            1012            MOV      A,#25          :***NEXT [REPRX]***
     0546 C4EF            1013            JMP      JMPR           :RETR.
                          1014 ;
     0548 B868            1015 REPER:     MOV      R0,#LAV1       :( 5 times error ! )
     054A F0              1016            MOV      A,@R0          :Disposal of 04 command or
                          1017 ;                                      84 command ?
     054B C653            1018            JZ       JER84          ;
     054D D41B            1019            CALL     VLF01          :04 command error response.
                          1020 ;                                  stop bit "1" set.
                          1021 ;
     054F 2316            1022            MOV      A,#22          ;***NEXT [STER04]***
     0551 C4EF            1023            JMP      JMPR           :RETR.
                          1024 ;
     0553 D41B            1025 JER84:     CALL     VLF01          ;84 ( dr polling ) error response.
                          1026 ;                                  stop bit "1" set.
```

FILE: AKI:SHIGI HEWLETT-PACKARD: 8048 Assembler

```
LOCATION OBJECT CODE     SOURCE LINE

                     ;
 0555 2315                        MOV     A,#21          ;***NEXT [STEP84]***
 0557 C4EF                        JMP     JMPR           ;RETR.
                     ;
                     ;
                     ;***********************************************************************
                     ;
                     ;            <  LAST CHARACTER INDICATOR CHECK.  >
                     ;                                                                   #D26
                     ;***********************************************************************
                     ;
                     ;            ..................................................
 0559 00             LCIN:        NOP
 055A 267B                        JNT0    LCIEN          ;Last character indicator
                     ;                                     detect.
                     ;            ..................................................
                     ;
 055C D40F                        CALL    TSET05         ;Half bit time counter set & start.
                     ;
 055E B868                        MOV     R0,#LAV1       ;
 0560 F0                          MOV     A,@R0          ;
 0561 C66F                        JZ      BAI84          ;Disposal of 84 command or
                     ;
 0563 D403                        CALL    CNTBCK         ;Byte counter check.
 0565 D304                        XRL     A,#4H          ;Data <= 5 byte ?
 0567 C68E                        JZ      LCIER          ;(    04    )error.
                     ;                                    good !
 0569 D41B                        CALL    VLF01          ;(  Disposal of 04 command !  )
                     ;                                    Stop bit "1" set.
                     ;
 056B 2312                        MOV     A,#18          ;***NEXT [STGN04]***
 056D C4EF                        JMP     JMPR           ;RETR.
                     ;
 056F D403           BAI84:       CALL    CNTBCK         ;
 0571 D304                        XRL     A,#4H          ;Data <= 5 byte ?
 0573 C694                        JZ      DY84           ;(    84    )error.
                     ;
                     ;                                    good !
 0575 D41B                        CALL    VLF01          ;( Disposal of 84 command ! )
                     ;                                    Stop bit "1" set.
                     ;
 0577 2310                        MOV     A,#16          ;***NEXT [STGN84]***
 0579 C4EF                        JMP     JMPR           ;RETR.
                     ;
 057B D40F           LCIEN:       CALL    TSET05         ;Half bit time counter set & start.
                     ;
 057D B868                        MOV     R0,#LAV1       ;
 057F F0                          MOV     A,@R0          ;
 0580 C688                        JZ      ENST84         ;
 0582 D41B                        CALL    VLF01          ;( Disposal of 04 command ! )
                     ;                                    Stop bit "1" set.
                     ;
 0584 2318                        MOV     A,#24          ;***NEXT [STGR04]***
 0586 C4EF                        JMP     JMPR           ;RETR.
                     ;
                     ;                                    ( Disposal of 84 command ! )
 0588 D41B           ENST84:      CALL    VLF01          ;
```

FILE: AKI:SHIGI HEWLETT-PACKARD: 8048 Assembler

```
LOCATION OBJECT CODE LINE     SOURCE LINE
                       ;                                  Stop bit "1" set.
                       ;
058A 2317                         MOV      A,#23          ;***NEXT [STGR84]***
058C C4EF                         JMP      JMPR           ;RETR.
                       ;
                       ;                                  ( grater than 5 byte! )
058E D41B              LCIER:     CALL     VLF01          ;( Disposal of 04 command ! )
                       ;                                  Stop bit "1" set.
                       ;
0590 2316                         MOV      A,#22          ;***NEXT [STER04]***
0592 C4EF                         JMP      JMPR           ;RETR.
                       ;
0594 D41B              DY84:      CALL     VLF01          ;( Disposal of 84 command ! )
                       ;                                  Stop bit "1" set.
                       ;
0596 2315                         MOV      A,#21          ;***NEXT [STER84]***
0598 C4EF                         JMP      JMPR           ;RETR.
                       ;
                       ;
                       ;
                       ;**************************************************************
                       ;
                       ;          ( STOP BIT Tx 5.  84 COMMANMD ALL OK ! END !  )
                       ;                                                           #D23
                       ;**************************************************************
                       ;
                       ;          ..............................................
059A F8                STGR84:    MOV      A,R0           ;Stop bit trans.
059B 3D                           MOVD     P5,A           ;
                       ;          ..............................................
                       ;
059C D40B                         CALL     TSET1          ;1 bit time counter set & start.
                       ;
059E B4CC                         CALL     REDSTB         ;Response data set to 84 buffer.
                       ;
05A0 B86A                         MOV      R0,#POLING     ;Disposal address buffer set.
05A2 F0                           MOV      A,@R0          ;
05A3 B856                         MOV      R0,#RE84H      ;
05A5 A0                           MOV      @R0,A          ;
05A6 D407                         CALL     BCNINC         ;Byte counter buffer set.
05A8 F0                           MOV      A,@R0          ;
05A9 B857                         MOV      R0,#RE841      ;
05AB A0                           MOV      @R0,A          ;
05AC C4AF                         JMP      DISEND
                       ;
                       ;
                       ;
                       ;**************************************************************
                       ;
                       ;          ( STOP BIT Tx 6. 84 COMMAND Rx DATA CONTINUE.  )
                       ;                                                           #C16
                       ;**************************************************************
                       ;
                       ;          ..............................................
05AE F8                STGN84:    MOV      A,R0           ;Stop bit trans.
05AF 3D                           MOVD     P5,A           ;
                       ;          ..............................................
```

FILE: AKI:SHIGI HEWLETT-PACKARD: 8048 Assembler

```
LOCATION OBJECT CODE LINE     SOURCE LINE

                        ;
05B0 D40B                          CALL    TSET1          :1 bit time counter set & start.
                        ;
05B2 B4CC                          CALL    REDSTB         ;Input data set to 84 command
                        ;                                              buffer.
05B4 D407                          CALL    BCHINC         ;Byte counter Inc.
                        ;
05B6 D422                          CALL    PARCLL         ;Parity flag clear
                        ;                                       & VLF flags clear.
                        ;
05B8 D414                          CALL    VLF00          ;
                        ;                                  Start bit "0" set.
                        ;
05BA 230B                          MOV     A,#11          ;***NEXT [KEYDAY]***
05BC C4EF                          JMP     JMPR           ;RETR.
                        ;
                        ;
                        ;
                        ;*****************************************************************
                        ;
                        ;          ( STOP BIT Tx 7. 04 COMMAND DATA Rx CONTINUE.  )
                        ;                                                             #C18
                        ;*****************************************************************
                        ;
                        ;      ..................................................
05BE F8                 STGN04:    MOV     A,R0           ;Stop bit trans.
05BF 3D                            MOVD    P5,A           ;
                        ;      ..................................................
                        ;
05C0 D40B                          CALL    TSET1          ;1 bit time counter set & start.
                        ;
05C2 B41A                          CALL    INDABY         :Input data set to 04 buf.
                        ;                                    byte counter inc. routine.
                        ;
05C4 D422                          CALL    PARCLL         ;Parity flag clear
                        ;                                       & VLF flags clear.
                        ;
05C6 D414                          CALL    VLF00          :
                        ;                                  Start bit "0" set.
                        ;
05C8 230B                          MOV     A,#11          :***NEXT [KEYDAY]***
05CA C4EF                          JMP     JMPR           :RETR.
                        ;
                        ;
                        ;
                        ;*****************************************************************
                        ;---------------------------------------------------SUB ROUTINE---
                        ;
                        ;               [ RESPONSE DATA SET TO 84 BUFFER. ]
                        ;
                        ;-----------------------------------------------------------------
                        ;
05CC D403               REDSTB:    CALL    CNTBCK         :
05CE 0358                          ADD     A,#RE84C       ;
05D0 A8                            MOV     R0,A           ;
05D1 FB                            MOV     A,R3           ;
05D2 A0                            MOV     @R0,A          ;Input data set to 84 buf.
```

```
LOCATION OBJECT CODE LINE     SOURCE LINE

  05D3 83                             RET                        :
                               ;
                               ;
                               ;------------------------------------------------------------------
                               ;
                               ;****  04COM-04COM-04COM-04COM-04COM-04COM-04COM-04COM-04COM  ****
                               ;*                                                                *
                               ;*                   DISPOSAL OF 04 COMMAND.                      *
                               ;*                                                                *
                               ;****  04COM-04COM-04COM-04COM-04COM-04COM-04COM-04COM-04COM  ****
                               ;
                               ;******************************************************************
                               ;
                               ;              ( START BIT Tx. <--- 04 COMMAND.  )
                               ;                                                              #D20
                               ;******************************************************************
                               ;
                               ;          ................................................
  05D4 F8                      COM04:     MOV     A,R0             ;Start bit trans.
  05D5 3D                                 MOVD    P5,A             :
                               ;          ................................................
                               ;
  05D6 D40B                               CALL    TSET1            ;1 bit time counter set & start.
                               ;
  05D8 B827                               MOV     R0,#SDMSGC       ;
  05DA F0                                 MOV     A,@R0            ;
  05DB B85D                               MOV     R0,#TXBUF        ;Tx buffer <--- command (04)
  05DD A0                                 MOV     @R0,A            ;
  05DE B868                               MOV     R0,#LAV1         :
  05E0 B013                               MOV     @R0,#19          ;[LAV1] <-- ACK3.
  05E2 D414                               CALL    VLF00            :MI bit "0" set.
                               ;
  05E4 2302                               MOV     A,#2             :***NEXT (MI00)***
  05E6 C4EF                               JMP     JMPR             :PETR.
                               ;
                               ;
                               ;
                               ;******************************************************************
                               ;
                               ;                 (  04 COMMAND  DATA Tx.  )
                               ;                                                              #B10
                               ;******************************************************************
                               ;
                               ;          ................................................
  05E8 F8                      COM04D:    MOV     A,R0             ;Start bit Tx.
  05E9 3D                                 MOVD    P5,A             :
                               ;          ................................................
                               ;
  05EA D40B                               CALL    TSET1            :1 bit time counter set & start.
                               ;
  05EC D403                               CALL    CNTBCK           :
  05EE 0327                               ADD     A,#SDMSGC        ;
  05F0 A8                                 MOV     R0,A             ;
  05F1 F0                                 MOV     A,@R0            :
  05F2 B85D                               MOV     R0,#TXBUF        ;Tx buffer <--- Data set.
  05F4 A0                                 MOV     @R0,A            :
  05F5 B868                               MOV     R0,#LAV1         ;
```

```
LOCATION OBJECT CODE LINE     SOURCE LINE

 05F7 B009                   MOV    @R0,#9        ;[LAY1] <--- ACK4.
 05F9 D41B                   CALL   VLF01         :MI bit "1" set.
                        ;
 05FB 2302                   MOV    A,#2          ;***NEXT (MI00)***
 05FD C4EF                   JMP    JMPR          ;RETR.
                        ;
                        ;
                        ;
                        ;***************************************************************
                        ;-------------------------------------------------SUB ROUTINE----
                        ;
                        ;                   [  BYTE COUNT BYTE CHECK.  ]
                        ;
                        ;----------------------------------------------------------------
                        ;
 05FF B826              BCNTBC:      MOV    R0,#SDMSG1    :
 0601 F0                     MOV    A,@R0         ;
 0602 83                     RET
                        ;
                        ;
                        ;--------------------------------------------------SUB ROUTINE---
                        ;
                        ;                      [  BYTE COUNTER CHECK.  ]
                        ;
                        ;----------------------------------------------------------------
                        ;
 0603 B86B              CNTBCK:      MOV    R0,#CNTBY     :
 0605 F0                     MOV    A,@R0         :
 0606 83                     RET
                        ;
                        ;
                        ;--------------------------------------------------SUB ROUTINE---
                        ;
                        ;                    [  BYTE COUNTER INC.  ]
                        ;
                        ;----------------------------------------------------------------
                        ;
 0607 B86B              BCNINC:      MOV    R0,#CNTBY     ;
 0609 10                     INC    @R0           :
 060A 83                     RET
                        ;
                        ;
                        ;--------------------------------------------------SUB ROUTINE---
                        ;
                        ;                   [  1 BIT TIME COUNTER SET.  ]
                        ;
                        ;----------------------------------------------------------------
                        ;
 060B 23EF              TSET1:       MOV    A,#239        ;
 060D C411                   JMP    TIST          ;
                        ;
                        ;
                        ;---------------------------------------------------SUB ROUTINE--
                        ;
                        ;                  [ HALF BIT TIME COUNTER SET. ]
                        ;
                        ;----------------------------------------------------------------
```

```
FILE: AKI:SHIGI          HEWLETT-PACKARD: 8048 Assembler

LOCATION OBJECT CODE LINE     SOURCE LINE

                     1312 ;
    060F 23F8        1313 TSET05:  MOV     A,#248        :
                     1314 ;
    0611 62          1315 TIST:    MOV     T,A           :
    0612 45          1316          STRT    CNT           :
    0613 83          1317          RET
                     1318 ;
                     1319 ;
                     1320 ;------------------------------------------------SUB ROUTINE---
                     1321 ;
                     1322 ;                  [  VLF OUTPUT DATA "0" SET.  ]
                     1323 ;
                     1324 ;--------------------------------------------------------------
                     1325 ;
    0614 B837        1326 VLF00:   MOV     R0,#DRMAPH    :
    0616 F0          1327          MOV     A,@R0         ;
    0617 5307        1328          ANL     A,#07H        :
    0619 C420        1329          JMP     VLF0ST        ;
                     1330 ;
                     1331 ;
                     1332 ;------------------------------------------------SUB ROUTINE---
                     1333 ;
                     1334 ;                 [  VLF OUTPUT DATA "1" SET.  ]
                     1335 :
                     1336 ;--------------------------------------------------------------
                     1337 ;
    061B B837        1338 VLF01:   MOV     R0,#DRMAPH    :
    061D F0          1339          MOV     A,@R0         ;
    061E 4308        1340          ORL     A,#08H        ;
    0620 A8          1341 VLF0ST:  MOV     R0,A          ;
    0621 83          1342          RET
                     1343 ;
                     1344 ;
                     1345 ;------------------------------------------------SUB ROUTINE---
                     1346 ;
                     1347 ;                   [  PAPITY FLAG CLEAR.  ]
                     1348 ;
                     1349 ;--------------------------------------------------------------
                     1350 ;
    0622 BE00        1351 PARC_L:  MOV     R6,#0         :VLF flags clear.
                     1352 ;
    0624 B869        1353 PARC_P:  MOV     R0,#ANSPAR    :Parity flag clear.
    0626 B000        1354          MOV     @R0,#0H       :
    0628 83          1355          RET
                     1356 ;
                     1357 ;
                     1358 ;------------------------------------------------SUB ROUTINE---
                     1359 ;
                     1360 ;                    [  PARITY CHECK.  ]
                     1361 :
                     1362 ;--------------------------------------------------------------
                     1363 ;
    0629 B869        1364 PALAN:   MOV     R0,#ANSPAR    :
    062B 10          1365          INC     @R0           ;
    062C 83          1366          RET
                     1367 ;
                     1368 ;
```

```
FILE: AKI:SHIGI          HEWLETT-PACKARD: 8048 Assembler

LOCATION OBJECT CODE LINE     SOURCE LINE

                      ;---------------------------------------------SUB ROUTINE---
                      ;
                      ;              [ Error response set to 04 buffer. ]
                      ;
                      ;-----------------------------------------------------------
                      ;
  062D B827           ERRSES:  MOV     R0,#SDMSGC    ;Error indicate .
  062F FE                      MOV     A,R6          ;
  0630 D236                    JB6     ERRSEA        ;
  0632 B003                    MOV     @R0,#03H      ;( abnormal error  ! )
  0634 C438                    JMP     ERRSEE        ;
                      ;
  0636 B001           ERRSEA:  MOV     @R0,#01H      ;( normal error  ! )
  0638 B826           ERRSEE:  MOV     R0,#SDMSG1    ;
  063A B000                    MOV     @R0,#0H       ;
  063C E48A                    JMP     R04ERS        ;
                      ;
                      ;
                      ;**********************************************************
                      ;
                      ;               (  ACK CHECK 3 <--- 04 COMMAND.  )
                      ;                                                      #D29
                      ;**********************************************************
                      ;
                      ;        ...............................................
  063E 00             ACK3:    NOP                   ;
  063F 2648                    JNT0     ACKER    ·   ;ACK bit Rx.
                      ;        ...............................................
                      ;
 -0641 D40F                    CALL    TSET05        ;Half bit time counter set & start.
                      ;
 -0643 FE                      MOV     A,R6          ;RCK ?
  0644 D254                    JB6     ACKSSC        ;
  0646 C44A                    JMP     ACKER2        ;
                      ;                               RCK error.
  0648 D40F           ACKER:   CALL    TSET05        ;Half bit time counter set & start.
                      ;
  064A FE             ACKER2:  MOV     A,R6          ;
  064B 527D                    JB2     ACEND         ;5 times error ?
  064D 1E                      INC     R6            ;
  064E D414                    CALL    VLF00         ;Re-challenge.
                      ;                               Start bit "0".set.
                      ;
  0650 2314                    MOV     A.#20         ;***NEXT (COM04)***
  0652 C4EF                    JMP     JMPR          ;RETR.
                      ;
  0654 B824           ACKSSC:  MOV     R0,#SDMSGK    ;(command only!)
  0656 F0                      MOV     A,@R0         ;
  0657 325F                    JB1     RWMOD         ;
  0659 B826                    MOV     R0,#SDMSG1    ;
  065B B040                    MOV     @R0,#01000000B;
  065D E48A                    JMP     R04ERS        ;
                      ;
  065F 126D           RWMOD:   JB0     RDMOD         ;Command + RD or WR ?
  0661 B86B                    MOV     R0,#CNTBY     ;
  0663 B001                    MOV     @R0,#1H       ;
  0665 D422                    CALL    PARCLL        ;Parity flag clear
```

```
LOCATION OBJECT CODE LINE     SOURCE LINE

                  ;                                            & VLF flags clear.
 0667 D414                     CALL     VLF00            ;
                  ;                                       Start bit "0" set.
                  ;
                  ;                                       (command + message!)
 0669 230A                     MOV      A,#10            ;***NEXT (COM04D)***
 066B C4EF                     JMP      JMPR             ;RETR.
                  ;
 066D D422        RDMOD:       CALL     PARCLL           ;Parity flag clear
                  ;                                            & VLF flags clear.
 066F B868                     MOV      R0,#LAV1         ;
 0671 B001                     MOV      @R0,#1H          ;
 0673 B86B                     MOV      R0,#CNTBY   .    ;
 0675 B000                     MOV      @R0,#0H          ;
 0677 D414                     CALL     VLF00            ;Start bit "0" set.
                  ;
                  ;                                       (command + response!)
 0679 230B                     MOV      A,#11            ;***NEXT [KEYDAY]***
 067B C4EF                     JMP      JMPR             ;RETR.
                  ;
 067D C42D        ACEND:       JMP      ERRSES           ;
                  ;
                  ;
                  ;
                  ;*****************************************************************
                  ;
                  ;              (  ACK CHECK 4.  <--- 04 COMMAND.  )
                  ;
                  ;*****************************************************************#B9
                  ;
                  ;           .......................... ......................
 067F 00          ACK4:       NOP                        ;
 0680 2689                    JNT0      AERCK            ;ACK bit check.
                  ;           ...................... .........................
                  ;
 0682 D40F                    CALL  .   TSET05           ;Half bit time counter set & start.
                  ;
 0684 FE                      MOV       A,R6             ;(ACK !)
 0685 D293                    JB6       AOKCK            ;
 0687 C48B                    JMP       AERCK2           ;
                  ;
                  ;                                       (  NCK  !  )
 0689 D40F        AERCK:      CALL      TSET05           ;Half bit time counter set & start.
                  ;
 068B FE          AERCK2:     MOV       A,R6             ;5 times error ?
 068C 52A7                    JB2       AENCK            ;
 068E 1E                      INC       R6               ;Error counter Inc.
                  ;                                       Challenge once more.
 068F D424                    CALL      PARCLR           ;Parity flag clear.
 0691 C4A1                    JMP       A04CON           ;
                  ;
 0693 B4FF        AOKCK:      CALL      BCNTBC           ;(  ACK & PCK ok !  )
 0695 5307                    ANL       A,#07H           ;
 0697 A9                      MOV       R1,A             ;
 0698 C9                      DEC       R1               ;
 0699 D403                    CALL      CNTBCK           ;
 069B D9                      XRL       A,R1             ;
```

```
FILE: AKI:SHIGI          HEWLETT-PACKARD: 8048 Assembler

LOCATION OBJECT CODE LINE     SOURCE LINE
069C C6A9                          JZ      END04W          ;Tx operation end or not ?
069E 10                            INC     @R0             :
069F D424                          CALL    PARCLR          ;Parity flag clear.
                     ;                                      (  Tx operation continue
                     ;                                                 for 04 com ! )
                     ;
06A1 D414            A04CON:       CALL    VLF00           ;Start bit "0" set.
                     ;
                                   MOV     A,#10           ;***NEXT (COM04D)***
06A3 230A                          JMP     JMPR            ;RETR.
06A5 C4EF
                     ;
06A7 C42D            AENCK:        JMP     ERRSES          ;04 command response error.
                                                             Error indicator set.
                     :
                     ;                                      ( Tx operation end for 04 com !  )
                     ;
06A9 B826            END04W:       MOV     R0,#SDMSG1      ;
06AB B040                          MOV     @R0,#01000000B;
06AD E48A                          JMP     R04ERS          :
                     ;
                     ;
                     ;**************************************************************
                     ;**************************************************---SUB ROUTINE---
                     ;--------------------------------------------------------------------
                     ;
                     ;                       [   JMP TO HEAD ROUTINE.   ]
                     ;
                     ;--------------------------------------------------------------------
                     ;
06AF D422            DISEND:       CALL    PARCLL          :Parity flag clear
                                                                  & VLF flags clear.
                     :
06B1 B857                          MOV     R0,#RE841
06B3 F0                            MOV     A,@R0
06B4 F2BA                          JB7     JPIDL
06B6 231B                          MOV     A,#27
06B8 C4EF                          JMP     JMPR
                     ;
06BA FF              JPIDL:        MOV     A,R7            ;Response flags check !
06BB F2CA                          JB7     PCHKS           :
                     ;                                      ( no  response  ! )
                     :
06BD B867            CONTDE:       MOV     R0,#DEMAPH      :Device end ^
06BF F0                            MOV     A,@R0           :
06C0 F2C5                          JB7     ALEND           :
06C2 1D                            INC     R5
06C3 6477                          JMP     DMSRE           ;Device continue.
                     ;
                     ;
06C5 FF              ALEND:        MOV     A,R7            :
06C6 D2E8                          JB6     PRDR2           :
06C8 C4F2                          JMP     NTDRP           ;
                     ;
                     ;                                      ( response  ! )
06CA 537F            PCHKS:        ANL     A,#7FH          :
06CC AF                            MOV     R7,A            ;Response flag clear.
                     ;
06CD 92E4                          JB4     PRDEV           :
                     ;
```

FILE: AKI:SHIGI          HEWLETT-PACKARD: 8048 Assembler

```
LOCATION OBJECT CODE LINE     SOURCE LINE

06CF B867                          MOV     R0,#DEMAPH      ;
06D1 F0                            MOV     A,@R0           ;
06D2 F2DF                          JB7     QUESE           ;
06D4 FF                            MOV     A,R7            ;
06D5 B2D9                          JB5     PRLSFS          ;
                        ;
06D7 C4BD                          JMP     CONTDE          ;
                        ;
06D9 FF                 PRLSFS:    MOV     A,R7            ;
06DA 4340                          ORL     A,#040H         ;
06DC AF                            MOV     R7,A            ;
06DD C4BD                          JMP     CONTDE          ;
                        ;
06DF FF                 QUESE:     MOV     A,R7            ;
06E0 B2EB                          JB5     PRDRP           ;
06E2 C4BD                          JMP     CONTDE          ;(  P.R.device poll &
                                                             R.R.drop poll.  )
                        ;
06E4 B2E8               PRDEV:     JB5     PRDR2           ;(  Priority device poll
                                                             & P.R.drop poll.  )
                        ;
06E6 C4F2                          JMP     NTDRP           ;Next drop select.
                        ;
06E8 53BF               PRDR2:     ANL     A,#0BFH         ;
06EA AF                            MOV     R7,A            ;
                        ;
06EB BD5E               PRDRP:     MOV     R5,#DEMAP0
06ED C4FC                          JMP     STDPS           ;(  Priority or R.R.device poll
                        ;                                    & priority drop poll.  )
                        ;                                   1st drop select.
                        ;
                        ;-----------------------------------------------------SUB ROUTINE---
                        ;
                        ;                 [  RETURN ROUTINE.  ]
                        ;
                        ;------------------------------------------------------------------
                        ;
06EF C5                 JMPR:      SEL     RB0             ;
06F0 2F                            XCH     A,R7            ;
06F1 93                            RETR
                        ;
                        ;
                        ;-----------------------------------------------------SUB ROUTINE---
                        ;
                        ;            [  NEXT ACCESS DROP SELECT.  ]
                        ;
                        ;------------------------------------------------------------------
                        ;
                        ;
06F2 BD5E               NTDRP:     MOV     R5,#DEMAP0      ;
06F4 FC                            MOV     A,R4            ;
06F5 A8                            MOV     R0,A            ;
06F6 F0                            MOV     A,@R0           ;
06F7 F2FC                          JB7     STDPS           ;Drop end or not ?
06F9 1C                            INC     R4              ;( not end ! )
                        ;                                   Next drop set.
06FA E409                          JMP     SETSD           ;
                        ;
                        ;
```

```
FILE: AKI:SHIGI          HEWLETT-PACKARD: 8048 Assembler

LOCATION OBJECT CODE LINE     SOURCE LINE

06FC BC31          STDPS:  MOV    R4,#DRMAP0     ;( Drop end ! )
06FE B831                  MOV    R0,#DRMAP0     :
0700 F0                    MOV    A,@R0          ;
0701 7205                  JB3    SELSET         ;Drop map set or not ?
                   ;
0703 E409                  JMP    SETSD
                   ;
                   ;                              ( Not set ! )
0705 2304          SELSET: MOV    A,#4           ;***NEXT [MTMINT]***
0707 C4EF                  JMP    JMPR           ;RETR.
                   ;
0709 FC            SETSD:  MOV    A,P4           ;(  Set !  )
070A A8                    MOV    R0,A           :
070B F0                    MOV    A,@R0          ;
                   ;
070C 4308          ANSWO:  ORL    A,#08H         :
070E A8                    MOV    R0,A           :
                   ;
070F FF                    MOV    A,R7           :
0710 3216                  JB1    DSCF84         :
                   ;
0712 231C                  MOV    A,#28          :***NEXT [DSCF84]***
0714 C4EF                  JMP    JMPR           ;RETR.
                   ;
                   ;
                   ;--------------------------------------------------------------
                   ;**************************************************************
                   ;
                   ;                   [ DROP SCAN FOR 84 COMMAND. ]
                   ;                                                          #D28
                   ;**************************************************************
                   ;
                   ;       ..............................................................
0716 F8            DSCF84: MOV    A,R0           :Drop scan.
0717 3D                    MOVD   P5,A           ;
                   ;       ..............................................................
                   ;
0718 FF                    MOV    A,R7           :
0719 321D                  JB1    DSCFJJ         :
                   ;
071B D40B                  CALL.  TSET1          :1 bit time counter set.
                   :
071D FF            DSCFJJ: MOV    A,R7           :Response flag 2 clear.
071E 53FD                  ANL    A,#0FDH        :
0720 AF                    MOV    R7,A           :
                   ;
0721 F8                    MOV    A,R0           ;
0722 5387                  ANL    A,#087H        ;
0724 B837                  MOV    R0,#DRMAPH     ;
0726 A0                    MOV    @R0,A          ;
                   ;
0727 2304                  MOV    A,#4           ;***NEXT [MTMINT]***
0729 C4EF                  JMP    JMPR           ;RETR.
                   ;
                   ;
                   ;**************************************************************
                   :----------------------------------------------------SUB ROUTINE---
```

```
LOCATION OBJECT CODE LINE     SOURCE LINE

                          ;
                          ;                   [  VLF INPUT DATA " 1 " SET.   ]
                          ;
                          ;-------------------------------------------------------------------
                          ;
  072B 97                 VLFI1:    CLR      C              :
  072C A7                           CPL      C              :
                          ;
  072D FB                 VLFRST:   MOV      A,R3           ;
  072E 67                           RRC      A              :
  072F AB                           MOV      R3,A           ;
  0730 83                           RET
                          ;
                          ;
                          ;-------------------------------------------------------------------
                          ;-------------------------------------------------------SUB ROUTINE---
                          ;
                          ;                   [  VLF INPUT DATA " 0 " SET.   ]
                          ;
                          ;-------------------------------------------------------------------
                          ;
  0731 97                 VLFI0:    CLR      C              ;
  0732 E42D                         JMP      VLFRST         ;
                          ;
                          ;
                          ;*******************************************************************
                          ;
                          ;                   < WAIT for 84 COMMAND DISPOSAL. >
                          ;
                          ;*******************************************************************
                          ;
  0734 D40F               IDLINT:   CALL     TSET05         :Half bit time counter set & start.
  0736 B857                         MOV      R0,#RE841      ;84 buffer empty.
  0738 F0                           MOV      A,@R0          ;
  0739 F243                         JB7      DNTSET         :
                          ;
                          ;
  073B B4FF                         CALL     BCNTBC         :Exit 04 operation.
  073D F245                         JB7      ST04DP         :
                          ;
  073F 231B                         MOV      A,#27          :***NEXT [IDLINT]***
  0741 C4EF                         JMP      JMPR           :
                          :
  0743 C4BA               DNTSET:   JMP      JPIDL          :(84 buffer empty.)
                          ;
                          ;
  0745 FF                 ST04DP:   MOV      A,R7           :
  0746 4301                         ORL      A,#01H         :
  0748 AF                           MOV      R7,A           :
  0749 E459                         JMP      INT04S         :
                          ;
                          ;-------------------------------------------------------------------
                          ;*******************************************************************
                          ;
                          ;                   [ CHANGING OPERATION TO 84 .]
                          ;
                          ;*******************************************************************
```

```
FILE: AKI:SHIGI          HEWLETT-PACKARD: 8048 Assembler

LOCATION OBJECT CODE LINE     SOURCE LINE

                         ;
                         ;
                         ;        ...................................................
 074B F8                 NDPS04:  MOV     A,R0              ;
 074C 3D                          MOVD    P5,A              ;
                         ;        ...................................................
                         ;
 074D D40B                        CALL    TSET1             ;1 bit timer counter set & start.
                         ;
 074F FF                 MADAD2:  MOV     A,R7              ;
 0750 1254                        JB0     ARIWT             ;
 0752 C4AF                        JMP     DISEND            ;
 0754 53FE               ARIWT:   ANL     A,#0FEH           ;
 0756 AF                          MOV     R7,A              ;
 0757 E434                        JMP     IDLINT            ;
                         ;
                         ;------------------------------------------------SUB ROUTINE---
                         ;
                         ;                    [  04 DROP SELECT.  ]
                         ;
                         ;--------------------------------------------------------------
                         ;
 0759 B825               INT04S:  MOV     R0,#SDMSGH        ;
 075B F0                          MOV     A,@R0             ;
 075C 5307                        ANL     A,#07H            ;
 075E A9                          MOV     R1,A              ;
 075F B837                        MOV     R0,#DRMAPH        ;
 0761 F0                          MOV     A,@R0             ;
 0762 5307                        ANL     A,#07H            ;
 0764 D9                          XRL     A,R1              ;
 0765 C67B                        JZ      NOCHGE            ;
                         ;
 0767 F9                          MOV     A,R1              ;
 0768 4308                        ORL     A,#08H            ;
 076A A8                          MOV     R0,A              ;
                         ;
 076B FF                          MOV     A,R7              ;
 076C 3272                        JB1     DSF04B            ;
                         ;
 076E 231D                        MOV     A,#29             ;***NEXT [DSF04C]***
 0770 C4EF                        JMP     JMPR              ;RETR.
                         ;
 0772 53FD               DSF04B:  ANL     A,#0FDH           ;
 0774 AF                          MOV     R7,A              ;
 0775 E477                        JMP     DSF04C            ;
                         ;
                         ;
                         ;--------------------------------------------------------------
                         ;**************************************************************
                         ;
                         ;                [ DROP SCAN FOR 04 COMMAND. ]
                         ;                                                         #E29
                         ;**************************************************************
                         ;
                         ;        ...................................................
 0777 F8                 DSF04C:  MOV     A,R0              ;
 0778 3D                          MOVD    P5,A              ;
```

```
LOCATION OBJECT CODE LINE     SOURCE LINE

                          ;         ..............................................
                          ;
    0779 D40B                       CALL     TSET1          ;1 bit time counter set.
                          ;
    077B F9               NOCHGE:   MOV      A,R1           :
    077C B837                       MOV      R0,#DRMAPH     ;
    077E 20                         XCH      A,@R0          ;
    077F B86C                       MOV      R0,#SAVDRP     ;
    0781 A0                         MOV      @R0,A          :
                          ;
                          ;
    0782 D422                       CALL     PARCLL         ;Parity flag clear
                          ;                                    & VLF flags clear.
    0784 D414                       CALL     VLF00          :Start "0" bit set.
                          ;
    0786 2314                       MOV      A,#20          :***NEXT [COM04]***
    0788 C4EF                       JMP      JMPR           :RETP.
                          ;
                          ;
                          ;--------------------------------------------------SUB ROUTINE---
                          ;
                          ;                  [  04 COMMAND DISP END.  ]
                          ;
                          ;-----------------------------------------------------------------
                          ;
    078A B86C             R04ERS:   MOV      R0,#SAVDRP     ;
    078C F0                         MOV      A,@R0          ;
    078D B937                       MOV      R1,#DRMAPH     ;
    078F 21                         XCH      A,@R1          ;
    0790 A8                         MOV      R0,A           :
                          ;
    0791 FF                         MOV      A,R7           ;
    0792 52A7                       JB2      TSUGIN         ;
                          ;
    0794 F1                         MOV      A,@R1          ;
    0795 D8                         XRL      A,R0           ;
    0796 C6AE                       JZ       MADADE         ;
                          ;
    0798 B867                       MOV      R0,#DEMAPH     :
    079A F0                         MOV      A,@R0          :
    079B F2AC                       JB7      TSUGI2         :
                          ;
    079D F1                         MOV      A,@R1          :
    079E 5307                       ANL      A,#07H         :
    07A0 4308                       ORL      A,#08H         :
    07A2 A8                         MOV      R0,A           ;
    07A3 231E                       MOV      A,#30          :
    07A5 C4EF                       JMP      JMPR           :
                          ;
    07A7 53FB             TSUGIN:   ANL      A,#0FBH        ;
    07A9 AF                         MOV      R7,A           ;
                          ;
    07AA C4F2                       JMP      NTDRP          ;
    07AC C4AF             TSUGI2:   JMP      DISEND         ;
                          ;
    07AE E44F             MADADE:   JMP      MADAD2         ;
                          ;
```

```
LOCATION OBJECT CODE LINE     SOURCE LINE

                    ;
                    ;--------------------------------------------------------SUB ROUTINE---
                    ;
                    ;                        [  CHANGING THE DEVICE MAP.  ]
                    ;
                    ;---------------------------------------------------------------------
                    ;
                    ;|||||||||||||||||||||||||||||||||||||||||||||||||||||||||||||||||||||
                    ;|...................................................................|
                    ;|          HEAD ADDRESS TABLE OF THE DEVICE MAP 1.                  |
                    ;|...................................................................|
                    ;|                                                                   |
07B0 38             ROMTI:  DB      DVM10           ;Drop #0 ( device map 1 ).           |
                    ;|                                                                   |
07B1 3D                     DB      DVM11           ;Drop #1 (      "        ).          |
                    ;|                                                                   |
07B2 42                     DB      DVM12           ;Drop #2 (      "        ).          |
                    ;|                                                                   |
07B3 47                     DB      DVM13           ;Drop #3 (      "        ).          |
                    ;|                                                                   |
07B4 4C                     DB      DVM14           ;Drop #4 (      "        ).          |
                    ;|                                                                   |
07B5 51                     DB      DVM15           ;Drop #5 (      "        ).          |
                    ;|                                                                   |
                    ;|||||||||||||||||||||||||||||||||||||||||||||||||||||||||||||||||||||
                    ;
07B6 B837           DEVCH:  MOV     R0,#DRMAPH      ;Device table head address set.
07B8 F0                     MOV     A,@R0           ;     ( for current drop #. )
07B9 5307                   ANL     A,#07H          ;
07BB 03B0                   ADD     A,#ROMTI        ;
07BD A3                     MOVP    A,@A            ;
                    ;
07BE A9                     MOV     R1,A            ;
07BF F1                     MOV     A,@R1           ;
07C0 72F8                   JB3     PUEND           ;Device polling map set or not ?
07C2 F9                     MOV     A,R1            ;Priority or round robin ?
07C3 0304                   ADD     A,#4H           ;
07C5 A8                     MOV     R0,A            ;
07C6 F0                     MOV     A,@R0           ;
07C7 72CE                   JB3     PRSET           ;
07C9 FF                     MOV     A,R7            ;Polling flag set.(round robin.)
07CA 53EF                   ANL     A,#0EFH         ;
07CC E4D1                   JMP     RPSETE          ;
                    ;
07CE FF             PRSET:  MOV     A,R7            ;Polling flag set.(priority poll.)
07CF 4310                   ORL     A,#10H          ;
07D1 AF             RPSETE: MOV     R7,A            ;
                    ;
07D2 B85E                   MOV     R0,#DEMAP0      ;R0 = device map 2 pointer.
07D4 BA00                   MOV     R2,#0H          ;R2 = F.F flag.
                    ;
07D6 FA             DEVPS:  MOV     A,R2            ;
07D7 96DE                   JNZ     SWPAC           ;
07D9 BAFF                   MOV     R2,#0FFH        ;
07DB F1                     MOV     A,@R1           ;( bit 0 - 3 )
07DC E4E3                   JMP     CONCT           ;
                    ;
```

```
LOCATION OBJECT CODE LINE     SOURCE LINE

     07DE BA00          1882 SWPAC:   MOV     R2,#0H        ;'  bit 4 - 7  )
     07E0 F1            1883          MOV     A,@R1         ;
     07E1 47            1884          SWAP    A             ;
     07E2 19            1885          INC     R1
                        1886 ;
     07E3 530F          1887 CONCT:   ANL     A,#0FH        ;map 2 <--- map 1.
     07E5 A0            1888          MOV     @R0,A         ;
     07E6 D30F          1889          XRL     A,#0FH        ;
     07E8 C6F2          1890          JZ      DEVCE         ;Device end ?
     07EA F8            1891          MOV     A,R0          ;
     07EB D365          1892          XRL     A,#DEMAP7     ;Device map end ?
     07ED C6F3          1893          JZ      DEVCE2        ;
     07EF 18            1894          INC     R0            ;
     07F0 E4D6          1895          JMP     DEVPS
                        1896 ;
     07F2 C8            1897 DEVCE:   DEC     R0            ;
     07F3 F0            1898 DEVCE2:  MOV     A,@R0         ;
     07F4 4380          1899          ORL     A,#80H        ;
     07F6 A0            1900          MOV     @R0,A         ;
     07F7 83            1901          RET                   ;
                        1902 ;
     07F8 B85E          1903 PUEND:   MOV     R0,#DEMAP0    ;Device map 1 not set.
     07FA B0FF          1904          MOV     @R0,#0FFH     ;
     07FC 83            1905          RET                   ;
                        1906 ;
                        1907 ;
                        1908 ;##################################### END #######################

Errors=    0
```

HEWLETT-PACKARD: 8096 Assembler

SOURCE LINE

```
'8096
;
;**********************************************************************
;
SEISAKU_DD:      EQU 01H          :
SEISAKU_MM:      EQU 12H          :
SEISAKU_YY:      EQU 58H          :
SEISAKU_VV:      EQU 2            : Version No.
;*****
;*****       <<<   TOSHINO_OS    >>>
;*****       <<< TOSHIBA  NO OS >>>
;*****       <<< TOSHI & INO OS >>>
;*****       <<< TOSHI    NO OS >>>
;*****           ==============
;*****                 <<< Data Format
;*****             Adrs H  --- ( ECU Address H )
;*****             Adrs L  --- ( ECU Address L )
;*****             Data Length N
;*****             Data 1
;*****               .
;*****               .     ( Data F to Drop P  Command / Data )
;*****               .
;*****             Data N
;*****               ------ By  M.TANAKA & T.INOUE  ------
;*****
;*****
;*****    Function
;*****
;*****     (1) --- CCC & ECU Commmunication
;*****               Echo Back
;*****               Forced Tuning / Off / Key
;*****               Send Function ( ALOHA )  Test
;*****
;*****     (2) --- Ram Back up
;*****
;*****     (3) --- Verification
;*****
;*****
;*****
;*****
;**********************************************************************
;$$$$$
;$$$$$         <<<  Bug List  >>
;$$$$$
;$$$$$
;$$$$$
;$$$$$
;$$$$$
;$$$$$$$$$$$$$$$$$$$$$$$$$$$$$$$$$$$$$$$$$$$$$$$$$$$$$$$$$$$$$$$$$$$$$$

;
BIAS:            EQU 0000H
;

PROGRAMVERSION: EQU BIAS              ; DS 4
RX_CRC_ERROR:   EQU BIAS+4            ; DS 4
RX_CRC_OK_YO:   EQU BIAS+8            ; DS 4
```

APPENDIX C

SOURCE LINE

```
IBF_OVER_FLOW:   EQU BIAS+12          ; DS 2
SCAN_MODE_FLAG:  EQU BIAS+14          ; DS 1
VIEW_CHANNEL:    EQU BIAS+16          ; DS 8*2
PC_CODE:         EQU BIAS+32          ; DS 8*2
EVENT_CHANNEL    EQU BIAS+48          ; DS 8
;                EQU BIAS+56
VLF_ERROR_MAP:   EQU BIAS+128         ; DS 128
PC_FC_LIST:      EQU BIAS+256         ; DS 128
BASIC_AUTHO:     EQU BIAS+256+128     ; DS 128
                 ;    BIAS+512
;
A200H:           EQU 200H
CH_NO_FREQ       EQU A200H            ; DS 256   FREQUENCY TABLE START FROM HEP
TIME_TABLE:      EQU A200H+100H       ; 8*8*2
JUMP_ADDRESS:    EQU A200H+180H       ; 8*8*2
NEXT_GO_ADRS:    EQU A200H+200H       ; 64*2
;                      --- 480H
TO_DROP:         EQU 0500H
TO_CCC:          EQU 0600H
;
DS2:             EQU 0700H
INDEX_RX_1:      EQU DS2+2*1
INDEX_TX_1:      EQU DS2+2*2
CTRL_1:          EQU DS2+2*3
CTRL_1_COUNT:    EQU DS2+2*4
INDEX_RX_2:      EQU DS2+2*5
INDEX_TX_2:      EQU DS2+2*6
CTRL_2:          EQU DS2+2*7
CTRL_2_COUNT:    EQU DS2+2*8
PAGE_SW:         EQU DS2+2*9
ECHO_BACK_FLAG:  EQU DS2+2*10
REVERS_CHANEL:   EQU DS2+2*11
TX_BUSY_FLAG:    EQU DS2+2*12
BASE_POINT:      EQU DS2+2*13
INIT_POINT:      EQU DS2+2*14
BINARY_LED:      EQU DS2+2*15
ECHO_BACK_ADRS:  EQU DS2+2*16
CONV_NO:         EQU DS2+2*18
DROP_NO:         EQU DS2+2*19
IC_BYTE:         EQU DS2+2*20
DEVICE_NO:       EQU DS2+2*21
ID_BYTE:         EQU DS2+2*22
CONV_NO_BIT:     EQU DS2+2*23
DROP_NO_BIT:     EQU DS2+2*24
DEVICE_NO_BIT:   EQU DS2+2*25
MUL_ADR          EQU DS2+2*29         ; DS 2   STORE #3
EXTRN_STAT       EQU DS2+2*30         ; DS 2
TEMP_R_CH        EQU DS2+2*31         ; DS 2
:                    740H
OBF_BF_N:        EQU DS2+2*32    ;    0000  0000
OBF_BF_CMD:      EQU OBF_BF_N+1
```

HEWLETT-PACKARD: 8086 Assembler

SOURCE LINE

```
OBF_BF_ID:        EQU OBF_BF_N+2
OBF_BF_BYTE:      EQU OBF_BF_N+3
CONV_SELECT:      EQU OBF_BF_N+16  ; DS 8
;
DS1:              EQU 0780H
NOW_EVENT:        EQU DS1
BEFOR_EVENT:      EQU DS1+1
EVENT_ENABLE:     EQU DS1+2
LSB_LED:          EQU DS1+4
MSB_LED:          EQU DS1+5
HSB_LED:          EQU DS1+6
PPV_LED:          EQU DS1+7
KEY_DATA:         EQU DS1+9
ONE_SEC_TIMER:    EQU DS1+10
TUNER_D1:         EQU DS1+11
TUNER_D2:         EQU DS1+12
TUNER_CBL:        EQU DS1+13
UP_FLAG:          EQU DS1+14
DOWN_FLAG:        EQU DS1+15
PC_FC_EXIST:      EQU DS1+16
POWER_FEED:       EQU DS1+17
;
DS16:             EQU 800H
DROP_CMD_BF:      EQU DS16                        ; DS 16
SPU_CMD_BF:       EQU DS16+16*1                   ; DS 16
FROM_OBF_BF:      EQU DS16+16*2                   ; DS 16
SEND_ENABLE:      EQU DS16+16*3                   ; DS 1
SEND_ADDRESS:     EQU SEND_ENABLE+1               ; DS 2
SEND_INDEX:       EQU SEND_ADDRESS+2              ; DS 1
SEND_CMD_RESP:    EQU SEND_ADDRESS+3              ; DS 1
SEND_DATA_BUFF:   EQU SEND_ADDRESS+4              ; DS 123
EVENT_NO_FREQ:    EQU 900H                        ; DS 256
;
;--------------------------------------
;
KEY_DATA_STACK:   EQU 1000H                       ; DS 16*64=1024
ECU_ADDRESS:      EQU KEY_DATA_STACK+16*64        ; DS 2
TX_LENGTH:        EQU ECU_ADDRESS+2               ; DS 1
TX_COMMAND:       EQU ECU_ADDRESS+3               ; DS 1
TX_BUFFER:        EQU ECU_ADDRESS+4               ; DS 256
;
TIMER_COUNTER:    EQU 2000H-4
INDEX_HISTORY:    EQU 2000H-2
HISTORY_BUFFER:   EQU 2000H
```

HEWLETT-PACKARD: 8086 Assembler

SOURCE LINE

```
;
PAGE_MEM:        EQU 3000H

STACK_END:       EQU 39FFH
STACK_TOP:       EQU 4000H
;
; ************   BACK_UP RAM Area   **********************************
;
ES_BACK_UP:      EQU 0              ; DS 512
ES_BACK_UP_1:    EQU 200H           ; DS 512
ES_BACK_UP_2:    EQU 400H           ; DS 512
;
ES_EVENT_TIMER: EQU 600H            ; DS 128*6

;
; ************   Imediate Data   ***********************************
;
MUL_NO           EQU                3
TIMER_OUT_CODE: EQU 0
PLUS_KEY_CODE:   EQU 10H
EVENT_KEY_CODE: EQU 11H
AUTHO_KEY_CODE: EQU 12H
ONOFF_KEY_CODE: EQU 13H
MINUS_KEY_CODE: EQU 14H
SCAN_KEY_CODE:   EQU 15H
CLEAR_KEY_CODE: EQU 16H
SEND_KEY_CODE:   EQU 17H
POWER_ON_CODE:   EQU 18H
POWER_OFF_CODE: EQU 19H
RECENT_ON_CODE: EQU 1AH
RELEASE_CODE:    EQU 1BH
KEY_PUSH_CODE:   EQU 1CH
;
ASCII_ER:        EQU 4572H
ASCII_AU:        EQU 4155H
ASCII_SC:        EQU 5343H
ASCII_FC:        EQU 4643H
ASCII_PC:        EQU 5043H
ASCII_CL:        EQU 434CH
ASCII_SE:        EQU 5345H
ASCII_AD:        EQU 4164H
ASCII_DE:        EQU 6445H
ASCII_NU:        EQU 0D49CH
ASCII_NO:        EQU 0D4DCH
ASCII_CO:        EQU 43DCH
ASCII_PR:        EQU 5072H
;
PUSH_ALL:        EQU 60H
POP_ALL:         EQU 61H
;
SEND_MAX:        EQU 64*2
;
; ---------------------------------------------------------------
; ************   I / O   Port   ************************************
; ---------------------------------------------------------------
```

HEWLETT-PACKARD: 8086 Assembler

SOURCE LINE

```
                ;
                DROP_CMD_PORT:   EQU 082H
                DROP_DATA_PORT:  EQU 080H
                ECU_H_ADDRESS:   EQU 0102H
                ECU_L_ADDRESS:   EQU 0100H
                INT_OFST         EQU            0A0H+(5*4)
                INT1OFST         EQU            52
                INT3OFST         EQU            60
                TIMER1_OFST      EQU            72
                ACHD             EQU            00
                ACHC             EQU            04
                BCHD             EQU            02
                BCHC             EQU            06




                ;---------------CS    SET-----------------------------
                ;
                ;                INITIAL SET UP IAPX186
                ;
                ;-----------------------------------------------------
                                 ORG            0000H
0000 FA         RUN:             CLI
                                 ;LCS SET UP    16KB
0001 B8A2FF                      MOV            AX,0FFA2H
0004 92                          XCHG           DX,AX
0005 B8F800                      MOV            AX,00F8H
0008 EF                          OUT            DX,AX
                                 ;PCS SET UP FROM 0000H AT I/O MAPPED
0009 B8A4FF                      MOV            AX,0FFA4H
000C 92                          XCHG           DX,AX
000D B83F00                      MOV            AX,003FH              ;3-WAITES INSERTED
0010 EF                          OUT            DX,AX
0011 B8A8FF                      MOV            AX,0FFA8H
0014 92                          XCHG           DX,AX
0015 B83C88                      MOV            AX,883CH
0018 EF                          OUT            DX,AX
                                 ;MCS SET UP 04000H
0019 BAA6FF                      MOV            DX,0FFA6H
001C B8FC21                      MOV            AX,21FCH
001F EF                          OUT            DX,AX
                ;
0020 B80020                      MOV            AX,2000H
0023 8ED8                        MOV            DS,AX
                ;
                ;
0025 BB0000     RAM_CLEAR:       MOV BX,BIAS
0028 B80000                      MOV AX,0
002B 8907       RAM_CLEAR_LP:    MOV [BX],AX
002D 83C302                      ADD BX,2
0030 81FB0040                    CMP BX,4000H
0034 72F5                        JC RAM_CLEAR_LP
                ;
                ;
                ;-------------JUMP TABLE WRITE------------------
0036 B80000                      MOV            AX,0
```

HEWLETT-PACKARD: 8086 Assembler

```
                        SOURCE LINE

0039 8ED8                               MOV             DS,AX
                     ;--------------INT1 ADDR.-------------------------------
003B BB3400                             MOV             BX,INT1OFST
003E C7070002                           MOV             WORD PTR [BX],200H
0042 C7470200FE                         MOV             WORD PTR [BX+2],0FE00H
                     ;--------------INT3 ADDR. ------------------------------
0047 BB3C00                             MOV             BX,INT3OFST
004A C7070003                           MOV             WORD PTR [BX],300H
004E C7470200FE                         MOV             WORD PTR [BX+2],0FE00H
                     ;--------------INT0 ADDR. /CASCADED WITH INT2/INTA0/----
0053 BB8400                             MOV             BX,INT_OFST
0056 C7070004                           MOV             WORD PTR [BX],400H
005A C7470200FE                         MOV             WORD PTR [BX+2],0FE00H
005F C747040005                         MOV             WORD PTR [BX+4],500H
0064 C7470600FE                         MOV             WORD PTR [BX+6],0FE00H
0069 C747080006                         MOV             WORD PTR [BX+8],600H
006E C7470A00FE                         MOV             WORD PTR [BX+10],0FE00H
                     ;--------------TIMER 1 INTR. ADDR.-----------------------
0073 BB4800                             MOV             BX,TIMER1_OFST
0076 C7070007                           MOV             WORD PTR [BX],700H
007A C7470200FE                         MOV             WORD PTR [BX+2],0FE00H
                     ;-------------SET UP TIMER----------------------
                     ;
                     ;
007F B80020                             MOV             AX,2000H
0082 8ED8                               MOV             DS,AX
0084 8ED0                               MOV             SS,AX
                     ;----------------50KHz SQUARE WAVE---------------------
0086 BA52FF                             MOV             DX,0FF52H
0089 B80F00                             MOV             AX,15
008C EF                                 OUT             DX,AX
008D BA54FF                             MOV             DX,0FF54H
0090 B80F00                             MOV             AX,15
0093 EF                                 OUT             DX,AX
0094 BA56FF                             MOV             DX,0FF56H
0097 B803C0                             MOV             AX,0C003H
009A EF                                 OUT             DX,AX
                     ;--------------INITIAL SET UP OF DMA CH.0:RX TRANS---
                     ;-------------SOURCE POINTER----------------
009B B80000                             MOV             AX,ACHD
009E BAC0FF                             MOV             DX,0FFC0H
00A1 EF                                 OUT             DX,AX
00A2 B000                               MOV             AL,0
00A4 BAC2FF                             MOV             DX,0FFC2H
00A7 EF                                 OUT             DX,AX
                     ;---------------INITIAL SET UP OF DMA CH.1;TX TRANS--
                     ;--------------DESTINATION POINTER-----------
00A8 B80000                             MOV             AX,ACHD
00AB BAD4FF                             MOV             DX,0FFD4H
00AE EF                                 OUT             DX,AX
00AF B000                               MOV             AL,0
00B1 BAD6FF                             MOV             DX,0FFD6H
00B4 EE                                 OUT             DX,AL
                     ;-------------STACK SET UP---------------------
00B5 BCF03F                             MOV             SP,3FF0H
                     ;---------------INITIAL SET UP OF 8274-----------
00B8 B018                               MOV             AL,00011000B    ;CH.RESET
```

HEWLETT-PACKARD: 8086 Assembler

```
                SOURCE LINE
00BA E604                         OUT          ACHC,AL
               ;--PTR 2A--
00BC BB0231                       MOV          BX,0011000100000010B
00BF BA0400                       MOV          DX,ACHC
00C2 E87E01                       CALL         SETCOM
               ;--PTR 2B--
00C5 BB0228                       MOV          BX,0010100000000010B
00C8 BA0600                       MOV          DX,BCHC
00CB E87501                       CALL         SETCOM
               ;--PTR 4A--
00CE BB0420                       MOV          BX,0010000000000100B
00D1 BA0400                       MOV          DX,ACHC
00D4 E86C01                       CALL         SETCOM
               ;--PTR 4B--
00D7 BB0420                       MOV          BX,0010000000000100B
00DA BA0600                       MOV          DX,BCHC
00DD E86301                       CALL         SETCOM
               ;--PTR 7A--
00E0 BB077E                       MOV          BX,0111111000000111B
00E3 BA0400                       MOV          DX,ACHC
00E6 E85A01                       CALL         SETCOM
               ;--PTR 1B--
00E9 BB010C                       MOV          BX,0000110000000001B
00EC BA0600                       MOV          DX,BCHC
00EF E85101                       CALL         SETCOM
               ;=================RX INIT========================
00F2 B010                         MOV          AL,00010000B
00F4 E604                         OUT          ACHC,AL
               ;--PTR 1A--
00F6 BB012C                       MOV          BX,0010110000000001B
00F9 BA0400                       MOV          DX,ACHC
00FC E84401                       CALL         SETCOM
               ;--PTR 5A--
00FF BB05E2                       MOV          BX,1110001000000101B
0102 BA0400                       MOV          DX,ACHC
0105 E83B01                       CALL         SETCOM
               ;--RTS OFF--
0108 BB05E2                       MOV          BX,1110001000000101B
010B BA0400                       MOV          DX,ACHC
010E E83201                       CALL         SETCOM
               ;---------------------------------------------------------------
               ;-----------INITIAL SET UP OF INT0,INT1,INT3,UNMASK----------------
               ;--INT0---
0111 B82800                       MOV          AX,28H          ;LEVEL=0,EDGE TRIGGER,MASK,CASCAD
0114 BA38FF                       MOV          DX,0FF38H
0117 EF                           OUT          DX,AX
               ;--INT1---
0118 B81A00                       MOV          AX,1AH          ;LEVEL=1,LEVEL TRIGGER,MASK
011B BA3AFF                       MOV          DX,0FF3AH
011E EF                           OUT          DX,AX
               ;--INT3---
011F B81900                       MOV          AX,19H          ;LEVEL=2,LEVEL TRIGGER,MASK
0122 BA3EFF                       MOV          DX,0FF3EH
0125 EF                           OUT          DX,AX
               ;--TIMER1 INTR.--
0126 B80B00                       MOV          AX,1011B        ;LEVEL=3,MASK
0129 BA32FF                       MOV          DX,0FF32H
```

SOURCE LINE

```
012C EF                          OUT          DX,AX
                 ;
                 ;-----------------------------------------------------
                 ;
                 ;                Initialize
                 ;
                 ;-----------------------------------------------------
                 ;
012D B80000      MAIN_START:     MOV AX,0
                 ;
0130 BB0005                      MOV BX,TO_DROP
0133 891E0207                    MOV [INDEX_RX_1],BX
0137 891E0407                    MOV [INDEX_TX_1],BX
013B A23E07                      MOV BYTE PTR [TEMP_R_CH],AL
013E A21807                      MOV [TX_BUSY_FLAG],AL
0141 A22407                      MOV [CONV_NO],AL
0144 A29107                      MOV [POWER_FEED],AL
                 ;
0147 A35007                      MOV [CONV_SELECT],AX
014A A35207                      MOV [CONV_SELECT+2],AX
014D A35407                      MOV [CONV_SELECT+4],AX
0150 A35607                      MOV [CONV_SELECT+6],AX
                 ;
0153 BB0006                      MOV BX,TO_CCC
0156 891E0C07                    MOV [INDEX_TX_2],BX
015A 891E0A07                    MOV [INDEX_RX_2],BX
                 ;
015E A20607                      MOV [CTRL_1],AL
0161 A20807                      MOV [CTRL_1_COUNT],AL
0164 A20E07                      MOV [CTRL_2],AL
0167 A24007                      MOV [OBF_BF_N],AL
016A A31407                      MOV [ECHO_BACK_FLAG],AX
016D A31607                      MOV [REVERS_CHANEL],AX
                 ;
0170 B80030                      MOV AX,PAGE_MEM
0173 A31207                      MOV [PAGE_SW],AX
                 ;
0176 BB4107                      MOV BX,OBF_BF_CMD
0179 891E1007                    MOV [CTRL_2_COUNT],BX
                 ;
017D B00A                        MOV AL,10
```

HEWLETT-PACKARD: 8086 Assembler

SOURCE LINE

```
017F A28A07                           MOV [ONE_SEC_TIMER],AL
                    ;
0182 B80020                           MOV AX,HISTORY_BUFFER
0185 A3FE1F                           MOV [INDEX_HISTORY],AX
0188 E88205                           CALL ECU_ADPS_READ
                    ;
018B E8D605                           CALL INIT_AUTHO_TBL          ;=
018E E8F305                           CALL INIT_VIEW_TBL           ;=
0191 E84B06                           CALL INIT_CODE               ;=
0194 B03F                             MOV AL,3FH                   ;=
0196 A20E00                           MOV [SCAN_MODE_FLAG],AL      ;=


0199 E85606                           CALL            FREQ_CALC
019C E8D306                           CALL CHANNEL_HOSEI
019F E8FC05                           CALL EVENT_DATA_CL
01A2 E88705                           CALL INIT_EV_TIMER
                    ;
                    ;=============================================
                    ;
01A5 BB0004                           MOV BX,ES_BACK_UP_2
01A8 26813FA5A5                       CMP WORD PTR ES:[BX],0A5A5H
01AD 740A                             JZ BACK_UP_KAI
01AF BB0002                           MOV BX,ES_BACK_UP_1
01B2 26813FA5A5                       CMP WORD PTR ES:[BX],0A5A5H
01B7 7542                             JNZ BACK_UP_EXIT
01B9 8BF3           BACK_UP_KAI:      MOV SI,BX
01BB B8FC01                           MOV AX,508
01BE B90000                           MOV CX,0
01C1 26326F04       BACK_UP_CK1:      XOR CH,ES:[BX+4]
01C5 26024F04                         ADD CL,ES:[BX+4]
01C9 43                               INC BX
01CA 48                               DEC AX
01CB 75F4                             JNZ BACK_UP_CK1
                    ;
01CD 263A6C02                         CMP CH,ES:[SI+2]
01D1 7528                             JNZ BACK_UP_EXIT
01D3 263A4C03                         CMP CL,ES:[SI+3]
01D7 7521                             JNZ BACK_UP_NONE
                    ;
01D9 8BDE           BACK_UP_YES:      MOV BX,SI
01DB 81F30002                         XOR BX,ES_BACK_UP_1
01DF 81F30004                         XOR BX,ES_BACK_UP_2
01E3 891EFC1F                         MOV [TIMER_COUNTER],BX
                    ;
01E7 B80002                           MOV AX,512
01EA BB0000                           MOV BX,PROGRAMVERSION
01ED 268A0C         BACK_UP_CK2:      MOV CL,ES:[SI]
01F0 880F                             MOV [BX],CL
01F2 43                               INC BX
01F3 46                               INC SI
01F4 48                               DEC AX
01F5 75F6                             JNZ BACK_UP_CK2
01F7 E90100                           JMP BACK_UP_EXIT
                    ;
01FA 90             BACK_UP_NONE:     NOP
                    ;
```

```
                  SOURCE LINE

01FB E81D05       BACK_UP_EXIT:   CALL INIT_TIM_TBL              ;;
01FE E83D05                       CALL INIT_JUMP_TBL             ;;
                  ;
0201 BE0000                       MOV SI,PROGRAMVERSION
0204 C60458                       MOV BYTE PTR [SI].SEISAKU_YY
0207 C6440112                     MOV BYTE PTR [SI+1].SEISAKU_MM
020B C6440201                     MOV BYTE PTR [SI+2].SEISAKU_DD
020F C6440302                     MOV BYTE PTR [SI+3].SEISAKU_VV
                  ;
                  ;*******************************************
0213 B840A0                       MOV             AX,0A040H
0216 BACAFF                       MOV             DX,0FFCAH
0219 EF                           OUT             DX,AX
                  ;               IN              AL,ACHC
                  ;               AND             AL,01011111B
021A B07F                         MOV             AL,01111111B
021C 8B3C07                       MOV             BX,EXTRN_STAT
021F 8807                         MOV             BYTE PTR [BX],AL
                  ;--UNMASK--INTR's-------------------------
0221 B84C00                       MOV             AX,01001100B    ;NOW UNMASK INT0,INT1,INT3.TIMER1_INTF
0224 BA28FF                       MOV             DX,0FF28H
0227 EF                           OUT             DX,AX
                  ;''''''''''''''''''''''''''''''''''''''''''
                  ;---------------RX. ENABLE------------------------------
0228 BB03D9                       MOV             BX,1101100100000011B
022B BA0400                       MOV             DX,ACHC
022E E81200                       CALL            SETCOM
                  ;********************MAIN INITITIALIZE TIMER2********
0231 B80008                       MOV             AX,00800H
0234 BA62FF                       MOV             DX,0FF62H
0237 EF                           OUT             DX,AX
0238 B801C0                       MOV             AX,1100000000000001B
023B BA66FF                       MOV             DX,0FF66H
023E EF                           OUT             DX,AX
                  ;----------------------------------------------------
023F FB                           STI
                  ;
0240 E9BD00                       JMP HAJIMEPUYO
                  ;
                  ;**************************************************************************************
                  ;----------------SETCOM for 8274-----------
0243 8AC3         SETCOM:         MOV             AL,BL
0245 EE                           OUT             DX,AL
0246 8AC7                         MOV             AL,BH
0248 EE                           OUT             DX,AL
0249 C3                           RET
                  ;-------------------------------------------------------------------
                  ;--------------PTR 1A-------------
024A B001         HDLC_TX_START:  MOV             AL,00000001B
024C E604                         OUT             ACHC,AL
024E B00F                         MOV             AL,00001111B
```

HEWLETT-PACKARD: 8086 Assembler

SOURCE LINE

```
0250 E604        571                   OUT          ACHC,AL
                 572 ;---------------REVERSE CH.SELECT----
0252 B005        573                   MOV          AL,00000101B
0254 E604        574                   OUT          ACHC,AL
0256 A01607      575                   MOV          AL,BYTE PTR [REVERS_CHANEL]
0259 A23E07      576                   MOV          BYTE PTR [TEMP_R_CH],AL
025C 8AE0        577                   MOV          AH,AL
025E 2401        578                   AND          AL,00000001B
0260 F8          579                   CLC
0261 D0C0        580                   ROL          AL
0263 0C60        581                   OR           AL,01100000B
0265 E604        582                   OUT          ACHC,AL
0267 B005        583                   MOV          AL,00000101B
0269 E606        584                   OUT          BCHC,AL
026B 8AC4        585                   MOV          AL,AH
026D 2402        586                   AND          AL,00000010B
026F 0CE0        587                   OR           AL,11100000B
0271 E606        588                   OUT          BCHC,AL
                 589 ;-------------PTR 5A-----------------
                 590 ;                 MOV          AL,00000101B
                 591 ;                 OUT          ACHC,AL
                 592 ;                 MOV          AL,01100000B
                 593 ;                 OUT          ACHC,AL
0273 E85300      594                   CALL         WAIT       ;RTS HOLD 12ms UNTIL Tx.ENABL
0276 E85000      595                   CALL         WAIT
0279 E84D00      596                   CALL         WAIT
027C E84A00      597                   CALL         WAIT
027F E84700      598                   CALL         WAIT
0282 E84400      599                   CALL         WAIT
0285 E84100      600                   CALL         WAIT
0288 E83E00      601                   CALL         WAIT
                 602 ;-------------PTR 5A-------------
028B B005        603                   MOV          AL,00000101B
028D E604        604                   OUT          ACHC,AL
028F A03E07      605                   MOV          AL,BYTE PTR [TEMP_R_CH]
0292 2401        606                   AND          AL,00000001B
0294 F8          607                   CLC
0295 D0C0        608                   ROL          AL
0297 0C69        609                   OR           AL,01101001B
0299 E604        610                   OUT          ACHC,AL
                 611 ;-------------------RTS ON---------------
                 612
029B B080        613                   MOV          AL,10000000B
029D E604        614                   OUT          ACHC,AL
                 615 ;-----------INITIAL SET UP OF DMA,CH.1:TX TRANS
                 616 ;-----------SOURCE POINTER SET-------------------------------
                 617 ;-------------DESTINATION POINTER SET-------------------------
029F 8BC6        618                   MOV          AX,SI           ;SOURCE ADR.
02A1 40          619                   INC          AX
02A2 BAD0FF      620                   MOV          DX,0FFD0H
02A5 EF          621                   OUT          DX,AX
02A6 B002        622                   MOV          AL,02H
02A8 BAD2FF      623                   MOV          DX,0FFD2H
02AB EE          624                   OUT          DX,AL
02AC 8AC1        625                   MOV          AL,CL           ;TRANSFER COUNT
02AE B400        626                   MOV          AH,0
02B0 BAD8FF      627                   MOV          DX,0FFD8H
```

HEWLETT-PACKARD: 8086 Assembler

SOURCE LINE

```
02B3 EF                                OUT            DX,AX
                      ;----------------TRANSFER COUNT----------------------------------
                      ;------------------CONTROL WORD SET---------------------
02B4 BADAFF                            MOV            DX,0FFDAH
02B7 B88616                            MOV            AX,01686H
02BA EF                                OUT            DX,AX          ;DMA GO !
                      ;-------------WAIT ROUTINE-----------------------------
02BB E80B00                            CALL           WAIT
                      ;-------------FIRST BYTE OUTPUT-------
02BE 8BDE                              MOV            BX,SI          ;SOURCE ADR.
02C0 8A07                              MOV            AL,[BX]
02C2 E600                              OUT            ACHD.AL
                      ;
02C4 B0C0                              MOV            AL.11000000B
02C6 E604                              OUT            ACHC.AL
02C8 C3                                RET
                      ;=============WAIT============
02C9 BB0000           WAIT:            MOV            BX,0
02CC 43               WAIT1:           INC            BX
02CD 81FBFF00                          CMP            BX,0FFH
02D1 75F9                              JNE            WAIT1
02D3 C3                                RET
                      ;---------------INTR 3-----------------------------------
                                       ORG            06300H
                      ;@@@@@           CLI
                      ;
                      ; -----------------------------------------------------------------
                      ; ************  OBF Interrupt Operation  ************************
                      ; -----------------------------------------------------------------
                      ;
6300 9C               OBF_INTERRUPT:   PUSHF                         ;PUSH ALL
6301 60                                DB 60H
6302 E480                              IN AL,DROP_DATA_PORT
                      ;
6304 8B361007                          MOV SI,[CTRL_2_COUNT]
6308 8804                              MOV [SI].AL                   ; Data Store
```

HEWLETT-PACKARD: 8086 Assembler

SOURCE LINE

```
630A 46                              INC SI
630B 89361007                        MOV [CTRL_2_COUNT],SI          ;     Pointer Increment
                   ;
630F BE4007                          MOV SI,OBF_BF_H
6312 FE064007                        INC BYTE PTR [OBF_BF_H]        ;     Data Length Increment
6316 8A0E4007                        MOV CL,[OBF_BF_H]
631A 8A6401                          MOV AH,[SI+1]                  ; AH = Command Byte
                   ;
631D 80F901                          CMP CL,1
6320 750F                            JNZ RESPONSE_2
6322 B001                            MOV AL,1                       ; 1 Byte Response
6324 80FC00                          CMP AH,0                       ;    [ 00 ] [ 07 ]
6327 7429                            JZ RESPONSE_CHK
6329 80FC07                          CMP AH,7
632C 7424                            JZ RESPONSE_CHK
632E E98200        OBF_RET_1         JMP OBF_RET
                   ;
6331 80F902        RESPONSE_2:       CMP CL,2
6334 72F8                            JC OBF_RET_1
                   ;
6336 B002                            MOV AL,2                       ; 2 Byte Tesponse
6338 80FC84                          CMP AH,84H                     ;    [ 01 ] [ 02 ] [ 03 ] [ 05 ] [ 06 ] [ 08 ]
633B 7405                            JZ RESPONSE_VAL                ; Valiable Length
633D 80FC04                          CMP AH,4                       ;    [ 04 ] [ 84 ]
6340 7510                            JNZ RESPONSE_CHK
                   ;
6342 80F904        RESPONSE_VAL:     CMP CL,4                       ; [ 04 ][ 08 ] > 4
6345 726C                            JC OBF_RET
6347 8A4403                          MOV AL,[SI+3]                  ;    Byte Length Load
634A 0403                            ADD AL,3
634C 3C03                            CMP AL,3
634E 7502                            JNZ RESPONSE_CHK
6350 FEC0                            INC AL                         ; [04][84] Error Response
                   ;
6352 3AC8          RESPONSE_CHK:     CMP CL,AL
6354 725D                            JC OBF_RET
                   ;
6356 8B5401        OBF_PACKET:       MOV DX,[SI+1]
6359 80CA40                          OR DL,40H                      ; 8742 ---> 80186 Then OR 40H
635C 8B1EFE1F                        MOV BX,[INDEX_HISTORY]
6360 8917                            MOV [BX],DX
6362 8B5403                          MOV DX,[SI+3]
6365 895702                          MOV [BX+2],DX
6368 8B5405                          MOV DX,[SI+5]
636B 895704                          MOV [BX+4],DX
636E 8B16FC1F                        MOV DX,[TIMER_COUNTER]
6372 895706                          MOV [BX+6],DX
6375 83C308                          ADD BX,8
6378 81FB0030                        CMP BX,PAGE_MEM
637C 7203                            JC OBF_MEMO
637E BB0020                          MOV BX,HISTORY_BUFFER
6381 891EFE1F      OBF_MEMO:         MOV [INDEX_HISTORY],BX
                   ;
6385 8A260E07                        MOV AH,[CTRL_2]
6389 80FC28                          CMP AH,40
638C 731C                            JNC OBF_NEW
                   ;
```

HEWLETT-PACKARD: 8086 Assembler

SOURCE LINE

```
638E 8B1E0A07                       MOV BX,[INDEX_RX_2]
6392 8807                           MOV [BX],AL
6394 FEC3                           INC BL
6396 8A6401     RESPONSE_TRNS:      MOV AH,[SI+1]
6399 8827                           MOV [BX],AH
639B 46                             INC SI
639C FEC3                           INC BL
639E FEC8                           DEC AL
63A0 75F4                           JNZ RESPONSE_TRNS
                ;
63A2 FE060E07                       INC BYTE PTR [CTRL_2]
63A6 891E0A07                       MOV [INDEX_RX_2],BX
                ;
63AA A24007     OBF_NEW:            MOV [OBF_BF_N],AL                   ; [OBF_BF_N] = 0
63AD B84107                         MOV AX,OBF_BF_CMD
63B0 A31007                         MOV [CTRL_2_COUNT],AX               ; [CTRL_2_COUNT] = OBF_BF_CMD
                ;
63B3 B80F00     OBF_RET:            MOV             AX,15
63B6 BA22FF                         MOV             DX,0FF22H
63B9 EF                             OUT             DX,AX
63BA 61                             DB              61H                 ;POP ALL
63BB 9D                             POPF
63BC FB                             STI
63BD CF                             IRET
                ;---------------INTR 1----------------------------------
                                    ORG             06200H
                ;@@@@@@@@           CLI
                ;
                ; ------------------------------------------------------------
                ; ************  Drop Processor  IBF  Operation  ****************
                ; ------------------------------------------------------------
                ;
6200 9C         IBF_INTERRUPT:      PUSHF
6201 60                             DB 60H
6202 8B1E0407                       MOV BX,[INDEX_TX_1]
6206 8A0E0607                       MOV CL,[CTRL_1]
620A 8A260807                       MOV AH,[CTRL_1_COUNT]
620E 80FC00                         CMP AH,0
6211 756C                           JNZ IBF_2ND
                ;
6213 80F900     IBF_1ST:            CMP CL,0
6216 750A                           JNZ IBF_EXIST
                ;------------MASK IBF/ INTR.
6218 B81A00     IBF_EMPTY:          MOV             AX,1AH
621B BA3AFF                         MOV             DX,0FF3AH
621E EF                             OUT             DX,AX
621F E97500                         JMP             IBF_RET
                ;
6222 8A27       IBF_EXIST:          MOV AH,[BX]
6224 FEC3                           INC BL
6226 8A07                           MOV AL,[BX]
6228 E682                           OUT DROP_CMD_PORT,AL
                ;
622A FEC3                           INC BL
622C 891E0407                       MOV [INDEX_TX_1],BX
6230 FECC                           DEC AH
6232 88260807                       MOV [CTRL_1_COUNT],AH
```

SOURCE LINE

```
6236 7506          799                    JNZ IBF_PACKET
6238 FEC9          800                    DEC CL
623A 880E0607      801                    MOV [CTRL_1],CL
                   802 ;
623E 8B36FE1F      803 IBF_PACKET:        MOV SI,[INDEX_HISTORY]
6242 8804          804                    MOV [SI],AL        ;
6244 8A07          805                    MOV AL,[BX]
6246 884401        806                    MOV [SI+1],AL      ;
6249 FEC3          807                    INC BL
624B 8A07          808                    MOV AL,[BX]
624D 884402        809                    MOV [SI+2],AL      ;
6250 FEC3          810                    INC BL
6252 8A07          811                    MOV AL,[BX]
6254 884403        812                    MOV [SI+3],AL      ;
6257 FEC3          813                    INC BL
6259 8A07          814                    MOV AL,[BX]
625B 884404        815                    MOV [SI+4],AL      ;
625E FEC3          816                    INC BL
6260 8A07          817                    MOV AL,[BX]
6262 884405        818                    MOV [SI+5],AL      ;
6265 8B16FC1F      819                    MOV DX,[TIMER_COUNTER]
6269 895406        820                    MOV [SI+6],DX
626C 83C608        821                    ADD SI,8
626F 81FE0030      822                    CMP SI,PAGE_MEM
6273 7203          823                    JC IBF_MEMO
6275 BE0020        824                    MOV SI,HISTORY_BUFFER
6278 8936FE1F      825 IBF_MEMO:          MOV [INDEX_HISTORY],SI
627C E91800        826                    JMP IBF_RET
                   827 ;
627F 8A07          828 IBF_2ND:           MOV AL,[BX]
6281 E680          829                    OUT DROP_DATA_PORT,AL
6283 FEC3          830 IBF_SET:           INC BL
6285 891E0407      831                    MOV [INDEX_TX_1],BX
6289 FECC          832                    DEC AH
628B 88260807      833                    MOV [CTRL_1_COUNT],AH
628F 7506          834                    JNZ IBF_RET
6291 FEC9          835                    DEC CL
6293 880E0607      836                    MOV [CTRL_1].CL
                   837 ;
                   838 ;
                   839 ;--------IN_SERVICE LATCH RESET
6297 B80D00        840 IBF_RET:           MOV             AX,13
629A BA22FF        841                    MOV             DX,0FF22H
629D EF            842                    OUT             DX,AX
629E 61            843                    DB              61H
629F 9D            844                    POPF
62A0 FB            845                    STI
62A1 CF            846                    IRET
                   847 ;
                   848
                   849 ;---------------INTR 0-----------------------------------
                   850 ;--------------External status Intr.---------------------
                   851                    ORG             06400H
                   852 ;@@@@@@             CLI
6400 9C            853                    PUSHF
6401 60            854                    DB              60H
6402 E404          855                    IN              AL,ACHC
```

SOURCE LINE

```
                ;**************NEW VERSION************
6404 8AC8                            MOV          CL,AL
6406 B010                            MOV          AL,00010000B
6408 E604                            OUT          ACHC,AL
640A E404                            IN           AL,ACHC
640C 8AE8                            MOV          CH,AL
640E A03C07                          MOV          AL,BYTE PTR [EXTRN_STAT]
6411 8AD0                            MOV          DL,AL
6413 8AC5                            MOV          AL,CH
6415 D0C0                            ROL          AL
6417 D0C0                            ROL          AL
6419 D0C0                            ROL          AL
641B 7207                            JC           LOY
641D 8AC1                            MOV          AL,CL
641F 24DF                            AND          AL,11011111B
6421 E90700                          JMP LOZ
                ;*****************
6424 8AC1       LOY:                 MOV          AL,CL
6426 0C20                            OR           AL,00100000B
6428 E90000                          JMP          LOZ
642B A23C07     LOZ:                 MOV          BYTE PTR [EXTRN_STAT],AL
642E 8AC2                            MOV          AL,DL
6430 2410                            AND          AL,00010000B
6432 8AE0                            MOV          AH,AL
6434 8AC1                            MOV          AL,CL
6436 2410                            AND          AL,00010000B
6438 3AE0                            CMP          AH,AL
643A 753A                            JNZ          EXIT
643C 8AC2                            MOV          AL,DL
643E 2420                            AND          AL,00100000B
6440 8AE0                            MOV          AH,AL
6442 8AC5                            MOV          AL,CH
6444 2420                            AND          AL,00100000B
6446 3AE0                            CMP          AH,AL
6448 8AC2                            MOV          AL,DL
644A 2480                            AND          AL,10000000B
644C 8AE1                            MOV          AH,CL
644E 80E480                          AND          AH,10000000B
6451 32E0                            XOR          AH,AL
6453 7521                            JNZ          EXIT
6455 8AC1       TX_UNDRN:            MOV          AL,CL
6457 2444                            AND          AL,01000100B
6459 3C40                            CMP          AL,01000000B
645B 7519                            JNE          EXIT              ;NOT TX.UNDERRUN
645D B028                            MOV          AL,00101000B
645F E604                            OUT          ACHC,AL
6461 B8100E                          MOV          AX,3600
6464 BA5AFF                          MOV          DX,0FF5AH
6467 EF                              OUT          DX,AX
6468 B801E0                          MOV          AX,1110000000000001B
646B BA5EFF                          MOV          DX,0FF5EH
646E EF                              OUT          DX,AX
646F B80300                          MOV          AX,0011B
6472 BA32FF                          MOV          DX,0FF32H
6475 EF                              OUT          DX,AX
                ;
                ;XIT:                 MOV          AL,00010000B
```

HEWLETT-PACKARD: 8086 Assembler

SOURCE LINE

```
                ;                  OUT           ACHC,AL
6476 B038       EXIT:              MOV           AL,00111000B
6478 E604                          OUT           ACHC,AL
647A B80C00                        MOV           AX,12
647D BA22FF                        MOV           DX,0FF22H
6480 EF                            OUT           DX,AX
                ;
6481 B80000                        MOV AX,0
6484 A21807                        MOV [TX_BUSY_FLAG],AL
6487 A31407                        MOV [ECHO_BACK_FLAG],AX
648A 61                            DB            61H
648B 9D                            POPF
648C FB                            STI
648D CF                            IRET
















                ;---------------INTR 0---------------------------------
                                   ORG           06500H
                ;0000000           CLI
                ;-------------------------------------------------------------------
                ;---------------FIRST RX. INT SHORI-----------------------------------------
6500 9C                            PUSHF
6501 60                            DB            60H
6502 8B1E1207                      MOV           BX,WORD PTR [PAGE_SW]
                ;
6506 E400       HON:               IN            AL,ACHD       ;1ST DATA INPUT
6508 8807                          MOV           [BX],AL
650A 43                            INC           BX
650B 8BC3                          MOV           AX,BX
650D BAC4FF                        MOV           DX,0FFC4H
6510 EF                            OUT           DX,AX
6511 B002                          MOV           AL,02H
6513 BAC6FF                        MOV           DX,0FFC6H
6516 EF                            OUT           DX,AX
6517 B8FF00                        MOV           AX,255
651A BAC8FF                        MOV           DX,0FFC8H
651D EF                            OUT           DX,AX
651E B846A2                        MOV           AX,0A246H     ;DMA START
6521 BACAFF                        MOV           DX,0FFCAH
6524 EF                            OUT           DX,AX
                ;------------IN SERV. LATCH RESET--------
6525 B038                          MOV           AL,00111000B
6527 E604                          OUT           ACHC,AL
```

```
                    SOURCE LINE

6529 B80C00                         MOV          AX,12
652C BA22FF                         MOV          DX,0FF22H
652F EF                             OUT          DX,AX
6530 61                             DB           61H
6531 9D                             POPF
6532 FB                             STI
6533 CF                             IRET




          ;---------------INTR 0-----------------------------------
          ;---------------Special Rx. intr.---------------------------------
                                    ORG          06600H
          ;000000                   CLI
          ;
          ; ------------------------------------------------------------
          ; ************  HDLC Rx Interrupt Operation  *******************
          ; ------------------------------------------------------------
          ;
6600 9C             RX_INTERRUPT:   PUSHF
6601 60                             DB 60H
6602 E86400         RX_RCV:         CALL RX_RECEIVE
6605 7256                           JC RX_CRC_ERR                   ; CRC Error
6607 83060A0001                     ADD WORD PTR [RX_CRC_OK_Y0+2],1
660C 8316080000                     ADC WORD PTR [RX_CRC_OK_Y0],0
6611 8B361207                       MOV SI,[PAGE_SW]
          ;
6615 8B1C                           MOV BX,[SI]                     ; BX = Receive Address
6617 3B1E0014                       CMP BX,[ECU_ADDRESS]
661B 7419                           JZ MY_ADRS
661D 81FBFFFF                       CMP BX,0FFFFH
6621 7413                           JZ MY_ADRS                      ; Global Address
6623 83FB00                         CMP BX,0
6626 751E                           JNZ RX_RET
                                                                    ; SI --- ECU H Address
6628 A10014         ALOHA_CHECK:    MOV AX,[ECU_ADDRESS]            ; +1          L
662B 234403                         AND AX,[SI+3]                   ; +2      Tx Length
662E 3B4405                         CMP AX,[SI+5]                   ; +3      MASK H Address
6631 7513                           JNZ RX_RET                      ; +4           L
                                                                    ; +5      Ref. H Address
                                                                    ; +6           L
                                                                    ; +7      Real Tx Length
                                                                    ;
6633 83C605         MY_ALOHA:       ADD SI,5                        ; Aloha Address
          ;
6636 89361407       MY_ADRS:        MOV [ECHO_BACK_FLAG],SI         ; ECHO Back Buffer Address S.
          ;
663A 81C60001                       ADD          SI,100H
663E 81E60033                       AND          SI,3300H
6642 89361207                       MOV          WORD PTR [PAGE_SW],SI
          ;
6646 B038           RX_RET:         MOV          AL,00111000B
6648 E604                           OUT          ACHC,AL
          ;-------------------------
664A B80C00                         MOV          AX,12
664D BA22FF                         MOV          DX,0FF22H
```

HEWLETT-PACKARD: 8086 Assembler

SOURCE LINE

```
6650 EF                          OUT     DX,AX
6651 B001                        MOV     AL,00000001B
6653 E604                        OUT     ACHC,AL
6655 B00F                        MOV     AL,00001111B
6657 E604                        OUT     ACHC,AL
6659 61                          DB      61H
665A 9D                          POPF
                     ;-------------------------
665B FB                          STI
665C CF                          IRET
                     ;
665D 8306060001    RX_CRC_ERR:   ADD WORD PTR [RX_CRC_ERROR+2],1
6662 8316040000                  ADC WORD PTR [RX_CRC_ERROR],0
6667 EBDD                        JMP RX_RET
                     ;
6669 90            RX_RECEIVE:   NOP
666A B844A0                      MOV     AX,0A044H          ;DMA STOP
666D BACAFF                      MOV     DX,0FFCAH
6670 EF                          OUT     DX,AX
6671 B001                        MOV     AL,00000001B
6673 E604                        OUT     ACHC,AL
6675 E404                        IN      AL,ACHC            ;STATUS INPUT
6677 D0C0                        ROL     AL
6679 D0C0                        ROL     AL
667B B030                        MOV     AL,00110000B       ;ERROR RESET COM
667D E604                        OUT     ACHC,AL
667F B040                        MOV     AL,01000000B       ;RESER CRC CECKER
6681 E604                        OUT     ACHC,AL
6683 B020                        MOV     AL,00100000B
6685 E604                        OUT     ACHC,AL
6687 C3                          RET
                     ;----------------------
                     ;-----------------NON SPECIFIC EOI------------------
6688 B80080        EOI.          MOV     AX,8000H
668B BA22FF                      MOV     DX,0FF22H
668E EF                          OUT     DX,AX
668F C3                          RET
                     ;----------------------------------------
                     ;-------------TX_DISABLE_ROUTINE
                     ;----TIMER_1 INTR----
                                 ORG     06700H
                     ;0000       CLI
6700 9C                          PUSHF
6701 60                          DB      60H
6702 B8100E                      MOV     AX,3600
6705 BA5AFF                      MOV     DX,0FF5AH
6708 EF                          OUT     DX,AX
6709 B80160                      MOV     AX,0110000000000001B
670C BA5EFF                      MOV     DX,0FF5EH
670F EF                          OUT     DX,AX
6710 B80B00                      MOV     AX,1011B
6713 BA32FF                      MOV     DX,0FF32H
6716 EF                          OUT     DX,AX
                     ;----------------PTR 0A------------------
6717 B028                        MOV     AL,00101000B
6719 E604                        OUT     ACHC,AL
                     ;----------------PTR 05A------------
```

```
                              SOURCE LINE

671B B005                                 MOV            AL,00000101B
671D E604                                 OUT            ACHC,AL
671F A03E07                               MOV            AL,BYTE PTR [TEMP_R_CH]
6722 2401                                 AND            AL,00000001B
6724 F8                                   CLC
6725 D0C0                                 ROL            AL
6727 0CE0                                 OR             AL,11100000B
6729 E604                                 OUT            ACHC,AL
                    ;-----------------------RTS OFF-------------
                    ;---------------PTR 01A------------
672B B001                                 MOV            AL,00000001B
672D E604                                 OUT            ACHC,AL
672F B02D                                 MOV            AL,00101101B
6731 E604                                 OUT            ACHC,AL
                    ;---------------PTR 0A--------------
6733 B080                                 MOV            AL,10000000B
6735 E604                                 OUT            ACHC,AL
                    ;---------------PTR 0A---------------
                    ;                     MOV            AL,00010000B   ???????
                    ;                     OUT            ACHC,AL
                    ;--------
6737 BA22FF                               MOV            DX,0FF22H
673A B80800                               MOV            AX,08
673D EF                                   OUT            DX,AX
673E B80000                               MOV            AX,0               ;Tx end flag
6741 A21807                               MOV [TX_BUSY_FLAG],AL
6744 A31407                               MOV [ECHO_BACK_FLAG],AX
6747 61                                   DB             61H
6748 9D                                   POPF
6749 FB                                   STI
674A CF                                   IRET
                    ;------------------------------------------
                    ;----------------------SET UP UCS------------------------------
                                          ORG            07C00H
7C00 B83FF8                               MOV            AX,0F83FH
7C03 BAA0FF                               MOV            DX,0FFA0H
7C06 EF                                   OUT            DX,AX
7C07 EA000000F8                           DB             0EAH,0,0,0,0F8H              ;JUMP TO 0F8000H
                    ;==============================================================
                                          ORG            07FF0H
7FF0 EA0000C0FF                           DB             0EAH,000H,00H,0C0H,0FFH    ;JUMP TO 0FFC00H
                    ;
                    ;-------------------------------------------------------------------------
                    ;*************                 ****************************************
                    ;*************     Hajime      ****************************************
                    ;*************                 ****************************************
                    ;-------------------------------------------------------------------------
                    ;
                                          ORG 300H
                    ;
0300 90             HAJIMERUYO:           NOP
0301 E80000                               CALL POWER_DET_CMD
```

HEWLETT-PACKARD: 8086 Assembler

SOURCE LINE

```
0304 BE2008      HAJIME1:         MOV SI,FROM_OBF_BF
0307 E80000                       CALL LOAD_FROM_DROP
030A 72F8                         JC HAJIME1
030C BE2008                       MOV SI,FROM_OBF_BF
030F 8A4401                       MOV AL,[SI+1]
0312 3C01                         CMP AL,1
0314 75EE                         JNZ HAJIME1         ; IF Response <> Power Det. Then Wait
                 ;
0316 E80000                       CALL POWER_DET_CMD
0319 BE2008      HONBAN1:         MOV SI,FROM_OBF_BF
031C E80000                       CALL LOAD_FROM_DROP
031F 72F8                         JC HONBAN1
0321 BE2008                       MOV SI,FROM_OBF_BF
0324 8A4401                       MOV AL,[SI+1]
0327 3C01                         CMP AL,1
0329 75EE                         JNZ HONBAN1         ; IF Response <> Power Det. Then Wait
                 ;
032B 8A7402                       MOV DH,[SI+2]       ; DH = Power Detect Data
032E B210                         MOV DL,10H          ; DL = 1st ID_BYTE --- 10H
0330 D0CE        DROP_INIT_LP:    ROR DH
0332 7363                         JNC DRP_NEXT        ; IF CY=0 Then Power Down
                 ;
0334 52          DEV_INIT_LP:     PUSH DX
0335 88162C07                     MOV [ID_BYTE],DL
0339 E80000                       CALL ID_DROP_DEVICE
033C E80000                       CALL SPU_STATUS_REQ
033F BE2008      DEV_RESP_WT:     MOV SI,FROM_OBF_BF
0342 E80000                       CALL LOAD_FROM_DROP
0345 72F8                         JC DEV_RESP_WT
0347 BE2008                       MOV SI,FROM_OBF_BF  ; SI --- Length
                                                      ; +1     Command
                                                      ; +2     ID_BYTE
                                                      ; +3     Byte Count
                                                      ; +4     Data
034A B004                         MOV AL,4
034C 3A4401                       CMP AL,[SI+1]
034F 75EE                         JNZ DEV_RESP_WT     ; IF [SI+1]=4 Then 04 Command
                 ;
0351 8A4402                       MOV AL,[SI+2]
0354 3A062C07                     CMP AL,[ID_BYTE]
0358 75E5                         JNZ DEV_RESP_WT     ; IF CMD NEQ Status Then Wait Loop
                 ;
035A B000                         MOV AL,0
035C 3A4403                       CMP AL,[SI+3]
035F 742D                         JZ DEV_NEXT         ; VLF Error (Device Off)
                 ;
0361 8A4404                       MOV AL,[SI+4]
0364 24F8                         AND AL,0F8H
0366 75D7                         JNZ DEV_RESP_WT     ; Status Response denai
                 ;
0368 8A5405                       MOV DL,[SI+5]       ; <<< DL = Status >>>
036B E80000                       CALL CONV_SW_BIT_AL ;  SI --- CONVSEL ( Drop_NO. )
                                                      ;  AL --- ( Device )
036E 80E280                       AND DL,80H          ;
0371 740E                         JZ DEV_SW_0         ; IF <7>=0 Then Converter SW=0
0373 8A262607    DEV_SW_1:        MOV AH,[DROP_NO]
0377 80E401                       AND AH,1
```

HEWLETT-PACKARD: 8086 Assembler

SOURCE LINE

```
037A 7509                           JNZ DEV_CLR         ; IF ODD Drop Then Converter SW=0  Else  Abnorma
037C 0804                           OR [SI],AL
037E E90400                         JMP DEV_CLR
0381 343F         DEV_SW_0:         XOR AL,3FH
0383 2004                           AND [SI],AL
                  ;
0385 E80000       DEV_CLR:          CALL SPU_RELAY_OFF
0388 E80000                         CALL SPU_CLEAR_DISP
038B E80000                         CALL EVENT_LED_OFF
                  ;
038E 5A           DEV_NEXT:         POP DX
038F 80C208                         ADD DL,8            ; 00**  *DDD
0392 80FA30                         CMP DL,30H          ; 0011  0DDD
0395 729D                           JC DEV_INIT_LP      ;   IF Device<6 Then Next Device
                  ;
0397 80E207       DRP_NEXT:         AND DL,7
039A FEC2                           INC DL              ;   Next Drop
039C 80FA06                         CMP DL,6            ;   IF Drop>5 Then Next Operation
039F 7305                           JNC POLLING_SEQ
03A1 80CA10                         OR DL,10H           ;   Next Device Start from "2"
03A4 EB8A                           JMP DROP_INIT_LP



03A6 E80000       POLLING_SEQ:      CALL DROP_MAP_SET               ;=
                                                                    ;=
03A9 E80000                         CALL DEVICE_MAP_SET             ;= DROP 0
03AC FE062407                       INC BYTE PTR [CONV_NO]          ;=
03B0 E80000                         CALL DEVICE_MAP_SET             ;= DROP 1
03B3 FE062407                       INC BYTE PTR [CONV_NO]          ;=
03B7 E80000                         CALL DEVICE_MAP_SET             ;= DROP 2
03BA FE062407                       INC BYTE PTR [CONV_NO]          ;=
03BE E80000                         CALL DEVICE_MAP_SET             ;= DROP 3
03C1 FE062407                       INC BYTE PTR [CONV_NO]          ;=
03C5 E80000                         CALL DEVICE_MAP_SET             ;= DROP 4
03C8 FE062407                       INC BYTE PTR [CONV_NO]          ;=
03CC E80000                         CALL DEVICE_MAP_SET             ;= DROP 5











                  ;
                  ;
                  ;---------------------------------------------------------------------------------------
                  ;*************                  ***********************************************************
                  ;*************  Main  Routine   ***********************************************************
                  ;*************                  ***********************************************************
                  ;---------------------------------------------------------------------------------------
                  ;
```

```
                ;
03CF E82C01     MAIN_LOOP:      CALL FORWARD_CMD_CK          ; Cy Flag = 1  Active
03D2 E81100                     CALL TIMER_OPERAT
03D5 7205                       JC KEY_APPLICAT
                ;
03D7 E8CD04     DROP_ACCESS:    CALL DROP_RESPONSE           ; Response no kaishaku
03DA 7305                       JNC ECU_ADRS_NEW             ;      ---> Shori Nshi
                ;
03DC E80000     KEY_APPLICAT:   CALL KEY_OPERATION           ;      ---> Key shori
03DF EBEE                       JMP MAIN_LOOP
                ;
03E1 E82903     ECU_ADRS_NEW:   CALL ECU_ADRS_READ
03E4 EBE9                       JMP MAIN_LOOP
                ;
                ; ************  Subroutine  ********************************************
                ;
03E6 E8FB00     TIMER_OPERAT:   CALL TIMER_CHK
03E9 7202                       JC TIMER_YO
03EB F8                         CLC
03EC C3                         RET
                ;
03ED FF06FC1F   TIMER_YO:       INC WORD PTR [TIMER_COUNTER]
                ;
03F1 8B16FC1F   TIMER_TOB2:     MOV DX,[TIMER_COUNTER]
03F5 80FA00                     CMP DL,0
03F8 7568                       JNZ TIMER_TYPE_2
03FA 80E607                     AND DH,7
03FD 80FE06                     CMP DH,6
0400 7360                       JNC TIMER_TYPE_2
                ;
0402 B001                       MOV AL,1
0404 8ACE                       MOV CL,DH          ; DH = CONV_NO
0406 D2C0                       ROL AL,CL          ; AL = CONV_NO_BIT
0408 84068007                   TEST AL,[NOW_EVENT]
```

HEWLETT-PACKARD: 8086 Assembler

SOURCE LINE

```
040C 7454                          JZ TIMER_TYPE_2
040E B700                          MOV BH,0
0410 8ADE                          MOV BL,DH
           ;        ******  PAY Channel View  ******
0412 BE3000                        MOV SI,EVENT_CHANNEL
0415 03F3                          ADD SI,BX
0417 8A1C                          MOV BL,[SI]             ; BL = EVENT View Channel
0419 BE0006                        MOV SI,ES_EVENT_TIMER   ; Counter Up & Pay ?
041C 8AE6                          MOV AH,DH
041E B000                          MOV AL,0
0420 D1C8                          ROR AX
0422 03F0                          ADD SI,AX
0424 268A20                        MOV AH,ES:[SI][BX]
0427 80FCF8                        CMP AH,0F8H
042A 7336                          JNC TIMER_TYPE_2
042C 26800008                      ADD BYTE PTR ES:[SI][BX],8
0430 268038F8                      CMP BYTE PTR ES:[SI][BX],0F8H
0434 722C                          JC  TIMER_TYPE_2
           ;
0436 800E8007C0                    OR BYTE PTR [NOW_EVENT],0C0H
043B 80CE10                        OR DH,10H
043E 88362807                      MOV [IC_BYTE],DH
0442 E80000                        CALL CONV_TO_DROP
0445 E80000                        CALL ID_DROP_DEVICE
           ;
0448 A02E07                        MOV AL,[CONV_NO_BIT]
044B 343F                          XOR AL,3FH
044D 20068107                      AND BYTE PTR [BEFOR_EVENT],AL
           ;
0451 BE3000                        MOV SI,EVENT_CHANNEL
0454 03362407                      ADD SI,[CONV_NO]
0458 8A1C                          MOV BL,[SI]
045A B700                          MOV BH,0
045C E80000                        CALL BINDEC_LED
045F E80000                        CALL RUN_CONVERTER
           ;
0462 8B1EFC1F    TIMER_TYPE_2:     MOV BX,[TIMER_COUNTER]
0466 81E3FF0F                      AND BX,0FFFH
           ;
046A 81FB0004                      CMP BX,ES_BACK_UP_2              ; 1024
046E 734C                          JNC TIMER_TOB
0470 81FB0002                      CMP BX,ES_BACK_UP_1              ; 512
0474 721B                          JC MOV_1_ST
           ;
0476 268A07      MOV_2_ND:         MOV AL,ES:[BX+ES_BACK_UP]        ; BX = 512 - 1023
0479 2688870002                    MOV ES:[BX+ES_BACK_UP_1],AL
047E 753C                          JNZ TIMER_TOB
0480 26C7060002                    MOV WORD PTR ES:[ES_BACK_UP_1],0A5A5H
0487 26C7060004                    MOV WORD PTR ES:[ES_BACK_UP_2],0
048E E92B00                        JMP TIMER_TOB
           ;
0491 83FB04      MOV_1_ST:         CMP BX,4
0494 7214                          JC MOV_1_INIT
0496 8A07                          MOV AL,[BX]
0498 2688870002                    MOV ES:[BX+ES_BACK_UP_1],AL
049D 2630060202                    XOR ES:[ES_BACK_UP_1+2],AL
04A2 2600060302                    ADD ES:[ES_BACK_UP_1+3],AL
```

HEWLETT-PACKARD: 8086 Assembler

SOUPCE LINE

```
04A7 E91200                        JMP TIMER_TOB
                     ;
04AA 26C6870002      MOV_1_INIT:   MOV BYTE PTR ES:[BX+ES_BACK_UP_1],0
04B0 83FB00                        CMP BX,0
04B3 7507                          JNZ TIMER_TOB
04B5 26C7060004                    MOV WORD PTR ES:[ES_BACK_UP_2],0A5A5H
                     ;
04BC 81E33F00        TIMER_TOB:    AND BX,3FH                   ; 00**  ****
04C0 881E2807                      MOV [IC_BYTE],BL
04C4 02DB                          ADD BL,BL
04C6 BE0003                        MOV SI,TIME_TABLE
04C9 8B00                          MOV AX,[SI][BX]
04CB 3DFFFF                        CMP AX,0FFFFH
04CE 7412                          JZ TIMER_SLEEP               ; Timer Wa Tukawanai
04D0 FF08                          DEC WORD PTR [SI][BX]
04D2 750E                          JNZ TIMER_SLEEP              ;   <---   Madada
                     ;
04D4 B100                          MOV CL,TIMER_OUT_CODE        ;   <---   Jikan desuyo
04D6 880E8907                      MOV [KEY_DATA],CL
04DA E80000                        CALL IC_DROP_DEVICE
04DD E80000                        CALL CONV_TO_DROP
                     ;
04E0 F9              TIMER_ACTIVE: STC
04E1 C3                            RET
                     ;


04E2 F8              TIMER_SLEEP:  CLC
04E3 C3                            RET

                     ;
                     ; ************  Timer Counter Check  ****************************
                     ;
                     ;=================SUBROUTINE FOR COUNT SEC=============
04E4 BA66FF          TIMER_CHK:    MOV          DX,0FF66H
04E7 ED                            IN           AX,DX
04E8 A92000                        TEST         AX,0020H
04EB F8                            CLC
04EC 740F                          JZ           RETTIM2
04EE B80008                        MOV          AX,0800H
04F1 BA62FF                        MOV          DX,0FF62H
04F4 EF                            OUT          DX.AX
04F5 B801C0                        MOV          AX.1100000000000001B
04F8 BA66FF                        MOV          DX,0FF66H
04FB EF                            OUT          DX,AX
04FC F9                            STC
04FD C3              RETTIM2:      RET
```

HEWLETT-PACKARD: 8086 Assembler

```
                  SOURCE LINE

                   ;
                   ;------------------------------------------------------------------
                   ;*************                        ******************************
                   ;*************  HDLC Forward Command  ******************************
                   ;*************                        ******************************
                   ;------------------------------------------------------------------
                   ;
04FE 8B361407      FORWARD_CMD_CK: MOV SI,[ECHO_BACK_FLAG]
0502 83FE00                        CMP SI,0
0505 7503                          JNZ FORWARD_COME
0507 E90102                        JMP TX_CCC_N_RET
                                                                      ; SI=Data Buffer Address
050A C706140700    FORWARD_COME:   MOV WORD PTR [ECHO_BACK_FLAG],0    ; +0 --- ECU H Address
0510 8A4403                        MOV AL,[SI+3]                      ; +1             L
0513 3C80                          CMP AL,80H                         ; +2     Rx Data Length
0515 7333                          JNC FORWARD_CMDTBL                 ; +3     Command
0517 3C20                          CMP AL,20H
0519 7303                          JNC CCC_CMD_20_7F
051B E98501                        JMP CCC_DROP_CMD       ; 00 - 1F Command
                   ;
051E 740A          CCC_CMD_20_7F:  JZ FORCED_KEY          ; 20 - 7F Command
0520 3C30                          CMP AL,30H
0522 7403                          JZ COLD_START
0524 E9E401                        JMP TX_CCC_N_RET
                   ;
0527 E9D6FA        COLD_START:     JMP RUN                ; *******  Cold Start  ******
                   ;
052A 8A4404        FORCED_KEY:     MOV AL,[SI+4]
052D A22807                        MOV [IC_BYTE],AL
0530 8A6405                        MOV AH,[SI+5]
0533 88268907                      MOV [KEY_DATA],AH
0537 E80000                        CALL IC_DROP_DEVICE
053A E80000                        CALL CONV_TO_DROP
053D E80000                        CALL KEY_OPERATION
0540 F9                            STC
0541 C3                            RET
                   ;
0542 5B            FORWARD_JUMP:   POP BX
0543 03D8                          ADD BX,AX
0545 8A4403                        MOV AL,[SI+3]
0548 53                            PUSH BX
0549 C3                            RET
                   ;
054A 2C80          FORWARD_CMDTBL: SUB AL,80H
```

HEWLETT-PACKARD: 8086 Assembler

SOURCE LINE

```
054C 25FC00                                AND AX,0FCH
054F E8F0FF                                CALL FORWARD_JUMP
                ;
0552 E97C00     CCC_CMD_JMPTBL:  JMP SEND_FUNC_MOD     ; 80H ---
0555 90                          NOP
0556 E99600                      JMP SEND_RESPONSE     ; 84H ---
0559 90                          NOP
055A E90000                      JMP PAY_GROUP_1       ; 88H ---
055D 90                          NOP
055E E90000                      JMP PAY_GROUP_2       ; 8CH ---
0561 90                          NOP
0562 E9A601                      JMP TX_CCC_N_RET      ; 90H ---
0565 90                          NOP
0566 E9A201                      JMP TX_CCC_N_RET      ; 94H ---
0569 90                          NOP
056A E99E01                      JMP TX_CCC_N_RET      ; 98H ---
056D 90                          NOP
056E E99A01                      JMP TX_CCC_N_RET      ; 9CH ---
0571 90                          NOP
0572 E99601                      JMP TX_CCC_N_RET      ; A0H ---          [Ino]
0575 90                          NOP
0576 E99201                      JMP TX_CCC_N_RET      ; A4H ---          [Ino]
0579 90                          NOP
057A E98E01                      JMP TX_CCC_N_RET      : A8H ---          [Ino]
057D 90                          NOP
057E E98A01                      JMP TX_CCC_N_RET      ; ACH ---          [Ino]
0581 90                          NOP
0582 E98601                      JMP TX_CCC_N_RET      ; B0H ---          [Ino]
0585 90                          NOP
0586 E98201                      JMP TX_CCC_N_RET      : B4H ---          [Ino]
0589 90                          NOP
058A E97E01                      JMP TX_CCC_N_RET      ; B8H ---          [Ino]
058D 90                          NOP
058E E97A01                      JMP TX_CCC_N_RET      ; BCH ---          [Ino]
0591 90                          NOP
0592 E97601                      JMP TX_CCC_N_RET      ; C0H ---          [Ben]
0595 90                          NOP
0596 E97201                      JMP TX_CCC_N_RET      ; C4H ---          [Ben]
0599 90                          NOP
059A E96E01                      JMP TX_CCC_N_RET      : C8H ---          [Ben]
059D 90                          NOP
059E E96A01                      JMP TX_CCC_N_RET      : CCH ---          [Ben]
05A1 90                          NOP
05A2 E96601                      JMP TX_CCC_N_RET      : D0H ---
05A5 90                          NOP
05A6 E96201                      JMP TX_CCC_N_RET      : D4H ---
05A9 90                          NOP
05AA E95E01                      JMP TX_CCC_N_RET      ; D8H ---
05AD 90                          NOP
05AE E95A01                      JMP TX_CCC_N_RET      ; DCH ---
05B1 90                          NOP
05B2 E95601                      JMP TX_CCC_N_RET      ; E0H ---
05B5 90                          NOP
05B6 E95201                      JMP TX_CCC_N_RET      ; E4H ---
05B9 90                          NOP
05BA E94E01                      JMP TX_CCC_N_RET      ; E8H ---
05BD 90                          NOP
```

HEWLETT-PACKARD: 8086 Assembler

SOURCE LINE

```
05BE E94A01                          JMP TX_CCC_N_RET      ; ECH ---
05C1 90                              NOP
05C2 E95500                          JMP ECHO_BACK_CMD     ; F0H ---
05C5 90                              NOP
05C6 E9E300                          JMP FORCED_TUNE       ; F4H ---
05C9 90                              NOP
05CA E95A00                          JMP DISPLAY_MEMORY    ; F8H ---
05CD 90                              NOP
05CE E99300                          JMP STORE_MEMORY      ; FCH ---
                   ;
                   ; ************  Send Function Response  ************************
                   ;
05D1 2403          SEND_FUNC_MOD:    AND AL,3                              ; 80 - 83 Command
05D3 7407                            JZ S_F_M_SET
05D5 3C01                            CMP AL,1
05D7 740D                            JZ S_F_M_CLR
05D9 E92F01                          JMP TX_CCC_N_RET                      ; 82 - 83 Command
                   ;
05DC 8A6404        S_F_M_SET:        MOV AH,[SI+4]                         ; 80 Command
05DF 88263008                        MOV [SEND_ENABLE],AH
05E3 E92501                          JMP TX_CCC_N_RET
                   ;
05E6 B400          S_F_M_CLR:        MOV AH,0                              ; 81 Command
05E8 88263308                        MOV [SEND_INDEX],AH
05EC E91C01                          JMP TX_CCC_N_RET
                   ;
05EF 8A263308      SEND_RESPONSE:    MOV AH,[SEND_INDEX]                   ; 84 - 87 Command
05F3 80FC00                          CMP AH,0
05F6 741F                            JZ NO_SEND
05F8 8A6403        YES_SEND:         MOV AH,[SI+3]
05FB 88263408                        MOV [SEND_CMD_RESP],AH
05FF 2403                            AND AL,3
0601 A21607                          MOV [REVERS_CHANEL],AL
0604 FE063308                        INC BYTE PTR [SEND_INDEX]
0608 FE063308                        INC BYTE PTR [SEND_INDEX]
060C BE3108                          MOV SI,SEND_ADDRESS
060F A10014                          MOV AX,[ECU_ADDRESS]
0612 8904                            MOV [SI],AX
0614 E9D600                          JMP TX_CCC_RUN
                   ;
0617 E9F100        NO_SEND:          JMP TX_CCC_N_RET
                   ;
                   ; ************  Echo Back Command  ******************************
                   ;
061A 2403          ECHO_BACK_CMD:    AND AL,3                      ; Command >= 0F0H
061C A21607                          MOV [REVERS_CHANEL],AL        ; Reverse Channel Command
061F A10014        ECHO_BACK_SURU:   MOV AX,[ECU_ADDRESS]
0622 8904                            MOV [SI],AX
0624 E9C600                          JMP TX_CCC_RUN
                   ;
                   ; ************  Display Memory  **********************************
                   ;
0627 8B5C05        DISPLAY_MEMORY:   MOV BX,[SI+5]          ;     <<< Display Memory >>>
062A 8A4403                          MOV AL,[SI+3]
062D A20314                          MOV [TX_COMMAND],AL
0630 8A4404                          MOV AL,[SI+4]          ; SI --- ECU Address H
0633 BE0414                          MOV SI,TX_BUFFER       ; +1     ECU Address L
```

```
                · SOUPCE LINE

0636 A20214                          MOV [TX_LENGTH],AL    ; +2     Rx Length
0639 81FB0080                        CMP BX,8000H          ; +3     Command
063D 7310                            JNC DISP_MEM_5517
063F 8A27          TX_TRNS2:         MOV AH,[BX]           ; +4     Tx Length
0641 8824                            MOV [SI],AH           ; +5     Tx Address L
0643 46                              INC SI                ; +6     Tx Address H
0644 43                              INC BX
0645 FEC8                            DEC AL
0647 75F6                            JNZ TX_TRNS2
0649 BE0014                          MOV SI,ECU_ADDRESS
064C E99E00                          JMP TX_CCC_RUN
                   ;
064F 81E3FF7F      DISP_MEM_5517:    AND BX,7FFFH          ; Back Up Memory Display
0653 268A27        TX_TRNS3:         MOV AH,ES:[BX]
0656 8824                            MOV [SI],AH
0658 46                              INC SI
0659 43                              INC BX
065A FEC8                            DEC AL
065C 75F5                            JNZ TX_TRNS3
065E BE0014                          MOV SI,ECU_ADDRESS
0661 E98900                          JMP TX_CCC_RUN
                   ;
0664 8B5C05        STORE_MEMORY:     MOV BX,[SI+5]         ;    <<< Store Memory >>>
0667 8A4403                          MOV AL,[SI+3]
066A A20314                          MOV [TX_COMMAND],AL
066D 8A4404                          MOV AL,[SI+4]         ; SI --- ECU Address H
                                                           ; +1     ECU Address L
0670 A20214                          MOV [TX_LENGTH],AL    ; +2     Rx Length
0673 81FB0080                        CMP BX,8000H          ; +3     Command
0677 730E                            JNC STOR_MEM_5517
0679 8A6407        ST_TRNS2:         MOV AH,[SI+7]         ; +4     St Length
067C 8827                            MOV [BX],AH           ; +5     St Address L
067E 46                              INC SI                ; +6     St Address H
067F 43                              INC BX
0680 FEC8                            DEC AL
0682 75F5                            JNZ ST_TRNS2
0684 E98400                          JMP TX_CCC_N_RET
                   ;
0687 81E3FF7F      STOR_MEM_5517:    AND BX,7FFFH          ; Back Up Memory Display
068B 81FB0001                        CMP BX,100H
068F 7303                            JNC ST_TRNS3
0691 E97700                          JMP TX_CCC_N_RET      ; Sokowa Interrupt Table
0694 8A6407        ST_TRNS3:         MOV AH,[SI+7]
0697 268827                          MOV ES:[BX],AH
069A 46                              INC SI
069B 43                              INC BX
069C FEC8                            DEC AL
069E 75F4                            JNZ ST_TRNS3
06A0 E96800                          JMP TX_CCC_N_RET
                   ;
                   ; ************  CCC ---> Data Processor ---> Drop Processor  *****
                   ;
06A3 83C602        CCC_DROP_CMD:     ADD SI,2
06A6 E80000                          CALL LOAD_TO_DROP
06A9 E95F00                          JMP TX_CCC_N_RET
                   ;
                   ; ************  Forced Tuning  --- Nth Converter  ***************
```

HEWLETT-PACKARD: 8086 Assembler

SOURCE LINE

```
                 ;
06AC 8A4404      FORCED_TUNE:     MOV AL,[SI+4]                     ; SI --- ECU H Address
06AF A22807                       MOV [IC_BYTE],AL                  ; +1          L Address
06B2 E80000                       CALL IC_DROP_DEVICE               ; +2     Tx Data Lendth
06B5 E80000                       CALL CONV_TO_DROP                 ; +3     Command E0H
06B8 8A5C05                       MOV BL,[SI+5]                     ; +4     Converter NO.
06BB 80FB64                       CMP BL,100                        ; +5     Tuning Channel
06BE 7312                         JNC FORCED_OFF
                 ;
06C0 E80000      FORCED_ON:       CALL BINDEC_LED
06C3 E80000                       CALL LED_VIEW_TBL
06C6 E80000                       CALL SPU_LED_DISP
06C9 E80000                       CALL RUN_CONVERTER
06CC E80000                       CALL WAKEARI_DE_ON
06CF E93900                       JMP TX_CCC_N_RET
                 ;
06D2 E80000      FORCED_OFF:      CALL OP_SPU_OFF
06D5 E93300                       JMP TX_CCC_N_RET
                 ;
                 ; ************   SPU to CCC   Send  *********************************
                 ;
06D8 BE0214      SPECIAL_SPU_1:   MOV SI,TX_LENGTH
06DB BB0207                       MOV BX,INDEX_RX_1
06DE C60441                       MOV BYTE PTR [SI],65
06E1 C6440100                     MOV BYTE PTR [SI+1],0
06E5 83C602                       ADD SI,2
06E8 B040                         MOV AL,64
06EA E952FF                       JMP TX_TRNS2
                 ;
                 ; ############   Send to CCC   ####################################
                 ;
06ED A01807      TX_CCC_RUN:      MOV AL,[TX_BUSY_FLAG]
06F0 3C00                         CMP AL,0
06F2 7517                         JNZ TX_CCC_N_RET
                 ;
06F4 8A4C02      TX_RUN_SUB:      MOV CL,[SI+2]
06F7 FEC1                         INC CL
06F9 FEC1                         INC CL
06FB 80F903                       CMP CL,3
06FE 7302                         JNC TX_YOSHI
0700 B103                         MOV CL,3
0702 880E1807    TX_YOSHI:        MOV [TX_BUSY_FLAG],CL     ; [[[  SI --- Start Address   ]]]
0706 E841FB                       CALL HDLC_TX_START        ; [[[  CL --- Data Length     ]]]
0709 F9                           STC
070A C3                           RET
                 ;
                 ;
                 ;
070B F8          TX_CCC_N_RET:    CLC
070C C3                           RET
                 ;
                 ;
                 ;
```

SOURCE LINE

```
                ;
                ;------------------------------------------------------------------------
                ;*************                          ****************************************
                ;*************   Subroutine             ****************************************
                ;*************                          ****************************************
                ;------------------------------------------------------------------------
                ;
                ; ************  ECU Address Read Routine  ***********************
                ;
070D BA0001     ECU_ADRS_READ:  MOV   DX,ECU_L_ADDRESS
0710 EC                         IN AL,DX
0711 8AE0                       MOV AH,AL
0713 BA0201                     MOV   DX,ECU_H_ADDRESS
0716 EC                         IN AL,DX                         ; AH = L , AL = H Addres.
0717 A30014                     MOV [ECU_ADDRESS],AX
071A C3                         RET
                ;
                ; ************  Timer Table Initialize  *************************
                ;
071B BE0003     INIT_TIM_TBL:   MOV SI,TIME_TABLE
071E BB0000                     MOV BX,0
0721 C600FF     INIT_TIM_LP:    MOV BYTE PTR [SI][BX],0FFH
0724 43                         INC BX
0725 81FB8000                   CMP BX,128
0729 75F6                       JNZ INIT_TIM_LP
072B C3                         RET
                ;
                ; ************  Event Timer Table Initialize  ***********************
                ;
072C BE0006     INIT_EV_TIMER:  MOV SI,ES_EVENT_TIMER
072F BB0000                     MOV BX,0
0732 26C60000   INIT_EV_1:      MOV BYTE PTR ES:[SI][BX],0
0736 43                         INC BX
0737 81FB0003                   CMP BX,128*6
073B 75F5                       JNZ INIT_EV_1
073D C3                         RET
                ;
                ; ************  JUMP_ADDRESS Table Initialize  ******************
                ;
073E E80300     INIT_JUMP_TBL:  CALL INIT_WA_DOKO
0741 E90000                     JMP OP_INITIAL
0744 58         INIT_WA_DOKO:   POP AX
0745 A31C07                     MOV [INIT_POINT],AX
0748 BE8003                     MOV SI, JUMP_ADDRESS
074B BB0000                     MOV BX,0
074E 8900       INIT_JUMP_LP:   MOV [SI][BX],AX
0750 83C302                     ADD BX,2
0753 81FB8000                   CMP BX,128
0757 75F5                       JNZ INIT_JUMP_LP
0759 E80300                     CALL BASE_WA_DOKO
075C E90000                     JMP BASE_ROUTINE
075F 58         BASE_WA_DOKO:   POP AX
```

HEWLETT-PACKARD: 8086 Assembler

SOURCE LINE

```
0760 A31A07                                MOV [BASE_POINT],AX
0763 C3                                    RET
                     ;
                     ; ************  BASIC_AUTHO  Table Initialize  ******************
                     ;
0764 BE0001          INIT_AUTHO_TBL:  MOV SI,PC_FC_LIST
0767 BB0000                           MOV BX,0
076A C60000          JUNKO:           MOV BYTE PTR [SI][BX],0
076D 43                               INC BX
076E 81FB0001                         CMP BX,256
0772 75F6                             JNZ JUNKO
                     ;
0774 BE8001                           MOV SI,BASIC_AUTHO
0777 BB0100                           MOV BX,1
077A C6003F          JUN:             MOV BYTE PTR [SI][BX],3FH
077D 43                               INC BX
077E 83FB5A                           CMP BX,90
0781 75F7                             JNZ JUN
0783 C3                               RET
                     ;
                     ; ************  View Channel Table Initialize  ******************
                     ;
0784 BE1000          INIT_VIEW_TBL:   MOV SI,VIEW_CHANNEL
0787 BB0000                           MOV BX,0                   ; S4,S3,S2,S1  S0,C2,C1,C0
078A 8AE3            INIT_VIEW_LP:    MOV AH,BL
078C FEC4                             INC AH
078E 80CC30                           OR AH,30H
0791 C60030                           MOV BYTE PTR [SI][BX],30H
0794 886008                           MOV BYTE PTR [SI][BX+8],AH
0797 43                               INC BX
0798 83FB08                           CMP BX,8
079B 75ED                             JNZ INIT_VIEW_LP
079D C3                               RET
                     ;
                     ; ************  EVENT Table  MODE  Initialize  ******************
                     ;
079E BB0006          EVENT_DATA_CL:   MOV BX,ES_EVENT_TIMER
07A1 26C707FF0F      CHIHARU:         MOV WORD PTR ES:[BX],0FFFH
07A6 83C302                           ADD BX,2
07A9 81FB0009                         CMP BX,ES_EVENT_TIMER+128*6
07AD 72F2                             JC CHIHARU
                     ;
07AF BE0009                           MOV SI,EVENT_NO_FREQ
07B2 B120                             MOV CL,32
07B4 C744400100      LP1:             MOV WORD PTR [SI+32*2],1
07B9 83C602                           ADD SI,2
07BC FEC1                             INC CL
07BE 80F93F                           CMP CL,63
07C1 75F1                             JNZ LP1
                     ;
07C3 BE0009                           MOV SI,EVENT_NO_FREQ
07C6 BB0002                           MOV BX,CH_NO_FREQ
07C9 B140                             MOV CL,64
07CB 8B07            LP2:             MOV AX,[BX]
07CD 89848000                         MOV [SI+64*2],AX
07D1 83C602                           ADD SI,2
07D4 83C302                           ADD BX,2
```

SOURCE LINE

```
07D7 FEC1                               INC CL
07D9 80F980                             CMP CL,128
07DC 75ED                               JNZ LP2
                      ;
07DE C3                                 RET
                      ;
                      ; ************  PC_CODE & PR_CODE  Initialize  *******************
                      ;
07DF BE2000           INIT_CODE:        MOV SI,PC_CODE
07E2 BB0000                             MOV BX,0
07E5 C7000000         INIT_CODE_LP:     MOV WORD PTR [SI][BX],0
07E9 83C302                             ADD BX,2
07EC 83FB10                             CMP BX,16
07EF 75F4                               JNZ INIT_CODE_LP
07F1 C3                                 RET
                      ;
                      ; ************  Converter Frequency Calculation  *************
                      ;
07F2 C7063A0703       FREQ_CALC:        MOV             WORD PTR DS:[MUL_ADR],MUL_NO
07F8 B90000                             MOV             CX,0      ;A-CABLE
07FB B84000                             MOV             AX,64
07FE 48               CAL_STDA:         DEC             AX
07FF E81500                             CALL            FREQ_CAL
0802 3D0000                             CMP             AX,0
0805 75F7                               JNZ             CAL_STDA
0807 B9FF00                             MOV             CX,0FFH   ;B-CABLE
080A B84000                             MOV             AX,64
080D 48               CAL_STDB:         DEC             AX
080E E80600                             CALL            FREQ_CAL
0811 3D0000                             CMP             AX,0
0814 75F7                               JNZ             CAL_STDB
0816 C3                                 RET
                      ; ================STD FREQ. CALICULATION SUBROUTINE========
0817 80E120           FREQ_CAL:         AND             CL,00100000B
081A 50                                 PUSH            AX
081B 8BD0                               MOV             DX,AX
081D 754E                               JNZ             UP64          ;B-CABLE ====>UP64
081F 3D0000           UP64_D:           CMP             AX,0
0822 743A                               JE              ZERO
0824 3D3F00                             CMP             AX,63
0827 7435                               JE              ZERO
0829 3D0600                             CMP             AX,6
082C 7335                               JNC             CH6_62        :CHANNELL ARE FROM 6 TO 62
082E 3D0400                             CMP             AX,4
0831 7335                               JNC             CH4_5         :CHANNELL ARE FROM 4 TO 5
0833 BB4B01                             MOV             BX,331
0836 F6263A07         MULTI:            MUL             BYTE PTR DS:[MUL_ADR]         :CH_NO*3
083A 03C3                               ADD             AX,BX                         :CH_NO*3+OFFSE
083C 80F900           ADDER:            CMP             CL,0
083F 7400                               JZ              ADDER_1
                      ;;;;              ADD             DX,64          ;64 OR 63 ??????
0841 80E403           ADDER_1:          AND             AH,00000011B
0844 F8                                 CLC
0845 D0C4                               ROL             AH
0847 D0C4                               ROL             AH
0849 D0C4                               ROL             AH
084B D0C4                               ROL             AH
```

```
FILE: DST_MAIN:DST          HEWLETT-PACKARD: 8086 Assembler

LOCATION OBJECT CODE LINE     SOURCE LINE

   084D D0C4                               ROL          AH
   084F D0C4                               ROL          AH
   0851 0AE1                               OR           AH,CL
   0853 BB0002                             MOV          BX,CH_NO_FREQ
   0856 8BF2                               MOV          SI,DX
   0858 03F2                               ADD          SI,DX
   085A 8900                               MOV          [BX][SI],AX      :STORE 8N & 8S
   085C 58                                 POP          AX
   085D C3                                 RET
                    ;---------------------------------------------
   085E B80000      ZERO:                  MOV          AX,0
   0861 EBD9                               JMP          ADDER
                    ;---------------------------------------------
   0863 BB5701      CH6_62:               MOV          BX,343
   0866 EBCE                               JMP          MULTI
                    ;---------------------------------------------
   0868 BB4D01      CH4_5:                 MOV          BX,333
   086B EBC9                               JMP          MULTI
                    ;---------------------------------------------
   086D 83C240      UP64:                  ADD          DX,64            :64/63 Which???
   0870 EBAD                               JMP          UP64_D
                    ;
                    ; ************  Japan Channel Hosei  *****************************
                    ;
   0872 BE0002      CHANNEL_HOSEI:         MOV SI,CH_NO_FREQ
   0875 B95140                             MOV CX,4051H         ; Japan  1
   0878 898C8E00                           MOV [SI+71*2],CX
                    ;
   087C B96640                             MOV CX,4066H         ; Japan  3
   087F 898C9200                           MOV [SI+73*2],CX
                    ;
   0883 B98840                             MOV CX,4088H         ; Japan  4
   0886 898C9400                           MOV [SI+74*2],CX
                    ;
   088A B98E40                             MOV CX,408EH         ; Japan  6
   088D 898C9800                           MOV [SI+76*2],CX
                    ;
   0891 B99340                             MOV CX,4093H         ; Japan  8
   0894 898C9C00                           MOV [SI+78*2],CX
                    ;
   0898 B99940                             MOV CX,4099H         ; Japan 10
   089B 898CA000                           MOV [SI+80*2],CX
                    ;
   089F B99F40                             MOV CX,409FH         ; Japan 12
   08A2 898CA400                           MOV [SI+82*2],CX
   08A6 C3                                 RET
                    ;
                    ; ************  Drop Processor Response no shikibetu  ************
                    ;
   08A7 BE2008      DROP_RESPONSE:         MOV SI,FROM_OBF_BF
   08AA E80000                             CALL LOAD_FROM_DROP            ; Drop Processor kara no OBF Data wo FROM_OBF_BF ni utusu
   08AD 7215                               JC DROP_RESP_NOP
   08AF BE2008                             MOV SI,FROM_OBF_BF
   08B2 8A4401                             MOV AL,[SI+1]                  :   ( AL ) = Command
   08B5 3C01                               CMP AL,1
   08B7 740D                               JZ DROP_RESP_01
   08B9 3C04                               CMP AL,4
```

SOURCE LINE

```
08BB 740B                          JZ DROP_RESP_04
08BD 3C84                          CMP AL,84H
08BF 7503                          JNZ DROP_RESP_NOP
08C1 E99F00                        JMP DROP_RESP_84
                  ;
08C4 F8           DROP_RESP_NOP:   CLC                     ; Key Data None ---> CY=0
08C5 C3                            RET
                  ;
                  ; ====================================[SI]==[+1]====[+2]==========
08C6 EBFC         DROP_RESP_01:    JMP DROP_RESP_NOP     ;        [01][POW.DETECT]
                  ; ==================================[SI]==[+1]==[+2]===[+3][+4]==[+5]==
08C8 8A4402       DROP_RESP_04:    MOV AL,[SI+2]
08CB A22C07                        MOV [ID_BYTE],AL
08CE E80000                        CALL ID_DROP_DEVICE
                  ;
08D1 BE2008                        MOV SI,FROM_OBF_BF
08D4 8A4C03                        MOV CL,[SI+3]         ;        [04][ID_BYTE][02][00][STATUS]
08D7 80F900                        CMP CL,0              ;                           00   **
08DA 7466                          JZ RESP_VLF_ERR
08DC BF8000                        MOV DI,VLF_ERROR_MAP
08DF B700                          MOV BH,0
08E1 8A1E2C07                      MOV BL,[ID_BYTE]
08E5 03DB                          ADD BX,BX
08E7 8121FEFF                      AND WORD PTR [DI][BX],0FFFEH
                  ;
08EB 8A6C04                        MOV CH,[SI+4]         ;                      02   00   **
08EE 80FD00                        CMP CH,0
08F1 7402                          JZ RESP_STATUS
08F3 EBCF                          JMP DROP_RESP_NOP
                  ;
08F5 8A5405       RESP_STATUS:     MOV DL,[SI+5]         ;      [ Status ]
08F8 80E204                        AND DL,4              ;   S * * *   * P * *
08FB 7431                          JZ KEY_DEPRESS        ;   ^           ^ ^
08FD 8A5405       RECENT_ON:       MOV DL,[SI+5]         ;   ^           ^ I
0900 E80000                        CALL CONV_SW_BIT_AL ;     ^   SPU Recent Power ON
0903 80E280                        AND DL,80H            ;   ^             I
0906 7411                          JZ CONV_SW_0          ;   Converter Select SW
0908 8A262607     CONV_SW_1:       MOV AH,[DROP_NO]
090C 80E401                        AND AH,1
090F 7518                          JNZ CONV_SW_SET
0911 0804                          OR [SI],AL
0913 E80000                        CALL JUMP_ADRS_INIZ
0916 E91000                        JMP CONV_SW_SET
0919 8A24         CONV_SW_0:       MOV AH,[SI]
091B 343F                          XOR AL,3FH
091D 2004                          AND [SI],AL
091F E80000                        CALL DROP_BIT_AL      ; 10/19 Henkou !!!
0922 22C4                          AND AL,AH
0924 7403                          JZ CONV_SW_SET
0926 E80000                        CALL JUMP_ADRS_INIZ
0929 E80000       CONV_SW_SET:     CALL JUMP_ADRS_INIT
092C F8                            CLC
092D C3                            RET
                  ;
092E 8A5405       KEY_DEPRESS:     MOV DL,[SI+5]         ;               I
0931 80E202                        AND DL,2              ;     Key Currently Depressed
0934 740A                          JZ ELSE_STATUS
```

SOURCE LINE

```
0936 B01C                        MOV AL,KEY_PUSH_CODE
0938 A28907                      MOV [KEY_DATA],AL
093B E80000                      CALL DROP_TO_CONV
093E F9                          STC
093F C3                          RET
0940 F8         ELSE_STATUS:     CLC
0941 C3                          RET
                ;
0942 E80000     RESP_VLF_ERR:    CALL DROP_TO_CONV
0945 BE8000                      MOV SI,VLF_ERROR_MAP            ;
0948 B700                        MOV BH,0                        ;
094A 8A1E2C07                    MOV BL,[ID_BYTE]                ;
094E 03DB                        ADD BX,BX                       ;
0950 8B00                        MOV AX,[SI][BX]                 ;
0952 050200                      ADD AX,2                        ;
0955 350100                      XOR AX,1                        ;
0958 8900                        MOV [SI][BX],AX                 ;
095A D0C8                        ROR AL                          ;
095C 7303                        JNC VLF_ERR_RET                 ;
095E E80000                      CALL JUMP_ADRS_INIT
0961 F8         VLF_ERR_RET:     CLC
0962 C3                          RET
                ; =============================================================
0963 8A4C03     DROP_RESP_84:    MOV CL,[SI+3]         ;       [84][ID/DROP]   [01][KEY]
0966 80F900                      CMP CL,0
0969 742D                        JZ RESP_84_NRET
                ;
096B 8A6402                      MOV AH,[SI+2]         ; < AH > = ID_BYTE
096E 88262C07                    MOV [ID_BYTE],AH
                ;
0972 E80000                      CALL ID_DROP_DEVICE ; ---> CONV_NO , DROP_NO , DEVICE_NO
0975 E80000                      CALL DROP_TO_CONV
                ;
0978 8A6C04                      MOV CH,[SI+4]
097B 882E8907                    MOV [KEY_DATA],CH
                ;
097F BE8000                      MOV SI,VLF_ERROR_MAP
0982 B700                        MOV BH,0
0984 8A1E2C07                    MOV BL,[ID_BYTE]
0988 03DB                        ADD BX,BX
098A 8120FEFF                    AND WORD PTR [SI][BX],0FFFEH
                ;
098E 80FDFF                      CMP CH,0FFH
0991 7402                        JZ SENS_STATUS
0993 F9                          STC                   ; Push Key Board ---> CY=1
0994 C3                          RET
                ;
0995 E80000     SENS_STATUS:     CALL SPU_STATUS_REQ ; 0FFH ---> No Key Stroke
0998 F8         RESP_84_NRET:    CLC
0999 C3                          RET
                ;
                ;
                ;
                                 GLOBAL          SPECIAL_SPU_1
                ;
                ;
                ;
```

HEWLETT-PACKARD: 8086 Assembler

SOURCE LINE

```
2053            EXTRN       POWER_DET_CMD
2054            EXTRN       LOAD_FROM_DROP
2055            EXTRN       LOAD_TO_DROP
2056            EXTRN       SPU_STATUS_REQ
2057            EXTRN       ID_DROP_DEVICE
2058            EXTRN       IC_DROP_DEVICE
2059            EXTRN       CONV_SW_BIT_AL
2060            EXTRN       DROP_BIT_AL
2061            EXTRN       SPU_RELAY_OFF
2062            EXTRN       SPU_CLEAR_DISP
2063            EXTRN       EVENT_LED_OFF
2064            EXTRN       DROP_MAP_SET
2065            EXTRN       KEY_OPERATION
2066            EXTRN       CONV_TO_DROP
2067            EXTRN       DROP_TO_CONV
2068            EXTRN       BINDEC_LED
2069            EXTRN       LED_VIEW_TBL
2070            EXTRN       SPU_LED_DISP
2071            EXTRN       RUN_CONVERTER
2072            EXTRN       WAKEARI_DE_ON
2073            EXTRN       OP_SPU_OFF
2074            EXTRN       OP_INITIAL
2075            EXTRN       BASE_ROUTINE
2076            EXTRN       JUMP_ADRS_INIT
2077            EXTRN       JUMP_ADRS_INIZ
2078            EXTRN       DEVICE_MAP_SET
2079 ;
2080            EXTRN       PAY_GROUP_1
2081            EXTRN       PAY_GROUP_2
```

Errors=    0

CROSS PEFERENCE TABLE

| | SYMBOL | TYPE | REFERENCES |
|---|---|---|---|
| 84 | CTRL_1 | A | 443.777.801.836 |
| 85 | CTRL_1_COUNT | A | 444.778.798.833 |
| 88 | CTRL_2 | A | 445.778.752 |
| 89 | CTRL_2_COUNT | A | 454.683.686.757 |
| | DEVICE_MAP_SET | E | 1225,1227,1229.1231.1233,1235,2078 |
| 102 | DEVICE_NO | A | |
| 106 | DEVICE_NO_BIT | A | |
| 1204 | DEV_CLR | A | 1198,1200 |
| 1163 | DEV_INIT_LP | A | 1211 |
| 1208 | DEV_NEXT | A | 1185 |
| 1167 | DEV_RESP_WT | A | 1169.1177.1181.1189 |
| 1201 | DEV_SW_0 | A | 1175 |
| 1196 | DEV_SW_1 | A | |
| 1592 | DISPLAY_MEMORY | A | 1546 |
| 1609 | DISP_MEM_5517 | A | 1599 |
| 136 | DOWN_FLAG | A | |
| 1264 | DROP_ACCESS | A | |
| | DROP_BIT_AL | E | 1985.2060 |
| 143 | DROP_CMD_BF | A | |
| 230 | DROP_CMD_POPT | A | 793 |
| 231 | DROP_DATA_POPT | A | 681.829 |
| 1160 | DROP_INIT_LP | A | 1218 |
| | DROP_MAP_SET | E | 1223,2064 |
| 100 | DPOP_NO | A | 1196,1976 |
| 105 | DPOP_NO_BIT | A | |
| 1931 | DROP_RESPONSE | A | 1264 |
| 1948 | DROP_PESP_01 | A | 1937 |
| 1950 | DROP_PESP_04 | A | 1939 |
| 2019 | DROP_RESP_84 | A | 1942 |
| 1944 | DROP_RESP_NOP | A | 1933.1941,1948,1967 |
| | DROP_TO_CONV | E | 1998.2004.2027.2067 |
| 1213 | DRP_NEXT | A | 1161 |
| 120 | DS1 | A | 121.122.123.125.126.127.128.130.131.132.133.134.135.136.137.138 |
| 142 | DS16 | A | 143.144.145.147 |
| 81 | DS2 | A | 82,83.84,85.86.87.88.89.90.91.92.93.94.95.96.97.99.100.101.102.103.104.105.106,108.109.110,113 |
| 97 | ECHO_BACK_ADRS | A | |
| 1584 | ECHO_BACK_CMD | A | 1542 |
| 91 | ECHO_BACK_FLAG | A | 447,922,1016.1110.1446.1451 |
| 1586 | ECHO_BACK_SUPU | A | |
| 161 | ECU_ADDPESS | A | 162.163.164,999.1006,1576.1586.1606.1616.1730 |
| 1278 | ECU_ADRS_NEW | A | 1265 |
| 1725 | ECU_ADRS_READ | A | 461,1278 |
| 232 | ECU_H_ADDRESS | A | 1728 |
| 233 | ECU_L_ADDRESS | A | 1725 |
| 2001 | ELSE_STATUS | A | 1995 |
| 1060 | EOI | A | |
| 182 | ES_BACK_UP | A | 1356 |
| 183 | ES_BACK_UP_1 | A | 430.498.1357.1357.1359.1366.1367,1368.1371 |
| 184 | ES_BACK_UP_2 | A | 477.499.1351.1360,1374 |
| 186 | ES_EVENT_TIMEP | A | 1319.1745.1804.1807 |
| 62 | EVENT_CHANNEL | A | 1316.1341 |
| 1804 | EVENT_DATA_CL | A | 472 |
| 123 | EVENT_ENABLE | A | |
| 194 | EVENT_KEY_CODE | A | |
| | EVENT_LED_OFF | E | 1206.2063 |
| 153 | EVENT_NO_FREQ | A | 1810.1818 |
| 914 | EXIT | A | 883.895.899 |

CROSS REFERENCE TABLE

| | SYMBOL | TYPE | REFERENCES |
|---|---|---|---|
| 72 | A200H | A | 73,74,75,76 |
| 239 | ACHC | A | 343,346,354,362,370,373,377,381,539,569,571,574,582,604,610,614,642,355,859,860,901,915,969,1023,1029<br>1031,1047,1048,1052,1054,1056,1082,1085,1091,1095,1097,1100 |
| 238 | ACHD | A | 325,333,639,952 |
| 1873 | ADDER | A | 1893 |
| 1876 | ADDER_1 | A | 1874 |
| 1806 | ALOHA_CHECK | A | |
| 214 | ASCII_AD | A | |
| 208 | ASCII_AU | A | |
| 212 | ASCII_CL | A | |
| 218 | ASCII_CO | A | |
| 215 | ASCII_DE | A | |
| 207 | ASCII_ER | A | |
| 210 | ASCII_FC | A | |
| 217 | ASCII_NO | A | |
| 216 | ASCII_NU | A | |
| 211 | ASCII_PC | A | |
| 219 | ASCII_PP | A | |
| 209 | ASCII_SC | A | |
| 213 | ASCII_SE | A | |
| 195 | AUTHO_KEY_CODE | A | |
| 486 | BACK_UP_CK1 | A | 490 |
| 504 | BACK_UP_CK2 | A | 509 |
| 514 | BACK_UP_EXIT | A | 482,493,510 |
| 483 | BACK_UP_KAI | A | 479 |
| 512 | BACK_UP_NONE | A | 195 |
| 497 | BACK_UP_YES | A | |
| 94 | BASE_POINT | A | 1768 |
| | BASE_ROUTINE | E | 1766,2075 |
| 1767 | BASE_WA_DOKO | A | 1765 |
| 66 | BASIC_AUTHO | A | 1730 |
| 241 | BCHC. | A | 350,358,366,584,588 |
| 240 | BCHD | A | |
| 122 | BEFOR_EVENT | A | 1379 |
| 52 | BIAS | A | 55 56,57,58,59,60,61,62,64,65,66,276 |
| 96 | BINARY_LED | A | |
| | BINDEC_LED | E | 1345,1663,2068 |
| 1846 | CAL_STDA | A | 1849 |
| 1852 | CAL_STDB | A | 1855 |
| 1459 | CCC_CMD_20_7F | A | 1456 |
| 1486 | CCC_CMD_JMPTBL | A | |
| 1649 | CCC_DROP_CMD | A | 1457 |
| 1898 | CH4_5 | A | 1869 |
| 1895 | CH6_62 | A | 1867 |
| 1906 | CHANNEL_HOSEI | A | 471 |
| 1805 | CHIHARU | A | 1808 |
| 73 | CH_NO_FREQ | A | 1819,1885,1906 |
| 199 | CLEAR_KEY_CODE | A | |
| 1464 | COLD_START | A | 1461 |
| 99 | CONV_NO | A | 431,1226,1228,1230,1232,1234,1342 |
| 104 | CONV_NO_BIT | A | 1337 |
| 117 | CONV_SELECT | A | 434,435,436,437 |
| 1982 | CONV_SW_0 | A | 1975 |
| 1976 | CONV_SW_1 | A | |
| | CONV_SW_BIT_AL | E | 1192,1973,2059 |
| 1989 | CONV_SW_SET | A | 1979,1981,1987 |
| | CONV_TO_DROP | E | 1334,1389,1471,1658,2066 |

CROSS REFERENCE TABLE

| | SYMBOL | TYPE | REFERENCES |
|---|---|---|---|
| 109 | EXTRN_STAT | A | 530,862,876 |
| 1466 | FORCED_KEY | A | 1459 |
| 1670 | FORCED_OFF | A | 1661 |
| 1663 | FORCED_ON | A | |
| 1655 | FORCED_TUNE | A | 1544 |
| 1482 | FORWARD_CMDTBL | A | 1454 |
| 1446 | FORWARD_CMD_CK | A | 1256 |
| 1451 | FORWARD_COME | A | 1448 |
| 1476 | FORWARD_JUMP | A | 1484 |
| 1858 | FREQ_CAL | A | 1847,1853 |
| 1843 | FREQ_CALC | A | 470 |
| 145 | FROM_OBF_BF | A | 1141,1144,1150,1153,1167,1170,1931,1934,1954 |
| 1141 | HAJIME1 | A | 1143,1147 |
| 1139 | HAJIMERUYO | A | 551 |
| 568 | HDLC_TX_START | A | 1696 |
| 170 | HISTORY_BUFFER | A | 459,735,824 |
| 952 | HON | A | |
| 1150 | HONBAN1 | A | 1152,1156 |
| 127 | HSB_LED | A | |
| 782 | IBF_1ST | A | |
| 828 | IBF_2ND | A | 780 |
| 785 | IBF_EMPTY | A | |
| 790 | IBF_EXIST | A | 783 |
| 774 | IBF_INTERRUPT | A | |
| 825 | IBF_MEMO | A | 823 |
| 58 | IBF_OVER_FLOW | A | |
| 803 | IBF_PACKET | A | 799 |
| 840 | IBF_RET | A | 788,826,834 |
| 830 | IBF_SET | A | |
| 101 | IC_BYTE | A | 1333,1377,1467,1656 |
| | IC_DROP_DEVICE | E | 1388,1470,1657,2058 |
| 103 | ID_BYTE | A | 1164,1180,1951,1960,2007,2024,2034 |
| | ID_DROP_DEVICE | E | 1165,1335,1952,2026,2057 |
| 169 | INDEX_HISTORY | A | 460,724,736,803,825 |
| 82 | INDEX_RX_1 | A | 427,1676 |
| 86 | INDEX_RX_2 | A | 441,742,753 |
| 83 | INDEX_TX_1 | A | 428,776,796,831 |
| 87 | INDEX_TX_2 | A | 440 |
| 1773 | INIT_AUTHO_TBL | A | 463 |
| 1833 | INIT_CODE | A | 465 |
| 1835 | INIT_CODE_LP | A | 1838 |
| 1747 | INIT_EV_1 | A | 1750 |
| 1745 | INIT_EV_TIMER | A | 473 |
| 1761 | INIT_JUMP_LP | A | 1764 |
| 1755 | INIT_JUMP_TBL | A | 515 |
| 95 | INIT_POINT | A | 1758 |
| 1737 | INIT_TIM_LP | A | 1740 |
| 1735 | INIT_TIM_TBL | A | 514 |
| 1792 | INIT_VIEW_LP | A | 1799 |
| 1790 | INIT_VIEW_TBL | A | 464 |
| 1757 | INIT_WA_DOKO | A | 1755 |
| 235 | INT1OFST | A | 288 |
| 236 | INT3OFST | A | 292 |
| 234 | INT_OFST | A | 296 |
| 75 | JUMP_ADDRESS | A | 1759 |
| | JUMP_ADRS_INIT | E | 1989,2015,2076 |
| | JUMP_ADRS_INIZ | E | 1980,1988,2077 |

CROSS REFERENCE TABLE

| LINE# | SYMBOL | TYPE | REFERENCES |
|---|---|---|---|
| 1782 | JUN | A | 1785 |
| 1775 | JUNKO | A | 1778 |
| 1271 | KEY_APPLICAT | A | 1258 |
| 130 | KEY_DATA | A | 1387,1469,1997,2030 |
| 160 | KEY_DATA_STACK | A | 161 |
| 1993 | KEY_DEPRESS | A | 1971 |
| | KEY_OPERATION | E | 1271,1472,2065 |
| 205 | KEY_PUSH_CODE | A | 1996 |
| | LED_VIEW_TBL | E | 1664,2069 |
| | LOAD_FROM_DROP | E | 1142,1151,1168,1932,2054 |
| | LOAD_TO_DROP | E | 1650,2055 |
| 873 | LOY | A | 868 |
| 876 | LOZ | A | 871,875 |
| 1812 | LP1 | A | 1816 |
| 1821 | LP2 | A | 1827 |
| 125 | LSB_LED | A | |
| 1256 | MAIN_LOOP | A | 1272,1279 |
| 424 | MAIN_START | A | |
| 197 | MINUS_KEY_CODE | A | |
| 1371 | MOV_1_INIT | A | 1364 |
| 1363 | MOV_1_ST | A | 1354 |
| 1356 | MOV_2_ND | A | |
| 126 | MSB_LED | A | |
| 1871 | MULTI | A | 1896,1899 |
| 108 | MUL_ADR | A | 1843,1871 |
| 191 | MUL_NO | A | 1843 |
| 1016 | MY_ADRS | A | 1000,1002 |
| 1014 | MY_ALOHA | A | |
| 76 | NEXT_GO_ADRS | A | |
| 121 | NOW_EVENT | A | 1311,1331 |
| 1580 | NO_SEND | A | 1568 |
| 116 | OBF_BF_BYTE | A | |
| 114 | OBF_BF_CMD | A | 453,756 |
| 115 | OBF_BF_ID | A | |
| 113 | OBF_BF_N | A | 114,115,116,117,446,688,689,690,755 |
| 679 | OBF_INTERRUPT | A | |
| 736 | OBF_MEMO | A | 734 |
| 755 | OBF_NEW | A | 740 |
| 722 | OBF_PACKET | A | |
| 759 | OBF_RET | A | 700,712,720 |
| 700 | OBF_RET_1 | A | 703 |
| 131 | ONE_SEC_TIMER | A | 457 |
| 196 | ONOFF_KEY_CODE | A | |
| | OP_INITIAL | E | 1756,2074 |
| | OP_SPU_OFF | E | 1670,2073 |
| 175 | PAGE_MEM | A | 450,733,822 |
| 90 | PAGE_SW | A | 451,950,996,1020 |
| | PAY_GROUP_1 | E | 1490,2080 |
| | PAY_GROUP_2 | E | 1492,2081 |
| 61 | PC_CODE | A | 1833 |
| 137 | PC_FC_EXIST | A | |
| 65 | PC_FC_LIST | A | 1773 |
| 193 | PLUS_KEY_CODE | A | |
| 1223 | POLLING_SEQ | A | 1216 |
| 222 | POP_ALL | A | |
| | POWER_DET_CMD | E | 1140,1149,2053 |
| 138 | POWER_FEED | A | 432 |

CROSS REFERENCE TABLE

| | SYMBOL | TYPE | REFERENCES |
|---|---|---|---|
| 202 | POWER_OFF_CODE | A | |
| 201 | POWER_ON_CODE | A | |
| 128 | PPV_LED | A | |
| 55 | PROGRAMVERSION | A | 503,517 |
| 221 | PUSH_ALL | A | |
| 276 | RAM_CLEAR | A | |
| 278 | RAM_CLEAR_LP | A | 281 |
| 1972 | RECENT_ON | A | |
| 203 | RECENT_ON_CODE | A | |
| 204 | RELEASE_CODE | A | |
| 702 | RESPONSE_2 | A | 694 |
| 719 | RESPONSE_CHK | A | 697,699,709,716 |
| 745 | RESPONSE_TRNS | A | 750 |
| 711 | RESPONSE_VAL | A | 707 |
| 2044 | RESP_84_NRET | A | 2021 |
| 1969 | RESP_STATUS | A | 1966 |
| 2004 | RESP_VLF_ERR | A | 1957 |
| 1415 | RETTIM2 | A | 1407 |
| 92 | REVERS_CHANEL | A | 448,575,1572,1585 |
| 252 | RUN | A | 1464 |
| | RUN_CONVERTER | E | 1346,1666,2071 |
| 1038 | RX_CRC_ERR | A | 993 |
| 56 | RX_CRC_ERROR | A | 1038,1039 |
| 57 | RX_CRC_OK_YO | A | 994,995 |
| 990 | RX_INTERRUPT | A | |
| 992 | RX_RCV | A | |
| 1042 | RX_RECEIVE | A | 992 |
| 1022 | RX_RET | A | 1004,1009,1040 |
| 198 | SCAN_KEY_CODE | A | |
| 59 | SCAN_MODE_FLAG | A | 467 |
| 5 | SEISAKU_DD | A | 520 |
| 6 | SEISAKU_MM | A | 519 |
| 8 | SEISAKU_VV | A | 521 |
| 7 | SEISAKU_YY | A | 518 |
| 148 | SEND_ADDRESS | A | 149,150,151,1575 |
| 150 | SEND_CMD_RESP | A | 1570 |
| 151 | SEND_DATA_BUFF | A | |
| 147 | SEND_ENABLE | A | 148,1559 |
| 1552 | SEND_FUNC_MOD | A | 1486 |
| 149 | SEND_INDEX | A | 1563,1566,1573,1574 |
| 200 | SEND_KEY_CODE | A | |
| 224 | SEND_MAX | A | |
| 1566 | SEND_RESPONSE | A | 1488 |
| 2043 | SENS_STATUS | A | 2039 |
| 561 | SETCOM | A | 347,351,355,359.363,367.374.378.382.540 |
| 1675 | SPECIAL_SPU_1 | A | 2049 |
| | SPU_CLEAR_DISP | E | 1205.2062 |
| 144 | SPU_CMD_BF | A | |
| | SPU_LED_DISP | E | 1665,2070 |
| | SPU_RELAY_OFF | E | 1204,2061 |
| | SPU_STATUS_REQ | E | 1166,2043,2056 |
| 177 | STACK_END | A | |
| 178 | STACK_TOP | A | |
| 1619 | STORE_MEMORY | A | 1548 |
| 1635 | STOR_MEM_5517 | A | 1626 |
| 1627 | ST_TRNS2 | A | 1632 |
| 1639 | ST_TRNS3 | A | 1637,1644 |

CROSS REFERENCE TABLE

| | SYMBOL | TYPE | REFERENCES |
|---|---|---|---|
| 1562 | S_F_M_CLR | A | 1555 |
| 1558 | S_F_M_SET | A | 1553 |
| 110 | TEMP_R_CH | A | 429,576,605,1086 |
| 237 | TIMER1_OFST | A | 304 |
| 1391 | TIMER_ACTIVE | A | |
| 1403 | TIMER_CHK | A | 1292 |
| 168 | TIMER_COUNTER | A | 500,730,819,1297,1301,1348 |
| 1292 | TIMER_OPERAT | A | 1257 |
| 192 | TIMER_OUT_CODE | A | 1386 |
| 1396 | TIMER_SLEEP | A | 1382,1384 |
| 1376 | TIMER_TOB | A | 1352,1358,1361,1369,1373 |
| 1381 | TIMER_TOB2 | A | |
| 1348 | TIMER_TYPE_2 | A | 1303,1306,1312,1326,1329 |
| 1297 | TIMER_YO | A | 1293 |
| 74 | TIME_TABLE | A | 1379,1735 |
| 79 | TO_CCC | A | 439 |
| 78 | TO_DROP | A | 426 |
| 134 | TUNER_CBL | A | |
| 132 | TUNER_D1 | A | |
| 133 | TUNER_D2 | A | |
| 164 | TX_BUFFER | A | 1596 |
| 93 | TX_BUSY_FLAG | A | 430,921,1109,1685,1695 |
| 1782 | TX_CCC_H_RET | A | 1449,1462,1494,1496,1498,1500,1502,1504,1506,1508,1510,1512,1514,1516,1518,1520,1522,1524,1526,1528,1530<br>1532,1534,1536,1538,1540,1556,1560,1564,1580,1633,1638,1645,1651,1668,1671,1687 |
| 1685 | TX_CCC_RUN | A | 1578,1588,1607,1617 |
| 163 | TX_COMMAND | A | 1594,1621 |
| 162 | TX_LENGTH | A | 1597,1624,1675 |
| 1689 | TX_RUN_SUB | A | |
| 1686 | TX_TRNS2 | A | 1605,1681 |
| 1615 | TX_TRNS3 | A | 1615 |
| [illegible] | TX_UNDRN | A | |
| 1695 | TX_YOSHI | A | 1693 |
| 1901 | UP64 | A | 1861 |
| 1862 | UP64_D | A | 1902 |
| 135 | UP_FLAG | A | |
| 60 | VIEW_CHANNEL | A | 1790 |
| 64 | VLF_ERROR_MAP | A | 1958,2005,2032 |
| 2016 | VLF_ERR_RET | A | 2014 |
| 645 | WAIT | A | 594,595,596,597,598,599,600,601,635 |
| 646 | WAIT1 | A | 648 |
| | WAKEARI_DE_ON | E | 1667,2072 |
| 1569 | YES_SEND | A | |
| 1892 | ZERO | A | 1863,1865 |

HEWLETT-PACKARD: 8086 Assembler

SOURCE LINE

```
"8086"
;
;*******************************************************************
;
SEISAKU_DD:      EQU 02H          ;
SEISAKU_MM:      EQU 12H          :
SEISAKU_YY:      EQU 58H          :
SEISAKU_VV:      EQU 2            ; Version No.
;*****
;*****        <<<  Application   >>>
;*****             ==============
;*****
;*****                 ------ By  M.TANAKA ------
;*****
;*****   Function
;*****    (1) --- SPU Key Control
;*****          6 Drop / 4 SPU ( 2nd Subscriber )
;*****
;*****    (2) --- Ram Back up
;*****
;*****    (3) --- Hardware Check
;*****
;*****            Off Event       Conv , SW , Device No. (3 Degit)
;*****            Off Send        Revrese Data Send
;*****            Event           Event LED On
;*****
;*****
;*****
;*****
;*****
;*****
;*****
;*******************************************************************
;$$$$$
;$$$$$         <<<  Bug List  >>>
;$$$$$
;$$$$$    (1)    2< 2nd Sub. de Converter On/Off ga okashii
;$$$$$
;$$$$$
;$$$$$
;$$$$$
;$$$$$$$$$$$$$$$$$$$$$$$$$$$$$$$$$$$$$$$$$$$$$$$$$$$$$$$$$$$$$$$$$$$$$


;
BIAS:            EQU 0000H
;

PROGRAMVERSION:  EQU BIAS                 ; DS 4
RX_CRC_ERROR:    EQU BIAS+4               ; DS 4
RX_CRC_OK_YO:    EQU BIAS+8               ; DS 4
IBF_OVER_FLOW:   EQU BIAS+12              ; DS 2
SCAN_MODE_FLAG:  EQU BIAS+14              ; DS 1
VIEW_CHANNEL:    EQU BIAS+16              ; DS 8*2
PC_CODE:         EQU BIAS+32              ; DS 8*2
EVENT_CHANNEL    EQU BIAS+48              ; DS 8
;                EQU BIAS+56
```

SOURCE LINE

```
VLF_ERROR_MAP:   EQU BIAS+128           ; DS 128
PC_FC_LIST:      EQU BIAS+256           ; DS 128
BASIC_AUTHO:     EQU BIAS+256+128       ; DS 128
                 ;   BIAS+512



;
A200H:           EQU 200H
CH_NO_FREQ       EQU A200H              ; DS 256   FREQUENCY TABLE START FROM HERE
TIME_TABLE:      EQU A200H+100H         ; 8*8*2
JUMP_ADDRESS:    EQU A200H+180H         ; 8*8*2
NEXT_GO_ADRS:    EQU A200H+200H         ; 64*2
;                    --- 480H
TO_DROP:         EQU 0500H
TO_CCC:          EQU 0600H
;
DS2:             EQU 0700H
INDEX_RX_1:      EQU DS2+2*1
INDEX_TX_1:      EQU DS2+2*2
CTRL_1:          EQU DS2+2*3
CTRL_1_COUNT:    EQU DS2+2*4
INDEX_RX_2:      EQU DS2+2*5
INDEX_TX_2:      EQU DS2+2*6
CTRL_2:          EQU DS2+2*7
CTRL_2_COUNT:    EQU DS2+2*8
PAGE_SW:         EQU DS2+2*9
ECHO_BACK_FLAG:  EQU DS2+2*10
REVERS_CHANEL:   EQU DS2+2*11
TX_BUSY_FLAG:    EQU DS2+2*12
BASE_POINT:      EQU DS2+2*13
INIT_POINT:      EQU DS2+2*14
BINARY_LED:      EQU DS2+2*15
ECHO_BACK_ADRS:  EQU DS2+2*16

CONV_NO:         EQU DS2+2*18
DROP_NO:         EQU DS2+2*19
IC_BYTE:         EQU DS2+2*20
DEVICE_NO:       EQU DS2+2*21
ID_BYTE:         EQU DS2+2*22
CONV_NO_BIT:     EQU DS2+2*23
DROP_NO_BIT:     EQU DS2+2*24
DEVICE_NO_BIT:   EQU DS2+2*25

MUL_ADR          EQU DS2+2*29           ; DS 2    STORE #3
EXTRN_STAT       EQU DS2+2*30           ; DS 2
TEMP_R_CH        EQU DS2+2*31           ; DS 2

;                    740H
OBF_BF_N:        EQU DS2+2*32    ;    0000  0000
OBF_BF_CMD:      EQU OBF_BF_N+1
OBF_BF_ID:       EQU OBF_BF_N+2
OBF_BF_BYTE:     EQU OBF_BF_N+3
CONV_SELECT:     EQU OBF_BF_N+16 ; DS 8

;
DS1:             EQU 0780H
```

HEWLETT-PACKARD: 8086 Assembler

SOURCE LINE

```
NOW_EVENT:        EQU DS1
BEFOR_EVENT:      EQU DS1+1
EVENT_ENABLE:     EQU DS1+2
LSB_LED:          EQU DS1+4
MSB_LED:          EQU DS1+5
HSB_LED:          EQU DS1+6
PPV_LED:          EQU DS1+7
KEY_DATA:         EQU DS1+9
ONE_SEC_TIMER:    EQU DS1+10
TUNER_D1:         EQU DS1+11
TUNER_D2:         EQU DS1+12
TUNER_CBL:        EQU DS1+13
UP_FLAG:          EQU DS1+14
DOWN_FLAG:        EQU DS1+15
PC_FC_EXIST:      EQU DS1+16
POWER_FEED:       EQU DS1+17
;
DS16:             EQU 800H
DROP_CMD_BF:      EQU DS16                       ; DS 16
SPU_CMD_BF:       EQU DS16+16*1                  ; DS 16
FROM_OBF_BF:      EQU DS16+16*2                  ; DS 16
SEND_ENABLE:      EQU DS16+16*3                  ; DS 1
SEND_ADDRESS:     EQU SEND_ENABLE+1              ; DS 2
SEND_INDEX:       EQU SEND_ADDRESS+2             ; DS 1
SEND_CMD_RESP:    EQU SEND_ADDRESS+3             ; DS 1
SEND_DATA_BUFF:   EQU SEND_ADDRESS+4             ; DS 123
EVENT_NO_FREQ:    EQU 900H                       ; DS 256
HELP:             EQU 0A00H
;
;--------------------------------------
;
KEY_DATA_STACK:   EQU 1000H                      ; DS 16*64=1024
ECU_ADDRESS:      EQU KEY_DATA_STACK+16*64       ; DS 2
TX_LENGTH:        EQU ECU_ADDRESS+2              ; DS 1
TX_COMMAND:       EQU ECU_ADDRESS+3              ; DS 1
TX_BUFFER:        EQU ECU_ADDRESS+4              ; DS 256
;
TIMER_COUNTER:    EQU 2000H-4
INDEX_HISTORY:    EQU 2000H-2
HISTORY_BUFFER:   EQU 2000H
;
PAGE_MEM:         EQU 3000H
STACK_END:        EQU 39FFH
```

HEWLETT-PACKARD: 8086 Assembler

SOURCE LINE

```
STACK_TOP:        EQU 4000H
;
; ************  BACK_UP RAM Area  ********************************
;
ES_BACK_UP:       EQU 0             ; DS 512
ES_BACK_UP_1:     EQU 200H          ; DS 512
ES_BACK_UP_2:     EQU 400H          ; DS 512
;
ES_EVENT_TIMER:   EQU 600H          ; DS 128*6

;
; ************  Imediate Data  ***********************************
;
MUL_NO            EQU               3
TIMER_OUT_CODE:   EQU 0
PLUS_KEY_CODE:    EQU 10H
EVENT_KEY_CODE:   EQU 11H
AUTHO_KEY_CODE:   EQU 12H
ONOFF_KEY_CODE:   EQU 13H
MINUS_KEY_CODE:   EQU 14H
SCAN_KEY_CODE:    EQU 15H
CLEAR_KEY_CODE:   EQU 16H
SEND_KEY_CODE:    EQU 17H
POWER_ON_CODE:    EQU 18H
POWER_OFF_CODE:   EQU 19H
RECENT_ON_CODE:   EQU 1AH
RELEASE_CODE:     EQU 1BH
KEY_PUSH_CODE:    EQU 1CH
;
ASCII_ER:         EQU 4572H
ASCII_AU:         EQU 4155H
ASCII_SC:         EQU 5343H
ASCII_FC:         EQU 4643H
ASCII_PC:         EQU 5043H
ASCII_CL:         EQU 434CH
ASCII_SE:         EQU 5345H
ASCII_AD:         EQU 4164H
ASCII_DE:         EQU 6445H
ASCII_NU:         EQU 0D49CH
ASCII_NO:         EQU 0D4DCH
ASCII_CO:         EQU 43DCH
ASCII_PR:         EQU 5072H
;
PUSH_ALL:         EQU 60H
POP_ALL:          EQU 61H
;
SEND_MAX:         EQU 64*2
;
; ---------------------------------------------------------------
; ************  I / O  Port  *************************************
; ---------------------------------------------------------------
;
DROP_CMD_PORT:    EQU 082H
DROP_DATA_PORT:   EQU 080H
ECU_H_ADDRESS:    EQU 0102H
ECU_L_ADDRESS:    EQU 0100H
INT_OFST          EQU               0A0H+(5*4)
```

HEWLETT-PACKARD: 8086 Assembler

SOURCE LINE

```
                229 INT1OFST         EQU             52
                230 INT3OFST         EQU             60
                231 TIMER1_OFST      EQU             72
                232 ACHD             EQU             00
                233 ACHC             EQU             04
                234 BCHD             EQU             02
                235 BCHC             EQU             06
                236
                237
                238                  ORG 1000H
                239
                240
                241 ;
1000 BE8003     242 JUMP_ADRS_INIT:  MOV SI,JUMP_ADDRESS
1003 B700       243                  MOV BH,0
1005 8A1E2C07   244                  MOV BL,[ID_BYTE]
1009 02DB       245                  ADD BL,BL
100B 8B0E1C07   246                  MOV CX,[INIT_POINT]
100F 8908       247                  MOV [SI][BX],CX
1011 C3         248                  RET
                249 ;
                250 ;
1012 BE8003     251 JUMP_ADRS_INIC:  MOV SI,JUMP_ADDRESS
1015 B700       252                  MOV BH,0
1017 8A1E2807   253                  MOV BL,[IC_BYTE]
101B 02DB       254                  ADD BL,BL
101D 8B0E1C07   255                  MOV CX,[INIT_POINT]
1021 8908       256                  MOV [SI][BX],CX
1023 C3         257                  RET
                258 ;
                259 ;
1024 BE8003     260 JUMP_ADRS_INIZ:  MOV SI,JUMP_ADDRESS
1027 B700       261                  MOV BH,0
1029 8A1E2C07   262                  MOV BL,[ID_BYTE]
102D 80F301     263                  XOR BL,1
1030 02DB       264                  ADD BL,BL
1032 8B0E1C07   265                  MOV CX,[INIT_POINT]
1036 8908       266                  MOV [SI][BX],CX
1038 C3         267                  RET
                268 ; ************  Converter ---' Drop ni henkan *******
1039 56         269 CONV_TO_DROP:    PUSH SI
103A E84E00     270                  CALL CONV_SW_BIT_AL
103D 2204       271                  AND AL,[SI]
103F 7418       272                  JZ HIROKO
1041 8A262807   273                  MOV AH,[IC_BYTE]
1045 80E4FE     274                  AND AH,0FEH
1048 88262C07   275                  MOV [ID_BYTE],AH
104C 8A262407   276                  MOV AH,[CONV_NO]
1050 80E406     277                  AND AH,06H
1053 88262607   278                  MOV [DROP_NO],AH
1057 5E         279                  POP SI
1058 C3         280                  RET
1059 8A262807   281 HIROKO:          MOV AH,[IC_BYTE]
105D 88262C07   282                  MOV [ID_BYTE],AH
1061 8A262407   283                  MOV AH,[CONV_NO]
1065 88262607   284                  MOV [DROP_NO],AH
1069 5E         285                  POP SI
```

HEWLETT-PACKARD: 8086 Assembler

SOURCE LINE

```
106A C3                                    RET
                      ;
                      ;
106B 56               DROP_TO_CONV:        PUSH SI
106C E81C00                                CALL CONV_SW_BIT_AL
106F 2204                                  AND AL,[SI]
1071 7402                                  JZ HIROYO
1073 B001                                  MOV AL,1
1075 8A262C07         HIROYO:              MOV AH,[ID_BYTE]
1079 0AE0                                  OR AH,AL
107B 88262807                              MOV [IC_BYTE],AH
107F 8A262607                              MOV AH,[DROP_NO]
1083 0AE0                                  OR AH,AL
1085 88262407                              MOV [CONV_NO],AH
1089 5E                                    POP SI
108A C3                                    RET
                      ;
                      ;
108B BE5007           CONV_SW_BIT_AL:      MOV SI,CONV_SELECT
108E B500                                  MOV CH,0
1090 8A0E2607                              MOV CL,[DROP_NO]
1094 03F1                                  ADD SI,CX
1096 E88505                                CALL DEVICE_BIT_AL
1099 C3                                    RET
                      ;
109A 50               CONV_SW_FLAG:        PUSH AX
109B 51                                    PUSH CX
109C 56                                    PUSH SI
109D E8EBFF                                CALL CONV_SW_BIT_AL
10A0 2204                                  AND AL,[SI]
10A2 5E                                    POP SI
10A3 59                                    POP CX
10A4 58                                    POP AX
10A5 C3                                    RET
                      ;
                      ; ************  ID_BYTE  --->  DROP_NO , DEVICE_NO  *************
                      ;
10A6 50               ID_DROP_DEVICE:      PUSH AX
10A7 51                                    PUSH CX
10A8 8A262C07                              MOV AH,[ID_BYTE]
10AC 8AC4                                  MOV AL,AH
10AE 80E407                                AND AH,7
10B1 88262607                              MOV [DROP_NO],AH
10B5 B103                                  MOV CL,3            ; A4 A3 A2 A1   A0 D2 D1 D0
10B7 D2C8                                  ROR AL,CL           ;  -  -  - A4   A3 A2 A1 A0
10B9 2407                                  AND AL,7            ;  0  0  0 A4   A3 A2 A1 A0
10BB A22A07                                MOV [DEVICE_NO],AL
                      ;
10BE E91800                                JMP MAKE_DATA
                      ;
                      ; ************  IC_BYTE  --->  CONV_NO , DEVICE_NO  *************
                      ;
10C1 50               IC_DROP_DEVICE:      PUSH AX
10C2 51                                    PUSH CX
10C3 8A262807                              MOV AH,[IC_BYTE]
10C7 8AC4                                  MOV AL,AH
10C9 80E407                                AND AH,7
```

HEWLETT-PACKARD: 8086 Assembler

SOUPCE LINE

```
10CC 88262407      343                  MOV [CONV_NO],AH
10D0 B103          344                  MOV CL,3                    ; A4 A3 A2 A1   A0 D2 D1 D0
10D2 D2C8          345                  ROR AL,CL                   ;  -  -  - A4   A3 A2 A1 A0
10D4 2407          346                  AND AL,7                    ;  0  0  0 A4   A3 A2 A1 A0
10D6 A22A07        347                  MOV [DEVICE_NO],AL
                   348 ;
10D9 B001          349 MAKE_DATA:       MOV AL,1
10DB 8A0E2407      350                  MOV CL,[CONV_NO]
10DF D2C0          351                  ROL AL,CL
10E1 A22E07        352                  MOV [CONV_NO_BIT],AL
                   353 ;
10E4 B001          354                  MOV AL,1
10E6 8A0E2607      355                  MOV CL,[DROP_NO]
10EA D2C0          356                  ROL AL,CL
10EC A23007        357                  MOV [DROP_NO_BIT],AL
                   358 ;
10EF B001          359                  MOV AL,1
10F1 8A0E2A07      360                  MOV CL,[DEVICE_NO]
10F5 D2C0          361                  ROL AL,CL
10F7 A23207        362                  MOV [DEVICE_NO_BIT],AL
                   363 ;
10FA 59            364                  POP CX
10FB 58            365                  POP AX
10FC C3            366                  RET
                   367 ;
                   368 ; ************  TO_DROP Buffer Space ?  **************************
                   369 ;
10FD A00607        370 TO_DPOP_SPACE:   MOV AL,[CTRL_1]
1100 3C28          371                  CMP AL,40
1102 F5            372                  CMC
1103 C3            373                  RET
                   374 ;
                   375 ; ************  AL Wa Suuji Kai      ?  ***************************
                   376 ;
1104 3C30          377 KAZUKO:          CMP AL,30H
1106 7203          378                  JC KAZUKO_RET
1108 3C3A          379                  CMP AL,3AH
110A F5            380                  CMC
110B C3            381 KAZUKO_RET:      RET
                   382 ;
                   383 ; ************  TO_DROP  Buffer ni ireru  ***********************
                   384 ;
110C E8EEFF        385 LOAD_TO_DROP:    CALL TO_DROP_SPACE    ; Korenara Anzenne !!!!!!!!!!!!
110F 721F          386                  JC IBF_OVP
                   387 ;
1111 8B1E0207      388                  MOV BX,[INDEX_RX_1]
1115 8A0C          389                  MOV CL,[SI]
1117 FEC1          390                  INC CL
1119 8A24          391 LD1:             MOV AH,[SI]
111B 8827          392                  MOV [BX].AH
111D FEC3          393                  INC BL
111F 46            394                  INC SI
1120 FEC9          395                  DEC CL
1122 75F5          396                  JNZ LD1
1124 FE060607      397                  INC BYTE PTR [CTRL_1]
1128 891E0207      398                  MOV [INDEX_RX_1],BX
112C E84705        399                  CALL IBF_UNMASK
```

HEWLETT-PACKARD: 8086 Assembler

SOURCE LINE

```
112F C3              RETRN:           RET
1130 FF060C00        IBF_OVR:         INC WORD PTR [IBF_OVER_FLOW]
1134 C3                               RET
                     ;
                     ; ************  TO_CCC   Buffer kara toridasu  ******************
                     ;
1135 A00E07          LOAD_FROM_DROP:  MOV AL,[CTRL_2]
1138 3C01                             CMP AL,1
113A 72F3                             JC RETRN
113C 8B1E0C07                         MOV BX,[INDEX_TX_2]
1140 8A0F                             MOV CL,[BX]
1142 FEC1                             INC CL
1144 8A27            LD2:             MOV AH,[BX]
1146 8824                             MOV [SI],AH
1148 FEC3                             INC BL
114A 46                               INC SI
114B FEC9                             DEC CL
114D 75F5                             JNZ LD2
114F FE0E0E07                         DEC BYTE PTR [CTRL_2]
1153 891E0C07                         MOV [INDEX_TX_2],BX
1157 F8                               CLC
1158 C3                               RET
                     ;
                     ; ************  DROP MAP Set  ************************************
                     ;
1159 BE0008          DROP_MAP_SET:    MOV SI,DROP_CMD_BF
115C C60405                           MOV BYTE PTR [SI],5
115F C6440107                         MOV BYTE PTR [SI+1],7
1163 C6440210                         MOV BYTE PTR [SI+2].10H
1167 C6440332                         MOV BYTE PTR [SI+3],32H
116B C6440454                         MOV BYTE PTR [SI+4],54H
116F C64405F0                         MOV BYTE PTR [SI+5],0F0H
1173 E896FF                           CALL LOAD_TO_DROP
1176 C3                               RET
                     ;
                     ; ************  Power Detect Command  ****************************
                     ;
1177 BE0008          POWER_DET_CMD:   MOV SI,DROP_CMD_BF
117A C60401                           MOV BYTE PTR [SI],1
117D C6440101                         MOV BYTE PTR [SI+1],1
1181 E888FF                           CALL LOAD_TO_DROP
1184 C3                               RET
                     ;
                     ; ************  Subscriber Power OFF Control  ******************
                     ;
1185 BE0008          CONV_P_OFF_CMD:  MOV SI,DROP_CMD_BF
1188 C60402                           MOV BYTE PTR [SI],2
118B C6440105                         MOV BYTE PTR [SI+1],5
118F A02407                           MOV AL,[CONV_NO]
1192 2407                             AND AL,7
1194 884402                           MOV BYTE PTR [SI+2],AL
1197 E872FF                           CALL LOAD_TO_DROP
                     ;
119A A02E07                           MOV AL,[CONV_NO_BIT]
119D 343F                             XOR AL,3FH
119F 20068007                         AND [NOW_EVENT],AL
11A3 C3                               RET
```

SOURCE LINE

```
                        ;
                        ; ************  Subscriber Power ON Control   ******************
                        ;
11A4 BE0008             CONV_P_ON_CMD:  MOV SI,DROP_CMD_BF
11A7 C60402                             MOV BYTE PTR [SI],2
11AA C6440105                           MOV BYTE PTR [SI+1],5
11AE A08D07                             MOV AL,[TUNER_CBL]
11B1 884402                             MOV BYTE PTR [SI+2],AL
11B4 E855FF                             CALL LOAD_TO_DROP
11B7 C3                                 RET
                        ;
                        ; ************  Select Subscriber Cable   ***********************
                        ;
11B8 C3                 CABLE_SEL_CMD:  RET
11B9 BE0008                             MOV SI,DROP_CMD_BF
11BC C60402                             MOV BYTE PTR [SI],2
11BF C6440106                           MOV BYTE PTR [SI+1],6
11C3 A08D07                             MOV AL,[TUNER_CBL]
11C6 247F                               AND AL,7FH
11C8 884402                             MOV BYTE PTR [SI+2],AL
11CB E83EFF                             CALL LOAD_TO_DROP
11CE C3                                 RET
                        ;
                        ; ************  Tuner Frequency Change Request   *****************
                        ;
11CF BE0008             TUNER_FREQ_CMD: MOV SI,DROP_CMD_BF
11D2 C60404                             MOV BYTE PTR [SI],4
11D5 C6440103                           MOV BYTE PTR [SI+1],3
11D9 A02407                             MOV AL,[CONV_NO]
11DC 884402                             MOV BYTE PTR [SI+2],AL
11DF A08B07                             MOV AL,[TUNER_D1]
11E2 884403                             MOV BYTE PTR [SI+3],AL
11E5 A08C07                             MOV AL,[TUNER_D2]
11E8 884404                             MOV BYTE PTR [SI+4],AL
11EB E81EFF                             CALL LOAD_TO_DROP
11EE C3                                 RET
                        ;
                        ; ************  Converter Wo Ugokasu Program   ********************
                        ;
                        ;
11EF 50                 RUN_CONVERTER:  PUSH AX
11F0 53                                 PUSH BX
11F1 56                                 PUSH SI
                        ;
11F2 A02C07                             MOV AL,[ID_BYTE]
11F5 50                                 PUSH AX
                        ;
11F6 E8AF00                             CALL GO_CONVERTER
                        ;
11F9 BE8003                             MOV SI,JUMP_ADDRESS
11FC B700                               MOV BH,0
11FE 8A1E2607                           MOV BL,[DROP_NO]
1202 80C310                             ADD BL,10H
1205 8AF3                               MOV DH,BL               ; DH = First ID_BYTE
1207 02DB                               ADD BL,BL
1209 03DE                               ADD BX,SI               ; BX = First SPU JUMP_ADDRESS
120B B202                               MOV DL,2                ; DL = First SPU No.
```

SOURCE LINE

```
120D E88AFE                            CALL CONV_SW_FLAG
1210 7520                              JNZ CONV1_VIEW_CK
                  ;
                  ;
1212 88362C07     CONV0_VIEW_CK:       MOV [ID_BYTE],DH
1216 88162A07                          MOV [DEVICE_NO].DL
121A E87DFE                            CALL CONV_SW_FLAG
121D 7503                              JNZ CONV0_NEXT
                  ;
121F E84000                            CALL CONV_SUB
                  ;
1222 83C310       CONV0_NEXT:          ADD BX,10H        ; JUMP_ADDRESS
1225 80C608                            ADD DH,8          ; ID_BYTE
1228 FEC2                              INC DL            ; CONV_NO
122A 80FA06                            CMP DL,6
122D 75E3                              JNZ CONV0_VIEW_CK
122F E91D00                            JMP CONV_OP_END
                  ;
1232 88362C07     CONV1_VIEW_CK:       MOV [ID_BYTE],DH
1236 88162A07                          MOV [DEVICE_NO],DL
123A E85DFE                            CALL CONV_SW_FLAG
123D 7403                              JZ CONV1_NEXT
                  ;
123F E82000                            CALL CONV_SUB
                  ;
1242 83C310       CONV1_NEXT:          ADD BX,10H        ; JUMP_ADDRESS
1245 80C608                            ADD DH,8          ; ID_BYTE
1248 FEC2                              INC DL            ; CONV_NO
124A 80FA06                            CMP DL,6
124D 75E3                              JNZ CONV1_VIEW_CK
                  ;
124F 58           CONV_OP_END:         POP AX
1250 A22C07                            MOV [ID_BYTE].AL
1253 E850FE                            CALL ID_DROP_DEVICE
1256 A08007                            MOV AL,[NOW_EVENT]
1259 243F                              AND AL.3FH
125B A28107                            MOV [BEFOR_EVENT],AL
                  ;
125E 5E                                POP SI
125F 5B                                POP BX
1260 58                                POP AX
1261 C3                                RET
                  ;
1262 8B0F         CONV_SUB:            MOV CX,[BX]
1264 3B0E1C07                          CMP CX,[INIT_POINT]
1268 743D                              JZ AKEMI
126A 53                                PUSH BX
126B 52                                PUSH DX
                  ;
126C 8A268007                          MOV AH,[NOW_EVENT]
1270 F6C4C0                            TEST AH.0C0H
1273 750E                              JNZ AYA0
1275 32268107                          XOR AH,[BEFOR_EVENT]
1279 84262E07                          TEST AH,[CONV_NO_BIT]
127D 741D                              JZ MODE_SAME
127F 8A268007                          MOV AH,[NOW_EVENT]
1283 F6C480       AYA0:                TEST AH,80H
```

SOURCE LINE

```
1286 7411                                JZ AYA3
1288 F6C440                              TEST AH,40H
128B 7406                                JZ AYA2
128D E8B801          AYA1:               CALL EVENT_LED_NRM
1290 E90900                              JMP MODE_SAME
                     ;
1293 E8D901          AYA2:               CALL EVENT_LED_FLH
1296 E90300                              JMP MODE_SAME
                     ;
1299 E88701          AYA3:               CALL EVENT_LED_OFF
                     ;
129C 3B0E1A07        MODE_SAME:          CMP CX,[BASE_POINT]
12A0 7503                                JNZ AKINA
12A2 E80602                              CALL SPU_LED_DISP
12A5 5A              AKINA:              POP DX
12A6 5B                                  POP BX
                     ;
12A7 C3              AKEMI:              RET
                     ;
12A8 8A3E8507        GO_CONVERTER:       MOV BH,[MSB_LED]
12AC 8A1E8407                            MOV BL,[LSB_LED]
12B0 E8EB03                              CALL DECBIN_BX
                     ;         ******    EVENT Program Taiou  ******
12B3 BE0009                              MOV SI,EVENT_NO_FREQ
12B6 A08007                              MOV AL,[NOW_EVENT]
12B9 84062E07                            TEST AL,[CONV_NO_BIT]
12BD 7503                                JNZ CONV_EVENT
12BF BE0002                              MOV SI,CH_NO_FREQ
12C2 03F3            CONV_EVENT:         ADD SI,BX
                     ;
12C4 8A00                                MOV AL.[SI][BX]
12C6 A28B07                              MOV [TUNER_D1],AL
12C9 8A6001                              MOV AH,[SI][BX+1]
12CC 88268C07                            MOV [TUNER_D2],AH
12D0 D0C4                                ROL AH
12D2 80E440                              AND AH,40H
12D5 80CC80                              OR AH,80H
12D8 0A262407                            OR AH,[CONV_NO]
12DC 88268D07                            MOV [TUNER_CBL],AH
12E0 E8C1FE                              CALL CONV_P_ON_CMD
12E3 E8D2FE                              CALL CABLE_SEL_CMD
12E6 E8E6FE                              CALL TUNER_FREQ_CMD
12E9 C3                                  RET
                     ;
                     ;
                     ;
12EA BE8003          STP_CONVERTER:      MOV SI,JUMP_ADDRESS
12ED B700                                MOV BH,0
12EF 8A1E2607                            MOV BL,[DROP_NO]
12F3 80C310                              ADD BL,10H
12F6 8AF3                                MOV DH,BL              ; DH = First ID_BYTE
12F8 02DB                                ADD BL,BL
12FA 03DE                                ADD BX,SI              ; BX = First SPU JUMP_ADDRESS
12FC B202                                MOV DL,2               ; DL = First SPU No.
12FE E899FD                              CALL CONV_SW_FLAG
1301 7525                                JNZ CONV1_STP_CK
                     ;
```

SOURCE LINE

```
                 ;
1303 88362C07    CONV0_STP_CK:    MOV [ID_BYTE],DH
1307 88162A07                     MOV [DEVICE_NO].DL
130B E88CFD                       CALL CONV_SW_FLAG
130E 7508                         JNZ STPC0_NEXT
1310 8B0E1C07                     MOV CX,[INIT_POINT]
1314 390F                         CMP [BX],CX
1316 7534                         JNZ CONV_VIEW_YET
1318 83C310      STPC0_NEXT:      ADD BX,10H        ; JUMP_ADDRESS
131B 80C608                       ADD DH,8          ; ID_BYTE
131E FEC2                         INC DL            ; CONV_NO
1320 80FA06                       CMP DL,6
1323 75DE                         JNZ CONV0_STP_CK
1325 E92200                       JMP CONV_VIEW_STP
                 ;
1328 88362C07    CONV1_STP_CK:    MOV [ID_BYTE],DH
132C 88162A07                     MOV [DEVICE_NO].DL
1330 E867FD                       CALL CONV_SW_FLAG
1333 7408                         JZ STPC1_NEXT
1335 8B0E1C07                     MOV CX,[INIT_POINT]
1339 390F                         CMP [BX],CX
133B 750F                         JNZ CONV_VIEW_YET
133D 83C310      STPC1_NEXT:      ADD BX,10H        : JUMP_ADDRESS
1340 80C608                       ADD DH,8          ; ID_BYTE
1343 FEC2                         INC DL            ; CONV_NO
1345 80FA06                       CMP DL,6
1348 75DE                         JNZ CONV1_STP_CK
                 ;
134A F8          CONV_VIEW_STP:   CLC
134B C3                           RET
                 ;
134C F9          CONV_VIEW_YET:   STC
134D C3                           RET
                 ;
                 ; ************  Device MAP Set  *********************************
                 ;
134E A02407      DEVICE_MAP_SET:  MOV AL,[CONV_NO]
1351 BE0008                       MOV SI,DROP_CMD_BF
1354 C60407                       MOV BYTE PTR [SI],7
1357 C6440108                     MOV BYTE PTR [SI+1],8
135B 884402                       MOV BYTE PTR [SI+2],AL         ; Drop No. = ( AL )
135E C6440332                     MOV BYTE PTR [SI+3],32H
1362 C6440454                     MOV BYTE PTR [SI+4],54H
1366 C64405FF                     MOV BYTE PTR [SI+5],0FFH
136A C64406FF                     MOV BYTE PTR [SI+6].0FFH
136E C64407F0                     MOV BYTE PTR [SI+7],0F0H
1372 E897FD                       CALL LOAD_TO_DROP
1375 C3                           RET
                 ;
                 ; ************  SPU Status Request Command Create  **************
                 ;
1376 BE1008      SPU_STATUS_REQ:  MOV SI,SPU_CMD_BF
1379 C60404                       MOV BYTE PTR [SI],4            ; Length
137C C6440104                     MOV BYTE PTR [SI+1].4          : Drop Command
1380 A02C07                       MOV AL,[ID_BYTE]
1383 884402                       MOV BYTE PTR [SI+2],AL         ; ID_BYTE
1386 C6440301                     MOV BYTE PTR [SI+3],1          ; Byte Count
```

HEWLETT-PACKARD: 8086 Assembler

SOURCE LINE

```
138A A02A07                        MOV AL,[DEVICE_NO]
138D 884404                        MOV BYTE PTR [SI+4],AL        ; Status Req. Command
1390 E879FD                        CALL LOAD_TO_DROP
1393 C3                            RET
                     ;
                     ; ************  Clear Device Display  Command  *****************
                     ;
1394 BE1008          SPU_CLEAR_DISP: MOV SI,SPU_CMD_BF
1397 C60404                        MOV BYTE PTR [SI],4           ; Length
139A C6440104                      MOV BYTE PTR [SI+1],4         ; Drop Command
139E A02C07                        MOV AL,[ID_BYTE]
13A1 884402                        MOV BYTE PTR [SI+2],AL        ; ID_BYTE
13A4 C6440301                      MOV BYTE PTR [SI+3],1         ; Byte Count
13A8 A02A07                        MOV AL,[DEVICE_NO]
13AB 0C30                          OR AL,30H
13AD 884404                        MOV BYTE PTR [SI+4],AL        ; Clear Disp. Command
13B0 E859FD                        CALL LOAD_TO_DROP
13B3 C3                            RET
                     ;
                     ; ************  Relay Control ON Command  *********************
                     ;
13B4 BE1008          SPU_RELAY_ON:   MOV SI,SPU_CMD_BF
13B7 C60405                        MOV BYTE PTR [SI],5           ; Length
13BA C6440104                      MOV BYTE PTR [SI+1],4         ; Drop Command
13BE A02C07                        MOV AL,[ID_BYTE]
13C1 884402                        MOV BYTE PTR [SI+2],AL        ; ID_BYTE
13C4 C6440302                      MOV BYTE PTR [SI+3],2         ; Byte Count
13C8 A02A07                        MOV AL,[DEVICE_NO]
13CB 0C28                          OR AL,28H
13CD 884404                        MOV BYTE PTR [SI+4],AL        ; Relay Cont. Command
13D0 B0FF                          MOV AL,0FFH
13D2 884405                        MOV BYTE PTR [SI+5],AL        ;       ON
13D5 E834FD                        CALL LOAD_TO_DROP
13D8 C3                            RET
                     ;
                     ; ************  Relay Control OFF Command  ********************
                     ;
13D9 BE1008          SPU_RELAY_OFF:  MOV SI,SPU_CMD_BF
13DC C60405                        MOV BYTE PTR [SI],5           ; Length
13DF C6440104                      MOV BYTE PTR [SI+1],4         ; Drop Command
13E3 A02C07                        MOV AL,[ID_BYTE]
13E6 884402                        MOV BYTE PTR [SI+2],AL        ; ID_BYTE
13E9 C6440302                      MOV BYTE PTR [SI+3],2         ; Byte Count
13ED A02A07                        MOV AL,[DEVICE_NO]
13F0 0C28                          OR AL,28H
13F2 884404                        MOV BYTE PTR [SI+4],AL        ; Relay Cont. Command
13F5 B000                          MOV AL,0
13F7 884405                        MOV BYTE PTR [SI+5],AL        ;       OFF
13FA E80FFD                        CALL LOAD_TO_DROP
13FD C3                            RET
                     ;
                     ; ************  Event LED ON Command  *************************
                     ;
13FE BE1008          EVENT_LED_ON:   MOV SI,SPU_CMD_BF
1401 C60405                        MOV BYTE PTR [SI],5           ; Length
1404 C6440104                      MOV BYTE PTR [SI+1],4         ; Drop Command
1408 A02C07                        MOV AL,[ID_BYTE]
```

HEWLETT-PACKARD: 8086 Assembler

SOURCE LINE

```
140B 884402                          MOV BYTE PTR [SI+2],AL         ; ID_BYTE
140E C6440302                        MOV BYTE PTR [SI+3],2          ; Byte Count
1412 A02A07                          MOV AL,[DEVICE_NO]
1415 0C08                            OR AL,8
1417 884404                          MOV BYTE PTR [SI+4],AL         ; Event LED Cont. Command
141A B0FF                            MOV AL,0FFH
141C 884405                          MOV BYTE PTR [SI+5],AL         ;       ON
141F E8EAFC                          CALL LOAD_TO_DROP
1422 C3                              RET
                     ;
                     ; ************  Event LED OFF Command  **************************
                     ;
1423 BE1008          EVENT_LED_OFF:  MOV SI,SPU_CMD_BF
1426 C60405                          MOV BYTE PTR [SI],5            ; Length
1429 C6440104                        MOV BYTE PTR [SI+1],4          ; Drop Command
142D A02C07                          MOV AL,[ID_BYTE]
1430 884402                          MOV BYTE PTR [SI+2],AL         ; ID_BYTE
1433 C6440302                        MOV BYTE PTR [SI+3],2          ; Byte Count
1437 A02A07                          MOV AL,[DEVICE_NO]
143A 0C08                            OR AL,8
143C 884404                          MOV BYTE PTR [SI+4],AL         ; Event LED Cont. Command
143F B000                            MOV AL,0
1441 884405                          MOV BYTE PTR [SI+5],AL         ;       OFF
1444 E8C5FC                          CALL LOAD_TO_DROP
1447 C3                              RET
                     ;
                     ; ************  Event LED Normal Command  ************************
                     ;
1448 E8B3FF          EVENT_LED_NRM:  CALL EVENT_LED_ON
144B BE1008                          MOV SI,SPU_CMD_BF
144E C60405                          MOV BYTE PTR [SI],5            ; Length
1451 C6440104                        MOV BYTE PTR [SI+1],4          ; Drop Command
1455 A02C07                          MOV AL,[ID_BYTE]
1458 884402                          MOV BYTE PTR [SI+2],AL         ; ID_BYTE
145B C6440302                        MOV BYTE PTR [SI+3],2          ; Byte Count
145F A02A07                          MOV AL,[DEVICE_NO]
1462 0C10                            OR AL,10H
1464 884404                          MOV BYTE PTR [SI+4],AL         ; Event LED Mode Command
1467 C6440500                        MOV BYTE PTR [SI+5],0          ;       Normal
146B E89EFC                          CALL LOAD_TO_DROP
146E C3                              RET
                     ;
                     ; ************  Event LED Flash Command  ************************
                     ;
146F E88CFF          EVENT_LED_FLH:  CALL EVENT_LED_ON
1472 BE1008                          MOV SI,SPU_CMD_BF
1475 C60405                          MOV BYTE PTR [SI],5            ; Length
1478 C6440104                        MOV BYTE PTR [SI+1],4          ; Drop Command
147C A02C07                          MOV AL,[ID_BYTE]
147F 884402                          MOV BYTE PTR [SI+2],AL         ; ID_BYTE
1482 C6440302                        MOV BYTE PTR [SI+3],2          ; Byte Count
1486 A02A07                          MOV AL,[DEVICE_NO]
1489 0C10                            OR AL,10H
148B 884404                          MOV BYTE PTR [SI+4],AL         ; Event LED Mode Command
148E C64405FF                        MOV BYTE PTR [SI+5],0FFH       ;       Flash
1492 E877FC                          CALL LOAD_TO_DROP
1495 C3                              RET
```

HEWLETT-PACKARD: 8086 Assembler

SOURCE LINE

```
                ;
                ; ************  SPU View Channel  Operation  ********************
                ;
1496 BE1000     SPU_VIEW_DISP:  MOV SI,VIEW_CHANNEL
1499 B700                       MOV BH,0
149B 8A1E2407                   MOV BL,[CONV_NO]
149F 8A20                       MOV AH,[SI][BX]
14A1 8A4008                     MOV AL,[SI][BX+8]
14A4 88268507   SPU_LED_AX:     MOV [MSB_LED],AH
14A8 A28407                     MOV [LSB_LED],AL
                ;
                ; ************  SPU LED & EVENT_LED Operation  ******************
                ;
14AB BE1008     SPU_LED_DISP:   MOV SI,SPU_CMD_BF
14AE C60406                     MOV BYTE PTR [SI],6           ; Length
14B1 C6440104                   MOV BYTE PTR [SI+1],4         ; Drop Command
14B5 A02C07                     MOV AL,[ID_BYTE]
14B8 884402                     MOV BYTE PTR [SI+2],AL        ; Device/Drop
14BB C6440303                   MOV BYTE PTR [SI+3],3         ; Byte Count
14BF A02A07                     MOV AL,[DEVICE_NO]
14C2 0C50                       OR AL,50H
14C4 884404                     MOV BYTE PTR [SI+4],AL        ; Display Character Comman
14C7 C6440500                   MOV BYTE PTR [SI+5],0         ;         LSB
14CB A08407                     MOV AL,[LSB_LED]
14CE 884406                     MOV BYTE PTR [SI+6],AL        ;         Data
14D1 E838FC                     CALL LOAD_TO_DROP
                ;
14D4 BE1008                     MOV SI,SPU_CMD_BF
14D7 C6440501                   MOV BYTE PTR [SI+5],1         ;         MSB
14DB A08507                     MOV AL,[MSB_LED]
14DE 884406                     MOV BYTE PTR [SI+6],AL        ;         Data
14E1 E828FC                     CALL LOAD_TO_DROP
14E4 C3                         RET
                ;
                ; ************  SPU LED & EVENT_LED Operation  ******************
                ;
14E5 BE1008     SPU_LED_DISFL:  MOV SI,SPU_CMD_BF
14E8 C60406                     MOV BYTE PTR [SI],6           ; Length
14EB C6440104                   MOV BYTE PTR [SI+1],4         ; Drop Command
14EF A02C07                     MOV AL,[ID_BYTE]
14F2 884402                     MOV BYTE PTR [SI+2],AL        ; Device/Drop
14F5 C6440303                   MOV BYTE PTR [SI+3],3         ; Byte Count
14F9 A02A07                     MOV AL,[DEVICE_NO]
14FC 0C50                       OR AL,50H
14FE 884404                     MOV BYTE PTR [SI+4],AL        ; Display Character Comman
1501 C6440580                   MOV BYTE PTR [SI+5],80H       ;         LSB Flash
1505 A08407                     MOV AL,[LSB_LED]
1508 884406                     MOV BYTE PTR [SI+6],AL        ;         Data
150B E8FEFB                     CALL LOAD_TO_DROP
                ;
150E BE1008                     MOV SI,SPU_CMD_BF
1511 C6440501                   MOV BYTE PTR [SI+5],1         ;         MSB
1515 A08507                     MOV AL,[MSB_LED]
1518 884406                     MOV BYTE PTR [SI+6],AL        ;         Data
151B E8EEFB                     CALL LOAD_TO_DROP
151E C3                         RET
                ;
```

```
                 ; ************  SPU LED & EVENT_LED Operation  *****************
                 ;
151F BE1008      SPU_LED_FLASH:  MOV SI,SPU_CMD_BF
1522 C60406                      MOV BYTE PTR [SI],6              ; Length
1525 C6440104                    MOV BYTE PTR [SI+1],4            ; Drop Command
1529 A02C07                      MOV AL,[ID_BYTE]
152C 884402                      MOV BYTE PTR [SI+2],AL           ; Device/Drop
152F C6440303                    MOV BYTE PTR [SI+3],3            ; Byte Count
1533 A02A07                      MOV AL,[DEVICE_NO]
1536 0C50                        OR AL,50H
1538 884404                      MOV BYTE PTR [SI+4],AL           ; Display Character Command
153B C6440580                    MOV BYTE PTR [SI+5],80H          ;         LSB Flash
153F A08407                      MOV AL,[LSB_LED]
1542 884406                      MOV BYTE PTR [SI+6],AL           ;         Data
1545 E8C4FB                      CALL LOAD_TO_DROP
                 ;
1548 BE1008                      MOV SI,SPU_CMD_BF
154B C6440581                    MOV BYTE PTR [SI+5],81H          ;         MSB Flash
154F A08507                      MOV AL,[MSB_LED]
1552 884406                      MOV BYTE PTR [SI+6],AL           ;         Data
1555 E8B4FB                      CALL LOAD_TO_DROP
1558 C3                          RET
                 ;
                 ; ************  SPU LED & EVENT_LED New Operation  **************
                 ;
1559 BE1008      SPU_LED_FLAST:  MOV SI,SPU_CMD_BF
155C C60406                      MOV BYTE PTR [SI],6              ; Length
155F C6440104                    MOV BYTE PTR [SI+1],4            ; Drop Command
1563 A02C07                      MOV AL,[ID_BYTE]
1566 884402                      MOV BYTE PTR [SI+2],AL           ; Device/Drop
1569 C6440303                    MOV BYTE PTR [SI+3],3            ; Byte Count
156D A02A07                      MOV AL,[DEVICE_NO]
1570 0C50                        OR AL,50H
1572 884404                      MOV BYTE PTR [SI+4],AL           ; Display Character Command

                 ;
1575 C6440583                    MOV BYTE PTR [SI+5],83H          ;         USB Flash
1579 C6440630                    MOV BYTE PTR [SI+6],30H          ;         Data
157D E88CFB                      CALL LOAD_TO_DROP
                 ;
1580 BE1008                      MOV SI,SPU_CMD_BF
1583 C6440582                    MOV BYTE PTR [SI+5],82H          ;         HSB Flash
1587 A08607                      MOV AL,[HSB_LED]
158A 884406                      MOV BYTE PTR [SI+6],AL           ;         Data
158D E87CFB                      CALL LOAD_TO_DROP
                 ;
1590 BE1008                      MOV SI,SPU_CMD_BF
1593 C6440580                    MOV BYTE PTR [SI+5],80H          ;         LSB Flash
1597 A08407                      MOV AL,[LSB_LED]
159A 884406                      MOV BYTE PTR [SI+6],AL           ;         Data
159D E86CFB                      CALL LOAD_TO_DROP
                 ;
15A0 BE1008                      MOV SI,SPU_CMD_BF
15A3 C6440581                    MOV BYTE PTR [SI+5],81H          ;         MSB Flash
15A7 A08507                      MOV AL,[MSB_LED]
15AA 884406                      MOV BYTE PTR [SI+6],AL           ;         Data
15AD E85CFB                      CALL LOAD_TO_DROP
```

HEWLETT-PACKARD: 8086 Assembler

SOURCE LINE

```
15B0 C3                                 RET
                   ; ************   Authorize Sareteirukai  ---> CY ****************
15B1 E85F00        AUTHO_KAI:          CALL CONV_BIT_AL        ; AL = 2 ** CONV_NO
15B4 8B1E1E07                          MOV BX,WORD PTR [BINARY_LED]
15B8 BE8001                            MOV SI,BASIC_AUTHO
15BB 2200                              AND AL,[SI][BX]         ; Z = 0 --- No
15BD C3                                RET
                   ; ************   IF PC Code=0 Then , Z=1    ELSE  Z=0  ***********
15BE 53            PC_CODE_0_KAI:      PUSH BX
15BF 56                                PUSH SI
15C0 BE2000                            MOV SI,PC_CODE
15C3 B700                              MOV BH,0
15C5 8A1E2407                          MOV BL,[CONV_NO]
15C9 02DB                              ADD BL,BL
15CB 8B10                              MOV DX,[SI][BX]
15CD 83FA00                            CMP DX,0
15D0 5E                                POP SI
15D1 5B                                POP BX
15D2 C3                                RET
                   ; ************   IF SC Mode  Then  Z=1   ELSE  Z=0  ***********
15D3 E83D00        SC_MODE_KAI:        CALL CONV_BIT_AL
15D6 22060E00                          AND AL,[SCAN_MODE_FLAG]
15DA C3                                RET
                   ;
15DB BE2000        PC_CODE_ADRS:       MOV SI,PC_CODE
15DE B700                              MOV BH,0
15E0 8A1E2407                          MOV BL,[CONV_NO]
15E4 02DB                              ADD BL,BL
15E6 C3                                RET
                   ; ************   PC/FC List & Authorize  CY= 1 ---.None  ********
15E7 50            PCFC_MAP_ARUKA:     PUSH AX
15E8 E82800                            CALL CONV_BIT_AL        ; AL = 2 ** CONV_NO
15EB BE0001                            MOV SI,PC_FC_LIST
15EE B100                              MOV CL,0
15F0 8AE0          AKANE:              MOV AH,AL               ; Z = 0 --- No
15F2 2224                              AND AH,[SI]
15F4 22A48000                          AND AH,[SI+128]
15F8 750B                              JNZ AKANE_CHAN
15FA 46                                INC SI
15FB FEC1                              INC CL
15FD 80F964                            CMP CL,100
1600 75EE                              JNZ AKANE
1602 58                                POP AX
1603 F9                                STC
1604 C3                                RET
1605 58            AKANE_CHAN:         POP AX
1606 F8                                CLC
1607 C3                                RET
                   ; ************   Drop No. Bit Position  ---> AL ****************
1608 51            DROP_BIT_AL:        PUSH CX
1609 8A0E2607                          MOV CL,[DROP_NO]
160D B001                              MOV AL,1
160F D2C0                              ROL AL,CL
1611 59                                POP CX
1612 C3                                RET
                   ; ************   Converter Bit Position  ---> AL ****************
1613 51            CONV_BIT_AL:        PUSH CX
```

HEWLETT-PACKARD: 8086 Assembler

SOURCE LINE

```
1614 8A0E2407                       MOV CL,[CONV_NO]
1618 B001                           MOV AL,1
161A D2C0                           ROL AL,CL
161C 59                             POP CX
161D C3                             RET
                   ; ************  Device Bit Position  --->  AL  ******************
161E 51            DEVICE_BIT_AL:   PUSH CX
161F 8A0E2A07                       MOV CL,[DEVICE_NO]
1623 B001                           MOV AL,1
1625 D2C0                           ROL AL,CL
1627 59                             POP CX
1628 C3                             RET
                   ; ************  EVENT Mode ---> Basic Mode  ********************
1629 A02E07        EVENT_TO_BASIC:  MOV AL,[CONV_NO_BIT]
162C 343F                           XOR AL,3FH
162E 20068007                       AND [NOW_EVENT],AL
1632 C3                             RET
                   ; ************  Timer Set Operation  ****************************
1633 B90200        TIMER_02_SEC:    MOV CX,2
1636 E92B00                         JMP TIMER_SET_CX
1639 B90400        TIMER_04_SEC:    MOV CX,4
163C E92500                         JMP TIMER_SET_CX
163F B90500        TIMER_05_SEC:    MOV CX,5
1642 E91F00                         JMP TIMER_SET_CX
1645 90            TIMER_UD_SEC:    NOP
1646 B90A00        TIMER_1_SEC:     MOV CX,10
1649 E91800                         JMP TIMER_SET_CX
164C B91400        TIMER_2_SEC:     MOV CX,20
164F E91200                         JMP TIMER_SET_CX
1652 B93200        TIMER_5_SEC:     MOV CX,50
1655 E90C00                         JMP TIMER_SET_CX
1658 B96400        TIMER_10_SEC:    MOV CX,100
165B E90600                         JMP TIMER_SET_CX
165E B92C01        TIMER_30_SEC:    MOV CX,300
1661 E90000                         JMP TIMER_SET_CX
1664 53            TIMER_SET_CX:    PUSH BX
1665 56                             PUSH SI
1666 BE0003                         MOV SI,TIME_TABLE
1669 B700                           MOV BH,0
166B 8A1E2807                       MOV BL,[IC_BYTE]
166F 02DB                           ADD BL,BL
1671 8908                           MOV [SI][BX],CX
1673 5E                             POP SI
1674 5B                             POP BX
1675 C3                             RET
                   ;
                   ; ************  IBF Interrupt Unmask  ****************************
                   ;
1676 B81200        IBF_UNMASK:      MOV             AX,12H
1679 BA3AFF                         MOV             DX,0FF3AH        ;   IBF Interrupt Unmask
167C EF                             OUT             DX,AX
167D C3                             RET
                   ;
                   ; ************  Channel Table  --->  LED  ***********************
                   ;
167E BE1000        VIEW_TBL_LED:    MOV SI,VIEW_CHANNEL     ; [ID_BYTE]
1681 B700                           MOV BH,0
```

```
                                     SOURCE LINE

1683 8A1E2407                       MOV BL,[CONV_NO]
1687 8A20                           MOV AH,[SI][BX]
1689 8A4008                         MOV AL,[SI][BX+8]
168C 88268507                       MOV [MSB_LED],AH
1690 A28407                         MOV [LSB_LED],AL
1693 8BD8                           MOV BX,AX
1695 C3                             RET
                  ;
                  ; ************  LED  ---> BX  **********************************
                  ;
1696 8A3E8507     LED_BIN_BX:       MOV BH,[MSB_LED]     ; BX <--- LED
169A 8A1E8407                       MOV BL,[LSB_LED]
                  ;
                  ; ************  Decimal to Binary  *******************************
                  ;
169E 80E30F       DECBIN_BX:        AND BL,0FH        ; BX ASCII Decimal ---> BX Binary
16A1 80E70F                         AND BH,0FH
16A4 02FF                           ADD BH,BH
16A6 02DF                           ADD BL,BH         ; BL=BL+(2*BH)
16A8 02FF                           ADD BH,BH         ; BH=2*(2*BH))
16AA 02FF                           ADD BH,BH         ; BH=2*(2*(2*BH))
16AC 02DF                           ADD BL,BH         ; BL=BL+(2*BH)+2*(2*(2*BH))
16AE B700                           MOV BH,0          ;    =BL+10*BH
16B0 891E1E07                       MOV WORD PTR [BINARY_LED],BX
16B4 C3                             RET
                  ;
                  ; ************  LED  ---> VIEW_TABLE  ***************************
                  ;
16B5 BE1000       LED_VIEW_TBL:     MOV SI,VIEW_CHANNEL  ;
16B8 B700                           MOV BH,0             ;
16BA 8A1E2407                       MOV BL,[CONV_NO]     ;
16BE 8A268507                       MOV AH,[MSB_LED]     ;
16C2 8820                           MOV [SI][BX],AH      ;   Last Channel Memory Ni Ireru
16C4 A08407                         MOV AL,[LSB_LED]     ;
16C7 884008                         MOV [SI][BX+8],AL    ;
16CA C3                             RET
                  ;
                  ; ************  IF KEYIN THEN GOTO BASE_ROUTINE  ****************
                  ;
16CB A08907       IF_KEY_GO_BASE:   MOV AL,[KEY_DATA]
16CE 3C00                           CMP AL,TIMER_OUT_CODE
16D0 7404                           JZ TIMER_ON
16D2 5A                             POP DX
16D3 E93D01                         JMP BASE_ROUTINE
16D6 C3           TIMER_ON:         RET
                  ;
                  ; ************  SCAN Mode Up Channel Search  ********************
                  ;
16D7 E8A4FF       DW_SCAN_SEARCH:   CALL VIEW_TBL_LED
16DA E8B9FF                         CALL LED_BIN_BX
16DD E833FF                         CALL CONV_BIT_AL
16E0 BE8001                         MOV SI,BASIC_AUTHO
16E3 FECB         URI:              DEC BL
16E5 80FB00                         CMP BL,0
16E8 7503                           JNZ URI1
16EA BB6300                         MOV BX,99
16ED 8AE0         URI1:             MOV AH,AL
```

HEWLETT-PACKARD: 8086 Assembler

```
                   SOURCE LINE

16EF 2220                                AND AH,[SI][BX]
16F1 74F0                                JZ URI
16F3 E96200                              JMP UD_CONV_DISP
                        ;
                        ; ************  PCFC Mode Up Channel Search  ********************
                        ;
16F6 E885FF             DW_PCFC_SEARCH:  CALL VIEW_TBL_LED
16F9 E89AFF                              CALL LED_BIN_BX
16FC E814FF                              CALL CONV_BIT_AL
16FF BE0001                              MOV SI,PC_FC_LIST
1702 FECB               UKI:             DEC BL
1704 80FB00                              CMP BL,0
1707 7503                                JNZ UKI1
1709 BB6300                              MOV BX,99
170C 8AE0               UKI1:            MOV AH,AL
170E 2220                                AND AH,[SI][BX]
1710 22A08000                            AND AH,[SI+128][BX]
1714 74EC                                JZ UKI
1716 E93F00                              JMP UD_CONV_DISP
                        ;
                        ; ************  PCFC Mode Up Channel Search  ********************
                        ;
1719 E862FF             UP_PCFC_SEARCH:  CALL VIEW_TBL_LED
171C E877FF                              CALL LED_BIN_BX
171F E8F1FE                              CALL CONV_BIT_AL
1722 BE0001                              MOV SI,PC_FC_LIST
1725 FEC3               UMI:             INC BL
1727 80FB64                              CMP BL,100
172A 7203                                JC UMI1
172C BB0100                              MOV BX,1
172F 8AE0               UMI1:            MOV AH,AL
1731 2220                                AND AH,[SI][BX]
1733 22A08000                            AND AH,[SI+128][BX]
1737 74EC                                JZ UMI
1739 E91C00                              JMP UD_CONV_DISP
                        ;
                        ; ************  SCAN Mode Up Channel Search  ********************
                        ;
173C E83FFF             UP_SCAN_SEARCH:  CALL VIEW_TBL_LED
173F E854FF                              CALL LED_BIN_BX
1742 E8CEFE                              CALL CONV_BIT_AL
1745 BE8001                              MOV SI,BASIC_AUTHO
1748 FEC3               UKA:             INC BL
174A 80FB64                              CMP BL,100
174D 7203                                JC UKA1
174F BB0100                              MOV BX,1
1752 8AE0               UKA1:            MOV AH,AL
1754 2220                                AND AH,[SI][BX]
1756 74F0                                JZ UKA
                        ;
1758 E8CEFE             UD_CONV_DISP:    CALL EVENT_TO_BASIC
175B E80A00                              CALL BINDEC_LED
175E E854FF                              CALL LED_VIEW_TBL
1761 E847FD                              CALL SPU_LED_DISP
1764 E841FB                              CALL GO_CONVERTER
1767 C3                                  RET
                        ;
```

SOURCE LINE

```
1768 B700           BINDEC_LED:      MOV BH,0
176A 80FB0A         HITOMI:          CMP BL,10
176D 7207                            JC MAKO
176F 80EB0A                          SUB BL,10
1772 FEC7                            INC BH
1774 EBF4                            JMP HITOMI
1776 81CB3030       MAKO:            OR BX,3030H
177A 881E8407                        MOV [LSB_LED],BL
177E 883E8507                        MOV [MSB_LED],BH
1782 C3                              RET
                    ; ************   SC/FC/PC  Mode Wo AX ni Set Suru  ****************
1783 E84DFE         SCFCPC_MODE_AX:  CALL SC_MODE_KAI
1786 7404                            JZ SAORI_FCPC
1788 B84353                          MOV AX,ASCII_SC              ; [ SCAN Mode ]
178B C3                              RET
                    ;
178C E82FFE         SAORI_FCPC:      CALL PC_CODE_0_KAI
178F 7504                            JNZ SAORI_PC
                    ;
1791 B84346                          MOV AX,ASCII_FC              ; [ FC Mode ]
1794 C3                              RET
                    ;
1795 B84350         SAORI_PC:        MOV AX,ASCII_PC              ; [ PC Mode ]
1798 C3                              RET
                    ;------------------------------------------------------------------------------------------
                    ;
                    ;                Key Operation
                    ;
                    ;------------------------------------------------------------------------------------------
1799 8A0E8907       KEY_OPERATION:   MOV CL,[KEY_DATA]
179D B700                            MOV BH,0
179F 8A1E2807                        MOV BL,[IC_BYTE]
17A3 02D8                            ADD BL,BL
17A5 BE8003                          MOV SI,JUMP_ADDRESS
17A8 8B00                            MOV AX,[SI][BX]
17AA 3B061C07                        CMP AX,[INIT_POINT]     ; Hagime Wa ON/OFF Key Shika Uketukenai Yo
17AE 7419                            JZ OP_INITIAL
17B0 80F913                          CMP CL,ONOFF_KEY_CODE
17B3 7503                            JNZ OP_NORMAL_KEY
17B5 E97401                          JMP OP_SPU_OFF   ; SPU Wo OFF Surundane
                    ;
17B8 50             OP_NORMAL_KEY:   PUSH AX          ; ON/OFF Key Igai no Operation
17B9 C3                              RET
                    ;
                    ; TOSHINO-OS-TOSHINO-OS-TOSHINO-OS-TOSHINO-OS-TOSHINO-OS-TOSHINO-OS-TOSHINO-OS-TOSHINO-OS-TOSHINO-OS-TOSHI
                    ;
17BA 58             NEXT_CONTINUE:   POP AX
```

HEWLETT-PACKARD: 8086 Assembler

SOURCE LINE

```
17BB B700          NEXT_OS:        MOV BH,0
17BD 8A1E2807                      MOV BL,[IC_BYTE]
17C1 02DB                          ADD BL,BL
17C3 BE8003                        MOV SI,JUMP_ADDRESS
17C6 8900                          MOV [BX][SI],AX
17C8 C3            RETURN_OS:      RET
                   ;-------------------------------------------------------------
                   ;
                   ;               SPU  Initial Off Mode
                   ;
                   ;-----------------------------------------------;
17C9 8A0E8907      OP_INITIAL:     MOV CL,[KEY_DATA]               ;
17CD 80F913                        CMP CL,ONOFF_KEY_CODE           ;  SPU  OFF
17D0 7511                          JNZ MP_100_CK_001               ;     []
17D2 E854FE                        CALL EVENT_TO_BASIC             ;  SPU  ON
17D5 E8BEFC                        CALL SPU_VIEW_DISP              ;
                                                                   ;
17D8 E8CDFA                        CALL GO_CONVERTER               ;
                                                                   ;
17DB E8D6FB        WAKEARI_DE_ON:  CALL SPU_RELAY_ON               ;     !!
                                                                   ;
17DE A11A07                        MOV AX,[BASE_POINT]             ;
17E1 EBD8                          JMP NEXT_OS                     ;
                   ;                                               ;;
                   ; ******************************************** ;;
                   ;                                               ;;
17E3 80F911        MP_100_CK_001:  CMP CL,EVENT_KEY_CODE           ;;
17E6 7524                          JNZ MP_100_CK_002               ;;
17E8 B430                          MOV AH,30H                      ;;
17EA E8ADF8                        CALL CONV_SW_FLAG               ;;
17ED 7402                          JZ CONV_SW_OK_YO                ;;
17EF B431          CONV_SW_NG_YO:  MOV AH,31H                      ;;
17F1 A02A07        CONV_SW_OK_YO:  MOV AL,[DEVICE_NO]              ;;
17F4 0C30                          OR AL,30H                       ;;
17F6 88268507                      MOV [MSB_LED],AH                ;;
17FA A28407                        MOV [LSB_LED],AL                ;;
17FD A02407                        MOV AL,[CONV_NO]                ;;
1800 0C30                          OR AL,30H                       ;;
1802 FEC0                          INC AL                          ;;
1804 A28607                        MOV [HSB_LED],AL                ;;
1807 E84FFD                        CALL SPU_LED_FLAST              ;;
180A EBBC                          JMP RETURN_OS                   ;;
180C 80F917        MP_100_CK_002:  CMP CL,SEND_KEY_CODE            ;;
180F 75B7                          JNZ RETURN_OS                   ;;
                   ;;;;;;;;;;;;;;; CALL SPECIAL_SPU_1               ;;
1811 EBB5                          JMP RETURN_OS                   ;;
                   ;-----------------------------------------------;;
                   ;
                   ;               Base Routine
                   ;
                   ;-------------------------------------------------------------
1813 A08907        BASE_ROUTINE:   MOV AL,[KEY_DATA]
1816 E8EBF8                        CALL KAZUKO
1819 7334                          JNC RANDOM_ACCESS
181B 3C10                          CMP AL,PLUS_KEY_CODE
181D 7503                          JNZ BASE1
181F E92401                        JMP UP_CHANNEL_OP
```

HEWLETT-PACKARD: 8086 Assembler

```
         SOURCE LINE

1822 3C11         BASE1:             CMP AL,EVENT_KEY_CODE
1824 7503                            JNZ BASE2
1826 E94703                          JMP EVENT_KEY_OP
1829 3C12         BASE2:             CMP AL,AUTHO_KEY_CODE
182B 7503                            JNZ BASE3
182D E99A01                          JMP AUTHO_KEY_OP
1830 3C14         BASE3:             CMP AL,MINUS_KEY_CODE
1832 7503                            JNZ BASE4
1834 E9A701                          JMP DOWN_CH_OP
1837 3C15         BASE4:             CMP AL,SCAN_KEY_CODE
1839 7503                            JNZ BASE5
183B E91502                          JMP SCAN_KEY_OP
183E 3C16         BASE5:             CMP AL,CLEAR_KEY_CODE
1840 7503                            JNZ BASE6
1842 E99C02                          JMP CLEAR_KEY_OP
1845 3C17         BASE6:             CMP AL,SEND_KEY_CODE
1847 7503                            JNZ BASE7
1849 E9AB02                          JMP SEND_KEY_OP
184C E98400       BASE7:             JMP NEXT_END     ; Zoooooooooooooooooooooooooooooooooooooo
                  ;-------------------------------------------------------------------
                  ;
                  ;                  Random Access Routine
                  ;
                  ;-------------------------------------------------------------------
184F B700         RANDOM_ACCESS:     MOV BH,0
1851 8A1E2807                        MOV BL,[IC_BYTE]
1855 8BF3                            MOV SI,BX
1857 E86406                          CALL KEY_BUFF_ADRS
185A 8800                            MOV [BX][SI],AL
                  ;
185C A28507                          MOV [MSB_LED],AL
185F B088                            MOV AL,88H                      ; LSB = "_"
1861 A28407                          MOV [LSB_LED],AL
1864 E87EFC                          CALL SPU_LED_DISPL
1867 E8E8FD                          CALL TIMER_5_SEC
                  ;
186A E84DFF                          CALL NEXT_CONTINUE              ; [[[ Key Input Wait ]]]
                  ;
186D A08907                          MOV AL,[KEY_DATA]
1870 E891F8                          CALL KAZUKO
1873 7264                            JC RANDOM_OUT
1875 B700                            MOV BH,0            ;
1877 8A1E2807                        MOV BL,[IC_BYTE]    ;
187B 8BF3                            MOV SI,BX           ;
187D E83E06                          CALL KEY_BUFF_ADRS  ;   AH = [ 1st KEY  ]
1880 8A20                            MOV AH,[SI][BX]     ;   AL = [ KEY_DATA ]
                  ;
1882 A28407                          MOV [LSB_LED],AL    ;  LED Display
1885 88268507                        MOV [MSB_LED],AH    ;
1889 E83206                          CALL KEY_BUFF_ADRS  ;
188C 894004                          MOV [SI][BX+4],AX   ;
188F E819FC                          CALL SPU_LED_DISP   ;
                                                         ;
1892 E801FE                          CALL LED_BIN_BX
1895 E819FD                          CALL AUTHO_KAI
1898 747D                            JZ WT_NO_WT_END
                  ;
```

HEWLETT-PACKARD: 8086 Assembler

SOURCE LINE

```
189A E836FD                             CALL SC_MODE_KAI
189D 752B                               JNZ TUNE_SURU
189F E81CFD                             CALL PC_CODE_0_KAI
18A2 7426                               JZ TUNE_SURU
                 ;
18A4 E8EFFD                             CALL LED_BIN_BX          ; PC Mode Daga PC-Map Ni Aruka
18A7 E869FD                             CALL CONV_BIT_AL
18AA BE0001                             MOV SI,PC_FC_LIST
18AD 2200                               AND AL,[SI][BX]
18AF 7519                               JNZ TUNE_SURU
                 ;
18B1 E87305                             CALL ANGO_INPUT          ;
18B4 E82E06                             CALL ANGO_BIN_DX         ;
18B7 E821FD                             CALL PC_CODE_ADRS        ;
18BA 3B10                               CMP DX,[SI][BX]          ;
18BC 7524                               JNZ MSGERR_WT_END        ; IF  PC_CODE <> Input Code Then PC_Control
18BE E8FD05                             CALL KEY_BUFF_ADRS       ;
18C1 8B4004                             MOV AX,[SI][BX+4]        ;
18C4 A38407                             MOV [LSB_LED].AX         ;
18C7 E8E1FB                             CALL SPU_LED_DISP
                 ;
18CA E85CFD      TUNE_SURU:             CALL EVENT_TO_BASIC
                 ;
18CD E8E5FD                             CALL LED_VIEW_TBL
                 ;
18D0 E81CF9                             CALL RUN_CONVERTER
                 ;
18D3 A11A07      NEXT_END:              MOV AX,[BASE_POINT]
18D6 E9E2FE                             JMP NEXT_OS
                 ;
18D9 3C16        RANDOM_OUT:            CMP AL,CLEAR_KEY_CODE
18DB 7585                               JNZ MSGERR_WT_END
18DD E8B6FB                             CALL SPU_VIEW_DISP
18E0 EBF1                               JMP NEXT_END
                 ;
18E2 B87245      MSGERR_WT_END:         MOV AX,ASCII_ER
18E5 E8BCFB      MSG_WT_END:            CALL SPU_LED_AX
18E8 E85BFD      WAIT_END:              CALL TIMER_1_SEC
                 ;
18EB E8CCFE      IF_TIMEOUT_END:        CALL NEXT_CONTINUE
                 ;
18EE A08907                             MOV AL,[KEY_DATA]
18F1 3C00                               CMP AL,TIMER_OUT_CODE
18F3 7403                               JZ RANDOM_MODORI
18F5 E91BFF                             JMP BASE_ROUTINE
                 ;
18F8 A08007      RANDOM_MODORI:         MOV AL,[NOW_EVENT]                 ;
18FB 84062E07                           TEST AL,[CONV_NO_BIT]              ;
18FF 7505                               JNZ EVENT_MODORI                   ;
1901 E892FB                             CALL SPU_VIEW_DISP                 ;
1904 EBCD                               JMP NEXT_END                       ;
1906 BE3000      EVENT_MODORI:          MOV SI,EVENT_CHANNEL               ;
1909 03362407                           ADD SI,[CONV_NO]                   ;
190D 8B1C                               MOV BX,[SI]                        ;
190F E856FE                             CALL BINDEC_LED                    ;
1912 E896FB                             CALL SPU_LED_DISP                  ;
1915 EBBC                               JMP NEXT_END                       ;
```

HEWLETT-PACKARD: 8086 Assembler

SOURCE LINE

```
                ;
                ;
1917 E82CFD     WT_NO_WT_END:    CALL TIMER_1_SEC
                ;
191A E89DFE                      CALL NEXT_CONTINUE
                ;
191D A08907                      MOV AL,[KEY_DATA]
1920 3C00                        CMP AL,TIMER_OUT_CODE
1922 7403                        JZ MSG_NO_WT_END
1924 E9ECFE                      JMP BASE_ROUTINE
1927 B8DCD4     MSG_NO_WT_END:   MOV AX,ASCII_NO      ; 1 Sec.  "No"
192A EBB9                        JMP MSG_WT_END
                ;
                ;----------------------------------------------------------------------------
                ;
                ;                SPU  OFF Key  Operation
                ;
                ;----------------------------------------------------------------------------
192C E8AAFA     OP_SPU_OFF:      CALL SPU_RELAY_OFF
192F E862FA                      CALL SPU_CLEAR_DISP
1932 E8EEFA                      CALL EVENT_LED_OFF
                ; ************
1935 A11C07                      MOV AX,[INIT_POINT]
1938 E880FE                      CALL NEXT_OS         ; Korewa Tannaru Junbideari Mada OS niwamodorana
193B E8ACF9                      CALL STP_CONVERTER
193E 7203                        JC MAKI
                ;
1940 E842F8                      CALL CONV_P_OFF_CMD
                ;
1943 E982FE     MAKI:            JMP RETURN_OS        ; Modoru Junbiwa Shitearunode Return
                ;----------------------------------------------------------------------------
                ;
                ;                UP Channel Change
                ;
                ;----------------------------------------------------------------------------
1946 E8CAFC     UP_CHANNEL_OP:   CALL CONV_BIT_AL
1949 22060E00                    AND AL,[SCAN_MODE_FLAG]
194D 7433                        JZ UP_PCFC
                ;
194F E8EAFD     UP_SCAN:         CALL UP_SCAN_SEARCH
1952 E8EAFC                      CALL TIMER_05_SEC
                ;
1955 E862FE                      CALL NEXT_CONTINUE
                ;
1958 A08907                      MOV AL,[KEY_DATA]
195B 3C00                        CMP AL,TIMER_OUT_CODE
195D 7558                        JNZ UP_DOWN_EXIT            ; U/D Sugu Hanashita
                ;
195F E814FA     YUKO:            CALL SPU_STATUS_REQ
1962 E8E0FC                      CALL TIMER_UD_SEC
```

HEWLETT-PACKARD: 8086 Assembler

SOURCE LINE

```
                  ;
1965 E852FE                          CALL NEXT_CONTINUE
                  ;
1968 A08907                          MOV AL,[KEY_DATA]
196B 3C1C                            CMP AL,KEY_PUSH_CODE
196D 7548                            JNZ UP_DOWN_EXIT                 ; Key Release or Another Key
196F E8CAFD                          CALL UP_SCAN_SEARCH
1972 E8BEFC                          CALL TIMER_02_SEC
                  ;
1975 E842FE                          CALL NEXT_CONTINUE
                  ;
1978 A08907                          MOV AL,[KEY_DATA]
197B 3C00                            CMP AL,TIMER_OUT_CODE
197D 74E0                            JZ YUKO
197F E93500                          JMP UP_DOWN_EXIT                 ; Another Key

                  ; ************  PC-FC Mode  ***********************************
1982 E862FC       UP_PCFC:           CALL PCFC_MAP_ARUKA
1985 7240                            JC UP_NO_MAP
                  ;
1987 E88FFD                          CALL UP_PCFC_SEARCH
198A E8B2FC                          CALL TIMER_05_SEC
                  ;
198D E82AFE                          CALL NEXT_CONTINUE
                  ;
1990 A08907                          MOV AL,[KEY_DATA]
1993 3C00                            CMP AL,TIMER_OUT_CODE
1995 7520                            JNZ UP_DOWN_EXIT
                  ;
1997 E8DCF9       YASUKO:            CALL SPU_STATUS_REQ
199A E8A8FC                          CALL TIMER_UD_SEC
                  ;
199D E81AFE                          CALL NEXT_CONTINUE
                  ;
19A0 A08907                          MOV AL.[KEY_DATA]
19A3 3C1C                            CMP AL,KEY_PUSH_CODE
19A5 7510                            JNZ UP_DOWN_EXIT
19A7 E86FFD                          CALL UP_PCFC_SEARCH
19AA E886FC                          CALL TIMER_02_SEC
                  ;
19AD E80AFE                          CALL NEXT_CONTINUE
                  ;
19B0 A08907                          MOV AL,[KEY_DATA]
19B3 3C00                            CMP AL,TIMER_OUT_CODE
19B5 74E0                            JZ YASUKO
                  ;
                  ;
19B7 A08907       UP_DOWN_EXIT:      MOV AL,[KEY_DATA]
19BA 3C00                            CMP AL,TIMER_OUT_CODE
19BC 7506                            JNZ MIKA
19BE E8D5FA                          CALL SPU_VIEW_DISP
19C1 E82BF8                          CALL RUN_CONVERTER
19C4 E94CFE       MIKA:              JMP BASE_ROUTINE
                  ;
19C7 E95DFF       UP_NO_MAP:         JMP MSG_NO_WT_END

                  ;------------------------------------------------------------------
```

HEWLETT-PACKARD: 8086 Assembler

SOURCE LINE

```
          ;
          ;                    Adding Channels to the FC/PC List
          ;
          ;------------------------------------------------------------------
19CA E8B1FC    AUTHO_KEY_OP:   CALL VIEW_TBL_LED
19CD E8C6FC                    CALL LED_BIN_BX
19D0 BE0001                    MOV SI,PC_FC_LIST
19D3 E83DFC                    CALL CONV_BIT_AL
19D6 0800                      OR [SI][BX],AL
19D8 B86441                    MOV AX,ASCII_AD
19DB E907FF                    JMP MSG_WT_END
          ;------------------------------------------------------------------
          ;
          ;                    Down ChanneL Change
          ;
          ;------------------------------------------------------------------
19DE E832FC    DOWN_CH_OP:     CALL CONV_BIT_AL
19E1 22060E00                  AND AL,[SCAN_MODE_FLAG]
19E5 7432                      JZ DW_PCFC
          ;
19E7 E8EDFC    DW_SCAN:        CALL DW_SCAN_SEARCH
19EA E852FC                    CALL TIMER_05_SEC
          ;
19ED E8CAFD                    CALL NEXT_CONTINUE
          ;
19F0 A08907                    MOV AL,[KEY_DATA]
19F3 3C00                      CMP AL,TIMER_OUT_CODE
19F5 7520                      JNZ DOWN_EXIT
          ;
19F7 E87CF9    EIKO:           CALL SPU_STATUS_REQ
19FA E848FC                    CALL TIMER_UD_SEC
          ;
19FD E8BAFD                    CALL NEXT_CONTINUE
          ;
1A00 A08907                    MOV AL,[KEY_DATA]
1A03 3C1C                      CMP AL,KEY_PUSH_CODE
1A05 7510                      JNZ DOWN_EXIT
1A07 E8CDFC                    CALL DW_SCAN_SEARCH
1A0A E826FC                    CALL TIMER_02_SEC
          ;
1A0D E8AAFD                    CALL NEXT_CONTINUE
          ;
1A10 A08907                    MOV AL,[KEY_DATA]
1A13 3C00                      CMP AL,TIMER_OUT_CODE
1A15 74E0                      JZ EIKO
1A17 EB9E      DOWN_EXIT:      JMP UP_DOWN_EXIT
          ; ************       PC-FC Mode *****************************************
1A19 E8CBFB    DW_PCFC:        CALL PCFC_MAP_ARUKA
1A1C 7232                      JC DW_NO_MAP
          ;
1A1E E8D5FC                    CALL DW_PCFC_SEARCH
1A21 E81BFC                    CALL TIMER_05_SEC
          ;
1A24 E893FD                    CALL NEXT_CONTINUE
          ;
1A27 A08907                    MOV AL,[KEY_DATA]
1A2A 3C00                      CMP AL,TIMER_OUT_CODE
```

HEWLETT-PACKARD: 8086 Assembler

```
                    SOURCE LINE
1A2C 75E9                                JNZ DOWN_EXIT
                 ;
1A2E E845F9       KEIKO:                 CALL SPU_STATUS_REQ
1A31 E811FC                              CALL TIMER_UD_SEC
                 ;
1A34 E883FD                              CALL NEXT_CONTINUE
                 ;
1A37 A08907                              MOV AL,[KEY_DATA]
1A3A 3C1C                                CMP AL,KEY_PUSH_CODE
1A3C 75D9                                JNZ DOWN_EXIT
1A3E E885FC                              CALL DW_PCFC_SEARCH
1A41 E8EFFB                              CALL TIMER_02_SEC
                 ;
1A44 E873FD                              CALL NEXT_CONTINUE
                 ;
1A47 A08907                              MOV AL,[KEY_DATA]
1A4A 3C00                                CMP AL,TIMER_OUT_CODE
1A4C 74E0                                JZ KEIKO
1A4E EBC7                                JMP DOWN_EXIT
                 ;
1A50 E9D4FE       DW_NO_MAP:             JMP MSG_NO_WT_END
                 ;---------------------------------------------------------------------------
                 ;
                 ;                       SCAN  Key Operation
                 ;
                 ;---------------------------------------------------------------------------
1A53 E82DFD       SCAN_KEY_OP:           CALL SCFCPC_MODE_AX
1A56 E84BFA                              CALL SPU_LED_AX
1A59 E8F6FB                              CALL TIMER_5_SEC
                 ;
1A5C E85BFD                              CALL NEXT_CONTINUE
                 ;
1A5F A08907                              MOV AL,[KEY_DATA]
1A62 3C00                                CMP AL,TIMER_OUT_CODE
1A64 7503                                JNZ SCAN_AFTER
1A66 E98FFE                              JMP RANDOM_MODORI
                 ;
1A69 3C15         SCAN_AFTER:            CMP AL,SCAN_KEY_CODE
1A6B 7539                                JNZ SCAN_ANOTHER
                 ; **************************************************************
1A6D E84EFB       SCAN_SCAN:             CALL PC_CODE_0_KAI
1A70 7410                                JZ SC_FC_PC_XCHG
                 ;
1A72 E88203                              CALL ANGO_INPUT
1A75 E86D04                              CALL ANGO_BIN_DX
1A78 E860FB                              CALL PC_CODE_ADRS
1A7B 3B10                                CMP DX,[SI][BX]
1A7D 7403                                JZ SC_FC_PC_XCHG       ; IF  PC_CODE <> Input Code Then PC_Error
                 ;
1A7F E960FE                              JMP MSGERR_WT_END
                 ;
```

SOURCE LINE

```
1A82 E88EFB         SC_FC_PC_XCHG:  CALL CONV_BIT_AL
1A85 30060E00                       XOR [SCAN_MODE_FLAG],AL
1A89 22060E00                       AND AL,[SCAN_MODE_FLAG]
1A8D 7406                           JZ EMI_TO_FCPC
1A8F B84353         EMI_TO_SCAN:    MOV AX,ASCII_SC
1A92 E950FE                         JMP MSG_WT_END
1A95 E826FB         EMI_TO_FCPC:    CALL PC_CODE_0_KAI
1A98 7506                           JNZ EMI_TO_PC
1A9A B84346         EMI_TO_FC:      MOV AX,ASCII_FC
1A9D E945FE                         JMP MSG_WT_END
1AA0 B84350         EMI_TO_PC:      MOV AX,ASCII_PC
1AA3 E93FFE                         JMP MSG_WT_END
                    ;
                    ;
                    ;
1AA6 3C12           SCAN_ANOTHER:   CMP AL,AUTHO_KEY_CODE
1AA8 7403                           JZ PC_CODE_XCHG
1AAA E966FD                         JMP BASE_ROUTINE
                    ;
                    ;               IF PC_CODE = 0 THEN "NEW" ELSE ANSHO-KEY-IN
                    ;
1AAD E80EFB         PC_CODE_XCHG:   CALL PC_CODE_0_KAI
1AB0 740D                           JZ NEW_PC_CODE
                    ;
1AB2 E87203                         CALL ANGO_INPUT
1AB5 E82D04                         CALL ANGO_BIN_DX
1AB8 E820FB                         CALL PC_CODE_ADRS
1ABB 3B10                           CMP DX,[SI][BX]
1ABD 751F                           JNZ PC_CODE_ERR        ; IF  PC_CODE <> Input Code Then PC_Erro
                    ;
1ABF E8CE02         NEW_PC_CODE:    CALL ANGO_TOUROKU
1AC2 E87AFB                         CALL TIMEP_05_SEC
                    ;
1AC5 E8F2FC                         CALL NEXT_CONTINUE
                    ;
1AC8 E85304                         CALL ANGO_DISPLAY
1ACB 7303                           JNC NEW_PC_SET
1ACD E912FE                         JMP MSGERR_WT_END
                    ;
1AD0 E81204         NEW_PC_SET:     CALL ANGO_BIN_DX
1AD3 E805FB                         CALL PC_CODE_ADRS
1AD6 8910                           MOV [SI][BX],DX
                    ;
1AD8 B85541                         MOV AX,ASCII_AU
1ADB E907FE                         JMP MSG_WT_END
                    ;
                    ;
1ADE E901FE         PC_CODE_ERR:    JMP MSGERR_WT_END
                    ;-----------------------------------------------------------------------------
                    ;
                    ;               Deleting Channels from the FC/PC List
                    ;
                    ;-----------------------------------------------------------------------------
1AE1 E89AFB         CLEAR_KEY_OP:   CALL VIEW_TBL_LED
1AE4 E8AFFB                         CALL LED_BIN_BX
1AE7 BE0001                         MOV SI,PC_FC_LIST
1AEA E826FB                         CALL CONV_BIT_AL
```

HEWLETT-PACKARD: 8086 Assembler

SOURCE LINE

```
1AED 34FF                          XOR AL,0FFH
1AEF 2000                          AND [SI][BX],AL
                  ;
1AF1 B84564                        MOV AX,ASCII_DE
1AF4 E9EEFD                        JMP MSG_WT_END
                  ;---------------------------------------------------
                  ;
                  ;                Send Key Function
                  ;
                  ;---------------------------------------------------
1AF7 B84553       SEND_KEY_OP:     MOV AX,ASCII_SE
1AFA E8A7F9                        CALL SPU_LED_AX
                  ;
1AFD E813FB                        CALL CONV_BIT_AL
1B00 22063008                      AND AL,[SEND_ENABLE]
1B04 7503                          JNZ SEND_KYOKA
1B06 E90EFE                        JMP WT_NO_WT_END
                  ;
1B09 E846FB       SEND_KYOKA:      CALL TIMER_5_SEC
                  ;
1B0C E8ABFC                        CALL NEXT_CONTINUE
                  ;
1B0F A08907                        MOV AL,[KEY_DATA]
1B12 E8EFF5                        CALL KAZUKO
1B15 7303                          JNC SETUKO
1B17 E9BFFD                        JMP RANDOM_OUT
1B1A A28407       SETUKO:          MOV [LSB_LED],AL
1B1D 8A1E3308                      MOV BL,[SEND_INDEX]
1B21 80FB80                        CMP BL,SEND_MAX
1B24 7203                          JC TAMIKO
1B26 E9EEFD       TAMI:            JMP WT_NO_WT_END
1B29 B420         TAMIKO:          MOV AH,20H
1B2B 88268507                      MOV [MSB_LED],AH
1B2F E88C03                        CALL KEY_BUFF_ADRS
1B32 A08907                        MOV AL,[KEY_DATA]
1B35 8800                          MOV [SI][BX],AL
1B37 E8ABF9                        CALL SPU_LED_DISFL
1B3A E815FB                        CALL TIMER_5_SEC
                  ;
1B3D E87AFC                        CALL NEXT_CONTINUE
                  ;
1B40 A08907                        MOV AL,[KEY_DATA]
1B43 3C16                          CMP AL,CLEAR_KEY_CODE
1B45 74B0                          JZ SEND_KEY_OP
1B47 3C12                          CMP AL,AUTHO_KEY_CODE
1B49 75DB                          JNZ TAMI
                  ;
1B4B E87003                        CALL KEY_BUFF_ADRS
1B4E 8A00                          MOV AL,[SI][BX]
1B50 BE3508                        MOV SI,SEND_DATA_BUFF
1B53 B700                          MOV BH,0
1B55 8A1E3308                      MOV BL,[SEND_INDEX]
1B59 8A262807                      MOV AH,[IC_BYTE]
1B5D 886001                        MOV [SI][BX+1],AH
1B60 884002                        MOV [SI][BX+2],AL
1B63 80C302                        ADD BL,2
1B66 881E3308                      MOV [SEND_INDEX],BL
```

HEWLETT-PACKARD: 8086 Assembler

SOURCE LINE

```
                  ;
1B6A B85541                         MOV AX,ASCII_AU
1B6D E975FD                         JMP MSG_WT_END

                  ;---------------------------------------------------------
                  ;
                  ;                 Event Key Operation
                  ;
                  ;---------------------------------------------------------
1B70 E84BFA       EVENT_KEY_OP:     CALL PC_CODE_0_KAI
1B73 7410                           JZ EV_PC_OK_YO
                  ;
1B75 E8AF02                         CALL ANGO_INPUT        ; PC Code Input
1B78 E86A03                         CALL ANGO_BIN_DX
1B7B E85DFA                         CALL PC_CODE_ADRS
1B7E 3B10                           CMP DX,[SI][BX]
1B80 7403                           JZ EV_PC_OK_YO
1B82 E95DFD       EVENT_ERR:        JMP MSGERR_WT_END
                  ;
1B85              EV_PC_OK_YO:                             ; Event Enable ?
1B85 B87250                         MOV AX,ASCII_PR
1B88 E819F9                         CALL SPU_LED_AX
1B8B E8B8FA                         CALL TIMER_1_SEC
                  ;
1B8E E829FC                         CALL NEXT_CONTINUE
                  ;
1B91 E86601                         CALL YOYAKU_SEARCH
1B94 7203                           JC Y_HAJIME
1B96 E9C600                         JMP FORCED_EVENT
                  ;
1B99 B87250       Y_HAJIME:         MOV AX,ASCII_PR
1B9C E805F9                         CALL SPU_LED_AX
1B9F E8B6FA                         CALL TIMER_10_SEC
                  ;
1BA2 E815FC                         CALL NEXT_CONTINUE
                  ;
1BA5 A08907                         MOV AL,[KEY_DATA]
1BA8 E91100                         JMP EVENT_1ST_KEY
                  ;
1BAB E8AAFA       EVENT_KEY_WAIT:   CALL TIMER_10_SEC
                  ;
1BAE E809FC                         CALL NEXT_CONTINUE
                  ;
1BB1 A08907                         MOV AL,[KEY_DATA]
1BB4 3C12                           CMP AL,AUTHO_KEY_CODE
1BB6 742D                           JZ EVENT_AUTHO
1BB8 3C16                           CMP AL,CLEAR_KEY_CODE
1BBA 7432                           JZ EVENT_CLEAR
1BBC 3C10         EVENT_1ST_KEY:    CMP AL,PLUS_KEY_CODE
1BBE 7441                           JZ EVENT_PLUS
1BC0 3C14                           CMP AL,MINUS_KEY_CODE
1BC2 7443                           JZ EVENT_MINUS
1BC4 3C00                           CMP AL,TIMER_OUT_CODE
1BC6 740B                           JZ EVENT_T_OUT
1BC8 3C11                           CMP AL,EVENT_KEY_CODE
1BCA 740A                           JZ EVENT_EVENT
1BCC E835F5                         CALL KAZUKO
```

HEWLETT-PACKARD: 8086 Assembler

```
                        SOURCE LINE

1BCF 733E                                  JNC RANDOM_YOYAKU
1BD1 EBAF                                  JMP EVENT_ERR
                       ;
1BD3 E922FD            EVENT_T_OUT:        JMP RANDOM_MODORI
                       ;
1BD6 E850FA            EVENT_EVENT:        CALL EVENT_TO_BASIC
1BD9 E8A2FA                                CALL VIEW_TBL_LED
1BDC E810F6                                CALL RUN_CONVERTER
1BDF E8C9F8                                CALL SPU_LED_DISP
1BE2 E9EEFC                                JMP NEXT_END
                       ;
1BE5 E8B600            EVENT_AUTHO:        CALL KEIYAKU                  ; Pay Channel Shinki Keiyaku
1BE8 B85541                                MOV AX,ASCII_AU
1BEB E90800                                JMP EVENT_MSG
                       ;
1BEE E8CB00            EVENT_CLEAR:        CALL KAIYAKU
1BF1 7319                                  JNC EVENT_NO
1BF3 B84564                                MOV AX,ASCII_DE
1BF6 E8ABF8            EVENT_MSG:          CALL SPU_LED_AX
1BF9 E84AFA                                CALL TIMER_1_SEC
                       ;
1BFC E8BBFB                                CALL NEXT_CONTINUE
                       ;
1BFF EB94                                  JMP EV_PC_OK_YO
                       ;
1C01 E80A01            EVENT_PLUS:         CALL UP_YOYAKU
1C04 E90300                                JMP EVENT_UD
1C07 E84E01            EVENT_MINUS:        CALL DOWN_YOYAKU
1C0A 7353              EVENT_UD:           JNC FORCED_EVENT
1C0C E918FD            EVENT_NO:           JMP MSG_NO_WT_END
                       ;
1C0F B700              RANDOM_YOYAKU:      MOV BH,0
1C11 8A1E2807                              MOV BL,[IC_BYTE]
1C15 8BF3                                  MOV SI,BX
1C17 E8A402                                CALL KEY_BUFF_ADRS
1C1A 8800                                  MOV [BX][SI],AL
                       ;
1C1C A28507                                MOV [MSB_LED],AL
1C1F B088                                  MOV AL,88H                        ; LSB = "_"
1C21 A28407                                MOV [LSB_LED],AL
1C24 E8F8F8                                CALL SPU_LED_FLASH
1C27 E828FA                                CALL TIMER_5_SEC
                       ;
1C2A E88DFB                                CALL NEXT_CONTINUE                ; [[[ Key Input Wait ]]]
                       ;
1C2D A08907                                MOV AL,[KEY_DATA]
1C30 E8D1F4                                CALL KAZUKO
1C33 7249                                  JC IRG_YOYAKU
1C35 B700                                  MOV BH,0              ;
1C37 8A1E2807                              MOV BL,[IC_BYTE]      ;
1C3B 8BF3                                  MOV SI,BX
1C3D E87E02                                CALL KEY_BUFF_ADRS    ;    AH = [ 1st KEY  ]
1C40 8A20                                  MOV AH,[SI][BX]       ;    AL = [ KEY_DATA ]
                       ;
1C42 A28407                                MOV [LSB_LED],AL      ;   LED Display
1C45 88268507                              MOV [MSB_LED],AH      ;
1C49 E87202                                CALL KEY_BUFF_ADRS    ;
```

HEWLETT-PACKARD: 8086 Assembler

SOURCE LINE

```
1C4C 894004                             MOV [SI][BX+4],AX     ;
1C4F E8CDF8                             CALL SPU_LED_FLASH    ;
1C52 E841FA                             CALL LED_BIN_BX
                  ;
1C55 8B362807                           MOV SI,[IC_BYTE]
1C59 81C6000A                           ADD SI,HELP
1C5D 881C                               MOV [SI],BL
                  ;
1C5F E83000       FORCED_EVENT:         CALL EV_FREQ_ADRS
1C62 833C00                             CMP WORD PTR [SI],0
1C65 7417                               JZ IRG_YOYAKU          ; Housou Sareteimasen
1C67 833C01                             CMP WORD PTR [SI],1    ;
1C6A 740C                               JZ EVENT_RT1
                  ;
1C6C E86D00                             CALL PAY_CH_MIRU       ; [[[ Pay Channel Tuning ]]]
1C6F E839F8                             CALL SPU_LED_DISP      ; [[[ Pay ]]]
1C72 E80E01                             CALL EVENT_BIN_TBL
1C75 E933FF                             JMP EVENT_KEY_WAIT
                  ;
1C78 E8A4F8       EVENT_RT1:            CALL SPU_LED_FLASH
1C7B E92DFF                             JMP EVENT_KEY_WAIT
                  ;
1C7E E996FC       IRG_YOYAKU:           JMP WT_NO_WT_END
                  ;
                  ; ************          SI = ES_EVENT_TIMER + [CONV_NO] * 128 + Channel
                  ;
1C81 8B362407     ES_PAY_STATUS:        MOV SI,[CONV_NO]
1C85 B107                               MOV CL,7
1C87 D3C6                               ROL SI,CL
1C89 81C60006                           ADD SI,ES_EVENT_TIMER            ; Timer Address
1C8D 03361E07                           ADD SI,[BINARY_LED]              ; Channel
1C91 C3                                 RET
                  ;
1C92 BE0009       EV_FREQ_ADRS:         MOV SI,EVENT_NO_FREQ
1C95 03361E07                           ADD SI,[BINARY_LED]
1C99 03361E07                           ADD SI,[BINARY_LED]
1C9D C3                                 RET
                  ;
1C9E 8B362807     KEIYAKU:              MOV SI,[IC_BYTE]
1CA2 81C6000A                           ADD SI,HELP
1CA6 8A1C                               MOV BL,[SI]
1CA8 B700                               MOV BH,0
1CAA 891E1E07                           MOV [BINARY_LED],BX
1CAE E8D0FF                             CALL ES_PAY_STATUS
1CB1 268024F8                           AND BYTE PTR ES:[SI],0F8H
1CB5 A02A07                             MOV AL,[DEVICE_NO]
1CB8 260804                             OR ES:[SI],AL
1CBB C3                                 RET
1CBC 8B362807     KAIYAKU:              MOV SI,[IC_BYTE]
1CC0 81C6000A                           ADD SI,HELP
1CC4 8A1C                               MOV BL,[SI]
1CC6 B700                               MOV BH,0
1CC8 891E1E07                           MOV [BINARY_LED],BX
1CCC E8B2FF                             CALL ES_PAY_STATUS
1CCF 26803CF8                           CMP BYTE PTR ES:[SI],0F8H
1CD3 7306                               JNC KAIYAKU_ERR
1CD5 268024F8                           AND BYTE PTR ES:[SI],0F8H
```

HEWLETT-PACKARD: 8086 Assembler

SOURCE LINE

```
1CD9 F9                                    STC
1CDA C3                                    RET
1CDB C3              KAIYAKU_ERR:          RET
                     ;
1CDC E8A2FF          PAY_CH_MIRU:          CALL ES_PAY_STATUS
1CDF B480                                  MOV AH,80H
1CE1 26803CF8                              CMP BYTE PTR ES:[SI],0F8H
1CE5 7202                                  JC HATU
1CE7 B4C0                                  MOV AH,0C0H
                     ;
1CE9 0A262E07        HATU:                 OR AH,[CONV_NO_BIT]
1CED 802680073F                            AND BYTE PTR [NOW_EVENT],3FH
1CF2 08268007                              OR [NOW_EVENT],AH
1CF6 E8F6F4                                CALL RUN_CONVERTER
1CF9 C3                                    RET
                     ;
1CFA BE000A          YOYAKU_SEARCH:        MOV SI,HELP
1CFD 03362807                              ADD SI,[IC_BYTE]
1D01 B700                                  MOV BH,0
1D03 8A1C                                  MOV BL,[SI]
1D05 83FB00                                CMP BX,0
1D08 740F                                  JZ UP_WAKEARI
1D0A 4B                                    DEC BX
1D0B E90B00                                JMP UP_WAKEARI
                     ;
1D0E BE000A          UP_YOYAKU:            MOV SI,HELP
1D11 03362807                              ADD SI,[IC_BYTE]
1D15 B700                                  MOV BH,0
1D17 8A1C                                  MOV BL,[SI]
1D19 8B362407        UP_WAKEARI:           MOV SI,[CONV_NO]
1D1D B107                                  MOV CL,7
1D1F D3C6                                  ROL SI,CL
1D21 81C60006                              ADD SI,ES_EVENT_TIMER
1D25 B164                                  MOV CL,100
1D27 43              UYL:                  INC BX
1D28 83FB64                                CMP BX,100
1D2B 7203                                  JC UYJ
1D2D BB0100                                MOV BX,1
1D30 26F60007        UYJ:                  TEST BYTE PTR ES:[SI][BX],7
1D34 7506                                  JNZ UD_Y_RET
1D36 FEC9                                  DEC CL
1D38 75ED                                  JNZ UYL
1D3A F9                                    STC
1D3B C3                                    RET
                     ;
1D3C 891E1E07        UD_Y_RET:             MOV [BINARY_LED],BX
1D40 E825FA                                CALL BINDEC_LED
                     ;
1D43 BE3000                                MOV SI,EVENT_CHANNEL
1D46 03362407                              ADD SI,[CONV_NO]
1D4A 881C                                  MOV [SI],BL
                     ;
1D4C 8B362807                              MOV SI,[IC_BYTE]
1D50 81C6000A                              ADD SI,HELP
1D54 881C                                  MOV [SI],BL
1D56 F8                                    CLC
1D57 C3                                    RET
```

HEWLETT-PACKARD: 8086 Assembler

SOURCE LINE

```
                  ;

1D58 BE000A       DOWN_YOYAKU:    MOV SI,HELP
1D5B 03362807                     ADD SI,[IC_BYTE]
1D5F 8A1C                         MOV BL,[SI]
1D61 B700                         MOV BH,0
1D63 8B362407                     MOV SI,[CONV_NO]
1D67 B107                         MOV CL,7
1D69 D3C6                         ROL SI,CL
1D6B 81C60006                     ADD SI,ES_EVENT_TIMER
1D6F B164                         MOV CL,100
1D71 4B           DYL:            DEC BX
1D72 7503                         JNZ DYJ
1D74 BB6300                       MOV BX,99
1D77 26F60007     DYJ:            TEST BYTE PTR ES:[SI][BX],7
1D7B 75BF                         JNZ UD_Y_RET
1D7D FEC9                         DEC CL
1D7F 75F0                         JNZ DYL
1D81 F9                           STC
1D82 C3                           RET
                  ;
1D83 A01E07       EVENT_BIN_TBL:  MOV AL,[BINARY_LED]
1D86 BE3000                       MOV SI,EVENT_CHANNEL
1D89 03362407                     ADD SI,[CONV_NO]
1D8D 8804                         MOV [SI],AL
1D8F C3                           RET
                  ;
                  ;
                  ;-------------------------------------------------
                  ;
                  ;               Another  Subroutines
                  ;
                  ;-------------------------------------------------
                  ;

1D90 58           ANGO_TOUROKU:   POP AX
1D91 BE0004                       MOV SI,NEXT_GO_ADRS
1D94 B700                         MOV BH,0
1D96 8A1E2807                     MOV BL,[IC_BYTE]
1D9A 02DB                         ADD BL,BL
1D9C 8900                         MOV [SI][BX],AX
                  ;
1D9E B89CD4       ANGO_1_10:      MOV AX,ASCII_NU
1DA1 E800F7                       CALL SPU_LED_AX
1DA4 E8B1F8                       CALL TIMER_10_SEC
                  ;
1DA7 E810FA                       CALL NEXT_CONTINUE
                  ;
1DAA E8FC00                       CALL ANGO_SUB
1DAD 7307                         JNC ANGO_1_20
1DAF 3C16                         CMP AL,CLEAR_KEY_CODE
1DB1 7571                         JNZ ANGO_ERR
1DB3 E942FB                       JMP RANDOM_MODORI
1DB6 8800         ANGO_1_20:      MOV [SI][BX],AL
1DB8 8A00         ANGO_1_21:      MOV AL,[SI][BX]
1DBA A28407                       MOV [LSB_LED],AL
1DBD B420                         MOV AH,20H
```

HEWLETT-PACKARD: 8086 Assembler

SOURCE LINE

```
1DBF E80E01                     CALL ANGO_SUB1
           ;
1DC2 E8F5F9                     CALL NEXT_CONTINUE
           ;
1DC5 E8E100                     CALL ANGO_SUB
1DC8 7306                       JNC ANGO_1_30
1DCA 3C16                       CMP AL,CLEAR_KEY_CODE
1DCC 7556                       JNZ ANGO_ERR
1DCE EBCE                       JMP ANGO_1_10
1DD0 884001      ANGO_1_30:     MOV [SI][BX+1],AL
1DD3 8A4001      ANGO_1_31:     MOV AL,[SI][BX+1]
1DD6 A28407                     MOV [LSB_LED],AL
1DD9 8A20                       MOV AH,[SI][BX]
1DDB E8F200                     CALL ANGO_SUB1
           ;
1DDE E8D9F9                     CALL NEXT_CONTINUE
           ;
1DE1 E8C500                     CALL ANGO_SUB
1DE4 7306                       JNC ANGO_1_40
1DE6 3C16                       CMP AL,CLEAR_KEY_CODE
1DE8 75E9                       JNZ ANGO_1_31
1DEA EBCC                       JMP ANGO_1_21
1DEC 884002      ANGO_1_40:     MOV [SI][BX+2],AL
1DEF 8A4002      ANGO_1_41:     MOV AL,[SI][BX+2]
1DF2 A28407                     MOV [LSB_LED],AL
1DF5 8A6001                     MOV AH,[SI][BX+1]
1DF8 E8D500                     CALL ANGO_SUB1
           ;
1DFB E8BCF9                     CALL NEXT_CONTINUE
           ;
1DFE E8A800                     CALL ANGO_SUB
1E01 7306                       JNC ANGO_1_RET
1E03 3C16                       CMP AL,CLEAR_KEY_CODE
1E05 751D                       JNZ ANGO_ERR
1E07 EBCA                       JMP ANGO_1_31
1E09 884003      ANGO_1_RET:    MOV [SI][BX+3],AL
1E0C A28407                     MOV [LSB_LED].AL
1E0F 8A6002                     MOV AH,[SI][BX+2]
1E12 E8BB00                     CALL ANGO_SUB1
           ;
1E15 BE0004                     MOV SI.NEXT_GO_ADRS
1E18 B700                       MOV BH,0
1E1A 8A1E2807                   MOV BL,[IC_BYTE]
1E1E 02DB                       ADD BL,BL
1E20 8B00                       MOV AX,[SI][BX]
1E22 50                         PUSH AX
1E23 C3                         RET
           ;
           ;
           ;
1E24 E9BBFA      ANGO_ERR:      JMP MSGERR_WT_END
           ;
           ;
           ;
1E27 58          ANGO_INPUT:    POP AX
1E28 BE0004                     MOV SI,NEXT_GO_ADRS
1E2B B700                       MOV BH,0
```

HEWLETT-PACKARD: 8086 Assembler

SOURCE LINE

```
1E2D 8A1E2807                     MOV BL,[IC_BYTE]
1E31 02DB                         ADD BL,BL
1E33 8900                         MOV [SI][BX],AX
                ;
1E35 B8B6B6     ANGO_2_10:        MOV AX,0B6B6H
1E38 E869F6                       CALL SPU_LED_AX
1E3B E81AF8                       CALL TIMER_10_SEC
                ;
1E3E E879F9                       CALL NEXT_CONTINUE
                ;
1E41 E86500     ANGO_2_11:        CALL ANGO_SUB
1E44 7307                         JNC ANGO_2_20
1E46 3C16                         CMP AL,CLEAR_KEY_CODE
1E48 75DA                         JNZ ANGO_ERR
1E4A E9ABFA                       JMP RANDOM_MODORI
1E4D 8800       ANGO_2_20:        MOV [SI][BX],AL
1E4F B8B686     ANGO_2_21:        MOV AX,86B6H
1E52 E88900                       CALL ANGO_SUB2
                ;
1E55 E862F9                       CALL NEXT_CONTINUE
                ;
1E58 E84E00                       CALL ANGO_SUB
1E5B 7306                         JNC ANGO_2_30
1E5D 3C16                         CMP AL,CLEAR_KEY_CODE
1E5F 75C3                         JNZ ANGO_ERR
1E61 EBD2                         JMP ANGO_2_10
1E63 884001     ANGO_2_30:        MOV [SI][BX+1],AL
1E66 B8B620     ANGO_2_31:        MOV AX,20B6H
1E69 E87200                       CALL ANGO_SUB2
                ;
1E6C E84BF9                       CALL NEXT_CONTINUE
                ;
1E6F E83700                       CALL ANGO_SUB
1E72 7306                         JNC ANGO_2_40
1E74 3C16                         CMP AL,CLEAR_KEY_CODE
1E76 75AC                         JNZ ANGO_ERR
1E78 EBD5                         JMP ANGO_2_21
1E7A 884002     ANGO_2_40:        MOV [SI][BX+2],AL
1E7D B88620     ANGO_2_41:        MOV AX,2086H
1E80 E85B00                       CALL ANGO_SUB2
                ;
1E83 E834F9                       CALL NEXT_CONTINUE
                ;
1E86 E82000                       CALL ANGO_SUB
1E89 7306                         JNC ANGO_2_RET
1E8B 3C16                         CMP AL,CLEAR_KEY_CODE
1E8D 7595                         JNZ ANGO_EPP
1E8F EBD5                         JMP ANGO_2_31
1E91 884003     ANGO_2_RET:       MOV [SI][BX+3].AL
1E94 B82020                       MOV AX,2020H
1E97 E84400                       CALL ANGO_SUB2
                ;
1E9A BE0004                       MOV SI,NEXT_GO_ADRS
1E9D B700                         MOV BH,0
1E9F 8A1E2807                     MOV BL,[IC_BYTE]
1EA3 02DB                         ADD BL,BL
1EA5 8B00                         MOV AX,[SI][BX]
```

HEWLETT-PACKARD: 8086 Assembler

SOURCE LINE

```
1EA7 50                                PUSH AX
1EA8 C3                                RET
                   ;
                   ;
                   ;
1EA9 A08907        ANGO_SUB:           MOV AL,[KEY_DATA]
1EAC E855F2                            CALL KAZUKO
1EAF 730D                              JNC KEY_BUFF_ADRS
1EB1 3C00                              CMP AL,TIMER_OUT_CODE
1EB3 7504                              JNZ KAORU
1EB5 58                                POP AX
1EB6 E93FFA                            JMP RANDOM_MODORI
1EB9 E80200        KAORU:              CALL KEY_BUFF_ADRS
1EBC F9                                STC
1EBD C3                                RET
                   ;
1EBE BE0010        KEY_BUFF_ADRS:      MOV SI,KEY_DATA_STACK
1EC1 B700                              MOV BH,0
1EC3 8A1E2807                          MOV BL,[IC_BYTE]
1EC7 03DB                              ADD BX,BX
1EC9 03DB                              ADD BX,BX
1ECB 03DB                              ADD BX,BX
1ECD 03DB                              ADD BX,BX
1ECF C3                                RET
                   ;
1ED0 88268507      ANGO_SUB1:          MOV [MSB_LED],AH
1ED4 E8BDF4                            CALL SPU_CLEAR_DISP
1ED7 E8D1F5                            CALL SPU_LED_DISP
1EDA E87BF7                            CALL TIMER_10_SEC
1EDD C3                                RET
                   ;
1EDE E8C3F5        ANGO_SUB2:          CALL SPU_LED_AX
1EE1 E874F7                            CALL TIMER_10_SEC
1EE4 C3                                RET
                   ;
1EE5 E8D6FF        ANGO_BIN_DX:        CALL KEY_BUFF_ADRS
1EE8 B500                              MOV CH,0
1EEA 8AF5                              MOV DH,CH
1EEC 8A10                              MOV DL,[SI][BX]          ; DX = #1
1EEE 80E20F                            AND DL,0FH
1EF1 E81F00                            CALL MULTI_10_DX         ; DX = #1*10
1EF4 8A4801                            MOV CL,[SI+1][BX]
1EF7 80E10F                            AND CL,0FH
1EFA 03D1                              ADD DX,CX                ; DX = #1*10+#2
1EFC E81400                            CALL MULTI_10_DX         ; DX =(#1*10+#2)*10
1EFF 8A4802                            MOV CL,[SI+2][BX]
1F02 80E10F                            AND CL,0FH
1F05 03D1                              ADD DX,CX                ; DX = (#1*10+#2)*10+#3
1F07 E80900                            CALL MULTI_10_DX         ; DX =((#1*10+#2)*10+#3)*10
1F0A 8A4803                            MOV CL,[SI+3][BX]
1F0D 80E10F                            AND CL,0FH
1F10 03D1                              ADD DX,CX                ; DX =((#1*10+#2)*10+#3)*10+#4
1F12 C3                                RET
                   ;
1F13 03D2          MULTI_10_DX:        ADD DX,DX      ; *2
1F15 8BC2                              MOV AX,DX
1F17 03C0                              ADD AX,AX      ; *2*2    = *4
```

```
                    SOURCE LINE

1F19 03C0                                   ADD AX,AX       ; *2*2*2  = *8
1F1B 03D0                                   ADD DX,AX       ; *2 + *8 = *10
1F1D C3                                     RET
                    ;
                    ; *************   Key In Shita Angou Wo Displav Suru  *************
                    ;
1F1E 58             ANGO_DISPLAY:           POP AX
1F1F BE0004                                 MOV SI,NEXT_GO_ADRS
1F22 B700                                   MOV BH,0
1F24 8A1E2807                               MOV BL,[IC_BYTE]
1F28 02DB                                   ADD BL,BL
1F2A 8900                                   MOV [SI][BX],AX
                    ;
1F2C E88FFF                                 CALL KEY_BUFF_ADRS
1F2F C6400700                               MOV BYTE PTR [SI][BX+7],0
                    ;
1F33 B85541         ANGO_AU_WT_LP:          MOV AX,ASCII_AU
1F36 E86BF5                                 CALL SPU_LED_AX
1F39 E80AF7                                 CALL TIMER_1_SEC
                    ;
1F3C E87BF8                                 CALL NEXT_CONTINUE
                    ;
1F3F A08907                                 MOV AL,[KEY_DATA]
1F42 3C12                                   CMP AL,AUTHO_KEY_CODE
1F44 7476                                   JZ ANGO_NINTEI
1F46 3C16                                   CMP AL,CLEAR_KEY_CODE
1F48 7462                                   JZ ANGO_NO_AUTHO
1F4A E871FF                                 CALL KEY_BUFF_ADRS
1F4D FE4007                                 INC BYTE PTR [SI][BX+7]
1F50 B020                                   MOV AL,20H
1F52 A28507                                 MOV [MSB_LED].AL
1F55 8A00                                   MOV AL,[SI][BX]
1F57 A28407                                 MOV [LSB_LED],AL
1F5A E84EF5                                 CALL SPU_LED_DISP
1F5D E8E6F6         ANGO_DISP_LP:           CALL TIMER_1_SEC
                    ;
1F60 E857F8                                 CALL NEXT_CONTINUE
                    ;
1F63 A08907                                 MOV AL.[KEY_DATA]
1F66 3C12                                   CMP AL,AUTHO_KEY_CODE
1F68 7452                                   JZ ANGO_NINTEI
1F6A 3C16                                   CMP AL,CLEAR_KEY_CODE
1F6C 743E                                   JZ ANGO_NO_AUTHO
1F6E E84DFF                                 CALL KEY_BUFF_ADRS
1F71 8A6007                                 MOV AH,[SI][BX+7]
1F74 80E403                                 AND AH,3
1F77 0ADC                                   OR BL,AH
1F79 8A40FF                                 MOV AL,[SI][BX-1]
1F7C A28507                                 MOV [MSB_LED],AL
1F7F 8A00                                   MOV AL,[SI][BX]
1F81 A28407                                 MOV [LSB_LED],AL
1F84 E80DF4                                 CALL SPU_CLEAR_DISP
1F87 E821F5                                 CALL SPU_LED_DISP
                    ;
1F8A E831FF                                 CALL KEY_BUFF_ADRS
1F8D FE4007                                 INC BYTE PTR [SI][BX+7]
1F90 8A6007                                 MOV AH,[SI][BX+7]
```

```
                    SOURCE LINE

1F93 80FC96                          CMP AH,150
1F96 7314                            JNC ANGO_NO_AUTHO
1F98 80E403                          AND AH,3
1F9B 75C0                            JNZ ANGO_DISP_LP
1F9D E8A6F6          AUGO_AU_RETRY:  CALL TIMER_1_SEC
                     ;
1FA0 E817F8                          CALL NEXT_CONTINUE
                     ;
1FA3 A08907                          MOV AL,[KEY_DATA]
1FA6 3C12                            CMP AL,AUTHO_KEY_CODE
1FA8 7412                            JZ ANGO_NINTEI
1FAA EB87                            JMP ANGO_AU_WT_LP
                     ;
1FAC BE0004          ANGO_NO_AUTHO:  MOV SI,NEXT_GO_ADRS
1FAF B700                            MOV BH,0
1FB1 8A1E2807                        MOV BL,[IC_BYTE]
1FB5 02DB                            ADD BL,BL
1FB7 8B00                            MOV AX,[SI][BX]
1FB9 50                              PUSH AX
1FBA F9                              STC
1FBB C3                              RET
                     ;
1FBC BE0004          ANGO_NINTEI:    MOV SI,NEXT_GO_ADRS
1FBF B700                            MOV BH,0
1FC1 8A1E2807                        MOV BL,[IC_BYTE]
1FC5 02DB                            ADD BL,BL
1FC7 8B00                            MOV AX,[SI][BX]
1FC9 50                              PUSH AX
1FCA F8                              CLC
1FCB C3                              RET
                     ;
                     ;
                     ;
1FCC 3C88            PAY_GROUP_1:    CMP AL,88H
1FCE 7406                            JZ PAY_PROG_START
1FD0 3C8A                            CMP AL,8AH
1FD2 7478                            JZ PAY_PROG_STOP
1FD4 F8                              CLC
1FD5 C3                              RET
                     ;
1FD6 8A4405          PAY_PROG_START: MOV AL,[SI+5]    ; Channel
1FD9 B400                            MOV AH,0
1FDB 8B5406                          MOV DX,[SI+6]    ; DX = Freq. Data
1FDE BB0009                          MOV BX,EVENT_NO_FREQ
1FE1 03D8                            ADD BX,AX
1FE3 03D8                            ADD BX,AX        ; BX = Freq. Table Address
1FE5 8917                            MOV [BX],DX      ; Frequency Set
                     ;
1FE7 BA0000                          MOV DX,0
1FEA BB0006                          MOV BX,ES_EVENT_TIMER
1FED 03D8                            ADD BX,AX
                     ;
1FEF 83FA06          EV_F_ST_CK:     CMP DX,6
1FF2 7356                            JNC P_F_START_RET
                     ;
1FF4 26F60707                        TEST BYTE PTR ES:[BX],7
1FF8 7449                            JZ NEXT_EV_ST
```

HEWLETT-PACKARD: 8086 Assembler

SOURCE LINE

```
                    ;
1FFA 50                              PUSH AX          : Channel
1FFB 53                              PUSH BX          : N th Converter  Event Timer Address
1FFC 52                              PUSH DX          ; Drop No.

1FFD A31E07                          MOV [BINARY_LED],AX
2000 88162407                        MOV [CONV_NO],DL
2004 268A07                          MOV AL,ES:[BX]
2007 2407                            AND AL,7
2009 7502                            JNZ DEV_OK
200B B002                            MOV AL,2
                    ;
200D A22A07         DEV_OK:          MOV [DEVICE_NO],AL
2010 02C0                            ADD AL,AL
2012 02C0                            ADD AL,AL
2014 02C0                            ADD AL,AL        ; AL * 8
2016 02D0                            ADD DL,AL
2018 88162807                        MOV [IC_BYTE],DL
201C E81AF0                          CALL CONV_TO_DROP
201F E884F0                          CALL ID_DROP_DEVICE
2022 E88FF3                          CALL SPU_RELAY_ON
2025 8B1E1E07                        MOV BX,[BINARY_LED]
2029 E83CF7                          CALL BINDEC_LED
                    ;
202C BE8003                          MOV SI,JUMP_ADDRESS
202F 03362807                        ADD SI,[IC_BYTE]
2033 03362807                        ADD SI,[IC_BYTE]
2037 8B161A07                        MOV DX,[BASE_POINT]
203B 8914                            MOV [SI],DX
                    ;
203D E81FFC                          CALL FORCED_EVENT
                    ;
2040 5A                              POP DX
2041 5B                              POP BX
2042 58                              POP AX
2043 42             NEXT_EV_ST:      INC DX
2044 81C38000                        ADD BX,128
2048 EBA5                            JMP EV_F_ST_CK
                    ;
204A F8             P_P_START_RET:   CLC
204B C3                              RET
                    ;
204C 90             PAY_PROG_STOP:   NOP
204D F8             PAY_GROUP_2:     CLC
204E C3                              RET
                    ;
                    ;
                    ;
                                     GLOBAL           POWER_DET_CMD
                                     GLOBAL           LOAD_FROM_DROP
                                     GLOBAL           LOAD_TO_DROP
                                     GLOBAL           SPU_STATUS_REQ
                                     GLOBAL           ID_DROP_DEVICE
                                     GLOBAL           IC_DROP_DEVICE
                                     GLOBAL           CONV_SW_BIT_AL
                                     GLOBAL           DROP_BIT_AL
                                     GLOBAL           SPU_RELAY_OFF
```

SOURCE LINE

```
                GLOBAL          SPU_CLEAR_DISP
                GLOBAL          EVENT_LED_OFF
                GLOBAL          DROP_MAP_SET
                GLOBAL          KEY_OPEPATION
                GLOBAL          CONV_TO_DROP
                GLOBAL          DROP_TO_CONV
                GLOBAL          BINDEC_LED
                GLOBAL          LED_VIEW_TBL
                GLOBAL          SPU_LED_DISP
                GLOBAL          RUN_CONVERTER
                GLOBAL          WAKEARI_DE_ON
                GLOBAL          OP_SPU_OFF
                GLOBAL          OP_INITIAL
                GLOBAL          BASE_ROUTINE
                GLOBAL          JUMP_ADRS_INIT
                GLOBAL          JUMP_ADRS_INI2
                GLOBAL          DEVICE_MAP_SET
                GLOBAL          PAY_GROUP_1
                GLOBAL          PAY_GROUP_2
;
;
;
                EXTRN SPECIAL_SPU_1
```

Errors= 0

<u>What Is Claimed Is</u>:

1. A cable television system for providing selected television signals to a plurality of remotely located subscriber premises, having a head end for producing a television signal and a cable network for conducting the television signal from the head end to a plurality of remote locations, each of which is adjacent but external to a respective subset of the subscriber premises, comprising:

external control unit means at each of the remote locations for receiving the television signal from the cable network;

a plurality of drop cables connected to each external control unit means, each drop cable conducting a selected portion of the television signal from the external control unit means to a respective one of the subscriber premises associated with that external control unit means;

subscriber device means connected to each drop cable at the subscriber premises for applying to the drop cable a first control signal indicative of data to be transmitted to the external control unit means, at least one of said subscriber device means being a subscriber processing unit means for allowing the subscriber to apply to the drop cable a first control signal including channel data indicative of the portion of the television signal which that subscriber wishes to select; and

first means associated with each external control unit means for processing the first control signals applied to all the drop cables associated with that external control unit means and for causing that external control unit means to apply to each associated drop cable the portion of the television signal indicated by the first control signal

channel data received via the drop cable, the first means including common signal processing circuitry which at least partially processes the information represented by the first control signals applied to all of the drop cables associated with that external control unit means.

2. The apparatus defined in claim 1, further comprising:

second means associated with each external control unit means for applying to each drop cable a second control signal indicative of data to be transmitted to the associated subscriber premises; and

third means associated with each subscriber processing unit means for processing the second control signal to receive and store the data indicated by the second control signal.

3. The apparatus defined in claim 2, wherein: said subscriber processing unit means includes a character display means;

the second control signal applied to each drop cable includes character display data; and

said subscriber processing unit means includes fourth means responsive to the received and stored second control signal for controlling the character display means in accordance with the character display data indicated by the second control signal.

4. The apparatus defined in claim 3, wherein the character display data indicated by the second control signal applied to each drop cable are indicative of the selected portion of the television signal applied to that drop cable by the external control unit means.

5. The apparatus defined in claim 2, further comprising:

fourth means associated with the head end for applying to the cable network a third control signal indicative of data to be transmitted to at least one external control unit means; and

fifth means associated with each external control unit means for processing the third control signal to receive and store the data indicated by the third control signal.

6. The apparatus defined in claim 2, further comprising:

sixth means associated with each external control unit means for applying to the cable network a fourth control signal indicative of data to be transmitted to the head end; and

seventh means associated with the head end for processing the fourth control signal to receive and store the data indicated by the fourth control signal.

7. The apparatus defined in claim 5, further comprising:

sixth means associated with each external control unit means for applying to the cable network a fourth control signal indicative of data to be transmitted to the head end; and

seventh means associated with the head end for processing the fourth control signal to receive and store the data indicated by the fourth control signal.

8. The apparatus defined in claim 5, wherein:

said fifth means associated with each external control unit means includes eighth means for producing address signal information which uniquely identifies the associated external control unit means;

the third control signal includes address signal data indicative of at least one external control unit means to which the third control signal is to be transmitted; and

said fifth means associated with each external control unit means includes ninth means for comparing the received address signal data to the associated address signal information, and enabling the associated fifth means to store the data indicated by the third control signal if the received address signal data bear a predetermined relationship to the associated address signal information.

9. The apparatus defined in claim 8, wherein said ninth means associated with each external control unit means enables said fifth means to store the data indicated by the third control signal if the received address signal data correspond to the associated address signal information.

10. The apparatus defined in claim 5, wherein:

the third control signal includes broadcast address signal data indicative of all external control unit means; and

said fifth means associated with each external control unit means includes tenth means for recognizing the broadcast address signal data, and enabling the associated fifth means to store the data indicated by the third control signal if the received broadcast address signal data is recognized.

11. The apparatus defined in claim 5, wherein:

the third control signal includes channel authorization data indicative of the portions of the television signal which at least one subscriber associated with that external control unit means is authorized to select; and

said fifth means associated with each external control unit means includes eleventh means for causing said external control unit means to apply to each associated drop cable the portion of the television signal indicated by the first control signal channel data received via the drop cable only if the stored channel authorization data indicates that the subscriber associated with the drop cable is authorized to receive that portion of the television signal.

12. The apparatus defined in claim 5, wherein:

the third control signal includes channelization data indicative of a desired correlation between each portion of the television signal which can be selected by the subscriber and the channel data indicated by the first control signal used to select each portion of the television signal; and

said fifth means associated with each external control unit means includes twelfth means responsive to the channelization data for causing the external control unit means to apply to each associated drop cable the correlated portion of the television signal indicated by the first control signal channel data received via the drop cable.

13. The apparatus defined in claim 5, wherein:

the third control signal includes force tune data indicative of a portion of the television signal for transmission to the subscriber premises; and

said fifth means associated with each external control unit means includes thirteenth means responsive to the force tune data for causing said external control unit means to apply to the associated drop cables the portion of the television signal indicated by the force tune data.

14. The apparatus defined in claim 13, wherein:

said second means associated with each external control unit means includes fourteenth means responsive to the force tune data for causing said second means to apply to the associated drop cables the second control signal;

the second control signal applied to each drop cable includes television on/off data; and

said subscriber processing unit means includes fifteenth means responsive to the second control signal for controlling on and off a television apparatus in accordance with the television on/off data.

15. The apparatus defined in claim 8, wherein: said fifth means associated with each external control unit means includes sixteenth means for storing data at one or more storage addresses;

the third control signal includes storage address data indicative of a storage address in said external control unit means; and

said fifth means associated with each external control unit means includes seventeenth means for causing said associated sixteenth means to store the data indicated by the second control signal

commencing at a storage address which bears a predetermined relationship to the storage address data indicated by the third control signal.

16. The apparatus defined in claim 6, wherein: the first control signal includes data indicative of information to be transmitted from a subscriber device means to the head end;

said first means associated with each external control unit means includes eighteenth means to receive and store the information indicated by the first control signal;

the third control signal includes read data indicative of a request to transmit to the head end the information stored in said eighteenth means; and

said sixth means associated with said external control unit means includes nineteenth means responsive to the third control signal for enabling said sixth means to apply to the cable network the fourth control signal including data indicative of the stored information.

17. The apparatus defined in claim 6, wherein:

the first control signal includes data indicative of information to be transmitted to the head end;

said first means associated with each external control unit means includes twentieth means to accumulate and store the information indicated by the first control signals applied to all of the drop cables associated with that external control unit means;

the third control signal includes send function data indicative of a request to transmit to the head end the accumulated information stored in said twentieth means; and

said sixth means associated with said external control unit means includes twenty-first means responsive to the send function data of the third control signal for enabling said sixth means to apply to the cable network the fourth control signal including data indicative of the accumulated and stored information.

18. The apparatus of claim 5, wherein:

the first control signal includes data indicative of a request to view a pay-per-view program event;

the third control signal includes pay-per-view program event data indicative of the transmission of a pay-per-view program event and the portion of the television signal corresponding to that pay-per-view program event; and

the fifth means associated with each external control unit means includes twenty-second means responsive to the pay-per-view program event data of the third control signal for applying to each associated drop cable the portion of the television signal indicated by the third control signal if the pay-per-view program event indicated by the third control signal corresponds to the pay-per-view program event request of the first control signal.

19. A cable television system for transmitting via a cable network television signals from a head end to a plurality of remote locations, and other signals between the head end and the plurality of remote locations, comprising:

means at each of the remote locations for receiving the television signals from the cable network;

first means associated with the head end for applying to the cable network a first control signal indicative of data to be transmitted to at least one receiving means, at least a portion of the first control signal being indicative of a particular one of a plurality of reverse channel frequency bands; and

second means associated with each receiving means for processing the first control signal and for applying to the cable network in any one of a plurality of reverse channel frequency bands a second control signal indicative of data to be transmitted to the head end, said second means being responsive to the first control signal for applying the second control signal in the reverse channel frequency band indicated by the first control signal.

20. The cable television system defined in claim 19, wherein each remote location is adjacent but external to a respective set of subscriber premises and wherein said receiving means comprises an external control unit means, said cable television system further comprising:

a plurality of drop cables connected to each external control unit means, each drop cable conducting a selected portion of the television signal from the external control unit means to a respective one of the subscriber premises associated with that external control unit means;

subscriber processing unit means connected to the drop cable at at least one of the subscriber premises for allowing the subscriber to apply to the drop cable a third control signal indicative

of the portion of the television signal which that subscriber wishes to select; and

processing means associated with each external control unit for processing the third control signals applied to all of the drop cables associated with that external control unit and for causing that external control unit means to apply to each associated drop cable the portion of the television signal indicated by the third control signals, the processing means including common signal processing circuitry which at least partially processes the information represented by the third control signals applied to all of the drop cables associated with that external control circuit means.

21. A cable television system for transmitting via a cable network television signals from a head end to a plurality of remote locations, and other signals between the head end and the plurality of remote locations, each remote location being adjacent but external to a set of subscriber premises, comprising:

addressable external control unit means at each of the remote locations for receiving the television signal from the cable network;

a plurality of drop cables connected to each external control unit means, each drop cable conducting a selected portion of the television signal from the external control unit means to a respective one of the subscriber premises associated with that external control unit means;

subscriber processing unit means connected to each drop cable at the subscriber's premises for allowing the subscriber to apply to the drop cable a first control signal indicative of the portion of the television signal which that subscriber wishes to select;

first means associated with each external control unit means for processing the first control signals applied to all of the drop cables associated with that external control unit means and for causing that external control unit means to apply to each associated drop cable the portion of the television signal indicated by the first control signal received via that drop cable, the first means including common signal processing circuitry which at least partially processes the information represented by the first control signals applied to all of the drop cables associated with that external control unit means;

second means associated with the head end means for applying to the cable network a second control signal indicative of data to be transmitted to at least one external control unit means, wherein at least a portion of the second control signal is indicative of an external control unit means address;

third means associated with each external control unit means for processing the second control signal to receive and store the data indicated by the second control signal if the second control signal is addressed to the external control unit means; and

handshaking means associated with each external control unit means and responsive to the third means to apply to the cable network for transmission to the head end a response signal indicative of whether or not the external control unit means received the second control signal without error.

22. A cable television system for transmitting via a cable network television signals from a head end to a plurality of subscriber premises,

and other signals between the head end and the plurality of subscriber premises, comprising:

polling signal means associated with the head end for applying polling signals to the cable network;

external control unit means located at a plurality of remote locations, each location being adjacent but external to a subset of the subscriber premises, for receiving the television signals and the polling signals from the cable network;

a plurality of drop cables connected to each external control unit means for conducting selected portions of the television signals from the external control unit means to a respective one of the subscriber premises associated with that external control unit means;

subscriber processing unit means connected to each drop cable at the subscriber premises for allowing the subscriber to apply to the drop cable a control signal indicative of information to be transmitted to said external control unit means, including information indicating the portion of the television signal which that subscriber wishes to select and information for transmission to the head end;

control signal processing means associated with the external control unit for receiving and storing the information indicated by the control signals applied to all of the drop cables associated with that external control unit means and for applying to each drop cable the portion of the television signal indicated by the television signal selection information received via that drop cable; and

polling signal processing means associated with each external control unit means for processing the received polling signals and for responding thereto by applying a response signal to the cable network for transmission to the head end indicative of whether or not said external control unit means has information to transmit to the head end.

23. The cable television system defined in claim 22, wherein the polling signals include address signal data indicative of the external control unit means to which the polling signal is to be transmitted, and wherein the polling signal processing means further comprises:

means for producing address signal information which uniquely identifies the associated external control unit means; and

means for comparing the received address signal data to the associated address signal information and for causing the polling signal processing means to respond to the received polling signal if the received address signal data bear a predetermined relationship to the associated address signal information.

24. The cable television system defined in claim 23, wherein:

said external control unit means includes means for associating a level of importance with the information which the external control unit means has to transmit to the head end;

said polling signal means associated with the head end includes means for applying to the cable network response threshold level signal data indicative of the level at which said external

control unit means should respond to received polling signals; and

said polling signal processing means associated with each external control unit means includes means for comparing the received threshold level signal data to the level of the information which the external control unit means has to transmit to the head end, and for enabling the associated polling signal processing means to transmit a response signal to the head end indicating that the external control unit means has information to transmit to the head end if the level of information which said external control unit means has to transmit to the head end bears a predetermined relationship to the received response threshold level signal data.

25. The cable television system defined in claim 23, wherein:

said external control unit means includes means for associating a level of importance with the information which the external control unit means has to transmit to the head end;

said polling signal means associated with the head end includes means for applying a signal to the cable network for establishing a priority information window on the cable network, the priority information window signal including priority response threshold level signal data indicative of the priority information level at which said external control unit means should respond to the polling signals; and

said external control unit means includes means for receiving the priority information window signal and storing the priority response threshold level signal data, for comparing the priority response threshold level signal data to

the level of information which the external control unit means has to transmit to the head end, and for causing said polling signal processing means associated with said external control unit means to respond to any received polling signal whenever the information which the external control unit means has to transmit to the head end bears a predetermined relationship to the priority response threshold level signal data.

26. A two-way cable television system for transmitting television and other signals via a cable network from a head end to addressable terminal devices at a plurality of remote locations, comprising:

first means associated with the head end for transmitting polling signals to the addressable terminal devices, the polling signals including a terminal device address;

second means associated with the terminal devices for storing information and for assigning a level of importance to the stored information;

third means associated with the head end for transmitting to the terminal devices threshold level control signals indicative of the threshold level at which the terminal devices should transmit information to the head end;

fourth means associated with each terminal devices for receiving the threshold level control signals and for comparing the level of the information stored in the terminal device with the threshold level indicated by the threshold level control signals; and

fifth means responsive to said fourth means and to received polling signals addressed to

the terminal device for transmitting to the head end a response signal indicating that the terminal device has information to transmit to the head end if the level of the information bears a predetermined relationship to the threshold level indicated by the threshold level control signals.

27. A two-way cable television system for transmitting television signals and other signals via a cable network from a head end to addressable terminal devices at a plurality of remote locations, comprising:

first means associated with the head end for transmitting polling signals to the addressable terminal devices, the polling signals including a terminal device address;

second means associated with the terminal devices for storing information and for assigning a level of importance to the stored information;

third means associated with the head end for transmitting to the terminal devices priority information control signals indicative of the priority threshold level at which the terminal devices should transmit information to the head end;

fourth means associated with each terminal device for receiving the priority information control signals and for comparing the level of the information stored in the terminal device with the priority threshold level indicated by the priority information control signals; and

fifth means responsive to said fourth means and to any received polling signal for transmitting to the head end a response signal indicating that the terminal device has information to transmit to the head end if the level of the information bears

a predetermined relationship to the priority threshold level indicated by the priority information control signals.

28. The cable television of claim 27, wherein:

the priority information control signals include data indicative of a particular one of a plurality of reverse channels available for transmission of information from the terminal devices to the head end; and

the terminal devices include sixth means responsive to the priority information control signals for transmitting the response signal in the particular reverse channel indicated by the priority information control signal data.

29. A cable television system for transmitting television signals via a cable network from a head end to a plurality of remote locations, each remote location being adjacent but external to a selected set of subscriber premises, comprising:

external control unit means at each of the remote locations for receiving the television signals from the cable network;

a plurality of drop cables connected to at least one external control unit means, each drop cable conducting a selected portion of the television signal from the external control unit means to a respective one of the subscriber premises associated with that external control unit means;

subscriber device means connected to the drop cable at the subscriber premises for applying to the drop cable a service request signal indicative of a request by the subscriber device means to communicate with the external control unit means; and

drop polling means associated with the external control unit means for sensing in a predetermined order on each drop cable of the presence of the service request signal to enable the associated external control unit means to rapidly locate a drop cable on which a subscriber device means is requesting to communicate with the external control unit means.

30. The cable television system of claim 29, wherein said drop polling means includes a multiplexer means to selectively connect said drop polling means to each drop cable connected to the external control unit means.

31. The cable television system of claim 29, further comprising:

device polling means associated with the external control unit means, said device polling means being responsive to the drop polling means sensing the service request signal on a drop cable for applying a first control signal to that drop cable, the first control signal including data indicative of a subscriber device means address;

address means associated with each subscriber device means for producing address signal information which uniquely identifies the subscriber device means on the drop cable to which the subscriber device means is connected;

transmitter means associated with each subscriber device means for applying to its associated drop cable a second control signal indicative of data to be transmitted to the external control unit means; and

means associated with each subscriber device means for receiving the first control signal, for comparing the received address signal data to

the associated address signal information, and for enabling said transmitter means associated with said subscriber device means to transmit the second control signal if the received address signal data bear a predetermined relationship to the associated address signal information.

32. The cable television system of claim 31, wherein:

a plurality of subscriber device means are connected to the same drop cable; and

the device polling means includes means for applying to that drop cable in a predetermined order a plurality of first control signals, each first control signal including address data indicative of a different one of the subscriber devices connected to that drop cable.

33. The cable television system of claim 32, wherein at least one of the subscriber device means is a subscriber processing unit means for allowing the subscriber to apply to the drop cable and communicate to the external control unit means second control signals indicative of the portion of the television signal which that subscriber wishes to select.

34. A cable television system for providing selected television signals to a plurality of remotely located subscriber premises via a cable network, comprising:

head end means for transmitting a television signal to a plurality of remote locations, each of which is adjacent but external to a respective subset of the subscriber premises;

external control unit means connected to the cable network at each of the remote locations

for receiving the television signal said external control unit means including a slave cable terminal to which the television signal received from the cable network is applied;

a plurality of drop cables connected to each external control unit means, each drop cable conducting a selected portion of the television signal from the external control unit means to a respective one of the subscriber premises associated with that external control unit means;

subscriber processing unit means connected to each drop cable at the subscriber's premises for allowing the subscriber to apply to the drop cable a first control signal indicative of the portion of the television signal which that subscriber wishes to select;

first means associated with each external control unit means for processing the first control signals applied to all the drop cables associated with that external control unit means and for causing that external control unit means to apply to each associated drop cable the portion of the television signal indicated by the first control signal received via that drop cable, the first means including common signal processing circuitry which at least partially processes the information represented by the first control signals applied to all of the drop cables associated with that external control unit means; and

slave external control unit means connected to the slave cable terminal of one of said external control unit means for supplying selected portions of the television signal to additional subscriber processing unit means associated with said slave external control unit means.

35. A cable television system for providing selected television signals to a plurality of remotely located subscriber premises via a cable network, comprising:

head end means for transmitting a television signal to a plurality of remote locations, each of which is adjacent but external to a respective subset of the subscriber premises;

external control unit means at each of the remote locations for receiving the television signal from the cable network;

a plurality of drop cables connected to each external control unit means, each drop cable conducting a selected portion of the television signal from the external control unit means to a respective one of the subscriber premises associated with that external control unit means;

subscriber processing unit means connected to each drop cable at the subscriber's premises for allowing the subscriber to apply to the drop cable a first control signal indicative of a first portion of the television signal which that subscriber wishes to select;

slave subscriber processor unit means connected to the drop cable at at least one subscriber's premises for allowing the subscriber to apply to the drop cable a second control signal indicative of a second portion of the television signal which that subscriber wishes to select; and

means associated with each external control unit means for processing the first and second control signals applied to the drop cables associated with that external control unit means and for causing that external control unit means to apply to each associated drop cable in a first predetermined channel the portion of the television signal indicated by the first control signals received via

that drop cable, and to apply to the drop cable associated with the slave subscriber processing unit means in a second predetermined channel the portion of the television signal indicated by the second control signal received via that drop cable, the first means including common signal processing circuitry which at least partially processes the information represented by the first and second control signals applied to all of the drop cables associated with that external control unit means.

36. A cable television system for providing selected television signals to a plurality of remotely located subscriber premises, comprising:

head end means for transmitting a television signal;

a cable network having a plurality of cables connected in parallel, each cable conducting a different part of the television signal from the head end means to a plurality of remote locations, each of which is adjacent but external to a respective subset of the subscriber premises;

external control unit means at each of the remote locations connected to each of the plurality of cables for receiving the television signal from the cable network;

a plurality of subscriber unit means associated with each external control unit means, each subscriber unit means connected to a drop cable for providing a selected portion of the television signal from the external control unit means to a respective one of the subscriber premises associated with that external control unit means;

subscriber processing unit means connected to each drop cable at the subscriber premises for allowing the subscriber to apply to the drop

cable a control signal indicative of the portion of the television signal which that subscriber wishes to select;

cable selecting means associated with each subscriber unit means for selectively connecting each subscriber unit means to one of the plurality of cables of the cable network;

first means associated with each external control unit means for processing the first control signals applied to all the drop cables associated with that external control unit means and for causing each subscriber unit means to apply to each associated drop cable the portion of the television signal indicated by the first control signal received via that drop cable, the processing means including common signal processing circuitry which at least partially processes the information represented by the first control signals applied to all of the drop cables associated with that external control unit means; and

second means responsive to the first means for causing each cable selecting means to connect its associated subscriber unit means to the cable conducting the part of the television signal which includes the portion of the television signal indicated by the first control signal received via the associated drop cable.

37. A cable television system for providing selected television signals to a plurality of remotely located subscriber premises via a cable network, the cable network including a frequency band for reverse communication to the head end, comprising:

head end means for transmitting a television signal to a plurality of remote locations, each of which is adjacent but external to a respective subset of the subscriber premises;

external control unit means at each of the remote locations for receiving the television signal from the cable network;

a plurality of drop cables connected to each external control unit means, each drop cable conducting a selected portion of the television signal from the external control unit means to a respective one of the subscriber premises associated with that external control unit means;

subscriber processing unit means connected to each drop cable at the subscriber premises for allowing the subscriber to apply to the drop cable a first control signal including data indicative of the portion of the television signal which that subscriber wishes to select and subscriber data for transmission to the head end;

first means associated with each external control unit means for processing the first control signals applied to all the drop cables associated with that external control unit means and for causing that external control unit means to apply to each associated drop cable the portion of the television signal indicated by the first control signal received via that drop cable, and to transmit to the head end signals including the subscriber data indicated by the first control signal, said first means including common signal processing circuitry which at least partially processes the information represented by the first control signals applied to all of the drop cables associated with that external control unit means;

second means connected to each drop cable at the subscriber premises for allowing the subscriber to apply to the drop cable a second control signal including data to be transmitted from the subscriber premises to the head end; and

third means associated with each external control unit means and connected to each drop cable and to the cable network for allowing the second control signal to pass through the external control unit means and directly to the head end in a frequency band comprising a portion of the total frequency band available on the cable network for reverse communication so that ingress onto the cable network from the drop cables of signals interfering with the transmitted subscriber data signals is minimized.

38. The apparatus of claim 37, wherein said third means comprises a bandpass filter.

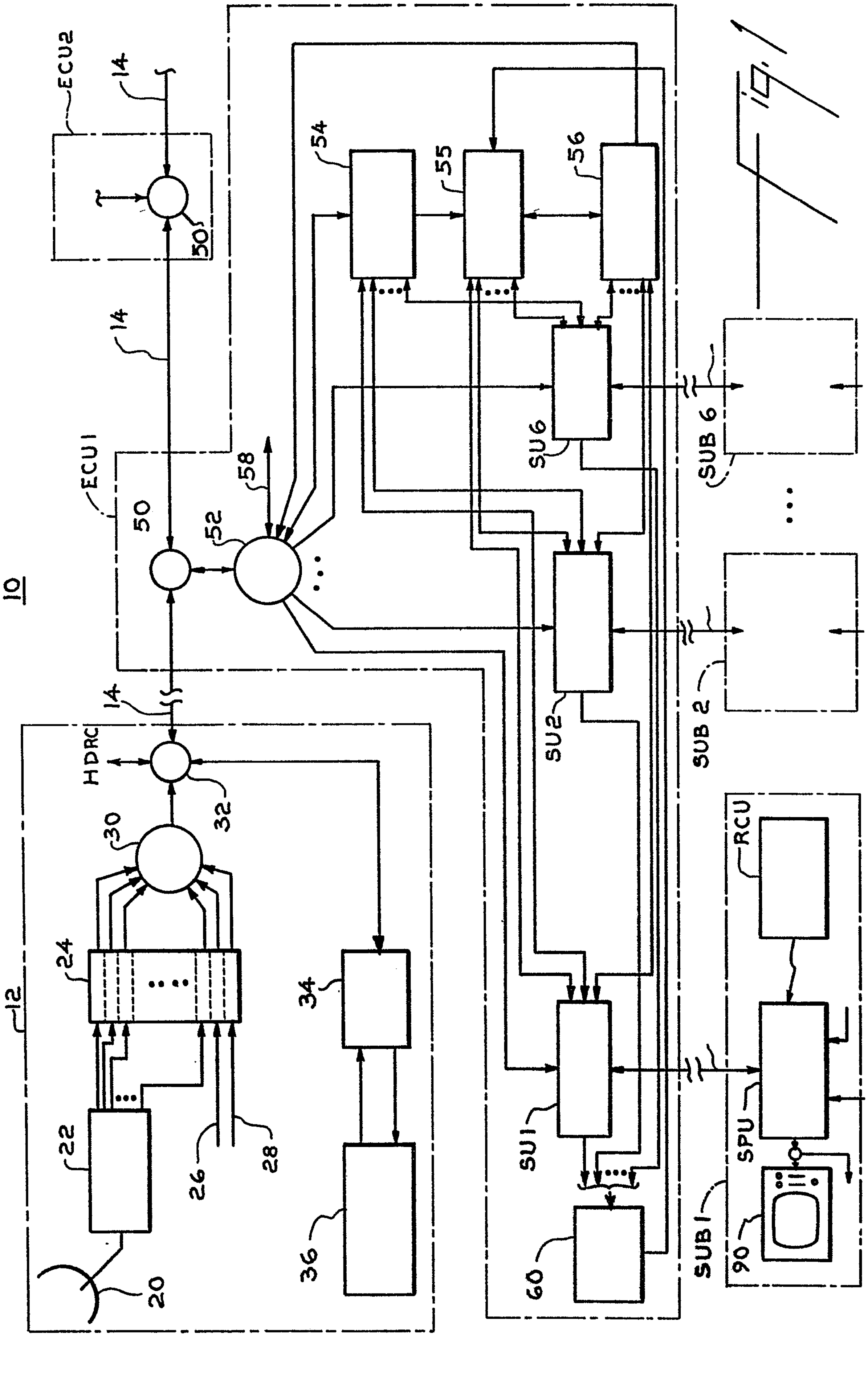
Fig. 1
10
12
14
20
22
24
26
28
30
32
34
36
50
52
54
55
56
58
60
90
HDRC
ECU1
ECU2
SU1
SU2
SU6
SUB 1
SUB 2
SUB 6
RCU
SPU

2/43

0167237

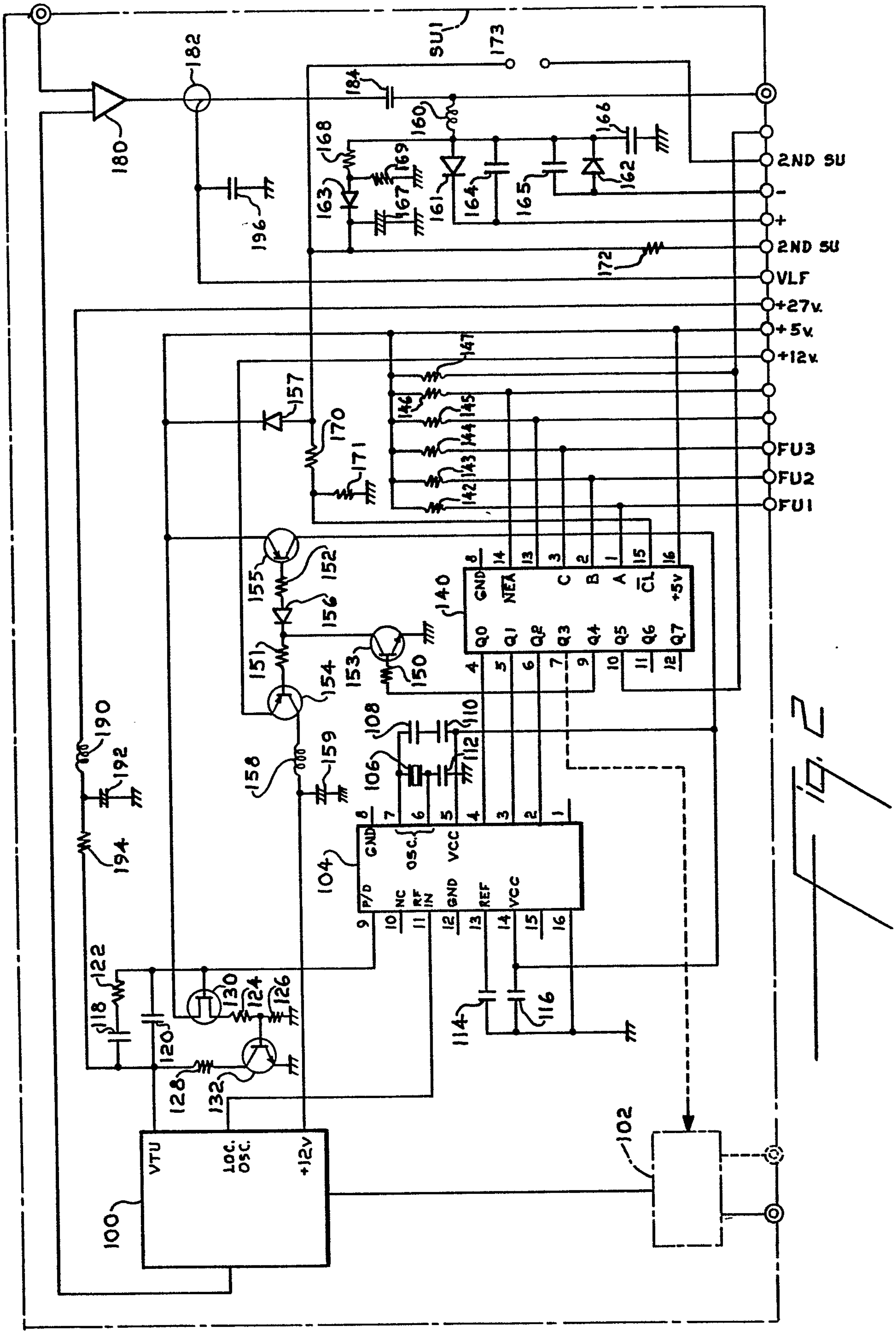


Fig. 2

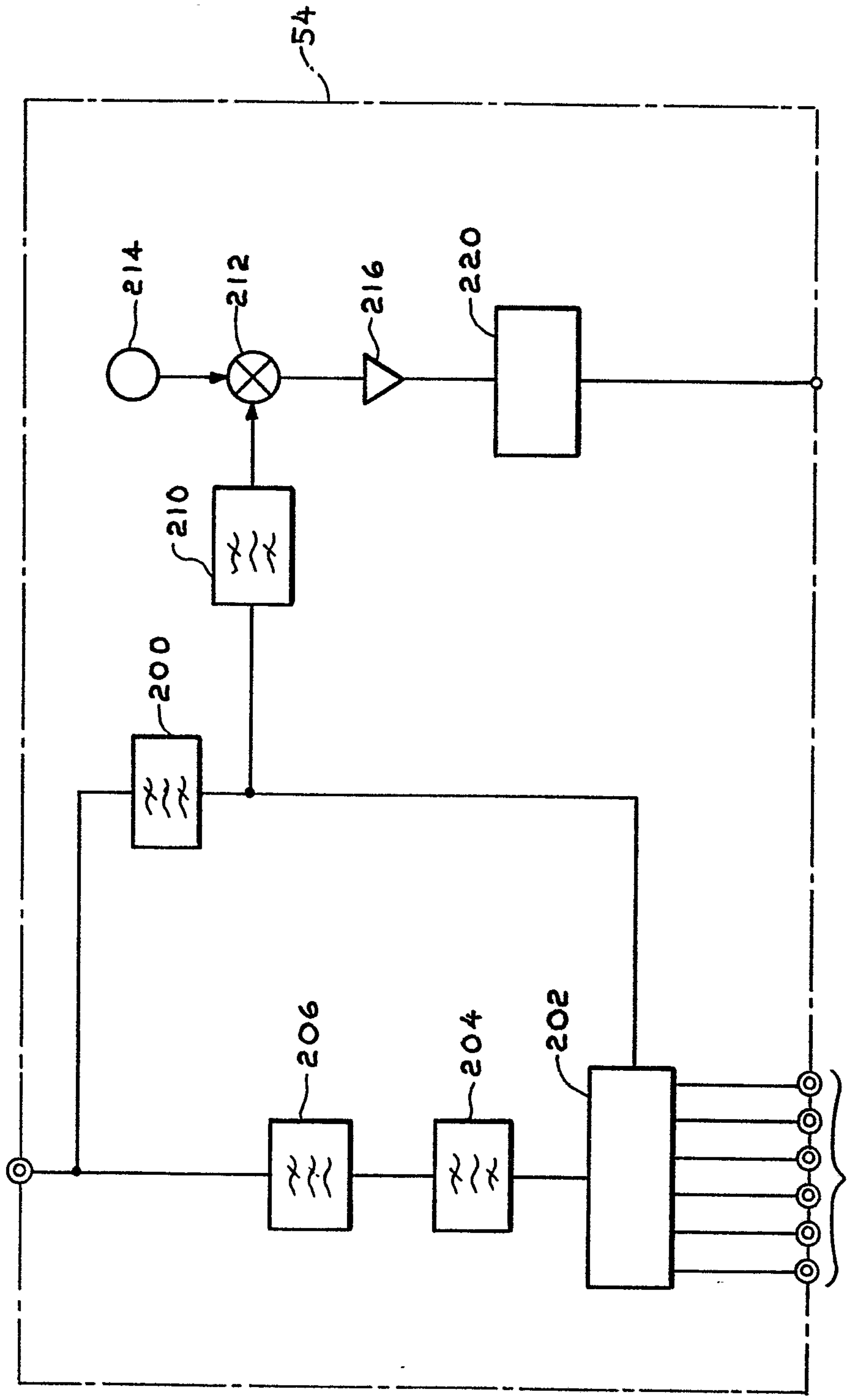


Fig. 3

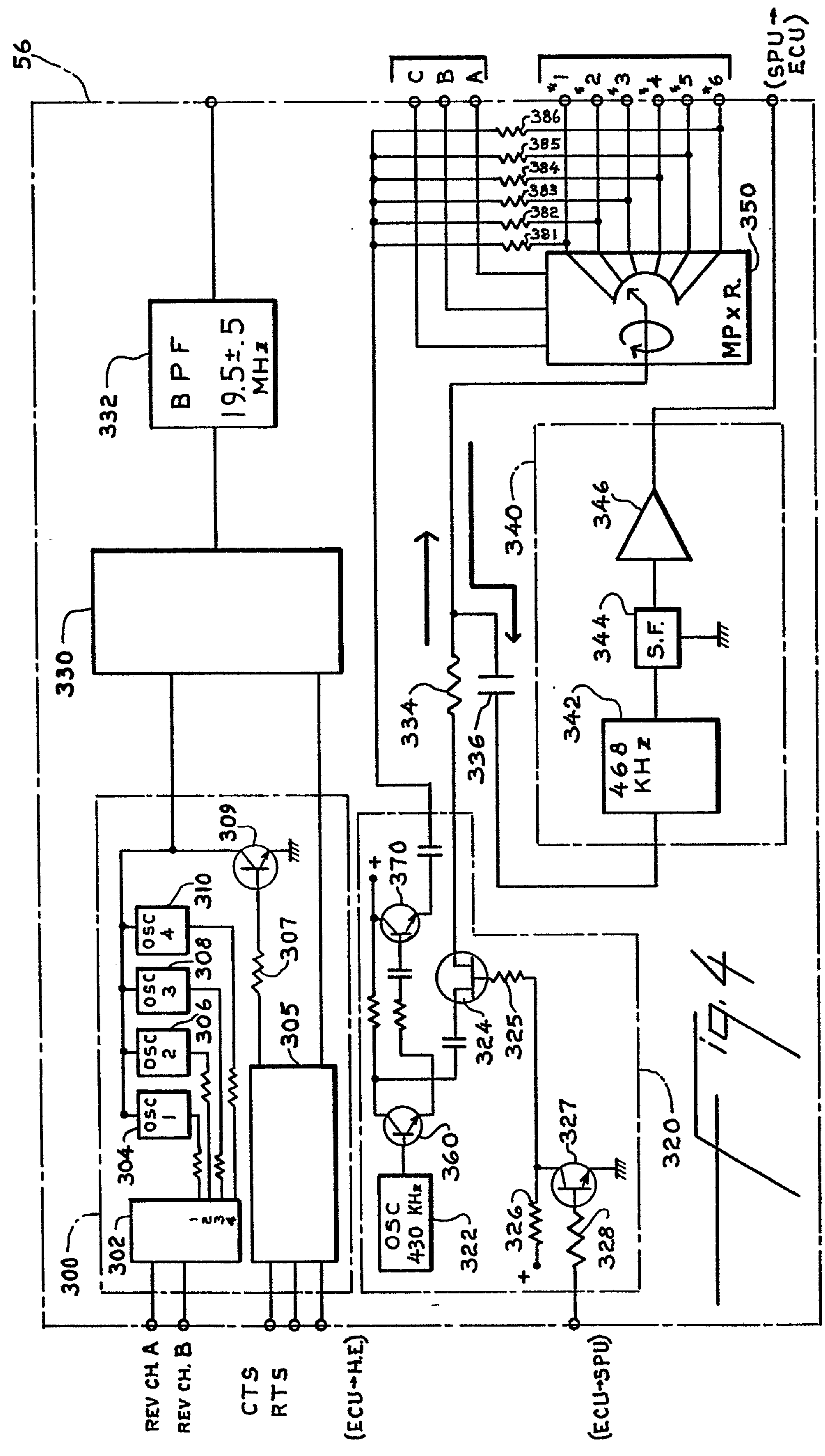
56
C
B
A
#1
#2
#3
#4
#5
#6
(SPU→ECU)
386
385
384
383
382
381
350
MPxR.
BPF
19.5±.5 MHz
332
330
340
346
344
S.F.
342
468 KHz
334
336
300
302
304
OSC 1
OSC 2
306
OSC 3
308
OSC 4
310
309
307
305
370
324
325
360
OSC 430 KHz
322
326
327
328
320
REV CH. A
REV CH. B
CTS
RTS
(ECU→H.E)
(ECU→SPU)

Fig. 4

Fig. 5d

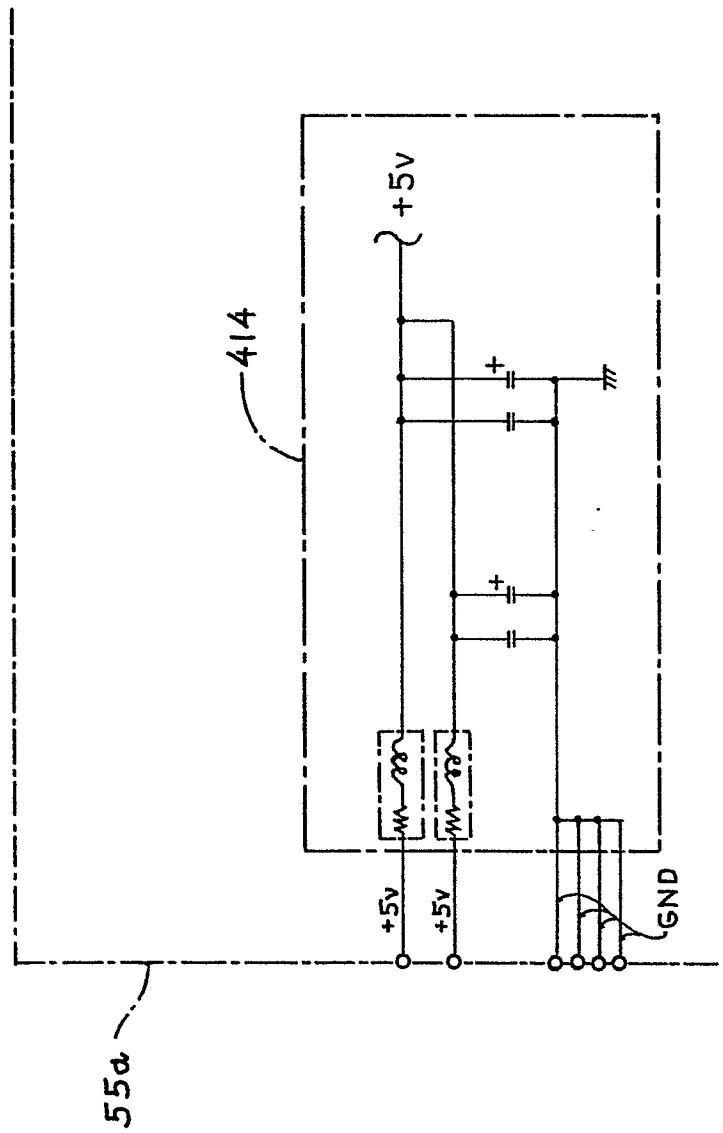

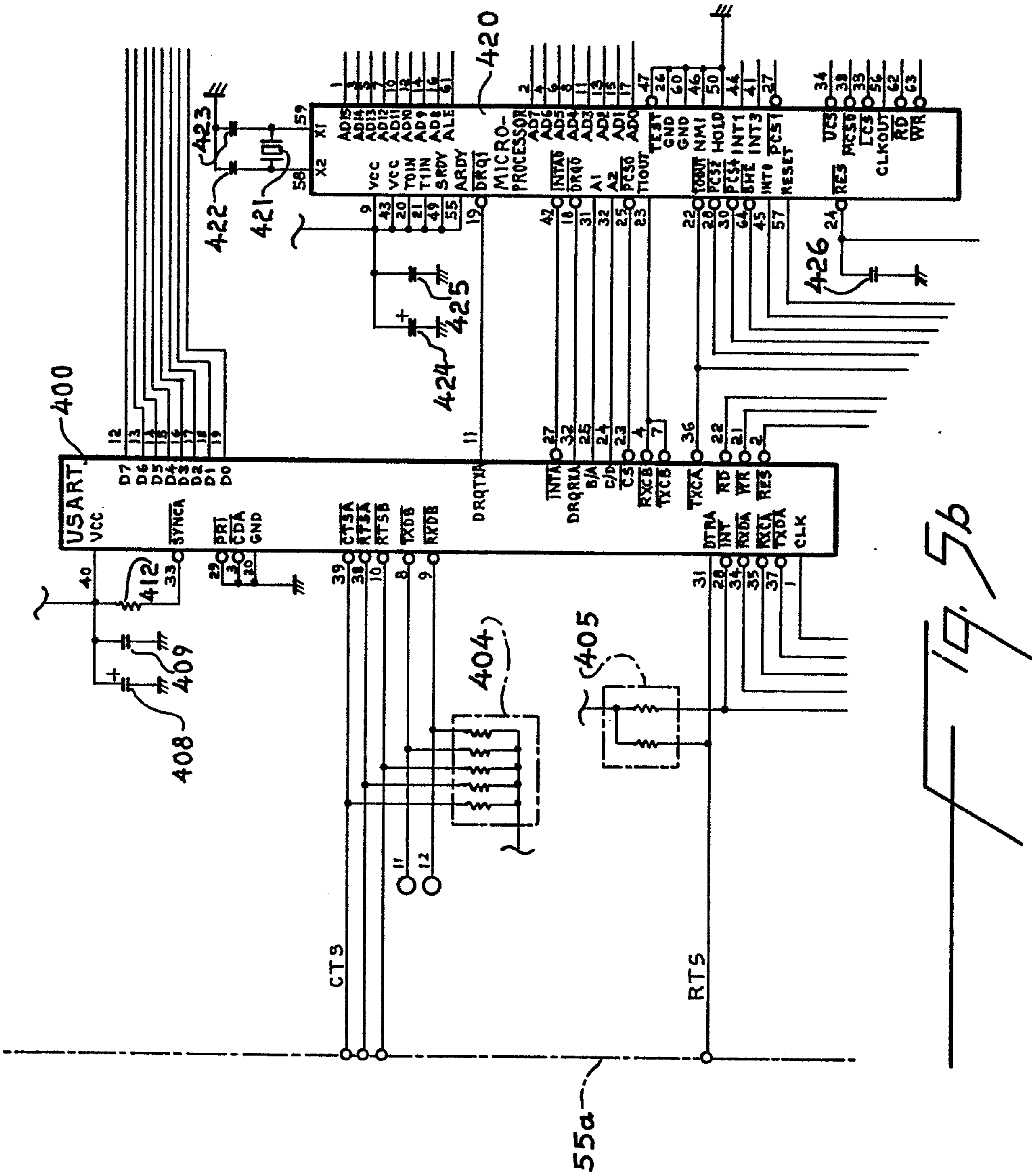
USART
400
MICRO-PROCESSOR
420
421
422
423
424
425
426
404
405
408
409
412
CTS
RTS
55a
VCC
SYNCA
DSR
CDA
GND
CTSA
RTSA
RTSB
TXDB
RXDB
D7
D6
D5
D4
D3
D2
D1
D0
DRQTXA
INTA
DRQRXA
B/A
C/D
CS
RXCB
TXCB
TXCA
RD
WR
RES
DTRA
INT
RXDA
RXCA
TXDA
CLK
X1
X2
AD15
AD14
AD13
AD12
AD11
AD10
AD9
AD8
ALE
ARDY
SRDY
T0IN
T1IN
DRQ1
AD7
AD6
AD5
AD4
AD3
AD2
AD1
AD0
INTA0
DRQ0
A1
A2
PCS0
T1OUT
TEST
NMI
HOLD
INT1
INT3
INT0
PCS1
RESET
UCS
MCS0
LCS
CLKOUT
T0OUT
PCS2
PCS4
BHE

Fig. 5b

0167237

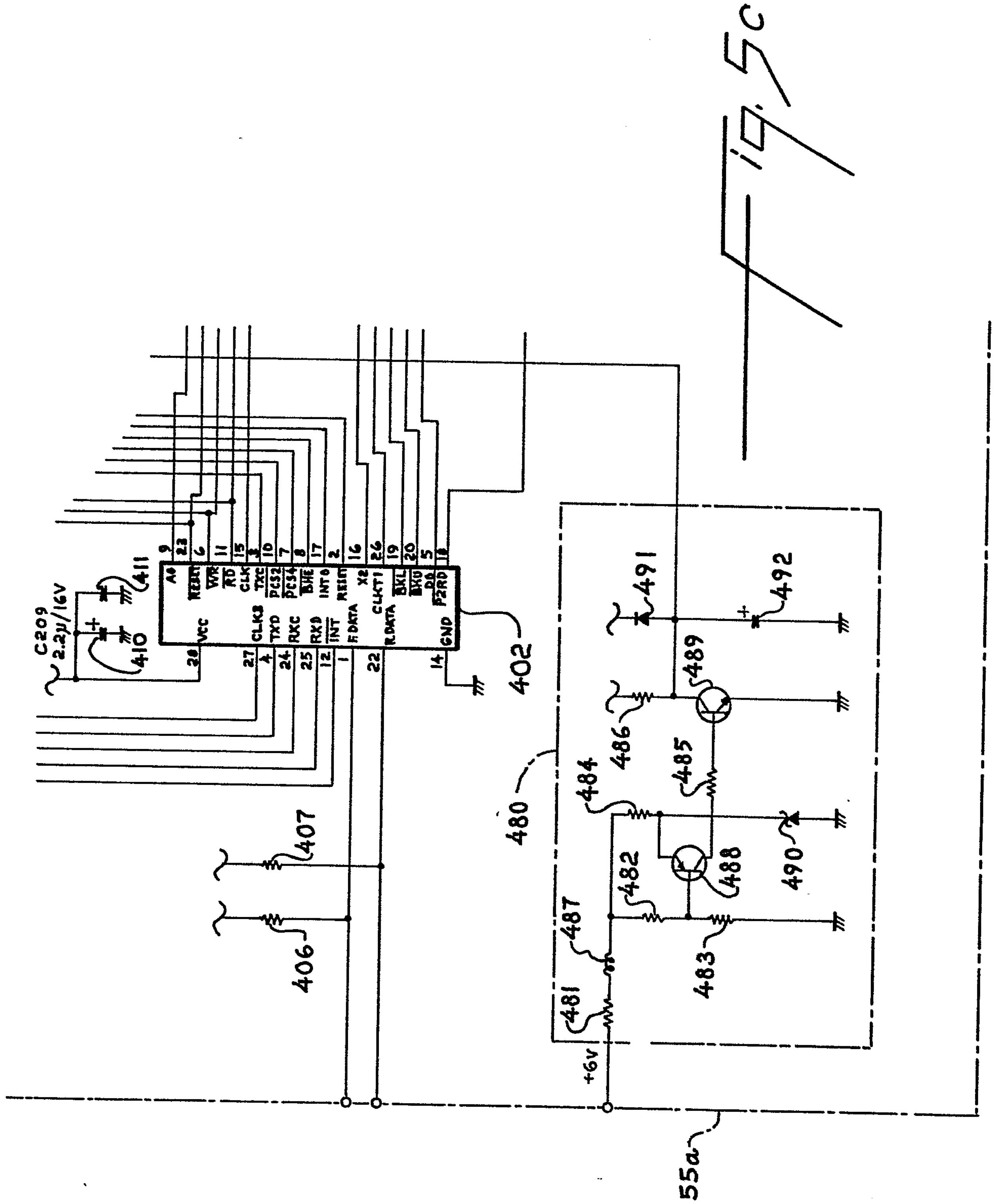


Fig. 5c

Fig. 5d

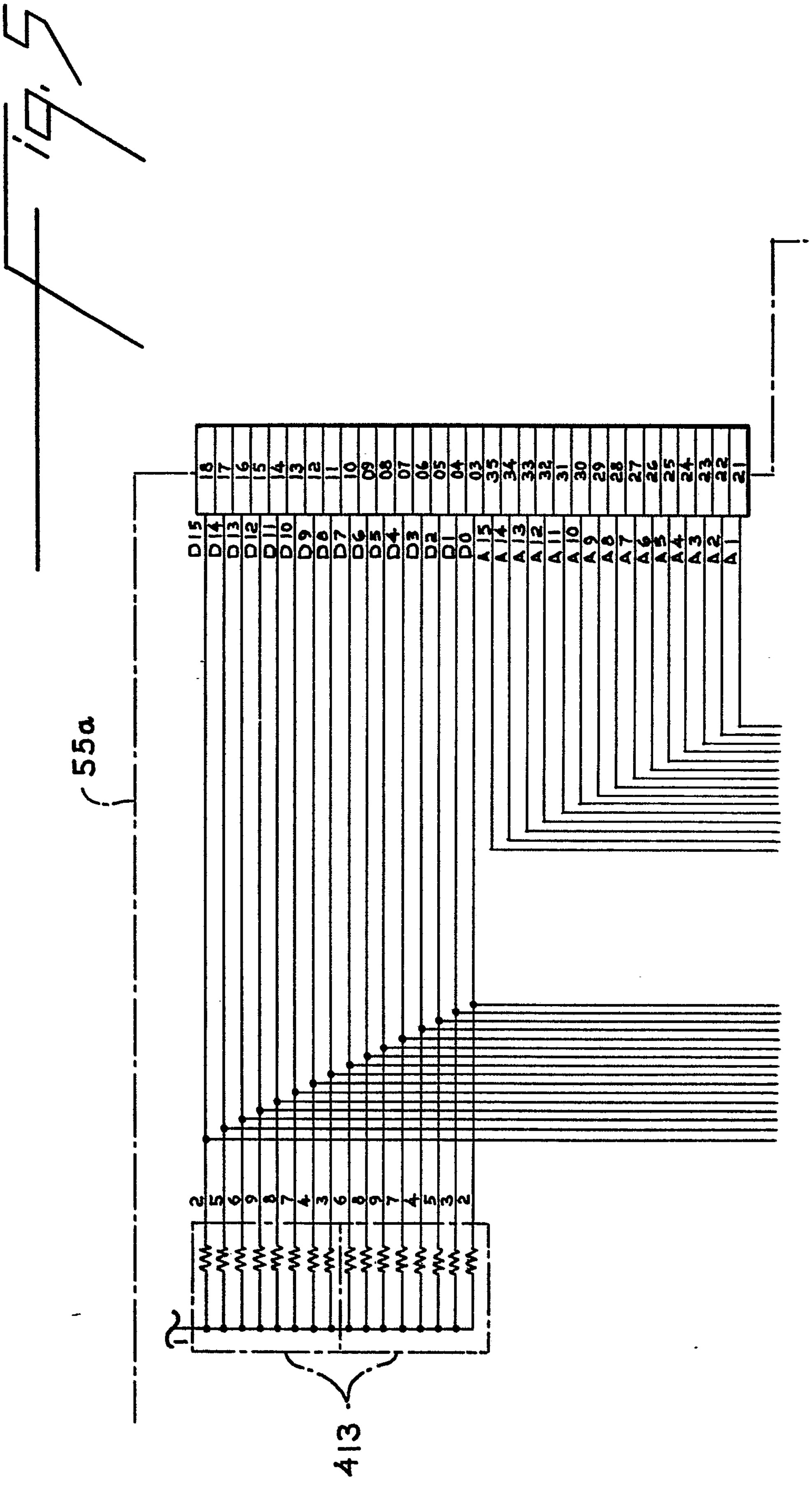

18 17 16 15 14 13 12 11 10 09 08 07 06 05 04 03 35 34 33 32 31 30 29 28 27 26 25 24 23 22 21
D15 D14 D13 D12 D11 D10 D9 D8 D7 D6 D5 D4 D3 D2 D1 D0
A15 A14 A13 A12 A11 A10 A9 A8 A7 A6 A5 A4 A3 A2 A1
55a
2 5 6 9 8 7 4 3 6 8 9 7 4 5 3 2
1
413

9/43

0167237

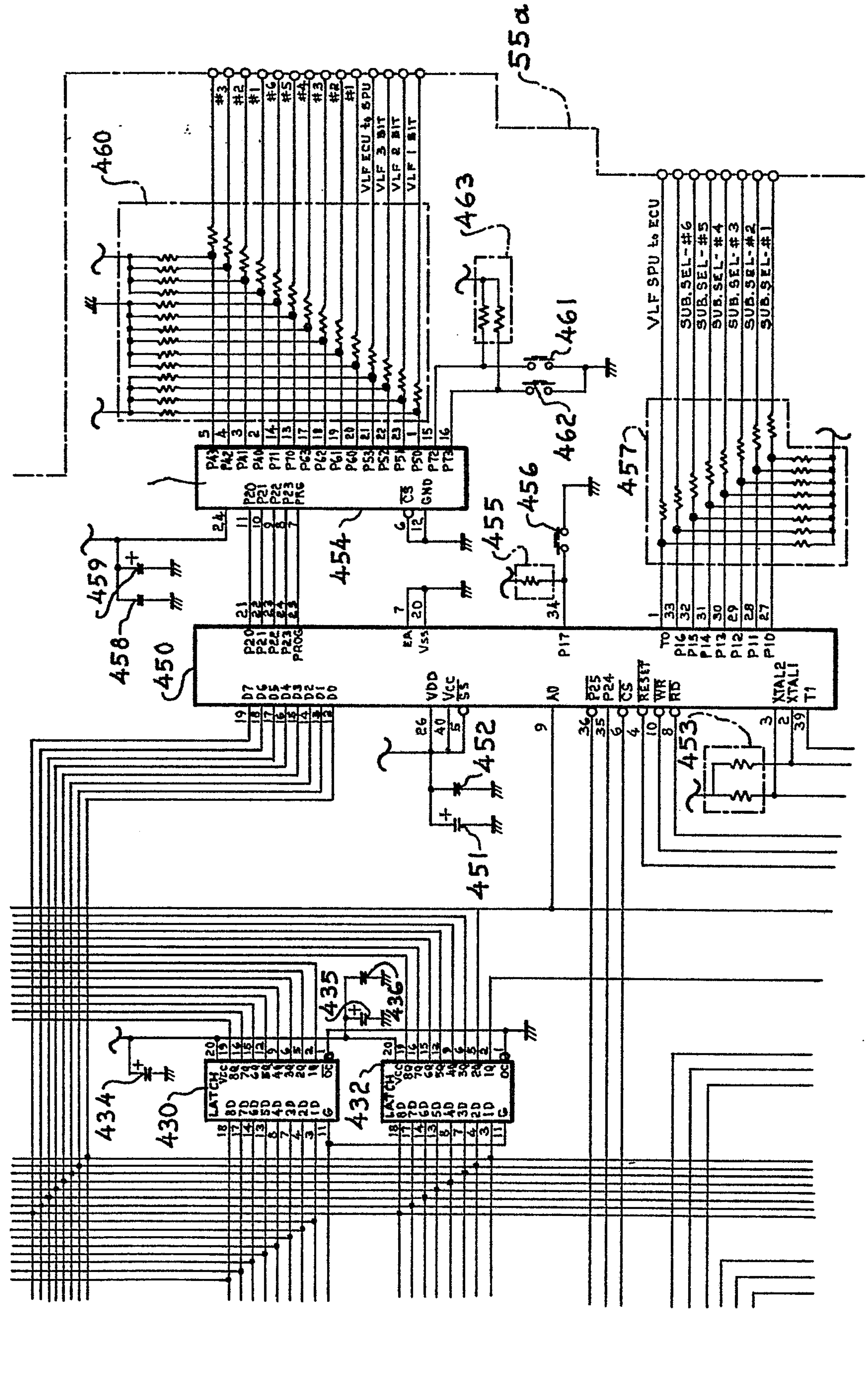


Fig. 5e

0167237

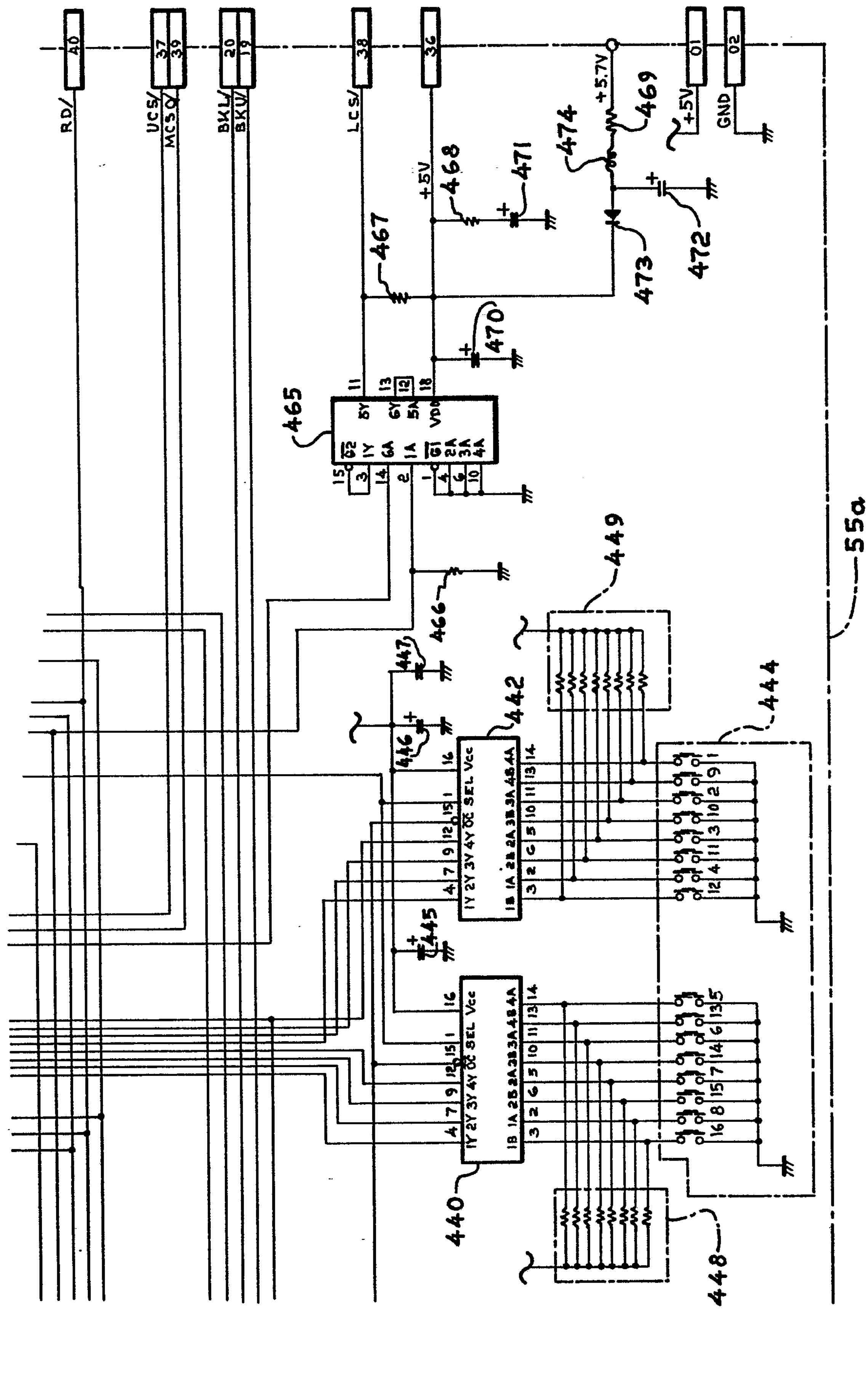


Fig. 5f

0167237

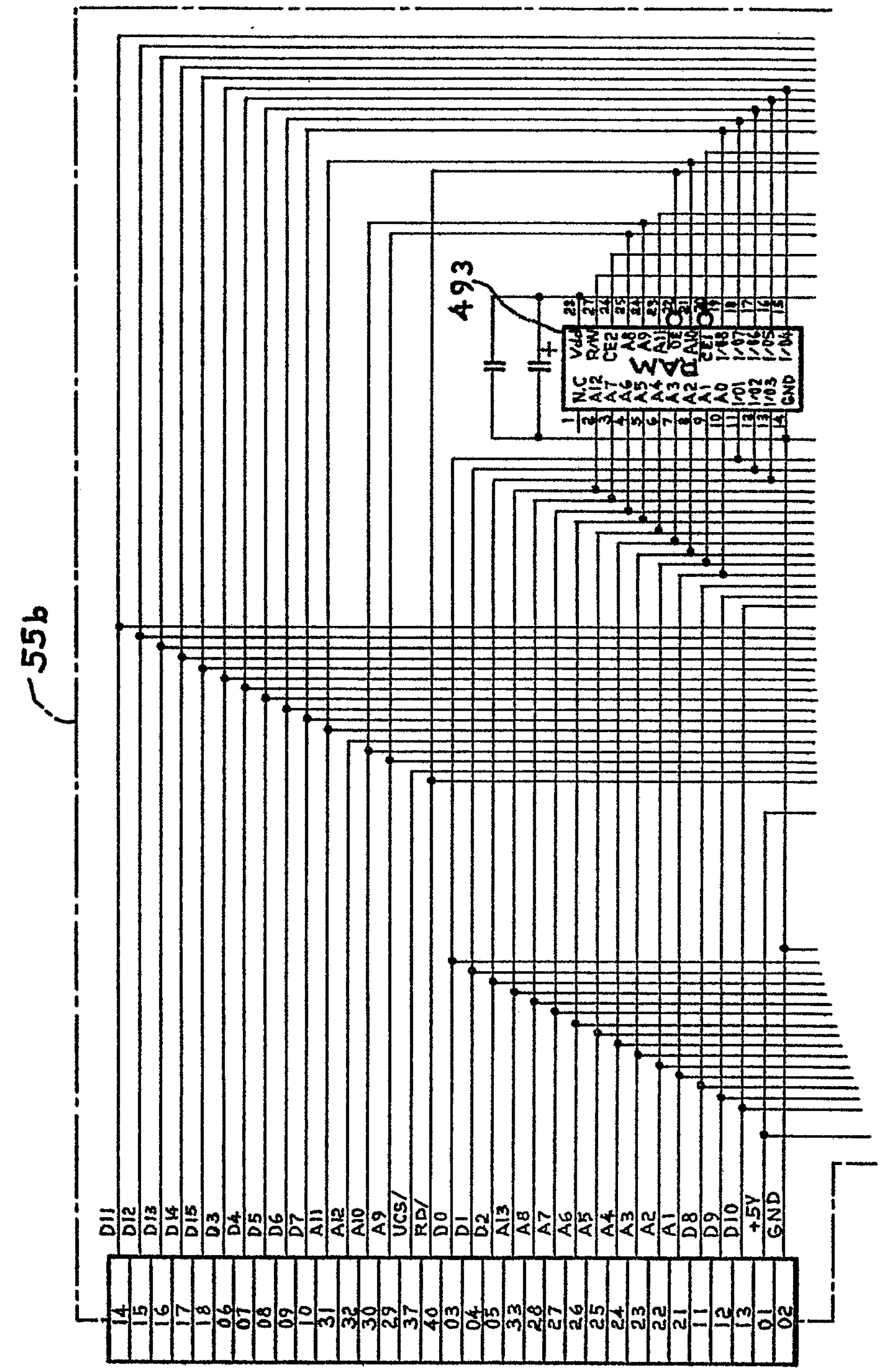


Fig. 5g

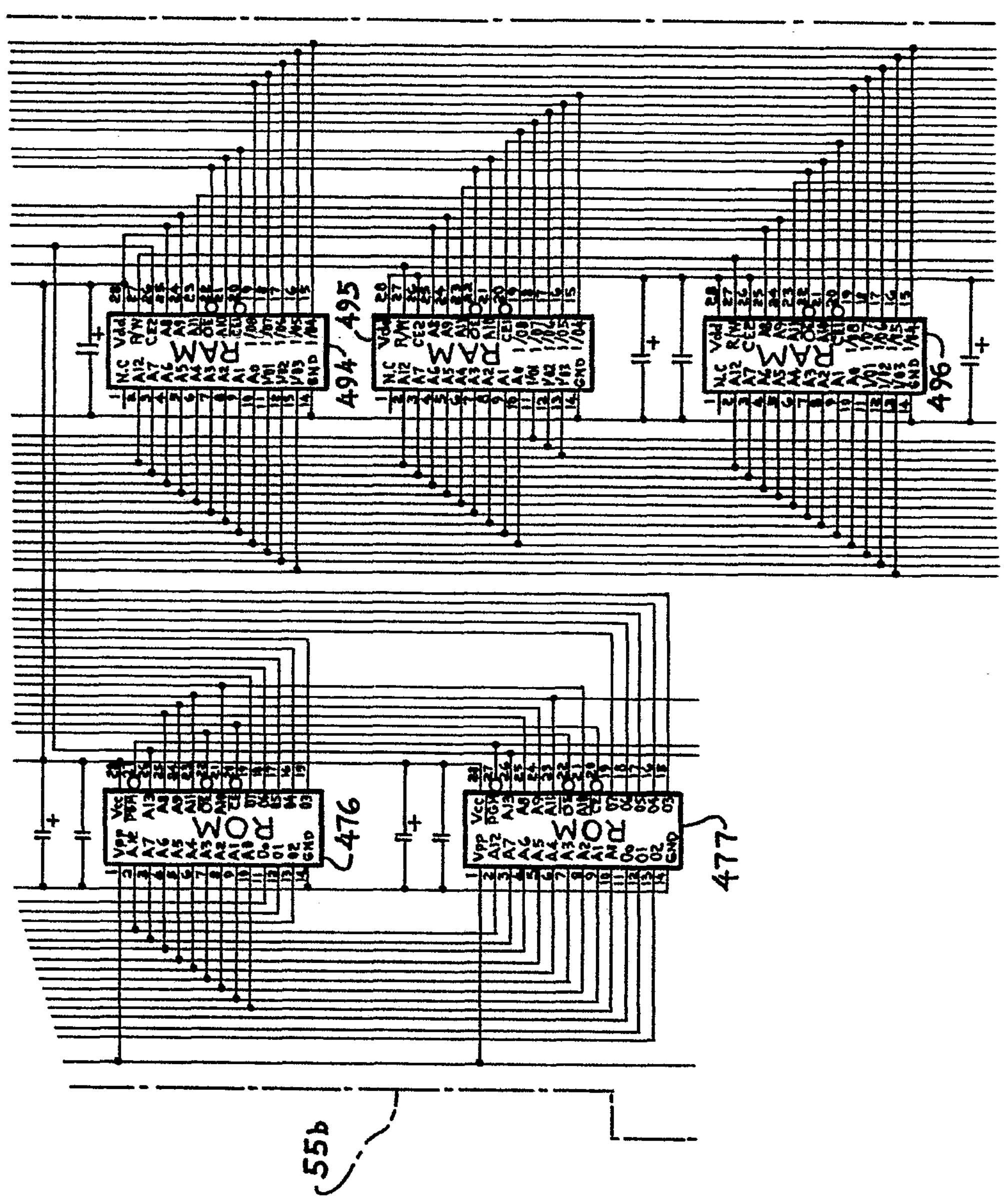


Fig. 5h

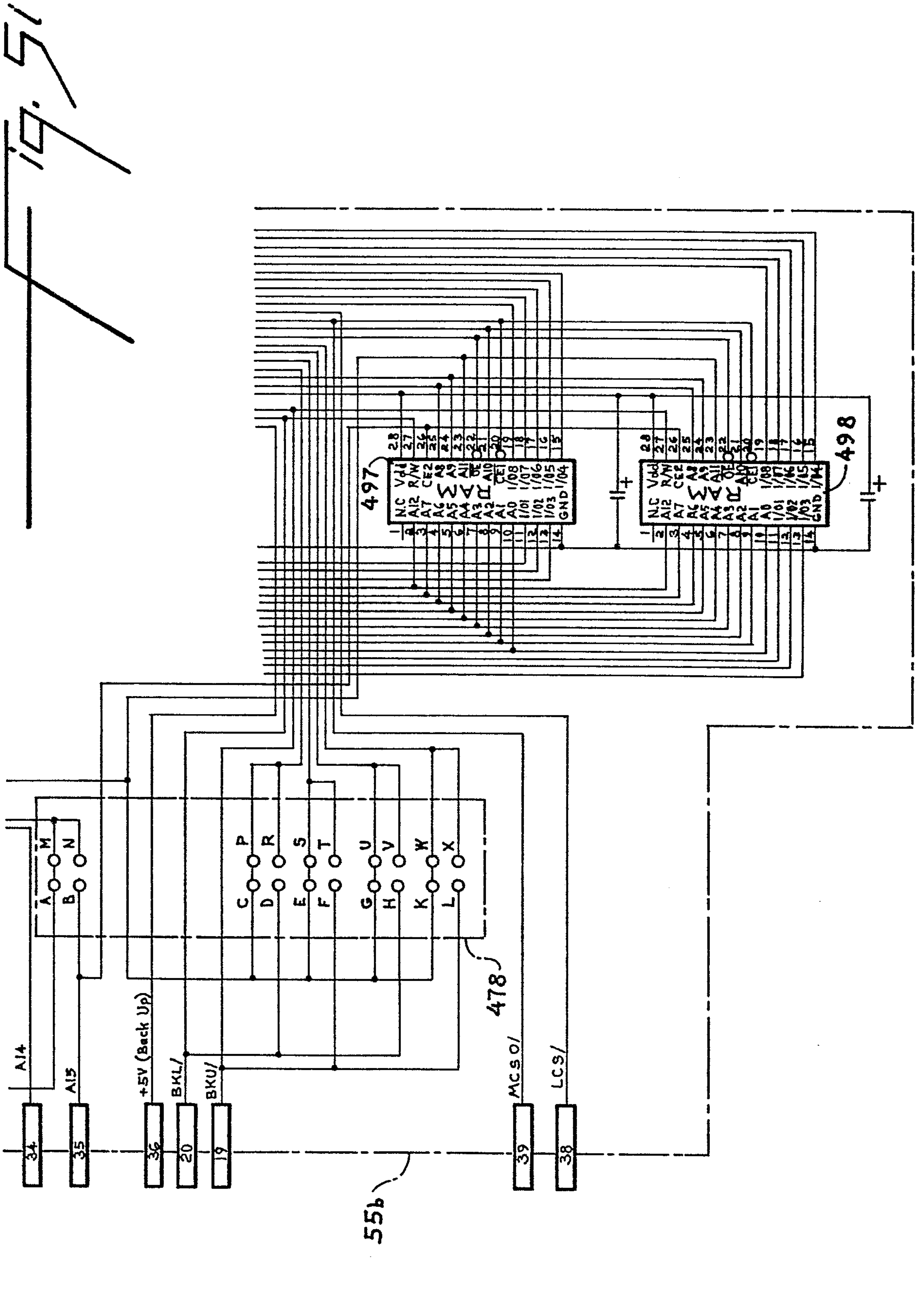
497
498
478
55b
A14
A15
+5V (Back Up)
BKL/
BKU/
MCS0/
LCS/
34
35
36
20
19
39
38
N.C
A12
A7
A6
A5
A4
A3
A2
A1
A0
I/01
I/02
I/03
GND
Vdd
R/W
CE2
A8
A9
A11
OE
A10
CE1
I/08
I/07
I/06
I/05
I/04
A
B
C
D
E
F
G
H
K
L
M
N
P
R
S
T
U
V
W
X

Fig. 51

0167237

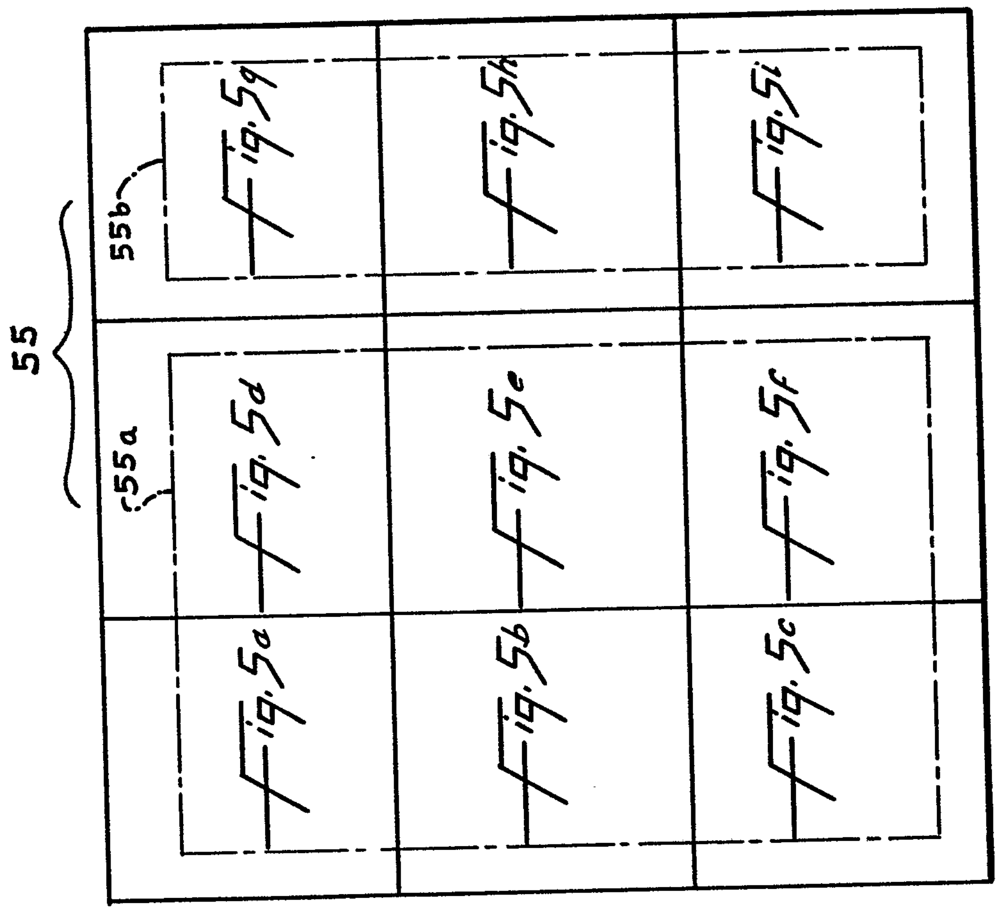


Fig. 5j

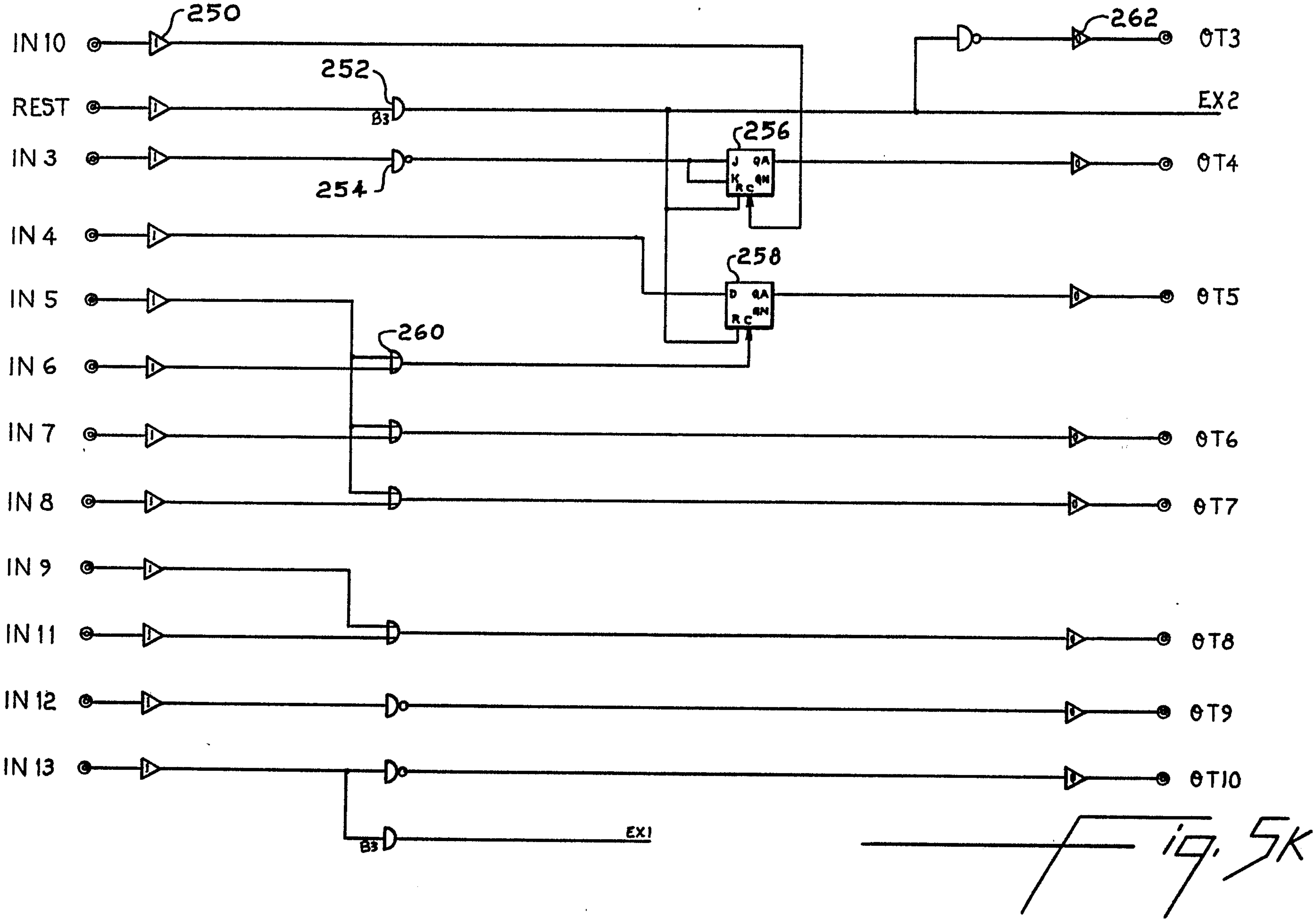
IN10
REST
IN 3
IN 4
IN 5
IN 6
IN 7
IN 8
IN 9
IN 11
IN 12
IN 13
250
252
B3
254
256
J
K
R C
QA
QN
258
D
260
262
B3
EX1
EX2
OT3
OT4
OT5
OT6
OT7
OT8
OT9
OT10

Fig. 5K

Fig. 15

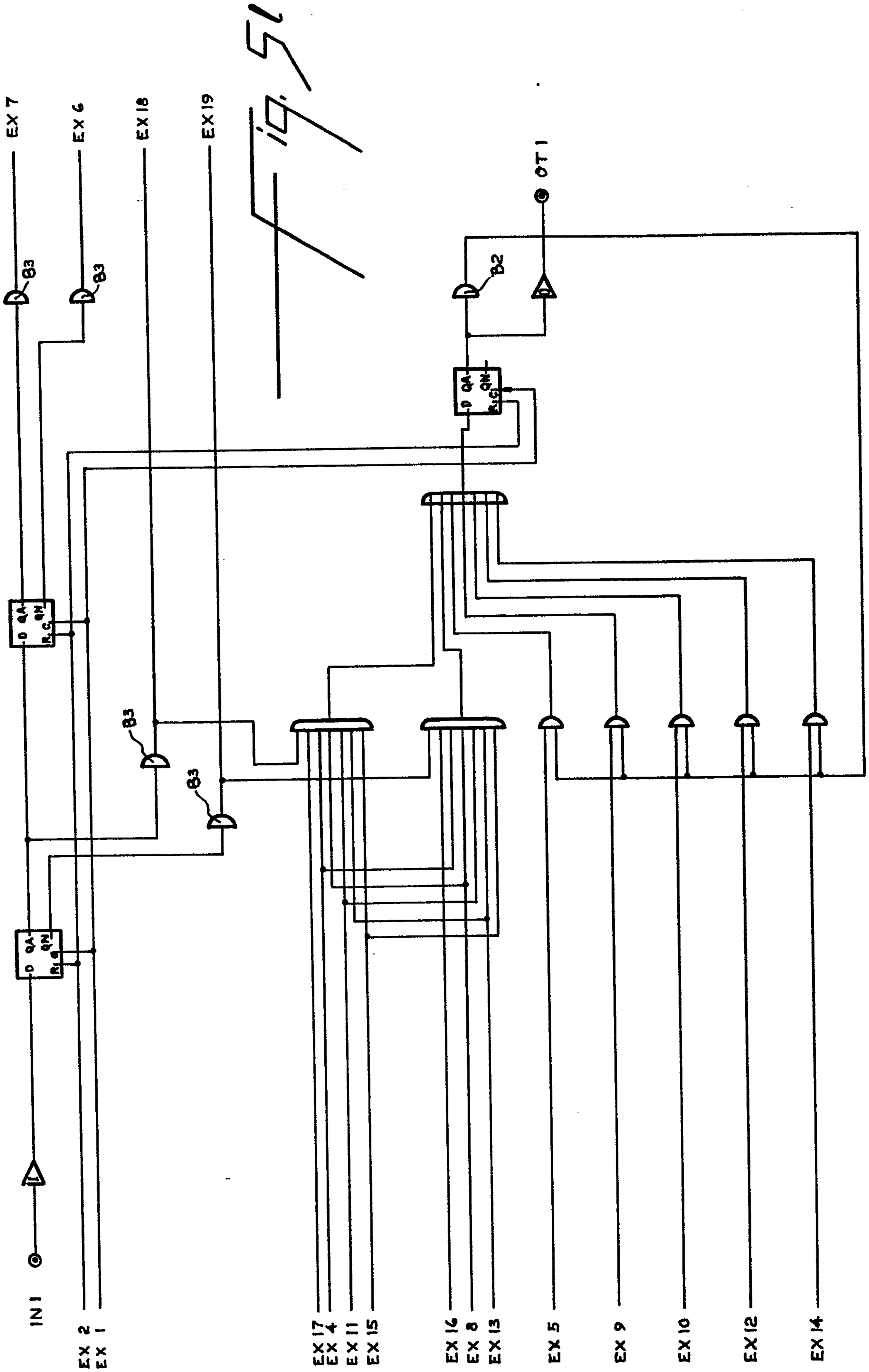
EX 7
EX 6
EX 18
EX 19
B3
B3
B3
B3
B2
OT 1
D QA QN R,C
IN 1
EX 2
EX 1
EX 17
EX 4
EX 11
EX 15
EX 16
EX 8
EX 13
EX 5
EX 9
EX 10
EX 12
EX 14

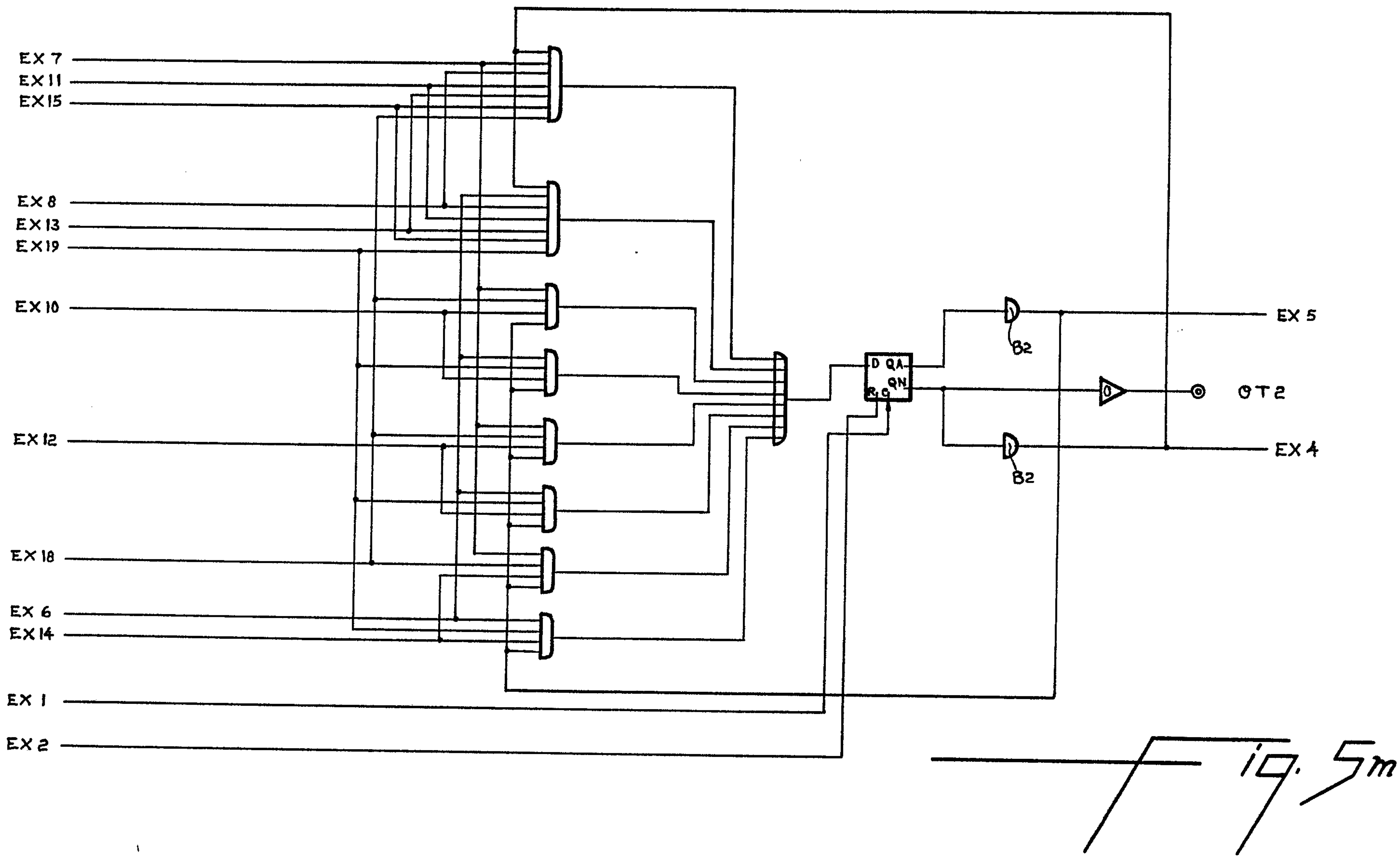
EX 7
EX 11
EX 15
EX 8
EX 13
EX 19
EX 10
EX 12
EX 18
EX 6
EX 14
EX 1
EX 2
D
QA
QN
R
B2
B2
EX 5
OT 2
EX 4

Fig. 5m

18/49

0167237

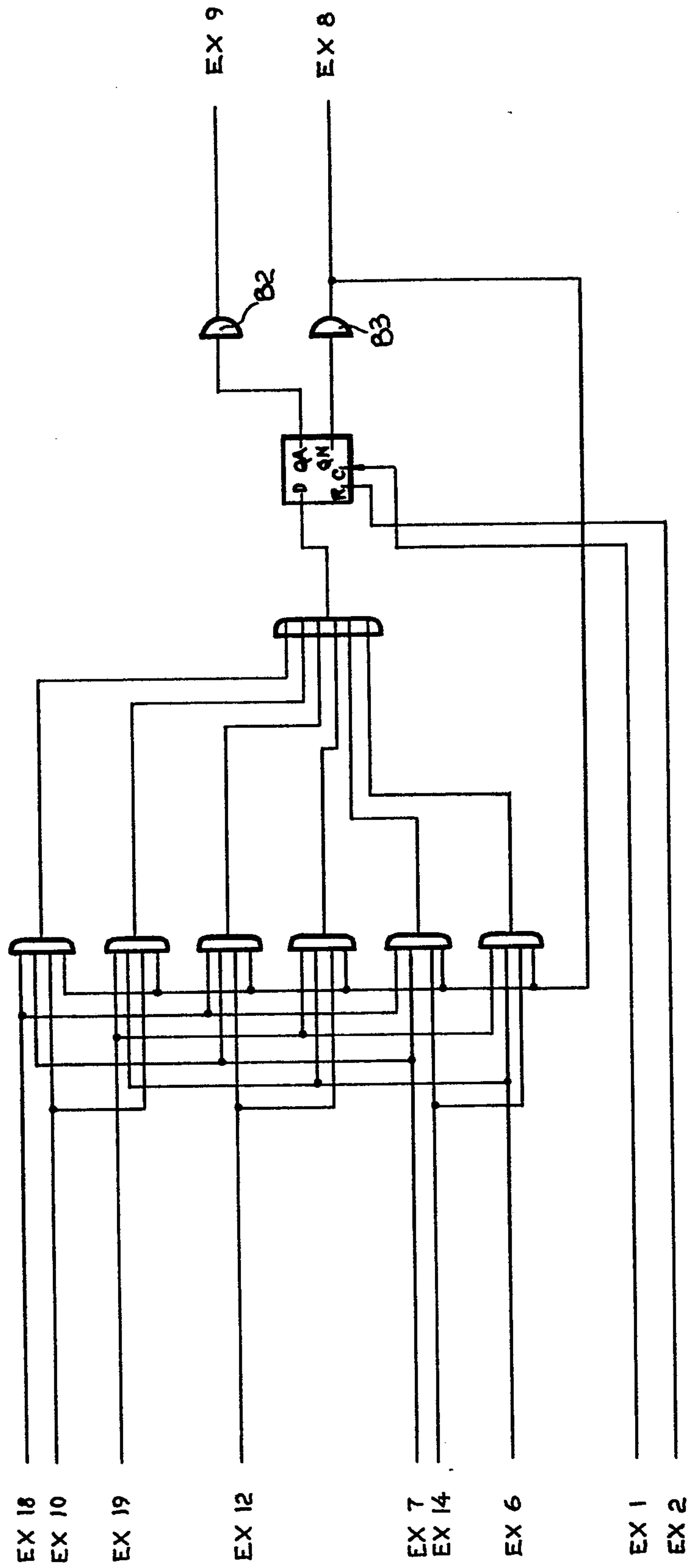


Fig. 5n

0167237

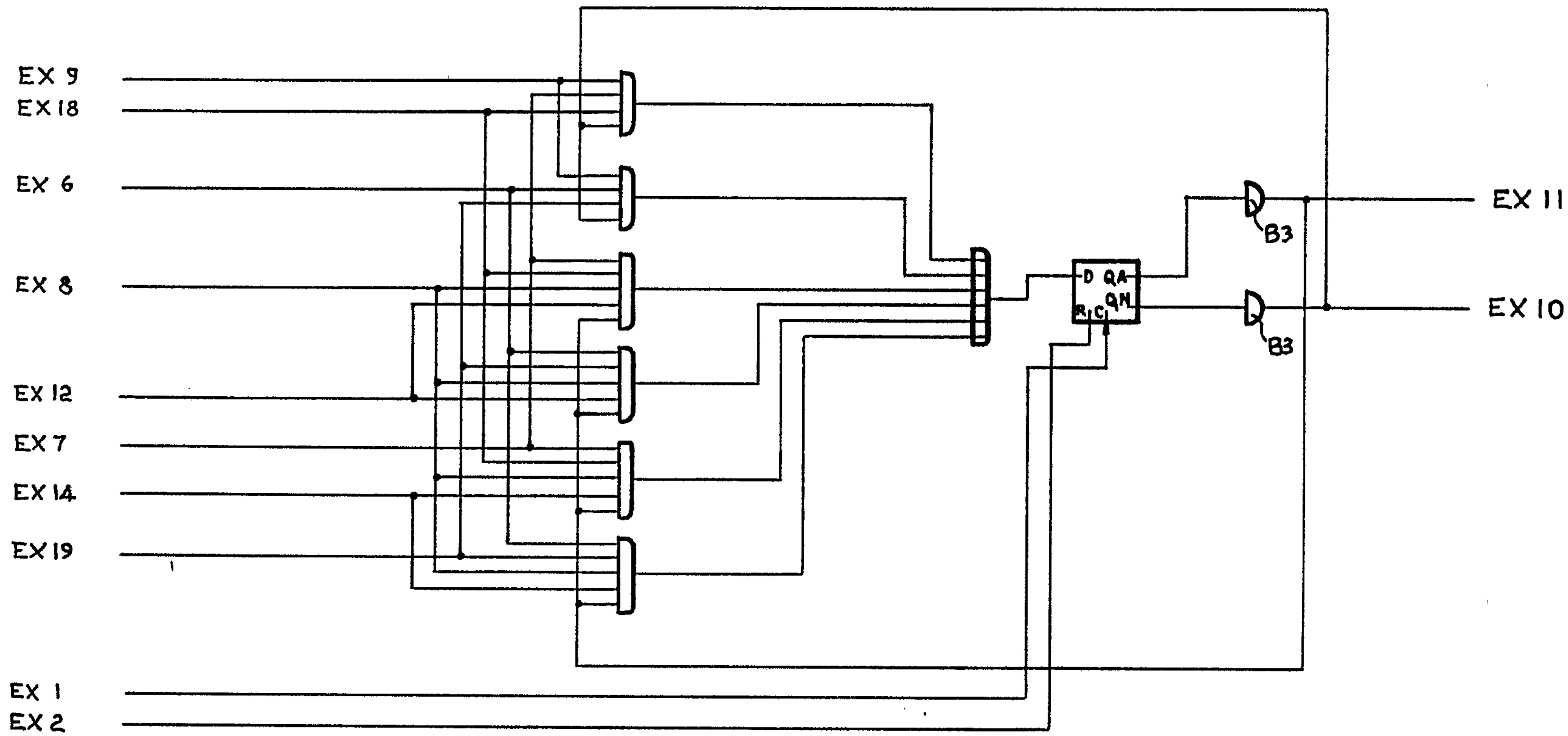


Fig. 50

20/45

0167237

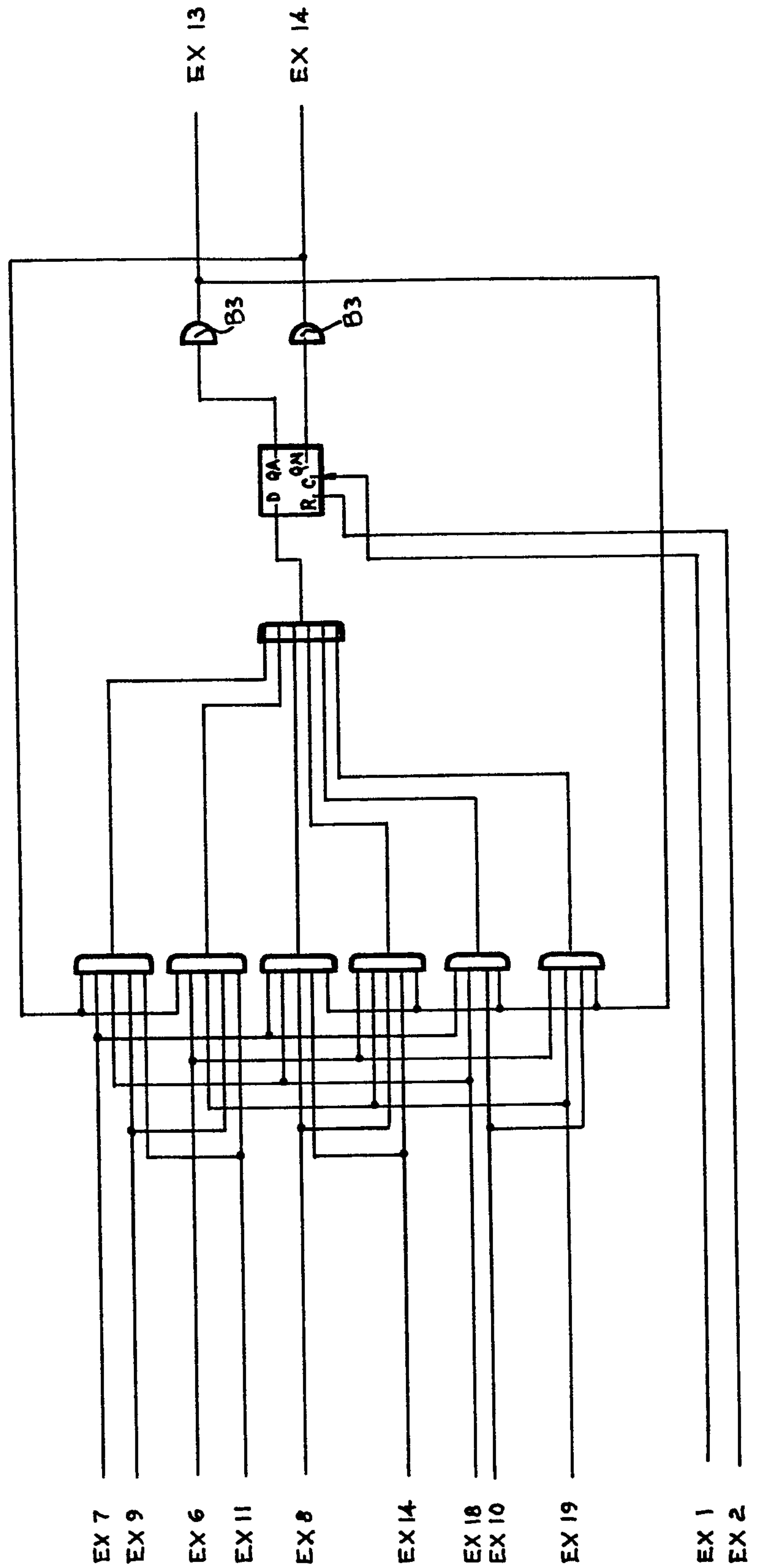


Fig. 5p

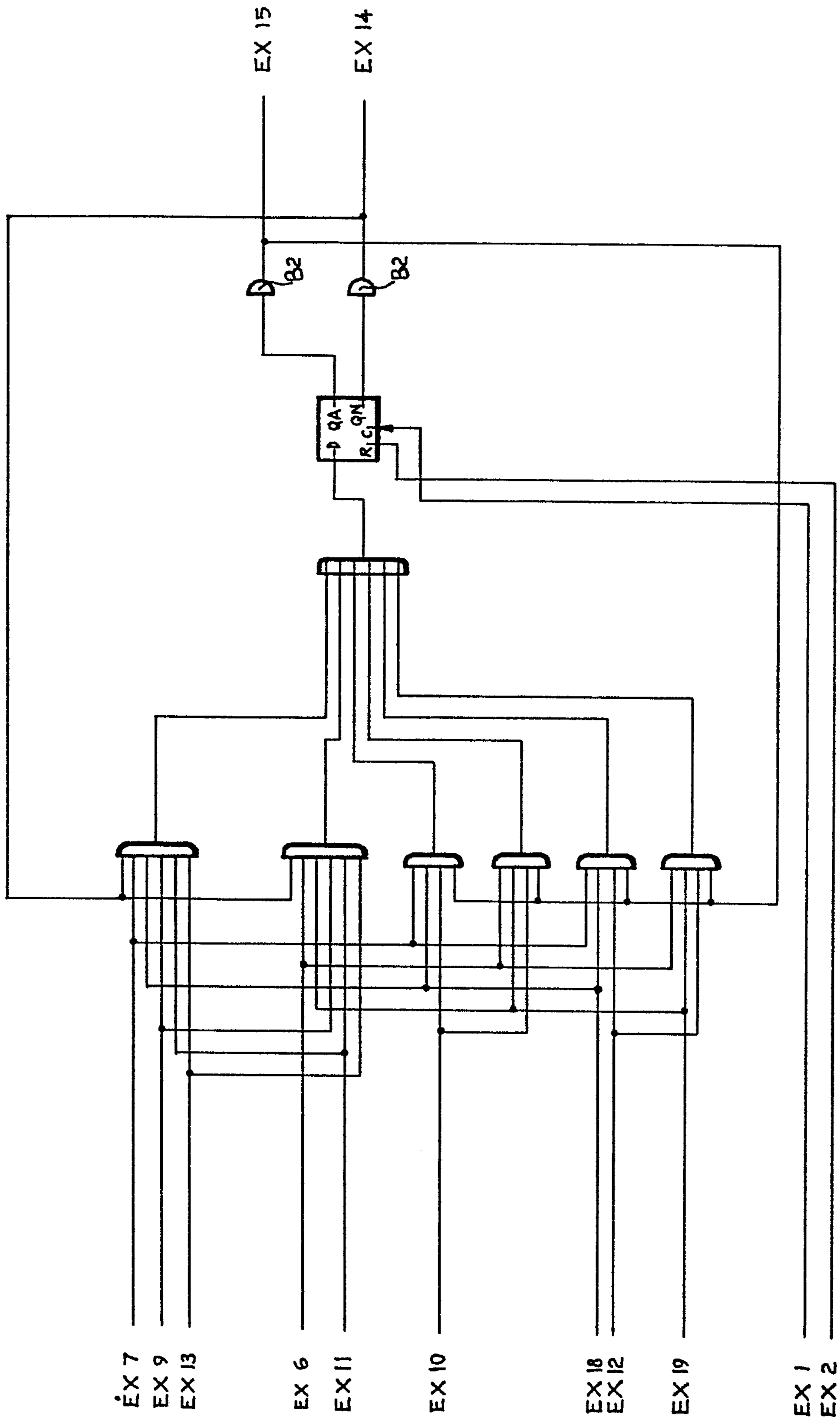
EX 15
EX 14
B2
B2
QA
QN
D
R
C
EX 7
EX 9
EX 13
EX 6
EX 11
EX 10
EX 18
EX 12
EX 19
EX 1
EX 2

Fig. 5g

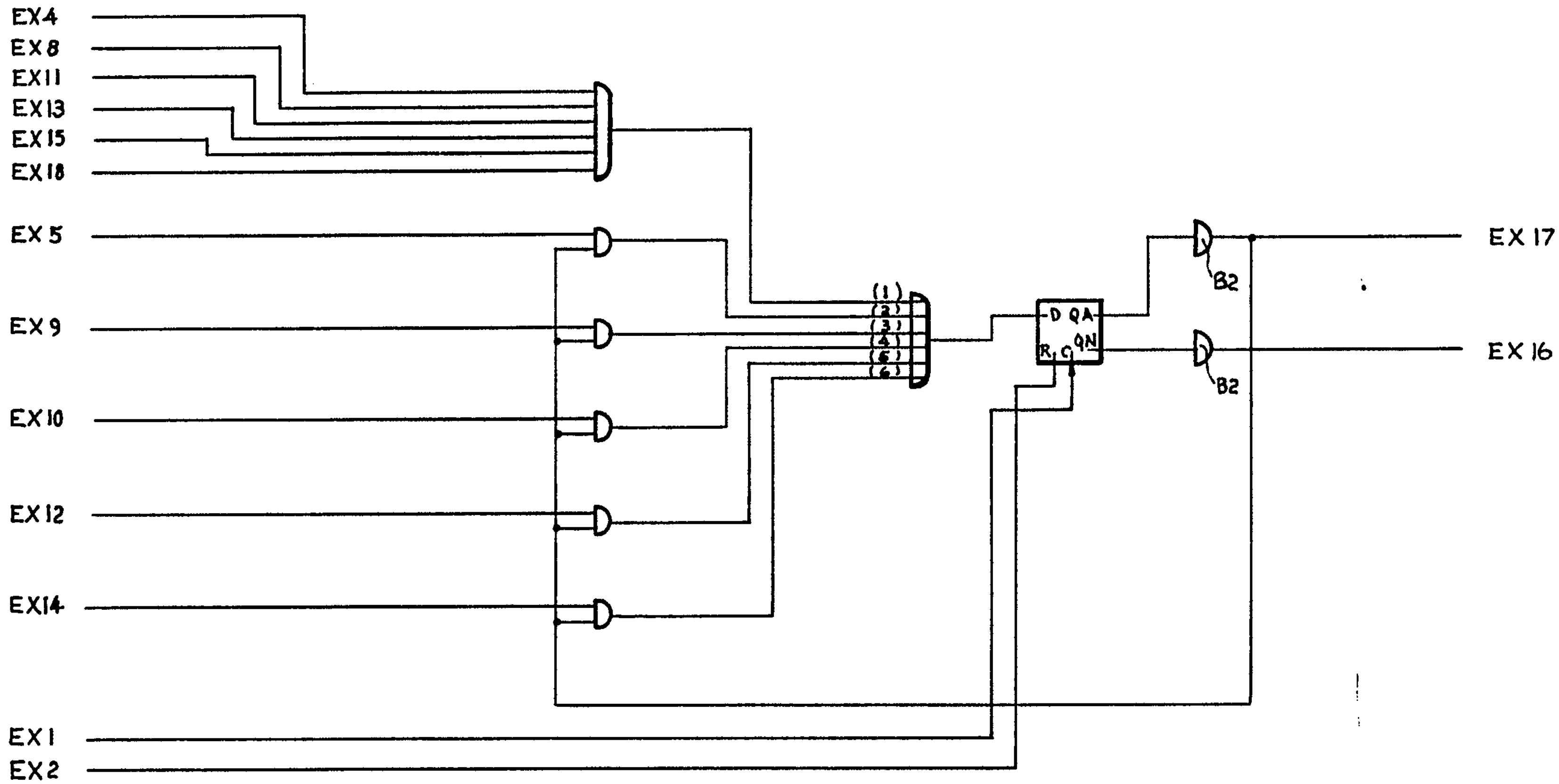
EX4
EX8
EX11
EX13
EX15
EX18
EX5
EX9
EX10
EX12
EX14
EX1
EX2
(1)
(2)
(3)
(4)
(5)
(6)
D QA
QN
R
C
B2
B2
EX17
EX16

Fig. 5r

0167237

Fig. 5

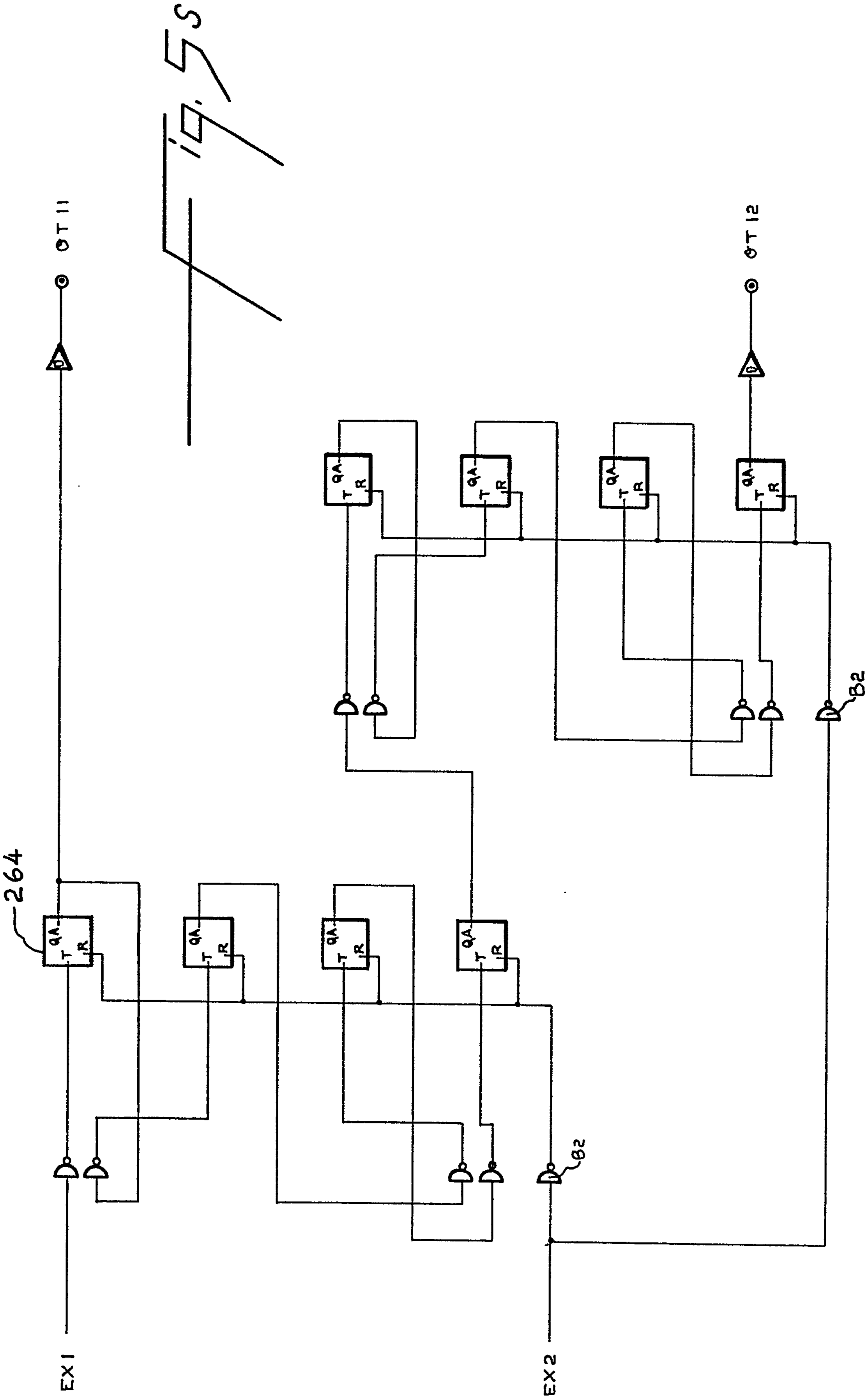

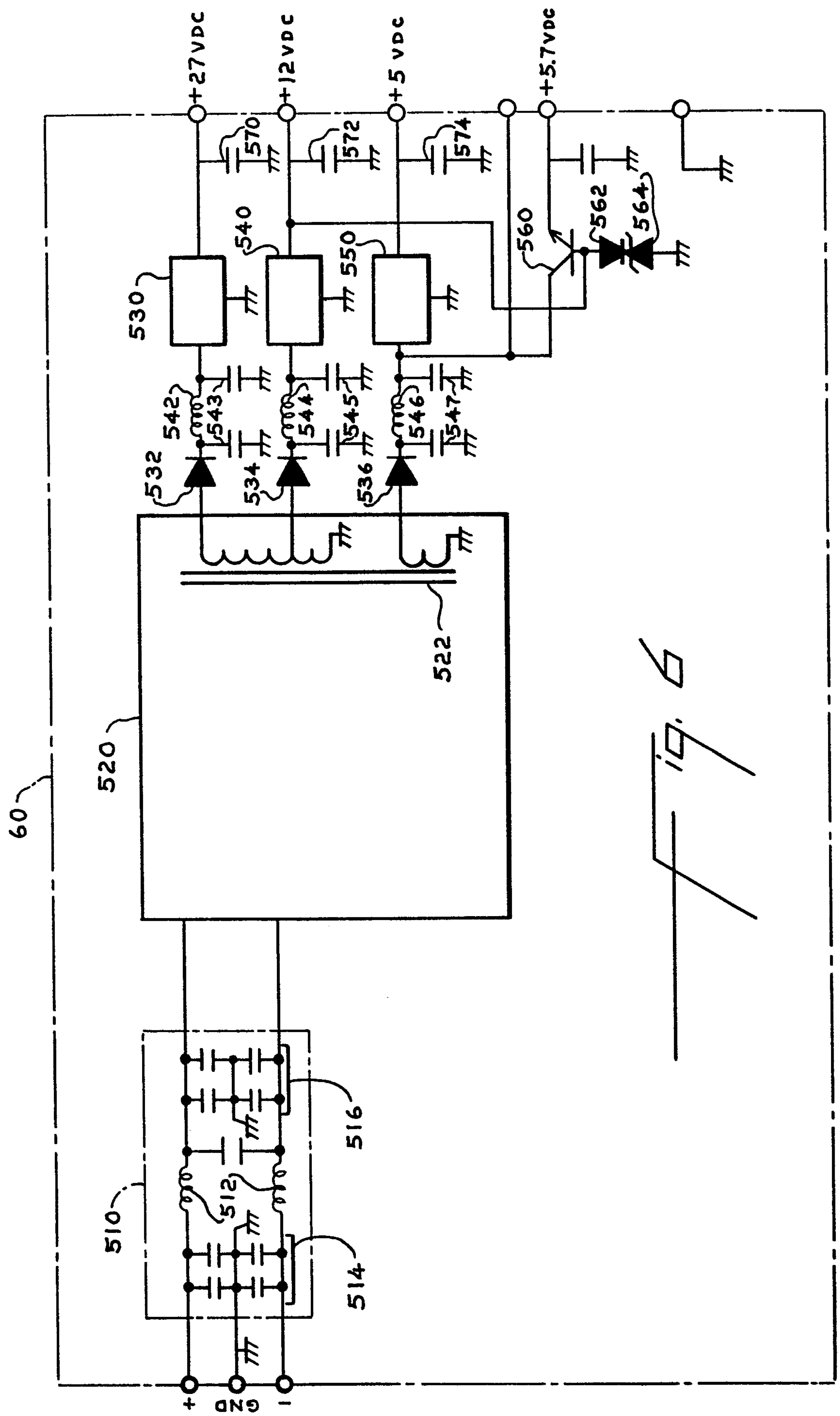
+27VDC
+12VDC
+5VDC
+5.7VDC
570
572
574
530
540
550
560
562
564
532
534
536
542
543
544
545
546
547
520
522
60
510
512
514
516
+
GND
-

Fig. 6

25/43

0167237

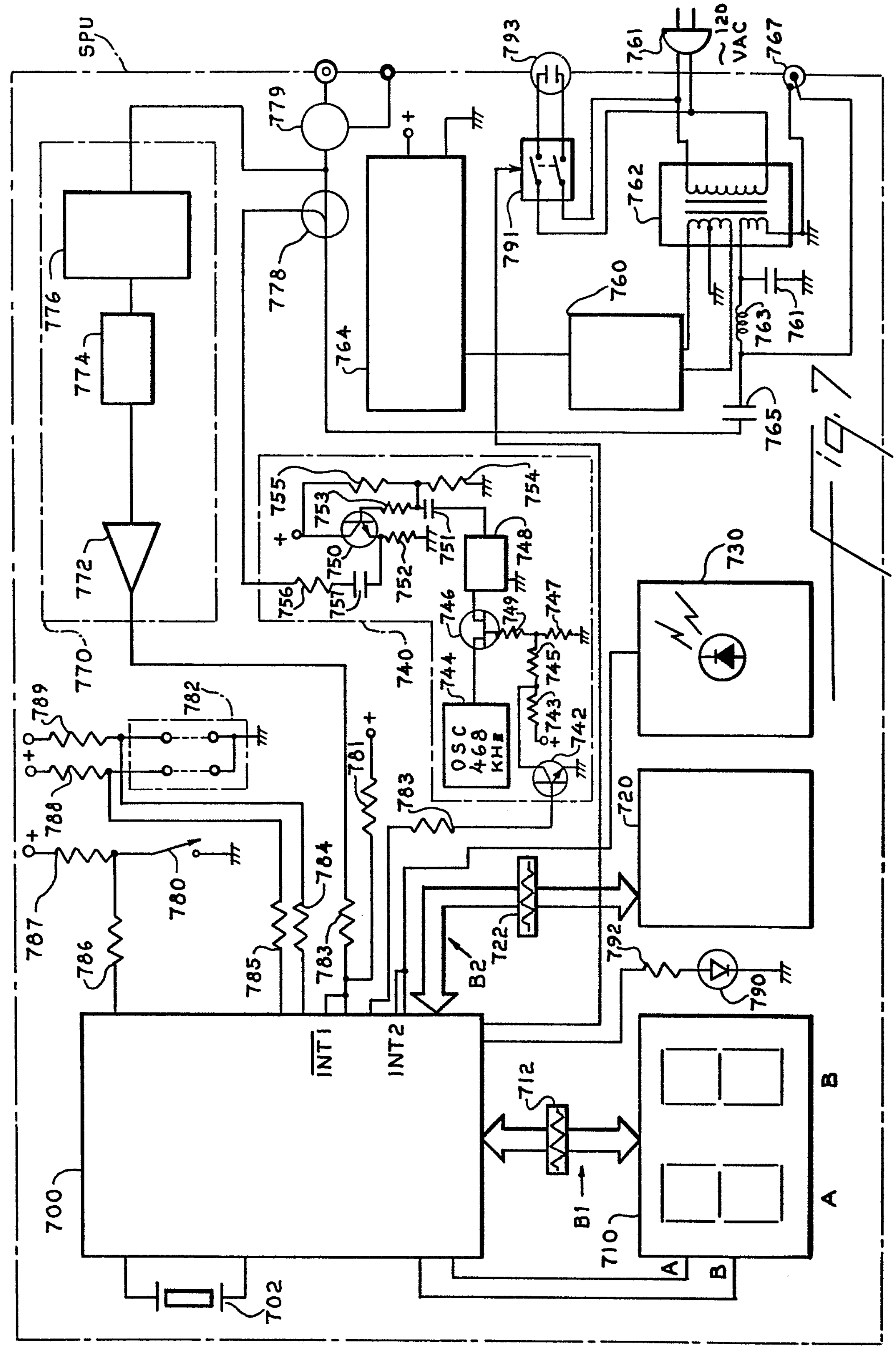


Fig. 7

26/43

0167237

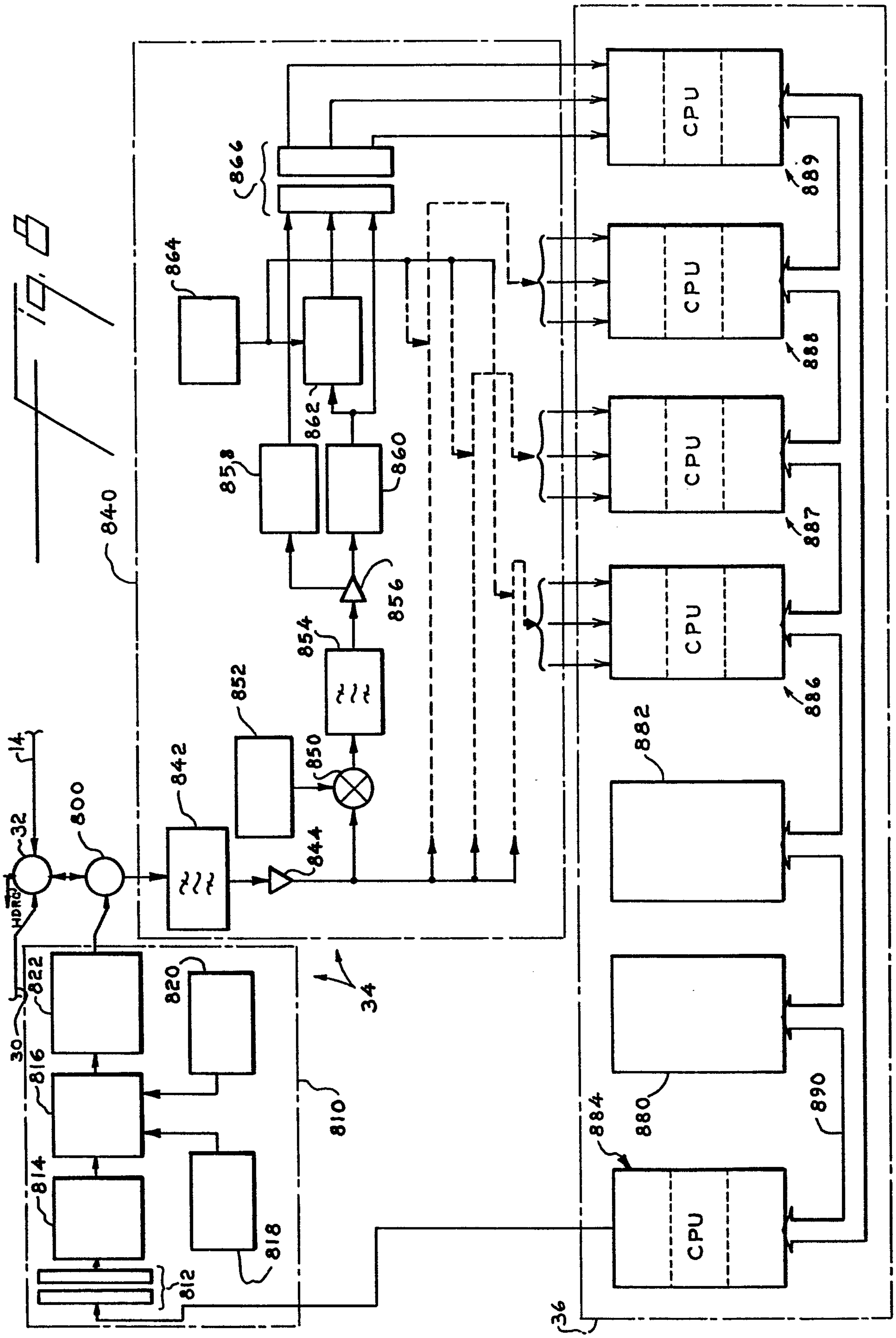

Fig. 9A

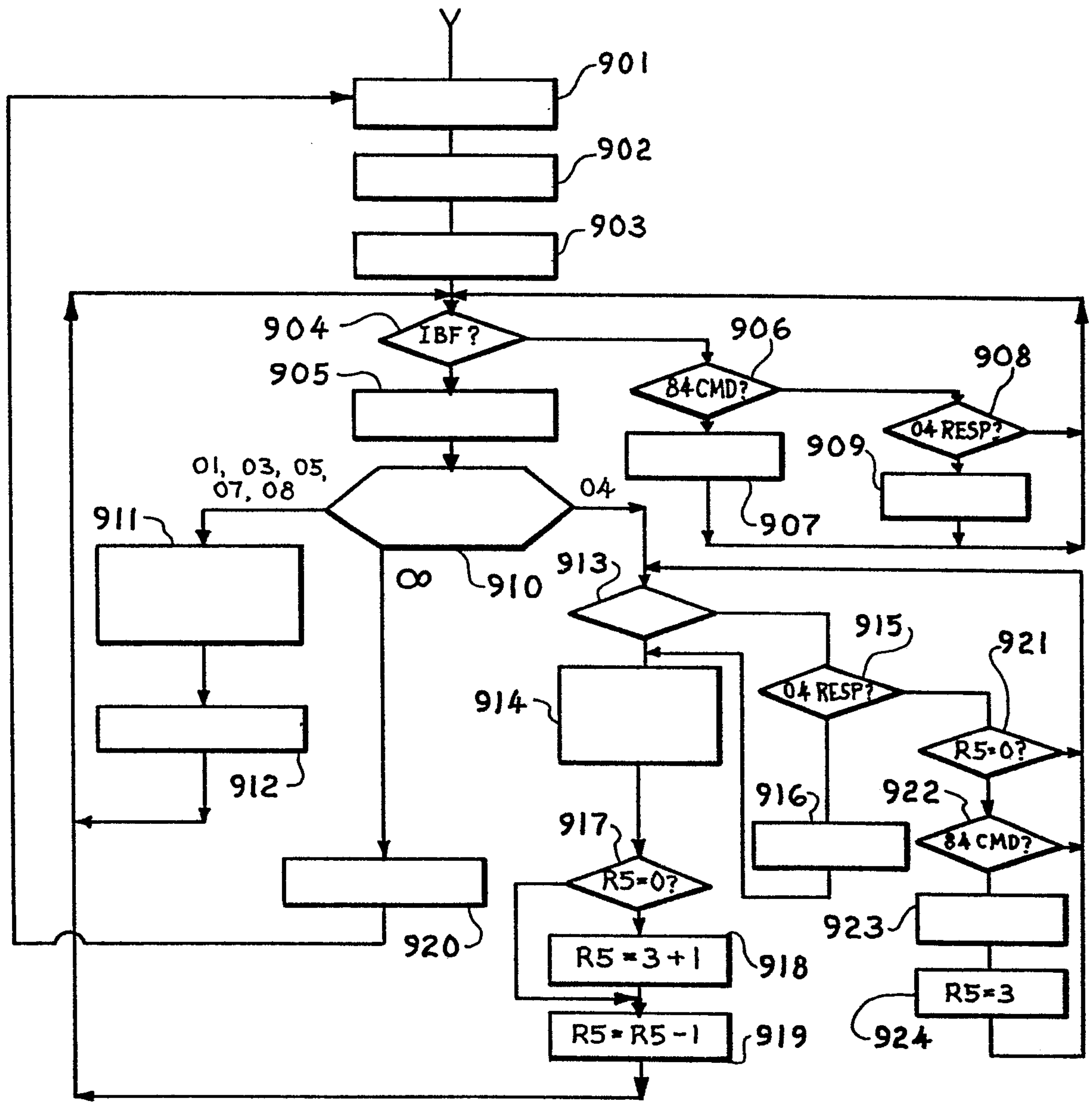

Y
901
902
903
904
IBF?
905
906
84CMD?
908
04 RESP?
909
907
01, 03, 05, 07, 08
04
911
910
∞
913
915
04 RESP?
921
R5=0?
914
912
916
922
84 CMD?
917
R5=0?
920
923
R5=3+1
918
R5=3
R5=R5-1
919
924

Fig. 9B

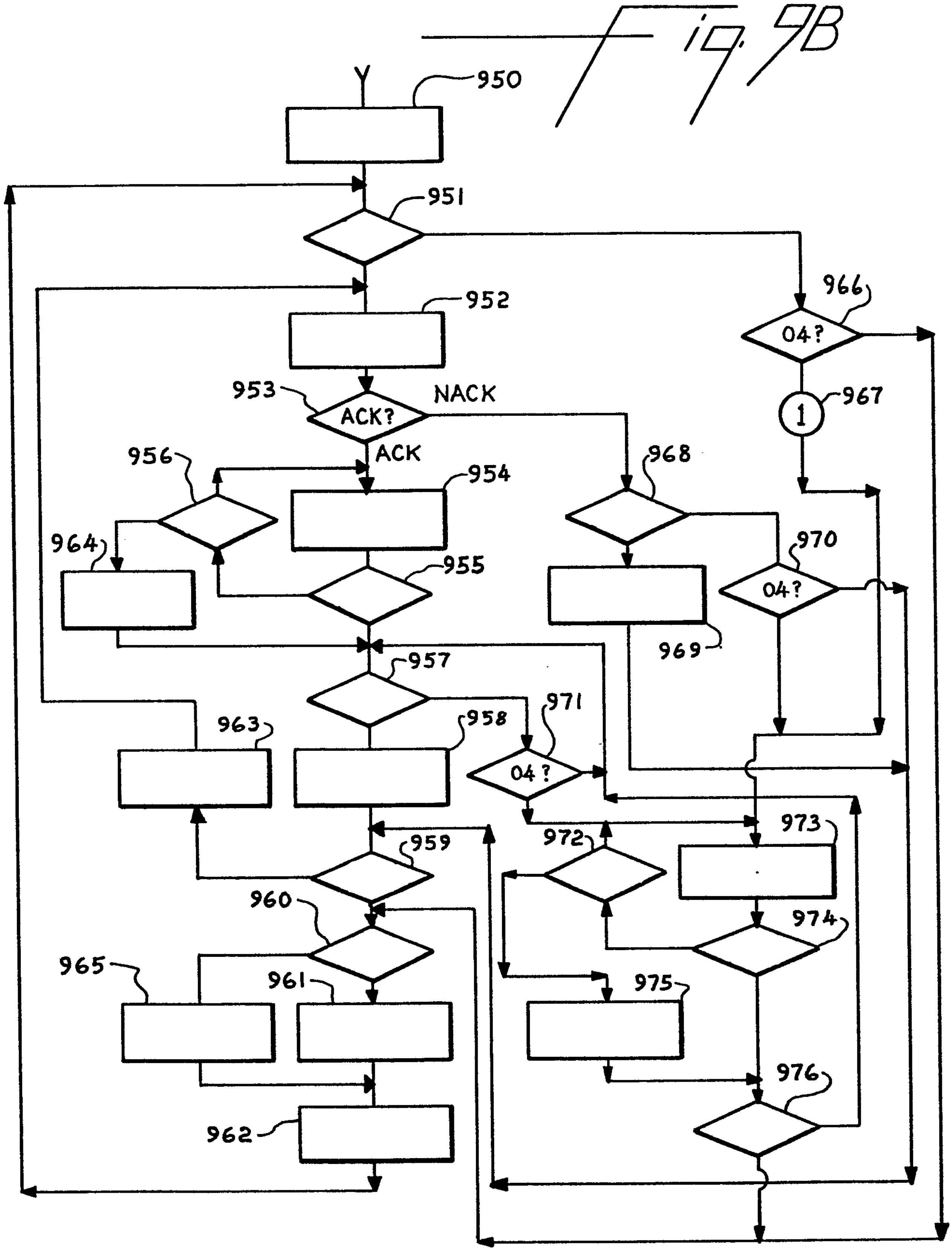
950
951
952
953
ACK?
NACK
ACK
954
955
956
957
958
959
960
961
962
963
964
965
966
04?
967
1
968
969
970
04?
971
04?
972
973
974
975
976

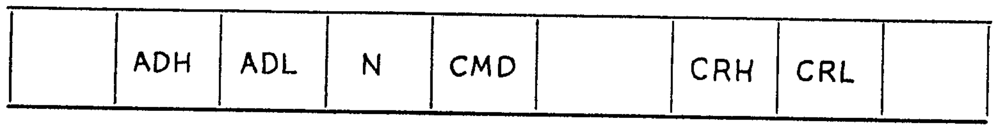


Fig. 10a

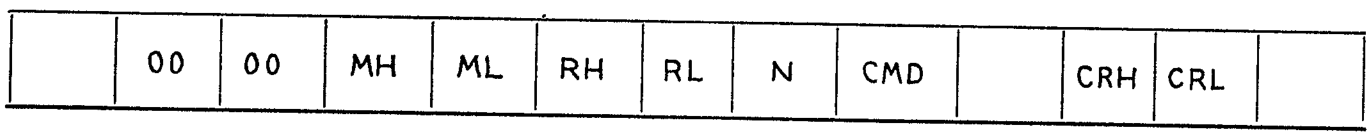


Fig. 10b

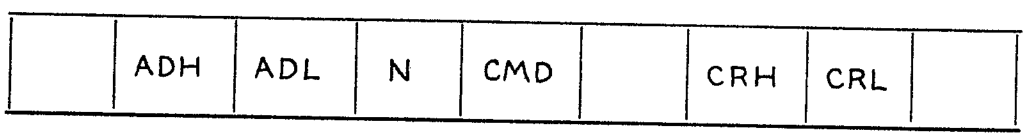


Fig. 11

| | | | | | | | | | | | |
|---|---|---|---|---|---|---|---|---|---|---|---|
| | ADH | ADL | N | CMD FC | NN | MADL | MADH | | CRH | CRL | |

Fig. 12

| | | | | | | | | | | |
|---|---|---|---|---|---|---|---|---|---|---|
| | ADH | ADL | N | CMD F8-FB | NN | MADL | MADH | CRH | CRL | |

Fig. 13a

| | | | | | | | | | |
|---|---|---|---|---|---|---|---|---|---|
| | ADH | ADL | N | CMD F8-FB | NN | | CRH | CRL | |

Fig. 13b

| | | | | | | | | | |
|---|---|---|---|---|---|---|---|---|---|
| | ADH | ADL | N | CMD F0-F3 | NN | | CRH | CRL | |

Fig. 14

| | | | | | | | | | | |
|---|---|---|---|---|---|---|---|---|---|---|
| | ADH | ADL | N | CMD F4 | NN | SU | LC | CRH | CRL | |

Fig. 15

0167237

31/43

| | | | | | | | | | |
|---|---|---|---|---|---|---|---|---|---|
| | ADH | ADL | N | CMD 80 | NN | SU | CRH | CRL | |

Fig. 16a

| | | | | | | | | |
|---|---|---|---|---|---|---|---|---|
| | ADH | ADL | N | CMD 81 | NN 00 | CRH | CRL | |

Fig. 16b

| | | | | | | | | |
|---|---|---|---|---|---|---|---|---|
| | ADH | ADL | N | CMD 84-87 | NN 00 | CRH | CRL | |

Fig. 16c

| | | | | | | | | | | |
|---|---|---|---|---|---|---|---|---|---|---|
| | ADH | ADL | N | CMD 88 | NN | PN | | CRH | CRL | |

Fig. 17

Fig. 18a

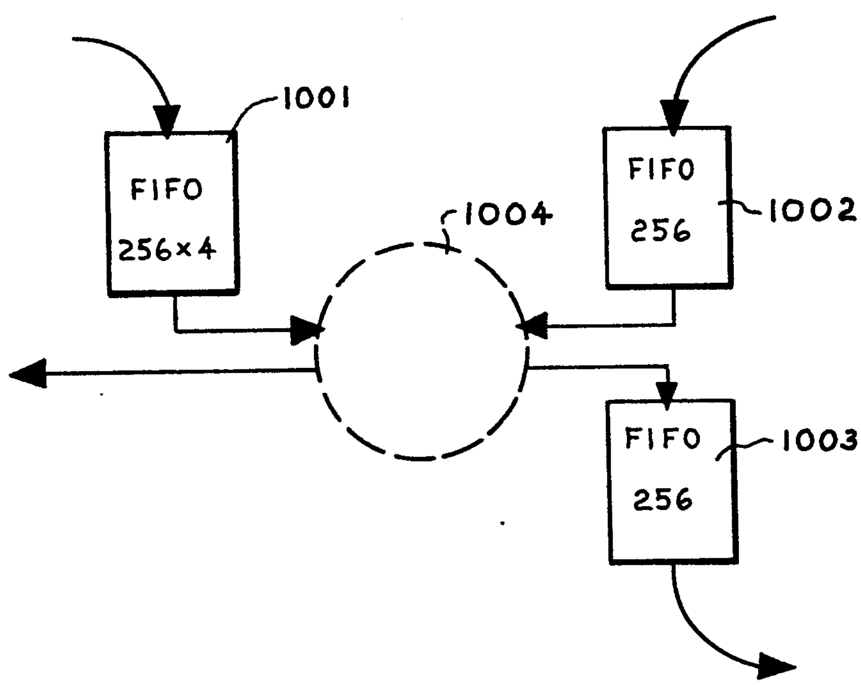

Fig. 18b

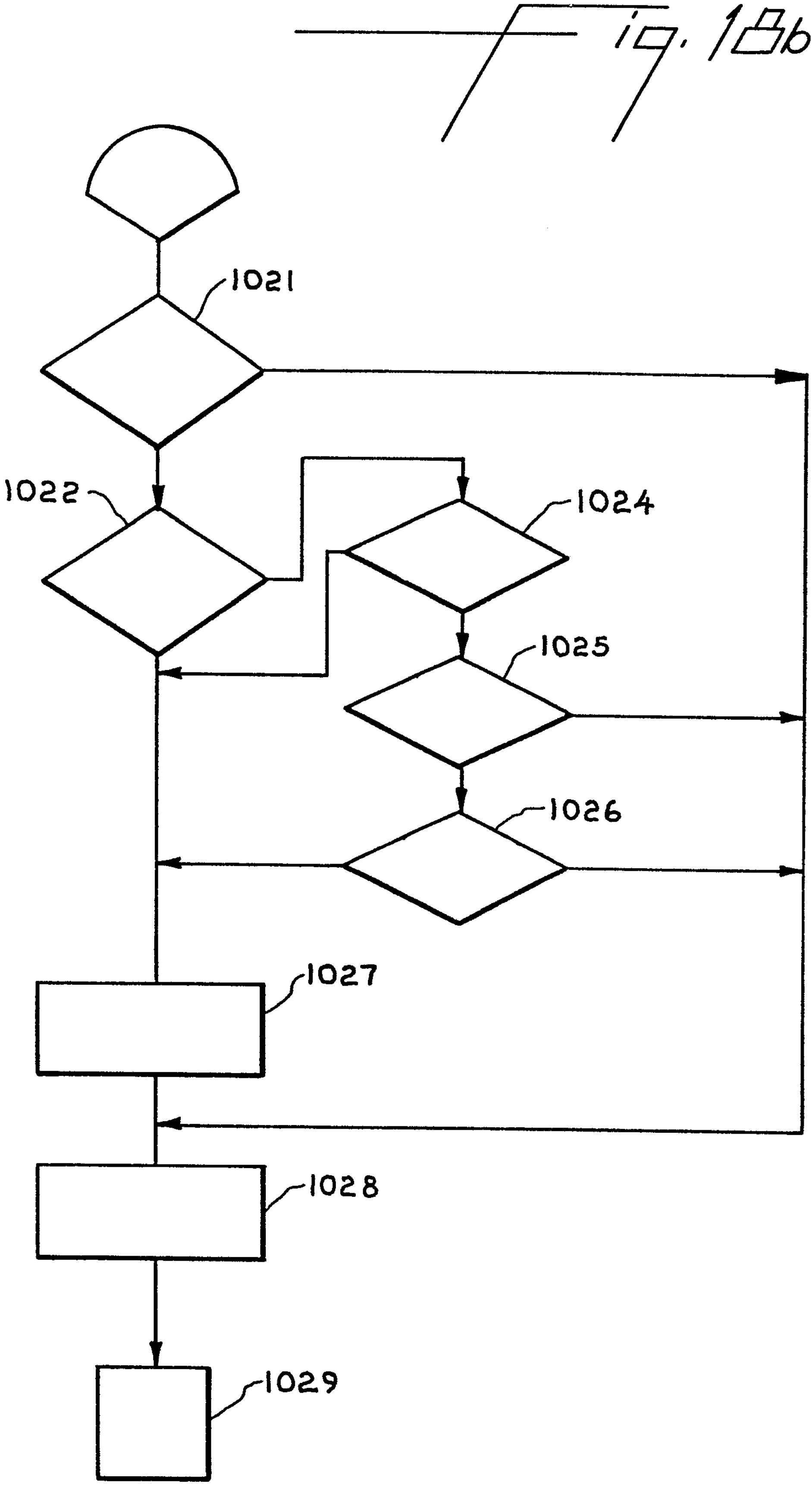

0167237

Fig. 18c

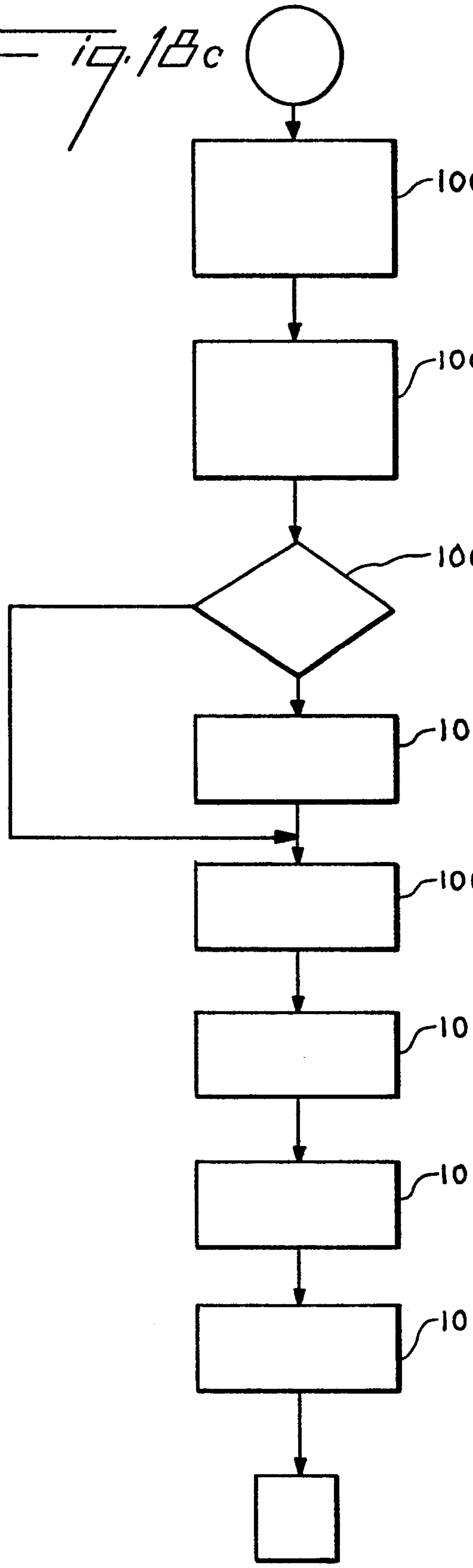

Fig. 18d

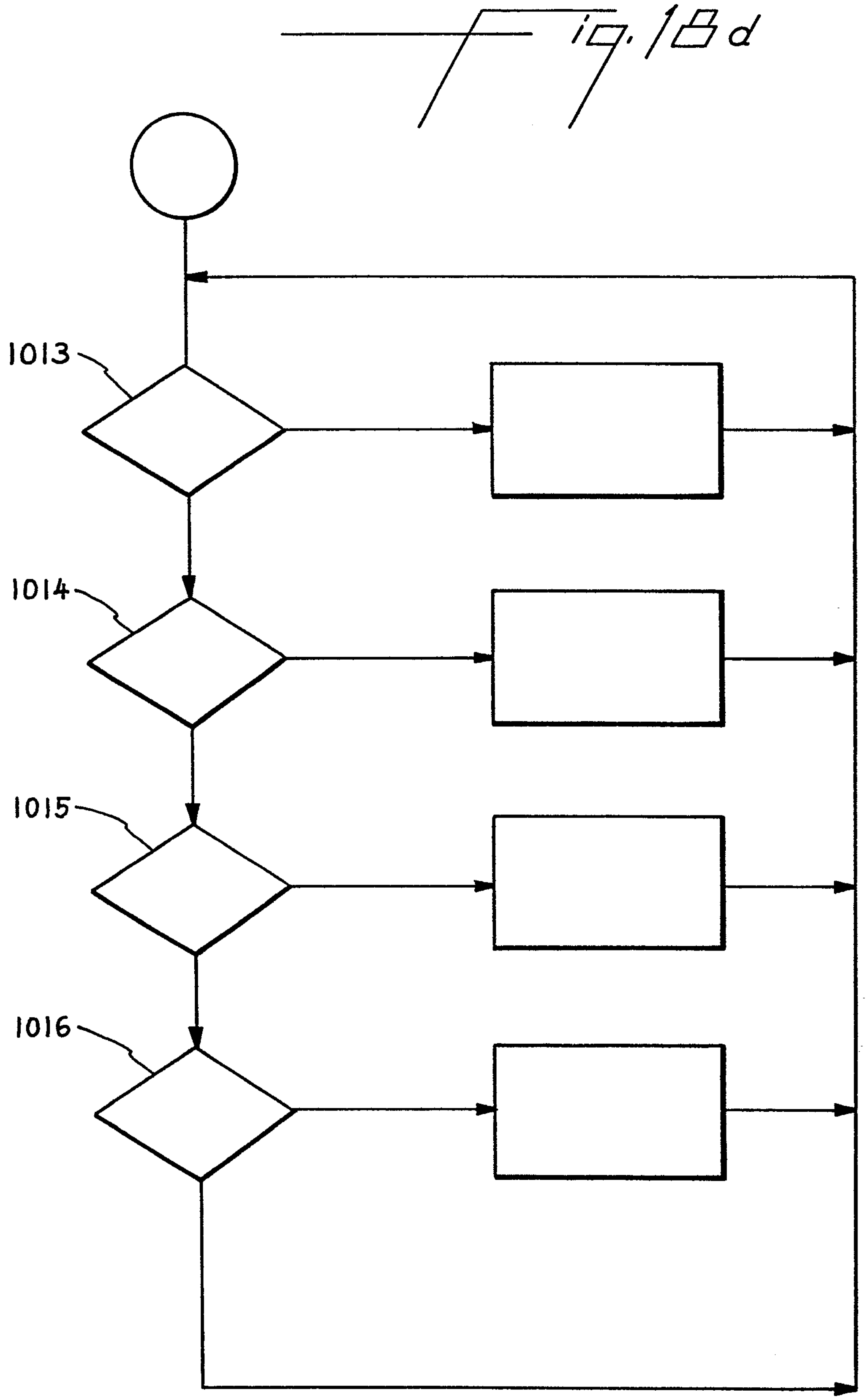

Fig. 18e

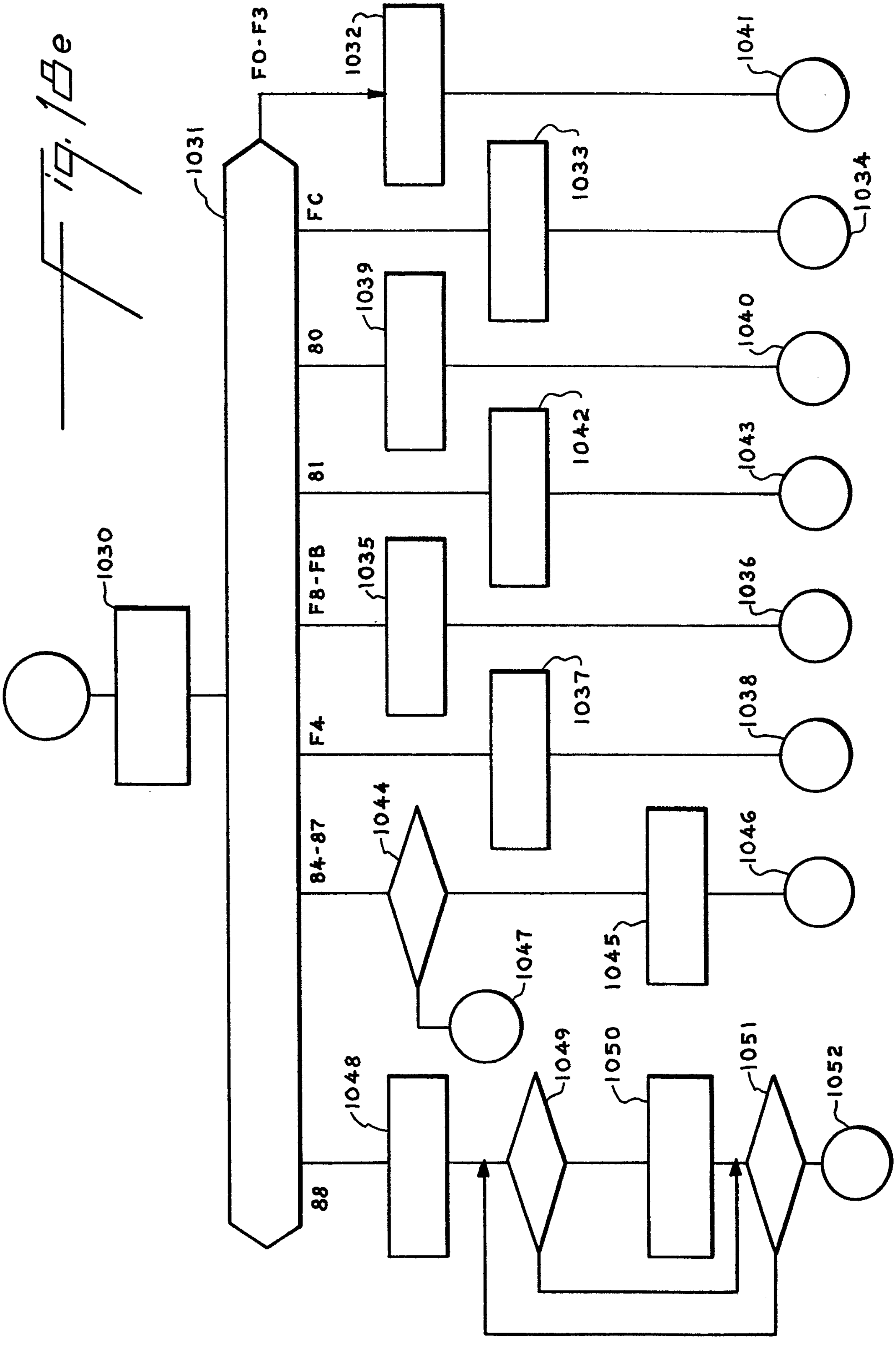
F0-F3
FC
80
81
F8-FB
F4
84-87
88
1030
1031
1032
1033
1034
1035
1036
1037
1038
1039
1040
1041
1042
1043
1044
1045
1046
1047
1048
1049
1050
1051
1052

Fig. 18f

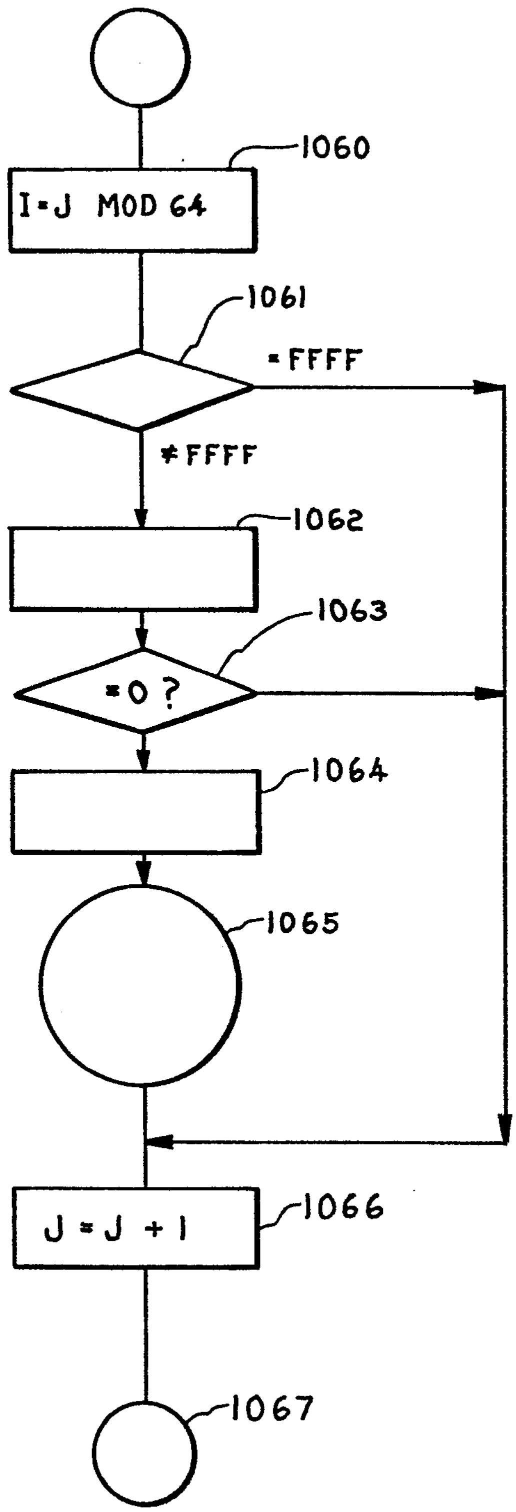
1060
I=J MOD 64
1061
=FFFF
≠FFFF
1062
1063
=0 ?
1064
1065
1066
J=J +1
1067

Fig. 18g

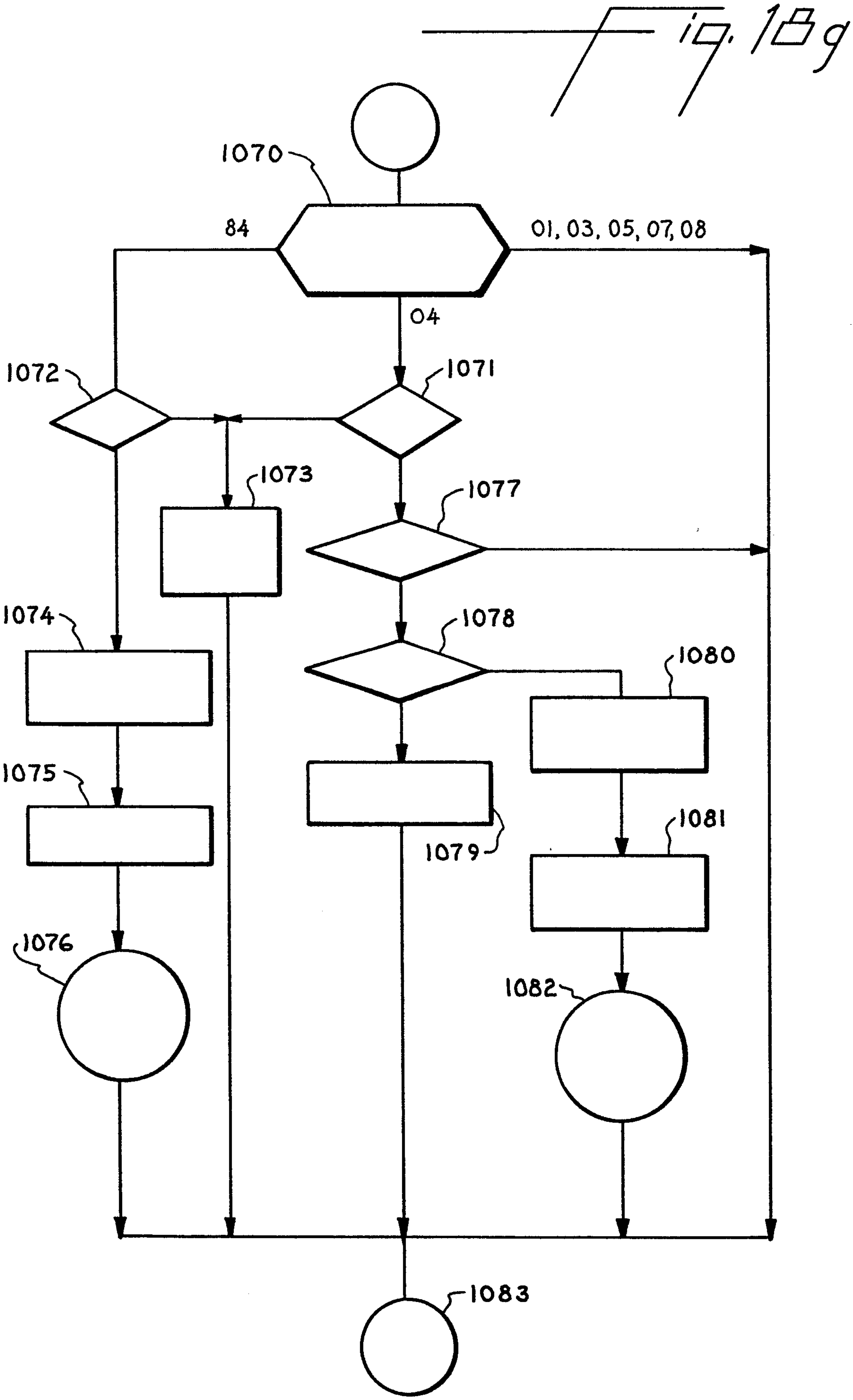
1070
84
01, 03, 05, 07, 08
04
1072
1071
1073
1077
1074
1078
1080
1075
1079
1081
1076
1082
1083

Fig. 18h

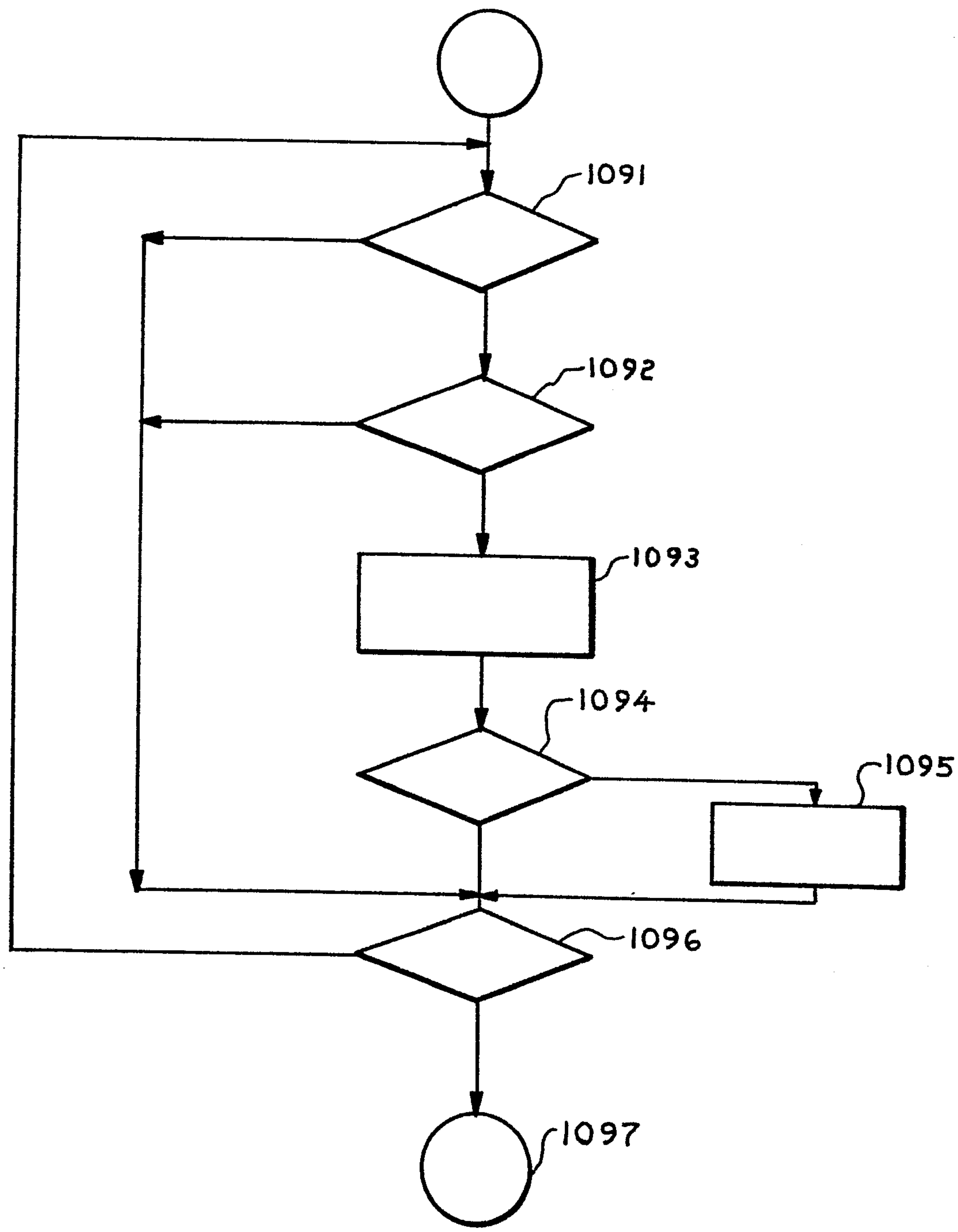

Fig. 19

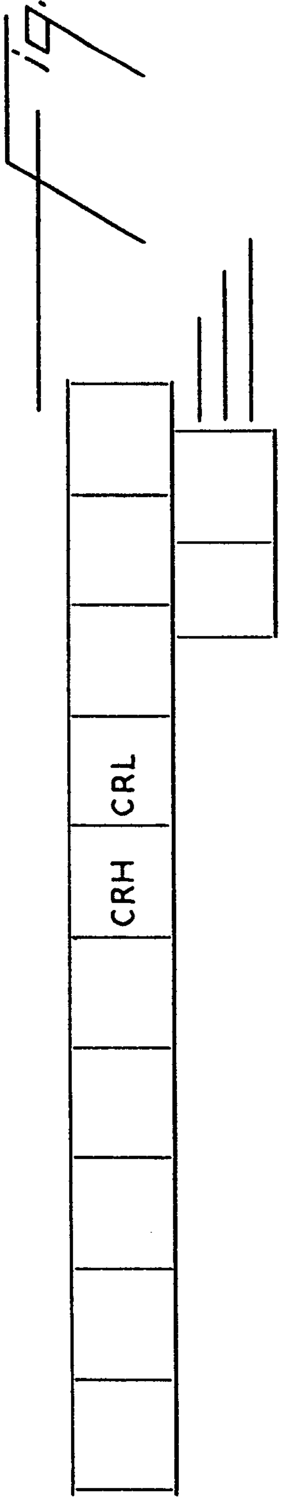


Fig. 20

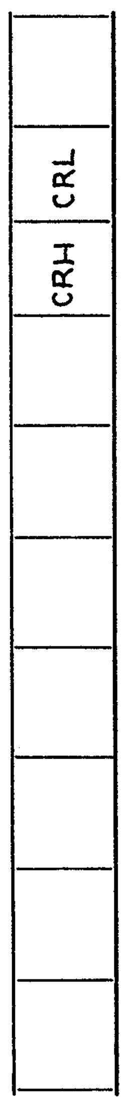

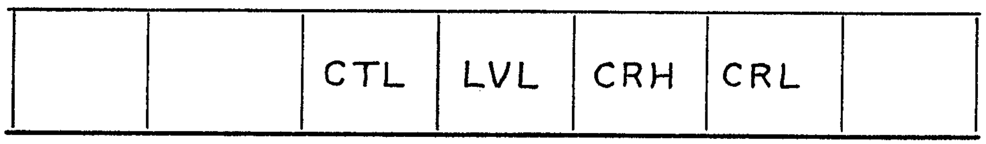


Fig. 21a

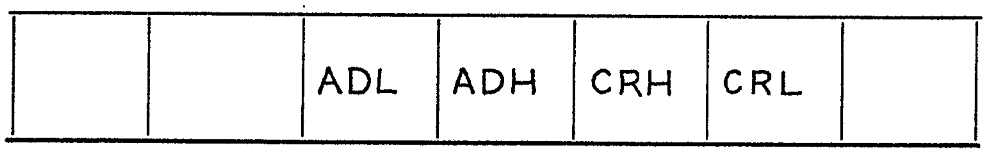


Fig. 21b

Fig. 22a

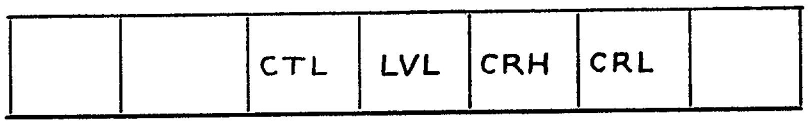


Fig. 22b

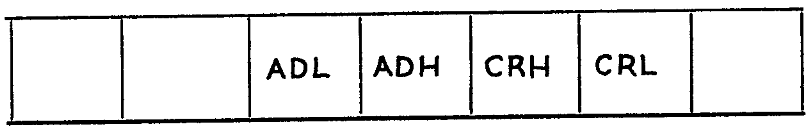


Fig. 22c

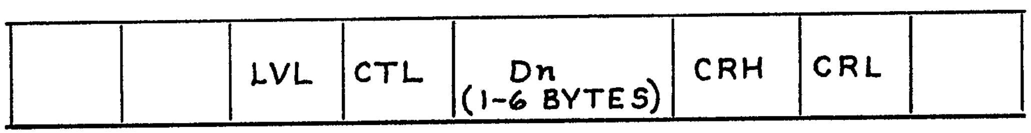

0167237

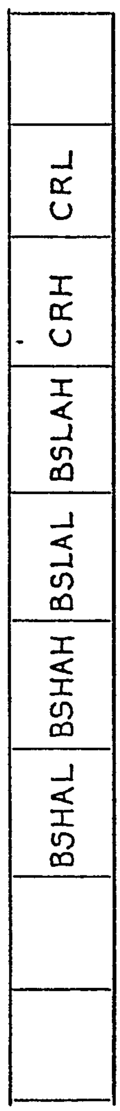

Fig. 23a

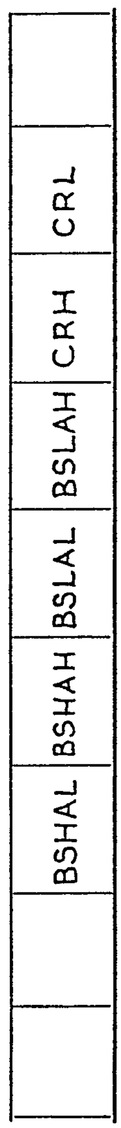

Fig. 23b

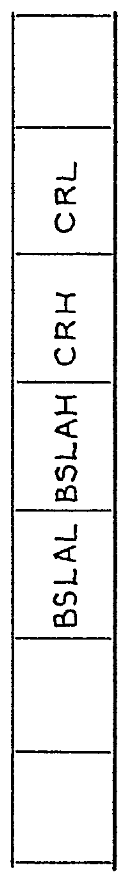

Fig. 23c

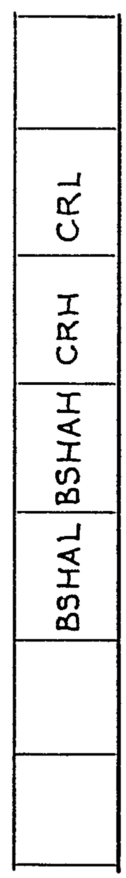

Fig. 23d